(19) Europäisches Patentamt
European Patent Office
Office européen des brevets

(11) EP 4 181 241 A1

(12) EUROPEAN PATENT APPLICATION

(43) Date of publication:
**17.05.2023 Bulletin 2023/20**

(21) Application number: **22203558.6**

(22) Date of filing: **30.03.2012**

(51) International Patent Classification (IPC):
***H01M 4/86*** *(2006.01)* ***H01M 4/94*** *(2006.01)*
***H01M 4/96*** *(2006.01)* ***H01M 8/18*** *(2006.01)*
***H01M 8/22*** *(2006.01)* ***H01M 14/00*** *(2006.01)*
***H01M 8/06*** *(2016.01)*

(52) Cooperative Patent Classification (CPC):
**C25B 1/04; G21B 3/002; G21D 7/00; H01M 4/8626; H01M 4/94; H01M 4/96; H01M 8/0656; H01M 8/184; H01M 8/22; H01M 14/00;**
H01M 8/186; Y02E 30/00; Y02E 30/10; Y02E 60/36; Y02E 60/50

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**05.04.2011 US 201161472076 P**
**05.05.2011 US 201161482932 P**
**13.05.2011 US 201161485769 P**
**27.05.2011 US 201161490903 P**
**17.06.2011 US 201161498245 P**
**08.07.2011 US 201161505719 P**
**05.08.2011 US 201161515505 P**
**23.09.2011 US 201161538534 P**
**02.11.2011 US 201161566225 P**
**14.11.2011 US 201161559504 P**
**21.12.2011 US 201161578465 P**
**27.01.2012 US 201261591532 P**
**19.03.2012 US 201261612607 P**

(62) Document number(s) of the earlier application(s) in accordance with Art. 76 EPC:
**12715500.0 / 2 702 623**

(71) Applicant: **Brilliant Light Power, Inc.**
**Cranbury, NJ 08512 (US)**

(72) Inventor: **Mills, Randell L.**
**Princeton, 08540 (US)**

(74) Representative: **Uexküll & Stolberg**
**Partnerschaft von**
**Patent- und Rechtsanwälten mbB**
**Beselerstraße 4**
**22607 Hamburg (DE)**

Remarks:
•This application was filed on 25.10.2022 as a divisional application to the application mentioned under INID code 62.
•Claims filed after the date of filing of the application / after the date of receipt of the divisional application (Rule 68(4) EPC)

# (54) H20 - BASED ELECTROCHEMICAL HYDROGEN - CATALYST POWER SYSTEM

(57) An electrochemical power system is provided that generates an electromotive force (EMF) from the catalytic reaction of hydrogen to lower energy (hydrino) states providing direct conversion of the energy released from the hydrino reaction into electricity, the system comprising at least two components chosen from: $H_2O$ catalyst or a source of $H_2O$ catalyst; atomic hydrogen or a source of atomic hydrogen; reactants to form the $H_2O$ catalyst or source of $H_2O$ catalyst and atomic hydrogen or source of atomic hydrogen; and one or more reactants to initiate the catalysis of atomic hydrogen. The electrochemical power system for forming hydrinos and electricity can further comprise a cathode compartment comprising a cathode, an anode compartment comprising an anode, optionally a salt bridge, reactants that constitute hydrino reactants during cell operation with separate electron flow and ion mass transport, and a source of hydrogen. Due to oxidation-reduction cell half reactions, the hydrino-producing reaction mixture is constituted with the migration of electrons through an external circuit and ion mass transport through a separate path such as the electrolyte to complete an electrical circuit. A power source and hydride reactor is further provided that powers a power system comprising (i) a reaction cell for the catalysis of atomic hydrogen to form hydrinos, (ii) a chemical fuel mixture comprising at least two components chosen from: a source of $H_2O$ catalyst or $H_2O$ catalyst; a source of atomic hydrogen or atomic hydrogen; reactants to form the source of $H_2O$ catalyst or $H_2O$ catalyst and a source of atomic hydrogen or atomic hydrogen; one or more reactants to initiate the catalysis of atomic hydrogen; and a support to enable the catalysis, (iii) thermal systems for reversing an exchange reaction to thermally regenerate the fuel from the reaction products, (iv) a heat



Processed by Luminess, 75001 PARIS (FR)

(Cont. next page)

sink that accepts the heat from the power-producing reactions, and (v) a power conversion system.

Fig. 1

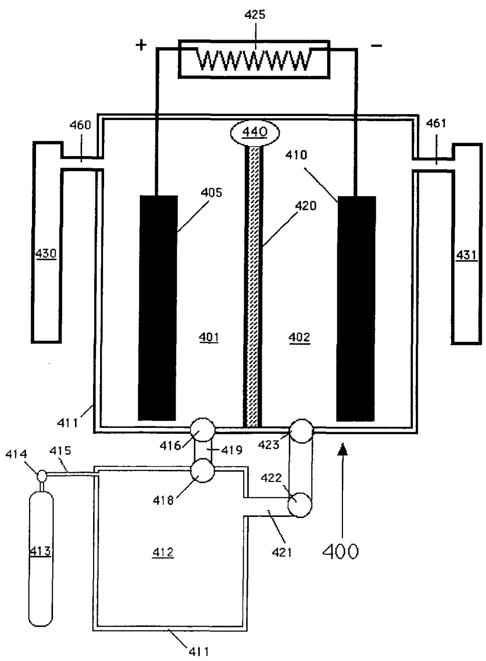

## Description

### CROSS-REFERENCES TO RELATED APPLICATIONS

This application claims the benefit of priority of U.S. Provisional Application Nos. 61/472,076, filed April 5, 2011; 61/482,932, filed May 5, 2011; 61/485,769, filed May 13, 2011; 61/490,903, filed May 27, 2011; 61/498,245, filed June 17, 2011; 61/505,719, filed July 8, 2011; 61/515,505, filed August 5, 2011; 61/538,534, filed September 23, 2011; 61,559,504, filed November 14, 2011; 61,566,225, filed December 2, 2011; 61/578,465, filed December 21, 2011; 61/591,532, filed January 27, 2012; and 61/612,607, filed March 19, 2012, all of which are herein incorporated by reference in their entirety.

### SUMMARY OF DISCLOSED EMBODIMENTS:

The present disclosure is directed to an electrochemical power system that generates at least one of electricity and thermal energy comprising a vessel closed to atmosphere, the vessel comprising at least one cathode; at least one anode, at least one bipolar plate, and reactants that constitute hydrino reactants during cell operation with separate electron flow and ion mass transport, the reactants comprising at least two components chosen from: a) at least one source of $H_2O$; b) at least one source of catalyst or a catalyst comprising at least one of the group chosen from nH, OH, $OH^-$, nascent $H_2O$, $H_2S$, or $MNH_2$, wherein n is an integer and M is alkali metal; and c) at least one source of atomic hydrogen or atomic hydrogen, one or more reactants to form at least one of the source of catalyst, the catalyst, the source of atomic hydrogen, and the atomic hydrogen; one or more reactants to initiate the catalysis of atomic hydrogen; and a support, wherein the combination of the cathode, anode, reactants, and bipolar plate maintains a chemical potential between each cathode and corresponding anode to permit the catalysis of atomic hydrogen to propagate, and the system further comprising an electrolysis system. In an embodiment, the electrolysis system of the electrochemical power system intermittently electrolyzes $H_2O$ to provide the source of atomic hydrogen or atomic hydrogen and discharges the cell such that there is a gain in the net energy balance of the cycle. The reactants may comprise at least one electrolyte chosen from: at least one molten hydroxide; at least one eutectic salt mixture; at least one mixture of a molten hydroxide and at least one other compound; at least one mixture of a molten hydroxide and a salt; at least one mixture of a molten hydroxide and halide salt; at least one mixture of an alkaline hydroxide and an alkaline halide; LiOH-LiBr, LiOH-LiX, NaOH-NaBr, NaOH-NaI, NaOH-NaX, and KOH-KX, wherein X represents a halide), at least one matrix, and at least one additive. The electrochemical power system may further comprise a heater. The cell temperature of the electrochemical power system above the electrolyte melting point may be in at least one range chosen from about 0 to 1500 °C higher than the melting point, from about 0 to 1000 °C higher than the melting point, from about 0 to 500 °C higher than the melting point, 0 to about 250 °C higher than the melting point, and from about 0 to 100 °C higher than the melting point. In embodiments, the matrix of the electrochemical power system comprises at least one of oxyanion compounds, aluminate, tungstate, zirconate, titanate, sulfate, phosphate, carbonate, nitrate, chromate, and manganate, oxides, nitrides, borides, chalcogenides, silicides, phosphides, and carbides, metals, metal oxides, nonmetals, and nonmetal oxides; oxides of alkali, alkaline earth, transition, inner transition, and earth metals, and Al, Ga, In, Sn, Pb, S, Te, Se, N, P, As, Sb, Bi, C, Si, Ge, and B, and other elements that form oxides or oxyanions; at least one oxide such as one of an alkaline, alkaline earth, transition, inner transition, and rare earth metal, and Al, Ga, In, Sn, Pb, S, Te, Se, N, P, As, Sb, Bi, C, Si, Ge, and B, and other elements that form oxides, and one oxyanion and further comprise at least one cation from the group of alkaline, alkaline earth, transition, inner transition, and rare earth metal, and Al, Ga, In, Sn, and Pb cations; $LiAlO_2$, MgO, $Li_2TiO_3$, or $SrTiO_3$; an oxide of the anode materials and a compound of the electrolyte; at least one of a cation and an oxide of the electrolyte; an oxide of the electrolyte MOH (M = alkali); an oxide of the electrolyte comprising an element, metal, alloy, or mixture of the group of Mo, Ti, Zr, Si, Al, Ni, Fe, Ta, V, B, Nb, Se, Te, W, Cr, Mn, Hf, Co, and M', wherein M' represents an alkaline earth metal; $MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $B_2O_3$, NbO, $NbO_2$, $Nb_2O_5$, $SeO_2$, $SeO_3$, $TeO_2$, $TeO_2$, $WO_2$, $WO_3$, $Cr_2O_4$, $Cr_2O_3$, $CrO_2$, $CrO_3$, MnO, $Mn_2O_4$, $Mn_2O_3$, $MnO_2$, $Mn_2O_7$, $HfO_2$, $Co_2O_3$, CoO, $Co_3O_4$, $Co_2O_3$, and MgO; an oxide of the cathode material and optionally an oxide of the electrolyte; $Li_2MoO_3$ or $Li_2MoO_4$, $Li_2TiO_3$, $Li_2ZrO_3$, $Li_2SiO_3$, $LiAlO_2$, $LiNiO_2$, $LiFeO_2$, $LiTaO_3$, $LiVO_3$, $Li_2B_4O_7$, $Li_2NbO_3$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_4$, $Li_2HfO_3$, $LiCoO_2$, and M'O, wherein M' represents an alkaline earth metal, and MgO; an oxide of an element of the anode or an element of the same group, and $Li_2MoO_4$, $MoO_2$, $Li_2WO_4$, $Li_2CrO_4$, and $Li_2Cr_2O_7$ with a Mo anode, and the additive comprises at least one of S, $Li_2S$, oxides, $MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MgO, TiO2, Li2TiO3, LiAlO2, $Li_2MoO_3$ or $Li_2MoO_4$, $Li_2ZrO_3$, $Li_2SiO_3$, $LiNiO_2$, $LiFeO_2$, $LiTaO_3$, $LiVO_3$, $Li_2B_4O_7$, $Li_2NbO_3$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_3$, or $LiCoO_2$, MnO, and $CeO_2$. At least one of the following reactions may occur during the operation of the electrochemical power system: a) at least one of H and $H_2$ is formed at the discharge anode from electrolysis of $H_2O$; b) at least one of O and $O_2$ is formed at the discharge cathode

from electrolysis of $H_2O$; c) the hydrogen catalyst is formed by a reaction of the reaction mixture; d) hydrinos are formed during discharge to produce at least one of electrical power and thermal power; e) $OH^-$ is oxidized and reacts with H to form nascent $H_2O$ that serves as a hydrino catalyst; f) $OH^-$ is oxidized to oxygen ions and H; g) at least one of oxygen ions, oxygen, and $H_2O$ are reduced at the discharge cathode; h) H and nascent $H_2O$ catalyst react to form hydrinos; and i) hydrinos are formed during discharge to produce at least one of electrical power and thermal power. In an embodiment of the electrochemical power system the at least one reaction of the oxidation of $OH^-$ and the reduction of at least one of oxygen ions, oxygen, and $H_2O$ occur during cell discharge to produce a current over time that exceeds the current over time during the electrolysis phase of the intermittent electrolysis. In an embodiment, the anode half-cell reaction may be

$$OH^- + 2H \text{ to } H_2O + e^- + H(l/4)$$

wherein the reaction of a first H with $OH^-$ to form $H_2O$ catalyst and $e^-$ is concerted with the $H_2O$ catalysis of a second H to hydrino. In embodiments, the discharge anode half-cell reaction has a voltage of at least one of about 1.2 volts thermodynamically corrected for the operating temperature relative to the standard hydrogen electrode, and a voltage in at least one of the ranges of about 1.5V to 0.75V, 1.3V to 0.9V, and 1.25V to 1.1V relative to a standard hydrogen electrode and 25 °C, and the cathode half-cell reactions has a voltage of at least one of about 0 V thermodynamically corrected for the operating temperature, and a voltage in at least one of the ranges of about -0.5V to +0.5V, -0.2V to +0.2V, and -0.1V to +0.1V relative to the standard hydrogen electrode and 25 °C.

In an embodiment of the electrochemical power system of the present disclosure, the cathode comprises NiO, the anode comprises at least one of Ni, Mo, H242 alloy, and carbon, and the bimetallic junction comprises at least one of Hastelloy, Ni, Mo, and H242 that is a different metal than that of the anode. The electrochemical power system may comprise at least one stack of cells wherein the bipolar plate comprises a bimetallic junction separating the anode and cathode. In an embodiment, the cell is supplied with $H_2O$, wherein the $H_2O$ vapor pressure is in at least one range chosen from about 0.001 Torr to 100 atm, about 0.001 Torr to 0.1 Torr, about 0.1 Torr to 1 Torr, about 1 Torr to 10 Torr, about 10 Torr to 100 Torr, about 100 Torr to 1000 Torr, and about 1000 Torr to 100 atm, and the balance of pressure to achieve at least atmospheric pressure is provided by a supplied inert gas comprising at least one of a noble gas and $N_2$. In an embodiment, the electrochemical power system may comprise a water vapor generator to supply $H_2O$ to the system. In an embodiment, the cell is intermittently switched between charge and discharge phases, wherein (i) the charging phase comprises at least the electrolysis of water at electrodes of opposite voltage polarity, and (ii) the discharge phase comprises at least the formation of $H_2O$ catalyst at one or both of the electrodes; wherein (i) the role of each electrode of each cell as the cathode or anode reverses in switching back and forth between the charge and discharge phases, and (ii) the current polarity reverses in switching back and forth between the charge and discharge phases, and wherein the charging comprises at least one of the application of an applied current and voltage. In embodiments, at least one of the applied current and voltage has a waveform comprising a duty cycle in the range of about 0.001% to about 95%; a peak voltage per cell within the range of about 0.1 V to 10 V; a peak power density of about 0.001 W/$cm^2$ to 1000 W/ $cm^2$, and an average power within the range of about 0.0001 W/$cm^2$ to 100 W/ $cm^2$ wherein the applied current and voltage further comprises at least one of direct voltage, direct current, and at least one of alternating current and voltage waveforms, wherein the waveform comprises frequencies within the range of about 1 to about 1000 Hz. The waveform of the intermittent cycle may comprise at least one of constant current, power, voltage, and resistance, and variable current, power, voltage, and resistance for at least one of the electrolysis and discharging phases of the intermittent cycle. In embodiments, the parameters for at least one phase of the cycle comprises: the frequency of the intermittent phase is in at least one range chosen from about 0.001 Hz to 10 MHz, about 0.01 Hz to 100 kHz, and about 0.01 Hz to 10 kHz; the voltage per cell is in at least one range chosen from about 0.1 V to 100 V, about 0.3 V to 5 V, about 0.5 V to 2 V, and about 0.5 V to 1.5 V; the current per electrode area active to form hydrinos is in at least one range chosen from about 1 microamp $cm^{-2}$ to 10 A $cm^{-2}$, about 0.1 milliamp $cm^{-2}$ to 5 A $cm^{-2}$, and about 1 milliamp $cm^{-2}$ to 1 A $cm^{-2}$; the power per electrode area active to form hydrinos is in at least one range chosen from about 1 microW $cm^{-2}$ to 10 W $cm^{-2}$, about 0.1 milliW $cm^{-2}$ to 5 W $cm^{-2}$, and about 1 milliW $cm^{-2}$ to 1 W $cm^{-2}$; the constant current per electrode area active to form hydrinos is in the range of about 1 microamp $cm^{-2}$ to 1 A $cm^{-2}$; the constant power per electrode area active to form hydrinos is in the range of about 1 milliW $cm^{-2}$ to 1 W $cm^{-2}$; the time interval is in at least one range chosen from about $10^{-4}$ s to 10,000 s, $10^{-3}$ s to 1000 s, and $10^{-2}$ s to 100 s, and $10^{-1}$ s to 10 s; the resistance per cell is in at least one range chosen from about 1milliohm to 100 Mohm, about 1 ohm to 1 Mohm, and 10 ohm to 1 kohm; conductivity of a suitable load per electrode area active to form hydrinos is in at least one range chosen from about $10^{-5}$ to 1000 $ohm^{-1}$ $cm^{-2}$, $10^{-4}$ to 100 $ohm^{-1}$ $cm^{-2}$, $10^{-3}$ to 10 $ohm^{-1}$ $cm^{-2}$, and $10^{-2}$ to 1 $ohm^{-1}$ $cm^{-2}$, and at least one of the discharge current, voltage, power, or time interval is larger than that of the electrolysis phase to give rise to at least one of power or energy gain over the cycle. The voltage during discharge may be maintained above that which prevents the anode from excessively corroding.

In an embodiment of the electrochemical power system, the catalyst-forming reaction is given by

$O_2 + 5H^+ + 5e'$ to $2H_2O + H(l/p)$;

the counter half-cell reaction is given by

$H_2$ to $2H^+ + 2e^-$; and

the overall reaction is given by

$3/2H_2 + 1/2O_2$ to $H_2O + H(1/p)$.

At least one of the following products may be formed from hydrogen during the operation of the electrochemical power system: a) a hydrogen product with a Raman peak at integer multiple of 0.23 to 0.25 $cm^{-1}$ plus a matrix shift in the range of 0 to 2000 $cm^{-1}$; b) a hydrogen product with a infrared peak at integer multiple of 0.23 to 0.25 $cm^{-1}$ plus a matrix shift in the range of 0 to 2000 $cm^{-1}$; c) a hydrogen product with a X-ray photoelectron spectroscopy peak at an energy in the range of 500 to 525 eV plus a matrix shift in the range of 0 to 10 eV; d) a hydrogen product that causes an upfield MAS NMR matrix shift; e) a hydrogen product that has an upfield MAS NMR or liquid NMR shift of greater than -5 ppm relative to TMS; f) a hydrogen product with at least two electron-beam emission spectral peaks in the range of 200 to 300 nm having a spacing at an integer multiple of 0.23 to 0.3 $cm^{-1}$ plus a matrix shift in the range of 0 to 5000 $cm^{-1}$; and g) a hydrogen product with at least two UV fluorescence emission spectral peaks in the range of 200 to 300 nm having a spacing at an integer multiple of 0.23 to 0.3 $cm^{-1}$ plus a matrix shift in the range of 0 to 5000 $cm^{-1}$.

The present disclosure is further directed to an electrochemical power system comprising a hydrogen anode comprising a hydrogen permeable electrode; a molten salt electrolyte comprising a hydroxide; and at least one of an $O_2$ and a $H_2O$ cathode. In embodiments, the cell temperature that maintains at least one of a molten state of the electrolyte and the membrane in a hydrogen permeable state is in at least one range chosen from about 25 to 2000 °C, about 100 to 1000 °C, about 200 to 750 °C, and about 250 to 500 °C, the cell temperature above the electrolyte melting point in at least one range of about 0 to 1500 °C higher than the melting point, 0 to 1000 °C higher than the melting point, 0 to 500 °C higher than the melting point, 0 to 250 °C higher than the melting point, and 0 to 100 °C higher than the melting point; the membrane thickness is in at least one range chosen from about 0.0001 to 0.25 cm, 0.001 to 0.1 cm, and 0.005 to 0.05 cm; the hydrogen pressure is maintained in at least one range chosen from about 1 Torr to 500 atm, 10 Torr to 100 atm, and 100 Torr to 5 atm; the hydrogen permeation rate is in at least one range chosen from about 1 X $10^{-13}$ mole $s^{-1}$ $cm^{-2}$ to 1 X $10^{-4}$ mole $s^{-1}$ $cm^{-2}$, 1 X $10^{-12}$ mole $s^{-1}$ $cm^{-2}$ to 1 X $10^{-5}$ mole $s^{-1}$ $cm^{-2}$, 1 X $10^{-11}$ mole $s^{-1}$ $cm^{-2}$ to 1 X $10^{-6}$ mole $s^{-1}$ $cm^{-2}$, 1 X $10^{-10}$ mole $s^{-1}$ $cm^{-2}$ to 1 X $10^{-7}$ mole $s^{-1}$ $cm^{-2}$, and 1 X $10^{-9}$ mole $s^{-1}$ $cm^{-2}$ to 1 X $10^{-8}$ mole $s^{-1}$ $cm^{-2}$. In an embodiment, the electrochemical power system comprises a hydrogen anode comprising a hydrogen sparging electrode; a molten salt electrolyte comprising a hydroxide, and at least one of an $O_2$ and a $H_2O$ cathode. In embodiments, the cell temperature that maintains a molten state of the electrolyte is in at least one range chosen from about 0 to 1500 °C higher than the electrolyte melting point, 0 to 1000 °C higher than the electrolyte melting point, 0 to 500 °C higher than the electrolyte melting point, 0 to 250 °C higher than the electrolyte melting point, and 0 to 100 °C higher than the electrolyte melting point; the hydrogen flow rate per geometric area of the $H_2$ bubbling or sparging electrode is in at least one range chosen from about 1 X $10^{-13}$ mole $s^{-1}$ $cm^{-2}$ to 1 X $10^{-4}$ mole $s^{-1}$ $cm^{-2}$, 1 X $10^{-12}$ mole $s^{-1}$ $cm^{-2}$ to 1 X $10^{-5}$ mole $s^{-1}$ $cm^{-2}$, 1 X $10^{-11}$ mole $s^{-1}$ $cm^{-2}$ to 1 X $10^{-6}$ mole $s^{-1}$ $cm^{-2}$, 1 X $10^{-10}$ mole $s^{-1}$ $cm^{-2}$ to 1 X $10^{-7}$ mole $s^{-1}$ $cm^{-2}$, and 1 X $10^{-9}$ mole $s^{-1}$ $cm^{-2}$ to 1 X $10^{-8}$ mole $s^{-1}$ $cm^{-2}$; the rate of reaction at the counter electrode matches or exceeds that at the electrode at which hydrogen reacts; the reduction rate of at least one of $H_2O$ and $O_2$ is sufficient to maintain the reaction rate of H or $H_2$, and the counter electrode has a surface area and a material sufficient to support the sufficient rate.

The present disclosure is further directed to a power system that generates thermal energy comprising: at least one vessel capable of a pressure of at least one of atmospheric, above atmospheric, and below atmospheric; at least one heater, reactants that constitute hydrino reactants comprising: a) a source of catalyst or a catalyst comprising nascent $H_2O$; b) a source of atomic hydrogen or atomic hydrogen; c) reactants to form at least one of the source of catalyst, the catalyst, the source of atomic hydrogen, and the atomic hydrogen; and one or more reactants to initiate the catalysis of atomic hydrogen wherein the reaction occurs upon at least one of mixing and heating the reactants. In embodiments, the reaction of the power system to form at least one of the source of catalyst, the catalyst, the source of atomic hydrogen, and the atomic hydrogen comprise at least one reaction chosen from a dehydration reaction; a combustion reaction; a reaction of a Lewis acid or base and a Bronsted-Lowry acid or base; an oxide-base reaction; an acid anhydride-base reaction; an acid-base reaction; a base-active metal reaction; an oxidation-reduction reaction; a decomposition reaction; an exchange reaction, and an exchange reaction of a halide, O, S, Se, Te, $NH_3$, with compound having at least one OH; a hydrogen reduction reaction of a compound comprising O, and the source of H is at least one of nascent H formed when the reactants undergo reaction and hydrogen from a hydride or gas source and a dissociator.

The present disclosure is further directed to a battery or fuel cell system that generates an electromotive force

(EMF) from the catalytic reaction of hydrogen to lower energy (hydrino) states providing direct conversion of the energy released from the hydrino reaction into electricity, the system comprising:

reactants that constitute hydrino reactants during cell operation with separate electron flow and ion mass transport,
a cathode compartment comprising a cathode,
an anode compartment comprising an anode, and
a source of hydrogen.

Other embodiments of the present disclosure are directed to a battery or fuel cell system that generates an electromotive force (EMF) from the catalytic reaction of hydrogen to lower energy (hydrino) states providing direct conversion of the energy released from the hydrino reaction into electricity, the system comprising at least two components chosen from: a catalyst or a source of catalyst; atomic hydrogen or a source of atomic hydrogen; reactants to form the catalyst or source of catalyst and atomic hydrogen or source of atomic hydrogen; one or more reactants to initiate the catalysis of atomic hydrogen; and a support to enable the catalysis,
wherein the battery or fuel cell system for forming hydrinos can further comprise a cathode compartment comprising a cathode, an anode compartment comprising an anode, optionally a salt bridge, reactants that constitute hydrino reactants during cell operation with separate electron flow and ion mass transport, and a source of hydrogen.

In an embodiment of the present disclosure, the reaction mixtures and reactions to initiate the hydrino reaction such as the exchange reactions of the present disclosure are the basis of a fuel cell wherein electrical power is developed by the reaction of hydrogen to form hydrinos. Due to oxidation-reduction cell half reactions, the hydrino-producing reaction mixture is constituted with the migration of electrons through an external circuit and ion mass transport through a separate path to complete an electrical circuit. The overall reactions and corresponding reaction mixtures that produce hydrinos given by the sum of the half-cell reactions may comprise the reaction types for thermal power and hydrino chemical production of the present disclosure.

In an embodiment of the present disclosure, different reactants or the same reactants under different states or conditions such as at least one of different temperature, pressure, and concentration are provided in different cell compartments that are connected by separate conduits for electrons and ions to complete an electrical circuit between the compartments. The potential and electrical power gain between electrodes of the separate compartments or thermal gain of the system is generated due to the dependence of the hydrino reaction on mass flow from one compartment to another. The mass flow provides at least one of the formation of the reaction mixture that reacts to produce hydrinos and the conditions that permit the hydrino reaction to occur at substantial rates. Ideally, the hydrino reaction does not occur or doesn't occur at an appreciable rate in the absence of the electron flow and ion mass transport.

In another embodiment, the cell produces at least one of electrical and thermal power gain over that of an applied electrolysis power through the electrodes.

In an embodiment, the reactants to form hydrinos are at least one of thermally regenerative or electrolytically regenerative.

An embodiment of the disclosure is directed to an electrochemical power system that generates an electromotive force (EMF) and thermal energy comprising a cathode, an anode, and reactants that constitute hydrino reactants during cell operation with separate electron flow and ion mass transport, comprising at least two components chosen from: a) a source of catalyst or a catalyst comprising at least one of the group of nH, OH, $OH^-$, $H_2O$, $H_2S$, or $MNH_2$ wherein n is an integer and M is alkali metal; b) a source of atomic hydrogen or atomic hydrogen; c) reactants to form at least one of the source of catalyst, the catalyst, the source of atomic hydrogen, and the atomic hydrogen; one or more reactants to initiate the catalysis of atomic hydrogen; and a support. At least one of the following conditions may occur in the electrochemical power system: a) atomic hydrogen and the hydrogen catalyst is formed by a reaction of the reaction mixture; b) one reactant that by virtue of it undergoing a reaction causes the catalysis to be active; and c) the reaction to cause the catalysis reaction comprises a reaction chosen from: (i) exothermic reactions; (ii) coupled reactions; (iii) free radical reactions; (iv) oxidation-reduction reactions; (v) exchange reactions, and (vi) getter, support, or matrix-assisted catalysis reactions. In an embodiment, at least one of a) different reactants or b) the same reactants under different states or conditions are provided in different cell compartments that are connected by separate conduits for electrons and ions to complete an electrical circuit between the compartments. At least one of an internal mass flow and an external electron flow may provide at least one of the following conditions to occur: a) formation of the reaction mixture that reacts to produce hydrinos; and b) formation of the conditions that permit the hydrino reaction to occur at substantial rates. In an embodiment, the reactants to form hydrinos are at least one of thermally or electrolytically regenerative. At least one of electrical and thermal energy output may be over that required to regenerate the reactants from the products.

Other embodiments of the disclosure are directed to an electrochemical power system that generates an electromotive force (EMF) and thermal energy comprising a cathode; an anode, and reactants that constitute hydrino reactants during cell operation with separate electron flow and ion mass transport, comprising at least two components

chosen from: a) a source of catalyst or catalyst comprising at least one oxygen species chosen from $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$ that undergoes an oxidative reaction with a H species to form at least one of OH and $H_2O$, wherein the H species comprises at least one of $H_2$, H, $H^+$, $H_2O$, $H_3O^+$, OH, $OH^+$, $OH^-$, HOOH, and $OOH^-$; b) a source of atomic hydrogen or atomic hydrogen; c) reactants to form at least one of the source of catalyst, the catalyst, the source of atomic hydrogen, and the atomic hydrogen; and one or more reactants to initiate the catalysis of atomic hydrogen; and a support. The source of the O species may comprise at least one compound or admixture of compounds comprising O, $O_2$, air, oxides, NiO, CoO, alkali metal oxides, $Li_2O$, $Na_2O$, $K_2O$, alkaline earth metal oxides, MgO, CaO, SrO, and BaO, oxides from the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W, peroxides, alkali metal peroxides, superoxide, alkali or alkaline earth metal superoxides, hydroxides, alkali, alkaline earth, transition metal, inner transition metal, and Group III, IV, or V, hydroxides, oxyhydroxides, AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. The source of the H species may comprise at least one compound or admixture of compounds comprising H, a metal hydride, $LaNi_5H_6$, hydroxide, oxyhydroxide, $H_2$, a source of $H_2$, $H_2$ and a hydrogen permeable membrane, $Ni(H_2)$, $V(H_2)$, $Ti(H_2)$, $Nb(H_2)$, $Pd(H_2)$, $PdAg(H_2)$, $Fe(H_2)$, and stainless steel (SS) such as 430 SS ($H_2$).

In another embodiment, the electrochemical power system comprises a hydrogen anode; a molten salt electrolyte comprising a hydroxide, and at least one of an $O_2$ and a $H_2O$ cathode. The hydrogen anode may comprise at least one of a hydrogen permeable electrode such as at least one of $Ni(H_2)$, $V(H_2)$, $Ti(H_2)$, $Nb(H_2)$, $Pd(H_2)$, $PdAg(H_2)$, $Fe(H_2)$, and 430 $SS(H_2)$, a porous electrode that may sparge $H_2$, and a hydride such as a hydride chosen from R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, and other alloys capable of storing hydrogen, $AB_5$ (LaCePrNdNiCoMnAl) or $AB_2$ (VTiZrNiCrCoMnAlSn) type, where the "$AB_x$" designation refers to the ratio of the A type elements (LaCePrNd or TiZr) to that of the B type elements (VNiCrCoMnAlSn), $AB_5$-type: $MmNi_{3.2}Co_{1.0}Mn_{0.6}Al_{0.11}Mo_{0.09}$ (Mm = misch metal: 25 wt% La, 50 wt% Cc, 7 wt% Pr, 18 wt% Nd), $AB_2$-type: $Ti_{0.51}Zr_{0.49}V_{0.70}Ni_{1.18}Cr_{0.12}$ alloys, magnesium-based alloys, $Mg_{1.9}Al_{0.1}Ni_{0.8}Co_{0.1}Mn_{0.1}$ alloy, $Mg_{0.22}Sc_{0.28}(Pd_{0.012} + Rh_{0.012})$, and $Mg_{80}Ti_{20}$, $Mg_{80}V_{20}$, $La_{0.8}Nd_{0.2}Ni_{2.4}Co_{2.5}Si_{0.1}$, $LaNi_{5-x}M_x$ (M= Mn, Al), (M= Al, Si, Cu), (M= Sn), (M= Al, Mn, Cu) and $LaNi_4Co$, $MmNi_{3.55}Mn_{0.44}Al_{0.3}Co_{0.75}$, $LaNi_{3.55}Mn_{0.44}Al_{0.3}Co_{0.75}$, $MgCu_2$, $MgZn_2$, $MgNi_2$, AB compounds, TiFe, TiCo, and TiNi, $AB_n$ compounds (n = 5, 2, or 1), $AB_{3-4}$ compounds, $AB_x$ (A = La, Ce, Mn, Mg; B = Ni, Mn, Co, Al), $ZrFe_2$, $Zr_{0.5}Cs_{0.5}Fe_2$, $Zr_{0.8}Sc_{0.2}Fe_2$, $YNi_5$, $LaNi_5$, $LaNi_{4.5}Co_{0.5}$, (Ce, La, Nd, Pr)$Ni_5$, Mischmetal-nickel alloy, $Ti_{0.98}Zr_{0.02}V_{0.43}Fe_{0.09}Cr_{0.05}Mn_{1.5}$, $La_2Co_1Ni_9$, FeNi, and $TiMn_2$. The molten salt may comprise a hydroxide with at least one other salt such as one chosen from one or more other hydroxides, halides, nitrates, sulfates, carbonates, and phosphates. The molten salt may comprise at least one salt mixture chosen from $CsNO_3$-CsOH, CsOH-KOH, CsOH-LiOH, CsOH-NaOH, CsOH-RbOH, $K_2CO_3$-KOH, KBr-KOH, KC1-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, $RbNO_3$-RbOH, LiOH-LiX, NaOH-NaX, KOH-KX, RbOH-RbX, CsOH-CsX, $Mg(OH)_2$-$MgX_2$, $Ca(OH)_2$-$CaX_2$, $Sr(OH)_2$-$SrX_2$, or $Ba(OH)_2$-$BaX_2$ wherein X =F, Cl, Br, or I, and LiOH, NaOH, KOH, RbOH, CsOH, $Mg(OH)_2$, $Ca(OH)_2$, $Sr(OH)_2$, or $Ba(OH)_2$ and one or more of $AlX_3$, $VX_2$, $ZrX_2$, $TiX_3$, $MnX_2$, $ZnX_2$, $CrX_2$, $SnX_2$, $InX_3$, $CuX_2$, $NiX_2$, $PbX_2$, $SbX_3$, $BiX_3$, $CoX_2$, $CdX_2$, $GeX_3$, $AuX_3$, $IrX_3$, $FeX_3$, $HgX_2$, $MoX_4$, $OsX_4$, $PdX_2$, $ReX_3$, $RhX_3$, $RuX_3$, $SeX_2$, $AgX_2$, $TcX_4$, $TeX_4$, T1X, and $WX_4$ wherein X =F, Cl, Br, or I. The molten salt may comprise a cation that is common to the anions of the salt mixture electrolyte; or the anion is common to the cations, and the hydroxide is stable to the other salts of the mixture.

In another embodiment of the disclosure, the electrochemical power system comprises at least one of [M"($H_2$)/MOH-M'halide/M‴] and [M"($H_2$)/M$(OH)_2$-M'halide/M‴], wherein M is an alkali or alkaline earth metal, M' is a metal having hydroxides and oxides that are at least one of less stable than those of alkali or alkaline earth metals or have a low reactivity with water, M" is a hydrogen permeable metal, and M‴ is a conductor. In an embodiment, M' is metal such as one chosen from Cu, Ni, Pb, Sb, Bi, Co, Cd, Ge, Au, Ir, Fe, Hg, Mo, Os, Pd, Re, Rh, Ru, Se, Ag, Te, Te, Tl, Sn, W, Al, V, Zr, Ti, Mn, Zn, Cr, In, and Pb. Alternatively, M and M' may be metals such as ones independently chosen from Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. Other exemplary systems comprise [M'($H_2$)/MOH M"X/M‴] wherein M, M', M", and M‴ are metal cations or metal, X is an anion such as one chosen from hydroxides, halides, nitrates, sulfates, carbonates, and phosphates, and M' is $H_2$ permeable. In an embodiment, the hydrogen anode comprises a metal such as at least one chosen from V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W that reacts with the electrolyte during discharge. In another embodiment, the electrochemical power system comprises a hydrogen source; a hydrogen anode capable of forming at least one of OH, $OH^-$, and $H_2O$ catalyst, and providing H; a source of at least one of $O_2$ and $H_2O$; a cathode capable of reducing at

least one of $H_2O$ or $O_2$; an alkaline electrolyte; an optional system capable of collection and recirculation of at least one of $H_2O$ vapor, $N_2$, and $O_2$, and a system to collect and recirculate $H_2$.

The present disclosure is further directed to an electrochemical power system comprising an anode comprising at least one of: a metal such as one chosen from V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W and a metal hydride such as one chosen from R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, and other alloys capable of storing hydrogen such as one chosen from $AB_5$ (LaCePrNdNiCoMnAl) or $AB_2$ (VTiZrNiCrCoMnAlSn) type, where the "$AB_x$" designation refers to the ratio of the A type elements (LaCePrNd or TiZr) to that of the B type elements (VNiCrCoMnAlSn), $AB_5$-type, $MmNi_{3.2}Co_{1.0}Mn_{0.6}Al_{0.11}Mo_{0.09}$ (Mm = misch metal: 25 wt% La, 50 wt% Ce, 7 wt% Pr, 18 wt% Nd), $AB_2$-type: $Ti_{0.51}Zr_{0.49}V_{0.70}Ni_{1.18}Cr_{0.12}$ alloys, magnesium-based alloys, $Mg_{1.9}Al_{0.1}Ni_{0.8}Co_{0.1}Mn_{0.1}$ alloy, $Mg_{0.72}Sc_{0.28}(Pd_{0.012} + Rh_{0.012})$, and $Mg_{80}Ti_{20}$, $Mg_{80}V_{20}$, $La_{0.8}Nd_{0.2}Ni_{2.4}Co_{2.5}Si_{0.1}$, $LaNi_{5-x}M_x$ (M= Mn, Al), (M= Al, Si, Cu), (M= Sn), (M= Al, Mn, Cu) and $LaNi_4Co$, $MmNi_{3.55}Mn_{0.44}Al_{0.3}Co_{0.75}$, $LaNi_{3.55}Mn_{0.44}Al_{0.3}Co_{0.75}$, $MgCu_2$, $MgZn_2$, $MgNi_2$, AB compounds, TiFe, TiCo, and TiNi, $AB_n$ compounds (n = 5, 2, or 1), $AB_{3-4}$ compounds, $AB_x$ (A = La, Ce, Mn, Mg; B = Ni, Mn, Co, Al), $ZrFe_2$, $Zr_{0.5}Cs_{0.5}Fe_2$, $Zr_{0.8}Sc_{0.2}Fe_2$, $YNi_5$, $LaNi_5$, $LaNi_{4.5}Co_{0.5}$, (Ce, La, Nd, Pr)$Ni_5$, Mischmetal-nickel alloy, $Ti_{0.98}Zr_{0.02}V_{0.43}Fe_{0.09}Cr_{0.05}Mn_{1.5}$, $La_2Co_1Ni_9$, FeNi, and $TiMn_2$; a separator; an aqueous alkaline electrolyte; at least one of a $O_2$ and a $H_2O$ reduction cathode, and at least one of air and $O_2$. The electrochemical system may further comprise an electrolysis system that intermittently charges and discharges the cell such that there is a gain in the net energy balance. Alternatively, the electrochemical power system may comprise or further comprise a hydrogenation system that regenerates the power system by rehydriding the hydride anode.

Another embodiment comprises an electrochemical power system that generates an electromotive force (EMF) and thermal energy comprising a molten alkali metal anode; beta-alumina solid electrolyte (BASE), and a molten salt cathode comprising a hydroxide. The molten salt cathode may comprise a eutectic mixture such as one of those of TABLE 4 and a source of hydrogen such as a hydrogen permeable membrane and $H_2$ gas. The catalyst or the source of catalyst may be chosen from OH, $OH^-$, $H_2O$, NaH, Li, K, $Rb^+$, and Cs. The molten salt cathode may comprise an alkali hydroxide. The system may further comprise a hydrogen reactor and metal-hydroxide separator wherein the alkali metal cathode and the alkali hydroxide cathode are regenerated by hydrogenation of product oxide and separation of the resulting alkali metal and metal hydroxide.

Another embodiment of the electrochemical power system comprises an anode comprising a source of hydrogen such as one chosen from a hydrogen permeable membrane and $H_2$ gas and a hydride further comprising a molten hydroxide; beta-alumina solid electrolyte (BASE), and a cathode comprising at least one of a molten element and a molten halide salt or mixture. Suitable cathodes comprise a molten element cathode comprising one of In, Ga, Te, Pb, Sn, Cd, Hg, P, S, I, Se, Bi, and As. Alternatively, the cathode may be a molten salt cathode comprising NaX (X is halide) and one or more of the group of NaX, AgX, $AlX_3$, $AsX_3$, AuX, $AuX_3$, $BaX_2$, $BeX_2$, $BiX_3$, $CaX_2$, $CdX_3$, $CeX_3$, $CoX_2$, $CrX_2$, CsX, CuX, $CuX_2$, $EuX_3$, $FeX_2$, $FeX_3$, $GaX_3$, $GdX_3$, $GeX_4$, $HfX_4$, HgX, $HgX_2$, InX, $InX_2$, $InX_3$, IrX, $IrX_2$, KX, $KAgX_2$, $KAlX_4$, $K_3AlX_6$, $LaX_3$, LiX, $MgX_2$, $MnX_2$, $MoX_4$, $MoX_5$, $MoX_6$, $NaAlX_4$, $Na_3AlX_6$, $NbX_5$, $NdX_3$, $NiX_2$, $OsX_3$, $OsX_4$, $PbX_2$, $PdX_2$, $PrX_3$, $PtX_2$, $PtX_4$, $PuX_3$, RbX, $ReX_3$, RhX, $RhX_3$, $RuX_3$, $SbX_3$, $SbX_5$, $ScX_3$, $SiX_4$, $SnX_2$, $SnX_4$, $SrX_2$, $ThX_4$, $TiX_2$, $TiX_3$, TlX, $UX_3$, $UX_4$, $VX_4$, $WX_6$, $YX_3$, $ZnX_2$, and $ZrX_4$.

Another embodiment of an electrochemical power system that generates an electromotive force (EMF) and thermal energy comprises an anode comprising Li; an electrolyte comprising an organic solvent and at least one of an inorganic Li electrolyte and $LiPF_6$; an olefin separator, and a cathode comprising at least one of an oxyhydroxide, AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$.

In another embodiment, the electrochemical power system comprises an anode comprising at least one of Li, a lithium alloy, $Li_3Mg$, and a species of the Li-N-H system; a molten salt electrolyte, and a hydrogen cathode comprising at least one of $H_2$ gas and a porous cathode, $H_2$ and a hydrogen permeable membrane, and one of a metal hydride, alkali, alkaline earth, transition metal, inner transition metal, and rare earth hydride.

The present disclosure is further directed to an electrochemical power system comprising at least one of the cells a) through h) comprising:

a) (i) an anode comprising a hydrogen permeable metal and hydrogen gas such as one chosen from $Ni(H_2)$, $V(H_2)$, $Ti(H_2)$, $Fe(H_2)$, $Nb(H_2)$ or a metal hydride such as one chosen from $LaNi_5H_6$, $TiMn_2H_x$, and $La_2Ni_9CoH_6$ (x is an integer); (ii) a molten electrolyte such as one chosen from MOH or $M(OH)_2$, or MOH or $M(OH)_2$ with M'X or $M'X_2$ wherein M and M' are metals such as ones independently chosen from Li, Na, K, Rb, Cs, Mg, Ca, Sr, and Ba, and X is an anion such as one chosen from hydroxides, halides, sulfates, and carbonates, and (iii) a cathode comprising the metal that may be the same as that of the anode and further comprising air or $O_2$;

b)(i) an anode comprising at least one metal such as one chosen from R-Ni, Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr, In, and Pb; (ii) an electrolyte comprising an aqueous alkali hydroxide having the concentration range of about 10 M to saturated; (iii) an olefin

separator, and (iv) a carbon cathode and further comprising air or $O_2$;

c) (i) an anode comprising molten NaOH and a hydrogen permeable membrane such as Ni and hydrogen gas; (ii) an electrolyte comprising beta alumina solid electrolyte (BASE), and (iii) a cathode comprising a molten eutectic salt such as NaCl-$MgCl_2$, NaCl-$CaCl_2$, or MX-M'$X_2$' (M is alkali, M' is alkaline earth, and X and X' are halide);

d) (i) an anode comprising molten Na; (ii) an electrolyte comprising beta alumina solid electrolyte (BASE), and (iii) a cathode comprising molten NaOH;

e) (i) an anode comprising an hydride such as $LaNi_5H_6$; (ii) an electrolyte comprising an aqueous alkali hydroxide having the concentration range of about 10 M to saturated; (iii) an olefin separator, and (iv) a carbon cathode and further comprising air or $O_2$;

f) (i) an anode comprising Li; (ii) an olefin separator; (ii) an organic electrolyte such as one comprising LP30 and $LiPF_6$, and (iv) a cathode comprising an oxyhydroxide such as CoO(OH);

g) (i) an anode comprising a lithium alloy such as $Li_3Mg$; (ii) a molten salt electrolyte such as LiCl-KCl or MX-M'X' (M and M' are alkali, X and X' are halide), and (iii) a cathode comprising a metal hydride such as one chosen from $CeH_2$, $LaH_2$, $ZrH_2$, and $TiH_2$, and further comprising carbon black, and

h) (i) an anode comprising Li; (ii) a molten salt electrolyte such as LiCl-KCl or MX-M'X' (M and M' are alkali, X and X' are halide), and

(iii) a cathode comprising a metal hydride such as one chosen from $CeH_2$, $LaH_2$, $ZrH_2$, and $TiH_2$, and further comprising carbon black.

The present disclosure is further directed to an electrochemical power system comprising at least one of the cells: [Ni($H_2$)/LiOH-LiBr/Ni] wherein the hydrogen electrode designated Ni($H_2$) comprises at least one of a permeation, sparging, and intermittent electrolysis source of hydrogen; [PtTi/$H_2SO_4$ (about 5 M aq) or $H_3PO_4$ ( about 14.5 M aq)/PtTi] intermittent electrolysis, and [NaOH Ni($H_2$)/BASE/NaCl $MgCl_2$] wherein the hydrogen electrode designated Ni($H_2$) comprises a permeation source of hydrogen. In suitable embodiments, the hydrogen electrode comprises a metal such as nickel that is prepared to have a protective oxide coat such as NiO. The oxide coat may be formed by anodizing or oxidation in an oxidizing atmosphere such as one comprising oxygen.

The present disclosure is further directed to an electrochemical power system comprising at least one of the cells: [Ni($H_2$)/LiOH-LiBr/Ni] wherein the hydrogen electrode designated Ni($H_2$) comprises at least one of a permeation, sparging, and intermittent electrolysis source of hydrogen; [PtTi/$H_2SO_4$ (about 5 M aq) or $H_3PO_4$ (about 14.5 M aq)/PtTi] intermittent electrolysis, and [NaOH Ni($H_2$)/BASE/NaCl $MgCl_2$] wherein the hydrogen electrode designated Ni($H_2$) comprises a permeation source of hydrogen.

The present disclosure is further directed to an electrochemical power system comprising at least one of the cells a) through d) comprising:

a) (i) an anode comprising a hydrogen electrode designated Ni($H_2$) comprising at least one of a permeation, sparging, and intermittent electrolysis source of hydrogen; (ii) a molten electrolyte such as one chosen from MOH or $M(OH)_2$, or MOH or $M(OH)_2$ with M'X or M'$X_2$ wherein M and M' are metals such as ones independently chosen from Li, Na, K, Rb, Cs, Mg, Ca, Sr, and Ba, and X is an anion such as one chosen from hydroxides, halides, sulfates, and carbonates, and (iii) a cathode comprising the metal that may be the same as that of the anode and further comprising air or $O_2$;

b) (i) an anode comprising a hydrogen electrode designated Ni($H_2$) comprises at least one of a permeation, sparging, and intermittent electrolysis source of hydrogen; (ii) a molten electrolyte such as LiOH-LiBr, NaOH-NaBr, or NaOH-NaI, and (iii) a cathode comprising the metal that may be the same as that of the anode and further comprising air or $O_2$;

c) (i) an anode comprising a noble metal such as Pt/Ti; (ii) an aqueous acid electrolyte such as $H_2SO_4$ or $H_3PO_4$ that may be in the concentration range of 1 to 10 M, and 5 to 15 M, respectively, and (iii) a cathode comprising the metal that may be the same as that of the anode and further comprising air or $O_2$, and

d) (i) an anode comprising molten NaOH and a hydrogen electrode designated Ni($H_2$) comprising a permeation source of hydrogen; (ii) an electrolyte comprising beta alumina solid electrolyte (BASE), and (iii) a cathode comprising a molten eutectic salt such as NaCl-$MgCl_2$, NaCl-$CaCl_2$, or MX-M'$X_2$' (M is alkali, M' is alkaline earth, and X and X' are halide).

Further embodiments of the present disclosure are directed to catalyst systems such as those of the electrochemical cells comprising a hydrogen catalyst capable of causing atomic H in its n=1 state to form a lower-energy state, a source of atomic hydrogen, and other species capable of initiating and propagating the reaction to form lower-energy hydrogen. In certain embodiments, the present disclosure is directed to a reaction mixture comprising at least one source of atomic hydrogen and at least one catalyst or source of catalyst to support the catalysis of hydrogen to form hydrinos. The reactants and reactions disclosed herein for solid and liquid fuels are also reactants and reactions of heterogeneous fuels comprising a mixture of phases. The reaction mixture comprises at least two components chosen from a hydrogen

catalyst or source of hydrogen catalyst and atomic hydrogen or a source of atomic hydrogen, wherein at least one of the atomic hydrogen and the hydrogen catalyst may be formed by a reaction of the reaction mixture. In additional embodiments, the reaction mixture further comprises a support, which in certain embodiments can be electrically conductive, a reductant, and an oxidant, wherein at least one reactant that by virtue of it undergoing a reaction causes the catalysis to be active. The reactants may be regenerated for any non-hydrino product by heating.

The present disclosure is also directed to a power source comprising:

a reaction cell for the catalysis of atomic hydrogen;
a reaction vessel;
a vacuum pump;
a source of atomic hydrogen in communication with the reaction vessel;
a source of a hydrogen catalyst comprising a bulk material in communication with the reaction vessel,
the source of at least one of the source of atomic hydrogen and the source of hydrogen catalyst comprising a reaction mixture comprising at least one reactant comprising the element or elements that form at least one of the atomic hydrogen and the hydrogen catalyst and at least one other element, whereby at least one of the atomic hydrogen and hydrogen catalyst is formed from the source,
at least one other reactant to cause catalysis; and
a heater for the vessel,
whereby the catalysis of atomic hydrogen releases energy in an amount greater than about 300 kJ per mole of hydrogen.

The reaction to form hydrinos may be activated or initiated and propagated by one or more chemical reactions. These reactions can be chosen for example from (i) hydride exchange reactions, (ii) halide- hydride exchange reactions, (iii) exothermic reactions, which in certain embodiments provide the activation energy for the hydrino reaction, (iv) coupled reactions, which in certain embodiments provide for at least one of a source of catalyst or atomic hydrogen to support the hydrino reaction, (v) free radical reactions, which in certain embodiments serve as an acceptor of electrons from the catalyst during the hydrino reaction, (vi) oxidation-reduction reactions, which in certain embodiments, serve as an acceptor of electrons from the catalyst during the hydrino reaction, (vi) other exchange reactions such as anion exchange including halide, sulfide, hydride, arsenide, oxide, phosphide, and nitride exchange that in an embodiment, facilitate the action of the catalyst to become ionized as it accepts energy from atomic hydrogen to form hydrinos, and (vii) getter, support, or matrix-assisted hydrino reactions, which may provide at least one of (a) a chemical environment for the hydrino reaction, (b) act to transfer electrons to facilitate the H catalyst function, (c) undergoe a reversible phase or other physical change or change in its electronic state, and (d) bind a lower-energy hydrogen product to increase at least one of the extent or rate of the hydrino reaction. In certain embodiments, the electrically conductive support enables the activation reaction.

In another embodiment, the reaction to form hydrinos comprises at least one of a hydride exchange and a halide exchange between at least two species such as two metals. At least one metal may be a catalyst or a source of a catalyst to form hydrinos such as an alkali metal or alkali metal hydride. The hydride exchange may be between at least two hydrides, at least one metal and at least one hydride, at least two metal hydrides, at least one metal and at least one metal hydride, and other such combinations with the exchange between or involving two or more species. In an embodiment, the hydride exchange forms a mixed metal hydride such as $(M_1)_x(M_2)_yH_z$ wherein x,y, and z are integers and $M_1$ and $M_2$ are metals.

Other embodiments of the present disclosure are directed to reactants wherein the catalyst in the activating reaction and/or the propagation reaction comprises a reaction of the catalyst or source of catalyst and source of hydrogen with a material or compound to form an intercalation compound wherein the reactants are regenerated by removing the intercalated species. In an embodiment, carbon may serve as the oxidant and the carbon may be regenerated from an alkali metal intercalated carbon for example by heating, use of displacing agent, electrolytically, or by using a solvent.

In additional embodiments, the present disclosure is directed to a power system comprising:

(i) a chemical fuel mixture comprising at least two components chosen from: a catalyst or source of catalyst; atomic hydrogen or a source of atomic hydrogen; reactants to form the catalyst or the source of catalyst and atomic hydrogen or a source of atomic hydrogen; one or more reactants to initiate the catalysis of atomic hydrogen; and a support to enable the catalysis,
(ii) at least one thermal system for reversing an exchange reaction to thermally regenerate the fuel from the reaction products comprising a plurality of reaction vessels,

wherein regeneration reactions comprising reactions that form the initial chemical fuel mixture from the products of the reaction of the mixture are performed in at least one reaction vessel of the plurality in conjunction with the at least one other reaction vessel undergoing power reactions,

the heat from at least one power-producing vessel flows to at least one vessel that is undergoing regeneration to provide the energy for the thermal regeneration,
the vessels are embedded in a heat transfer medium to achieve the heat flow,
at least one vessel further comprising a vacuum pump and a source of hydrogen, and may further comprise two chambers having a temperature difference maintained between a hotter chamber and a colder chamber such that a species preferentially accumulates in the colder chamber,
wherein a hydride reaction is performed in the colder chamber to form at least one initial reactant that is returned to the hotter chamber,

(iii) a heat sink that accepts the heat from the power-producing reaction vessels across a thermal barrier, and
(iv) a power conversion system that may comprise a heat engine such as a Rankine or Brayton-cycle engine, a steam engine, a Stirling engine, wherein the power conversion system may comprise thermoelectric or thermionic converters. In certain embodiments, the heat sink may transfer power to a power conversion system to produce electricity.

In certain embodiments, the power conversion system accepts the flow of heat from the heat sink, and in certain embodiments, the heat sink comprises a steam generator and steam flows to a heat engine such as a turbine to produce electricity.
In additional embodiments, the present disclosure is directed to a power system comprising:

(i) a chemical fuel mixture comprising at least two components chosen from: a catalyst or a source of catalyst; atomic hydrogen or a source of atomic hydrogen; reactants to form the catalyst or the source of catalyst and atomic hydrogen or a source of atomic hydrogen; one or more reactants to initiate the catalysis of atomic hydrogen; and a support to enable the catalysis,
(ii) a thermal system for reversing an exchange reaction to thermally regenerate the fuel from the reaction products comprising at least one reaction vessel, wherein regeneration reactions comprising reactions that form the initial chemical fuel mixture from the products of the reaction of the mixture are performed in the at least one reaction vessel in conjunction with power reactions, the heat from power-producing reactions flows to regeneration reactions to provide the energy for the thermal regeneration, at least one vessel is insulated on one section and in contact with a thermally conductive medium on another section to achieve a heat gradient between the hotter and colder sections, respectively, of the vessel such that a species preferentially accumulates in the colder section, at least one vessel further comprising a vacuum pump and a source of hydrogen, wherein a hydride reaction is performed in the colder section to form at least one initial reactant that is returned to the hotter section,
(iii) a heat sink that accepts the heat from the power-producing reactions transferred through the thermally conductive medium and optionally across at least one thermal barrier, and
(iv) a power conversion system that may comprise a heat engine such as a Rankine or Brayton-cycle engine, a steam engine, a Stirling engine, wherein the power conversion system may comprise thermoelectric or thermionic converters, wherein the conversion system accepts the flow of heat from the heat sink.

In an embodiment, the heat sink comprises a steam generator and steam flows to a heat engine such as a turbine to produce electricity.

## BRIEF DESCRIPTION OF THE DRAWINGS

FIGURE 1 is a schematic drawing of a battery and fuel cell and electrolysis cell in accordance with the present disclosure.
FIGURE 2 is a schematic drawing of a CIHT cell in accordance with the present disclosure.
FIGURE 3 is a schematic drawing of a CIHT cell dipolar plate in accordance with the present disclosure.
FIGURE 4 is a schematic drawing of a three half-cell CIHT cell in accordance with the present disclosure.
FIGURE 5 is a schematic drawing of a CIHT cell comprising $H_2O$ and $H_2$ collection and recycling systems in accordance with the present disclosure.

## DETAILED DESCRIPTION OF THE EMBODIMENTS OF THE DISCLOSURE

The present disclosure is directed to catalyst systems to release energy from atomic hydrogen to form lower

energy states wherein the electron shell is at a closer position relative to the nucleus. The released power is harnessed for power generation and additionally new hydrogen species and compounds are desired products. These energy states are predicted by classical physical laws and require a catalyst to accept energy from the hydrogen in order to undergo the corresponding energy-releasing transition.

Classical physics gives closed-form solutions of the hydrogen atom, the hydride ion, the hydrogen molecular ion, and the hydrogen molecule and predicts corresponding species having fractional principal quantum numbers. Using Maxwell's equations, the structure of the electron was derived as a boundary-value problem wherein the electron comprises the source current of time-varying electromagnetic fields during transitions with the constraint that the bound $n$ = 1 state electron cannot radiate energy. A reaction predicted by the solution of the H atom involves a resonant, nonradiative energy transfer from otherwise stable atomic hydrogen to a catalyst capable of accepting the energy to form hydrogen in lower-energy states than previously thought possible. Specifically, classical physics predicts that atomic hydrogen may undergo a catalytic reaction with certain atoms, excimers, ions, and diatomic hydrides which provide a reaction with a net enthalpy of an integer multiple of the potential energy of atomic hydrogen, $E_h$ = 27.2 $eV$ where $E_h$ is one Hartree. Specific species (e.g. $He^+$, $Ar^+$, $Sr^+$, K, Li, HCl, and NaH, OH, SH, SeH, $H_2O$, nH (n=integer)) identifiable on the basis of their known electron energy levels are required to be present with atomic hydrogen to catalyze the process. The reaction involves a nonradiative energy transfer followed by $q \cdot 13.6$ $eV$ continuum emission or $q \cdot 13.6$ $eV$ transfer to H to form extraordinarily hot, excited-state H and a hydrogen atom that is lower in energy than unreacted atomic hydrogen that corresponds to a fractional principal quantum number. That is, in the formula for the principal energy levels of the hydrogen atom:

$$E_n = -\frac{e^2}{n^2 8\pi\varepsilon_o a_H} = -\frac{13.598\ eV}{n^2}. \tag{1}$$

$$n = 1,2,3,... \tag{2}$$

where $a_H$ is the Bohr radius for the hydrogen atom (52.947 pm), e is the magnitude of the charge of the electron, and $\varepsilon_o$ is the vacuum permittivity, fractional quantum numbers:

$$n = 1, \frac{1}{2}, \frac{1}{3}, \frac{1}{4}, ..., \frac{1}{p}; \quad \text{where } p \leq 137 \text{ is an integer} \tag{3}$$

replace the well known parameter $n$ = integer in the Rydberg equation for hydrogen excited states and represent lower-energy-state hydrogen atoms called "hydrinos." Then, similar to an excited state having the analytical solution of Maxwell's equations, a hydrino atom also comprises an electron, a proton, and a photon. However, the electric field of the latter increases the binding corresponding to desorption of energy rather than decreasing the central field with the absorption of energy as in an excited state, and the resultant photon-electron interaction of the hydrino is stable rather than radiative.

The $n$ = 1 state of hydrogen and the $n = \frac{1}{\text{integer}}$ states of hydrogen are nonradiative, but a transition between two nonradiative states, say $n$ = 1 to $n$ = 1 / 2, is possible via a nonradiative energy transfer. Hydrogen is a special case of the stable states given by Eqs. (1) and (3) wherein the corresponding radius of the hydrogen or hydrino atom is given by

$$r = \frac{a_H}{p}, \tag{4}$$

where $p$ = 1,2,3,... . In order to conserve energy, energy must be transferred from the hydrogen atom to the catalyst in units of

$$m \cdot 27.2\ eV,\ m = 1,2,3,4,.... \tag{5}$$

and the radius transitions to $\frac{a_H}{m+p}$. The catalyst reactions involve two steps of energy release: a nonradiative energy

transfer to the catalyst followed by additional energy release as the radius decreases to the corresponding stable final state. It is believed that the rate of catalysis is increased as the net enthalpy of reaction is more closely matched to $m \cdot 27.2\ eV$. It has been found that catalysts having a net enthalpy of reaction within $\pm 10\%$, preferably $\pm 5\%$, of $m \cdot 27.2\ eV$ are suitable for most applications. In the case of the catalysis of hydrino atoms to lower energy states, the enthalpy of reaction of $m \cdot 27.2\ eV$ (Eq. (5)) is relativistically corrected by the same factor as the potential energy of the hydrino atom.

Thus, the general reaction is given by

$$m \cdot 27.2\ eV + Cat^{q+} + H\left[\frac{a_H}{p}\right] \rightarrow Cat^{(q+r)+} + re^- + H^*\left[\frac{a_H}{(m+p)}\right] + m \cdot 27.2\ eV \qquad (6)$$

$$H^*\left[\frac{a_H}{(m+p)}\right] \rightarrow H\left[\frac{a_H}{(m+p)}\right] + [(p+m)^2 - p^2] \cdot 13.6\ eV - m \cdot 27.2\ eV \qquad (7)$$

$$Cat^{(q+r)+} + re^- \rightarrow Cat^{q+} + m \cdot 27.2\ eV \text{ and} \qquad (8)$$

the overall reaction is

$$H\left[\frac{a_H}{p}\right] \rightarrow H\left[\frac{a_H}{(m+p)}\right] + [(p+m)^2 - p^2] \cdot 13.6\ eV \qquad (9)$$

*q*, *r*, *m*, and *p* are integers. $H^*\left[\frac{a_H}{(m+p)}\right]$ has the radius of the hydrogen atom (corresponding to 1 in the denominator) and a central field equivalent to $(m + p)$ times that of a proton, and $H\left[\frac{a_H}{(m+p)}\right]$ is the corresponding stable state with the radius of $\frac{1}{(m+p)}$ that of H. As the electron undergoes radial acceleration from the radius of the hydrogen atom to a radius of $\frac{1}{(m+p)}$ this distance, energy is released as characteristic light emission or as third-body kinetic energy. The emission may be in the form of an extreme-ultraviolet continuum radiation having an edge at $[(p + m)^2 - p^2 - 2m] \cdot 13.6\ eV$ or $\frac{91.2}{[(p+m)^2 - p^2 - 2m]}\ nm$ and extending to longer wavelengths. In addition to radiation, a resonant kinetic energy transfer to form fast H may occur. Subsequent excitation of these fast $H(n = 1)$ atoms by collisions with the background $H_2$ followed by emission of the corresponding $H(n = 3)$ fast atoms gives rise to broadened Balmer $\alpha$ emission. Alternatively, fast H is a direct product of H or hydrino serving as the catalyst wherein the acceptance of the resonant energy transfer regards the potential energy rather than the ionization energy. Conservation of energy gives a proton of the kinetic energy corresponding to one half the potential energy in the former case and a catalyst ion at essentially rest in the latter case. The H recombination radiation of the fast protons gives rise to broadened Balmer $\alpha$ emission that is disproportionate to the inventory of hot hydrogen consistent with the excess power balance.

In the present disclosure the terms such as hydrino reaction, H catalysis, H catalysis reaction, catalysis when referring to hydrogen, the reaction of hydrogen to form hydrinos, and hydrino formation reaction all refer to the reaction such as that of Eqs. (6-9)) of a catalyst defined by Eq. (5) with atomic H to form states of hydrogen having energy levels given by Eqs. (1) and (3). The corresponding terms such as hydrino reactants, hydrino reaction mixture, catalyst mixture, reactants for hydrino formation, reactants that produce or form lower-energy state hydrogen or hydrinos are also used

interchangeably when referring to the reaction mixture that performs the catalysis of H to H states or hydrino states having energy levels given by Eqs. (1) and (3).

The catalytic lower-energy hydrogen transitions of the present disclosure require a catalyst that may be in the form of an endothermic chemical reaction of an integer *m* of the potential energy of uncatalyzed atomic hydrogen, 27.2 *eV*, that accepts the energy from atomic H to cause the transition. The endothermic catalyst reaction may be the ionization of one or more electrons from a species such as an atom or ion (e.g. $m = 3$ for $Li \rightarrow Li^{2+}$) and may further comprise the concerted reaction of a bond cleavage with ionization of one or more electrons from one or more of the partners of the initial bond (e.g. $m = 2$ for $NaH \rightarrow Na^{2+} + H$). $He^+$ fulfills the catalyst criterion-a chemical or physical process with an enthalpy change equal to an integer multiple of 27.2 *eV* since it ionizes at 54.417 *eV*, which is 2·27.2 *eV*. An integer number of hydrogen atoms may also serve as the catalyst of an integer multiple of 27.2 *eV* enthalpy. Hydrogen atoms $H(1/p)$ $p = 1,2,3,...137$ can undergo further transitions to lower-energy states given by Eqs. (1) and (3) wherein the transition of one atom is catalyzed by one or more additional H atoms that resonantly and nonradiatively accepts $m \cdot 27.2\ eV$ with a concomitant opposite change in its potential energy. The overall general equation for the transition of $H(1/p)$ to $H(1/(p+m))$ induced by a resonance transfer of $m \cdot 27.2\ eV$ to $H(1/p')$ is represented by

$$H(1/p') + H(1/p) \rightarrow H + H(1/(p+m)) + \left[2pm + m^2 - p'^2 + 1\right] \cdot 13.6\ eV \qquad (10)$$

Hydrogen atoms may serve as a catalyst wherein $m = 1$, $m = 2$, and $m = 3$ for one, two, and three atoms, respectively, acting as a catalyst for another. The rate for the two-atom-catalyst, 2H , may be high when extraordinarily fast H collides with a molecule to form the 2H wherein two atoms resonantly and nonradiatively accept 54.4 *eV* from a third hydrogen atom of the collision partners. By the same mechanism, the collision of two hot $H_2$ provide 3H to serve as a catalyst of 3·27.2 *eV* for the fourth. The EUV continua at 22.8 nm and 10.1 nm, extraordinary (>100 eV) Balmer $\alpha$ line broadening, highly excited H states, the product gas $H_2(1/4)$, and large energy release is observed consistent with predictions.

H(1/4) is a preferred hydrino state based on its multipolarity and the selection rules for its formation. Thus, in the case that H(1/3) is formed, the transition to H(1/4) may occur rapidly catalyzed by H according to Eq. (10). Similarly, H(l/4) is a preferred state for a catalyst energy greater than or equal to 81.6 eV corresponding to m=3 in Eq. (5). In this case the energy transfer to the catalyst comprises the 81.6 eV that forms that H*(1/4) intermediate of Eq. (7) as well as an integer of 27.2 eV from the decay of the intermediate. For example, a catalyst having an enthalpy of 108.8 eV may form H*(1/4) by accepting 81.6 eV as well as 27.2 eV from the H*(1/4) decay energy of 122.4 eV. The remaining decay energy of 95.2 eV is released to the environment to form the preferred state H(l/4) that then reacts to form $H_2(1/4)$.

A suitable catalyst can therefore provide a net positive enthalpy of reaction of $m \cdot 27.2\ eV$. That is, the catalyst resonantly accepts the nonradiative energy transfer from hydrogen atoms and releases the energy to the surroundings to affect electronic transitions to fractional quantum energy levels. As a consequence of the nonradiative energy transfer, the hydrogen atom becomes unstable and emits further energy until it achieves a lower-energy nonradiative state having a principal energy level given by Eqs. (1) and (3). Thus, the catalysis releases energy from the hydrogen atom with a commensurate decrease in size of the hydrogen atom, $r_n = na_H$ where *n* is given by Eq. (3). For example, the catalysis of $H(n = 1)$ to $H(n = 1/4)$ releases 204 *eV*, and the hydrogen radius decreases from $a_H$ to $\frac{1}{4}a_H$.

The catalyst product, $H(1/p)$, may also react with an electron to form a hydrino hydride ion $H^-(1/p)$, or two $H(1/p)$ may react to form the corresponding molecular hydrino $H_2(1/p)$. Specifically, the catalyst product, $H(1/p)$, may also react with an electron to form a novel hydride ion $H^-(1/p)$ with a binding energy $E_B$:

$$E_B = \frac{\hbar^2\sqrt{s(s+1)}}{8\mu_e a_0^2\left[\frac{1+\sqrt{s(s+1)}}{p}\right]^2} - \frac{\pi\mu_0 e^2\hbar^2}{m_e^2}\left(\frac{1}{a_H^3} + \frac{2^2}{a_0^3\left[\frac{1+\sqrt{s(s+1)}}{p}\right]^3}\right) \qquad (11)$$

where $p$ = integer > 1, $s = 1/2$, $\hbar$ is Planck's constant bar, $\mu_o$ is the permeability of vacuum, $m_e$ is the mass of the

electron, $\mu_e$ is the reduced electron mass given by $\mu_e = \frac{m_e m_p}{\frac{m_e}{\sqrt{\frac{3}{4}}} + m_p}$ where $m_p$ is the mass of the proton, $a_o$ is the Bohr radius, and the ionic radius is $r_1 = \frac{a_0}{p}\left(1+\sqrt{s(s+1)}\right)$. From Eq. (11), the calculated ionization energy of the hydride ion is 0.75418 *eV,* and the experimental value is 6082.99 ± 0.15 $cm^{-1}$ (0.75418 eV). The binding energies of hydrino hydride ions may be measured by X-ray photoelectron spectroscopy (XPS).

Upfield-shifted NMR peaks are direct evidence of the existence of lower-energy state hydrogen with a reduced radius relative to ordinary hydride ion and having an increase in diamagnetic shielding of the proton. The shift is given by the sum of the contributions of the diamagnetism of the two electrons and the photon field of magnitude p (Mills GUTCP Eq. (7.87)):

$$\frac{\Delta B_T}{B} = -\mu_0 \frac{pe^2}{12 m_e a_0 \left(1+\sqrt{s(s+1)}\right)}\left(1+p\alpha^2\right) = -\left(p29.9 + p^2 1.59\ X\ 10^{-3}\right) ppm \qquad (12)$$

where the first term applies to $H^-$ with $p$ = 1 and $p$ = integer >1 for $H^-$ (1 / p) and $\alpha$ is the fine structure constant. The predicted hydrino hydride peaks are extraordinarily upfield shifted relative to ordinary hydride ion. In an embodiment, the peaks are upfield of TMS. The NMR shift relative to TMS may be greater than that known for at least one of ordinary $H^-$, H, $H_2$, or $H^+$ alone or comprising a compound. The shift may be greater than at least one of 0, -1, -2, -3, -4, -5, -6, -7, -8, -9, -10, -11, -12, -13, -14, -15, -16, -17, -18, -19, -20, -21, - 22, -23, -24, -25, -26, -27, -28, -29, -30, -31, -32, -33, -34, -35, -36, -37, -38, -39, and -40 ppm. The range of the absolute shift relative to a bare proton, wherein the shift of TMS is about -31.5 relative to a bare proton, may be -($p29.9 + p^2 2.74$) ppm (Eq. (12)) within a range of about at least one of ± 5 ppm, ± 10 ppm, ± 20 ppm, ± 30 ppm, ± 40 ppm, ± 50 ppm, ± 60 ppm, ± 70 ppm, ± 80 ppm, ± 90 ppm, and ± 100 ppm. The range of the absolute shift relative to a bare proton may be -($p29.9 + p^2 1.59 \text{ X } 10^{-3}$) ppm (Eq. (12)) within a range of about at least one of about 0.1% to 99%, 1% to 50%, and 1% to 10%. In another embodiment, the presence of a hydrino species such as a hydrino atom, hydride ion, or molecule in a solid matrix such as a matrix of a hydroxide such as NaOH or KOH causes the matrix protons to shift upfield. The matrix protons such as those of NaOH or KOH may exchange. In an embodiment, the shift may cause the matrix peak to be in the range of about -0.1 to -5 ppm relative to TMS. The NMR determination may comprise magic angle spinning $^1H$ nuclear magnetic resonance spectroscopy (MAS $^1H$ NMR).

$H(1/p)$ may react with a proton and two $H(1/p)$ may react to form $H_2(1/p)^+$ and $H_2(1/p)$, respectively. The hydrogen molecular ion and molecular charge and current density functions, bond distances, and energies were solved from the Laplacian in ellipsoidal coordinates with the constraint of nonradiation.

$$(\eta-\zeta)R_\xi \frac{\partial}{\partial \xi}(R_\xi \frac{\partial \phi}{\partial \xi}) + (\zeta-\xi)R_\eta \frac{\partial}{\partial \eta}(R_\eta \frac{\partial \phi}{\partial \eta}) + (\xi-\eta)R_\zeta \frac{\partial}{\partial \zeta}(R_\zeta \frac{\partial \phi}{\partial \zeta}) = 0 \qquad (13)$$

The total energy $E_T$ of the hydrogen molecular ion having a central field of $+pe$ at each focus of the prolate spheroid molecular orbital is

$$E_T = -p^2 \left\{ \begin{array}{l} \dfrac{e^2}{8\pi\varepsilon_o a_H}(4\ln 3 - 1 - 2\ln 3)\left[1 + p\sqrt{\dfrac{2\hbar\sqrt{\dfrac{\dfrac{2e^2}{4\pi\varepsilon_o (2a_H)^3}}{m_e}}}{m_e c^2}}\right] \\ -\dfrac{1}{2}\hbar\sqrt{\dfrac{\dfrac{pe^2}{4\pi\varepsilon_o\left(\dfrac{2a_H}{p}\right)^3} - \dfrac{pe^2}{8\pi\varepsilon_o\left(\dfrac{3a_H}{p}\right)^3}}{\mu}} \end{array} \right\} \quad (14)$$
$$= -p^2 16.13392\ eV - p^3 0.118755\ eV$$

where $p$ is an integer, c is the speed of light in vacuum, and $\mu$ is the reduced nuclear mass. The total energy of the hydrogen molecule having a central field of $+pe$ at each focus of the prolate spheroid molecular orbital is

$$E_T = -p^2 \left\{ \begin{array}{l} \dfrac{e^2}{8\pi\varepsilon_o a_0}\left[\left(2\sqrt{2} - \sqrt{2} + \dfrac{\sqrt{2}}{2}\right)\ln\dfrac{\sqrt{2}+1}{\sqrt{2}-1} - \sqrt{2}\right]\left[1 + p\sqrt{\dfrac{2\hbar\sqrt{\dfrac{\dfrac{e^2}{4\pi\varepsilon_o a_0^3}}{m_e}}}{m_e c^2}}\right] \\ -\dfrac{1}{2}\hbar\sqrt{\dfrac{\dfrac{pe^2}{8\pi\varepsilon_o\left(\dfrac{a_0}{p}\right)^3} - \dfrac{pe^2}{8\pi\varepsilon_o\left(\dfrac{\left(1+\dfrac{1}{\sqrt{2}}\right)a_0}{p}\right)^3}}{\mu}} \end{array} \right\} \quad (15)$$
$$= -p^2 31.351\ eV - p^3 0.326469\ eV$$

The bond dissociation energy, $E_D$, of the hydrogen molecule $H_2(1/p)$ is the difference between the total energy of the corresponding hydrogen atoms and $E_T$

$$E_D = E(2H(1/p)) - E_T \quad (16)$$

where

$$E(2H(1/p)) = -p^2 27.20\ eV \quad (17)$$

$E_D$ is given by Eqs. (16-17) and (15):

$$\begin{aligned} E_D &= -p^2 27.20\ eV - E_T \\ &= -p^2 27.20\ eV - \left(-p^2 31.351\ eV - p^3 0.326469\ eV\right) \\ &= p^2 4.151\ eV + p^3 0.326469\ eV \end{aligned} \quad (18)$$

$H_2(1/p)$ may be identified by X-ray photoelectron spectroscopy (XPS) wherein the ionization product in addition to the ionized electron may be at least one of the possibilities such as those comprising two protons and an electron, a H atom, a hydrino atom, a molecular ion, hydrogen molecular ion, and $H_2(1/p)^+$ wherein the energies may be

shifted by the matrix.

The NMR of catalysis-product gas provides a definitive test of the theoretically predicted chemical shift of $H_2(1/p)$. In general, the $^1H$ NMR resonance of $H_2(1/p)$ is predicted to be upfield from that of $H_2$ due to the fractional radius in elliptic coordinates wherein the electrons are significantly closer to the nuclei. The predicted shift, $\frac{\Delta B_T}{B}$, for $H_2(1/p)$ is given by the sum of the contributions of the diamagnetism of the two electrons and the photon field of magnitude p (Mills GUTCP Eqs. (11.415-11.416)):

$$\frac{\Delta B_T}{B} = -\mu_0\left(4-\sqrt{2}\ln\frac{\sqrt{2}+1}{\sqrt{2}-1}\right)\frac{pe^2}{36a_0m_e}\left(1+p\alpha^2\right) \quad (19)$$

$$\frac{\Delta B_T}{B} = -\left(p28.01 + p^2 1.49\ X\ 10^{-3}\right)ppm \quad (20)$$

where the first term applies to $H_2$ with $p = 1$ and $p$ = integer >1 for $H_2(1/p)$. The experimental absolute $H_2$ gas-phase resonance shift of -28.0 ppm is in excellent agreement with the predicted absolute gas-phase shift of -28.01 ppm (Eq. (20)). The predicted molecular hydrino peaks are extraordinarily upfield shifted relative to ordinary $H_2$. In an embodiment, the peaks are upfield of TMS. The NMR shift relative to TMS may be greater than that known for at least one of ordinary $H^-$, H, $H_2$, or $H^+$ alone or comprising a compound. The shift may be greater than at least one of 0, -1, -2, -3, -4, -5, -6, -7, -8, -9, -10, -11, -12, -13, -14, -15, -16, -17, -18, -19, -20, -21, -22, -23, -24, -25, -26, -27, -28, -29, -30, - 31, -32, -33, -34, -35, -36, -37, -38, -39, and -40 ppm. The range of the absolute shift relative to a bare proton, wherein the shift of TMS is about -31.5 relative to a bare proton, may be - ($p28.01 + p^2 2.56$) ppm (Eq. (20)) within a range of about at least one of ± 5 ppm, ± 10 ppm, ± 20 ppm, ± 30 ppm, ± 40 ppm, ± 50 ppm, ± 60 ppm, ± 70 ppm, ± 80 ppm, ± 90 ppm, and ± 100 ppm. The range of the absolute shift relative to a bare proton may be -($p28.01 + p^2 1.49\ X\ 10^{-3}$) ppm (Eq. (20)) within a range of about at least one of about 0.1% to 99%, 1% to 50%, and 1% to 10%.

The vibrational energies, $E_{vib}$, for the $\upsilon = 0$ to $\upsilon = 1$ transition of hydrogen-type molecules $H_2(1/p)$ are

$$E_{vib} = p^2 0.515902\ eV \quad (21)$$

where $p$ is an integer .

The rotational energies, $E_{rot}$, for the $J$ to $J + 1$ transition of hydrogen-type molecules $H_2(1/p)$ are

$$E_{rot} = E_{J+1} - E_J = \frac{\hbar^2}{I}\left[J+1\right] = p^2\left(J+1\right)0.01509\ eV \quad (22)$$

where $p$ is an integer and $I$ is the moment of inertia. Ro-vibrational emission of $H_2(1/4)$ was observed on e-beam excited molecules in gases and trapped in solid matrix.

The $p^2$ dependence of the rotational energies results from an inverse $p$ dependence of the internuclear distance and the corresponding impact on the moment of inertia $I$. The predicted internuclear distance 2c' for $H_2(1/p)$ is

$$2c' = \frac{a_o\sqrt{2}}{p} \quad (23)$$

At least one of the rotational and vibration energies of $H_2(1/p)$ may be measured by at least one of electron-beam excitation emission spectroscopy, Raman spectroscopy, and Fourier transform infrared (FTIR) spectroscopy. $H_2(1/p)$ may be trapped in a matrix for measurement such as in at least one of MOH, MX, and $M_2CO_3$ (M = alkali; X = halide) matrix.

CATALYSTS

$He^+$, $Ar^+$, $Sr^+$, Li, K, NaH, nH (n = integer), and $H_2O$ are predicted to serve as catalysts since they meet the catalyst criterion-a chemical or physical process with an enthalpy change equal to an integer multiple of the potential energy of atomic hydrogen, 27.2 *eV*. Specifically, a catalytic system is provided by the ionization of t electrons from an atom each to a continuum energy level such that the sum of the ionization energies of the t electrons is approximately $m \cdot 27.2\ eV$ where *m* is an integer. One such catalytic system involves lithium atoms. The first and second ionization energies of lithium are 5.39172 *eV* and 75.64018 *eV*, respectively. The double ionization ($t$ = 2) reaction of *Li* to $Li^{2+}$ then, has a net enthalpy of reaction of 81.0319 *eV*, which is equivalent to $3 \cdot 27.2\ eV$.

$$81.0319\ eV + Li(m) + H\left[\frac{a_H}{p}\right] \rightarrow Li^{2+} + 2e^- + H\left[\frac{a_H}{(p+3)}\right] + [(p+3)^2 - p^2] \cdot 13.6\ eV \qquad (24)$$

$$Li^{2+} + 2e^- \rightarrow Li(m) + 81.0319\ eV \qquad (25)$$

And, the overall reaction is

$$H\left[\frac{a_H}{p}\right] \rightarrow H\left[\frac{a_H}{(p+3)}\right] + [(p+3)^2 - p^2] \cdot 13.6\ eV \qquad (26)$$

where *m* = 3 in Eq. (5). The energy given off during catalysis is much greater than the energy lost to the catalyst. The energy released is large as compared to conventional chemical reactions. For example, when hydrogen and oxygen gases undergo combustion to form water

$$H_2\ (g) + \frac{1}{2}O_2\ (g) \rightarrow H_2O\ (l) \qquad (27)$$

the known enthalpy of formation of water is $\Delta H_f = -286\ kJ\ /\ mole$ or 1.48 eV per hydrogen atom. By contrast, each ($n$ = 1) ordinary hydrogen atom undergoing a catalysis step to $n = \frac{1}{2}$ releases a net of 40.8 *eV*. Moreover, further catalytic transitions may occur: $n = \frac{1}{2} \rightarrow \frac{1}{3}$, $\frac{1}{3} \rightarrow \frac{1}{4}$, $\frac{1}{4} \rightarrow \frac{1}{5}$, and so on. Once catalysis begins, hydrinos autocatalyze further in a process called disproportionation wherein H or H(1/p) serves as the catalyst for another H or H(1/p') (p may equal p').

Certain molecules may also serve to affect transitions of H to form hydrinos. In general, a compound comprising hydrogen such as *MH*, where M is an element other than hydrogen, serves as a source of hydrogen and a source of catalyst. A catalytic reaction is provided by the breakage of the *M - H* bond plus the ionization of *t* electrons from the atom M each to a continuum energy level such that the sum of the bond energy and ionization energies of the *t* electrons is approximately $m \cdot 27.2\ eV$, where *m* is an integer. One such catalytic system involves sodium hydride. The bond energy of *NaH* is 1.9245 *eV*, and the first and second ionization energies of Na are 5.13908 *eV* and 47.2864 *eV*, respectively. Based on these energies NaH molecule can serve as a catalyst and H source, since the bond energy of NaH plus the double ionization (t = 2) of Na to $Na^{2+}$ is 54.35 *eV* (2.27.2 *eV*). The concerted catalyst reactions are given by

$$54.35\ eV + NaH \rightarrow Na^{2+} + 2e^- + H\left[\frac{a_H}{3}\right] + [3^2 - 1^2] \cdot 13.6\ eV \qquad (28)$$

$$Na^{2+} + 2e^- + H \rightarrow NaH + 54.35\ eV \qquad (29)$$

And, the overall reaction is

$$H \rightarrow H\left[\frac{a_H}{3}\right] + [3^2 - 1^2] \cdot 13.6\ eV \qquad (30)$$

With $m$ = 2, the product of catalyst NaH is $H$(1 / 3) that reacts rapidly to form $H$(1 / 4), then molecular hydrino, $H_2$(1 / 4), as a preferred state. Specifically, in the case of a high hydrogen atom concentration, the further transition given by Eq. (10) of $H$(1 / 3) ($p$ = 3) to $H$(1 / 4) ($p + m$ = 4) with $H$ as the catalyst ($p'$ = 1; $m$ = 1) can be fast:

$$H(1/3) \xrightarrow{H} H(1/4) + 95.2\ eV \qquad (31)$$

The corresponding molecular hydrino $H_2$(1 / 4) and hydrino hydride ion $H^-$(1 / 4) are preferred final products consistent with observation since the $p$ = 4 quantum state has a multipolarity greater than that of a quadrupole giving $H$(1 / 4) a long theoretical lifetime for further catalysis.

Helium ions can serve as a catalyst because the second ionization energy of helium is 54.417 $eV$, which is equivalent to 2.27.2 $eV$. In this case, 54.417 $eV$ is transferred nonradiatively from atomic hydrogen to $He^+$ which is resonantly ionized. The electron decays to the $n$ = 1 / 3 state with the further release of 54.417 $eV$ as given in Eq. (33). The catalysis reaction is

$$54.417\ eV + He^+ + H[a_H] \rightarrow He^{2+} + e^- + H^*\left[\frac{a_H}{3}\right] + 54.4\ eV \qquad (32)$$

$$H^*\left[\frac{a_H}{3}\right] \rightarrow H\left[\frac{a_H}{3}\right] + 54.4\ eV \qquad (33)$$

$$He^{2+} + e^- \rightarrow He^+ + 54.417\ eV \qquad (34)$$

And, the overall reaction is

$$H[a_H] \rightarrow H\left[\frac{a_H}{3}\right] + 54.4\ eV + 54.4\ eV \qquad (35)$$

wherein $H^*\left[\frac{a_H}{3}\right]$ has the radius of the hydrogen atom and a central field equivalent to 3 times that of a proton and $H\left[\frac{a_H}{3}\right]$ is the corresponding stable state with the radius of 1/3 that of H. As the electron undergoes radial acceleration from the radius of the hydrogen atom to a radius of 1/3 this distance, energy is released as characteristic light emission or as third-body kinetic energy. Characteristic continuum emission starting at 22.8 nm (54.4 $eV$) and continuing to longer wavelengths was observed as predicted for this transition reaction as the energetic hydrino intermediate decays. The emission has been observed by EUV spectroscopy recorded on pulsed discharges of helium with hydrogen. Alternatively, a resonant kinetic energy transfer to form fast H may occur consistent with the observation of extraordinary Balmer a line broadening corresponding to high-kinetic energy H.

Hydrogen and hydrinos may serves as catalysts. Hydrogen atoms $H(1/p)$ $p$ = 1,2,3,...137 can undergo transitions to lower-energy states given by Eqs. (1) and (3) wherein the transition of one atom is catalyzed by a second that resonantly and nonradiatively accepts $m{\cdot}27.2\ eV$ with a concomitant opposite change in its potential energy. The overall general

equation for the transition of $H(1/p)$ to $H(1/(m+p))$ induced by a resonance transfer of $m \cdot 27.2\ eV$ to $H(1/p')$ is represented by Eq. (10). Thus, hydrogen atoms may serve as a catalyst wherein $m = 1$, $m = 2$, and $m = 3$ for one, two, and three atoms, respectively, acting as a catalyst for another. The rate for the two- or three-atom-catalyst case would be appreciable only when the H density is high. But, high H densities are not uncommon. A high hydrogen atom concentration permissive of 2H or 3H serving as the energy acceptor for a third or fourth may be achieved under several circumstances such as on the surface of the Sun and stars due to the temperature and gravity driven density, on metal surfaces that support multiple monolayers, and in highly dissociated plasmas, especially pinched hydrogen plasmas. Additionally, a three-body H interaction is easily achieved when two $H$ atoms arise with the collision of a hot $H$ with $H_2$. This event can commonly occur in plasmas having a large population of extraordinarily fast H. This is evidenced by the unusual intensity of atomic H emission. In such cases, energy transfer can occur from a hydrogen atom to two others within sufficient proximity, being typically a few angstroms via multipole coupling. Then, the reaction between three hydrogen atoms whereby two atoms resonantly and nonradiatively accept 54.4 $eV$ from the third hydrogen atom such that 2H serves as the catalyst is given by

$$54.4\ eV + 2H + H \rightarrow 2H^{+}_{fast} + 2e^{-} + H^{*}\left[\frac{a_H}{3}\right] + 54.4\ eV \qquad (36)$$

$$H^{*}\left[\frac{a_H}{3}\right] \rightarrow H\left[\frac{a_H}{3}\right] + 54.4\ eV \qquad (37)$$

$$2H^{+}_{fast} + 2e^{-} \rightarrow 2H + 54.4\ eV \qquad (38)$$

And, the overall reaction is

$$H \rightarrow H\left[\frac{a_H}{3}\right] + [3^2 - 1^2] \cdot 13.6\ eV \qquad (39)$$

Since the $H^{*}\left[\frac{a_H}{3}\right]$ intermediate of Eq. (37) is equivalent to that of Eq. (33), the continuum emission is predicted to be the same as that with $He^{+}$ as the catalyst. The energy transfer to two $H$ causes pumping of the catalyst excited states, and fast $H$ is produced directly as given by Eqs. (36-39) and by resonant kinetic energy transfer as in the case of $He^{+}$ as the catalyst. The 22.8 nm continuum radiation, pumping of $H$ excited states, and fast $H$ were also observed with hydrogen plasmas wherein 2H served as the catalyst.

The predicted product of both of the helium ion and 2H catalyst reactions given by Eqs. (32-35) and Eqs. (36-39), respectively, is $H(1/3)$. In the case of a high hydrogen atom concentration, the further transition given by Eq. (10) of $H(1/3)$ $(p = 3)$ to $H(1/4)$ $(p + m = 4)$ with $H$ as the catalyst $(p' = 1;\ m = 1)$ can be fast as given by Eq. (31). A secondary continuum band is predicted arising from the subsequently rapid transition of the $He^{+}$ catalysis product $\left[\frac{a_H}{3}\right]$ (Eqs. (32-35)) to the $\left[\frac{a_H}{4}\right]$ state wherein atomic hydrogen accepts 27.2 $eV$ from $\left[\frac{a_H}{3}\right]$. This 30.4 nm continuum was observed, as well. Similarly, when $Ar^{+}$ served as the catalyst, its predicted 91.2 nm and 45.6 nm continua were observed. The predicted fast $H$ was observed as well.

In another $H$-atom catalyst reaction involving a direct transition to $\left[\frac{a_H}{4}\right]$ state, two hot $H_2$ molecules collide

and dissociate such that three *H* atoms serve as a catalyst of 3.27.2 *eV* for the fourth. Then, the reaction between four hydrogen atoms whereby three atoms resonantly and nonradiatively accept 81.6 *eV* from the fourth hydrogen atom such that 3H serves as the catalyst is given by

$$81.6\ eV + 3H + H \rightarrow 3H^+_{fast} + 3e^- + H^*\left[\frac{a_H}{4}\right] + 81.6\ eV \tag{40}$$

$$H^*\left[\frac{a_H}{4}\right] \rightarrow H\left[\frac{a_H}{4}\right] + 122.4\ eV \tag{41}$$

$$3H^+_{fast} + 3e^- \rightarrow 3H + 81.6\ eV \tag{42}$$

And, the overall reaction is

$$H \rightarrow H\left[\frac{a_H}{4}\right] + [4^2 - 1^2] \cdot 13.6\ eV \tag{43}$$

The extreme-ultraviolet continuum radiation band due to the $H^*\left[\frac{a_H}{4}\right]$ intermediate of Eq. (40) is predicted to have short wavelength cutoff at 122.4 *eV* (10.1 nm) and extend to longer wavelengths. This continuum band was confirmed experimentally. In general, the transition of *H* to $H\left[\frac{a_H}{p=m+1}\right]$ due by the acceptance of $m \cdot 27.2\ eV$ gives a continuum band with a short wavelength cutoff and energy $E_{\left(H \rightarrow H\left[\frac{a_H}{p=m+1}\right]\right)}$ given by

$$E_{\left(H \rightarrow H\left[\frac{a_H}{p=m+1}\right]\right)} = m^2 \cdot 13.6\ eV \tag{44}$$

$$\lambda_{\left(H \rightarrow H\left[\frac{a_H}{p=m+1}\right]\right)} = \frac{91.2}{m^2}\ nm \tag{45}$$

and extending to longer wavelengths than the corresponding cutoff. The hydrogen emission series of 10.1 nm, 22.8 nm, and 91.2 nm continua were observed experimentally.

I. Hydrinos

A hydrogen atom having a binding energy given by

$$Binding\ Energy = \frac{13.6\ eV}{(1/p)^2} \tag{46}$$

where p is an integer greater than 1, preferably from 2 to 137, is the product of the H catalysis reaction of the present disclosure. The binding energy of an atom, ion, or molecule, also known as the ionization energy, is the energy required to remove one electron from the atom, ion or molecule. A hydrogen atom having the binding energy given in Eq. (46) is hereafter referred to as a "hydrino atom" or "hydrino." The designation for a hydrino of radius $\frac{a_H}{p}$ ,where $a_H$ is the radius of an ordinary hydrogen atom and $p$ is an integer, is $H\left[\frac{a_H}{p}\right]$. A hydrogen atom with a radius $a_H$ is hereinafter referred to as "ordinary hydrogen atom" or "normal hydrogen atom." Ordinary atomic hydrogen is characterized by its binding energy of 13.6 eV.

Hydrinos are formed by reacting an ordinary hydrogen atom with a suitable catalyst having a net enthalpy of reaction of

$$m \cdot 27.2\ eV \qquad (47)$$

where $m$ is an integer. It is believed that the rate of catalysis is increased as the net enthalpy of reaction is more closely matched to $m \cdot 27.2\ eV$. It has been found that catalysts having a net enthalpy of reaction within $\pm$10%, preferably $\pm$5%, of $m \cdot 27.2\ eV$ are suitable for most applications.

This catalysis releases energy from the hydrogen atom with a commensurate decrease in size of the hydrogen atom, $r_n = na_H$. For example, the catalysis of $H(n = 1)$ to $H(n = 1/2)$ releases 40.8 $eV$, and the hydrogen radius decreases from $a_H$ to $\frac{1}{2}a_H$. A catalytic system is provided by the ionization of t electrons from an atom each to a continuum energy level such that the sum of the ionization energies of the t electrons is approximately $m \cdot 27.2\ eV$ where $m$ is an integer.

A further example to such catalytic systems given supra (Eqs. (6-9) involves cesium. The first and second ionization energies of cesium are 3.89390 $eV$ and 23.15745 $eV$, respectively. The double ionization ($t$ = 2) reaction of $Cs$ to $Cs^{2+}$, then, has a net enthalpy of reaction of 27.05135 $eV$, which is equivalent to $m$ = 1 in Eq. (47).

$$27.05135\ eV + Cs(m) + H\left[\frac{a_H}{p}\right] \rightarrow Cs^{2+} + 2e^- + H\left[\frac{a_H}{(p+1)}\right] + [(p+1)^2 - p^2] \cdot 13.6\ eV \qquad (48)$$

$$Cs^{2+} + 2e^- \rightarrow Cs(m) + 27.05135\ eV. \qquad (49)$$

And the overall reaction is

$$H\left[\frac{a_H}{p}\right] \rightarrow H\left[\frac{a_H}{(p+1)}\right] + [(p+1)^2 - p^2] \cdot 13.6\ eV. \qquad (50)$$

An additional catalytic system involves potassium metal. The first, second, and third ionization energies of potassium are 4.34066 $eV$, 31.63 $eV$, 45.806 $eV$, respectively. The triple ionization (t = 3) reaction of $K$ to $K^{3+}$, then, has a net enthalpy of reaction of 81.7767 $eV$, which is equivalent to $m$ = 3 in Eq. (47).

$$81.7767\ eV + K(m) + H\left[\frac{a_H}{p}\right] \rightarrow K^{3+} + 3e^- + H\left[\frac{a_H}{(p+3)}\right] + [(p+3)^2 - p^2] \cdot 13.6\ eV \qquad (51)$$

$$K^{3+} + 3e^- \rightarrow K(m) + 81.7426\ eV. \qquad (52)$$

And the overall reaction is

$$H\left[\frac{a_H}{p}\right] \rightarrow H\left[\frac{a_H}{(p+3)}\right] + [(p+3)^2 - p^2] \cdot 13.6\ eV. \quad (53)$$

As a power source, the energy given off during catalysis is much greater than the energy lost to the catalyst. The energy released is large as compared to conventional chemical reactions. For example, when hydrogen and oxygen gases undergo combustion to form water

$$H_2(g) + \frac{1}{2}O_2(g) \rightarrow H_2O\ (l) \quad (54)$$

the known enthalpy of formation of water is $\Delta H_f = -286\ kJ/mole$ or 1.48 eV per hydrogen atom. By contrast, each ($n$ = 1) ordinary hydrogen atom undergoing catalysis releases a net of 40.8 *eV.* Moreover, further catalytic transitions may occur: $n = \frac{1}{2} \rightarrow \frac{1}{3}, \frac{1}{3} \rightarrow \frac{1}{4}, \frac{1}{4} \rightarrow \frac{1}{5}$, and so on. Once catalysis begins, hydrinos autocatalyze further in a process called disproportionation. This mechanism is similar to that of an inorganic ion catalysis. But, hydrino catalysis should have a higher reaction rate than that of the inorganic ion catalyst due to the better match of the enthalpy to $m \cdot 27.2\ eV$.

Hydrogen catalysts capable of providing a net enthalpy of reaction of approximately $m \cdot 27.2\ eV$ where $m$ is an integer to produce a hydrino (whereby $t$ electrons are ionized from an atom or ion) are given in TABLE 1. The atoms or ions given in the first column are ionized to provide the net enthalpy of reaction of $m \cdot 27.2\ eV$ given in the tenth column where $m$ is given in the eleventh column. The electrons, that participate in ionization are given with the ionization potential (also called ionization energy or binding energy). The ionization potential of the $n$ th electron of the atom or ion is designated by $IP_n$ and is given by the CRC. That is for example, $Li + 5.39172\ eV \rightarrow Li^+ + e^-$ and $Li^+ + 75.6402\ eV \rightarrow Li^{2+} + e^-$. The first ionization potential, $IP_1 = 5.39172\ eV$, and the second ionization potential, $IP_2 = 75.6402\ eV$, are given in the second and third columns, respectively. The net enthalpy of reaction for the double ionization of $Li$ is 81.0319 $eV$ as given in the tenth column, and $m$ = 3 in Eq. (5) as given in the eleventh column.

TABLE 1. Hydrogen Catalysts.

| Catalyst | IP1 | IP2 | IP3 | IP4 | IP5 | IP6 | IP7 | IP8 | Enthalpy | m |
|---|---|---|---|---|---|---|---|---|---|---|
| Li | 5.39172 | 75.6402 | | | | | | | 81.032 | 3 |
| Be | 9.32263 | 18.2112 | | | | | | | 27.534 | 1 |
| Mg | 7.646235 | 15.03527 | 80.1437 | 109.2655 | 141.27 | | | | 353.3607 | 13 |
| K | 4.34066 | 31.63 | 45.806 | | | | | | 81.777 | 3 |
| Ca | 6.11316 | 11.8717 | 50.9131 | 67.27 | | | | | 136.17 | 5 |
| Ti | 6.8282 | 13.5755 | 27.4917 | 43.267 | 99.3 | | | | 190.46 | 7 |
| V | 6.7463 | 14.66 | 29.311 | 46.709 | 65.2817 | | | | 162.71 | 6 |
| Cr | 6.76664 | 16.4857 | 30.96 | | | | | | 54.212 | 2 |
| Mn | 7.43402 | 15.64 | 33.668 | 51.2 | | | | | 107.94 | 4 |
| Fe | 7.9024 | 16.1878 | 30.652 | | | | | | 54.742 | 2 |
| Fe | 7.9024 | 16.1878 | 30.652 | 54.8 | | | | | 109.54 | 4 |
| Co | 7.881 | 17.083 | 33.5 | 51.3 | | | | | 109.76 | 4 |
| Co | 7.881 | 17.083 | 33.5 | 51.3 | 79.5 | | | | 189.26 | 7 |
| Ni | 7.6398 | 18.1688 | 35.19 | 54.9 | 76.06 | | | | 191.96 | 7 |
| Ni | 7.6398 | 18.1688 | 35.19 | 54.9 | 76.06 | 108 | | | 299.96 | 11 |
| Cu | 7.72638 | 20.2924 | | | | | | | 28.019 | 1 |
| Zn | 9.39405 | 17.9644 | | | | | | | 27.358 | 1 |
| Zn | 9.39405 | 17.9644 | 39.723 | 59.4 | 82.6 | 108 | 134 | 174 | 625.08 | 23 |
| Ga | 5.999301 | 20.51514 | | | | | | | 26.5144 | 1 |
| As | 9.8152 | 18.633 | 28.351 | 50.13 | 62.63 | 127.6 | | | 297.16 | 11 |
| Se | 9.75238 | 21.19 | 30.8204 | 42.945 | 68.3 | 81.7 | 155.4 | | 410.11 | 15 |

(continued)

| Catalyst | IP1 | IP2 | IP3 | IP4 | IP5 | IP6 | IP7 | IP8 | Enthalpy | m |
|---|---|---|---|---|---|---|---|---|---|---|
| Kr | 13.9996 | 24.3599 | 36.95 | 52.5 | 64.7 | 78.5 | | | 271.01 | 10 |
| Kr | 13.9996 | 24.3599 | 36.95 | 52.5 | 64.7 | 78.5 | 111 | | 382.01 | 14 |
| Rb | 4.17713 | 27.285 | 40 | 52.6 | 71 | 84.4 | 99.2 | | 378.66 | 14 |
| Rb | 4.17713 | 27.285 | 40 | 52.6 | 71 | 84.4 | 99.2 | 136 | 514.66 | 19 |
| Sr | 5.69484 | 11.0301 | 42.89 | 57 | 71.6 | | | | 188.21 | 7 |
| Nb | 6.75885 | 14.32 | 25.04 | 38.3 | 50.55 | | | | 134.97 | 5 |
| Mo | 7.09243 | 16.16 | 27.13 | 46.4 | 54.49 | 68.8276 | | | 220.10 | 8 |
| Mo | 7.09243 | 16.16 | 27.13 | 46.4 | 54.49 | 68.8276 | 125.664 | 143.6 | 489.36 | 18 |
| Ru | 7.3605 | 16.76 | 28.47 | 50 | 60 | | | | 162.5905 | 6 |
| Pd | 8.3369 | 19.43 | | | | | | | 27.767 | 1 |
| Sn | 7.34381 | 14.6323 | 30.5026 | 40.735 | 72.28 | | | | 165.49 | 6 |
| Te | 9.0096 | 18.6 | | | | | | | 27.61 | 1 |
| Te | 9.0096 | 18.6 | 27.96 | | | | | | 55.57 | 2 |
| Cs | 3.8939 | 23.1575 | | | | | | | 27.051 | 1 |
| Ba | 5.211664 | 10.00383 | 35.84 | 49 | 62 | | | | 162.0555 | 6 |
| Ba | 5.21 | 10 | 37.3 | | | | | | | |
| Ce | 5.5387 | 10.85 | 20.198 | 36.758 | 65.55 | | | | 138.89 | 5 |
| Ce | 5.5387 | 10.85 | 20.198 | 36.758 | 65.55 | 77.6 | | | 216.49 | 8 |
| Pr | 5.464 | 10.55 | 21.624 | 38.98 | 57.53 | | | | 134.15 | 5 |
| Sm | 5.6437 | 11.07 | 23.4 | 41.4 | | | | | 81.514 | 3 |
| Gd | 6.15 | 12.09 | 20.63 | 44 | | | | | 82.87 | 3 |
| Dy | 5.9389 | 11.67 | 22.8 | 41.47 | | | | | 81.879 | 3 |
| Pb | 7.41666 | 15.0322 | 31.9373 | | | | | | 54.386 | 2 |
| Pt | 8.9587 | 18.563 | | | | | | | 27.522 | 1 |
| $He^+$ | | 54.4178 | | | | | | | 54.418 | 2 |
| $Na^+$ | | 47.2864 | 71.6200 | 98.91 | | | | | 217.816 | 8 |
| $Mg^{2+}$ | | | 80.1437 | | | | | | 80.1437 | 3 |
| $Rb^+$ | | 27.285 | | | | | | | 27.285 | 1 |
| $Fe^{3+}$ | | | | 54.8 | | | | | 54.8 | 2 |
| $Mo^{2+}$ | | | 27.13 | | | | | | 27.13 | 1 |
| $Mo^{4+}$ | | | | | 54.49 | | | | 54.49 | 2 |
| $In^{3+}$ | | | | 54 | | | | | 54 | 2 |
| $Ar^+$ | | 27.62 | | | | | | | 27.62 | 1 |
| $Sr^+$ | | 11.03 | 42.89 | | | | | | 53.92 | 2 |

The hydrino hydride ion of the present disclosure can be formed by the reaction of an electron source with a hydrino, that is, a hydrogen atom having a binding energy of about $\frac{13.6\ eV}{n^2}$, where $n = \frac{1}{p}$ and *p* is an integer greater than 1. The hydrino hydride ion is represented by $H^-(n = 1/p)$ or $H^-(1/p)$:

$$H\left[\frac{a_H}{p}\right] + e^- \rightarrow H^-(n = 1/p) \tag{55}$$

$$H\left[\frac{a_H}{p}\right] + e^- \rightarrow H^-(1/p). \tag{56}$$

The hydrino hydride ion is distinguished from an ordinary hydride ion comprising an ordinary hydrogen nucleus and two electrons having a binding energy of about 0.8 eV. The latter is hereafter referred to as "ordinary hydride ion" or "normal hydride ion." The hydrino hydride ion comprises a hydrogen nucleus including proteum, deuterium, or tritium, and two indistinguishable electrons at a binding energy according to Eqs. (57-58).

The binding energy of a hydrino hydride ion can be represented by the following formula:

$$Binding\ Energy = \frac{\hbar^2\sqrt{s(s+1)}}{8\mu_e a_0^2\left[\frac{1+\sqrt{s(s+1)}}{p}\right]^2} - \frac{\pi\mu_0 e^2\hbar^2}{m_e^2}\left(\frac{1}{a_H^3} + \frac{2^2}{a_0^3\left[\frac{1+\sqrt{s(s+1)}}{p}\right]^3}\right) \quad (57)$$

where $p$ is an integer greater than one, $s$ = 1/2, $\pi$ is pi, $\hbar$ is Planck's constant bar, $\mu_o$ is the permeability of vacuum, $m_e$ is the mass of the electron, $\mu_e$ is the reduced electron mass given by $\mu_e = \frac{m_e m_p}{\frac{m_e}{\sqrt{\frac{3}{4}}} + m_p}$ where $m_p$ is the mass of the proton, $a_H$ is the radius of the hydrogen atom, $a_o$ is the Bohr radius, and $e$ is the elementary charge. The radii are given by

$$r_2 = r_1 = a_0\left(1+\sqrt{s(s+1)}\right);\ s=\frac{1}{2}. \quad (58)$$

The binding energies of the hydrino hydride ion, $H^-$ ($n$ = 1 / $p$) as a function of $p$, where $p$ is an integer, are shown in TABLE 2.

TABLE 2. The representative binding energy of the hydrino hydride ion $H^-$ ($n$ = 1 / $p$) as a function of $p$, Eq. (57).

| Hydride Ion | $r_1$ ($a_o$)[a] | Binding Energy (eV)[b] | Wavelength (nm) |
|---|---|---|---|
| $H^-$ ($n$ = 1) | 1.8660 | 0.7542 | 1644 |
| $H^-$ ($n$ = 1/2) | 0.9330 | 3.047 | 406.9 |
| $H^-$ ($n$ = 1/3) | 0.6220 | 6.610 | 187.6 |
| $H^-$ ($n$ = 1/4) | 0.4665 | 11.23 | 110.4 |
| $H^-$ ( $n$ = 1/5) | 0.3732 | 16.70 | 74.23 |
| $H^-$ ( $n$ =1/6) | 0.3110 | 22.81 | 54.35 |
| $H^-$ ($n$ = 1/7) | 0.2666 | 29.34 | 42.25 |
| $H^-$ ($n$ = 1/8) | 0.2333 | 36.09 | 34.46 |
| $H^-$ ($n$ = 1/9) | 0.2073 | 42.84 | 28.94 |
| $H^-$ ($n$ = 1/10) | 0.1866 | 49.38 | 25.11 |
| $H^-$ ($n$ = 1/11) | 0.1696 | 55.50 | 22.34 |
| $H^-$($n$ = 1/12) | 0.1555 | 60.98 | 20.33 |
| $H^-$ ($n$ = 1/13) | 0.1435 | 65.63 | 18.89 |
| $H^-$ ($n$ = 1/14) | 0.1333 | 69.22 | 17.91 |
| $H^-$ ($n$ = 1/15) | 0.1244 | 71.55 | 17.33 |
| $H^-$ ($n$ = 1/16) | 0.1166 | 72.40 | 17.12 |
| $H^-$ ($n$ = 1/17) | 0.1098 | 71.56 | 17.33 |
| $H^-$ ($n$ = 1/18) | 0.1037 | 68.83 | 18.01 |
| $H^-$ ($n$ = 1/19) | 0.0982 | 63.98 | 19.38 |
| $H^-$ ($n$ = 1/20) | 0.0933 | 56.81 | 21.82 |
| $H^-$ ($n$ = 1/21) | 0.0889 | 47.11 | 26.32 |
| $H^-$ ($n$ = 1/22) | 0.0848 | 34.66 | 35.76 |
| $H^-$($n$ = 1/23) | 0.0811 | 19.26 | 64.36 |

(continued)

| Hydride Ion | $r_1$ ($a_o$ )[a] | Binding Energy (eV)[b] | Wavelength (nm) |
|---|---|---|---|
| $H^-$ ($n$ = 1/24) | 0.0778 | 0.6945 | 1785 |

a Eq. (58)
b Eq. (57)

According to the present disclosure, a hydrino hydride ion ($H^-$) having a binding energy according to Eqs. (57-58) that is greater than the binding of ordinary hydride ion (about 0.75 eV) for $p$ = 2 up to 23, and less for $p$ = 24 ($H^-$) is provided. For $p$ = 2 to $p$ = 24 of Eqs. (57-58), the hydride ion binding energies are respectively 3, 6.6, 11.2, 16.7, 22.8, 29.3, 36.1, 42.8, 49.4, 55.5, 61.0, 65.6, 69.2, 71.6, 72.4, 71.6, 68.8, 64.0, 56.8, 47.1, 34.7, 19.3, and 0.69 eV. Exemplary compositions comprising the novel hydride ion are also provided herein.

Exemplary compounds are also provided comprising one or more hydrino hydride ions and one or more other elements. Such a compound is referred to as a "hydrino hydride compound."

Ordinary hydrogen species are characterized by the following binding energies (a) hydride ion, 0.754 eV ("ordinary hydride ion"); (b) hydrogen atom ("ordinary hydrogen atom"), 13.6 eV; (c) diatomic hydrogen molecule, 15.3 eV ("ordinary hydrogen molecule"); (d) hydrogen molecular ion, 16.3 eV ("ordinary hydrogen molecular ion"); and (e) $H_3^+$, 22.6 eV ("ordinary trihydrogen molecular ion"). Herein, with reference to forms of hydrogen, "normal" and "ordinary" are synonymous.

According to a further embodiment of the present disclosure, a compound is provided comprising at least one increased binding energy hydrogen species such as (a) a hydrogen atom having a binding energy of about $\frac{13.6\ eV}{\left(\frac{1}{p}\right)^2}$, such as within a range of about 0.9 to 1.1 times $\frac{13.6\ eV}{\left(\frac{1}{p}\right)^2}$ where p is an integer from 2 to 137; (b) a hydride ion ($H^-$) having a binding **energy of about**

$$Binding\ Energy = \frac{\hbar^2\sqrt{s(s+1)}}{8\mu_e a_0^2\left[\frac{1+\sqrt{s(s+1)}}{p}\right]^2} - \frac{\pi\mu_0 e^2\hbar^2}{m_e^2}\left(\frac{1}{a_H^3}+\frac{2^2}{a_0^3\left[\frac{1+\sqrt{s(s+1)}}{p}\right]^3}\right),$$

such as within a range of about 0.9 to 1.1 times

$$Binding\ Energy = \frac{\hbar^2\sqrt{s(s+1)}}{8\mu_e a_0^2\left[\frac{1+\sqrt{s(s+1)}}{p}\right]^2} - \frac{\pi\mu_0 e^2\hbar^2}{m_e^2}\left(\frac{1}{a_H^3}+\frac{2^2}{a_0^3\left[\frac{1+\sqrt{s(s+1)}}{p}\right]^3}\right)$$

where p is an integer from 2 to 24; (c) $H_4^+(1/p)$; (d) a trihydrino molecular ion, $H_3^+(1/p)$, having a binding energy of about $\frac{22.6}{\left(\frac{1}{p}\right)^2}\ eV$ such as within a range of about 0.9 to 1.1 times $\frac{22.6}{\left(\frac{1}{p}\right)^2}\ eV$ where p is an integer from 2 to 137;

(e) a dihydrino having a binding energy of about $\frac{15.3}{\left(\frac{1}{p}\right)^2}\ eV$ such as within a range of about 0.9 to 1.1 times $\frac{15.3}{\left(\frac{1}{p}\right)^2}\ eV$ where p is an integer from 2 to 137; (f) a dihydrino molecular ion with a binding energy of about $\frac{16.3}{\left(\frac{1}{p}\right)^2}\ eV$ such as within a range of about 0.9 to 1.1 times $\frac{16.3}{\left(\frac{1}{p}\right)^2}\ eV$ where p is an integer, preferably an integer from 2 to 137.

According to a further embodiment of the present disclosure, a compound is provided comprising at least one increased binding energy hydrogen species such as (a) a dihydrino molecular ion having a total energy of about

$$E_T = -p^2 \left\{ \begin{array}{l} \frac{e^2}{8\pi\varepsilon_o a_H}(4\ln 3 - 1 - 2\ln 3)\left[1 + p\sqrt{\frac{2\hbar\sqrt{\frac{\frac{2e^2}{4\pi\varepsilon_o (2a_H)^3}}{m_e}}}{m_e c^2}}\right] \\ -\frac{1}{2}\hbar\sqrt{\frac{\frac{pe^2}{4\pi\varepsilon_o \left(\frac{2a_H}{p}\right)^3} - \frac{pe^2}{8\pi\varepsilon_o \left(\frac{3a_H}{p}\right)^3}}{\mu}} \end{array} \right\} \quad (59)$$

$$= -p^2 16.13392\ eV - p^3 0.118755\ eV$$

such as within a range of about 0.9 to 1.1 times

$$E_T = -p^2 \left\{ \begin{array}{l} \frac{e^2}{8\pi\varepsilon_o a_H}(4\ln 3 - 1 - 2\ln 3)\left[1 + p\sqrt{\frac{2\hbar\sqrt{\frac{\frac{2e^2}{4\pi\varepsilon_o (2a_H)^3}}{m_e}}}{m_e c^2}}\right] \\ -\frac{1}{2}\hbar\sqrt{\frac{\frac{pe^2}{4\pi\varepsilon_o \left(\frac{2a_H}{p}\right)^3} - \frac{pe^2}{8\pi\varepsilon_o \left(\frac{3a_H}{p}\right)^3}}{\mu}} \end{array} \right\}$$

$$= -p^2 16.13392\ eV - p^3 0.118755\ eV$$

where $p$ is an integer, $\hbar$ is Planck's constant bar, $m_e$ is the mass of the electron, c is the speed of light in vacuum, and $\mu$ is the reduced nuclear mass, and (b) a dihydrino molecule having a total energy of about

$$E_T = -p^2 \left\{ \frac{\frac{e^2}{8\pi\varepsilon_o a_0}\left[\left(2\sqrt{2}-\sqrt{2}+\frac{\sqrt{2}}{2}\right)\ln\frac{\sqrt{2}+1}{\sqrt{2}-1}-\sqrt{2}\right]}{-\frac{1}{2}\hbar\sqrt{\frac{\frac{pe^2}{8\pi\varepsilon_o\left(\frac{a_0}{p}\right)^3}-\frac{pe^2}{8\pi\varepsilon_o\left(\frac{\left(1+\frac{1}{\sqrt{2}}\right)a_0}{p}\right)^3}}{\mu}}} \left[1+p\sqrt{\frac{2\hbar\sqrt{\frac{\frac{e^2}{4\pi\varepsilon_o a_0^3}}{m_e}}}{m_e c^2}}\right] \right\} \quad (60)$$

$$= -p^2 31.351\ eV - p^3 0.326469\ eV$$

such as within a range of about 0.9 to 1.1 times

$$E_T = -p^2 \left\{ \frac{\frac{e^2}{8\pi\varepsilon_o a_0}\left[\left(2\sqrt{2}-\sqrt{2}+\frac{\sqrt{2}}{2}\right)\ln\frac{\sqrt{2}+1}{\sqrt{2}-1}-\sqrt{2}\right]}{-\frac{1}{2}\hbar\sqrt{\frac{\frac{pe^2}{8\pi\varepsilon_o\left(\frac{a_0}{p}\right)^3}-\frac{pe^2}{8\pi\varepsilon_o\left(\frac{\left(1+\frac{1}{\sqrt{2}}\right)a_0}{p}\right)^3}}{\mu}}} \left[1+p\sqrt{\frac{2\hbar\sqrt{\frac{\frac{e^2}{4\pi\varepsilon_o a_0^3}}{m_e}}}{m_e c^2}}\right] \right\}$$

$$= -p^2 31.351\ eV - p^3 0.326469\ eV$$

where $p$ is an integer and $a_o$ is the Bohr radius.

According to one embodiment of the present disclosure wherein the compound comprises a negatively charged increased binding energy hydrogen species, the compound further comprises one or more cations, such as a proton, ordinary $H_2^+$, or ordinary $H_3^+$.

A method is provided herein for preparing compounds comprising at least one hydrino hydride ion. Such compounds are hereinafter referred to as "hydrino hydride compounds." The method comprises reacting atomic hydrogen with a catalyst having a net enthalpy of reaction of about $\frac{m}{2}\cdot 27\ eV$, where m is an integer greater than 1, preferably an integer less than 400, to produce an increased binding energy hydrogen atom having a binding energy of about $\frac{13.6\ eV}{\left(\frac{1}{p}\right)^2}$ where $p$ is an integer, preferably an integer from 2 to 137.

A further product of the catalysis is energy. The increased binding energy hydrogen atom can be reacted with an electron source, to produce an increased binding energy hydride ion. The increased binding energy hydride ion can be reacted with one or more cations to produce a compound comprising at least one increased binding energy hydride ion.

The novel hydrogen compositions of matter can comprise:

(a) at least one neutral, positive, or negative hydrogen species (hereinafter "increased binding energy hydrogen

species") having a binding energy

(i) greater than the binding energy of the corresponding ordinary hydrogen species, or
(ii) greater than the binding energy of any hydrogen species for which the corresponding ordinary hydrogen species is unstable or is not observed because the ordinary hydrogen species' binding energy is less than thermal energies at ambient conditions (standard temperature and pressure, STP), or is negative; and

(b) at least one other element. The compounds of the present disclosure are hereinafter referred to as "increased binding energy hydrogen compounds."

By "other element" in this context is meant an element other than an increased binding energy hydrogen species. Thus, the other element can be an ordinary hydrogen species, or any element other than hydrogen. In one group of compounds, the other element and the increased binding energy hydrogen species are neutral. In another group of compounds, the other element and increased binding energy hydrogen species are charged such that the other element provides the balancing charge to form a neutral compound. The former group of compounds is characterized by molecular and coordinate bonding; the latter group is characterized by ionic bonding.

Also provided are novel compounds and molecular ions comprising

(a) at least one neutral, positive, or negative hydrogen species (hereinafter "increased binding energy hydrogen species") having a total energy

(i) greater than the total energy of the corresponding ordinary hydrogen species, or
(ii) greater than the total energy of any hydrogen species for which the corresponding ordinary hydrogen species is unstable or is not observed because the ordinary hydrogen species' total energy is less than thermal energies at ambient conditions, or is negative; and

(b) at least one other element.

The total energy of the hydrogen species is the sum of the energies to remove all of the electrons from the hydrogen species. The hydrogen species according to the present disclosure has a total energy greater than the total energy of the corresponding ordinary hydrogen species. The hydrogen species having an increased total energy according to the present disclosure is also referred to as an "increased binding energy hydrogen species" even though some embodiments of the hydrogen species having an increased total energy may have a first electron binding energy less that the first electron binding energy of the corresponding ordinary hydrogen species. For example, the hydride ion of Eqs. (57-58) for $p$ = 24 has a first binding energy that is less than the first binding energy of ordinary hydride ion, while the total energy of the hydride ion of Eqs. (57-58) for $p$ = 24 is much greater than the total energy of the corresponding ordinary hydride ion.

Also provided herein are novel compounds and molecular ions comprising

(a) a plurality of neutral, positive, or negative hydrogen species (hereinafter "increased binding energy hydrogen species") having a binding energy

(i) greater than the binding energy of the corresponding ordinary hydrogen species, or
(ii) greater than the binding energy of any hydrogen species for which the corresponding ordinary hydrogen species is unstable or is not observed because the ordinary hydrogen species' binding energy is less than thermal energies at ambient conditions or is negative; and

(b) optionally one other element. The compounds of the present disclosure are hereinafter referred to as "increased binding energy hydrogen compounds."

The increased binding energy hydrogen species can be formed by reacting one or more hydrino atoms with one or more of an electron, hydrino atom, a compound containing at least one of said increased binding energy hydrogen species, and at least one other atom, molecule, or ion other than an increased binding energy hydrogen species.

Also provided are novel compounds and molecular ions comprising

(a) a plurality of neutral, positive, or negative hydrogen species (hereinafter "increased binding energy hydrogen species") having a total energy

(i) greater than the total energy of ordinary molecular hydrogen, or

(ii) greater than the total energy of any hydrogen species for which the corresponding ordinary hydrogen species is unstable or is not observed because the ordinary hydrogen species' total energy is less than thermal energies at ambient conditions or is negative; and

(b) optionally one other element. The compounds of the present disclosure are hereinafter referred to as "increased binding energy hydrogen compounds."

In an embodiment, a compound is provided comprising at least one increased binding energy hydrogen species chosen from (a) hydride ion having a binding energy according to Eqs. (57-58) that is greater than the binding of ordinary hydride ion (about 0.8 eV) for $p$ = 2 up to 23, and less for $p$ = 24 ("increased binding energy hydride ion" or "hydrino hydride ion"); (b) hydrogen atom having a binding energy greater than the binding energy of ordinary hydrogen atom (about 13.6 eV) ("increased binding energy hydrogen atom" or "hydrino"); (c) hydrogen molecule having a first binding energy greater than about 15.3 eV ("increased binding energy hydrogen molecule" or "dihydrino"); and (d) molecular hydrogen ion having a binding energy greater than about 16.3 eV ("increased binding energy molecular hydrogen ion" or "dihydrino molecular ion"). In the disclosure, increased binding energy hydrogen species and compounds is also referred to as lower-energy hydrogen species and compounds. Hydrinos comprise an increased binding energy hydrogen species or equivalently a lower-energy hydrogen species.

In an embodiment, NaOH is a source of NaH in a regenerative cycle. The reaction of $NaOH$ and $Na$ to $Na_2O$ and $NaH$ is

$$NaOH + 2Na \rightarrow Na_2O + NaH \ \ (\text{-44.7 kJ/mole}) \tag{61}$$

The exothermic reaction can drive the formation of NaH(g). Thus, NaH decomposition to Na or metal can serve as a reductant to form catalyst NaH(g). In an embodiment, $Na_2O$ formed as a product of a reaction to generate NaH catalyst such as that given by Eq. (61), is reacted with a source of hydrogen to form NaOH that can further serve as a source of NaH catalyst. In an embodiment, a regenerative reaction of NaOH from the product of Eq. (61) in the presence of atomic hydrogen is

$$Na_2O + 1/2H \rightarrow NaOH + Na \quad \Delta H = -11.6 \ kJ \, / \, mole \ NaOH \tag{62}$$

$$NaH \rightarrow Na + H(1/3) \quad \Delta H = -10{,}500 \ kJ \, / \, mole \ H \tag{63}$$

and

$$NaH \rightarrow Na + H(1/4) \quad \Delta H = -19{,}700 \ kJ \, / \, mole \ H \tag{64}$$

Thus, a small amount of $NaOH$ and $Na$ from a source such as Na metal or NaH with a source of atomic hydrogen or atomic hydrogen serves as a catalytic source of the $NaH$ catalyst, that in turn forms a large yield of hydrinos via multiple cycles of regenerative reactions such as those given by Eqs. (61-64). The reaction given by Eq. (62) may be enhanced by the use of a hydrogen dissociator to form atomic H from $H_2$. A suitable dissociator comprises at least one member from the group of noble metals, transition metals, Pt, Pd, Ir, Ni, Ti, and these elements on a support. The reaction mixture may comprise NaH or a source of NaH and NaOH or a source of NaOH and may further comprise at least one of reductant such as an alkaline earth metal such as Mg and a support such as carbon or carbide such as TiC, $YC_2$, $TiSiC_2$, and WC. The reaction may be run in a vessel that is inert to the reactants and products such as a Ni, Ag, Ni-plated, Ag-plated, or $Al_2O_3$ vessel.

In an embodiment, KOH is a source of K and KH in a regenerative cycle. The reaction of $KOH$ and $K$ to $K_2O$ and $KH$ is

$$KOH + 2K \rightarrow K_2O + KH \ \ (\text{+5.4 kJ/mole}) \tag{65}$$

During the formation of KH, the hydrino reaction occurs. In an embodiment, $K_2O$ is reacted with a source of hydrogen to form KOH that can further serve as the reactant according to Eq. (65). In an embodiment, a regenerative reaction of

KOH from Eq. (65) in the presence of atomic hydrogen is

$$K_2O + 1/2H_2 \rightarrow KOH + K \quad \Delta H = -63.1\ kJ/mole\ KOH \tag{66}$$

$$KH \rightarrow K + H(1/4) \quad \Delta H = -19,700\ kJ/mole\ H \tag{67}$$

Thus, a small amount of *KOH* and *K* from a source such as K metal or KH with a source of atomic hydrogen or atomic hydrogen serves as a catalytic source of the *KH* source of catalyst, that in turn forms a large yield of hydrinos via multiple cycles of regenerative reactions such as those given by Eqs. (65-67). The reaction given by Eq. (66) may be enhanced by the use of a hydrogen dissociator to form atomic H from $H_2$. A suitable dissociator comprises at least one member from the group of noble metals, transition metals, Pt, Pd, Ir, Ni, Ti, and these elements on a support. The reaction mixture may comprise KH or a source of KH and KOH or a source of KOH and may further comprise at least one of a reductant and a support such as carbon, a carbide, or a boride such as TiC, $YC_2$, $TiSiC_2$, $MgB_2$, and WC. In an embodiment, the support is nonreactive or has a low reactivity with KOH. The reaction mixture may further comprise at least one of KOH-doped support such as R-Ni, KOH, and KH.

D. Additional MH-Type Catalysts and Reactions

In general, MH type hydrogen catalysts to produce hydrinos provided by the breakage of the M-H bond plus the ionization of t electrons from the atom M each to a continuum energy level such that the sum of the bond energy and ionization energies of the t electrons is approximately $m \cdot 27.2\ eV$ where *m* is an integer are given in TABLE 3A. Each MH catalyst is given in the first column and the corresponding M-H bond energy is given in column two. The atom M of the MH species given in the first column is ionized to provide the net enthalpy of reaction of $m \cdot 27.2\ eV$ with the addition of the bond energy in column two. The enthalpy of the catalyst is given in the eighth column where *m* is given in the ninth column. The electrons that participate in ionization are given with the ionization potential (also called ionization energy or binding energy). For example, the bond energy of *NaH,* 1.9245 *eV* , is given in column two. The ionization potential of the *n* th electron of the atom or ion is designated by $IP_n$ and is given by the CRC. That is for example, $Na + 5.13908\ eV \rightarrow Na^+ + e^-$ and $Na^+ + 47.2864\ eV \rightarrow Na^{2+} + e^-$. The first ionization potential, $IP = 5.13908\ eV$, and the second ionization potential, $IP_2 = 47.2864\ eV$ , are given in the second and third columns, respectively. The net enthalpy of reaction for the breakage of the *NaH* bond and the double ionization of *Na* is 54.35 *eV* as given in the eighth column, and *m* = 2 in Eq. (47) as given in the ninth column. The bond energy of BaH is 1.98991 eV and $IP_1$, $IP_2$, and $IP_3$ are 5.2117 eV, 10.00390 eV, and 37.3 eV, respectively. The net enthalpy of reaction for the breakage of the BaH bond and the triple ionization of Ba is 54.5 eV as given in the eighth column, and m=2 in Eq. (47) as given in the ninth column. The bond energy of SrH is 1.70 eV and $IP_1$, $IP_2$, $IP_3$, $IP_4$, and $IP_5$ are 5.69484 eV, 11.03013 eV, 42.89 eV, 57 eV, and 71.6 eV, respectively. The net enthalpy of reaction for the breakage of the SrH bond and the ionization of Sr to $Sr^{5+}$ is 190 eV as given in the eighth column, and m=7 in Eq. (47) as given in the ninth column. Additionally, H can react with each of the H(1/p) products of the MH catalysts given in TABLE 3A to form a hydrino having a quantum number p increased by one (Eq. (10)) relative to the catalyst reaction product of MH alone as given by exemplary Eq. (31).

TABLE 3A. MH type hydrogen catalysts capable of providing a net enthalpy of reaction of approximately $m \cdot 27.2\ eV$ $m \cdot 27.2\ eV$ . Energies in eV's.

| Catalyst | M-H Bond Energy | $IP_1$ | $IP_2$ | $IP_3$ | $IP_4$ | $IP_5$ | Enthalpy | m |
|---|---|---|---|---|---|---|---|---|
| AlH | 2.98 | 5.985768 | 18.82855 | | | | 27.79 | 1 |
| AsH | 2.84 | 9.8152 | 18.633 | 28.351 | 50.13 | | 109.77 | 4 |
| BaH | 1.99 | 5.21170 | 10.00390 | 37.3 | | | 54.50 | 2 |
| BiH | 2.936 | 7.2855 | 16.703 | | | | 26.92 | 1 |
| CdH | 0.72 | 8.99367 | 16.90832 | | | | 26.62 | 1 |
| C1H | 4.4703 | 12.96763 | 23.8136 | 39.61 | | | 80.86 | 3 |
| CoH | 2.538 | 7.88101 | 17.084 | | | | 27.50 | 1 |
| GeH | 2.728 | 789943 | 15.93461 | | | | 26.56 | 1 |
| InH | 2.520 | 5.78636 | 18.8703 | | | | 27.18 | 1 |
| NaH | 1.925 | 5.139076 | 47.2864 | | | | 54.35 | 2 |

(continued)

| Catalyst | M-H Bond Energy | $IP_1$ | $IP_2$ | $IP_3$ | $IP_4$ | $IP_5$ | Enthalpy | m |
|---|---|---|---|---|---|---|---|---|
| NbH | 2.30 | 6.75885 | 14.32 | 25.04 | 38.3 | 50.55 | 137.26 | 5 |
| OH | 4.4556 | 13.61806 | 35.11730 | | | | 53.3 | 2 |
| OH | 4.4556 | 13.61806 | 35.11730 | 54.9355 | | | 108.1 | 4 |
| OH | 4.4556 | 13.61806 + 13.6 KE | 35.11730 + 13.6 KE | | | | 80.39 | 3 |
| RhH | 2.50 | 7.4589 | 18.08 | | | | 28.0 | 1 |
| RuH | 2.311 | 7.36050 | 16.76 | | | | 26.43 | 1 |
| SH | 3.67 | 10.36001 | 23.3379 | 34.79 | 47.222 | 72.5945 | 191.97 | 7 |
| SbH | 2.484 | 8.60839 | 16.63 | | | | 27.72 | 1 |
| SeH | 3.239 | 9.75239 | 21.19 | 30.8204 | 42.9450 | | 107.95 | 4 |
| SiH | 3.040 | 8.15168 | 16.34584 | | | | 27.54 | 1 |
| SnH | 2.736 | 7.34392 | 14.6322 | 30.50260 | | | 55.21 | 2 |
| SrH | 1.70 | 5.69484 | 11.03013 | 42.89 | 57 | 71.6 | 190 | 7 |
| TlH | 2.02 | 6.10829 | 20.428 | | | | 28.56 | 1 |

In other embodiments, $MH^-$ type hydrogen catalysts to produce hydrinos provided by the transfer of an electron to an acceptor A, the breakage of the M-H bond plus the ionization of t electrons from the atom M each to a continuum energy level such that the sum of the electron transfer energy comprising the difference of electron affinity (EA) of MH and A, M-H bond energy, and ionization energies of the t electrons from M is approximately $m \cdot 27.2\ eV$ where $m$ is an integer are given in TABLE 3B. Each $MH^-$ catalyst, the acceptor A, the electron affinity of MH, the electron affinity of A, and the M-H bond energy, are is given in the first, second, third and fourth columns, respectively. The electrons of the corresponding atom M of MH that participate in ionization are given with the ionization potential (also called ionization energy or binding energy) in the subsequent columns and the enthalpy of the catalyst and the corresponding integer $m$ are given in the last column. For example, the electron affinities of OH and H are 1.82765 eV and 0.7542 eV, respectively, such that the electron transfer energy is 1.07345 eV as given in the fifth column. The bond energy of OH is 4.4556 eV is given in column six. The ionization potential of the nth electron of the atom or ion is designated by $IP_n$. That is for example, $O+13.61806\ eV \rightarrow O^+ + e^-$ and $O^+ + 35.11730\ eV \rightarrow O^{2+} + e^-$. The first ionization potential, $IP_1 = 13.61806\ eV$, and the second ionization potential, $IP_2 = 35.11730\ eV$, are given in the seventh and eighth columns, respectively. The net enthalpy of the electron transfer reaction, the breakage of the OH bond, and the double ionization of O is 54.27 eV as given in the eleventh column, and $m$ = 2 in Eq. (47) as given in the twelfth column. Additionally, H can react with each of the H(l/p) products of the MH catalysts given in TABLE 3B to form a hydrino having a quantum number p increased by one (Eq. (10)) relative to the catalyst reaction product of MH alone as given by exemplary Eq. (31). In other embodiments, the catalyst for H to form hydrinos is provided by the ionization of a negative ion such that the sum of its EA plus the ionization energy of one or more electrons is approximately $m \cdot 27.2\ eV$ where $m$ is an integer. Alternatively, the first electron of the negative ion may be transferred to an acceptor followed by ionization of at least one more electron such that the sum of the electron transfer energy plus the ionization energy of one or more electrons is approximately $m \cdot 27.2\ eV$ where $m$ is an integer. The electron acceptor may be H.

TABLE 3B. $MH^-$ type hydrogen catalysts capable of providing a net enthalpy of reaction of approximately $m \cdot 27.2\ eV$. Energies in eV's.

| Catalyst | Acceptor (A) | EA (MH) | EA (A) | Electron Transfer | M-H Bond Energy | $IP_1$ | $IP_2$ | $IP_3$ | $IP_4$ | Enthalpy | m |
|---|---|---|---|---|---|---|---|---|---|---|---|
| $OH^-$ | H | 1.82765 | 0.7542 | 1.07345 | 4.4556 | 13.61806 | 35.11730 | | | 54.27 | 2 |
| $SiH^-$ | H | 1.277 | 0.7542 | 0.5228 | 3.040 | 8.15168 | 16.34584 | | | 28.06 | 1 |
| $CoH^-$ | H | 0.671 | 0.7542 | -0.0832 | 2.538 | 7.88101 | 17.084 | | | 27.42 | 1 |
| NiH' | H | 0.481 | 0.7542 | -0.2732 | 2.487 | 7.6398 | 18.16884 | | | 28.02 | 1 |
| $SeH^-$ | H | 2.2125 | 0.7542 | 1.4583 | 3.239 | 9.75239 | 21.19 | 30.8204 | 42.9450 | 109.40 | 4 |

In other embodiments, $MH^+$ type hydrogen catalysts to produce hydrinos are provided by the transfer of an electron from an donor A which may be negatively charged, the breakage of the M-H bond, and the ionization of t electrons from the atom M each to a continuum energy level such that the sum of the electron transfer energy comprising the difference of ionization energies of MH and A, bond M-H energy, and ionization energies of the *t* electrons from M is approximately $m \cdot 27.2\ eV$ where *m* is an integer.

In an embodiment, a species such as an atom, ion, or molecule serves as a catalyst to cause molecular hydrogen to undergo a transition to molecular hydrino $H_2(1/p)$ (p is an integer). Similarly to the case with H the catalyst accepts energy from $H_2$ which in this case may be about m48.6 eV wherein m is an integer as given in Mills GUTCP. Suitable exemplary catalysts that form $H_2(1/p)$ by the direct catalysis of $H_2$ are O, V, and Cd that form $O^{2+}$, $V^{4-}$, and $Cd^{5+}$ during the catalysis reaction corresponding to m = 1, m = 2, and m = 4 , respectively. The energy may be released as heat or light or as electricity wherein the reactions comprise a half-cell reaction.

In an embodiment, the catalyst comprises any species such as an atom, positively or negatively charged ion, positively or negatively charged molecular ion, molecule, excimer, compound, or any combination thereof in the ground or excited state that is capable of accepting energy of $m \cdot 27.2\ eV$, $m = 1,2,3,4,....$(Eq. (5)). It is believed that the rate of catalysis is increased as the net enthalpy of reaction is more closely matched to $m \cdot 27.2\ eV$. It has been found that catalysts having a net enthalpy of reaction within $\pm 10\%$ , preferably $\pm 5\%$, of $m \cdot 27.2\ eV$ are suitable for most applications. In the case of the catalysis of hydrino atoms to lower energy states, the enthalpy of reaction of $m \cdot 27.2\ eV$ (Eq. (5)) is relativistically corrected by the same factor as the potential energy of the hydrino atom. In an embodiment, the catalyst resonantly and radiationless accepts energy from atomic hydrogen. In an embodiment, the accepted energy decreases the magnitude of the potential energy of the catalyst by about the amount transferred from atomic hydrogen. Energetic ions or electrons may result due to the conservation of the kinetic energy of the initially bound electrons. At least one atomic H serves as a catalyst for at least one other wherein the 27.2 eV potential energy of the acceptor is cancelled by the transfer or 27.2 eV from the donor II atom being catalyzed. The kinetic energy of the acceptor catalyst II may be conserved as fast protons or electrons. Additionally, the intermediate state (Eq. (7)) formed in the catalyzed H decays with the emission of continuum energy in the form of radiation or induced kinetic energy in a third body. These energy releases may result in current flow in the CIHT cell.

In an embodiment, at least one of a molecule or positively or negatively charged molecular ion serves as a catalyst that accepts about m27.2 eV from atomic H with a decrease in the magnitude of the potential energy of the molecule or positively or negatively charged molecular ion by about m27.2 eV. For example, the potential energy of $H_2O$ given in Mills GUTCP is

$$V_e = \left(\frac{3}{2}\right)\frac{-2e^2}{8\pi\varepsilon_0\sqrt{a^2-b^2}}\ln\frac{a+\sqrt{a^2-b^2}}{a-\sqrt{a^2-b^2}} = -81.8715\ eV \tag{68}$$

A molecule that accepts $m \cdot 27.2\ eV$ from atomic H with a decrease in the magnitude of the potential energy of the molecule by the same energy may serve as a catalyst. For example, the catalysis reaction (m =3) regarding the potential energy of $H_2O$ is

$$81.6\ eV + H_2O + H\left[a_H\right] \rightarrow 2H^+ + O^+ + 3e^- + H^*\left[\frac{a_H}{4}\right] + 81.6\ eV \tag{69}$$

$$H^*\left[\frac{a_H}{4}\right] \rightarrow H\left[\frac{a_H}{4}\right] + 122.4\ eV \tag{70}$$

$$2H^+ + O^+ + 3e^- \rightarrow H_2O + 81.6\ eV \tag{71}$$

And, the overall reaction is

$$H\left[a_H\right] \rightarrow H\left[\frac{a_H}{4}\right] + 81.6\ eV + 122.4\ eV \quad (72)$$

wherein $H*\left[\frac{a_H}{4}\right]$ has the radius of the hydrogen atom and a central field equivalent to 4 times that of a proton and $H\left[\frac{a_H}{4}\right]$ is the corresponding stable state with the radius of 1/4 that of H. As the electron undergoes radial acceleration from the radius of the hydrogen atom to a radius of 1/4 this distance, energy is released as characteristic light emission or as third-body kinetic energy. Based on the 10% energy change in the heat of vaporization in going from ice at 0°C to water at 100°C, the average number of H bonds per water molecule in boiling water is 3.6. Thus, in an embodiment, $H_2O$ must be formed chemically as isolated molecules with suitable activation energy in order to serve as a catalyst to form hydrinos. In an embodiment, the $H_2O$ catalyst is nascent $H_2O$.

In an embodiment, at least one of nH, O, nO, $O_2$, OH, and $H_2O$ (n = integer) may serve as the catalyst. The product of H and OH as the catalyst may be H(1/5) wherein the catalyst enthalpy is about 108.8 eV. The product of the reaction of H and $H_2O$ as the catalyst may be H(l/4). The hydrino product may further react to lower states. The product of H(1/4) and H as the catalyst may be H(1/5) wherein the catalyst enthalpy is about 27.2 eV. The product of H(l/4) and OH as the catalyst may be H(1/6) wherein the catalyst enthalpy is about 54.4 eV. The product of H(1/5) and H as the catalyst may be H(1/6) wherein the catalyst enthalpy is about 27.2 eV.

The bonds in $H_2O$ involve the outer two electrons of O. Since the potential energy of $H_2O$ is 81.87 eV and the third ionization energy of the O atom of $H_2O$ is 54.9355 eV, $H_2O$ may accept 3 X27.2 eV of potential energy and 2 X27.2 eV corresponding to the further ionization of the resulting $O^{2+}$ to $O^{3+}$. Thus, $H_2O$ may also catalyze H to H(l/6) corresponding to a catalyst enthalpy of 5 X 27.2 eV as well as catalyze H to H(l/4) corresponding to a catalyst enthalpy of 3 X 27.2 eV. The solid proton NMR of the hydrogen anode product of the cell [NaOH Ni($H_2$)/BASE/$MgCl_2$-NaCl closed cell] showed a large - 3.91 ppm singlet $^1H$ MAS NMR peak corresponding hydrino product of $H_2O$ catalyst formed by reaction of $OH^-$ with H at the anode.

Similarly to $H_2O$, the potential energy of the amide functional group $NH_2$ given in Mills GUTCP is -78.77719 eV. From the CRC, $\Delta H$ for the reaction of $NH_2$ to form $KNH_2$ calculated from each corresponding $\Delta H_f$ is (-128.9-184.9) kJ/mole = -313.8 kJ/mole (3.25 eV). From the CRC, $\Delta H$ for the reaction of $NH_2$ to form $NaNH_2$ calculated from each corresponding $\Delta H_f$ is (-123.8-184.9) kJ/mole = -308.7 kJ/mole (3.20 eV). From the CRC, $\Delta H$ for the reaction of $NH_2$ to form $LiNH_2$ calculated from each corresponding $\Delta H_f$ is (-179.5-184.9) kJ/mole = -364.4 kJ/mole (3.78 eV). Thus, the net enthalpy that may be accepted by alkali amides $MNH_2$ (M = K, Na, Li) serving as H catalysts to form hydrinos are about 82.03 eV, 81.98 eV, and 82.56 eV (m=3 in Eq. (5)), respectively, corresponding to the sum of the potential energy of the amide group and the energy to form the amide from the amide group. The hydrino product such as molecular hydrino may cause an upfield matrix shift observed by means such as MAS NMR.

Similarly to $H_2O$, the potential energy of the $H_2S$ functional group given in Mills GUTCP is -72.81 eV. The cancellation of this potential energy also eliminates the energy associated with the hybridization of the 3p shell. This hybridization energy of 7.49 eV is given by the ratio of the hydride orbital radius and the initial atomic orbital radius times the total energy of the shell. Additionally, the energy change of the S3p shell due to forming the two S-H bonds of 1.10 eV is included in the catalyst energy. Thus, the net enthalpy of $H_2S$ catalyst is 81.40 eV (m=3 in Eq. (5)). $H_2S$ catalyst may be formed from MHS (M = alkali) by the reaction

$$2MHS \text{ to } M_2S + H_2S \quad (73)$$

This reversible reaction may form $H_2S$ in an active catalytic state in the transition state to product $H_2S$ that may catalyze H to hydrino. The reaction mixture may comprise reactants that form $H_2S$ and a source of atomic H. The hydrino product such as molecular hydrino may cause an upfield matrix shift observed by means such as MAS NMR.

Furthermore, atomic oxygen is a special atom with two unpaired electrons at the same radius equal to the Bohr radius of atomic hydrogen. When atomic H serves as the catalyst, 27.2 eV of energy is accepted such that the kinetic energy of each ionized H serving as a catalyst for another is 13.6 eV. Similarly, each of the two electrons of O can be ionized with 13.6 eV of kinetic energy transferred to the O ion such that the net enthalpy for the breakage of the O-H bond of OH with the subsequent ionization of the two outer unpaired electrons is 80.4 eV as given in TABLE 3. During

the ionization of $OH^-$ to OH, the energy match for the further reaction to H(1/4) and $O^{2+}$ + 2e' may occur wherein the 204 eV of energy released contributes to the CIHT cell's electrical power. The reaction is given as follows:

$$80.4\ eV + OH + H\left[\frac{a_H}{p}\right] \to O^{2+}_{fast} + 2e^- + H\left[\frac{a_H}{(p+3)}\right] + [(p+3)^2 - p^2]\cdot 13.6\ eV \quad (74)$$

$$O^{2+}_{fast} + 2e^- \to O + 80.4\ eV \quad (75)$$

And, the overall reaction is

$$H\left[\frac{a_H}{p}\right] \to H\left[\frac{a_H}{(p+3)}\right] + [(p+3)^2 - p^2]\cdot 13.6\ eV \quad (76)$$

where $m$ = 3 in Eq. (5). The kinetic energy could also be conserved in hot electrons. The observation of H population inversion in water vapor plasmas is evidence of this mechanism. The hydrino product such as molecular hydrino may cause an upfield matrix shift observed by means such as MAS NMR. Other methods of identifying the molecular hydrino product such as FTIR, Raman, and XPS are given in the disclosure.

In an embodiment wherein oxygen or a compound comprising oxygen participates in the oxidation or reduction reaction, $O_2$ may serve as a catalyst or a source of a catalyst. The bond energy of the oxygen molecule is 5.165 eV, and the first, second, and third ionization energies of an oxygen atom are 13.61806 $eV$, 35.11730 $eV$, and 54.9355 $eV$, respectively. The reactions $O_2 \to O + O^{2+}$, $O_2 \to O + O^{3+}$, and $2O \to 2O^+$ provide a net enthalpy of about 2, 4, and 1 times $E_h$, respectively, and comprise catalyst reactions to form hydrino by accepting these energies from H to cause the formation of hydrinos.

IX. Fuel Cell and Battery

An embodiment of the fuel cell and a battery 400 is shown in FIGURE 1. The hydrino reactants comprising a solid fuel or a heterogeneous catalyst comprise the reactants for corresponding cell half reactions. A catalyst-induced-hydrino-transition (CIHT) cell is enabled by the unique attributes of the catalyzed hydrino transition. The CIHT cell of the present disclosure is a hydrogen fuel cell that generates an electromotive force (EMF) from the catalytic reaction of hydrogen to lower energy (hydrino) states. Thus, it serves as a fuel cell for the direct conversion of the energy released from the hydrino reaction into electricity.

Due to oxidation-reduction cell half reactions, the hydrino-producing reaction mixture is constituted with the migration of electrons through an external circuit and ion mass transport through a separate path to complete an electrical circuit. The overall reactions and corresponding reaction mixtures that produce hydrinos given by the sum of the half-cell reactions may comprise the reaction types considered for thermal power production given in the present disclosure. The free energy $\Delta G$ from the hydrino reaction gives rise to a potential that may be an oxidation or reduction potential depending on the oxidation-reduction chemistry to constitute the hydrino-producing reaction mixture. The potential may be used to generate a voltage in a fuel cell. The potential V may be expressed in terms of the free energy $\Delta G$ :

$$V = \frac{-\Delta G}{nF} \quad (77)$$

wherein F is the Faraday constant. Given the free energy is about -20 MJ/mole H for the transition to H(1/4), the voltage may be high depending on the other cell components such as the chemicals, electrolyte, and electrodes. In an embodiment wherein the voltage is limited by the oxidation-reduction potentials of these or other components, the energy may be manifest as a higher current and corresponding power contribution from hydrino formation. As indicated by Eqs. (6-9), the energy of the hydrino transition may be released as continuum radiation. Specifically, energy is transferred to the catalyst nonradiatively to form a metastable intermediate, which decays in plasma systems with the emission of continuum radiation as the electron translates from the initial to final radius. In condensed matter such as the CIHT cell, this energy

may internally convert into energetic electrons manifest as a cell current and power contribution at potentials similar to the chemical potential of the cell reactants. Thus, the power may manifest as higher current at lower voltage than that given by Eq. (77). The voltage will also be limited by the kinetics of the reaction; so, high kinetics to form hydrinos is favorable to increase the power by increasing at least one of the current and voltage. Since the cell reaction may be driven by the large exothermic reaction of H with a catalyst to form hydrino, in an embodiment, the free energy of the conventional oxidation-reduction cell reactions to form the reactants to form hydrinos may be any value possible. Suitable ranges are about +1000 kJ/mole to -1000 kJ/mole, about +1000 kJ/mole to -100 kJ/mole, about +1000 kJ/mole to -10 kJ/mole, and about +1000 kJ/mole to 0 kJ/mole. Due to negative free energy to form hydrinos, at least one of the cell current, voltage, and power are higher than those due to the free energy of the non-hydrino reactions that can contribute to the current, voltage, and power. This applies to the open circuit voltage and that with a load. Thus, in an embodiment, the CIHT cell is distinguished over any prior Art by at least one of having a voltage higher than that predicted by the Nernst equation for the non-hydrino related chemistry including the correction of the voltage due to any polarization voltage when the cell is loaded, a higher current than that driven by convention chemistry, and a higher power than that driven by conventional chemistry.

Regarding FIGURE 1, the fuel or CIHT cell 400 comprises a cathode compartment 401 with a cathode 405, an anode compartment 402 with an anode 410, a salt bridge 420, reactants that constitute hydrino reactants during cell operation with separate electron flow and ion mass transport, and a source of hydrogen. In general embodiments, the CIHT cell is a hydrogen fuel cell that generates an electromotive force (EMF) from the catalytic reaction of hydrogen to lower energy (hydrino) states. Thus, it serves as a fuel cell for the direct conversion of the energy released from the hydrino reaction into electricity. In another embodiment, the CIHT cell produces at least one of electrical and thermal power gain over that of an applied electrolysis power through the electrodes 405 and 410. The cell consumes hydrogen in forming hydrinos and requires hydrogen addition; otherwise, in an embodiment, the reactants to form hydrinos are at least one of thermally or electrolytically regenerative. Different reactants or the same reactants under different states or conditions such as at least one of different temperature, pressure, and concentration are provided in different cell compartments that are connected by separate conduits for electrons and ions to complete an electrical circuit between the compartments. The potential and electrical power gain between electrodes of the separate compartments or thermal gain of the system is generated due to the dependence of the hydrino reaction on mass flow from one compartment to another. The mass flow provides at least one of the formation of the reaction mixture that reacts to produce hydrinos and the conditions that permit the hydrino reaction to occur at substantial rates. The mass flow further requires that electrons and ions be transported in the separate conduits that connect the compartments. The electrons may arise from at least one of the ionization of the catalyst during the reaction of atomic hydrogen with the catalyst and by an oxidation or reduction reaction of a reactant species such as an atom, a molecule, a compound, or a metal. The ionization of the species in a compartment such as the anode compartment 402 may be due to at least one of (1) the favorable free energy change from its oxidation, the reduction of a reactant species in the separate compartment such as the cathode 401, and the reaction of the migrating ion that balances charge in the compartments to electroneutrality and (2) the free energy change due to hydrino formation due to the oxidation of the species, the reduction of a species in the separate compartment, and the reaction of the migrating ion that results in the reaction to form hydrinos. The migration of the ion may be through the salt bridge 420. In another embodiment, the oxidation of the species, the reduction of a species in the separate compartment, and the reaction of the migrating ion may not be spontaneous or may occur at a low rate. An electrolysis potential is applied to force the reaction wherein the mass flow provides at least one of the formation of the reaction mixture that reacts to produce hydrinos and the conditions that permit the hydrino reaction to occur at substantial rates. The electrolysis potential may be applied through the external circuit 425. The reactants of each half-cell may be at least one of supplied, maintained, and regenerated by addition of reactants or removal of products through passages 460 and 461 to sources of reactants or reservoirs for product storage and regeneration 430 and 431.

In an embodiment, at least one of the atomic hydrogen and the hydrogen catalyst may be formed by a reaction of the reaction mixture and one reactant that by virtue of it undergoing a reaction causes the catalysis to be active. The reactions to initiate the hydrino reaction may be at least one of exothermic reactions, coupled reactions, free radical reactions, oxidation-reduction reactions, exchange reactions, and getter, support, or matrix-assisted catalysis reactions. In an embodiment, the reaction to form hydrinos provides electrochemical power. The reaction mixtures and reactions to initiate the hydrino reaction such as the exchange reactions of the present disclosure are the basis of a fuel cell wherein electrical power is developed by the reaction of hydrogen to form hydrinos. Due to oxidation-reduction cell half reactions, the hydrino-producing reaction mixture is constituted with the migration of electrons through an external circuit and ion mass transport through a separate path to complete an electrical circuit. The overall reactions and corresponding reaction mixtures that produce hydrinos given by the sum of the half-cell reactions may comprise the reaction types for thermal power and hydrino chemical production of the present disclosure. Thus, ideally, the hydrino reaction does not occur or does not occur at an appreciable rate in the absence of the electron flow and ion mass transport.

The cell comprises at least a source of catalyst or a catalyst and a source of hydrogen or hydrogen. A suitable

catalyst or source of catalyst and a source of hydrogen are those selected from the group of Li, LiH, Na, NaH, K, KH, Rb, RbH, Cs, CsH, Ba, BaH, Ca, CaH, Mg, $MgH_2$, $MgX_2$ (X is a halide) and $H_2$. Further suitable catalysts are given in TABLE 3. In an embodiment, a positive ion may undergo reduction at the cathode. The ion may be a source of the catalyst by at least one of reduction and reaction at the cathode. In an embodiment, an oxidant undergoes reaction to form the hydrino reactants that then react to form hydrinos. Alternatively, the final electron-acceptor reactants comprise an oxidant. The oxidant or cathode-cell reaction mixture may be located in the cathode compartment 401 having cathode 405. Alternatively, the cathode-cell reaction mixture is constituted in the cathode compartment from ion and electron migration. In one embodiment of the fuel cell, the cathode compartment 401 functions as the cathode. During operation, a positive ion may migrate from the anode to the cathode compartment. In certain embodiments, this migration occurs through a salt bridge 420. Alternatively, a negative ion may migrate from the cathode to anode compartment through a salt bridge 420. The migrating ion may be at least one of an ion of the catalyst or source of catalyst, an ion of hydrogen such as $H^+$, $H^-$, or $H^-(1/p)$, and the counterion of the compound formed by reaction of the catalyst or source of catalyst with the oxidant or anion of the oxidant. Each cell reaction may be at least one of supplied, maintained, and regenerated by addition of reactants or removal of products through passages 460 and 461 to sources of reactants or reservoirs for product storage and optionally regeneration 430 and 431.

In an embodiment, the chemistry yields the active hydrino reactants in the cathode compartment of the fuel cell wherein the reduction potential may include a large contribution from the catalysis of H to hydrino. The catalyst or source of catalyst may comprise a neutral atom or molecule such as an alkali metal atom or hydride that may form by the reduction of a positive species such as the corresponding alkali metal ion. The potential of the catalyst ion to be reduced to the catalyst and the H electron to transition to a lower electronic state gives rise to a contribution to the potential given by Eq. (77) based on $\Delta G$ of the reaction. In an embodiment, the cathode half-cell reduction reaction and any other reactions comprise the formation of the catalyst and atomic hydrogen and the catalysis reaction of H to hydrino. The anode half-cell reaction may comprise the ionization of a metal such as a catalyst metal. The ion may migrate to the cathode and be reduced, or an ion of the electrolyte may be reduced to form the catalyst. The catalyst may be formed in the presence of H. Exemplary reactions are

**Cathode half-cell reaction:**

$$Cat^{q+} + qe^- + H\left[\frac{a_H}{p}\right] \rightarrow Cat + H\left[\frac{a_H}{(m+p)}\right] + [(p+m)^2 - p^2] \cdot 13.6\ eV + E_R \tag{78}$$

where $E_R$ is the reduction energy of $Cat^{q+}$.

**Anode half-cell reaction:**

$$Cat + E_R \rightarrow Cat^{q+} + qe^- \tag{79}$$

Other suitable reductants are metals such a transition meals.

**Cell reaction:**

$$H\left[\frac{a_H}{p}\right] \rightarrow H\left[\frac{a_H}{(m+p)}\right] + [(p+m)^2 - p^2] \cdot 13.6\ eV \tag{80}$$

With the migration of the catalyst cation through a suitable salt bridge or electrolyte, the catalyst may be regenerated in the cathode compartment and replaced at the anode. Then, the fuel cell reactions may be maintained by replacement of cathode-compartment hydrogen reacted to form hydrino. The hydrogen may be from the electrolysis of water. The

water may be from an external source or absorbed from the atmosphere by a hydroscopic compound or electrolyte in embodiments. The product from the cell may be molecular hydrino formed by reaction of hydrino atoms. In the case that H(1/4) is the product, the energy of these reactions are

$$2H(1/4) \rightarrow H_2(1/4) + 87.31\ eV \qquad (81)$$

$$H_2O + 2.962\ eV \rightarrow H_2 + 0.5O_2 \qquad (82)$$

During operation, the catalyst reacts with atomic hydrogen, the nonradiative energy transfer of an integer multiple of 27.2 *eV* from atomic hydrogen to the catalyst results in the ionization of the catalyst with a transient release of free electrons, and a hydrino atom forms with a large release of energy. In an embodiment, this reaction may occur in the anode compartment 402 such that the anode 410 ultimately accepts the ionized-electron current. The current may also be from the oxidation of a reductant in the anode compartment. In one embodiment of the fuel cell, the anode compartment 402 functions as the anode. At least one of *Li, K* , *NaH,* nH, and $H_2O$ may serve as the catalyst to form hydrinos. A support such as carbon powder, carbide such as TiC, WC, $YC_2$, or $Cr_3C_2$, or a boride may serve as a conductor of electrons in electrical contact with an electrode such as the anode that may serve as a current collector. The conducted electrons may be from ionization of the catalyst or oxidation of a reductant. Alternatively, the support may comprise at least one of the anode and cathode electrically connected to a load with a lead. The anode lead as well as the cathode lead connecting to the load may be any conductor such as a metal.

In the case that the chemistry yields the active hydrino reactants in the anode compartment of the fuel cell, the oxidation potential and electrons may have a contribution from the catalyst mechanism. As shown by Eqs. (6-9), the catalyst may comprise a species that accepts energy from atomic hydrogen by becoming ionized. The potential of the catalyst to become ionized and the H electron to transition to a lower electronic state gives rise to contribution to the potential given by Eq. (77) based on $\Delta G$ of the reaction. Since NaH is a concerted internal reaction to form hydrino with the ionization of Na to $Na^{2+}$ as given by Eqs. (28-30), Eq. (77) should especially hold in this case. In an embodiment, the anode half-cell oxidation reaction comprises the catalysis ionization reaction. The cathode half-cell reaction may comprise the reduction of H to hydride. Exemplary reactions are

**Anode half-cell reaction:**

$$m \cdot 27.2\ eV + Cat + H\left[\frac{a_H}{p}\right] \rightarrow Cat^{r+} + re^- + H\left[\frac{a_H}{(m+p)}\right] + [(p+m)^2 - p^2] \cdot 13.6\ eV \qquad (83)$$

**Cathode half-cell reaction:**

$$\frac{r}{2}\left(MH_2 + 2e^- + E_R \rightarrow M + 2H^-\right) \qquad (84)$$

wherein $E_R$ is the reduction energy of metal hydride $MH_2$. Suitable oxidants are hydrides such as rare earth hydrides, titanium hydride, zirconium hydride, yttrium hydride, LiH, NaH, KH, and BaH, chalocogenides, and compounds of a M-N-H system such as Li-N-H system. With the migration of the catalyst cation or the hydride ion through a suitable salt bridge or electrolyte, the catalyst and hydrogen may be regenerated in the anode compartment. In the case that the stable oxidation state of the catalyst is *Cat,* the salt bridge or electrolyte reaction is

**Salt bridge or electrolyte reaction:**

$$Cat^{r+} + rH^- \rightarrow Cat + H + \frac{(r-1)}{2}H_2 + m \cdot 27.2\ eV + \left(\frac{(r-1)}{2}4.478 - r(0.754)\right) eV \quad (85)$$

wherein 0.754 eV is the hydride ionization energy and 4.478 eV is the bond energy of $H_2$. The catalyst or source of catalyst may be a hydride that may also serve as a source of H. Then, the salt bridge reaction is

**Salt bridge or electrolyte reaction:**

$$Cat^{r+} + rH^- \rightarrow CatH + \frac{(r-1)}{2}H_2 + \begin{pmatrix} m \cdot 27.2\ eV \\ + \left(\frac{(r-1)}{2}4.478 - r(0.754)\right) eV \\ + E_L \end{pmatrix} \quad (86)$$

wherein $E_L$ is lattice energy of *CatH* . Then, the fuel cell reactions may be maintained by replacement of hydrogen to the cathode compartment, or *CatH* in the electrolyte may react with M to form $MH_2$. That exemplary reaction of M = La is given by

$$La + H_2 \rightarrow LaH_2 + 2.09\ eV \quad (87)$$

In the former case, hydrogen may be from the recycling of excess hydrogen from the anode compartment formed in the reduction of $Cat^{r+}$. Hydrogen replacement for that consumed to form H(l/4) then $H_2$(1/4) may from the electrolysis of water.

The reactants may be regenerated thermally or electrolytically. The products may be regenerated in the cathode or anode compartments. Or, they may be sent to a regenerator using a pump for example wherein any of the regeneration chemistries of the present disclosure or known to those skilled in the Art may be applied to regenerate the initial reactants. Cells undergoing the hydrino reaction may provide heat to those undergoing regeneration of the reactants. In the case that the products are raised in temperature to achieve the regeneration, the CIHT cell products and regenerated reactants may be passed through a recuperator while sent to and from the regenerator, respectively, in order recover heat and increase the cell efficiency and system energy balance.

The electrolytes may comprise an ionic liquid. The electrolyte may have a low melting point such as in the range of 100-200 °C. Exemplary electrolytes are ethylammonium nitrate, ethylammonium nitrate doped with dihydrogen phosphate such as about 1% doped, hydrazinium nitrate, $NH_4PO_3$-$TiP_2O_7$, and a eutectic salt of $LiNO_3$-$NH_4NO_3$. Other suitable electrolytes may comprise at least one salt of the group of $LiNO_3$, ammonium triflate (Tf = $CF_3SO_3$ ), ammonium trifluoroacetate (TFAc =$CF_3COO^-$ ) ammonium tetrafluorobarate ($BF_4^-$), ammonium methanesulfonate ($CH_3SO_3^-$ ), ammonium nitrate ($NO_3^-$ ), ammonium thiocyanate ($SCN^-$), ammonium sulfamate ($SO_3NH_2^-$), ammonium bifluoride ($HF_2^-$) ammonium hydrogen sulfate ($HSO_4^-$) ammonium bis(trifluoromethanesulfonyl)imide (TFSI = $CF_3SO_2)_2N^-$), ammonium bis(perfluoroehtanesulfonyl)imide (BETI = $CF_3CF_2SO_2)_2N^-$), hydrazinium nitrate and may further comprise a mixture such as a eutectic mixture further comprising at least one of $NH_4NO_3$, $NH_4$Tf, and $NH_4$TFAc. Other suitable solvents comprise acids such as phosphoric acid. Suitable ammonium compounds are ammonium or alkyl ammonium halides, and aromatic compounds such as imidazole, pyridine, pyrimidine, pyrazine, perchlorates, $PF_6^-$ , and other anions of the disclosure that are compatible with any component of the cell which is in contact with the solvent. Exemplary ambient temperature $H^+$ conducting molten salt electrolytes are 1-ethyl-3-methylimidazolium chloride-$AlCl_3$ and pyrrolidinium based protic ionic liquids.

Referring to FIGURE 1, in an embodiment of an exemplay cell [Na/BASE/NaOH], the molten salt comprising a mixture of product and reactants is regenerated in the cathode compartment 420 by supplying hydrogen through inlet 460 at a controlled pressure using hydrogen source and pump 430. The molten salt temperature is maintained by heater 411 such that a Na layer forms on top and is pumped to the anode compartment 402 by pump 440. In another embodiment also shown in FIGURE 1, the molten salt comprising a mixture of product and reactants is flowed into regeneration cell

412 from the cathode compartment 401 through channel 419 and through 416 and 418, each comprising at least one of a valve and a pump. Hydrogen is supplied and the pressure is controlled by hydrogen source and pump 413 connected to the regeneration cell 412 by a line 415 with the flow controlled by a control valve 414. The molten salt temperature is maintained with heater 411. The hydrogenation causes Na to form a separate layer that is pumped from the top of the regeneration cell 412 to the cathode chamber 402 through channel 421 through 422 and 423, each comprising at least one of a valve and a pump. In an embodiment such as one comprising a continuous cathode salt flow mode, the channel 419 extends below the Na layer to supply flowing salt from the cathode compartment to the lower layer comprising at least $Na_2O$ and NaOH. Any of the cathode or anode compartments, or regeneration cell may further comprise a stirrer to mix the contents at a desire time in the power or regeneration reactions.

In another embodiment of a cell comprising BASE electrolyte, the cathode is an alkali metal such as Na, and the molten salt cathode comprises a eutectic mixture such as one of those of TABLE 4 and a source of hydrogen such as a hydrogen permeable membrane and $H_2$ gas or a dissociator and $H_2$ gas. Exemplary cells are [Na/BASE/eutectic salt such as NaI-NaBr + $Ni(H_2)$ or $PdAl_2O_3$]. The hydrogen may react with Na in the cathode compartment to form NaH that may serve as a catalyst and source of H to form hydrinos.

The reactants may be continuously fed through the half cells to cause the hydrino reaction and may be further flowed or conveyed to another region, compartment, reactor, or system wherein the regeneration may occur in batch, intermittently, or continuously wherein the regenerating products may be stationary or moving.

Suitable oxidants are $WO_2(OH)$, $WO_2(OH)_2$, $VO(OH)$, $VO(OH)_2$, $VO(OH)_3$, $V_2O_2(OH)_2$, $V_2O_2(OH)_4$, $V_2O_2(OH)_6$, $V_2O_3(OH)_2$, $V_2O_3(OH)_4$, $V_2O_4(OH)_2$, FeO(OH), MnO(OH), $MnO(OH)_2$, $Mn_2O_3(OH)$, $Mn_2O_2(OH)_3$, $Mn_2O(OH)_5$, $MnO_3(OH)$, $MnO_2(OH)_3$, $MnO(OH)_5$, $Mn_2O_2(OH)_2$, $Mn_2O_6(OH)_2$, $Mn_2O_4(OH)_6$, NiO(OH), TiO(OH), $TiO(OH)_2$, $Ti_2O_3(OH)$, $Ti_2O_3(OH)_2$, $Ti_2O_2(OH)_3$, $Ti_2O_2(OH)_4$, NiO(OH), AlO(OH), ScO(OH), YO(OH), VO(OH), CrO(OH), MnO(OH) (tz -MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. In general, the oxidant may be $M_xO_yH_z$ wherein x, y, and z are integers and M is a metal such as a transition, inner transition, or rare earth metal such as metal oxyhydroxides.

Suitable exemplary molten hydride comprising mixtures are the eutectic mixtures of NaH-$KBH_4$ at about 43 + 57 mol % having the melt temperature is about 503 °C, KH-$KBH_4$ at about 66 + 34 mol % having the melt temperature is about 390 °C, NaH-$NaBH_4$ at about 21 + 79 mol % having the melt temperature is about 395 °C, $KBH_4$-$LiBH_4$ at about 53 + 47 mol % having the melt temperature is about 103 °C, $NaBH_4$-$LiBH_4$ at about 41.3 + 58.7 mol % having the melt temperature is about 213 °C, and $KBH_4$-$NaBH_4$ at about 31.8 + 68.2 mol % having the melt temperature is about 453 °C wherein the mixture may further comprise an alkali or alkaline earth hydride such as LiH, NaH, or KH. Other exemplary hydrides are $Mg(BH_4)_2$ (MP 260 °C) and $Ca(BH_4)_2$ (367 °C).

The H of the reactant may be bound to a metal such as a rare earth, transition, inner transition, alkali or alkaline earth metal. The H reactant may comprise a hydride. The hydride may be a metal hydride. In an exemplary reaction, H is extracted from a hydride such as a metal hydride to form $M^+$ $H^-$ wherein $M^+$ is a counterion such as that of an electrolyte, and $H^-$ migrates to the anode, is oxidized to H, and reacts with an acceptor such as those of the disclosure.

In an embodiment, the cathode product formed from the reduction of the migrating ion and any possible further reaction with a cathode reactant may be regenerated by non-electrolysis as well as electrolysis techniques. The product may be regenerated to the anode starting material by the methods of the present disclosure for reaction mixtures. For example, the product comprising the element(s) of the migrating ion may be physically or thermally separated and regenerated and returned to the anode. The separation may be by thermal decomposition of a hydride and the evaporation of the metal that is the reduced migrating ion. The cathode product of the migrating ion may also be separated and reacted with anode products to form the starting reactants. The hydride of the cathode reactants may be regenerated by adding hydrogen, or the hydride may be formed in a separate reaction chamber following separation of the corresponding cathode reaction products necessary to form the starting hydride. Similarly, any other cathode staring reactants may be regenerated by separation and chemical synthesis steps in situ or in a separate vessel to form the reactants.

In an embodiment of the CIHT cell, an alkali cation such as $Na^+$ may be the mobile ion. The mobile ion may be reduced at the cathode to form the catalyst or source of catalyst, such as NaH, K, Li, $Sr^+$, or BaH. The electrolyte may comprise $\beta$"-Alumina (beta prime-prime alumina) or beta alumina as well complexed with the corresponding mobile ion. Thus, the solid electrolyte may comprise $Al_2O_3$ complexed with at least one of $Na^+$, $K^+$, $Li^+$, $Sr^{2+}$, and $Ba^{2+}$ and may also be complexed with at least one of $H^+$, $Ag^+$, or $Pb^{2+}$. The electrolyte or salt bridge may be an ion impregnated glass such as $K^+$ glass. In an embodiment with $H^+$ as the mobile ion, $H^+$ is reduced to H at the cathode to serve as a source of atomic hydrogen for catalysis to hydrinos. In a general embodiment, the anode compartment comprises an alkali metal, the solid electrolyte comprises the corresponding migrating metal ion complexed to beta alumina, and the cathode compartment comprises a source of hydrogen such as a hydride or $H_2$. The migrating metal ion may be reduced to the metal at the cathode. The metal or a hydride formed from the metal may be the catalyst or source of catalyst. Hydrinos are formed by the reaction of the catalyst and hydrogen. The cell may be operated in a temperature range that provides a favorable conductivity. A suitable operating temperature range is 250 °C to 300 °C. Other exemplary sodium ion conducting salt bridges are NASICON ($Na_3Zr_2Si_2PO_{12}$) and $Na_xWO_3$. In other embodiments, another metal such as Li

or K may replace Na. In an embodiment, at least one of the cell components such as the, salt bridge, and cathode and anode reactants comprises a coating that is selectively permeable to a given species. An example is a zirconium oxide coating that is selectively permeable to $OH^-$. The reactants may comprise micro-particles encapsulated in such a coating such that they selectively react with the selectively permeable species. Lithium solid electrolytes or salt bridges may be halide stabilized $LiBH_4$ such as $LiBH_4$-LiX (X = halide), $Li^+$ impregnated $Al_2O_3$ (Li-$\beta$-alumina), $Li_2S$ based glasses, $Li_{0.29+d}La_{0.57}TiO_3$ (d =0 to 0.14), $La_{0.51}Li_{0.34}TiO_{2.94}$, $Li_9AlSiO_8$, $Li_{14}ZnGe_4O_{16}$ (LISICON), $Li_xM_{1-y}M'_yS_4$ (M = Si, Ge, and M' = P, Al, Zn, Ga, Sb)(thio-LISICON), $Li_{2.68}PO_{3.73}N_{0.14}$ (LIPON), $Li_5La_3Ta_2O_{12}$, $Li_{1.3}Al_{0.3}Ti_{1.7}(PO_4)_3$, $LiM_2(PO_4)_3$, $M^{IV}$ = Ge, Ti, Hf, and Zr, $Li_{1-x}Ti_2(PO_4)_3$ ($0 \leq x \leq 2$) $LiNbO_3$, lithium silicate, lithium aluminate, lithium aluminosilicate, solid polymer or gel, silicon dioxide ($SiO_2$), aluminum oxide ($Al_2O_3$), lithium oxide ($Li_2O$), $Li_3N$, $Li_3P$, gallium oxide ($Ga_2O_3$), phosphorous oxide ($P_2O_5$), silicon aluminum oxide, and solid solutions thereof and others known in the art.

The salt bridge may comprise an anion conducting membrane and/or an anion conductor. The salt bridgen may conduct a cation. The salt bridge may be formed of a zeolite or alumina such as one saturated with the cation of the catalyst such as sodium aluminate, a lanthanide boride (such as $MB_6$, where M is a lanthanide), or an alkaline earth boride (such as $MB_6$ where M is an alkaline earth). A reactant or cell component may be an oxide. The electrochemical species in an oxide may be oxide ions or protons. The salt bridge may conduct oxide ions. Typical examples of oxide conductors are yttria-stabilized zirconia (YSZ), gadolinia doped ceria (CGO), lanthanum gallate, and bismuth copper vanadium oxide such as $BiCuVO_x$). Some perovskite materials such as $La_{1-x}Sr_xCo_yO_{3-d}$ also show mixed oxide and electron conductivity. The salt bridge may conduct protons. Doped barium cerates and zirconates are good proton conductors or conductors of protonated oxide ions. The $H^+$ conductor may be a $SrCeO_3$-type proton conductors such as strontium cerium yttrium niobium oxide. $H_xWO_3$ is another suitable proton conductor. Nafion, similar membranes, and related compounds are also suitable proton conductors, and may further serve as cation conductors such as $Na^+$ or $Li^+$ conductors. The proton conductor may comprise a solid film of HCl-LiCl-KCl molten salt electrolyte on a metal mesh such as SS that may serve as a proton conductor salt bridge for a cell having an organic electrolyte. The cation electrolyte may undergo exchange with Nafion to form the corresponding ion conductor. The proton conductor may be an anhydrous polymer such as ionic liquid based composite membrane such as Nafion and ionic liquids such as 1-ethyl-3-methylimidazolium trifluoro-methanesulphonate and 1-ethyl-3-methylimidazolium tetrafluoroborate, or a polymer comprising proton donor and acceptor groups such as one having benzimidazole moieties such as poly-[(1-(4,4'-diphenylether)-5-oxybenzimidazole)-benzimidazole] that may also be blended with Nafion and further doped such as with inorganic electron-deficient compounds such as BN nanoparticles.

In other embodiments, one or more of a number of other ions known to those skilled in the Art may be mobile within solids such as $Li^+$, $Na^+$, $Ag^+$, $F^-$, $Cl^-$, and $N^{3-}$. Corresponding good electrolyte materials that use any of these ions are $Li_3N$, Na-$\beta$-$Al_2O_3$, AgI, $PbF_2$, and $SrCl_2$. Alkali salt-doped polyethylene oxide or similar polymers may serve as an electrolyte/separator for a migrating alkali metal ion such as $Li^+$. Additionally, the alkali and alkaline earth hydrides, halides, and mixtures, are good conductors of hydride ion $H^-$. Suitable mixtures comprise a eutectic molten salt. The salt bridge may comprise a hydride and may selectively conduct hydride ions. The hydride may be very thermally stable. Due to their high melting points and thermal decomposition temperatures, suitable hydrides are saline hydrides such as those of lithium, calcium, strontium, and barium, and metal hydrides such as those of rare earth metals such as Eu, Gd, and La. In the latter case, H or protons may diffuse through the metal with a conversion from or to $H^-$ at the surface. The salt bridge may be a hydride ion conducting solid-electrolyte such as $CaCl_2$-$CaH_2$. Suitable hydride ion-conducting solid electrolytes are $CaCl_2$-$CaH_2$ (5 to 7.5 mol%) and $CaCl_2$-LiCl-$CaH_2$.

A suitable salt bridge for $Li^+$, $Na^+$, and $K^+$, a source of the catalyst Li, NaH, and K, respectively, is beta alumina complexed with $Li^+$, $Na^+$, and $K^+$, respectively. The $Li^+$ salt bridge or solid electrolyte may be halide stabilized $LiBH_4$ such as $LiBH_4$-LiX (X = halide), $Li^+$ impregnated $Al_2O_3$ (Li-beta-alumina), $Li_2S$ based glasses, $Li_{0.29+d}La_{0.57}TiO_3$ (d =0 to 0.14), $La_{0.51}Li_{0.34}TiO_{2.94}$, $Li_9AlSiO_8$, $Li_{14}ZnGe_4O_{16}$ (LISICON), $Li_xM_{1-y}M'_yS_4$ (M = Si, Ge, and M' = P, Al, Zn, Ga, Sb)(thio-LISICON), $Li_{2.68}PO_{3.73}N_{0.14}$ (LIPON), $Li_5La_3Ta_2O_{12}$, $Li_{1.3}Al_{0.3}Ti_{1.7}(PO_4)_3$, $LiM_2(PO_4)_3$, $M^{1V}$ = Ge, Ti, Hf, and Zr, $Li_{1+x}Ti_2(PO_4)_3$ ($0 \leq x \leq 2$) $LiNbO_3$, lithium silicate, lithium aluminate, lithium aluminosilicate, solid polymer or gel, silicon dioxide ($SiO_2$), aluminum oxide ($Al_2O_3$), lithium oxide ($Li_2O$), $Li_3N$, $Li_3P$, gallium oxide ($Ga_2O_3$), phosphorous oxide ($P_2O_5$), silicon aluminum oxide, and solid solutions thereof and others known in the art. The conductivity may be enhanced with Li salts such as $Li_3PO_4$ or $Li_3BO_3$. Li glass may also serve as the $Li^+$ salt bridge. For example, Whatman GF/D borosilicate glass-fiber sheet saturated with a 1 M $LiPF_6$ electrolyte solution in 1:1 dimethyl carbonate (DMC)/ethylene carbonate (EC) also known as LP 30 or 1 M $LiPF_6$ in 1:1 diethyl carbonate (DEC)/ethylene carbonate (EC) also known as LP 40 may serve as the separator/electrolyte. Halide-stabilized $LiBH_4$ may serve as a fast $Li^+$ ion conductor even at room temperature. The halide may be LiF, LiCl, LiBr, or LiI. The separator may be a membrane such as a single or multilayer polyolefin or aramid. The membrane may provide a barrier between the anode and cathode and may further enable the exchange of lithium ions from one side of the cell to the other. A suitable membrane separator is polypropylene (PP), polyethylene (PE), or trilayer (PP/PE/PP) electrolytic membrane. A specific exemplary membrane is Celgard 2400 polypropylene membrane (Charlotte, NC) having a thickness of 25 $\mu$m and a porosity of 0.37. The electrolyte may be 1 M $LiPF_6$ electrolyte solution in 1:1 dimethyl carbonate (DMC)/ethylene carbonate (EC). Another suitable separator/electrolyte is Celgard 2300 and 1 M $LiPF_6$ electrolyte solution in 30:5:35:30 v/v EC-PC-EMC-DEC solvent. Other suitable solvents and electrolytes are lithium chelated borate anion electrolytes such as lithium [bis(oxalato)borate], dioxolane, tetahydrofuran derivatives, hexamethylphosphoramide (HMPA), dimethoxyethane (DME), 1,4-benzodioxane (BDO), tetrahydrofuran (THF), and lithium perchlorate in dioxolane such as 1,3-dioxolane. Other solvents known by those skilled in the Art that are appropriate for operation of a Li based anode are suitable. These solvents range from organic such as propylene carbonate to inorganic such as thionyl chloride and sulfur dioxide and typically have polar groups such as at least one of carbonyl, nitrile, sulfonyl, and ether groups. The solvent may further comprise an additive to increase the stability of the solvent or increase at least one of the extent and rate of the hydrino reaction.

In embodiments, organic carbonates and esters may comprise electrolyte solvents. Suitable solvents are ethylene carbonate (EC), propylene carbonate (PC), butylene carbonate (BC), $\gamma$-butyrolactone ($\gamma$BL), $\delta$-valerolactone ($\delta$VL), *N*-methylmorpholine-*N*-oxide (NMO), dimethyl carbonate (DMC), diethyl carbonate (DEC), ethyl methyl carbonate (EMC), ethyl acetate (EA), methyl butanoate (MB), and ethyl butanoate (EB). In embodiments, organic ethers may comprise electrolyte solvents. Suitable solvents are dimethoxymethane (DMM), 1,2-dimethoxyethane (DME), 1,2-diethoxyethane (DEE), tetrahydrofuran (THF), 2-methyl-tetrahydrofuran (2-Me-THF), 1,3-dioxolane (1,3-DL), 4-methyl-1,3-dioxolane (4-Me-1,3-DL), 2-methyl-1,3-dioxolane (2-Me-1,3-DL). Lithium salts may comprise electrolyte solutes. Suitable solutes are lithium tetrafluoroborate ($LiBF_4$), lithium hexafluorophosphate ($LiPF_6$), lithium hexafluoroarsenate ($LiAsF_6$), lithium percolate ($LiClO_4$), lithium triflate ($Li^+CF_3SO_3^-$), lithium imide ($Li^+[N(SO_2CF_3)_2]^-$), and lithium beti ($Li^+[N(SO_2CF_2CF_3)_2]^-$). In embodiments, performance-enhancing additives are added for bulk properties such as 12-crown-4, 15-crown-5, aza-ethers, borates, boranes, and boronates. In embodiments, the electrolyte may further comprise anode solid electrolyte interface (SEI) additives such as $CO_2$, $SO_2$, 12-crown-4, 18-crown-6, catechole carbonate (CC), vinylene carbonate (VC), ethylene sulfite (ES), $\alpha$-bromo-$\gamma$-butyrolactone, methyl choloroformate, 2-acetyloxy-4,4-dimethyl-4-butanolide, succinimide, *N*-benzyloxycarbonyloxysuccinimide, and methyl cinnamate. In embodiments, the electrolyte may further comprise cathode surface layer additives such as $I^-/I_2$, *n*-butylferrocene, 1,1'-dimethylferrocene, ferrocene derivatives, a salt such as a Na of *1,2,4*-triazole, a salt such as a Na of imidazole, 1,2,5,-tricyanobenzene (TCB), tetracyanoquinodimethane (TCNQ), substituted benzenes, pyrocarbonate, and cyclohexylbenzene. In embodiments, the electrolyte may further comprise novel nonaqueous solvents such as cyclic carbonates, $\gamma$BL, linear esters, fluorinated esters, fluorinated carbonates, fluorinated carbamates, fluorinated ethers, glycol borate ester (BEG), sulfones, and sulfamides. In embodiments, the electrolyte may further comprise novel lithium salts such as aromatic Li borates, non-aromatic Li borates, chelated Li phosphates, Li FAP, Li azolate, and Li imidazolide. In an embodiment, the hydrino product such as molecular hydrino is soluble in the solvent such as DMF. An exemplary cell is [Li/solvent comprising at

The cathode and anode may be an electrical conductor. The conductor may be the support and further comprise a lead for each of the cathode and anode that connects each to the load. The lead is also a conductor. A suitable conductor is a metal, carbon, carbide, or a boride. A suitable metal is a transition metal, stainless steel, noble metal, inner transition metal such as Ag, alkali metal, alkaline earth metal, Al, Ga, In, Sn, Pb, and Te.

The cell may further comprise a binder of the anode or cathode reactants. Suitable polymeric binders include, for example, poly(vinylidine fluoride), co-poly(vinylidine fluoride-hexafluoropropylene), polytetrafluoroethylene, poly(vinyl chloride), or poly(ethylene-propylene-diene monomer), EPDM. The electrodes may be suitable conductors such as nickel in contact with the half-cell reactants.

The cell may comprise a solid, molten, or liquid cell. The latter may comprise a solvent. The operating conditions may be controlled to achieve a desired state or property of at least one reactant or cell component such as those of the cathode cell reactants, anode cell reactants, the salt bridge, and cell compartments. Suitable states are solid, liquid, and gaseous, and suitable properties are the conductivity to ions and electrons, physical properties, miscibility, diffusion rate, and reactivity. In the case that one or more reactants are maintained in a molten state the temperature of the compartment may be controlled to be above the reactant melting point. The heat may be from the catalysis of hydrogen to hydrinos. Alternatively, the oxidant and/or reductant reactants are molten with heat supplied by the internal resistance of the fuel cell or by external heater 450 that may be an oven. In an embodiment, the CIHT cell is surrounded by insulation such that comprising as a double-walled evacuated jacket such as a sheet metal jacket filled with insulation for conductive and radiative heat loss that is known to those skilled in the art. The cell may further comprise a heat management system that provides start up and maintenance heat on demand to supplement any heat generated internally from the reactions such as hydrino producing reactions occurring during operation. Additionally, the systems may comprise a heat rejection system to remove excess heat if necessary. The heat rejection system may comprise one known in the art such as one comprising a heat exchanger and coolant circulator wherein the heat transfer may be by at least one of forced convention, radiation, and conduction. In an embodiment, the configuration is a thermodynamically efficient retainer of heat such as a right cylindrical stack that provides an optimal volume to surface area ratio to retain heat. In an embodiment, the reactants of at least one of the cathode and anode compartments are at least partially solvated by a solvent. Suitable solvents are those disclosed in the Organic Solvent section and Inorganic Solvent section. Suitable solvents that dissolve alkali metals are hexamethylphosphoramide ($OP(N(CH_3)_2)_3$, ammonia, amines, ethers, a complexing solvent, crown ethers, and cryptands and solvents such as ethers or an amide such as THF with the addition of a crown ether or cryptand.

The fuel cell may further comprise at least one hydrogen system 460, 461, 430, and 431 for measuring, delivering, and controlling the hydrogen to at least one compartment. The hydrogen system may comprise a pump, at least one value, one pressure gauge and reader, and control system for supplying hydrogen to at least one of the cathode and anode compartments. The hydrogen system may recycle hydrogen from one compartment to another. In an embodiment, the hydrogen system recycles $H_2$ gas from the anode compartment to the cathode compartment. The recycling may be active or passive. In the former case, $H_2$ may be pumped from the anode to the cathode compartment during operation, and in the latter case, $H_2$ may diffuse or flow from the anode to the cathode compartment due to a build up of pressure in the anode compartment during operation according to the reaction such as those of Eqs. (85-86).

The products may be regenerated in the cathode or anode compartments. The products may be sent to a regenerator wherein any of the regeneration chemistries of the present disclosure may be applied to regenerate the initial reactants. Cell undergoing the hydrino reaction may provide heat to those undergoing regeneration of the reactants.

The reactants of at least one half-cell may comprise a hydrogen storage material such as a metal hydride, a species of a M-N-H system such as $LiNH_2$, $Li_2NH$, or $Li_3N$, and a alkali metal hydride further comprising boron such as borohydrides or aluminum such as aluminohydides. Further suitable hydrogen storage materials are metal hydrides such as alkaline earth metal hydrides such as $MgH_2$, metal alloy hydrides such as $BaReH_9$, $LaNi_5H_6$, $FeTiH_{1.7}$, and $MgNiH_4$, metal borohydrides such as $Be(BH_4)_2$, $Mg(BH_4)_2$, $Ca(BH_4)_2$, $Zn(BH_4)_2$, $Sc(BH_4)_3$, $Ti(BH_4)_3$, $Mn(BH_4)_2$, $Zr(BH_4)_4$, $NaBH_4$, $LiBH_4$, $KBH_4$, and $Al(BH_4)_3$, $AlH_3$, $NaAlH_4$, $Na_3AlH_6$, $LiAlH_4$, $Li_3AlH_6$, LiH, $LaNi_5H_6$, $La_2Co_1Ni_9H_6$, and $TiFeH_2$, $NH_3BH_3$, polyaminoborane, amine borane complexes such as amine borane, boron hydride ammoniates, hydrazine-borane complexes, diborane diammoniate, borazine, and ammonium octahydrotriborates or tetrahydroborates, imidazolium ionic liquids such as alkyl(aryl)-3-methylimidazolium N-bis(trifluoromethanesulfonyl)imidate salts, phosphonium borate, and carbonite substances. Further exemplary compounds are ammonia borane, alkali ammonia borane such as lithium ammonia borane, and borane alkyl amine complex such as borane dimethylamine complex, borane trimethylamine complex, and amino boranes and borane amines such as aminodiborane, n-dimethylaminodiborane, tris(dimethylamino)borane, di-n-butylboronamine, dimethylaminoborane, trimethylaminoborane, ammonia-trimethylborane, and triethylaminoborane. Further suitable hydrogen storage materials are organic liquids with absorbed hydrogen such as carbazole and derivatives such as 9-(2-ethylhexyl)carbazole, 9-ethylcarbazole, 9-phenylcarbazole, 9-methylcarbazole, and 4,4'-bis(N-carbazolyl)-1,1'-biphenyl.

In an embodiment, at least one cell additionally comprises an electrolyte. The electrolyte may comprise a molten eutectic salt and may further comprise a hydride. The salt may comprise one or more halides of the same cation as that of the catalyst or are more stable compounds than the halide compound that may form from the reaction of the catalyst with the halide of the salt such as the mixture LiH with LiCl/KCl. Alternatively, the salt mixture comprises mixed halides of the same alkali metal as the catalyst metal since a halide-hydride exchange reaction with the catalyst hydride would result in no net reaction. The salt may be a hydride ion conductor. In addition to halides, other suitable molten salt electrolytes that may conduct hydride ions are hydroxides such as KH in KOH or NaH in NaOH, and metalorganic systems such as NaH in $NaAl(Et)_4$. The cell may be made of metals such as Al, stainless steel, Fe, Ni, Ta, or comprise a graphite, boron nitride, MgO, alumina, or quartz crucible.

The electrolyte may comprise a eutectic salt of two or more fluorides such as at least two compounds of the group of the alklali halides and alkaline earth halides. Exemplary salt mixtures include $LiF-MgF_2$, $NaF-MgF_2$, $KF-MgF_2$, and $NaF-CaF_2$. Other suitable solvents are organic chloro aluminate molten salts and systems based on metal borohydrides and metal aluminum hydrides. Additional suitable electrolytes that may be molten mixtures such as molten eutectic mixtures are given in TABLE 4.

TABLE 4. Molten Salt Electrolytes.

| | | | | |
|---|---|---|---|---|
| AlCl3-CaCl2 | AlCl3-CoCl2 | AlCl3-FeCl2 | AlCl3-KCl | AlCl3-LiCl |
| AlCl3-MgCl2 | AlCl3-MnCl2 | AlCl3-NaCl | AlCl3-NiCl2 | AlCl3-ZnCl2 |
| BaCl2-CaCl2 | BaCl2-CsCl | BaCl2-KCl | BaCl2-LiCl | BaCl2-MgCl2 |
| BaCl2-NaCl | BaCl2-RbCl | BaCl2-SrCl2 | CaCl2-CaF2 | CaCl2-CaO |
| CaCl2-CoCl2 | CaCl2-CsCl | CaCl2-FeCl2 | CaCl2-FeCl3 | CaCl2-KCl |
| CaCl2-LiCl | CaCl2-MgCl2 | CaCl2-MgF2 | CaCl2-MnCl2 | CaCl2-NaAlCl4 |
| CaCl2-NaCl | CaCl2-NiCl2 | CaC12-PbC12 | CaCl2-RbCl | CaCl2-SrCl2 |
| CaCl2-ZnCl2 | CaF2-KCaCl3 | CaF2-KF | CaF2-LiF | CaF2-MgF2 |
| CaF2-NaF | CeCl3-CsCl | CeCl3-KCl | CeCl3-LiCl | CeC13-NaCl |
| CeCl3-RbCl | CoCl2-FeCl2 | CoCl2-FeCl3 | CoCl2-KCl | CoCl2-LiCl |
| CoCl2-MgCl2 | CoCl2-MnCl2 | CoCl2-NaCl | CoCl2-NiCl2 | CsBr-CsCl |
| CsBr-CsF | CsBr-CsI | CsBr-CsNO3 | CsBr-KBr | CsBr-LiBr |
| CsBr-NaBr | CsBr-RbBr | CsCl-CsF | CsCl-CsI | CsCl-CsNO3 |

(continued)

| | | | | |
|---|---|---|---|---|
| CsCl-KCl | CsCl-LaCl3 | CsCl-LiCl | CsCl-MgCl2 | CsCl-NaCl |
| CsCl-RbCl | CsCl-SrCl2 | CsF-CsI | CsF-CsNO3 | CsF-KF |
| CsF-LiF | CsF-NaF | CsF-RbF | CsI-KI | CsI-LiI |
| CsI-NaI | CsI-RbI | CsNO3-CsOH | CsNO3-KNO3 | CsNO3-LiNO3 |
| CsNO3-NaNO3 | CsNO3-RbNO3 | CsOH-KOH | CsOH-LiOH | CsOH-NaOH |
| CsOH-RbOH | FeCl2-FeCl3 | FeCl2-KCl | FeCl2-LiCl | FeCl2-MgCl2 |
| FeCl2-MnCl2 | FeCl2-NaCl | FeCl2-NiCl2 | FeCl3-LiCl | FeCl3-MgCl2 |
| FeCl3-MnCl2 | FeCl3-NiCl2 | K2CO3-K2SO4 | K2CO3-KF | K2CO3-KNO3 |
| K2CO3-KOH | K2CO3-Li2CO3 | K2CO3-Na2CO3 | K2SO4-Li2SO4 | K2SO4-Na2SO4 |
| KAlCl4-NaAlCl4 | KAlCl4-NaCl | KBr-KCl | KBr-KF | KBr-KI |
| KBr-KNO3 | KBr-KOH | KBr-LiBr | KBr-NaBr | KBr-RbBr |
| KCl-K2CO3 | KCl-K2SO4 | KCl-KF | KCl-KI | KCl-KNO3 |
| KCl-KOH | KCl-LiCl | KCl-LiF | KCl-MgCl2 | KCl-MnCl2 |
| KCl-NaAlCl4 | KCl-NaCl | KCl-NiCl2 | KCl-PbCl2 | KCl-RbCl |
| KCl-SrCl2 | KCl-ZnCl2 | KF-K2SO4 | KF-KI | KF-KNO3 |
| KF-KOH | KF-LiF | KF-MgF2 | KF-NaF | KF-RbF |
| KFeCl3-NaCl | KI-KNO3 | KI-KOH | KI-LiI | KI-NaI |
| KI-RbI | KMgCl3-LiCl | KMgCl3-NaCl | KMnCl3-NaCl | KNO3-K2SO4 |
| KNO3-KOH | KNO3-LiNO3 | KNO3-NaNO3 | KNO3-RbNO3 | KOH-K2SO4 |
| KOH-LiOH | KOH-NaOH | KOH-RbOH | LaCl3-KCl | LaCl3-LiCl |
| LaCl3-NaCl | LaCl3-RbCl | Li2CO3-Li2SO4 | Li2CO3-LiF | Li2CO3-LiNO3 |
| Li2CO3-LiOH | Li2CO3-Na2CO3 | Li2SO4-Na2SO4 | LiAlCl4-NaAlCl4 | LiBr-LiCl |
| LiBr-LiF | LiBr-LiI | LiBr-LiNO3 | LiBr-LiOH | LiBr-NaBr |
| LiBr-RbBr | LiCl-Li2CO3 | LiCl-Li2SO4 | LiCl-LiF | LiCl-LiI |
| LiCl-LiNO3 | LiCl-LiOH | LiCl-MgCl2 | LiCl-MnCl2 | LiCl-NaCl |
| LiCl-NiCl2 | LiCl-RbCl | LiCl-SrCl2 | LiF-Li2SO4 | LiF-LiI |
| LiF-LiNO3 | LiF-LiOH | LiF-MgF2 | LiF-NaCl | LiF-NaF |
| LiF-RbF | LiI-LiOH | LiI-NaI | LiI-RbI | LiNO3-Li2SO4 |
| LiNO3-LiOH | LiNO3-NaNO3 | LiNO3-RbNO3 | LiOH-Li2SO4 | LiOH-NaOH |
| LiOH-RbOH | MgCl2-MgF2 | MgCl2-MgO | MgCl2-MnCl2 | MgCl2-NaCl |
| MgCl2-NiCl2 | MgCl2-RbCl | MgCl2-SrCl2 | MgCl2-ZnCl2 | MgF2-MgO |
| MgF2-NaF | MnCl2-NaCl | MnCl2-NiCl2 | Na2CO3-Na2SO4 | Na2CO3-NaF |
| Na2CO3-NaNO3 | Na2CO3-NaOH | NaBr-NaCl | NaBr-NaF | NaBr-NaI |
| NaBr-NaNO3 | NaBr-NaOH | NaBr-RbBr | NaCl-Na2CO3 | NaCl-Na2SO4 |
| NaCl-NaF | NaCl-NaI | NaCl-NaNO3 | NaCl-NaOH | NaCl-NiCl2 |
| NaCl-PbC12 | NaCl-RbCl | NaCl-SrCl2 | NaCl-ZnCl2 | NaF-Na2SO4 |
| NaF-NaI | NaF-NaNO3 | NaF-NaOH | NaF-RbF | NaI-NaNO3 |
| NaI-NaOH | NaI-RbI | NaNO3-Na2SO4 | NaNO3-NaOH | NaNO3-RbNO3 |
| NaOH-Na2SO4 | NaOH-RbOH | RbBr-RbCl | RbBr-RbF | RbBr-RbI |
| RbBr-RbNO3 | RbCl-RbF | RbCl-RbI | RbCl-RbOH | RbCl-SrCl2 |
| RbF-RbI | RbNO3-RbOH | CaCl2-CaH2 | | |

The molten salt electrolyte such as the exemplary salt mixtures given in TABLE 4 are $H^-$ ion conductors. In embodiments, it is implicit in the disclosure that a source of $H^-$ such as an alkali hydride such as LiH, NaH, or KH is added to the molten salt electrolyte to improve the $H^-$ ion conductivity. In other embodiments, the molten electrolyte may be an alkali metal ion conductor or a proton conductor. In other embodiments, the electrolyte comprises a hydroxide. The catalyst may be $H_2O$ that may be formed from the hydroxide.

In an exemplary embodiment, the concentration of LiCl-KCl is about 58.5 + 41.2 mol%, the melt temperature is about 450 °C, and the LiH concentration is about 0.1 mol% or lower. In other embodiments, the LiH concentration may be any desirable mole percent to the saturation limit of about 8.5%. In another exemplary embodiment, the electrolyte may comprise LiH + LiF + KF or NaF and optionally a support such as TiC. Other suitable electrolytes are mixtures of alkali hydrides and alkali and alkaline earth borohydrides wherein the cell reaction may be a metal exchange. Suitable

mixtures are the eutectic mixtures of NaH-$KBH_4$ at about 43 + 57 mol % having the melt temperature is about 503 °C, KH-$KBH_4$ at about 66 + 34 mol % having the melt temperature is about 390 °C, NaH-$NaBH_4$ at about 21 + 79 mol % having the melt temperature is about 395 °C, $KBH_4$ -$LiBH_4$ at about 53 + 47 mol % having the melt temperature is about 103 °C, $NaBH_4$ -$LiBH_4$ at about 41.3 + 58.7 mol % having the melt temperature is about 213 °C, and $KBH_4$ -$NaBH_4$ at about 31.8 + 68.2 mol % having the melt temperature is about 453 °C wherein the mixture may further comprise an alkali or alkaline earth hydride such as LiH, NaH, or KH. A suitable concentration of the hydride is 0.001 to 10 mol %.

The reaction mixture may comprise (1) a catalyst or a source of catalyst and a source of hydrogen such as one of LiH, NaH, KH, RbH, CsH, BaH, and at least one H, (2) a eutectic salt mixture that may serve as an electrolyte that may have a high ion conductivity and may selectively allow hydride ion to pass comprising at least two cations from the group of Li, Na, K, Rb, Cs, Mg, Ca, Sr, and Ba and at least one halide from the group of F, Cl, Br, and I, (3) a support that may be electrically conductive such as carbide such as TiC, and (4) optionally a reductant and hydride exchange reactant such as an alkaline earth metal or alkaline earth hydride.

Exemplary CIHT cells comprise a (i) reductant or a source of reductant, such as an element or compound comprising an element from the list of aluminum, antimony, barium, bismuth, boron, cadmium, calcium, carbon (graphite), cerium, cesium, chromium, cobalt, copper, dysprosium, erbium, europium, gadolinium, gallium, germanium, gold, hafnium, holmium, indium, iridium, iron, lanthanum, lead, lithium, lutetium, magnesium, manganese, mercury, molybdenum, neodymium, nickel, niobium, osmium, palladium, phosphorous, platinum, potassium, praseodymium, promethium, protactinium, rhenium, rhodium, rubidium, ruthenium, samarium, scandium, selenium, silicon, silver, sodium, strontium, sulfur, tantalum, technetium, tellurium, terbium, thulium, tin, titanium, tungsten, vanadium, ytterbium, yttrium, zinc, and zirconium; (ii) an electrolyte such as one of those given in TABLE 4, (iii) an oxidant such as the compounds given in TABLE 4, (iv) conducting electrodes such as metals, metal carbides such as TiC, metal borides such as $TiB_2$ and $MgB_2$, metal nitrides such as titanium nitride, and those elements or materials comprising elements from the list of aluminum, antimony, barium, bismuth, boron, cadmium, calcium, carbon (graphite), cerium, cesium, chromium, cobalt, copper, dysprosium, erbium, europium, gadolinium, gallium, germanium, gold, hafnium, holmium, indium, iridium, iron, lanthanum, lead, lithium, lutetium, magnesium, manganese, mercury, molybdenum, neodymium, nickel, niobium, osmium, palladium, phosphorous, platinum, potassium, praseodymium, promethium, protactinium, rhenium, rhodium, rubidium, ruthenium, samarium, scandium, selenium, silicon, silver, sodium, strontium, sulfur, tantalum, technetium, tellurium, terbium, thulium, tin, titanium, tungsten, vanadium, ytterbium, yttrium, zinc, and zirconium. The metals may be from the list of aluminum, antimony, barium, bismuth, cadmium, calcium, cerium, cesium, chromium, cobalt, copper, dysprosium, erbium, europium, gadolinium, gallium, germanium, gold, hafnium, holmium, indium, iridium, iron, lanthanum, lead, lithium, lutetium, magnesium, manganese, mercury, molybdenum, neodymium, nickel, niobium, osmium, palladium, platinum, potassium, praseodymium, promethium, protactinium, rhenium, rhodium, rubidium, ruthenium, samarium, scandium, selenium, silicon, silver, sodium, strontium, tantalum, technetium, tellurium, terbium, thulium, tin, titanium, tungsten, vanadium, ytterbium, yttrium, zinc, and zirconium, and (v) hydrogen or a source of hydrogen such as a hydride such as an alkali or alkaline earth hydride, and a source of catalyst or source of catalyst such as Li, NaH, K, $Rb^+$, Cs, nH, and $H_2O$, and at least one H. In an embodiment, the cell further comprises a system to regenerate the reactants or cell chemicals to species and concentrations that restore the cell to a state that the reactions to form hydrino reactants and then hydrinos occur at a faster rate than before regeneration. In an embodiment, the regeneration system comprises an electrolysis system.

The cell further comprises a current collector for the anode and cathode wherein the current collectors may comprise solid foils or mesh materials. Suitable uncoated current collector materials for the anode half-cell may be selected from the group of stainless steel, Ni, Ni-Cr alloys, Al, Ti, Cu, Pb and Pb alloys, refractory metals and noble metals. Suitable uncoated current collector materials for the cathode half-cell may be selected from the group of stainless steel, Ni, Ni-Cr alloys, Ti, Pb-oxides ($PbO_x$), and noble metals. Alternatively, the current collector may comprise a suitable metal foil such as Al, with a thin passivation layer that will not corrode and will protect the foil onto which it is deposited. Exemplary corrosion resistant layers that may be used in either half-cell are TiN, CrN, C, CN, NiZr, NiCr, Mo, Ti, Ta, Pt, Pd, Zr, W, FeN, and CoN. In an embodiment, the cathode current collector comprises Al foil coated with TiN, FeN, C, CN. The coating may be accomplished by any method known in the Art. Exemplary methods are physical vapor deposition such as sputtering, chemical vapor deposition, electrodeposition, spray deposition, and lamination.

The source of II may be a metal hydride, comprising at least one of a cathode reactant and an anode reactant. The hydride may be an electrical conductor. Exemplary electrically conductive hydrides are titanium hydride and lanthanum hydride. Other suitable hydrides are rare earth hydrides such as those of La, Ce, Eu, and Gd, yttrium hydride, and zirconium hydride. Additional suitable exemplary hydrides demonstrating high electrical conductivity are one or more of the group of $CeH_2$, $DyH_2$, $ErH_2$, $GdH_2$, $HoH_2$, $LaH_2$, $LuH_2$, $NdH_2$, $PrH_2$, $ScH_2$, $TbH_2$, $TmH_2$, and $YH_2$. Other suitable electrically conductive hydrides are $TiH_2$, VH, $VH_{1.6}$, $LaNi_5H_6$, $La_2CO_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, CrH, $CrH_2$, NiH, CuH, $YH_2$, $YH_3$, $ZrH_2$, NbH, $NbH_2$, $PdH_{0.7}$, $LaH_2$, $LaH_3$, TaH, the lanthanide hydrides: $MH_2$ (fluorite) M = Ce, Pr, Nb, Sm, Gd, Tb, Dy, Ho, Er, Tm, Lu; $MH_3$ (cubic) M = Ce, Pr, Nd, Yb; $MH_3$ (hexagonal) M = Sm, Gd, Tb, Dy, Ho, Er, Tm, Lu; actinide hydrides: $MH_2$ (fluorite) M = Th, Np, Pu, Am; $MH_3$ (hexagonal) M = Np,

Pu, Am, and $MH_3$ (cubic, complex structure) M = Pa, U.

The half-cell reactants may further comprise a support of any kind or an electrically conductive support such as a carbide such as TiC, a boride such as $TiB_2$ or $MgB_2$, a carbon, or other support such as TiCN. Other suitable supports are cellulose, carbon fiber, Nafion, a cation or anion exchange resin, molecular sieve such as 4A or 13X, or a conducting polymer such a polyaniline, polythiophene, polyacetylene, polypyrrole, polyvinylferrocene, polyvinylnickelocene, or polyvinylcobaltocene, carbon nanotubes, fullerene, or similar cage or cavity compounds such as zeolites, and Pt/nanoTi, $Pt/Al_2O_3$, zeolite, Y zeolite, HY zeolite, and $Ni\text{-}Al_2O_3\text{-}SiO_2$ that may be mixed with a conductor such as carbon or doped with a conductor. Steam or activated carbon having some hydrophilic functionalities may also serve as a support.

In addition adding amide, imide, and nitride compounds to the electrolyte, the activity of reactant or species may be changed by adding at least one compound of the group of phosphides, borides, oxides, hydroxide, silicides, nitrides, arsenides, selenides, tellurides, antimonides, carbides, sulfides, and hydrides compounds. In an embodiment, the activity of the species such as Li or LiH or other source of catalyst or catalyst such as K, KH, Na, and NaH is controlled by using a buffer involving an anion that may bind to the species. The buffer may comprise a counter ion. The counter ion may be at least one of the group of halides, oxides, phosphides, borides, hydroxides, silicides, nitrides, arsenides, selenides, tellurides, antimonides, carbides, sulfides, hydrides, carbonate, hydrogen carbonate, sulfates, hydrogen sulfates, phosphates, hydrogen phosphates, dihydrogen phosphates, nitrates, nitrites, permanganates, chlorates, perchlorates, chlorites, perchlorites, hypochlorites, bromates, perbromates, bromites, perbromites, iodates, periodates, iodites, periodites, chromates, dichromates, tellurates, selenates, arsenates, silicates, borates, cobalt oxides, tellurium oxides, and other oxyanions such as those of halogens, P, B, Si, N, As, S, Te, Sb, C, S, P, Mn, Cr, Co, and Te. At least one CIHT half-cell compartment may contain a compound of the counter ion, the cell may comprise a salt bridge, and the salt bridge may selective to the counter ion.

The electrolyte may comprise additionally a metal or hydride such as an alkali or alkaline earth metal or hydride. A suitable alkaline earth metal and hydride is Mg and $MgH_2$, respectively. At least one electrode may comprise a support such as TiC, $YC_2$, $Ti_3SiC_2$, and WC, and the half cell may further comprise a catalyst such as K, NaH, or may be Li from migration of $Li^+$, a reductant such a Mg or Ca, a support such as TiC, $YC_2$, $Ti_3SiC_2$, or WC, an oxidant such as LiCl, $SrBr_2$, $SrCl_2$, or $BaCl_2$, and a source of H such as a hydride such as R-Ni, $TiH_2$, $MgH_2$, NaH, KH, or LiH. Hydrogen may permeate through the wall of the half-cell compartment to form the catalyst or serve as the source of H. The source of permeating H may be from the oxidation of $H^-$.

The half-cell compartments may be isolated and connected by an electrically insulating separator. The separator may also serve as a support for the salt bridge. The salt bridge may comprise a molten salt supported by the separator. The separator may be MgO or BN fiber. The latter may be as a woven fabric or nonwoven felt. In an embodiment, the catalyst or source of catalyst and source of hydrogen such as NaH or KH is substantially insoluble in the salt bridge. Each half-cell reactant mixture may be pressed into a plaque and attached to the current collector of the anode and cathode. The plaque may be secured with at least one perforated sheet such as a metal sheet. Alternatively, the separator may be permeable to H wherein $H^-$ reacts to form H at the cathode half-cell interface, H passes through the separator and forms $H^-$ at the anode half-cell interface. Suitable separators that transport $H^-$ by forming H are refractory base metals such as V, Nb, Fe, Fe-Mo alloy, W, Rh, Ni, Zr, Be, Ta, Rh, Ti, Th, and rare earths as well as noble metals and alloys such as Pd and Pd/Ag alloy. The metal comprising a H membrane may be biased to increase the activity of $H^-$/H conversion at the interfaces. The activity may also be increased by using a concentration gradient.

The reactants may comprise at least one support that may also serve as a hydrogen dissociator. The support may comprise carbon, carbide, or a boride. Suitable carbon, carbides and borides are carbon black, TiC, $Ti_3SiC_2$, TiCN, SiC, $YC_2$, TaC, $Mo_2C$, WC, C, HfC, $Cr_3C_2$, ZrC, VC, NbC, $B_4C$, $CrB_2$, $ZrB_2$, $GdB_2$, $MgB_2$, and $TiB_2$. Suitable supports that may also serve as hydrogen dissociators are Pd/C, Pt/C Pd/MgO, $Pd/Al_2O_3$, Pt/MgO, and $Pt/Al_2O_3$.

The half-cell compartments may be isolated and connected by an electrically insulating separator that may also serve as a support for the salt bridge. The salt bridge may comprise a molten salt supported by the separator. The separator may be MgO or BN fiber. The latter may be as a woven fabric or nonwoven felt.

In another embodiment, the anode or cathode half-cell comprises a source of H or $H^-$such as a hydrogen permeable cathode and a source of hydrogen such as a $Ti(H_2)$, $Nb(H_2)$, or $V(H_2)$ cathode (($H_2$) designates a source of hydrogen such as hydrogen gas that permeates through the electrode to contact the electrolyte) or hydride such as at least one of an alkaline or alkaline earth hydride, a transition metal hydride such as Ti hydride, an inner transition metal hydride such as Nb, Zr, or Ta hydride, palladium or platinum hydride, and a rare earth hydride.

The cell may be at least one of electrolyzed and discharged intermittently. The electrolysis cathode and anode may be CIHT cell anode and cathode where the roles are reversed in switching from CIHT to electrolysis cell and back again after the cell is regenerated. The reverse voltage may be applied as a pulse. The pulsed reverse polarity and waveform may be in any frequency range, peak voltage, peak power, peak current, duty cycle, and offset voltage. The pulsed reversal may be DC, or the applied voltage may have be alternating or have a waveform. The application may be pulsed at a desired frequency and the waveform may have a desired frequency. Suitable pulsed frequencies are within the range of about 1 to about 1000 Hz and the duty cycle may be about 0.001% to about 95% but may be within

narrower ranges of factor of two increments within this range. In an embodiment, the cell is maintained at an optimal run high frequency to minimize the input energy to make a monolayer of H that reacts to hydrinos during the discharge phase. The peak voltage per cell may be within the range of at least one of about 0.1 V to 10 V, but may be within narrower ranges of a factor of two increments within this range. In another, embodiment a high voltage pulse is applied that may in the range of about 10 V to 100 kV per cell, but may be within narrower ranges of order magnitude increments within this range. The waveform may have a frequency within the range of at least one of about 0.1 Hz to about 100 MHz, about 100 MHz to 10 GHz, and about 10 GHz to 100 GHz, but may be within narrower ranges of order magnitude increments within this range. The duty cycle may be at least one of the range of about 0.001% to about 95%, and about 0.1% to about 10%, but may be within narrower ranges of order magnitude increments within this range. The peak power density of the pulses may be in the range of about 0.001 W/$cm^2$ to 1000 W/ $cm^2$ but may be within narrower ranges of order magnitude increments within this range. The average power density of the pulses may be in the range of about 0.0001 W/$cm^2$ to 100 W/ $cm^2$, but may be within narrower ranges of order magnitude increments within this range. In an embodiment, the intermittent charge-discharge frequency may be increased to decrease the charge-transfer resistance.

In an embodiment, reactants that may be short lived are generated during electrolysis that result in the formation of hydrinos and corresponding electrical power during the CIHT cell discharge phase of a repeated cycle of charge and discharge. The electrolysis power may be applied to optimize the energy from the formation of hydrinos relative to the input energy. The electrolysis conditions of voltage, waveform, duty cell, frequency and other such parameters may be adjusted to increase the electrical energy gain from the cell.

In embodiments, the half-cell reactants are regenerated. The regeneration may be in batch mode by means such as electrolysis of products to reactants or by the thermal reaction of products to reactants. Alternatively, the system may regenerate spontaneously in batch-mode or continuously. The reaction to form the hydrino reactants occurs by the flow of electrons and ions involving the corresponding reactants that undergo oxidation in the anode half-cell and reduction in the cathode half-cell. In an embodiment, the overall reaction to form the hydrino reactants is not thermodynamically favorable. For example, it has a positive free energy, and the reaction in the reverse direction is spontaneous or can be made spontaneous by changing the reaction conditions. Then, the forward direction of the reaction is driven by the large energy release in forming hydrinos in a manner that may be a concerted reaction. Since the reaction to form hydrinos is not reversible, the products may spontaneously convert to the reactants after hydrinos have been formed. Or, one or more reaction conditions such a temperature, hydrogen pressure, or concentration of one or more reactants or products is changed to regenerate the initial reactants of the cell.

In an embodiment, the hydrino hydride inhibits the reaction, and regeneration is achieved by reacting the hydride to form molecular hydrino that may be vented from the cell. The hydride may be present on at least one of the cathode and anode, and in the electrolyte. The reaction of hydride to molecular hydrino may be achieved by electrolysis. The electrolysis may have a polarity opposite that of the CIHT cell operation. The electrolysis may form protons or H that reacts with hydrino hydride to form molecular hydrino. The reaction may occur at the electrolysis anode. In an embodiment, the hydrino hydride ion has a high mobility such that it migrates to the anode and reacts with $H^+$ or H to form molecular hydrino.

In an embodiment, the half-cell reactants are selected such that the energy in the redox reactions better matches the integer multiple of about 27.2 eV energy transfer between the H atom and the catalyst to increase the reaction rate to form hydrinos. The energy in the redox reactions may provide activation energy to increase the rate of reaction to form hydrinos. In an embodiment, the electrical load to the cell is adjusted to match the redox reactions coupled through the flow of electricity and ions to the integer multiple of about 27.2 eV energy transfer between the H atom and the catalyst to increase the reaction rate to form hydrinos.

In a double-membrane three-compartment cell shown in FIGURE 2, the salt bridge may comprise an ion-conducting electrolyte 471 in a compartment 470 between the anode 472 and cathode 473. The electrodes are held apart and may be sealed to the inner vessel wall so that the vessel wall and electrodes form the chamber 470 for the electrolyte 471. The electrodes are electrically insulated from the vessel so that they are isolated from each other. Any other conductors that may electrically short the electrodes must also be electrically insulated from the vessel to avoid the shorting. The anode and cathode may comprise a metal that has a high permeability to hydrogen. The electrode may comprise a geometry that provides a higher surface area such as a tube electrode, or it may comprise a porous electrode. Hydrogen from the cathode compartment 474 may diffuse through the cathode and undergo reduction to $H^-$ at the interface of the cathode and salt bridge electrolyte 471. The $H^-$ migrates through the electrolyte and is oxidized to H at the electrolyte-anode interface. The H diffuses through the anode and reacts with the catalyst in the anode compartment 475 to form hydrinos. The $H^-$ and catalyst ionization provides the reduction current at the cathode that is carried in the external circuit 476. The H permeable electrodes may comprise V, Nb, Fe, Fe-Mo alloy, W, Mo, Rh, Ni, Zr, Be, Ta, Rh, Ti, Th, Pd, Pd-coated Ag, Pd-coated V, Pd-coated Ti, rare earths, other refractory metals, and others such metals known to those skilled in the Art. The electrodes may be metal foils. The chemicals may be regenerated thermally by heating any hydride formed in the anode compartment to thermally decompose it. The hydrogen may be

flowed or pumped to the cathode compartment to regenerate the initial cathode reactants. The regeneration reactions may occur in the anode and cathode compartments, or the chemicals in one or both of the compartments may be transported to one or more reaction vessels to perform the regeneration.

In an embodiment shown in FIGURE 2, the electrolyte 471comprises a molten hydroxide such as an alkali hydroxide such as at least one of LiOH and NaOH and may further comprise another salt such as an alkali halide. The cell shown in FIGURE 2 may comprise one unit of a stack of such cells. The orientation with respect to the Earth may be as shown in FIGURE 2 with the anode 472 on the bottom and horizontal to the Earth's surface. The anode may comprise a hydrogen permeable material such as Ni that is resistant to corrosion by hydroxide. The cathode 473 may be partially immersed or immersed in the electrolyte 471. In an embodiment, the anode may comprise a metal or alloy that is stable in base and has a higher permeation rate at lower temperature such as NiV, PdAg, or Ni-coated H permeable metals such as V, Nb, Ti, stainless steel (SS) 430, and Ta, such that the cell operating temperature may be lowered. The hydrogen may be supplied to each cell of the stack from a manifold through a hydrogen supply tube. In an embodiment wherein the permeation electrode is replaced by hydrogen bubbling or sparging electrode, the hydrogen supply further comprises the hydrogen manifold and may further comprise a hydrogen diffuser to ideally evenly distribute hydrogen over each bubbling or sparging electrode of a stack of cells. In an embodiment, the cathode is permeable to a source of oxygen such as $O_2$ gas or air. The cathode may comprise porous mat, foam, sintered metal powder that may be Ni. An inert spacer may separate the cathode from the anode. In an embodiment, $Al_2O_3$ beads may serve as an exemplary spacer with a thin electrolyte layer between the electrodes. The chamber 474 may comprise a gas gap for the source of oxygen such as $O_2$ gas or air. The gas gap 474 may further comprise a structural support to hold the next contiguous layer of the stack of a plurality of cells that is mounted on the support. The cells may be electrically connected in series or in parallel. In another embodiment, the anode of a unit cell of a stack comprises a chamber having a hydrogen-permeable membrane comprising one wall that faces the electrolyte wherein the chamber has a hydrogen supply such as a hydrogen line to the chamber. The unit cell further comprises an opposing cathode that may be a high-surface area conducting material that may be open such that it is permeable to cathode gas such as air. A suitable exemplary material is fibrous, filamentous, or sintered porous metal such as nickel mat. The next unit cell may be stacked with the conducting wall of the anode chamber that opposes the hydrogen permeable membrane in contact with the cathode of the preceding unit cell. The stack may be heated by heaters such as plates at the end of each stack or interspersed in the stack. Alternatively, the stack may be heated in an oven. The stack may be contained in an insulated chamber.

In an embodiment, the hydrogen permeation electrode, and optionally the oxygen electrode, is replaced by an element of a bipolar plate 507 as shown in FIGURE 3. The cell design may be based on a planar square geometrical configuration wherein the cells may be stacked to build voltage. Each cell may form a repeating unit comprising an anode current collector, porous anode, electrolyte matrix, porous cathode, and cathode current collector. One cell may be separated from the next by a separator that may comprise a bipolar plate that serves as both the gas separator and series current collector. The plate may have a cross-flow gas configuration or internal manifolding. As shown in FIGURE 3, interconnections or bipolar plates 507 separate the anode 501 from the adjacent cathode 502 in a CIHT cell stack 500 comprising a plurality of individual CIHT cells. The anode or $H_2$ plate 504 may be corrugated or comprise channels 505 that distribute hydrogen supplied through ports 503. The plate 504 with channels 505 substitutes for the hydrogen permeable membrane or intermittent electrolysis cathode (discharge anode) of other embodiments. The ports may receive hydrogen from a manifold along the ports 503 that are in turn is supplied by a hydrogen source such as a tank. The plate 504 may further ideally evenly distribute hydrogen to bubble or sparge into active areas wherein electrochemical reactions occur. The bipolar plate may further comprise an oxygen plate of the bipolar plate having a similar structure as that of the $H_2$ plate to distribute oxygen to active areas wherein an oxygen manifold supplies oxygen from a supply along oxygen ports 506. These corrugated or channeled plates are electrically conducting and are connected with anode and cathode current collectors in the active areas and maintain electrical contact. In an embodiment, all the interconnection or bipolar plates constitute the gas distribution network allowing separation of anodic and cathodic gasses. Wet seals may be formed by extension of the electrolyte/matrix such as LiOH-LiBr/$Li_2TiO_3$ tile pressed between two individual plates. The seals may prevent leakage of the reactant gases. The electrolyte may comprise a pressed pellet of the disclosure. The pressure to form an electrolyte pellet such as one comprising a hydroxide such as an alkali hydroxide such as LiOH and a halide such an alkali halide such as LiBr and a matrix such as MgO is in the range of about 1 to 500 tons per square inch. The stack may further comprise tie rods that hold pressure plates at the ends of the stack to apply pressure to the cells to maintain a desire contact between the electrolyte such as a pellet electrolyte and the electrodes.

In an embodiment, the metals of the electrodes of opposite sides of the bipolar plate are different such as Ni on one side and NiO on the other, wherein NiO may be on both sides with one side having a greater weight percentage. Alternatively, one side may be one metal and the other side another metal such as Ni versus 242 alloy or Mo. The different metals may alternate throughout the stack. In another embodiment, the dipolar plate may comprise an electrically conductive separator between the anode and cathode. The separator may comprise a different material such as a different metal than that of at least one of the cathode and anode. The separator and at least one electrode may comprise

a bimetallic electrode. The bimetallic may comprise a bimetallic junction. The bimetallic may comprise at least one conductor such as a metal or alloy electroplated on at least one other conductor such as a second metal or alloy. At least one of the bimetallic electrode or junction may result in an intrinsic voltage that causes the hydrino reaction rate to increase. In an embodiment, the bimetallic comprises two conductors such as a metal such as Ni and an oxide such as the oxide of the metal that may further comprise a compound such as an alkali metal oxide. A suitable exemplary alkali metal oxide is lithiated nickel oxide. The increase may be due to a better energy match of the catalyst and H to permit a hydrino transition. In another embodiment, the electrolytes on opposite sides of the bipolar plate are different. The electrolyte difference may comprise at least one of a different composition having at least one different constituent and the concentrations of the same constituents of the electrolyte may be different. For example, the electrolyte may comprise a matrix such as MgO on one side and $LiAlO_2$ on the other. Alternatively, the electrolyte may comprise LiOH-LiBr on one side and LiOH-LiCl on the other. Additionally, one side may comprise some weight percentage of NaOH. In an embodiment, the difference between one side of the electrode and the other causes the chemical potential, Fermi level, or voltage of the electrode for each half-cell to differ from that of the respective electrolyte. In another embodiment, a separating medium or spacer such as a non-conducting material or insulator separates the opposite sides of the bipolar plate such that the chemical potential, Fermi level, or voltage of the side of the electrode contacting the electrolyte is different from that contacting the separating medium. In an embodiment, the difference in chemical potential, Fermi level, or voltage facilitates the catalysis of hydrogen to form hydrinos. In an embodiment, at least one of different electrode metals, bimetallic junctions, electrolytes, matrices, and conditions such as hydration and temperature are alternated throughout the stack. In an embodiment, the cathode is a different material such as a different metal than that of the anode. The different material of the cathode relative to that of the anode may replace the requirement for a bimetallic anode of the bipolar plate. In an embodiment, the bimetallic nature of the bipolar plate to distinguish the anode and cathode is satisfied by using a single layer anode with a different cathode material such as a different metal. Suitable exemplary cathodes comprise one of those of the disclosure.

In another embodiment, at least one electrode comprises multiple layers comprising at least two different materials. The electrodes may comprise laminates of different materials. Inner layers may change the electrode potential of the outer layers in contact with the electrolyte or having an increased contact with the electrolyte. The outer layers may be selected to be resistant to corrosion. Suitable stable materials for outer layers are Ni, noble metals, and corrosion resistant alloys such as those of the disclosure. Suitable materials for the inner layer or layers to change the electrode potential are Mo and H242 as well as a transition metal such as V, Cr, Ti, Mn, Co, Cu, or Zn, an inner transition metal such as Zr, Ag, Cd, Hf, Ta, W, a rare earth metal such as La, or alloy such as LaNi;, or other metal or metalloid or alloy such as Al, Sn, In, ad Pb, and other alloys such as MoCo, MoCu, MoMn, MoNi, and MoCr. The electrode may serve as the anode or cathode. Exemplary multi-layer, multi-metallic electrodes, or laminated electrodes that may serve as the anode are Ni/Mo/Ni pressed, Ni/H242/Ni pressed, and Ni/H242/Mo/Ni pressed. In an embodiment, the electrode may be a molten salt such as a mixture of hydroxide and halide salts such as alkali ones such as those of the disclosure such as LiOH-LiBr or an aqueous electrolyte such as a hydroxide or carbonate electrolyte or others of the disclosure.

Structures, materials, and methods may be adapted from those of molten carbonate or alkaline fuel cells known to those skilled in the art. Exemplary suitable structures, materials, and methods follow. The separator or current collector may be Ni or Cu coated stainless steel such as 310S/316L. The current collector may be perforated. The coating and be about 50 micron, but other thickness are suitable such a 1 micron to 1 mm. Other exemplary suitable materials are iron-base alloys such as 304L, 309S, 310S, 314, 316L, 347, 405, 430, 446, 17-4PH 18-18$^+$, 18SR, A118-2, A126-1S, A129-4, A1439, Glass Seal 27, Ferralium 255, RA253mA, Nitronic 50, 20Cb3, 330, Crutemp-25, Crutemp-25 + La, Sanicro-33, 310 + Ce, IN800, IN840, A-286, and nickel, cobalt-base alloys such as IN600, IN601, IN671, IN690, IN706, IN718, IN825, IN925, MA956, RA333, Ni200, Ni201, Ni270, Haynes 230, Haynes 625, Haynes 188, Haynes 556, Nichrome, Monel 400, and aluminum-containing alloys such as GE-2541, FeCrAl + Hf, Haynes 214, FeCr alloy, IJR (406), 85H, Kanthal AF, and $Ni_3Al$. A suitable coating method is cladding, but other methods may be used such as electrolytic Ni plating such as from a sulfamate bath, or electroless Ni plating. At least one electrode may comprise one or more of these materials such as specially steels and alloys such as corrosion resistant alloys. The anode may be a hydrogen storage material such as those of the disclosure such as a mischmetal such as M1: La-rich mischmetal such as $MlNi_{3.65}Al_{0.3}Mn_{0.3}$ or $M1(NiCoMnCu)_5$, Ni, R-Ni, R-Ni + about 8 wt% Vulcan XC-72, $LaNi_5$, Cu, or Ni-Al, Ni-Cr such as about 10% Cr, Ce-Ni-Cr such as about 3/90/7 wt%, Cu-Al, or Cu-Ni-Al alloy. The anode may be doped with oxides such as MnO, $CeO_2$, and $LiFeO_2$ or comprise these or other oxides. The cathode may be NiO and may be doped with $LiFeO_2$, $Li_2MnO_3$, or $LiCoO_2$. The matrix may comprise an inert material such as a ceramic. The matrix material may comprise a compound comprising a species that may migrate to facilitate ion transport. Suitable exemplary matrix materials are oxyanion compounds such as aluminate, tungstate, zirconate, titanate, as well as others of the disclosure such as sulfate, phosphate, carbonate, nitrate, chromate, and manganate, oxides, nitrides, borides, chalcogenides, silicides, phosphides, and carbides. The matrix material may comprise metals, metal oxides, nonmetals, and nonmetal oxides. The oxides may comprise at least one of alkali, alkaline earth, transition, inner transition, and earth metals, and Al, Ga, In, Sn, Pb, S, Te, Se, N, P, As, Sb, Bi, C, Si, Ge, and B, and other elements that form oxides or oxyanions. The matrix may comprise

at least one of an oxide such as one of an alkaline, alkaline earth, transition, inner transition, and rare earth metal, and Al, Ga, In, Sn, Pb, S, Te, Se, N, P, As, Sb, Bi, C, Si, Ge, and B, and other elements that form oxides, and one oxyanion and further comprise at least one cation such as alkaline, alkaline earth, transition, inner transition, and rare earth metal, and Al, Ga, In, Sn, and Pb cations. Suitable examples are $LiAlO_2$, MgO, $Li_2TiO_3$, or $SrTiO_3$. In an embodiment, the matrix compound may comprise an oxide of the anode materials and a compound of the electrolyte such as at least one of a cation and an oxide of the electrolyte. In an exemplary embodiment, the electrolyte comprises a hydroxide such as an alkali hydroxide such as MOH (M = alkali) such as LiOH that may form the corresponding oxide such as $M_2O$ such as $Li_2O$, and the electrolyte comprises an element, metal, alloy, or mixture such as Mo, Ti, Zr, Si, Al, Ni, Fe, Ta, V, B, Nb, Se, Te, W, Cr, Mn, Hf, Co, and M' (M'= alkaline earth) such a Mg that may form the corresponding oxide such as $MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MnO, $Mn_3O_4$, $Mn_2O_3$, $MnO_2$, $Mn_2O_7$, $HfO_2$, $Co_2O_3$, CoO, $Co_3O_4$, $Co_2O_3$, and MgO, the matrix comprises an oxide of the cathode material and optionally an oxide of the electrolyte such as $Li_2O$ corresponding to the exemplary suitable matrices of $Li_2MoO_3$ or $Li_2MoO_4$, $Li_2TiO_3$, $Li_2ZrO_3$, $Li_2SiO_3$, $LiAlO_2$, $LiNiO_2$, $LiFeO_2$, $LiTaO_3$, $LiVO_3$, $Li_2B_4O_7$, $Li_2NbO_3$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_4$, $Li_2HfO_3$, $LiCoO_2$, and M'O (M'= alkaline earth) such a MgO. The matrix may comprise an oxide of an element of the anode or an element of the same group. For example, with a Mo anode, the matrix of same element or group may be $Li_2MoO_4$, $MoO_2$, $Li_2WO_4$, $Li_2CrO_4$, and $Li_2Cr_2O_7$. The marix may provide support. The matrix may inhibit the diffusion of a reactive species from the discharge cathode to the discharge anode such as oxygen or a reactive oxygen species such as peroxide or superoxide ion. The matrix may be paste-like. The particle size may be submicron, but other sizes such as micron to millimeter are suitable in embodiments.

In an embodiment, the electrolyte matrix comprises a dielectric material. The dielectric matrix may permit the catalysis of H to negatively charge the anode relative to the cathode during cell discharge. The charging may be by the formation of an ion double layer or by ionization (oxidation) of species of the cell such as at least one of the electrolyte and matrix. In an embodiment, the energy is from the catalysis of H to hydrino. The energy from the transition of H to hydrino may be continuous such that energy is released to contribute charge at a corresponding anode voltage, or the charging may contribute to the anode voltage. The charging may involve at least one of a mechanism akin to that of a capacitor and one involving an electrochemical change of at least one cell species such as an oxidation of the electrolyte of the anode half-cell. The anode charging causes a corresponding cathode charging to complete the external circuit with ion or electron flow through the electrolyte. In an embodiment, the anode half-cell reaction is

$$OH^- + 2H \text{ to } H_2O + e^- + H(1/p) \qquad (88)$$

wherein the reaction of a first H with $OH^-$ to form $H_2O$ catalyst and $e^-$ is concerted with the $H_2O$ catalysis of a second H to hydrino. H that reacts with $OH^-$ may be from M-H wherein M is the anode material such as a metal. In an embodiment, the catalyst accepts 3X27.2 eV matching the potential energy of the formed $H_2O$ molecule as given by Eq. (68) and corresponding to m= 3 in Eq. (5) resulting in the formation of H(1/4). The continuous energy released as the electron of the second H transitions to the hydrino state as well as the energy released from the catalyst following acceptance from the second H may cause charging of the anode. The charging may comprise capacitive charging of the ions of the electrolyte or oxidation of at least one species of the electrolyte or electrodes. Thus, the energy released in the electrochemical reaction to form $H_2O$ catalyst and the concerted H catalysis reaction to form hydrinos powers the flow of current through the external circuit. The voltage may be that of the hydrogen and oxygen cell reaction since the electrolyte comprises $H_2O$ and species comprising oxidation and reduction products of hydrogen, oxygen, and water. The cell reactions may comprise at least one of those given by Eqs. (171-173). The ion path through the electrolyte to complete the circuit may comprise ions of the electrolyte such as at least one of $Li^+$, $OH^-$, oxide and peroxide ions, and $Br^-$ in the case of an electrolyte comprising LiOH-LiBr, or ions of the matrix. Thus, in an embodiment, the matrix serves as an ion conduction medium wherein the conduction may be provided by charge transfer or ion transport. In another embodiment, the matrix comprises at least one of a mixture of oxide or oxides, hydroxide or hydroxides, mixed metal oxidation states, electrolyte ions, and other ions. The ion conduction may be by ion hopping. The transport may involve charge transfer or ion transport of a species such as a negative ion such as one comprising at least one or oxygen and hydrogen. Suitable species are at least one of oxygen species chosen from $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$ and H species and hydrogen species chosen from $H_2$, H, $H^+$, $H_2O$, $H_3O^+$, OH, $OH^+$, $OH^-$, HOOH, and $OOH^-$. In an exemplary embodiment, the transported species is a more a reduced state species

comprising oxygen such as $O^{2-}$ formed at the cathode formed from exemplary species $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O_2^-$, and $O_2^{2-}$. The more reduced species may be oxidized at the anode.

In an embodiment, the hydrino reaction energy may be converted to electricity by the flow of electrons into the anode and out of the cathode during the discharge phase. This requires oxidation at the anode and reduction at the cathode during discharge. The direct oxidation of the electrolyte such as at least one of exemplary species $OH^-$ and $H_2O$ at the anode and reduction of the electrolyte such as exemplary species $H_2O$ at the cathode produces oxygen and hydrogen, respectively, that can react with and consume electrolysis product $H_2$ and $O_2$, respectively, at each of the corresponding electrodes. In an embodiment, the ion-carrying matrix reduces the hydrino-reaction-energy-driven formation of oxygen at the anode and hydrogen at the cathode during the cell discharge that would decrease the available reactants of the discharge phase.

In an embodiment not having a matrix, the ion conduction may be through the electrolyte during cell discharge. The transported species may be provided, at least partially, external to the cell. The cell may be open such as open to atmosphere. In an exemplary embodiment, at least one of external oxygen and $H_2O$ is reduced at the cathode, and a reduced species such as the reduction product of at least one of external oxygen and $H_2O$ is oxidized at the anode. The transport may be driven by the energy due to the catalysis of H to hydrino states. The current due to the external oxidant such as at least one of external oxygen and $H_2O$ is controlled to control corrosion such as corrosion of the anode. In an embodiment, the anode is stable or corrosion resistant to the current carried by air-derived species such as oxygen species such as $OH^-$, HOOH, $OOH^-$, $O^-$, $O_2^-$, and $O_2^{2-}$. The corrosion resistant anode may be one of the disclosure. Alternatively, the cathode may comprise a stable species such as an oxide or sulfide such as NiO or MoS. In an embodiment, the cell voltage per cell during the intermittent electrolysis and discharge is maintained above the potential that prevents the anode from substantially oxidizing such as about 0.8 V in the case of a Ni anode.

In an embodiment, the energy released during cell discharge by the catalysis of H to hydrino provides energy to charge the anode negatively by mechanisms such as at least one of forming an ion double layer such as in capacitive charging and by oxidation of at least one cell species. The intermittent charge-discharge frequency may be sufficiently high to cause energy in the double layer to be at least partially dissipated in the external circuit. In an embodiment, the high frequency is in the range of at least one of a charge and discharge time of less than one second, but may be in the range of about 0.1 ms to 5s. In an embodiment, the ion double layer formed during discharge decreases the energy to charge during the charging (electrolysis) phase. The energy from the double layer may be at least partially conserved in the formation of electrolysis products such as $H_2$ and $O_2$ during the charging (electrolysis) phase. The electrolyte may or may not comprise a matrix. In an embodiment, the matrix allows for a faster charging (electrolysis) time that may enable a higher frequency charge relative to the absence of the matrix. In an embodiment, the high frequency is also selected to optimize the energy gain by reducing the input energy to form electrolysis reactants such as hydrogen and oxygen. A suitable input energy creates a layer of atomic hydrogen to react to form the catalyst such as $H_2O$ and hydrinos. Excess gaseous electrolysis product that is lost or not involved with the formation of at least one of catalyst and hydrinos is avoided by selecting suitable charge and discharge times such as ones in the ranges of the disclosure.

In an embodiment, the reactants comprise a source of an ion carrier. The ion carrier may comprise a chalcogenide. In an embodiment, a chalcogenide species such as one comprising sulfur may carry the ion current during cell discharge. S may be dissolved in the electrolyte. The S species such as S or $S_n$ (n = integer) may be reduced at the cathode and oxidized at the anode during discharge. In an embodiment, the cell is closed. The electrodes may be both submerged in the electrolyte. The power to drive the ion current and external electrical current may from the catalysis of H to hydrinos. In an embodiment, at least one electrode such as the discharge anode may comprise a source of sulfur such as an alloy such as MoS alloy. In an embodiment the molar ratio of S is less than that of Mo. An exemplary alloy is MoS (90 to 99.5 wt%, 10 to 0.5 wt%). In an embodiment, the source of sulfur is a sulfide such as one that comprises at least one of an alkali, alkaline earth, transition, inner transition, and earth metals, and Al, Ga, In, Sn, Pb, S, Te, Se, N, P, As, Sb, Bi, C, Si, Ge, and B, and other elements that form a sulfide. The sulfide may comprise a selenium or tellurium sulfide such as at least one of $SeS_2$, $Se_4S_4$, and $Se_2S_6$. In an embodiment, the chalcogenide comprises at least one of selenium and tellurium. The source of selenium or tellurium is a selenide or telluride, respectively, such as one that comprises at least one of an alkali, alkaline earth, transition, inner transition, and earth metals, and Al, Ga, In, Sn, Pb, S, Te, Se, N, P, As, Sb, Bi, C, Si, Ge, and B, and other elements that form a selenide or telluride.

From the perspective of thermodynamics, a species such as a negative ion may be ionized at the anode and the same species created by reduction at the discharge cathode with power dissipated in an external circuit when the ion or electron temperature at the anode is greater than that at the cathode. A non-hydrino example involving the temperature differential of the half-cells is the cell [Na (hot)/BASE/Na (cold)]. Exemplary ions in a LiOH-LiBr salt are $OH^-$

and $Br^-$ that may be oxidized to OH and Br, respectively, and reduced with electrons delivered to the cathode through the external circuit. Alternatively, species comprising at least one of O and H may carry the ion current. The hydrino reaction provides the energy equivalent to heat to generate the power delivered to the circuit. In an embodiment, the matrix serves as a separator to prevent the cathode and anode electrodes or half-cells from shorting. The prevented shorting may be in at least one of the thermodynamic and electrical sense. The matrix may separate the half-cell reactions to increase the rate, effectiveness, or extent of the hydrino reaction to create an electromotive force (EMF) at the anode relative to the cathode to drive current through the external circuit. In an embodiment, the separation of the anode and cathode-half cell reactions causes a better match of the energy accepted from a second H by the catalyst $H_2O$ wherein the $H_2O$ formation occurs by the oxidation of $OH^-$ and reaction with a first H, and the oxidation reaction to form the catalyst is concerted with the catalysis reaction of a second H to form hydrinos as given by Eq. (88). In an embodiment, the matrix may bind $H_2O$ and also serve as a $H_2O$ source to the intermittent electrolysis reactions. The binding and supplying of $H_2O$ may be at an energy that increases the rate or extent of the hydrino formation reaction. The $H_2O$ binding energy may cause a better match of the energy transferred from H to the catalyst such as $H_2O$. An exemplary electrolyte comprising a matrix that serves as at least one of a dielectric, separator, or at least one of a $H_2O$ binder and reservoir is an alkali hydroxide-alkali halide mixture such as LiOH-LiBr and a matrix material of the disclosure that may have the components in any desired molar ratios. The wt%s of the alkali halide and matrix material may be similar. The electrolyte comprising a matrix may comprise a solid or semisolid at the operating temperature of the cell such as in the range of about 75°C to 700°C. An exemplary electrolyte is LiOH-LiBr-MgO having wt% in the range of about 10 wt%, 45 wt%, and 45 wt%, respectively, with each $\pm$ 1 to 30 wt%.

The electrolyte may be manufactured by methods such as tape casting, electrophoretic deposition, hot roll milling, or hot pressing. The wet sealing area of the bipolar plates may comprise aluminum or an aluminum alloy that may comprise a coating. Suitable aluminizing methods are painting, thermal spraying, vacuum deposition that may be followed with fusion heat treatment, and pack cementation. An exemplary resultant diffusion coating of stainless steel comprises MAl-$M_3Al$ structure (M= iron, nickel, plus 5-15 mol % chromium). Alternatively, aluminum-containing alloy powders such as FeCrAlY, MAl, or $M_3Al$ (M = Ni, Fe) may be thermally sprayed, in an exemplary embodiment.

In an embodiment such as one wherein the hydrogen is provided by permeation or intermittent electrolysis, the cell comprises a matrix to hold the electrolyte. The matrix may comprise a compound that wicks the electrolyte or causes it to be more viscous such as an inert compound. Suitable exemplary matrix materials are at least one of asbestos, $Al_2O_3$, MgO, $Li_2ZrO_3$, $LiAlO_2$, $Li_2MoO_4$, $Li_2TiO_3$, or $SrTiO_3$. The electrolyte may be immobilized as a paste. The matrix to hold the electrolyte as a layer such as a thin layer comprises the steps of mixing the matrix material and at least one other material such as a binder, a particulate material, and a solvent that combusts to essentially completion when heated to high temperature and heating the mixture to form the matrix. Suitable compounds are poly (vinyl formal) (PVFO) and ethanol solvent and polyethylene glycol (PEG). The pore size and density of the matrix may be varied by varying the particle size and ratio of matrix material to the at least one other compound. In an embodiment, the electrolyte is added to the matrix material. The pore size and density may be controlled to adjust the capillary action of the matrix relative to the surface tension of the electrolyte such that the electrolyte is maintained substantially in a layer without excessive flooding of the cathode or anode. The matrix pore size may be in the range of about 10 nm to 10 mm, about 100 nm to 100 micrometers, or about 1 micrometer to 10 micrometers. The matrix may comprise a solid such as a ceramic. A suitable exemplary solid matrix is MgO, $ZrO_2$, or ytttria stabilized zirconium oxide. The matrix may be one of a solid oxide fuel cell that may conduct oxide ions such as yttria stabilized zirconia (YSZ) (often the 8% form Y8SZ), scandia stabilized zirconia (ScSZ) (usually 9 mol%Sc2O3 - 9ScSZ) and gadolinium doped ceria (GDC). The matrix may comprise a salt bridge that may conduct oxide ions. Typical examples of oxide conductors are yttria-stabilized zirconia (YSZ), gadolinia doped ceria (CGO), lanthanum gallate, and bismuth copper vanadium oxide such as $BiCuVO_x$). Some perovskite materials such as $La_{1-x}Sr_xCo_yO_{3-d}$ also show mixed oxide and electron conductivity. The matrix may be impregnated with the electrolyte such as a eutectic salt electrolyte such as hydroxide such as an alkali hydroxide and may further comprise and alkali halide. A suitable exemplary electrolyte is LiOH-LiBr that may be impregnated in MgO solid matrix. The solid matrix may further comprise a particulate matrix such as particles of MgO or other matrix compounds of the disclosure. In an embodiment, the anode comprises an intermittent electrolysis electrode, or a hydrogen sparging or bubbling electrode such as a porous electrode such as a Ni mat electrode. In an embodiment, at least one of the electrode and electrolyte resists electrolyte flooding. The electrolyte may comprise a matrix to stabilize the electrolyte. The anode may be a mat having a large pore size having capillary forces that are below the threshold for wicking the electrolyte wherein the electrolyte may comprise a matrix material such as MgO or $Li_2TiO_3$. The electrode may be periodically rinsed to remove flooding electrolyte. The operating conditions may be changed to prevent flooding. For example, the temperature may be adjusted to change the electrolyte viscosity, surface tension, and capillary action to prevent electrode flooding. The hydrogen flow that may be recirculated may be changed to prevent electrode flooding.

In an embodiment, the anode half-cell reactants comprise a source of H. In an embodiment, a metal ion such as an alkali metal ion migrates to the cathode compartment and may undergoes a hydride exchange reaction with a hydride of the cathode compartment. An exemplary overall conventional cell reaction wherein the anode reactants

comprise a source of Li may be represented by

$$M_nH_m + me^- + mLi^+ \rightleftharpoons nM^0 + mLiH \text{ (n,m are integers)} \quad (89)$$

wherein M designates a single element or several elements (in a mixture, intermetallic compound, or an alloy form) chosen from metals or semi-metals capable of forming a hydride. These hydrides could also be replaced by a compound designated "M hydride" that means an element M in which hydrogen atoms are absorbed (for example, chemically combined). M hydride may be designated hereafter $MH_m$, where m is the number of H atoms absorbed or combined by M. In an embodiment, the free enthalpy of formation per H of the hydride $M_nH_m$ or $MH_m$, is higher, equivalent, or less than that of the hydride of the catalyst such as LiH. Alternatively, at least one H may serve as the catalyst.

In embodiments, exemplary hydride metals or semi-metals comprise alkali metals (Na, K, Rb, Cs), alkaline earth metals (Mg, Ca, Ba, Sr), elements from the Group IIIA such as B, Al, Ga, Sb, from the Group IVA such as C, Si, Ge, Sn, and from the Group VA such as N, P, As. Further examples are transition metal alloys and intermetallic compounds $AB_n$, in which A represents one or more element(s) capable of forming a stable hydride and B is an element that forms an unstable hydride. Examples of intermetallic compounds are given in TABLE 5.

TABLE 5. Elements and combinations that form hydrides.

| A | B | n | $AB_n$ |
|---|---|---|---|
| Mg, Zr | Ni, Fe, Co | 1/2 | $Mg_2Ni$, $Mg_2Co$, $Zr_2Fe$ |
| Ti, Zr | Ni, Fe | 1 | TiNi, TiFe, ZrNi |
| La, Zr, Ti, Y, Ln | V, Cr, Mn, Fe, Ni | 2 | $LaNi_2$, $YNi_2$, $YMn_2$, $ZrCr_2$, $ZrMn_2$, $ZrV_2$, $TiMn_2$ |
| La, Ln, Y, Mg | Ni, Co | 3 | $LnCo_3$, $YNi_3$, $LaMg_2Ni_9$ |
| La, rare earths | Ni, Cu, Co, Pt | 5 | $LaNi_5$, $LaCo_5$, $LaCu_5$, $LaPt_5$ |

Further examples are the intermetallic compounds wherein part of sites A and/or sites B are substituted with another element. For example, if M represents $LaNi_5$, the intermetallic alloy may be represented by $LaNi_{5-x}A_x$, where A is, for example, Al, Cu, Fe, Mn, and/or Co, and La may be substituted with Mischmetal, a mixture of rare earth metals containing 30% to 70% of cerium, neodymium and very small amounts of elements from the same series, the remainder being lanthanum. In other embodiments, lithium may be replaced by other catalysts or sources of catalyst such as Na, K, Rb, Cs, Ca,and at least one H. In embodiments, the anode may comprise an alloy such as $Li_3Mg$, $K_3Mg$, $Na_3Mg$ that forms a mixed hydride such as $MMgH_3$ (M=alkali metal).

In an embodiment, the regeneration is achieved using a CIHT cell comprising three half-cells as shown in FIGURE 4. The primary anode 600 and cathode 601 half-cells comprise the principle cell comprising the standard reactants such as a source of Li and CoO(OH), respectively, separated by a separator 602 and an organic electrolyte. Each has its corresponding electrode 603 and 604, respectively. The power of the discharging principle cell is dissipated in the load 605 following closing the switch 606. In addition, the third or regeneration half-cell 607 interfaces the primary cathode half-cell 601 and comprises a source of protons. The primary cathode and regeneration half-cells are separated by a proton conductor 608. The regeneration half-cell has its electrode 609. During recharging of the principle cell power is supplied by source 610 with switch 611 closed and switch 606 opened. The regeneration half-cell 607 serves as the secondary anode and the primary anode 600 serves as a secondary cathode. Protons are formed by oxidation of H and migrate from the regeneration cell 607 to the primary cathode 601. $Li^+$ ions are displaced from $LiCoO_2$ by $H^+$ ions to form CoO(OH) or $HCoO_2$ as the $Li^+$ ions migrate to the secondary cathode 600 and are reduced to Li. In a three chamber cell embodiment, the recharge anode may comprise a proton source such as Pt/C($H_2$) and a proton conductor. Then the recharge cell could be [Pt/C($H_2$) with proton conductor interface/LiCoO2/Li]. Exemplary cells are [Li source such as Li or an Li alloy such as $Li_3Mg$ or LiC/olefin separator and organic electrolyte such as Celgard and LP 40/CoO(OH) or $HCoO_2$/proton conductor/ $H^+$ source such as Pt($H_2$), Pt/C($H_2$)]. In another embodiment, hydrogen is supplied to chamber 607 that comprises a hydrogen dissociation catalyst such as Pt/C and a membrane separator at 608 that may be Nafion whereby H atoms diffuse into the cathode product material in chamber 601 while an electrolysis voltage is applied between electrodes 604 and 603. The positive applied voltage on electrode 604 causes Li to migrate to chamber 600 to be reduced at electrode 603 while H is incorporated into the cathode material during electrolysis. In another embodiment, the separator 608 is electrically isolated from the cell body and comprises the electrode 609. The chamber 607 comprises an H source such as a hydride. The electrode 609 may oxidize $H^-$ of a source such as the hydride. The conductivity may be increased by a molten eutectic salt $H^-$conductor in chamber 607. The electrolysis causes H to

migrate to chamber 601 to become intercalated in the oxyhydroxide.

In an embodiment, the cell comprises an aqueous electrolyte. The electrolyte may be an alkali metal salt in solution such an alkali sulfate, hydrogen sulfate, nitrate, nitrite, phosphate, hydrogen phosphate, dihydrogen phosphate, carbonate, hydrogen carbonate, halide, hydroxide, permanganate, chlorate, perchlorate, chlorite, perchlorite, hypochlorite, bromate, perbromate, bromite, perbromite, iodate, periodate, iodite, periodite, chromate, dichromate, tellurate, selenate, arsenate, silicate, borate, and other oxyanion. Another suitable electrolyte is an alkali borohydride such as sodium borohydride in concentrated base such as about 4.4 M $NaBH_4$ in about 14 M NaOH.

In another embodiment comprising an aqueous or molten hydroxide electrolyte, the cell comprises a metal hydride electrode such as those of the present disclosure. Suitable exemplary hydrides are R-Ni, Raney cobalt (R-Co), Raney copper (R-Cu), transition metal hydrides such as CoH, CrH, $TiH_2$, FeH, MnH, NiH, ScH, VH, CuH, and ZnII, intermetallic hydrides such as $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, and AgH, $CdH_2$, PdII, PtH, NbH, TaH, $ZrH_2$, $HfH_2$, $YH_2$, $LaH_2$, $CeH_2$, and other rare earth hydrides. Further exemplary metals or semi-metals of suitable hydrides comprise alkali metals (Na, K, Rb, Cs), alkaline earth metals (Mg, Ca, Ba, Sr), elements from the Group IIIA such as B, Al, Ga, Sb, from the Group IVA such as C, Si, Ge, Sn, and from the Group VA such as N, P, As, and transition metals and alloys. The hydride may be an intermetallic compound. Further examples are intermetallic compounds $AB_n$, in which A represents one or more element(s) capable of forming a stable hydride and B is an element that forms an unstable hydride. Examples of intermetallic compounds are given in TABLE 5 and the corresponding section of the disclosure. The hydride may be at least one of the type $AB_5$, where A is a rare earth mixture of lanthanum, cerium, neodymium, praseodymium and B is nickel, cobalt, manganese, and/or aluminum, and $AB_2$ where A is titanium and/or vanadium and B is zirconium or nickel, modified with chromium, cobalt, iron, and/or manganese. In an embodiment, the anode material serves the role of reversibly forming a mixture of metal hydride compounds. Exemplary compounds are $LaNi_5$ and $LaNi_{3.6}Mn_{0.4}Al_{0.3}Co_{0.7}$. An exemplary anode reaction of the metal hydride R-Ni is

$$R\text{-}NiH_x + OH^- \text{ to } R\text{-}NiH_{x-1} + H_2O + e^- \qquad (90)$$

In an embodiment, nickel hydride may serve as a half-cell reactant such as the anode. It may be formed by aqueous electrolysis using a nickel cathode that is hydrided. The electrolyte may be a basic one such as KOH or $K_2CO_3$, and the anode may also be nickel. The cathode may comprise an oxidant that may react with water such as a metal oxide such as nickeloxyhydroxide (NiOOH). An exemplary cathode reaction is

$$NiO(OH) + H_2O + e^- \text{ to } Ni(OH)_2 + OH^- \qquad (91)$$

Hydrinos may be formed by $H_2O$ catalyst formed at the anode. The cell may comprise an electrolyte such as an alkali hydroxide such as KOH and may further comprise a spacer such as a hydrophilic polyolefin. An exemplary cells are [R-Ni, Raney cobalt (R-Co), Raney copper (R-Cu), $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, CoH, CrH, FeH, MnH, NiH, ScH, VH, CuH, ZnH, AgH / polyolefin KOH(aq), NaOH(aq), or LiOH(aq)/ NiO(OH)]. Additional suitable oxidants are $WO_2(OH)$, $WO_2(OH)_2$, VO(OH), $VO(OH)_2$, $VO(OH)_3$, $V_2O_2(OH)_2$, $V_2O_2(OH)_4$, $V_2O_2(OH)_6$, $V_2O_3(OH)_2$, $V_2O_3(OH)_4$,$V_2O_4(OH)_2$, FeO(OH), MnO(OH), $MnO(OH)_2$, $Mn_2O_3(OH)$, $Mn_2O_2(OH)_3$, $Mn_2O(OH)_5$, $MnO_3(OH)$, $MnO_2(OH)_3$, $MnO(OH)_5$, $Mn_2O_2(OH)_2$, $Mn_2O_6(OH)_2$, $Mn_2O_4(OH)_6$, NiO(OH), TiO(OH), $TiO(OH)_2$, $Ti_2O_3(OH)$, $Ti_2O_3(OH)_2$, $Ti_2O_2(OH)_3$, $Ti_2O_2(OH)_4$, and NiO(OH). Further exemplary suitable oxyhyroxides are at least one of the group of bracewellite (CrO(OH)), diaspore (AlO(OH)), ScO(OH), YO(OH), VO(OH), goethite ($\alpha$-$Fe^{3+}$O(OH)), groutite ($Mn^{3+}$O(OH)), guyanaite (CrO(OH)), montroseite ((V,Fe)O(OH)), CoO(OH), NiO(OH), $Ni_{1/2}Co_{1/2}O(OH)$, and $Ni_{1/3}Co_{1/3}Mn_{1/3}O(OH)$, RhO(OH), InO(OH), tsumgallite (GaO(OH)), manganite ($Mn^{3+}$O(OH)), yttrotungstite-(Y) $YW_2O_6(OH)_3$, yttrotungstite-(Ce) ((Ce, Nd, Y)$W_2O_6(OH)_3$), unnamed (Nd-analogue of yttrotungstite-(Ce)) ((Nd, Cc, La)$W_2O_6(OH)_3$), frankhawthorneite ($Cu_2[(OH)_2[TeO_4]$), khinite ( $Pb^{2+}Cu_3^{2+}(TeO_6)(OH)_2$ ), and parakhinite ( $Pb^{2+}Cu_3^{2+}TeO_6(OH)_2$ ). In general, the oxidant may be $M_xO_yH_z$ wherein x, y, and z are integers and M is a metal such as a transition, inner transition, or rare earth metal such as metal oxyhydroxides. In other embodiments, other hydrogenated chalcogenides or chalcogenides may replace oxyhydroxides. The cell may be regenerated by charging or by chemical processing such as rehydriding the metal hydride such as R-Ni.

The electrolyte may comprise concentrated base such as MOH (M =alkali) in the concentration range of about

6.5 M to saturated. The active material in the positive electrode may comprise nickel hydroxide that is charged to nickel oxyhydroxide. Alternatively, it may be another oxyhydroxide, oxide, hydroxide, or carbon such as CB, PtC, or PdC, or a carbide such as TiC, a boride such as $TiB_2$, or a carbonitrile such as TiCN. The cathode such as nickel hydroxide may have a conductive network composed of cobalt oxides and a current collector such as a nickel foam skeleton, but may alternately be nickel fiber matrix or may be produced by sintering filamentary nickel fibers.

The active material in the negative electrode may be an alloy capable of storing hydrogen, such as one of the $AB_5$ (LaCePrNdNiCoMnAl) or $AB_2$ (VTiZrNiCrCoMnAlSn) type, where the "$AB_x$" designation refers to the ratio of the A type elements (LaCePrNd or TiZr) to that of the B type elements (VNiCrCoMnAlSn). Suitable hydride anodes are those used in metal hydride batteries such as nickel-metal hydride batteries that are known to those skilled in the Art. Exemplary suitable hydride anodes comprise the hydrides of the group of R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, and other alloys capable of storing hydrogen, such as one of the $AB_5$ (LaCePrNdNiCoMnAl) or $AB_2$ (VTiZrNiCrCoMnAlSn) type, where the "$AB_x$" designation refers to the ratio of the A type elements (LaCePrNd or TiZr) to that of the B type elements (VNiCrCoMnAlSn). In other embodiments, the hydride anode comprises at least one of MmNis (Mm = misch metal) such as $MmNi_{3.5}Co_{0.7}Al_{0.8}$, the $AB_5$-type: $MmNi_{3.2}Co_{1.0}Mn_{0.6}Al_{0.11}Mo_{0.09}$ (Mm = misch metal: 25 wt% La, 50 wt% Ce, 7 wt% Pr, 18 wt% Nd), $La_{1-y}R_yNi_{5-x}M_x$, $AB_2$-type: $Ti_{0.51}Zr_{0.49}V_{0.70}Ni_{1.18}Cr_{0.12}$ alloys, magnesium-based alloys such as $mg_{1.9}Al_{0.1}Ni_{0.8}Co_{0.1}Mn_{0.1}$ alloy, $Mg_{0.72}Sc_{0.28}(Pd_{0.012} + Rh_{0.012})$, and $Mg_{80}Ti_{20}$, $Mg_{80}V_{20}$, $La_{0.8}Nd_{0.2}Ni_{2.4}Co_{2.5}Si_{0.1}$, $LaNi_{5-x}M_x$ (M= Mn, Al), (M= Al, Si, Cu), (M= Sn), (M= Al, Mn, Cu) and $LaNi_4Co$, $MmNi_{3.55}Mn_{0.44}Al_{0.3}Co_{0.75}$, $LaNi_{3.55}Mn_{0.44}Al_{0.3}Co_{0.75}$, $MgCu_2$, $MgZn_2$, $MgNi_2$, AB compounds such as TiFe, TiCo, and TiNi, $AB_n$ compounds (n = 5, 2, or 1), $AB_{3-4}$ compounds, and $AB_x$ (A = La, Ce, Mn, Mg; B = Ni, Mn, Co, Al). Other suitable hydrides arc $ZrFe_2$, $Zr_{0.5}Cs_{0.5}Fe_2$, $Zr_{0.8}Sc_{0.2}Fe_2$, $YNi_5$, $LaNi_5$, $LaNi_{4.5}Co_{0.5}$, (Ce, La, Nd, Pr)$Ni_5$, Mischmetal-nickel alloy, $Ti_{0.98}Zr_{0.02}V_{0.43}Fe_{0.09}Cr_{0.05}Mn_{1.5}$, $La_2Co_1Ni_9$, FcNi, and $TiMn_2$. In either case, the materials may have complex microstructures that allow the hydrogen storage alloys to operate in the aggressive environment within the cell where most of the metals are thermodynamically more stable as oxides. Suitable metal hydride materials are conductive, and may be applied to a current collector such as one made of perforated or expanded nickel or nickel foam substrate or one made of copper.

In embodiments, the aqueous solvent may comprise $H_2O$, $D_2O$, $T_2O$, or water mixtures and isotope mixtures. In an embodiment, the temperature is controlled to control the rate of the hydrino reaction and consequently the power of the CIHT cell. A suitable temperature range is about ambient to 100°C. The temperature may be maintained about > 100°C by sealing the cell so that pressure is generated and boiling is suppressed.

In an embodiment, the OH catalyst or $H_2O$ catalyst is formed at the anode from the oxidation of $OH^-$ in the presence of H or a source of H. A suitable anode half-cell reactant is a hydride. In an embodiment, the anode may comprise a hydrogen storage material such as a metal hydride such as metal alloy hydrides such as $BaReH_9$, $La_2Co_1Ni_9H_6$, $LaNi_5H_6$ or $LaNi_5H$ (in the disclosure, $LaNi_5H$ is defined as the hydride of $LaNi_5$ and may comprise $LaNi_5H_6$, and other hydride stoichiometries, and the same applies to other hydrides of the disclosure wherein other stoichiometries than those presented are also within the scope of the present disclosure), $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, $FeTiH_{1.7}$, $TiFeH_2$, and $MgNiH_4$. In an embodiment comprising a $LaNi_5H_6$, $La_2Co_1Ni_9H_6$, $ZrCr_2H_{3.8}$, $LaNi_{3.55}Mn_{0.4}Al_{0.3}Co_{0.75}$, or $ZrMn_{0.5}Cr_{0.2}V_{0.1}Ni_{1.2}$ anode or similar anode and KOH or NaOH electrolyte, LiOH is added to the electrolyte to passivate any oxide coating to facilitate the uptake of $H_2$ to hydride or rehydride the $LaNi_5H_6$, $La_2Co_1Ni_9H_6$, $ZrCr_2H_{3.8}$, $LaNi_{3.55}Mn_{0.4}Al_{0.3}Co_{0.75}$, or $ZrMn_{0.5}Cr_{0.2}V_{0.1}Ni_{1.2}$. Exemplary cells are [$BaReH_9$, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, $FeTiH_{1.7}$, $TiFeH_2$, and $MgNiH_4$/MOH (saturated aq) (M = alkali)/carbon, PdC, PtC, oxyhydroxide, carbide, or boride] and [$LaNi_5H_6$, $La_2Co_1Ni_9H_6$, $ZrCr_2H_{3.8}$, $LaNi_{3.55}Mn_{0.4}Al_{0.3}Co_{0.75}$, or $ZrMn_{0.5}Cr_{0.2}V_{0.1}Ni_{1.2}$/KOH (sat aq) $EuBr_2$ or $EuBr_3$/CB].

In an embodiment, the cell comprises an aqueous electrolyte such as KOH (1 M to saturated) and a metal hydride anode such as at least one of $LaNi_5H_6$, $MmNi_{3.5}Co_{0.7}Al_{0.8}H_6$, (LaNd)$(NiCoSi)_5H_4$, $TiMn_2$, and (Ti, Zr)(V, Ni)$_2$ wherein the cell may further comprise a solid electrolyte such as at the anode. A suitable solid electrolyte is tetramethyl ammonium hydroxide pentahydrate (TMAH5) $(CH_3)_4NOH.5H_2O$. The cathode may comprise an oxygen reduction catalyst such as carbon such as steam carbon (SC) and a source of oxygen such as air or $O_2$. Exemplary cells are [at least one of $LaNi_5H_6$, $MmNi_{3.5}Co_{0.7}Al_{0.8}H_6$, (LaNd)$(NiCoSi)_5H_4$, $TiMn_2$, and (Ti, Zr)(V, Ni)$_2$ TMAH5/KOH (sat aq)/SC + air]. The cell may be regenerated after discharge by hydriding the anode with $H_2$ or by electrolysis.

OH formed as an intermediate of a reduction reaction of reactant(s) to $OH^-$ or $H_2O$ may serve as a catalyst or a source of catalyst such as OH or $H_2O$ to form hydrinos. In an embodiment, the oxidant of the cell comprising an alkaline electrolyte such as an aqueous MOH or $M_2CO_3$ electrolyte (M = alkali) comprises a source of oxygen such as at least one of a compound comprising oxygen, an oxygen containing conducting polymer, an oxygen containing compound or polymer added to a conducting matrix such as carbon, $O_2$, air, and oxidized carbon such as steam treated carbon. The reduction reaction of oxygen may form reduced oxygen compounds and radicals that may comprise at least O and possibly H such as hydrogen peroxide ion, superoxide ion, hydroperoxyl radical, $O_2^-$, $O_2^{2-}$, HOOH, $HOO^-$, OH and

$OH^-$. In an embodiment, the cell further comprises a separator that prevents or retards the migration of oxygen from the cathode to the anode and is permeable to the migrating ion such as $OH^-$. The separator may also retard or prevent oxides or hydroxides such as $Zn(OH)_4^{2-}$, $Sn(OH)_4^{2-}$, $Sn(OH)_6^{2-}$, $Sb(OH)_4^-$, $Pb(OH)_4^{2-}$, $Cr(OH)_4^-$, and $Al(OH)_4^-$, formed in the anode half-cell compartment from migrating to the cathode compartment. In an embodiment, the anode comprises an H source such as a hydride such as R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, or $ZrMn_{0.5}Cr_{0.2}V_{0.1}Ni_{1.2}$, or $H_2$ gas and a dissociator such as Pt/C. In this embodiment and others of the disclosure that comprise R-Ni, another Raney metal such as Raney cobalt (R-Co), Raney copper (R-Cu), and other forms of R-Ni comprising activators that may comprise other metals, metal oxides, alloys, or compounds may be substituted for R-Ni to comprise further embodiments. An exemplary cell comprises a metal hydride $M'H_x$ (M'=metal or alloy such as R-Ni or $LaNi_5$) and an oxygen cathode such as $O_2$ gas or air at the cathode such as a carbon cathode or oxygen absorbed in carbon $C(O_2)_x$ that releases $O_2$ giving $C(O_2)_{x-1}$. In an embodiment similar to Eq. (94), at least one of water and oxygen are reduced to at least one of $OH^-$, H, and $H_2$ at the cathode. Corresponding exemplary reactions are

Anode

$$M'H_x + OH^- \text{ to } M'H_{x-1} + H_2O + e^- \quad (92)$$

wherein OH may be formed as an intermediate and serve as a catalyst to form hydrinos or $H_2O$ may be formed to serve as the catalyst.

Cathode

$$1/2O_2 + H_2O + 2e^- \text{ to } 2OH^- \quad (93)$$

Alternatively, the cathode reaction may involve water alone at the positive electrode:

$$H_2O + e- \text{ to } 1/2H_2 + OH^- \quad (94)$$

The cathode to perform reaction Eq. (94) may be a water reduction catalyst, and optionally an $O_2$ reduction (Eq. (93)) catalyst, such as supported metals, zeolites, and polymers that may be conductive such as polyaniline, polythiophen, or polyacetylene, that may be mixed with a conductive matrix such as carbon. Suitable $H_2O$ reduction catalysts efficiently reduce $H_2O$ to $H_2$ in solutions such as alkaline solutions. Exemplary catalysts are those of the group of Ni, porous Ni, sintered Ni powder, Ni-Ni(OH)$_2$, R-Ni, Fe, intermetallics of transition metals, $Hf_2Fe$, Zr-Pt, Nb-Pd(I), Pd-Ta, Nb-Pd(II), Ti-Pt, nanocrystalline $Ni_xMo_{1-x}$ (x= 0.6, 0.85 atomic percent), Ni-Mo, Mm alloy such as $MmNi_{3.6}Co_{0.75}Mn_{0.42}Al_{0.27}$, Ni-Fe-Mo alloy (64:24: 12) (wt%), Ni-S alloy, and Ni-S-Mn alloy. The electrolyte may further comprise activators such as ionic activators such as each or the combination of tris(ethylenediamine)Co(III) chloride complex and $Na_2MoO_4$ or EDTA (ethylenediaminetetraacetic acid) with iron. Exemplary cells are [M/KOH (saturated aq)/water reduction catalyst and possibility an $O_2$ reduction catalyst]; M = alloy or metals such as those of Zn, Sn, Co, Sb, Te, W, Mo, Pb, Ge; water reduction catalyst and possibility an $O_2$ reduction catalyst = at least one of Pt/Ti, Pt/$Al_2O_3$, steam carbon, perovskite, Ni, porous Ni, sintered Ni powder, Ni-Ni(OH)$_2$, R-Ni, Fe, intermetallics of transition metals, $Hf_2Fe$, Zr-Pt, Nb-Pd(I), Pd-Ta, Nb-Pd(II), Ti-Pt, nanocrystalline $Ni_xMo_{1-x}$ (x= 0.6, 0.85 atomic percent), Ni-Mo, Mm alloy such as $MmNi_{3.6}Co_{0.75}Mn_{0.42}Al_{0.27}$, Ni-Fe-Mo alloy (64:24:12) (wt%), Ni-S alloy, and Ni-S-Mn alloy.

In an embodiment the cathode comprises a source of oxygen such as an oxide, oxyhydroxide, oxygen gas, or air. Oxygen from the source is reduced at the cathode in aqueous solution to form a negative ion that comprises O and may comprise H. The reduction reaction of oxygen may form reduced oxygen compounds and radicals that may comprise at least O and possibly H such as hydrogen peroxide ion, superoxide ion, hydroperoxyl radical, $O_2^-$, $O_2^{2-}$, HOOH, $HOO^-$, OH and $OH^-$. In an embodiment, at least one of these species or a product species formed at the anode may comprise the catalyst. The catalyst reaction may involve the oxidation of $OOH^-$ to OH and metal oxide wherein $OOH^-$ serves as a source of catalyst. Exemplary reactions of metal M are

Cathode

$$O_2 + H_2O + 2e^- \text{ to } OOH^- + OH^- \quad (95)$$

Anode:

$$M + OOH^- \text{ to } MO + OH + e^- \quad (96)$$

$$MH \text{ or } MOH + OOH^- \text{ to } M \text{ or } MO + HOOH + e^- \quad (97)$$

wherein at least one of $OOH^-$ and possibly $O_2^{2-}$, and HOOH serves as a source of catalyst such as at least one of OH and $H_2O$. $OOH^-$ may also serve as the source of catalyst in a cell comprising a hydroxide cathode or anode reactant that forms an oxide and may further comprise a solid electrolyte such as BASE. The catalyst may be $H_2O$. An exemplary cell is [Na/BASE/NaOH] and an exemplary reactions involving superoxide, peroxide, and oxide are

$$Na + 2NaOH \text{ to } NaO_2 + 2NaH \text{ to } NaOOH + 2Na \text{ to } Na_2O + NaOH + 1/2H_2 \quad (98)$$

$$2Na + 2NaOH \text{ to } Na_2O_2 + 2NaH \text{ to } NaOOH + 2Na + NaH \quad (99)$$

$$2NaOH \text{ to } NaOOH + NaH \text{ to } Na_2O + H_2O \quad (100)$$

In the latter reaction, $H_2O$ may react with Na. The reaction to form intermediate MOOH such as NaOOH (M = alkali) that may react to form $Na_2O$ and OH may involve supplied hydrogen. Exemplary cells are [Ni($H_2$ such as in the range of about 1 to 1.5 atm) NaOH/BASE/NaCl-$NiCl_2$ or NaCl-$MnCl_2$ or LiCl-$BaCl_2$] and [Ni($H_2$) at least one of $Na_2O$ and NaOH/BASE/ NaCl-$NiCl_2$ or NaCl-$MnCl_2$ or LiCl-$BaCl_2$] that may produce electrical power by forming hydrinos via reactions such as

Cathode:

$$2Na^+ + 2e^- + M'X_2 \text{ to } 2NaCl + M' \quad (101)$$

Anode:

$$1/2H_2 + 3NaOH \text{ to } NaOOH + NaH + H_2O + Na^- + e^- \quad (102)$$

$$NaOOH + NaH \text{ to } Na_2O + H_2O \quad (103)$$

$$Na_2O + NaOH \text{ to } NaOOH + 2Na^+ + 2e^- \quad (104)$$

wherein M' is a metal, X is halide, other alkali metals may be substituted for Na, and NaH or $OOH^-$ may serve as a source of catalyst, or OH may be formed as an intermediate and serve as a catalyst.

In an embodiment, the source of oxygen may comprise a compound comprising O bound to at least one other element. Suitable sources of oxygen are at least one of $CO_2$, $NO_2$, NO, $N_2O$, and $SO_2$. Exemplary cells are [Ni($H_2$)/MOH-MX/Ni + $CO_2$, $NO_2$, NO, $N_2O$, or $SO_2$] (M = alkali, X = halide).

In an embodiment, the electrolyte comprises or additionally comprises a carbonate such as an alkali carbonate. During electrolysis, peroxy species may form such as peroxocarbonic acid or an alkali percarbonate that may be a

source of $OOH^-$, OH, or $H_2O$ that serve as a source of catalyst or catalyst to form hydrinos. Exemplary cells are [Zn, Sn, Co, Sb, Te, W, Mo, Pb, Ge /KOH (saturated aq) + $K_2CO_3$/carbon + air] and [Zn, Sn, Co, Sb, Te, W, Mo, Pb, Ge /KOH (saturated aq) + $K_2CO_3$/Ni powder + carbon (50/50 wt%) + air].

In an embodiment, the matrix such as steam activated carbon comprises a source of oxygen such as carboxylate groups that react with the electrolyte such as a hydroxide such as KOH to form the corresponding carboxylate such as $K_2CO_3$. For example, $CO_2$ from carboxylate groups may react as follows:

$$2KOH + CO_2 \text{ to } K_2CO_3 + H_2O \quad (105)$$

wherein $OH^-$ is oxidized and $CO_2$ is reduced. The process may comprise a mechanism to form hydrinos. Activated carbon and PtC comprising activated carbon may react in this manner to form hydrinos. Similarly, R-Ni reacts with $OH^-$ to form $H_2O$ and $Al_2O_3$ which involves the oxidation of $OH^-$ and provides a direct mechanism to form hydrinos. Thus, hydrinos may be formed at a carbon cathode or R-Ni anode by direct reaction.

An embodiment comprises a fuel cell with a source of hydrogen such as $H_2$ gas and a source of oxygen such as $O_2$ gas or air. At least one of $H_2$ and $O_2$ may be generated by electrolysis of water. The electricity for the electrolysis may be supplied by a CIHT cell that may be driven by the gasses supplied to it directly from the electrolysis cell. The electrolysis may further comprise gas separators for $H_2$ and $O_2$ to supply purified gases to each of the cathode and anode. Hydrogen may be supplied to the anode half-cell, and oxygen may be supplied to the cathode half-cell. The anode may comprise an $H_2$ oxidation catalyst and may comprise an $H_2$ dissociator such as Pt/C, Ir/C, Ru/C, Pd/C, and others of the disclosure. The cathode may comprise an $O_2$ reduction catalyst such as those of the disclosure. The cell produces species that may form OH that may serve as the catalyst to form hydrinos and produce energy such as electrical energy in excess of that from the reaction of hydrogen and oxygen to form water.

In an embodiment, a cell comprising an $O_2$ or air reduction reaction at the cathode comprises an anode that is resistant to $H_2$ evolution such as a Pb, In, Hg, Zn, Fe, Cd or hydride such as $LaNi_5H_6$ anode. The anode metal M may form a complex or ion such as $M(OH)_4^{2-}$ that is at least partially soluble in the electrolyte such that the anode reaction proceeds unimpeded by a coating such as an oxide coating. The anode may also comprise other more active metals such a Li, Mg, or Al wherein inhibitors may be used to prevent direct reaction with the aqueous electrolyte, or a nonaqueous electrolyte such as an organic electrolyte or an ionic liquid may be used. Suitable ionic liquid electrolytes for anodes such as Li are 1-methyl-3-octylimidazolium bis(trifluormethylsulonyl)amide, 1-ethyl-3-methylimidazolium bis(pentafluoroethylsulfonyl)amide, and 1-ethyl-3-methylimidazolium bis(trifluormethylsulonyl)amide. The anode may be regenerated in aqueous solution by electrolysis wherein Pb, Hg, or Cd may be added to suppress $H_2$ evolution. Metals with a high negative electrode potential such as Al, Mg, and Li can be used as anodes with an aprotic organic electrolyte.

In an embodiment, the reduction of $O_2$ proceeds through the peroxide pathway involving two-electrons. Suitable cathodes that favor the peroxide pathway are graphite and most other carbons, gold, oxide covered metals such as nickel or cobalt, some transition metal macrocycles, and transition metal oxides. Manganese oxide such as $MnO_2$ may serve as an $O_2$ reduction catalyst. Alternatively, oxygen may be reduced directly to $OH^-$ or $H_2O$ by four electrons. This pathway is predominant on noble metals such as platinum and platinum group metals, some transition metal oxides having the perovskite or pyrochlore structure, some transition metal macrocycles such as iron phthalocyanine, and silver. In an embodiment, the cathode is resistant to corrosion by an alkaline electrolyte such as aqueous or molten alkali hydroxide such as LiOH, NaOH, or KOH. Suitable cathodes are Ni and Cu.

The electrode may comprise a compound electrode for oxygen reduction and evolution. The latter may be used for regeneration. The electrode may be bifunctional capable of oxygen reduction and evolution wherein the activity is provided by corresponding separate catalyst layers, or the electrocatalyst may be bifunctional. The electrode and cell designs may be those known in the Art for metal-air batteries such as Fe or Zn-air batteries or a suitable modification thereof known by those skilled in the Art. A suitable electrode structure comprises a current collector, a gas diffusion layer that may comprise carbon and a binder, and an active layer that may be a bifunctional catalyst. Alternatively, the electrode may comprise the $O_2$ reduction layers on one side of the current collector and $O_2$ evolution layers on the other side. The former may comprise an outer gas diffusion layer in contact with the source of oxygen and a porous, hydrophobic catalyst layer in contact with the current collector; whereas, the latter may comprise a porous, hydrophilic catalyst layer in contact with the electrolyte on one side of the layer and the current collector on the other side.

Suitable perovskite-type oxides that may serve as catalysts to reduce oxygen from a source may have the general formula $ABO_3$, and such substituted perovskites can have the general formula $A_{1-x}A'_xB_{1-y}B'_yO_3$. A may be La, Nd; A' may be strontium, barium, calcium; and B may be nickel, cobalt, manganese, ruthenium. Other suitable catalysts for reducing oxygen at the cathode are a perovskite-type catalyst such as $La_{0.6}Ca_{0.4}CoO_3$ doped with metal oxide, $MNiO_2$ (M = alkali), $MM'O_2$ (M = alkali, M' = transition metal), $La_{1-x}Ca_xCoO_3$, $La_{1-x}Sr_xCoO_3$ ($0 \leq x \leq 0.5$), or

$La_{0.8}Sr_{0.2}Co_{1-y}B_yO_3$ (B =Ni, Fe, Cu, or Cr; 0 ≤ y ≤ 0.3), $La_{0.5}Sr_{0.5}CoO_3$,$LaNiO_3$, $LaFe_xNi_{1-x}O_3$, substituted $LaCoO_3$, $La_{1-x}Ca_xMO_3$, $La_{0.8}Ca_{0.2}MnO_3$, $La_{1-x}A'_xCo_{1-y}B'_yO_3$ (A' = Ca; B' = Mn, Fe, Co, Ni, Cu), $La_{0.6}Ca_{0.4}Co_{0.8}Fe_{0.2}O_3$, $La_{1-x}A'_xFe_{1-y}B'_yO_3$ (A' = Sr, Ca, Ba, La; B' = Mn), $La_{0.8}Sr_{0.2}Fe_{1-y}Mn_yO_3$, and perovskite-type oxides based on Mn and some transition metal or lanthanoid, or a spinel such as $Co_3O_4$ or $NiCo_2O_4$, a pyrochlore such as $Pb_2Ru_2Pb_{1-x}O_{1-y}$ or $Pb_2Ru_2O_{6.5}$, other oxides such as $Na_{0.8}Pt_3O_4$, organometallic compounds such as colbalt porphyrin, or pyrolyzed macrocycles with Co additives. Suitable pyrochlore-type oxides have the general formula $A_2B_2O_7$ or $A_2B_{2-x}A_xO_{7-y}$ (A = Pb/Bi, B = Ru/Ir) such as $Pb_2Ir_2O_{7-y}$, $PbBiRu_2O_{7-y}$, $Pb_2(Pb_xIr_{2-x})O_{7-\delta}$, and $Nd_3IrO_7$. Suitable spinels are nickel cobalt oxides, pure or lithium-doped cobalt oxide ($Co_3O_4$), cobaltite spinels of the type $M_xCO_{3-x}O_4$ (M = Co, Ni, Mn oxygen reduction) and (M = Co, Li, Ni, Cu, Mn oxygen evolution). The oxygen reduction catalyst may be nickel, R-Ni, silver, Ag-support such as Ag-$Al_2O_3$, noble metal such as Pt, Au, Ir, Rh, or Ru, nickel cobalt oxide such as $NiCo_2O_4$, and copper cobalt oxide such as $CuCo_2O_4$. The oxygen reduction or evolution catalyst may further comprise a conducting support such as carbon such as carbon black, graphitic carbon, Ketjen black, or graphitized Vulcan XC 72. Exemplary cells are [Zn, Sn, Co, Sb, Te, W, Mo, Pb, Ge /KOH (saturated aq)/air + carbon + $O_2$ reduction catalyst such as perovskite-type catalyst such as $La_{0.6}Ca_{0.4}CoO_3$ doped with metal oxide, $La_{1-x}Ca_xCoO_3$, $La_{1-x}Sr_xCoO_3$ ($0 \le x \le 0.5$ ), or $La_{0.8}Sr_{0.2}Co_{1-y}B_yO_3$ (B =Ni, Fe, Cu, or Cr; $0 \le y \le 0.3$), or a spinel such as $Co_3O_4$ or $NiCo_2O_4$, a pyrochlore such as $Pb_2Ru_2Pb_{1-x}O_{1-y}$ or $Pb_2Ru_2O_{6.5}$, other oxides such as $Na_{0.8}Pt_3O_4$, or pyrolyzed macrocycles with Co additives]. In another embodiment, the cathode comprises a water reduction catalyst.

The cathode is capable of supporting the reduction of at least one of $H_2O$ and $O_2$. The cathode may comprise a high-surface area conductor such as carbon such as carbon black, activated carbon, and steam activated carbon. The cathode may comprise a conductor having a low over potential for the reduction of at least one of $O_2$ or $H_2O$ or $H_2$ evolution such as Pt, Pd, Ir, Ru, Rh, Au, or these metals on a conducting support such as carbon or titanium as the cathode with $H_2O$ as the cathode half-cell reactant. The electrolyte may be concentrated base such as in the range of about 6.1 M to saturated. Exemplary cells are [dissociator and hydrogen such as PtCB, PdC, or Pt(20%)Ru(10%) ($H_2$, ~1000 Torr), or metal hydride such as R-Ni of various compositions, R-Co, R-Cu, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$ or hydride of TABLE 5/aqueous base such as KOH (aq) electrolyte (>6.5 M to saturated or >11 M to saturated)/carbon, oxygen electrode such as $O_2$ or air at carbon, $C(O_2)_x$ or oxidized carbon such as steam activated carbon, or CB, PtC, PdC, CB($H_2$), PtC($H_2$), PdC($H_2$), conductor having a low over potential for reduction of at least one of $O_2$ or $H_2O$ or $H_2$ evolution such as Pt, Pd, Ir, Ru, Rh, Au, or these metals on a conducting support such as carbon or titanium as the cathode with at least one of $H_2O$ and $O_2$ as the cathode half-cell reactant].

In an embodiment, the anion can serve as a source of oxygen at the cathode. Suitable anions are oxyanions such as $CO_3^{2-}$, $SO_4^{2-}$, and $PO_4^{3-}$. The anion such as $CO_3^{2-}$ may form a basic solution. An exemplary cathode reaction is

Cathode

$$CO_3^{2-} + 4e^- + 3H_2O \text{ to } C + 6OH^- \quad (106)$$

The reaction may involve a reversible half-cell oxidation-reduction reaction such as

$$CO_3^{2-} + H_2O \text{ to } CO_2 + 2OH^- \quad (107)$$

The reduction of $H_2O$ to $OH^-$ + H may result in a cathode reaction to form hydrinos wherein $H_2O$ serves as the catalyst. Exemplary cells are [Zn, Sn, Pb, Sb/KOH (sat aq) + $K_2CO_3$/CB-SA] having KOH-$K_2CO_3$ electrolytes. In an embodiment, $CO_2$, $SO_2$, $PO_2$ and other similar reactants may be added to the cell as a source of oxygen.

The anode may comprise a metal capable of reacting with an oxygen species such as $OOH^-$ or $OH^-$. Suitable metals are Al, V, Zr, Ti, Mn, Se, Zn, Cr, Fe, Cd, Co, Ni, Sn, In, Pb, Cu, Sb, Bi, Au, Ir, Hg, Mo, Os, Pd, Re, Rh, Ru, Ag, Tc, Te, Tl, and W that may be powders. The anode may comprise short hydrophilic fibers such as cellulose fibers to prevent densification during recharging. The anode may be formed in a discharged state and activated by charging. An exemplary zinc anode may comprise a mixture of zinc oxide powder, cellulose fibers, polytetrafluorethylene binder, and optionally some zinc powder and additives such as lead (II) oxide or oxides of antimony, bismuth, cadmium, gallium, and indium to prevent $H_2$ evolution. The mixture may be stirred on a water-acetone mixture, and the resulting homogeneous suspension may be filtered, the filter cake pressed into a current collector such as lead-plated copper net and dried at temperature slightly >100 °C. The electrode having a porosity of about 50% may be wrapped in a micro-porous polymer membrane such as Celgard that holds the electrode together and may serve as the separator. In other embodiments, the anode may be assembled using primarily Zn powder that avoids the initial charging step.

The cell may comprise a stack of cells connected in series or in parallel that may have a reservoir to accommodate volume changes in the electrolyte. The cell may further comprise at least one of humidity and $CO_2$ management systems. The metal electrode may be sandwiched between to oxygen electrodes to double the surface area. Oxygen may diffuse from air through a porous Teflon-laminated air electrode comprising an oxygen diffusion electrode. In an embodiment, the electrons from the cathode react with oxygen at catalytic sites of a wetted part of the oxygen diffusion electrode to form reduced water and oxygen species. In an embodiment, the anode is submerged, and the cathode comprises an electrolyte wetted portion and a portion that is in direct contact with the $O_2$ source such as air or $O_2$. In an embodiment, the oxygen reduction current is increased by increasing the material exposed to air for a given electrolyte interface area by adding more air exposed cathode surface area. In an embodiment, the cathode is submerged and oxygen is provided by electrolysis. In an embodiment, the cathode is mostly submerged with a smaller surface area portion exposed to air to supplement that provided by electrolysis to optimize the efficiency of the cell to form hydrinos while avoiding excessive corrosion such as corrosion of the anode. In an embodiment, oxygen and an inert gas mixture are provided to the cell with added $H_2O$ vapor. The oxygen may be in the range of about 1 to 10 molar % with $H_2O$ in the range of about range of about 31 Torr to 93 Torr. In embodiments of the CIHT cell supplied with $H_2O$, the $H_2O$ vapor is in the pressure range of at least one of about 0.001 Torr to 100 atm, about 0.001 Torr to 0.1 Torr, about 0.1 Torr to 1 Torr, about 1 Torr to 10 Torr, about 10 Torr to 100 Torr, about 100 Torr to 1000 Torr, and about 1000 Torr to 100 atm. The balance may be the inert gas such as nitrogen. In an embodiment, $O_2$ is about 5 molar %. In an embodiment, air is membrane or cryofiltered or processed to achieve the desired ratio of gases by means known to those skilled in the art. In another embodiment, the oxygen reduction electrode such as the cathode may be fully submerged in the electrolyte. Oxygen from a source may be supplied by means such as sparging a gas comprising oxygen such as $O_2$ or air or by intermittent electrolysis. The intermittent electrolysis electrodes may be different materials such as different metals or different materials of the disclosure such different electrodes selected from the group of metals, carbides, borides, nitrides, and carbonitrile. In an embodiment wherein the cathode is submerged, oxygen is provided by a source such as the electrolyte wherein the $O_2$ partial pressure is increased by maintaining an elevated $O_2$ pressure over the electrolyte. The elevated pressure may be in the range of about 0.5 atm to 200 atm or about 1 atm to 10 atm. In an embodiment, the electrolyte is selected to have an increased solubility for oxygen. Alternatively, the cathode material is selected such that it has an affinity for oxygen.

In an embodiment, the anode is partially submerged wherein the discharge anode has at least a portion of its surface not submerged into the electrolyte. In an embodiment, at least one electrode is partially submerged. Each electrode is in contact with the electrolyte. In an embodiment, at least one electrode has only a portion of the electrode surface area in contact with the electrolyte. At least some the surface area is not directly in contact with the electrolyte. The non-contacting surface area may be exposed to the cell atmosphere or another component of the cell such as a plate separator or the opposing side of a bipolar plate wherein the electrode comprises a side of a bipolar plate. The condition of having an electrode portion not submerged in the electrolyte provides a different chemical potential, Fermi level, or voltage relative to being submerged or the submerged portion. The different chemical potential, Fermi level, or voltage may facilitate the hydrino reaction.

In an embodiment, the discharge cathode may have at least a portion of its surface not submerged into the electrolyte independently of the cell atmosphere or cathode gas. The cathode gas may at least one of supplied air, oxygen, and $H_2O$ and electrolysis-generated oxygen. The water may comprise at least one of hydrogen, deuterium, and tritium such as at least one of $H_2O$, HOD, $D_2O$, $T_2O$, DOT, and HOT. The cathode gas may be an inert gas such as $N_2$ or a noble gas such as Ar. In this case, the oxygen may be from electrolysis. The partial non-submerged cathode provides a different chemical potential, Fermi level, or voltage relative to a submerged discharge anode even if the two are the same material. The different chemical potential, Fermi level, or voltage facilitates the hydrino reaction. The electrolyte having a discharge cathode partially submerged in it may comprise a matrix such as MgO, $LiAlO_2$, $Li_2TiO_3$, $LiVO_3$, $TiO_2$, $CeO_2$ and others of the disclosure. The electrolyte comprising a matrix may be solid or semisolid at the operating temperature of the cell that may be at or above the melting point of the electrolyte. The electrolyte may comprise those of the disclosure such as a molten salt such as an alkaline salt or a eutectic salt or mixture such as a MOH-MX wherein M is alkali and X is halide. In an embodiment wherein at least one of hydrogen and oxygen may be generated at least partially by intermittent electrolysis, the hydrogen and oxygen are in about a stoichiometric ratio of $H_2O$. In embodiments, the ratio is about 2 part $H_2$ to 1 part $O_2$ within about $\pm$ 300%, within about $\pm$ 100%, within about $\pm$ 50%, within about $\pm$ 25%, or within about $\pm$ 10%. The balance of cell gas may comprise water vapor at a pressure that optimizes the power or achieves a desired power and may further comprise an inert gas such as a noble gas or $N_2$. The water vapor pressure may be maintained in the range of about 0.01 Torr to 10 atm. In another embodiment, the water vapor pressure is maintained in the range of about 31 Torr to 93 Torr. The total pressure may be any desired such as above or below atmospheric such as about 1 atm to 500 atm, about 1 atm to 100 atm or about 1 amt to 10 atm. In an embodiment, the cell comprises at least one channel or passage for $H_2O$ vapor to penetrate the cell stack from a source to contact at least the electrolyte. In an embodiment, $H_2O$ is supplied to the stack through a wick structure such as that of a heat pipe. The wick may comprise nonconductive material to avoid electrically shorting the electrodes. The wick material may

comprise an oxide such as a metal oxide or other nonconductive compound. The oxide or other compound may be hydroscopic such as those of the disclosure. In another embodiment, $H_2O$ under pressure as gaseous $H_2O$ or liquid $H_2O$ may be injected through conduits or channels into the electrolyte layers. In an embodiment, the electrolyte layer comprises a wick or capillary structure to transport the $H_2O$ throughput the electrolyte layer of each cell of a stack. The structure may comprise a matrix embedded or mixed with the electrolyte having a porosity and pore size to achieve rapid transport within the layer to maintain the $H_2O$ concentration at an optimal level such as that equivalent to a partial pressure of $H_2O$ vapor in equilibrium with the electrolyte in the range of about 10 to 100 Torr.

In an embodiment, the stack comprises electrodes that are arranged in parallel and immersed in a common electrolytic reservoir. The electrodes may comprise plates stacked horizontally or vertically or any desired orientation. The electrolyte may comprise a base such as a molten or aqueous alkaline solution such as KOH (aq) or molten LiOH-LiBr or a molten or aqueous acidic solution such as an aqueous or molten acid such as $H_2SO_4$ (aq) or molten $H_3PO_4$. The cell may comprise a source of at least one of $H_2$, $O_2$, and $H_2O$. Oxygen and water may be at least partially from air. Hydrogen may be supplied by at least one of a hydrogen permeation electrode, a hydrogen sparging or bubbling electrode, or by intermittent electrolysis. The anode of the cell such as [Ni(H2)/LiOH-LiBr/Ni + air] may comprise a permeation membrane on opposite surfaces such as two opposing plates. The hydrogen may be supplied by a line optionally off of a common manifold to the chamber formed by the two opposing membrane surfaces such as plates. The cathode may be a porous material such as porous nickel such as celmet that may be at least partially exposed to air; whereas, the anode may be completely submerged. A plurality of anodes may be immersed vertically in the electrolyte and at least one cathode may be partially immersed on the surface of the electrolyte. The cathode may be oriented flat on the electrolyte surface. Each anode may be perpendicular to the at least one cathode wherein a plurality of anodes may be electronically connected in parallel with a common cathode. Alternatively, the cathode and anode electrodes may be parallel and may be separated by an inert separator such as MgO or $Li_2TiO_3$. The common reservoir may be heated by at least one heater. The temperature of the molten bath comprising the electrolyte may be controlled by a temperature controller. The common electrolyte may be circulated by a circulator to maintain a uniform temperature. The reservoir may be insulated. The cell may comprise an intermittent electrolysis cell. Hydrogen and oxygen may be generated intermittently by electrolysis. The polarity of the cell may remain constant with the current reversing direction intermittently as the cycle alternates between charge and discharge. The electrodes may be electrically connected in series or parallel or a combination thereof. In another embodiment, the oxygen reduction electrode such as the cathode may be fully submerged in the electrolyte. Oxygen from a source may be supplied by means such as sparging a gas comprising oxygen such as $O_2$ or air or by intermittent electrolysis. The intermittent electrolysis electrodes may be different materials such as different metals or different materials of the disclosure such different electrodes selected from the group of metals, carbon, carbides, borides, nitrides, and carbonitrile.

In an embodiment, the metal-air cell such as a Zn-air cell may be comprise a metal-air fuel cell wherein metal is continuously added and oxidized metal such as metal oxide or hydroxide is continuously removed. Fresh metal is transported to and waste oxidized metal away from the anode half-cell by means such a pumping, auguring, conveying, or other mechanical means of moving these materials known by those skilled in the Art. The metal may comprise pellets that can be pumped.

In an embodiment, an oxyhydroxide may serve as the source of oxygen to form $OH^-$. The oxyhydroxide may form a stable oxide. Exemplary cathode reactions comprise at least one of a reduction of an oxyhydroxide or a reduction reaction of an oxyhdroxide such as one of the group of MnOOH, CoOOH, GaOOH, and InOOH and lanthanide oxyhydroxides such as LaOOH with at least one of $H_2O$ and $O_2$ to form a corresponding oxide such as $La_2O_3$, $Mn_2O_3$, CoO, $Ga_2O_3$, and $In_2O_3$. Exemplary reactions of metal M are given by
Cathode:

$$MOOH + e^- \text{ to } MO + OH- \quad (108)$$

$$2MOOH + 2e^- + H_2O \text{ to } M_2O_3 + 2OH^- + H_2 \quad (109)$$

$$2MOOH + 2e^- + 1/2O_2 \text{ to } M_2O_3 + 2OH^- \quad (110)$$

Alternatively, an oxide may serve as the source of oxygen to form $OH^-$. The reduced metal product may be an oxide, oxyhydroxide, or hydroxide having the metal in a lower oxidation state. An exemplary cathode reaction involving metal M is
Cathode:

$$yMO_x + re^- + qH_2O \text{ to } M_yO_{yx+q-r} + rOH^- + (2q-r)/2H_2 \tag{111}$$

wherein y, x, r, and q are integers. Suitable exemplary oxides are $MnO_2$, $Mn_2O_3$, $Mn_3O_4$, M'O (M' = transition metal), $SeO_2$, $TeO_2$, $P_2O_5$, $SO_2$, $CO_2$, $N_2O$, $NO_2$, NO, SnO, PbO, $La_2O_3$, $Ga_2O_3$, and $In_2O_3$ wherein the gases may be maintained in a matrix such as absorbed in carbon. The electrolyte may be concentrated base such as in the range of about 6.1 M to saturated. Exemplary cells are [dissociator and hydrogen such as PtCB, PdC, or Pt(20%)Ru(10%) ($H_2$, ~1000 Torr), or metal hydride such as R-Ni of various compositions, R-Co, R-Cu, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$ or hydride of TABLE 5/aqueous base such as KOH (aq) electrolyte (>6.5 M to saturated or >11 M to saturated)/oxyhydroxide or oxide such as $MnO_2$, $Mn_2O_3$, $Mn_3O_4$, M'O (M' = transition metal), $SeO_2$, $TeO_2$, $P_2O_5$, $SO_2$, $CO_2$, $N_2O$, $NO_2$, NO, SnO, PbO, $La_2O_3$, $Ga_2O_3$, and $In_2O_3$ wherein the gases may be maintained in a matrix such as absorbed in carbon or CoOOH, MnOOH, LaOOH, GaOOH, or InOOH], [M/KOH (sat aq)/$MO_x$ (x =1 or 2) suitable metals M = Zn, Sn, Co, Sb, Te, W, Mo, Pb, Ge], and [M/KOH (sat aq)/M'OOH suitable metals M = Zn, Sn, Co, Sb, Te, W, Mo, Pb, Ge; M' = Mn, Co, La, Ga, In.

OH formed as an intermediate of an oxidation reaction of $OH^-$ may serve as a catalyst or source of catalyst such as OH or $H_2O$ to form hydrinos. In an embodiment, a metal that forms a hydroxide or oxide may serve as the anode. Alternatively, a hydroxide starting reactant may serve as the anode. At least one of the oxidized metal, the metal oxide, and the metal hydroxide may oxidize $OH^-$ to OH as an intermediate to form a compound comprising at least two of the metal, oxygen, and hydrogen such as the metal hydroxide, oxide, or oxyhydroxide. For example, the metal may oxidize to form a hydroxide that may further react to an oxide. At least one hydroxide H may be transferred to $OH^-$ as it is oxidized to form water. Thus, a metal hydroxide or oxyhydroxide may react in similar manner as a hydride (Eq. (92)) to form an OH intermediate that can serve as a catalyst to form hydrinos, or $H_2O$ may be formed to serve as the catalyst. Exemplary reactions of metal M are

Anode:

$$M + OH^- \text{ to } M(OH) + e^- \tag{112}$$

then

$$M(OH) + OH^- \text{ to } MO + H_2O + e^- \tag{113}$$

$$M + 2OH^- \text{ to } M(OH)_2 + 2e^- \tag{114}$$

then

$$M(OH)_2 \text{ to } MO + H_2O \tag{115}$$

$$M + 2OH^- \text{ to } MO + H_2O + 2e^- \tag{116}$$

wherein OH of the water product may be initially formed as an intermediate and serve as a catalyst to form hydrinos, or $H_2O$ may be formed to serve as the catalyst. The anode metal may be stable to direct reaction with concentrated base or may react at a slow rate. Suitable metals are a transition metal, Ag, Cd, Hg, Ga, In, Sn, Pb, and alloys comprising one or more of these and other metals. The anode may comprise a paste of the metal as a powder and the electrolyte such as a base such as MOH (M= alkali). Exemplary paste anode reactants are Zn powder mixed with saturated KOH or Cd powder mixed with KOH. Suitable electropositive metals for the anode are one or more of the group of Al, V, Zr, Ti, Mn, Se, Zn, Cr, Fe, Cd, Co, Ni, Sn, In, and Pb. Alternatively, suitable metals having low water reactivity are Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W. In other embodiments, the anode may comprise a hydroxide or oxyhydroxide such as one of these metals such as $Co(OH)_2$, $Zn(OH)_2$, $Sn(OH)_2$, and $Pb(OH)_2$. Suitable metal hydroxides form oxides or oxyhydroxides. The electrolyte may be concentrated base such as in the range of about 6.1 M to saturated. Exemplary cells are [metal such as Sc, Ti, V, Cr, Mn, Fe, Co, Ni, Cu, Zn, Ag, Cd, Hg, Ga, In, Sn, Pb, or metals having low water reactivity such as one from the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W, or these metals as paste with saturated MOH or a metal hydroxide such as $Co(OH)_2$, $Zn(OH)_2$, $Sn(OH)_2$, or $Pb(OH)_2$/aqueous base such as KOH (aq) electrolyte

(>6.5 M to saturated or >11 M to saturated)/oxyhydroxide or oxide such as $MnO_2$, $Mn_2O_3$, $Mn_3O_4$, M'O (M' = transition metal), $SeO_2$, $TeO_2$, $P_2O_5$, $SO_2$, $CO_2$, $N_2O$, $NO_2$, NO, SnO, PbO, $La_2O_3$, $Ga_2O_3$, and $In_2O_3$ wherein the gases may be maintained in a matrix such as absorbed in carbon or CoOOH, MnOOH, LaOOH, GaOOH, or InOOH, or carbon, oxygen electrode such as $O_2$ or air at carbon, $C(O_2)_x$ or oxidized carbon such as steam activated carbon, or CB, PtC, PdC, $CB(H_2)$, $PtC(H_2)$, $PdC(H_2)$, conductor having a low over potential for reduction of at least one of $O_2$ or $H_2O$ or $H_2$ evolution such as Pt, Pd, Ir, Ru, Rh, Au, or these metals on a conducting support such as carbon or titanium as the cathode with at least one of $H_2O$ and $O_2$ as the cathode half-cell reactant], [hydroxide of Zn, Sn, Co, Sb, Te, W, Mo, Pb, or Y/KOH (saturated aq)/steam carbon], and [Zn-saturated MOH paste/MOH (saturated aq)/CB, activated carbon or steam activated carbon with $O_2$].

In an embodiment, the cathode may comprise a metal oxide such as an oxide or oxyhydroxide, and the anode may comprise a metal or a reduced oxide relative to the oxidized metal of the cathode. The reduction of water given in Eq. (93) may involve the oxygen of the oxide or oxyhydroxide. The cathode and anode may comprise the same metal in different oxidation or oxide states. The anode reaction may be given by at least one of Eqs. (112-116). Exemplary cells are [M/KOH (saturated aq)/MOOH (M = transition metal, rare earth metal, Al, Ga, or In)], [M/KOH (saturated aq)/$MO_2$ (M = Se, Te, or Mn)], and [M/KOH (saturated aq)/MO (M = Zn, Sn, Co, Sb, Te, W, Mo, Pb, or Ge)]. Hydrogen may be added to at least one half-cell to initiate and propagate the water oxidation and reduction reactions (e.g. Eqs. (93-94) and (123)) that maintain some OH or other catalyst comprising at least one of O and H such as $H_2O$. The source of hydrogen may be a hydride such as R-Ni or $LaNi_5H_6$. Carbon such as steam carbon may also be added to an electrode such as the cathode to facilitate the reduction of water to $OH^-$ and $OH^-$ oxidation to OH and possibly $H_2O$. At least one electrode may comprise a mixture comprising carbon. For example, the cathode may comprise a mixture of carbon and a metal oxide such as a mixture of steam carbon and an oxide of Zn, Sn, Co, Sb, Te, W, Mo, Pb, or Ge. The anode may comprise the corresponding metal of the cathode metal oxide. Other suitable catalysts for reducing $O_2$ at the cathode are a perovskite-type catalyst such as $La_{0.6}Ca_{0.4}CoO_3$ doped with metal oxide, $La_{1-x}Ca_xCoO_3$, $La_{1-x}SrxCoO_3$ ($0 \leq x \leq 0.5$), or $La_{0.8}Sr_{0.2}Co_{1-y}B_yO_3$ (B =Ni, Fe, Cu, or Cr; $0 \leq y \leq 0.3$), or a spinel such as $Co_3O_4$ or $NiCo_2O_4$, a pyrochlore such as $Pb_2Ru_2Pb_{1-x}O_{1-y}$ or $Pb_2Ru_2O_{6.5}$, other oxides such as $Na_{0.8}Pt_3O_4$, or pyrolyzed macrocycles with Co additives. The oxygen reduction catalyst may further comprise a conducting support such as carbon such as carbon black or graphitic carbon. Exemplary cells are [Zn, Sn, Co, Sb, Te, W, Mo, Pb, Ge /KOH (saturated aq)/air + carbon + $O_2$ reduction catalyst such as perovskite-type catalyst such as $La_{0.6}Ca_{0.4}CoO_3$ doped with metal oxide, $La_{1-x}Ca_xCoO_3$, $La_{1-x}Sr_xCoO_3$ ($0 \leq x \leq 0.5$ ), or $La_{0.8}Sr_{0.2}Co_{1-y}B_yO_3$ (B =Ni, Fe, Cu, or Cr; $0 \leq y \leq 0.3$), or a spinel such as $Co_3O_4$ or $NiCo_2O_4$, a pyrochlore such as $Pb_2Ru_2Pb_{1-x}O_{1-y}$ or $Pb_2Ru_2O_{6.5}$, other oxides such as $Na_{0.8}Pt_3O_4$, or pyrolyzed macrocycles with Co additives]. In another embodiment, the cathode comprises a water reduction catalyst.

In an embodiment, the cell further comprises a source of oxygen that serves as a reactant to directly or indirectly participate in the formation of a catalyst and a source of H that further reacts to form hydrinos. The cell may comprise a metal M that serves as the anode such that the corresponding metal ion serves as the migrating ion. Suitable exemplary metals are at least one of the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W, and metal alloys thereof or alloys of other metals. OH may serve as the catalyst according to the reactions given in TABLE 3, or $H_2O$ may be formed to serve as the catalyst. In addition to the metal ion such as $M^{2+}$, some OH may be formed at least transiently from $OH^-$. $H_2O$ that may form from OH may serve as the catalyst. Oxygen may be reduced at the cathode. Water may also participate in the reduction reaction to form at least some OH that may serve as the catalyst or a source of catalyst such as $H_2O$ to form hydrinos. Exemplary reactions are

Anode:

$$M \text{ to } M^{2+} + 2e^- \quad (117)$$

$$M + 2OH^- \text{ to } M(OH)_2 + 2e^- \quad (118)$$

Cathode:

$$M^{2+} + 2e^- + 1/2O_2 \text{ to } MO \quad (119)$$

$$M^{2+} + 2e^- + H_2O + 1/2O_2 \text{ to } M^{2+} + 2OH^- \text{ to } M(OH)_2 \quad (120)$$

wherein some OH radical intermediate is formed at the anode or cathode to further react to form hydrinos possibly by

forming $H_2O$ catalyst. In another embodiment, the source of oxygen to react with water is an oxyhydroxide such as MnOOH or CoOOH. OH may be formed by oxidation of $OH^-$ at the anode and reduction of O or $O_2$ to $OH^-$ at the cathode. The O may be that of an oxyhydroxide. The energy balance may facilitate the formation of at least one of OH and $H_2O$ under conditions to propagate the reaction to form hydrinos. In other embodiments, the oxidant may be a mixture of oxygen and another oxidant that may be a gas or may be inert. Suitable exemplary mixtures are $O_2$ mixed with at least one of $CO_2$, $NO_2$, NO, $N_2O$, $NF_3$, $CF_4$, $SO_2$, $SF_6$, $CS_2$, He, Ar, Ne, Kr, and Xe.

The base concentration such as MOH (M =alkali) such as KOH (aq) may be in any desired range such as in the range of about 0.01 M to saturated (sat), about 6.5 M to saturated, about 7 M to saturated, about 8 M to saturated, about 9 M to saturated, about 10 M to saturated, about 11 M to saturated, about 12 M to saturated, about 13 M to saturated, about 14 M to saturated, about 15 M to saturated, about 16 M to saturated, about 17 M to saturated, about 18 M to saturated, about 19 M to saturated, about 20 M to saturated, and about 21 M to saturated. Other suitable exemplary electrolytes alone, in combination with base such as MOH (M = alkali), and in any combinations are alkali or ammonium halides, nitrates, perchlorates, carbonates, $Na_3PO_4$ or $K_3PO_4$, and sulfates and $NH_4X$, X = halide, nitrate, perchlorate, phospate, and sulfate. The electrolyte may be in any desired concentration. When R-Ni is used as the anode, a local high concentration of $OH^-$ may form due to the base composition of R-Ni or the reaction of Al with water or base. The Al reaction may also supply hydrogen at the anode to further facilitate the reaction of Eq. (92).

The anode powder particles may have a protective coating to prevent alkaline corrosion of the metal that are known in the Art. A suitable zinc corrosion inhibitor and hydrogen evolution inhibitor is a chelating agent such as one selected from the group of aminocarboxylic acid, polyamine, and aminoalcohol added to the anode in sufficient amount to achieve the desired inhibition. Suppression of Zn corrosion may also be achieved by amalgamating zinc with up to 10% Hg and by dissolving ZnO in alkaline electrolytes or Zn salts in acidic electrolytes. Other suitable materials are organic compounds such as polyethylene glycol and those disclosed in U.S. Patent 4,377,625 incorporated herein by reference, and inhibitors used in commercial Zn-$MnO_2$ batteries known to those skilled in the Art. Further suitable exemplary inhibitors for Zn and possibliy other metals are organic or inorganic inhibitors, organic compounds such as surfactants, and compounds containing lead, antimony, bismuth, cadmium, and gallium that suppress $H_2$ formation as well as orresponding metal oxides, and chelating agents such as 5%CoO + 0.1% diethylanetriaminepentaacetic acid, 5% $SnO_2$ + 0.1% diethylanetriaminepentaacetic acid, ethylenediaminetretraacetic acid (EDTA) or a similar chelating agent, ascorbic acid, Laponite or other such hydroxide-ion-transporting clay, a surfactant and indium sulphate, aliphatic sulfides such as ethyl butyl sulphide, dibutyl sulphide, and allyl methyl sulphide, complexing agents such as alkali citrate, alkali stannate, and calcium oxide, metal alloys and additives such as metals of groups III and V, polyethylene glycol, ethylene-polyglycol such as those of different molecular mass such as PEG 200 or PEG 600, fluoropolietoksyalkohol, ether with ethylene oxide, polyoxyethylene alkyl phosphate ester acid form, polyethylene alkyl phosphate, ethoxylated-polyfluoroalcohol, and alkyl-polyethylene oxide. In further embodiments, other electropositive metals such as Sc, Ti, V, Cr, Mn, Fe, Co, Ni, Cu, Ag, Cd, Hg, Ga, In, Sn, and Pb or suitable metals having low water reactivity are Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W are protected by a corrosion inhibitor. In an embodiment, the protective coating material may be supported to comprise a salt bridge selective for $OH^-$. A suitable cell comprising the salt bridge is a fuel cell type as given in the disclosure. The salt bridge may be a membrane having quaternary ammonium groups of similar groups that provide selectivity for $OH^-$. Alternatively, it could be an oxide or hydroxide selective to $OH^-$. A commercial separator that is resistant to $H_2$ permeation for use with a hydrogen anode is Nafion 350 (DuPont).

The cell may be regenerated by electrolysis or by reaction with hydrogen and by other chemical processing and separation methods and systems given in the disclosure or known in the Art. The oxidized metal such as the metal oxide may be regenerated by electrolysis at a lower voltage by supplying $H_2$ to the anode wherein the metal is deposited at the cathode. For another example, the Zn anode may be removed and replaced with a new canister with chemically regenerated Zn. In an embodiment comprising a Zn, Pb, or Sn anode that forms ZnO, PbO, and SnO, respectively, during discharge, the product ZnO, PbO, and SnO may be treated with carbon or CO to form zinc, lead, and tin and $CO_2$ or treated with sulfuric acid to form $ZnSO_4$, $PbSO_4$, $SnSO_4$, that may be electrolyzed to form Zn, Pb, and Sn and sulfuric acid that may be recycled. In the case of a cell comprising initial reactants of a metal anode and the corresponding oxidized metal such as an oxide, oxyhydroxide, and hydroxide, the cell products are oxidized metal at both electrodes. The cell may be regenerated by electrolysis or by removing the electrodes, combining the electrode reactants comprising a mixture of metal and oxidized metal compound(s) and separating the mixture into metal and oxidized metal compound(s). An exemplary method is to heat the mixture such that the metal melts and forms a separable layer based on density. Suitable metals are Pb (MP = 327.5 °C), Sb (MP = 630.6 °C), Bi (MP = 271.4 °C), Cd (MP = 321 °C), Hg (MP = -39 °C), Se (MP = 221 °C), and Sn (MP = 232 °C). In another embodiment, the anode comprises a magnetic metal such as a ferromagnetic metal such as Co or Fe, and the cathode comprises the corresponding oxide such as CoO and NiO. Following discharge, the cathode and anode may comprise a mixture of the metal and the corresponding oxide. The metal and oxide of each half-cell may be separated magnetically since the metal is ferromagnetic. The separated metal may be returned to the anode, and the separated metal oxide may be returned to the cathode to form a regenerated

cell.

In a general reaction, $OH^-$ undergoes oxidation to OH to serve as a catalyst to form hydrinos and may form $H_2O$ from a source of H such as a hydride (Eq. (92)) or hydroxide (Eq. (113)) wherein $H_2O$ may serve as the catalyst to form hydrinos. The reaction of a hydroxide to provide H may be a reaction of two $OH^-$ groups under oxidization to form a metal oxide and $H_2O$. The metal oxide may be a different metal or the same metal as the source of at least one $OH^-$ group. As given by Eq. (113) a metal M' may react with a source of $OH^-$ from MOH such as M is alkali to form OH and $H_2O$. Whereas, Eq. (128) is an example of the reaction of metal M as the source of $OH^-$ and the metal that forms the metal oxide. Another form of the reactions of Eqs. (128) and (61) involving the exemplary cell [Na/BASE/NaOH] that follows the same mechanism as that of Eq. (113) is

$$Na + 2NaOH \text{ to } Na_2O + OH + NaH \text{ to } Na_2O + NaOH + 1/2H_2 \quad (121)$$

In an embodiment of the electrolysis cell comprising a basic aqueous electrolyte, the reaction mechanism to form OH and hydrinos follows that of Eqs. (92-121) and (128). For example, the electrolyte may comprise an alkali (M) base such as MOH or $M_2CO_3$ that provides $OH^-$and alkali metal ions $M^+$ that may form $M_2O$ and OH as an intermediate to $H_2O$. For example, an exemplary cathode reaction following Eq. (121) is

$$K^+ + e^- + 2KOH \text{ to } K_2O + OH + KH \text{ to } K_2O + KOH + 1/2H_2 \quad (122)$$

In another embodiment of the aqueous electrolysis cell, the oxygen from the anode reacts with a metal or metal hydride at the cathode to form $OH^-$ (Eq. (93)) that is oxidized at the anode to form OH. OH may also be formed as an intermediate at the cathode. OH further reacts to form hydrinos possibly by forming $H_2O$ that serves as the catalyst. The reduction of $O_2$ and $H_2O$ to $OH^-$ at the cathode may be facilitated by using a carbon or carbon-coated metal cathode. The carbon may be electroplated from a carbonate electrolyte such as an alkali carbonate such as $K_2CO_3$. The cell may be operated without an external recombiner to increase the $O_2$ concentration to increase the $O_2$ reduction rate.

In other embodiments of a cell that produces OH, at least one of H and O formed during at least one of the oxidation and reduction reactions may also serve as a catalyst to form hydrinos.

In a further generalized reaction having a hydrogen chalcogenide ion electrolyte, the cathode reaction comprises a reaction that performs at least one of the steps of accepting electrons and accepting H. The anode reaction comprises a reaction that performs at least one of the steps of donating electrons, donating H, and oxidizing the hydrogen chalcogenide ion.

In another embodiment, a cell system shown in FIGURE 4 may comprise an anode compartment 600, an anode 603 such as Zn, a cathode compartment 601, a cathode 604 such as carbon, and a separator 602 such as a polyolefin membrane selectively permeable to the migrating ion such as $OH^-$ of an electrolyte such as MOH (6.5 M to saturated) (M=alkali). A suitable membrane is Celgard 3501. The electrodes are connected through switch 606 by a load 605 to discharge the cell such that an oxide or hydroxide product such as ZnO is formed at the anode 603. The cell comprising electrodes 603 and 604 may be recharged using electrolysis power supply 612 that may be another CIHT cell or a capacitor that is charged by the first CIHT cell. The cell may further comprise an auxiliary electrode such as an auxiliary anode 609 in an auxiliary compartment 607 shown in FIGURE 4. When the cell comprising anode 603 and cathode 604 is suitably discharged, electrode 603 comprising an oxidized product such as ZnO may serve as the cathode with the auxiliary electrode 609 serving as the anode for electrolysis regeneration of anode 603 or for spontaneous discharge. A suitable electrode in the latter case with a basic electrolyte is Ni or Pt/Ti. In the latter case, suitable hydride anodes are those used in metal hydride batteries such as nickel-metal hydride batteries that are known to those skilled in the Art. Exemplary suitable auxiliary electrode anodes are those of the disclosure such as a metal such as Sc, Ti, V, Cr, Mn, Fe, Co, Ni, Cu, Zn, Ag, Cd, Hg, Ga, In, Sn, Pb, or suitable metals having low water reactivity are Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, or W, or these metals as paste with saturated MOH, a dissociator and hydrogen such as $PtC(H_2)$, or metal hydride such as R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, and other alloys capable of storing hydrogen, such as one of the $AB_5$ (LaCePrNdNiCoMnAl) or $AB_2$ (VTiZrNiCrCoMnAlSn) type, where the "$AB_x$" designation refers to the ratio of the A type elements (LaCePrNd or TiZr) to that of the B type elements (VNiCrCoMnAlSn). In other embodiments, the hydride anode comprises at least one of the $AB_5$-type: $MmNi_{3.2}Co_{1.0}Mn_{0.6}Al_{0.11}Mo_{0.09}$ (Mm = misch metal: 25 wt% La, 50 wt% Ce, 7 wt% Pr, 18 wt% Nd), $AB_2$-type: $Ti_{0.51}Zr_{0.49}V_{0.70}Ni_{1.18}Cr_{0.12}$ alloys, magnesium-based alloys such as $Mg_{1.9}Al_{0.1}Ni_{0.8}Co_{0.1}Mn_{0.1}$ alloy, $Mg_{0.72}Sc_{0.28}(Pd_{0.012} + Rh_{0.012})$, and $Mg_{80}Ti_{20}$, $Mg_{80}V_{20}$, $La_{0.8}Nd_{0.2}Ni_{2.4}Co_{2.5}Si_{0.1}$, $LaNi_{5-x}M_x$ (M= Mn, Al), (M= Al, Si, Cu), (M= Sn), (M= Al, Mn, Cu) and $LaNi_4Co$, $MmNi_{3.55}Mn_{0.44}Al_{0.3}Co_{0.75}$, $LaNi_{3.55}Mn_{0.44}Al_{0.3}Co_{0.75}$, $MgCu_2$, $MgZn_2$, $MgNi_2$, AB compounds such as TiFe, TiCo, and TiNi, $AB_n$ compounds (n = 5, 2, or 1), $AB_{3-4}$ compounds, and $AB_x$ (A = La, Ce, Mn, Mg; B = Ni, Mn, Co, Al). The cell comprising anode 609 and

cathode 603 may be discharged through load 613 when switch 611 is closed and switch 606 is opened. The cell comprising electrodes 603 and 609 may be recharged using power supply 610 that may be another CIHT cell. Alternatively, following closing switch 614 and opening switch 611, the recharging of the discharged cell comprising electrodes 604 and 609 may occur using power source 616 that may be another CIHT cell. Furthermore, the auxiliary anode 609 such as a hydride such as R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, or $ZrMn_{0.5}Cr_{0.2}V_{0.1}Ni_{1.2}$ may be recharged electrolytically or regenerated by addition of hydrogen in situ or by removal, hydrogenation, and replacement. Suitable exemplary anodes that form oxides or hydroxides during discharge having thermodynamically favorable regeneration reactions of $H_2$ reduction to the metal are Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W. These and other such electrodes may be run with $H_2$ in the half-cell to batch or continuously regenerate the electrode. Electrodes can be alternately recycled. For example, the discharged metal hydride anode such as $LaNi_5$ from $LaNi_5H_6$ may be used as the cathode in another aqueous cell wherein water or $H^+$ reduction to hydrogen at the cathode will rehydride the $LaNi_5$ to $LaNi_5H_6$ that in turn can serve as an anode. The energy source that drives the discharge and recharge cycles is the formation of hydrinos from hydrogen. Other anodes, cathodes, auxiliary electrodes, electrolytes, and solvents of the disclosure may be interchanged by one skilled in the Art to comprise other cells capable of causing the regeneration of at least one electrode such as the initial anode.

In other embodiments, at least one of the anode 603 and cathode 604 may comprise a plurality of electrodes wherein each further comprises a switch to electrically connect or disconnect each of the plurality of electrodes to or from the circuit. Then, one cathode or anode may be connected during discharge, and another may be connected during recharge by electrolysis, for example. In an exemplary embodiment having a basic electrolyte such as MOH (M = alkali) such as KOH (saturated aq), the anode comprises a metal such as suitable metals having low water reactivity are Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, or Zn or a hydride such as R-Ni or $LaNi_5H_6$, and the cathode comprises a plurality of at least two electrodes such as a carbon electrode that is connected to the circuit during discharge and nickel that is connected during recharge. In another embodiment, the electrolyte may be changed in at least one half-cell before electrolysis. For example, saturated MOH may be diluted to allow $H_2$ evolution at the electrolysis cathode and then concentrated again for discharge. In another embodiment, at least one of the solvent and solute may be changed to permit the cell reactants to be regenerated. The electrolysis voltage of the cell products may exceed that of the solvent; then the solvent change is selected to permit the regeneration of the reactants by electrolysis. In an embodiment, the anode such as metal or hydride may be removed from a first cell comprising the anode and a cathode following discharge and regenerated by electrolysis in a second cell having a counter electrode and returned to the first cell as the regenerated anode. In an embodiment, the CIHT cell comprising a hydride anode further comprises an electrolysis system that intermittently charges and discharges the cell such that there is a gain in the net energy balance. An exemplary cells are [$LaNi_5H_6$, R-Ni, TaV, MoCo, MoSi, MoCr, MoCu, SnV, NiZr, MgY, other metal hydride such as those of the disclosure, KOH (sat aq) or other electrolyte that is a source of $OH^-$ /SC or M] (M = metal or alloy such as Ni, Pt/Ti, or others of the disclosure) pulsed electrolysis with constant discharge and charge current wherein the discharge time is about 1.1 to 100 times the charge time and the discharge and charge currents may be the same within a factor of about 10. In an embodiment, the cells are intermittently charged and discharged. In exemplary embodiments, the cells have metal anodes or metal hydride (MH) anodes such as [Co/KOH (sat aq)/SC], [Zn/KOH (sat aq)/SC], [Sn/KOH (sat aq)/SC], and [MH/KOH (sat aq)/SC] wherein MH may be $LaNi_5H_x$, $TiMn_2H_x$, or $La_2Ni_9CoH_x$. The intermittently charged and discharged CIHT cells may also comprise a molten electrolyte such as at least one hydroxide and a halide or other salt and may further comprise a source of H at the anode such as a hydride MH or $H_2O$ that may be in the electrolyte. Suitable exemplary cells are [MH/M'$(OH)_n$-M"$X_m$/M'''] and [M/M'$(OH)_n$-M"$X_m$ ($H_2O$)/M] wherein n, m are integers, M, M', M", and M''' may be metals, suitable metals M may be Ni, M' and M" may be alkali and alkaline earth metals, and may be transition, inner transition, rare earth, and Group III, IV, V, and VI metals, and suitable anions X may be hydroxide, halide, sulfate, nitrate, carbonate, and phosphate. In an exemplary embodiment, the CIHT cell is charged at constant current such as 1 mA for 2 s, and then discharged such as at constant current of 1 mA for 20 s. The currents and times may be adjusted to any desirable values to achieve maximum energy gain.

In an embodiment, the anode comprises a metal that forms an oxide or a hydroxide that may be reduced by hydrogen. The hydrogen may be formed at the cathode by a reaction such as the reaction of water such as that given by Eq. (94). The oxide or hydroxide may also be reduced by added hydrogen. In an embodiment, an oxide or hydroxide is formed at the anode wherein water is the source of hydroxide, and hydrogen reduces the hydroxide or oxide wherein water is at least partially the source hydrogen. Hydrinos are formed during the dynamic reaction involving the oxidation of $OH^-$ or the metal of the anode, the reduction of water to hydrogen gas, and the reaction of hydrogen with the anode oxide or hydroxide to regenerate the anode metal. Then, the anode may comprise a metal whose oxide or hydroxide may be reduced by hydrogen such as a one of the group of transition metals, Ag, Cd, Hg, Ga, In, Sn, and Pb or suitable metals having low water reactivity from the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W. In an embodiment, the transition metal Zn may also serve as a catalyst according to the reactions given in TABLE 1.

The cell may be regenerated by electrolysis of water with add-back for any hydrogen consumed in forming hydrinos or lost from the cell. In an embodiment, the electrolysis is pulsed such that a hydride such as metal hydride such as nickel hydride is formed during electrolysis that produces a voltage in the reverse direction of the electrolysis voltage and electrolyzes water during the time interval of the duty cycle having an absence of applied voltage. The electrolysis parameters such as peak voltage, current, and power, offset voltage, current, and power, and duty cycle, and frequency are optimized to increase the energy gain. In an embodiment, the cell generates electricity and hydrogen gas (Eq. (94)) that may be collected as a product. Alternatively, the hydrogen gas may be recycled to hydride the R-Ni to continue the cell discharge with the production of electricity wherein the formation of hydrinos provides a contribution to at least one of the cell voltage, current, power, and energy. The cell may also be recharged by an external source of electricity that may be another CIHT cell to cause the generation of hydrogen to replace any consumed in the formation of hydrinos or lost from the cell. In an embodiment, the hydride material may be rehydrided by $H_2$ addition in situ or in a separate vessel following removal from the anode compartment. In the former case, the anode may be sealed and pressurized with hydrogen. Alternatively, the cell may be pressurized with hydrogen wherein the hydrogen is preferentially absorbed or retained by the anode reactant. In an embodiment, the cell may be pressurized with $H_2$ during operation.

The basic electrolyte may be aqueous hydroxide solution such as aqueous alkali hydroxide such as KOH or NaOH. The cathode may be an oxyhydroxide such as AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$, or may be a high-surface area conductor such as carbon such as CB, Pt/C or Pd/C, a carbide such as TiC, or a boride such as $TiB_2$. In basic solution, the reactions are

Anode

$$H_2 + 2OH^- \text{ to } 2H_2O + 2e^- \text{ or } H_2 + OH^- \text{ to } H_2O + e^- + H(1/p) \tag{123}$$

Cathode

$$2(CoOOH + e^- + H_2O \text{ to } Co(OH)_2 + OH^-)$$

or

$$CoOOH + 2e^- + 2H_2O \text{ to } Co(OH)_2 + 2OH^- + H(1/p) \tag{124}$$

Exemplary cells are [R-Ni, $H_2$ and Pd/C, Pt/C, Ir/C, Rh/C, or Ru/C or metal hydride such as a transition metal, inner transition metal, rare earth hydride, or alloy such as one of the $AB_5$ or $AB_2$ types of alkaline batteries/MOH (M is an alkali metal) such as KOH (about 6M to saturated) wherein the base may serve as a catalyst or source of catalyst such as K or $2K^+$, or other base such as $NH_4OH$, $OH^-$ conductor such as a basic aqueous electrolyte, separator such as one with quaternary alkyl ammonium hydroxide groups and basic aqueous solution, ionic liquid, or solid $OH^-$ conductor/ MO(OH) (M = metal such as Co, Ni, Fe, Mn, Al), such as AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$, or other H intercalated chalcogenide, or HY]. In other embodiments, the electrolyte may be an ionic liquid or salt in an organic solvent. The cell may be regenerated by charging or by chemical processing.

In a fuel cell system embodiment having supplied $H_2$, the $H_2$ is caused to selectively or preferentially react at the anode. The reaction rate of $H_2$ at the anode is much higher than at the cathode. Restricting $H_2$ to the anode half-cell or using a material that favors the reaction at the anode over the cathode comprises two methods to achieve the selectivity. The cell may comprise a membrane or salt bridge that is ideally impermeable to $H_2$. The membrane or salt bridge may be selective for $OH^-$ transport.

In another embodiment, the pH may be lower such as neutral to acidic. In the case that $H_2O$ is oxidized to form OH that further reacts to form hydrino, the concentration of the electrolyte may be high to increase the activity and conductivity to increase the reaction rate to form OH and thus hydrino as given by the following reaction:

Anode

$$H_2O \text{ to } OH + e^- + H^+ \text{ to } 1/2O_2 + e^- + H^+ + H(1/p) \tag{125}$$

$$MH_x + H_2O \text{ to } OH + 2e^- + 2H^+ \text{ to } 1/2O_2 + 2H^+ + 2e^- + H(1/p) \tag{126}$$

Cathode

$$H^+ + e^- \text{ to } 1/2H_2 \text{ or } H^+ + e^- \text{ to } H(1/p) \quad (127)$$

The presence of an anode reactant hydride such as $MH_x$ (M is an element other than H such as a metal) favors the formation of OH over the evolution of $O_2$ by the competing reaction given by Eq. (126). The reaction to form hydrinos may be limited by the availability of H from the hydride; so, the conditions to increase the H concentration may be optimized. For example, the temperature may be increased or $H_2$ may be supplied to the hydride to replenish any consumed. The separator may be Teflon in cells with an elevated temperature.

In an embodiment, the anode or cathode may comprise an additive such as a support such as a carbide such as TiC or TaC or carbon such as Pt/C or CB, or an inorganic compound or getter such as LaN or KI. Exemplary cells are [Zn LaN/KOH (sat aq)/SC], [Sn TaC/KOH (sat aq)/SC], [Sn KI/KOH (sat aq)/SC], [Pb CB/KOH (sat aq)/SC], [W CB/KOH (sat aq)/SC]. In another embodiment, the electrolyte may comprise a mixture of bases such as saturated ammonium hydroxide to made saturated in KOH. Exemplary cells are [Zn/KOH (sat aq) $NH_4OH$ (sat aq)/SC], and [Co/KOH (sat aq) $NH_4OH$ (sat aq)/SC].

In an embodiment, at least one of the cathode and anode half-cell reactions form at least one of OH and $H_2O$ that serves as a catalyst to form hydrinos. OH may be formed by the oxidation of $OH^-$, or OH may be formed by the oxidation of a precursor such as a source of at least one of OH, H, and O. In the latter two cases, the H reacts with a source of O to form OH and O reacts with a source of H to form OH, respectively. The precursor may be a negative or neutral species or compound. The negative species may be an ion that comprises OH, $OH^-$, or a moiety that comprises OH or $OH^-$ such as $Al(OH)_4^-$ that comprises $OH^-$, or a superoxide or peroxide ion ( $HO_2^-$ ) that comprises OH. The negative species may be an ion that comprises H, $H^-$, or a moiety that comprises H or $H^-$ such as $AlH_4^-$ that comprises $H^-$, or a peroxide ion that comprises H. The H product of oxidation of the negative species then reacts with a source of O to form OH. In an embodiment, OH may be formed by a reaction of H or source of H with an oxide or oxyhydroxide that may form $OH^-$ as an intermediate to forming OH. The negative species may be an ion that comprises an element or elements other than H such as O, $O^-$, $O^{2-}$, $O_2^-$, $O_2^{2-}$, or a moiety that comprises O, $O^-$, $O^{2-}$, $O_2^-$, or $O_2^{2-}$ such as metal oxide such as $CoO_2^-$ or $NiO_2^-$ that comprises an oxide ion, or a peroxide ion that comprises O. The O product of oxidation of the negative species then reacts with a source of H to form OH. The neutral species or compound may comprise OH, $OH^-$, or a moiety that comprises OH or $OH^-$ such a hydroxide or oxyhydroxide such as NaOH, KOH, $Co(OH)_2$ or CoOOH that comprise $OH^-$, or $H_2O$, an alcohol, or peroxide that comprise OH. The neutral species or compound may comprise H, $H^-$, or a moiety that comprises H or $H^-$such as a metal hydride that comprises $H^-$, or $H_2O$, an alcohol, or peroxide that comprises H. The H product of oxidation then reacts with a source of O to form at least one of OH and $H_2O$ wherein at least one may serve as the catalyst. The neutral species or compound may comprise an element or elements other than H such as O, $O^-$, $O^{2-}$, $O_2^-$, $O_2^{2-}$, or a moiety that comprises O, $O^-$, $O^{2-}$, $O_2^-$, or $O_2^{2-}$ such as metal oxide, hydroxide, or oxyhydroxide that comprises an oxide ion or source thereof, or $H_2O$, an alcohol, or peroxide that comprises O. The O product of oxidation then reacts with a source of H to form at least one of OH and $H_2O$.

OH may be formed by the reduction of $OH^+$, or OH may be formed by the reduction of a precursor such as a source of at least one of OH, H, and O. In the latter two cases, the H reacts with a source of O to form OH and O reacts with a source of H to form OH, respectively. The precursor may be a positive or neutral species or compound. The positive species may be an ion that comprises OH or a moiety that comprises OH such as $Al(OH)_2^+$ that comprises $OH^-$, or a peroxide ion that comprises OH. The positive species may be an ion that comprises H, $H^+$, or a moiety that comprises H or $H^+$ such as $H_3O^+$ that comprises $H^+$, or a peroxide ion that comprises H. The H product of reduction of the positive species then reacts with a source of O to form OH. The positive species may be an ion that comprises an element or elements other than H such as O, $O^-$, $O^{2-}$, $O_2^-$, $O_2^{2-}$, or a moiety that comprises O, $O^-$, $O^{2-}$, $O_2^-$, or $O_2^{2-}$ such as metal oxide such as $AlO^+$ that comprises an oxide ion, or a peroxide ion that comprises O. The O product of reduction of the positive species then reacts with a source of H to form OH. The neutral species or compound may comprise OH or a moiety that comprises OH such as $H_2O$, an alcohol, or peroxide. The neutral species or compound

may comprise H, $H^+$, or a moiety that comprises H or $H^+$ such as an acidic salt or acid such as $MHSO_4$, $MH_2PO_4$, $M_2HPO_4$ (M = alkali) and HX (X = halide), respectively, that comprises $H^+$, or $H_2O$, an alcohol, or peroxide that comprises H. The H product of reduction then reacts with a source of O to form OH. The neutral species or compound may comprise an element or elements other than H such as O or a moiety that comprises O such as $H_2O$, an alcohol, or peroxide. The O product of reduction then reacts with a source of H to form OH. OH may further react with H or a source of H to form $H_2O$ that may serve as the catalyst.

OH may be formed as an intermediate or by a concerted or secondary chemical reaction involving oxidation or reduction of a compound or species. The same applies for $H_2O$ catalyst. The reactants may comprise OH or a source of OH such as at least one of $OH^-$, O, and H. Suitable sources of OH formed as an intermediate in the formation or consumption of $OH^-$ are metal oxides, metal hydroxides, or oxyhydroxides such as CoOOH. Exemplary reactions are given in the disclosure wherein OH transiently forms during a reaction involving $OH^-$, and some of the at least OH and $H_2O$ reacts to form hydrinos. Examples of OH formed by a secondary reaction involve a hydroxide or oxyhydroxide such as NaOH, KOH, $Co(OH)_2$ or CoOOH that comprise $OH^-$. For example, Na may form by the reduction of $Na^+$ in a cell such as [Na/BASE/NaOH] wherein the reaction with NaOH can form OH as a transient intermediate as follows:

$$Na^+ + e^- \text{ to } Na; \; Na + NaOH \text{ to } Na_2 + OH \text{ to } Na_2O + 1/2H_2 \quad (128)$$

In an embodiment such as [Na/BASE/NaOH], the transport rate of $Na^+$ is maximized by means such as decreasing the BASE resistance by elevating the temperature or decreasing its thickness in order to increase the rate of at least one of $Na_2$ and H formation. Consequently, practical rates of at least one of OH and $H_2O$, and then hydrino formation occur.

Similarly, Li may form by the reduction of $Li^+$ in a cell such as [Li/Celgard LP 30/CoOOH] wherein the reaction with CoOOH can form OH as a transient intermediate as follows:

$$Li^+ + e^- \text{ to } Li\;;$$

$$3Li + 2CoOOH \text{ to } LiCoO_2 + Co + Li_2 + 2OH \text{ to } LiCoO_2 + Co + 2LiOH \quad (129)$$

Alternatively, in the organic electrolyte cell [Li/Celgard LP 30/CoOOH], the mechanism may be $OH^-$ migration to the anode wherein it is oxidized to at least one of nO, OH, and $H_2O$ that serves as the catalyst or reactant to form hydrino. Exemplary reactions are

Cathode

$$CoOOH + e^- \text{ to } CoO + OH^- \quad (130)$$

Anode

$$OH^- \text{ to } OH + e^-; \; OH \text{ to } O + H(1/p) \quad (131)$$

The O may react with Li to form $Li_2O$. The oxyhydroxide and electrolyte may be selected to favor $OH^-$ as the migrating ion. In an embodiment, the electrolyte that facilitates migration of $OH^-$ is an ionic electrolyte such as a molten salt such as a eutectic mixture of alkali halides such as LiCl-KCl. The anode may be a reactant with $OH^-$ or OH such as a metal or hydride, and the cathode may be a source of $OH^-$ such as an oxyhydroxide or hydroxide such as those given in the disclosure. Exemplary cells are [Li/LiCl-KCl/CoOOH, MnOOH, $Co(OH)_2$, $Mg(OH)_2$].

In an embodiment, at least one of $O_2$, 2O, OH, and $H_2O$ serves as a catalyst to form hydrinos in at least one of the solid fuels reactions and the CIHT cells. In an embodiment, OH may be formed by the reaction of a source of oxygen such as $P_2O_5$, $SO_2$, $KNO_3$, $KMnO_4$, $CO_2$, $O_2$, NO, $N_2O$, $NO_2$, $O_2$, and $H_2O$, and a source of H such as MH (M=alkali), $H_2O$, or $H_2$ gas and a dissociator.

The cell may be regenerated by electrolysis or by $H_2$ addition. The electrolysis may be pulsed under conditions given in the disclosure. One CIHT cell may provide the electrolysis power from another as their charge-recharge cycles of a cyclic process are phased to output net electrical power beyond that of recharging. The cell may be a rocking-chair type with H shuttled back and forth between the anode and cathode. The migrating ion comprising H may be $OH^-$ or $H^+$

in embodiments. Consider a cell that has a source of H at the anode and a sink for H at the cathode such as [R-Ni/KOH (sat aq)/AC]. Exemplary discharge and recharging reactions are given by
Discharge

Anode:

$$LaNi_5H_x \text{ or } R\text{-}NiH_x + OH^- \text{ to } H_2O + LaNi_5H_{x-1} \text{ or } R\text{-}NiH_{x-1} + e^- \quad (132)$$

Cathode

$$H_2O + e^- \text{ to } OH^- + 1/2\ H_2 \text{ in carbon } (C(H_x)) \quad (133)$$

Electrolysis Recharge
Cathode:

$$LaNi_5H_{x-1} \text{ or } R\text{-}NiH_{x-1} + H_2O + e^- \text{ to } OH^- + LaNi_5H_x \text{ or } R\text{-}NiH_x \quad (134)$$

Anode

$$C(H_x) + OH^- \text{ to } H_2O + C(H_{x-1}) + e^- \quad (135)$$

wherein at least one H, OH, and $H_2O$ produced during these reactions (Eqs. (132-133)) serves as the catalyst to form hydrinos. The cell may be operated to consume water to replace hydrogen that formed hydrinos. The oxygen may be selectively gettered by a selective reactant for oxygen or removed. Alternatively, hydrogen may be added back to the cell. The cell may be sealed to otherwise contain the balance of H inventory between the electrodes. At least one electrode may be rehydrided continuously or intermittently during cell operation. The hydrogen may be supplied by a gas line that flows $H_2$ into an electrode. The cell may comprise another line to remove $H_2$ to maintain a flow through at least one electrode. The rehydriding by at least one of the internal hydrogen inventory, hydrogen generated internally by electrolysis, and externally supplied hydrogen, may be by the direct reaction of hydrogen with the cathode or anode or reactants. In an embodiment, the anode reactant such as a hydride further comprises an agent to perform at least one of increase the amount of and rate of $H_2$ absorption by the anode reactant such as a hydride such as R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, or $ZrMn_{0.5}Cr_{0.2}V_{0.1}Ni_{1.2}$. The agent may be a hydrogen spillover catalyst. Suitable agents are CB, PtC, PdC, and other hydrogen dissociators and hydrogen dissociators on support materials. The hydrogen pressure may be in the range of about 0.01 to 1000 atm. A suitable range for rehydriding $LaNi_5$ is about 1 to 3 atm.

The migrating ion may be $OH^-$ wherein the anode comprises a source of H such as an H intercalated layered chalcogenide such as an oxyhydroxide such as CoOOH, NiOOH, $HTiS_2$, $HZrS_2$, $HHfS_2$, $HTaS_2$, $HTeS_2$, $HReS_2$, $HPtS_2$, $HSnS_2$, HSnSSe, $HTiSe_2$, $HZrSe_2$, $HHfSe_2$, $HTaSe_2$, $HTeSe_2$, $HReSe_2$, $HPtSe_2$, $HSnSe_2$, $HTiTe_2$, $HZrTe_2$, $HVTe_2$, $HNbTe_2$, $HTaTe_2$, $HMoTe_2$, $HWTe_2$, $HCoTe_2$, $HRhTe_2$, $HIrTe_2$, $HNiTe_2$, $HPdTe_2$, $HPtTe_2$, $HSiTe_2$, $HNbS_2$, $HTaS_2$, $HMoS_2$, $HWS_2$, $HNbSe_2$, $HNbSe_3$, $HTaSe_2$, $HMoSe_2$, $HVSe_2$, $HWSe_2$, and $HMoTe_2$. The electrolyte may be an $OH^-$ conductor such as a basic aqueous solution such as aqueous KOH wherein the base may serve as a catalyst or source of catalyst such as OH, K, or $2K^+$. The cell may further comprise an $OH^-$ permeable separator such as CG3401. Exemplary cells are [an H intercalated layered chalcogenide such as CoOOH, NiOOH, $HTiS_2$, $HZrS_2$, $HHfS_2$, $HTaS_2$, $HTeS_2$, $HReS_2$, $HPtS_2$, $HSnS_2$, HSnSSe, $HTiSe_2$, $HZrSe_2$, $HHfSe_2$, $HTaSe_2$, $HTeSe_2$, $HReSe_2$, $HPtSe_2$, $HSnSe_2$, $HTiTe_2$, $HZrTe_2$, $HVTe_2$, $HNbTe_2$, $HTaTe_2$, $HMoTe_2$, $HWTe_2$, $HCoTe_2$, $HRhTe_2$, $HIrTe_2$, $HNiTe_2$, $HPdTe_2$, $HPtTe_2$, $HSiTe_2$, $HNbS_2$, $HTaS_2$, $HMoS_2$, $HWS_2$, $HNbSe_2$, $HNbSe_3$, $HTaSe_2$, $HMoSe_2$, $HVSe_2$, $HWSe_2$, and $HMoTe_2$/KOH (6.5 M to saturated) + CG3401 /carbon such as CB, PtC, PdC, $CB(H_2)$, $PtC(H_2)$, $PdC(H_2)$, a carbide such as TiC, and a boride such as $TiB_2$]. The anode may be regenerated by supplying hydrogen or by electrolysis.

Exemplary electrolytes alone, in combination with base such as MOH (M = alkali), and in any combinations are alkali or ammonium halides, nitrates, perchlorates, carbonates, $Na_3PO_4$ or $K_3PO_4$, and sulfates and $NH_4X$, X = halide, nitrate, perchlorate, phospate, and sulfate. The electrolyte may comprise a mixture of hydroxides or other salts such as halides, carbonates, sulfates, phosphates, and nitrates. In general, exemplary suitable solutes alone or in combination are $MNO_3$, MNO, $MNO_2$, MX (X = halide), $NH_3$, MOH, $M_2S$, MHS, $M_2CO_3$, $MHCO_3$, $M_2SO_4$, $MHSO_4$, $M_3PO_4$, $M_2HPO_4$, $MH_2PO_4$, $M_2MoO_4$, $MNbO_3$, $M_2B_4O_7$ (M tetraborate), $MBO_2$, $M_2WO_4$, $M_2CrO_4$, $M_2Cr_2O_7$, $M_2TiO_3$, $MZrO_3$, $MAlO_2$,

$MCoO_2$, $MGaO_2$, $M_2GeO_3$, $MMn_2O_4$, $M_4SiO_4$, $M_2SiO_3$, $MTaO_3$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, $MZnO_n$, (M is alkali or ammonium and n=1, 2,3, or 4), and an organic basic salt such as M acetate or M carboxylate. The electrolyte may also comprise these and other anions with any cation that is soluble in the solvent such as alkaline earth, transition metal, inner transition metal, rare earth, and other cations of Groups III, IV, V, and VI such as Al, Ga, In, Sn, Pb, Bi, and Te. Other suitable solutes are a peroxide such as $H_2O_2$ (that may be added continuously in dilute amounts such as about < 0.001 wt% to 10 wt%), an amide, organic base such as urea or similar compound or salt and guanidine or similar compound such as a derivative of arginine or salts thereof, imide, aminal or aminoacetal, hemiaminal, ROH (R is an organic group of an alcohol) such as ethanol, erythritol ($C_4H_{10}O_4$), galactitol (Dulcitol), (2R,3S,4R,5S)-hexane-1,2,3,4,5,6-hexol, or polyvinyl alcohol (PVA), RSH such as thiols, MSH, MHSe, MHTe, $M_xH_yX_z$ (X is an acid anion, M is a metal such as an alkali, alkaline earth, transition, inner transition, or rare earth metal, and x,y,z are integers including 0). The concentration may be any desired, such as a saturated solution. A suitable solute causes the solution such as an aqueous to be basic. Preferably the $OH^-$ concentration is high. Exemplary cells are [R-Ni/aqueous solution comprising a solute or combinations of solutes from the group of KOH, KHS, $K_2S$, $K_3PO_4$, $K_2HPO_4$, $KH_2PO_4$, $K_2SO_4$, $KHSO_4$, $K_2CO_3$, $KHCO_3$, KX (X = halide), $KNO_3$, KNO, $KNO_2$, $K_2MoO_4$, $K_2CrO_4$, $K2Cr_2O_7$, $KAlO_2$, $NH_3$, $KNbO_3$, $K_2B_4O_7$, $KBO_2$, $K_2WO_4$, $K_2TiO_3$, $KZrO_3$, $KCoO_2$, $KGaO_2$, $K_2GeO_3$, $KMn_2O_4$, $K_4SiO_4$, $K_2SiO_3$, $KTaO_3$, $KVO_3$, $KIO_3$, $KFeO_2$, $KIO_4$, $KClO_4$, $KScO_n$, $KTiO_n$, $KVO_n$, $KCrO_n$, $KCr_2O_n$, $KMn_2O_n$, $KFeO_n$, $KCoO_n$, $KNiO_n$, $KNi_2O_n$, $KCuO_n$, and $KZnO_n$, (n=1, 2,3, or 4) (all saturated) and Kactetate, dilute $H_2O_2$ additive, dilute $CoCl_2$ additive, amide, organic base, urea, guanidine, imide, aminal or aminoacetal, hemiaminal, ROH (R is an organic group of an alcohol) such as ethanol, erythritol ($C_4II_{10}O_4$), galactitol (Dulcitol), (2R,3S,4R,5S)-hexane-1,2,3,4,5,6-hexol, or polyvinyl alcohol (PVA), RSH such as thiols, MSH, MHSe, and MHTe/CB or CoOOH + CB]. The electrolyte concentration may be any desired concentration, but preferably it is high such as 0.1 M to saturated.

Other solvents or mixtures of the present disclosure and those of the Organic Solvents section of Mills PCT US 09/052072 which is incorporated herein by reference may be used as well as, or in combination with, an aqueous solution. The solvent may be polar. The solvent may comprise pure water or a mixture of water and one or more additional solvents such as at least one of an alcohol, amine, ketone, ether, nitrile, and carboxylic acid. Suitable exemplary solvents may be selected from the group of at least one of water, an alcohol such as ethanol or methanol, dioxolane, dimethoxyethane (DME), 1,4-benzodioxane (BDO), tetrahydrofuran (THF), dimethylformamide (DMF), dimethylacetamide (DMA), dimethylsulfoxide (DMSO), 1,3-dimethyl-2-imidazolidinone (DMI), hexamethylphosphoramide (HMPA), N-methyl-2-pyrrolidone (NMP), methanol, ethanol, amines such as tributylamine, triethyamine, triisopropylamine, N,N-dimethylaniline, furan, thiophene, imidazole, pyridine, pyrimidine, pyrazine, quinoline, isoquinoline, indole, 2,6-lutidine (2,6-dimethylpyridine), 2-picoline (2-methylpyridine), and nitriles such as acetonitrile and propanenitrile, 4-dimethylaminobenzaldehyde, acetone, and dimethyl acetone-1,3-dicarboxylate. Exemplary cells are [R-Ni/solution comprising a solvent or combination of solvents from the group of water, alcohol, amine, ketone, ether, and nitrile, and a solute or combinations of solutes from the group of KOH, $K_3PO_4$, $K_2HPO_4$, $KH_2PO_4$, $K_2SO_4$, $KHSO_4$, $K_2CO_3$, $K_2C_2O_4$, $KHCO_3$, KX (X = halide), $KNO_3$, KNO, $KNO_2$, $K_2MoO_4$, $K_2CrO_4$, $K_2Cr_2O_7$, $KAlO_2$, $NH_3$, $K_2S$, KHS, $KNbO_3$, $K_2B_4O_7$, $KBO_2$, $K_2WO_4$, $K_2TiO_3$, $KZrO_3$, $KCoO_2$, $KGaO_2$, $K_2GeO_3$, $KMn_2O_4$, $K_4SiO_4$, $K_2SiO_3$, $KTaO_3$, $KVO_3$, $KIO_3$, $KFeO_2$, $KIO_4$, $KClO_4$, $KScO_n$, $KTiO_n$, $KVO_n$, $KCrO_n$, $KCr_2O_n$, $KMn_2O_n$, $KFeO_n$, $KCoO_n$, $KNiO_n$, $KNi_2O_n$, $KCuO_n$, and $KZnO_n$, (n=1, 2,3, or 4) (all saturated) and Kactetate/CB or CoOOH + CB] and [Ni/ MOH (M= alkali) 1 to 10% $H_2O$ + ionic liquid solvent or organic solvent such as dimethyl carbonate (DMC), ethylene carbonate (EC), diethyl carbonate (DEC), ethanol, hexamethylphosphoramide (HMPA), dimethoxyethane (DME), 1,4-benzodioxane (BDO), tetrahydrofuran (THF), dioxolane such as 1,3-dioxolane /NiO intermittent electrolysis submerged cathode]. Further exemplary cells are [R-Ni/KOH (saturated aq)/Pt/Ti], [R-Ni/$K_2SO_4$ (saturated aq)/Pt/Ti], [PtC($H_2$)/KOH (saturated aq)/MnOOH CB], [PtC($H_2$)/KOH (saturated aq)/$FePO_4$ CB], [R-Ni/$NH_4OH$ (saturated aq)/CB].

The cathode and anode materials may have a very high surface area to improve the kinetics and thereby the power. Other suitable cathodes comprise a support such as one or more of carbides, borides, nitrides, and nitriles. The anode may also comprise a support as one of the components. The support in different embodiments of the disclosure may be a fluorinated carbon support. Exemplary cells are [R-Ni, Raney cobalt (R-Co), Raney copper (R-Cu), $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, CoH, CrH, FeH, MnH, NiH, ScH, VH, CuH, ZnH, AgH/KOH or NaOH (saturated)/carbon, carbides, borides, and nitriles, CB, PdC, PtC, TiC, $Ti_3SiC_2$, $YC_2$, TaC, $Mo_2C$, SiC, WC, C, $B_4C$, HfC, $Cr_3C_2$, ZrC, $CrB_2$, VC, $ZrB_2$, $MgB_2$, $NiB_2$, NbC, $TiB_2$, hexagonal boronitride (hBN), and TiCN]. The anode may comprise a metal such as Zn, Sn, Pb, Cd, or Co or a hydride such as $LaNi_5H_6$ and a support such as carbon, carbides, borides, and nitriles, CB, steam carbon, activated carbon, PdC, PtC, TiC, $Ti_3SiC_2$, $YC_2$, TaC, $Mo_2C$, SiC, WC, C, $B_4C$, HfC, $Cr_3C_2$, ZrC, $CrB_2$, VC, $ZrB_2$, $MgB_2$, $NiB_2$, NbC, $TiB_2$, hexagonal boronitride (hBN), and TiCN.

Hydrated MOH (M = alkali such as K) may react directly to form hydrinos at a low rate by the same mechanism as given by Eqs. (123) and (94) comprising the reactions of the oxidation with $OH^-$ and H to $H_2O$ and the reduction of $H_2O$ to H and $OH^-$. OH may serve as an MH type catalyst given in TABLE 3, or H may serve as a catalyst for another H. In an embodiment, the reaction rate is dramatically increased by using a scheme to supply H to the oxidation reaction

of $OH^-$ at an anode and by using a large surface area cathode to facilitate the reduction of water at a cathode such that the accelerated reaction is harnessed to produce electricity.

At least one of the half-cell reactions and net reactions of the CIHT cells of the disclosure may comprise reactions for production of thermal energy. In embodiments both thermal and electrical energy may be produced. The thermal power may also be converted to electricity by systems of the current disclosure and those known in the Art.

In an embodiment, $OH^-$ is a source of at least one of OH and $H_2O$ catalyst that forms upon oxidation. For example, $OH^-$ may be oxidized at the anode to OH that further reacts or react in a concerted reaction to form $H_2O$ catalyst and hydrinos. The anode half-cell reactants may comprise a base such as NaOH. The anode half-cell reactants may further comprise a source of H such as a hydride, hydrogen and a dissociator, or hydrogen and a hydrogen-permeable membrane such as a $Ni(H_2)$, $V(H_2)$, $Ti(H_2)$, $Fe(H_2)$, or $Nb(H_2)$ membrane or tube that may be an electrode such as the anode. The cell may comprise a solid electrolyte salt bridge such as BASE such as Na BASE in the case that the migrating ion is $Na^+$. $M^+$ of the base MOH (M = alkali) migrates through the salt bridge such as BASE and is reduced to Na and may react in a concerted manner or subsequently with at least one cathode reactant. The reactants may be molten at an elevated cell temperature maintained at a least the melting point of the cell reactants. The cathode half-cell reactants comprise at least one compound that reacts with the reduced migrating ion. The product sodium compound may be more stable than the sodium compound of the anode half-cell reactants. The cathode product may be NaF. The cathode reactant may comprise a fluorine source such as fluorocarbons, $XeF_2$, $BF_3$, $NF_3$, $SF_6$, $Na_2SiF_6$, $PF_5$, and other similar compounds such as those of the disclosure. Another halogen may replace F in the cathode. For example, the cathode reactant may comprise $I_2$. Other cathode reactants comprise other halides such as metal halides such as transition metal, inner transition metal, rare earth, Al, Ga, In, Sn, Pb, Sb, Bi, Se, and Te halides such as $NiCl_2$, $FeCl_2$, $MnI_2$, AgCl, $EuBr_2$, $EuBr_3$, and other halides of the solid fuels of the disclosure. Either cell compartment may comprise a molten salt electrolyte such as a eutectic salt such as a mixture of alkali halide salts. The cathode reactant may also be a eutectic salt such as a mixture of halides that may comprise a transition metal halide. Suitable eutectic salts that comprise a metal such as a transition metal are $CaCl_2$-$CoCl_2$, $CaCl_2$-$ZnCl_2$, $CeCl_3$-RbCl, $CoCl_2$-$MgCl_2$, $FeCl_2$-$MnCl_2$, $FeCl_2$-$MnCl_2$, $KAlCL_4$-$NaAlCl_4$, $AlCl_3$-$CaCl_2$, $AlCl_3$-$MgCl_2$, NaCl-$PbCl_2$, $CoCl_2$-$FeCl_2$, and others in TABLE 4. Exemplary cells are [at least one of the group of NaOH, R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, $CeH_2$, $LaH_2$, $PtC(H_2)$, $PdC(H_2)$, $Ni(H_2)$, $V(H_2)$, $Ti(H_2)$, $Fe(H_2)$, or $Nb(H_2)$/BASE/$I_2$, $I_2$ + NaI, fluorocarbons, $XeF_2$, $BF_3$, $NF_3$, $SF_6$, $Na_2SiF_6$, $PF_5$, metal halides such as transition metal, inner transition metal, rare earth, Al, Ga, In, Sn, Pb, Sb, Bi, Se, and Te halides such as $NiCl_2$, $FeCl_2$, $MnI_2$, AgCl, $EuBr_2$, and $EuBr_3$, eutectic salts such as $CaCl_2$-$CoCl_2$, $CaCl_2$-$ZnCl_2$, $CeCl_3$-RbCl, $CoCl_2$-$MgCl_2$, $FeCl_2$-$MnCl_2$, $FeCl_2$-$MnCl_2$, $KAlCl_4$-$NaAlCl_4$, $AlCl_3$-$CaCl_2$, $AlCl_3$-$MgCl_2$, NaCl-$PbCl_2$, $CoCl_2$-$FeCl_2$, and others of TABLE 4] and [NaOH + $PtC(H_2)$, $PdC(H_2)$, $Ni(H_2)$, $V(H_2)$, $Ti(H_2)$, $Fe(H_2)$, or $Nb(H_2)$/BASE/NaX (X is anion such as halide, hydroxide, sulfate, nitrate, carbonate) + one or more of the group of NaCl, AgCl, $AlCl_3$, $AsCl_3$, AuCl, $AuCl_3$, $BaCl_2$, $BeCl_2$, $BiCl_3$, $CaCl_2$, $CdCl_3$, $CeCl_3$, $CoCl_2$, $CrCl_2$, CsCl, CuCl, $CuCl_2$, $EuCl_3$, $FeCl_2$, $FeCl_3$, $GaCl_3$, $GdCl_3$, $GeCl_4$, $HfCl_4$, HgCl, $HgCl_2$, InCl, $InCl_2$, $InCl_3$, IrCl, $IrCl_2$, KCl, $KAgCl_2$, $KAlCl_4$, $K_3AlCl_6$, $LaCl_3$, LiCl, $MgCl_2$, $MnCl_2$, $MoCl_4$, $MoCl_5$, $MoCl_6$, $NaAlCl_4$, $Na_3AlCl_6$, $NbCl_5$, $NdCl_3$, $NiCl_2$, $OsCl_3$, $OsCl_4$, $PbCl_2$, $PdCl_2$, $PrCl_3$, $PtCl_2$, $PtCl_4$, $PuCl_3$, RbCl, $ReCl_3$, RhCl, $RhCl_3$, $RuCl_3$, $SbCl_3$, $SbCl_5$, $ScCl_3$, $SiCl_4$, $SnCl_2$, $SnCl_4$, $SrCl_2$, $ThCl_4$, $TiCl_2$, $TiCl_3$, TlCl, $UCl_3$, $UCl_4$, $VCl_4$, $WCl_6$, $YCl_3$, $ZnCl_2$, and $ZrCl_4$]. Another alkali metal may be substituted for Na, other halidies may be substituted for Cl, and the BASE may match the migrating ion.

The cell may be regenerated by electrolysis or mechanically. For example, the cell [$Ni(H_2$ 1atm) NaOH/BASE/NaCl-$MgCl_2$ eutectic] produces $H_2O$ that, in an embodiment, is vented from the half-cell. At the cathode, Na from migrating $Na^+$ may react with $MgCl_2$ to form NaCl and Mg. Representative cell reactions are

Anode

$$NaOH + 1/2H_2 \text{ to } H_2O + Na^+ + e^- \qquad (136)$$

Cathode

$$Na^+ + e^- + 1/2MgCl_2 \text{ to } NaCl + 1/2Mg \qquad (137)$$

The anode half-cell may additionally contain a salt such as an alkaline or alkaline earth halide such as a sodium halide. Following discharge, the anode may be regenerated by adding water or a source of water. The cell may also run spontaneously in reverse with the addition of $H_2O$ since the free energy for the reaction given by Eq. (137) is +46 kJ/mole (500 °C). The source of water may be steam wherein the half-cell is sealed. Alternatively, the source of water may be a hydrate. Exemplary hydrates are magnesium phosphate penta or octahydrate, magnesium sulfate heptahydrate, sodium salt hydrates, aluminum salt hydrates, and alkaline earth halide hydrates such as $SrBr_2$, $SrI_2$, $BaBr_2$, or $BaI_2$.

The source may comprise a molten salt mixture comprising NaOH. In an alternative exemplary mechanical regeneration method, $MgCl_2$ is regenerated by evaporating Na as NaCl reacts with Mg to form $MgCl_2$ and Na. Na can be reacted with water to form NaOH and $H_2$ that are the regenerated anode reactants. The cell may comprise a flow system wherein cathode and anode reactants flow though the corresponding half cells and are regenerated in separate compartments and returned in the flow stream. Alternatively, Na may be used directly as the anode reactant in the cell [Na/BASE/NaOH]. The cells may be cascaded.

In an embodiment, the anode comprises a base such as MOH (M = alkali metal) wherein the catalyst or source of catalyst may be OH that reacts with H to form $H_2O$ that may serve as the catalyst. The cathode may further comprise a source of hydrogen such as a hydride such as a rare earth or transition metal hydride or others of the disclosure, or a permeable membrane and hydrogen gas such as $Ni(H_2)$, $Fe(H_2)$, $V(H_2)$, $Nb(H_2)$, and others of the disclosure. The catalyst or source of catalyst may be from by the oxidation of $OH^-$. The anode oxidation product involving the further reaction with H may be $H_2O$. The cell may comprise at least one of an electrolyte and a salt bridge that may be a solid electrolyte such as BASE (beta-alumina). The cathode may comprise at least one of an element, elements, a compound, compounds, metals, alloys, and mixtures thereof that may react with the migrating ion or reduced migrating ion such as $M^+$ or M, respectively, to form a solution, alloy, mixture, or compound. The cathode may comprise a molten element or compound. Suitable molten elements are at least one of In, Ga, Te, Pb, Sn, Cd, Hg, P, S, I, Se, Bi, and As. In an exemplary embodiment having $Na^+$ as the migrating ion through a salt bridge such as beta alumina solid electrolyte (BASE), the cathode comprises molten sulfur, and the cathode product is $Na_2S$. Exemplary cells are [NaOH + H source such as $LaH_2$, $CeH_2$, $ZrH_2$, $TiH_2$, or $Ni(H_2)$, $Fe(H_2)$, $V(H_2)$, $Nb(H_2)$/BASE/at least one of S, In, Ga, Te, Pb, Sn, Cd, Hg, P, I, Se, Bi, and As, and optionally a support]. In another embodiment, the cell is absent the salt bridge such as BASE since the reductant such as $H_2$ or hydride is confined to the anode, and the reaction between the half-cell reactants is otherwise unfavorable energetically or kinetically. In an embodiment having no salt bridge, the anode half-cell reactants does not react with the cathode half-cell reactant exergonically. Exemplary cells are [H source such as $LaH_2$, $CeH_2$, $ZrH_2$, $TiH_2$, or $Ni(H_2)$, $Fe(H_2)$, $V(H_2)$, Nb($H_2$/hydroxide molten salt such as NaOH/at least one of S, In, Ga, Te, Pb, Sn, Cd, Hg, P, I, Se, Bi, and As and alloys, and optionally a support].

In an embodiment, the reaction to form the catalyst comprises a reaction to form $H_2O$ that serves as the catalyst for another H. The energy may be released as heat or light or as electricity wherein the reactions comprise a half-cell reaction. In an embodiment wherein the reactants form $H_2O$ that serves as a catalyst, the reactants may comprise $OH^-$ that may be oxidized to $H_2O$. Exemplary reactions are given in the disclosure. The reaction may occur in the CIHT cell or the electrolysis cell. The catalyst reaction may be favored with $H_2O$ in a transition state to product. The cell further comprises a source of atomic H. The source may be a hydride, hydrogen gas, hydrogen produced by electrolysis, hydroxide, or other sources given in the disclosure. For example, the anode may comprise a metal such as Zn or Sn wherein the half-cell reaction comprises the oxidation of $OH^-$ to water and metal oxide. The reaction also forms atomic H in the presence of the forming $H_2O$ wherein $H_2O$ serves as a catalyst to form hydrinos. The anode may comprise a hydride such as $LaNi_5H_6$ wherein the half-cell reaction comprises the oxidation of $OH^-$ to $H_2O$ with H provided by the hydride. The oxidation reaction occurs in the presence of H from the hydride that is catalyzed to hydrino by the formed $H_2O$. The anode may comprise a combination of a metal and a hydride wherein $OH^-$ is oxidized to $H_2O$ with the formation of a metal oxide or hydroxide, and H is provided by the hydride. The H is catalyzed to hydrino by the forming $H_2O$ serving as the catalyst. In another embodiment, an oxidant such as $CO_2$ or a reductant such as Zn or Al of R-Ni may react with $OH^-$ to form $H_2O$ and H as an intermediate wherein some of the H is catalyzed to hydrino by $H_2O$ during the reaction. In another embodiment, at least one of $H_2O$ and H may form by a reduction reaction of at least one of species comprising at least one of O and H such as $H_2$, H, $H^+$, $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$. In another embodiment, at least one of $H_2O$ and H may form by an oxidation reaction involving at least one of species comprising at least one of O and H such as $H_2$, H, $H^+$, $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$. The reaction may comprise one of those of the disclosure. The reaction may occur in the CIHT cell or electrolysis cell. The reactions may be those that occur in fuel cells such as proton exchange membrane, phosphoric acid, and solid oxide fuel cells. The reactions may occur at the CIHT cell anode. The reactions may occur at the CIHT cell cathode. Representative cathode reactions to form $H_2O$ catalyst and H or form intermediate species that may form $H_2O$ catalyst and H at one or both of the cathode and anode (reverse reactions) that may occur in aqueous or molten media with dissolved $H_2O$ are

$$O_2 + 4H^+ + 4e^- \text{ to } 2H_2O \quad (138)$$

$$O_2 + 2H^+ + 2e^- \text{ to } H_2O_2 \quad (139)$$

$$O_2 + 2H_2O + 4e^- \text{ to } 4OH^- \quad (140)$$

$$O_2 + H^+ + e^- \text{ to } HO_2 \quad (141)$$

$$O_2 + H_2O + 2e^- \text{ to } HO_2^- + OH^- \quad (142)$$

$$O_2 + 2H_2O + 2e^- \text{ to } H_2O_2 + 2OH^- \quad (143)$$

$$O_2 + e^- \text{ to } O_2^- \quad (144)$$

$$HO_2^- + H_2O + 2e^- \text{ to } + 3OH^- \quad (145)$$

$$2HO_2^- \text{ to } 2OH^- + O_2 \quad (146)$$

$$H_2O_2 + 2H^+ + 2e^- \text{ to } 2H_2O \quad (147)$$

$$2H_2O_2 \text{ to } 2H_2O + O_2 \quad (148)$$

$$2H_2O + 2e\text{-} \text{ to } H2 + 2OH\text{-} \quad (149)$$

$$H_2O + HO_2^- \text{ to } H_2 + O_2 + OH^- \quad (150)$$

$$O_2 + 2OH^- \text{ to } 2HO_2^- \quad (151)$$

$$HO_2^- + H_2O \text{ to } H_2 + O_2 + OH^- \quad (152)$$

$$H_2O \text{ to } 2H_2 + O_2 \quad (153)$$

In addition to hydrinos, a product of $H_2O$ serving as a catalyst is ionized $H_2O$ that may recombine into $H_2$ and $O_2$; thus, $H_2O$ catalysis may generate these gases that may be used commercially. This source of $H_2$ may be used to maintain the power output of the CIHT cell. It may supply $H_2$ directly or as a reactant to regenerate the CIHT half-cell reactants such as an anode hydride or metal.

In another embodiment, the catalyst or source of catalyst such as $H_2O$ and $O_2^{2-}$ and $O_3^{2-}$ may be formed by a reaction of $OH^-$ with $O_2$. Exemplary reactions are

$$1/2O_2 + 2OH^- \text{ to } O_2^{2-} + H_2O \quad (154)$$

$$O_2 + 2OH^- \text{ to } O_3^{2-} + H_2O \quad (155)$$

$$3/2O_2 + 2OH^- \text{ to } 2O_2^- + H_2O \quad (156)$$

In an embodiment, the reduced oxygen species is a source of HO such as $OH^-$ that may be oxidized at the anode of the CIHT cell or produced chemically in the solid fuel reactions. The cell reactants such as the anode reactants of the CIHT cell further comprise $H_2$. The $H_2$ reacts with OH to form H and $H_2O$ in an active state for the $H_2O$ to serve as a catalyst to form hydrinos by reaction with the H. Alternatively, the reactants comprise a source of H such as a hydride or $H_2$ and a dissociator such that H reacts with OH to form the active $H_2O$ hydrino catalyst that further reacts with another H to form hydrinos. Exemplary cells are [M + $H_2$/KOH (saturated aq)/steam carbon + $O_2$] and [M + $H_2$ + dissociator such as PtC or PdC/KOH (saturated aq)/steam carbon + $O_2$]; M = Zn, Sn, Co, $LaNi_5H_6$, Cd, Pb, Sb, and In. In an embodiment of a thermal reactor, hydrogen and oxygen are combined on a metal surface to form $H_2O$ catalyst and H that react to form hydrinos. The metal promotes H and O oxidative recombination to form water that serves as a catalyst for H to form hydrinos wherein the oxidized metal may form a hydroxide or oxide. Suitable exemplary metals are Zn, Sn, Co, $LaNi_5H_6$, Cd, Pb, Sb, and In.

In an embodiment, the concerted reaction between the anode and cathode half-cell reactants cause at least one of a match of the energy between H and the $H_2O$ catalyst such that hydrinos form and provide the activation energy for the hydrino catalysis reaction. In an exemplary embodiment, the CIHT comprising [M /KOH (saturated aq)/$H_2O$ or $O_2$ reduction catalyst + air]; M = Zn, Co, Pb, $LaNi_5H_6$, Cd, Sn, Sb, In, or Ge, the $H_2O$ or $O_2$ reduction catalyst such as steam carbon (SC) or carbon black (CB) serves the function of at least one of causing the energy match and providing the activation energy. In an embodiment, the reactants that form $H_2O$ in an active catalytic state and H may serve to generate thermal energy. The half-cell reactant may be mixed to directly cause the release of thermal energy. The exemplary reactants may be a mixture of M + KOH (sat aq) + $H_2O$ or $O_2$ reduction catalyst + air; M may be Zn, Co, Pb, $LaNi_5H_6$, Cd, Sn, Sb, In, or Ge and the $H_2O$ or $O_2$ reduction catalyst may be carbon, a carbide, boride, or nitrile. In another embodiment, the anode may be a metal M' such as Zn and the cathode may be a metal hydride $MH_x$ such as $LaNi_5H_6$. The exemplary CIHT cell may comprise [Zn/KOH (saturated aq)/$LaNi_5H_6$, R-Ni, or PtC + air or $O_2$]. Exemplary general electrode reactions are

Cathode:

$$MH_x + 1/2O_2 + e^- \text{ to } MH_{x-1} + OH^- \quad (157)$$

Anode:

$$2M' + 3OH^- \text{ to } 2M'O + H + H_2O + 3e^-; \text{ H to } H(1/p) \quad (158)$$

Suitable exemplary thermal reaction mixtures are Sn + KOH (sat aq) + CB or SC + air and Zn + KOH (sat aq) + $LaNi_5H_6$, R-Ni, or PtC + air.

In addition to the oxidation of $OH^-$ and reaction with H, the reaction to form $H_2O$ catalyst may be a dehydration reaction. A suitable exemplary reaction is the dehydration of a metal hydroxide to a metal oxide such as $Zn(OH)_2$ to ZnO + $H_2O$, $Co(OH)_2$ to CoO + $H_2O$, $Sn(OH)_2$ to SnO + $H_2O$, or $Pb(OH)_2$ to ZnO + $H_2O$. Another example is $Al(OH)_3$ to $Al_2O_3$ + $H_2O$ wherein R-Ni may comprise $Al(OH)_3$ and also serve as a source of H that may be catalyzed to form hydrinos with at least one of OH and $H_2O$ acting as the catalyst. The reaction may be initiated and propagated by heating.

In an embodiment, at least one of nH, nO (n= integer), $O_2$, OH, and $H_2O$ catalyst is formed in an active state by a dehydration or decomposition reaction. The reaction occurs in the presence of H, and H and the catalyst react to form hydrinos. In an embodiment, the reaction comprises the decomposition of $H_2O_2$. The catalyst $H_2O$ may be formed by the following exemplary reaction:

$$H_2O_2 + H \text{ to } H_2O + 1/2O_2 \text{ or } O + H(1/p) \quad (159)$$

Exemplary dehydration reactions are hydroxides decomposing to the corresponding oxides and $H_2O$ in the presence of H such as the decomposition of $Al(OH)_3$ of R-Ni to $Al_2O_3$ and $H_2O$ with H release. The dehydration reaction may further involve the hydration $H_2O$ such as the decomposition of hydrated KOH or NaOH.

In an embodiment, the dehydration reaction involves the release of $H_2O$ from a terminal alcohol to form an aldehyde. The terminal alcohol may comprise a sugar or a derivative thereof that releases $H_2O$ that may serve as a catalyst. Suitable exemplary alcohols are meso-erythritol, galactitol or dulcitol, and polyvinyl alcohol (PVA).

In an embodiment, the cell comprises a molten salt electrolyte that comprises a hydroxide. The electrolyte may comprise a salt mixture. In an embodiment, the salt mixture may comprise a metal hydroxide and the same metal with another anion of the disclosure such as halide, nitrate, sulfate, carbonate, and phosphate. Suitable salt mixtures are $CsNO_3$-CsOH, CsOH-KOH, CsOH-LiOH, CsOH-NaOH, CsOH-RbOH, $K_2CO_3$-KOH, KBr-KOH, KCl-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, and $RbNO_3$-RbOH. The mixture may be a eutectic mixture. The cell may be operated at a temperature of about that of the melting point of the eutectic mixture but may be operated at higher temperatures. The catalyst $H_2O$ may be formed by the oxidation of $OH^-$ at the anode and the reaction with H from a source such as $H_2$ gas permeated through a metal membrane such as Ni, V, Ti, Nb, Pd, PdAg, or Fe designated by $Ni(H_2)$, $V(H_2)$, $Ti(H_2)$, $Nb(H_2)$, $Pd(H_2)$, $PdAg(H_2)$, $Fe(H_2)$, or 430 $SS(H_2)$. Suitable hydrogen permeable electrodes for a alkaline electrolyte comprise Ni and alloys such as LaNi5, noble metals such as Pt, Pd, and Au, and nickel or noble metal coated hydrogen permeable metals such as V, Nb, Fe, Fe-Mo alloy, W, Mo, Rh, Zr, Be, Ta, Rh, Ti, Th, Pd, Pd-coated Ag, Pd-coated V, Pd-coated Ti, rare earths, other refractory metals, stainless steel (SS) such as 430 SS, and others such metals known to those skilled in the Art. The metal of the hydroxide, the cation of the hydroxide such as a metal, or another cation M may be reduced at the cathode. Exemplary reactions are

Anode

$$1/2H_2 + OH^- \text{ to } H_2O + e^- \text{ or } H_2 + OH^- \text{ to } H_2O + e^- + H(1/p) \quad (160)$$

Cathode

$$M^+ + e^- \text{ to } M \quad (161)$$

M may be a metal such as an alkali, alkaline earth, transition, inner transition, or rare earth metal, Al, Ga, In, Ge, Sn, Pb, Sb, Bi, Se, and Te and be another element such as S or P. The reduction of a cation other than that of the hydroxide may result in an anion exchange between the salt cations. Exemplary cells are [M'($H_2$)/MOH M"X/M'''] wherein M, M', M", and M''' are cations such as metals, X is an anion that may be hydroxide or another anion such as halide, nitrate, sulfate, carbonate, and phosphate, and M' is $H_2$ permeable. Another example is [Ni($H_2$)/M$(OH)_2$-M'X/Ni] wherein M = alkaline earth metal, M' = alkali metal, and X = halide such as [Ni($H_2$)/Mg$(OH)_2$-NaCl/Ni], [Ni($H_2$)/Mg$(OH)_2$-$MgCl_2$-NaCl/Ni], [Ni($H_2$)/Mg$(OH)_2$-MgO-$MgCl_2$/Ni], and [Ni($H_2$)/Mg$(OH)_2$-NaF/Ni]. $H_2O$ and H form and react at the anode to further form hydrinos, and Mg metal is the thermodynamically the most stable product from the cathode reaction. Other suitable exemplary cells are [Ni($H_2$)/MOH-M'halide/Ni], [Ni($H_2$)/M$(OH)_2$-M'halide/Ni], [M"($H_2$)/MOH-M'halide/M"], and [M"($H_2$)/M$(OH)_2$-M'halide/M"] where M = alkali or alkaline earth metal, M' = metal having hydroxides and oxides that are at least one of less stable than those of alkali or alkaline earth metals or have a low reactivity with water such as one from the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W, and M" is a hydrogen permeable metal. Alternatively, M' may be electropositive metal such as one or more of the group of Al, V, Zr, Ti, Mn, Se, Zn, Cr, Fe, Cd, Co, Ni, Sn, In, and Pb. In another embodiment, at least one of M and M' may comprise one from the group of Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. In an embodiment, the cation may be common to the anions of the salt mixture electrolyte, or the anion may be common to the cations. Alternatively, the hydroxide may be stable to the other salts of the mixture. The electrodes may comprise high-surface area electrodes such as porous or sintered metal powders such as Ni powder. Exemplary cells are [Ni($H_2$), V($H_2$), Ti($H_2$), Nb($H_2$), Pd($H_2$), PdAg($H_2$), Fe($H_2$), or 430 SS($H_2$)/LiOH-LiX, NaOH-NaX, KOH-KX, RbOH-RbX, CsOH-CsX, Mg$(OH)_2$-$MgX_2$, Ca$(OH)_2$-$CaX_2$, Sr$(OH)_2$-$SrX_2$, or Ba$(OH)_2$-$BaX_2$ wherein X =F, Cl, Br, or I/Ni], [Ni($H_2$), V($H_2$), Ti($H_2$), Nb($H_2$), Pd($H_2$), PdAg($H_2$), Fe($H_2$), or 430 SS($H_2$)/$CsNO_3$-CsOH, CsOH-KOH, CsOH-LiOH, CsOH-NaOH, CsOH-RbOH, $K_2CO_3$-KOH, KBr-KOH, KC1-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, and $RbNO_3$-RbOH/Ni], and [Ni($H_2$), V($H_2$), Ti($H_2$), Nb($H_2$), Pd($H_2$), PdAg($H_2$), Fe($H_2$), or 430 SS($H_2$)/LiOH, NaOH, KOH, RbOH, CsOH, $Mg(OH)_2$, $Ca(OH)_2$, $Sr(OH)_2$, or $Ba(OH)_2$ + one or more of $AlX_3$, $VX_2$, $ZrX_2$, $TiX_3$, $MnX_2$, $ZnX_2$, $CrX_2$, $SnX_2$, $InX_3$, $CuX_2$, $NiX_2$, $PbX_2$, $SbX_3$, $BiX_3$, $CoX_z$, $CdX_2$, $GeX_3$, $AuX_3$, $IrX_3$, $FeX_3$, $HgX_2$, $MoX_4$, $OsX_4$, $PdX_2$, $ReX_3$, $RhX_3$, $RuX_3$, $SeX_2$, $AgX_2$, $TcX_4$, $TeX_4$, T1X, and $WX_4$ wherein X =F, Cl, Br, or I/Ni]. Other suitably $H_2$ permeable metals may replace the Ni anode and stable cathode electrodes may replace Ni. In an embodiment, the electrolyte may comprise an oxyhydroxide or a mixture of salts such as one or more of hydroxide, halide, nitrate, carbonate, sulfate, phosphate, and oxyhydroxide. In an embodiment, the cell may comprise a salt bridge such as BASE or NASICON. In an embodiment, the electrolyte may comprise a hydroxide comprising a complex or ion such as $M(OH)_4^{2-}$, $M(OH)_4^{-}$, or $M(OH)_6^{2-}$ wherein M may exemplarily be Zn, Sn, Pb, Sb, Al, or Cr. The hydroxide may further comprise a cation such as an alkali cation. The hydroxide may be $Li_2Zn(OH)_4$, $Na_2Zn(OH)_4$, $Li_2Sn(OH)_4$, $Na_2Sn(OH)_4$, $Li_2Pb(OH)_4$, $Na_2Pb(OH)_4$, $LiSb(OH)_4$, $NaSb(OH)_4$, $LiAl(OH)_4$, $NaAl(OH)_4$, $LiCr(OH)_4$, $NaCr(OH)_4$, $Li_2Sn(OH)_6$, and $Na_2Sn(OH)_6$. Additional exemplary suitable hydroxides are at least one from $Co(OH)_2$, $Zn(OH)_2$, $Ni(OH)_2$, other transition metal hydroxides, $Cd(OH)_2$, $Sn(OH)_2$, and Pb(OH).

In an embodiment, a source of at least one of oxygen and $H_2O$ is supplied to the cell and may be selectively supplied to the cathode. In an embodiment, $H_2$ may be selectively supplied to the anode such that the anode reaction is given by Eq. (160). In an embodiment, at least one of $O_2$ and $H_2O$ may be supplied to the cell. In an embodiment, $O_2$ or $H_2O$ may be added to the cathode half-cell such that the reactions are
Cathode

$$M^+ + e^- + H_2O \text{ to } MOH + 1/2H_2 \qquad (162)$$

$$M^+ + 2e^- + 1/2O_2 \text{ to } M_2O \qquad (163)$$

Then, $H_2O$ may be added such that the reaction is

$$M_2O + H_2O \text{ to } 2MOH \qquad (164)$$

In the case that $O_2$ is supplied, the overall balanced reaction may be combustion of $H_2$ that is regenerated by separate electrolysis of $H_2O$. In an embodiment, $H_2$ is supplied at the anode and $H_2O$ and optionally $O_2$ is supplied at the cathode. The $H_2$ may be selectively applied by permeation through a membrane and $H_2O$ may be selectively applied by bubbling steam. In an embodiment, a controlled $H_2O$ vapor pressure is maintained over the molten electrolyte. A $H_2O$ sensor may be used to monitor the vapor pressure and control the vapor pressure. The sensor may be an optical one such as an infrared emission spectroscopic sensor or those known in the art. The $H_2O$ vapor pressure may be supplied from a heated water reservoir carried by an inert carrier gas such as $N_2$ or Ar wherein the reservoir temperature and the flow rate determine the vapor pressure monitored by the sensor. The cell may run continuously by collecting steam and $H_2$ from the cell such as the unreacted supplies and the gases that form at the anode and cathode, respectively, separating the gases by means such as condensation of $H_2O$, and re-supplying the anode with the $H_2$ and the cathode with $H_2O$. In an embodiment, the water vapor is supplied by a water generator maintained in the temperature range of about 20-100°C. In another embodiment, the temperature is maintained in the range of about 30 to 50 °C. The water vapor pressure may be maintained in the range of about 0.01 Torr to 10 atm. In another embodiment, the water vapor pressure is maintained in the range of about 31 Torr to 93 Torr. In an embodiment, the cation may be common to the anions of the salt mixture electrolyte, or the anion may be common to the cations. Alternatively, the hydroxide may be stable to the other salts of the mixture. Exemplary cells are [Ni($H_2$)/$Mg(OH)_2$-NaCl/Ni wick ($H_2O$ and optionally $O_2$)], [Ni($H_2$)/$Mg(OH)_2$-$MgCl_2$-NaCl/Ni wick ($H_2O$ and optionally $O_2$)], [Ni($H_2$)/$Mg(OH)_2$-MgO-$MgCl_2$/Ni wick ($H_2O$ and optionally $O_2$)], [Ni($H_2$)/$Mg(OH)_2$-NaF/Ni wick ($H_2O$ and optionally $O_2$)], [Ni($H_2$), V($H_2$), Ti($H_2$), Nb($H_2$), Pd($H_2$), PdAg($H_2$), Fe($H_2$), and 430 SS($H_2$)/LiOH-LiX, NaOH-NaX, KOH-KX, RbOH-RbX, CsOH-CsX, $Mg(OH)_2$-$MgX_2$, $Ca(OH)_2$-$CaX_2$, $Sr(OH)_2$-$SrX_2$, or $Ba(OH)_2$-$BaX_2$ wherein X =F, Cl, Br, or I/Ni wick ($H_2O$ and optionally $O_2$)], [Ni($H_2$), V($H_2$), Ti($H_2$), Nb($H_2$), Pd($H_2$), PdAg($H_2$), Fe($H_2$), or 430 SS($H_2$)/$CsNO_3$-CsOH, CsOH-KOH, CsOH-LiOH, CsOH-NaOH, CsOH-RbOH, $K_2CO_3$-KOH, KBr-KOH, KCl-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, and

$RbNO_3$-RbOH/Ni wick ($H_2O$ and optionally $O_2$)], and [$Ni(H_2)$, $V(H_2)$, $Ti(H_2)$, $Nb(H_2)$, $Pd(H_2)$, $PdAg(H_2)$, $Fe(H_2)$, or 430 $SS(H_2)$/LiOH, NaOH, KOH, RbOH, CsOH, $Mg(OH)_2$, $Ca(OH)_2$, $Sr(OH)_2$, or $Ba(OH)_2$ + one or more of $AlX_3$, $VX_2$, $ZrX_2$, $TiX_3$, $MnX_2$, $ZnX_2$, $CrX_2$, $SnX_2$, $InX_3$, $CuX_2$, $NiX_z$, $PbX_2$, $SbX_3$, $BiX_3$, $CoX_2$, $CdX_2$, $GeX_3$, $AuX_3$, $IrX_3$, $FeX_3$, $HgX_2$, $MoX_4$, $OsX_4$, $PdX_2$, $ReX_3$, $RhX_3$, $RuX_3$, $SeX_2$, $AgX_2$, $TcX_4$, $TeX_4$, T1X, and $WX_4$ wherein X =F, Cl, Br, or I/Ni wick ($H_2O$ and optionally $O_2$)]. Cells such as [Ni ($H_2$)/MOH (M =alkali) $M'X_2$ (M' = alkaline earth) and optionally MX (X = halide) /Ni] may be run at an elevated temperature such that the reactants are thermodynamically stable to hydroxide-halide exchange.

In another embodiment of the type [M'($H_2$) or hydride/electrolyte comprising a molten hydroxide/M"] wherein M' and M" may comprise a $H_2$ permeable metal such as Ni, Ti, V, Nb, Pt, and PtAg, the electrolyte comprises a mixture of a hydroxide and a hydride such as MOH-MH (M = alkali). The MH may be reduced to M and $H^-$ at the cathode. $OH^-$ and H may be oxidized at the anode to $H_2O$. The electrolyte comprising an excess of MH may be regenerated by addition of $O_2$ or $H_2O$. In other embodiments, the electrolyte may comprise another hydrogen storage material beside or in addition to MH such as borohydrides and aluminum hydrides.

Referring to FIGURE 2, the H formed by the reduction of water may permeate the hydrogen permeable membrane 473 and react with an H reactant. The H permeable electrode may comprise V, Nb, Fe, Fe-Mo alloy, W, Mo, Rh, Ni, Zr, Be, Ta, Rh, Ti, Th, Pd, Pd-coated Ag, Pd-coated V, Pd-coated Ti, rare earths, other refractory metals, and others such metals known to those skilled in the Art. The H reactant may be an element or compound that forms a hydride such as an alkali, alkaline earth, transition, inner transition, and rare earth metal, alloy, or mixtures thereof, and hydrogen storage materials such as those of the disclosure. Exemplary cells are [$Ni(H_2)$/LiOH-LiBr/Ni(Li, Ti, La, Ce)].

Further exemplary cells are [$Ni(H_2)$ + MOH/molten salt of M'X-M"X' (M and M' = alkali, X and X' = halide or other anion, M" is a metal such as alkali, alkaline earth, transition, inner transition, and Groups III-VI wherein the salt is stable to reaction with the mixture and the stoichiometry of each element of M'X-M"X' gives neutrality). M'X-M"X' may comprise at least one of $NiCl_2$, $MnI_2$, $EuBr_2$, $SnI_2$, $FeCl_2$, AgCl, $FeCl_2$, InCl, $CoCl_2$, $CrCl_2$, CsCl, CuCl, $CuCl_2$, $MnCl_2$, $NiCl_2$, $PbCl_2$, RbCl, $SnCl_2$, $TiCl_2$, and $ZnCl_2$]. The cells may further comprise a source of oxygen such as air or $O_2$ gas such as at the cathode. The cells may be regenerated by electrolysis, addition of $H_2$, or mechanically. In an embodiment, the reaction vessel may comprise a material resistant to corrosion by molten hydroxides such as nickel or Monel alloy. In an embodiment, at least one of the cathode and anode is lithiated such as a lithiated Ni electrode such as Ni comprising LiNiO. In embodiments, the anode of molten salt or aqueous alkaline cells that are discharged continuously or intermittently with a waveform such as charging from a first time and discharging for a second time wherein the current may be maintained constant during at least one of the time periods, the anode may comprise a hydride such as nickel hydride, $LaNi_5H_6$, or $La_2CoNi_9H_6$.

Suitable molten hydroxide electrolytes that form peroxide ions such as $O_2^{2-}$ and $HOO^-$at the cathode from the reduction of oxygen are LiOH and NaOH. Exemplary reactions to form a hydrino catalyst such as at least one of OH, $H_2O$, $O_2$, nH, and nO (n is an integer) arc

Cathode

$$O_2 + 2e^- \text{ to } O_2^{2-} \tag{165}$$

$$O_2 + H_2O + 2e^- \text{ to } HO_2^- + OH^- \tag{166}$$

Anode

$$H + HO_2^- \text{ to } H_2O + 1/2O_2 + e^- \tag{167}$$

$$H_2 + HO_2^- \text{ to } H_2O + OH + e^- \tag{168}$$

In an embodiment, the cell reactants comprise a source of peroxide or peroxide. Suitable peroxides are $Li_2O_2$ and $Na_2O_2$. The peroxide or peroxide ions may form a hydrino catalyst such as at least one of OH and $H_2O$. Exemplary reactions pathways are given by Eqs. (138-148) and (165-168). Suitable cells are [$Ni(H_2)$/at least one of LiOH and NaOH and possibly another salt such as LiX or NaX (X = halide) and a peroxide or an alkali peroxide such as $Li_2O_2$ or $Na_2O_2$/Ni]. In an embodiment, the electrolyte comprises at least one of a mixture of hydroxides and other salts that favor the formation of one or more oxygen species by the reduction of oxygen. The electrolyte is selected to optimize the reduction of oxygen

to the desired oxygen reduction products that further optimizes the dependent catalyst formation and reaction to form hydrinos. In an exemplary embodiment, one or more of NaOH or KOH is added to a eutectic mixture of LiOH-LiBr to optimize the electrical power from forming hydrinos. In another embodiment, $H_2O$ or a source of $H_2O$ is added to the cathode reactants to cause the conversion of higher oxides such as peroxide and superoxide to hydroxide. A suitable reaction is the reduction of $O_2$ and $H_2O$ to form $OH^-$ directly or through an intermediate species such as at least one of peroxide, superoxide, and oxide ions, and $HOO^-$, and HOOH.

In an embodiment, oxygen is reduced to a species at the cathode that serves as the catalyst or a species that serves as an intermediate that further reacts to form the catalyst. The species or a further reaction product may be at least one of species comprising at least one of O and H such as $H_2$, H, $H^+$, $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$. In another embodiment, the cathode reaction may be concerted with the anode reaction. The cathode reaction involving oxygen may form a species that causes an energy match between H and a catalyst both formed at the anode wherein the H may react to form hydrino. Exemplary species formed at the cathode arc $O^-$, $O^{2-}$, $O_2^-$, $O_2^{2-}$, $OH^-$, $HOO^-$, H, $H_2$, O, OH, $H_2O$, $O_2$, $O_3$, and $O_3^-$. The anode reaction may comprise the oxidation of $HO^-$ to at least one of OH, $H_2O$, O, and $O_2$ wherein at least one of the OH, $H_2O$, O, and $O_2$ may serve as the catalyst. In an embodiment, the concerted reaction may comprise the anode reaction of $OH^-$ to at least one of OH and $H_2O$ (Eqs. (123) and (131)), and the cathode reaction may comprise the reduction of $O_2$ to $O_2^{2-}$ (Eq. (165)). A suitable electrolyte to preferentially form $O_2^{2-}$ comprises at least one of LiOH and NaOH. In an embodiment, $H_2O$ is further provided to react with at least one reduced oxygen species. At least one product may be $OH^-$. The source of at least one of oxygen and water may be air. The concentration of one or more of oxygen and $H_2O$ may be controlled to control at least one of the electrical and thermal power outputs from the formation of hydrinos. In an embodiment, the electrical power output of the cell is optimized. In an embodiment, $CO_2$ and CO are removed from the air before flowing into the cell. The removal may be achieved by using a scrubber known to those skilled in the Art. In an embodiment, a hydroxide electrolyte comprises an additive such as an oxide to suppress carbonate formation from CO and $CO_2$. Suitable additives are high water concentration, oxides of Mg, Sb, and Si, and oxyanions such as pyrophosphate and persulfate. Specific examples are $SiO_2$, MgO, $Sb_2O_3$, $Na_2S_2O_8$, and $Na_4P_2O_7$. In an embodiment comprising a molten electrolyte such as a molten alkali hydroxide salt, carbonate may be removed by reaction with an active metal such as the alkali metal. In an embodiment comprising an intermittently charged and discharged cell, the cell is closed to air that avoids CO and $CO_2$. In an embodiment, the oxygen of at least one half-cell reaction is from electrolysis such as oxidation of at least one of $H_2O$ and $OH^-$.

In an embodiment, the molten hydroxide electrolyte and mixtures comprising a molten hydroxide further comprises an oxide such as an alkaline ($M_2O$) or an alkaline earth oxide (M'O). The concentration may be up to saturation. The oxide may react with the hydroxide or water to form an equilibrium concentration. Exemplary reactions are:

$$Li_2O \text{ to } H_2O \text{ to } 2LiOH \tag{169}$$

$$Li_2O + 2OH^- \text{ to } 2LiO^- + H_2O \tag{170}$$

The molten hydroxide electrolyte may further comprise an alkali metal (M). In an embodiment, the electrolyte comprises a molten hydroxide, optionally another salt, and at least one of M, MH, $M_2O$, $MO_2$, or $M_2O_2$ wherein M is a metal such as an alkali metal. In an embodiment, at least one of the oxide, $H_2O$, peroxide, and superoxide equilibriums are shifted.

In an embodiment, the energy of the cell reaction to form the catalyst such as at least one of $H_2O$, OH, $O_2$, nH, and nO (n = integer) is equivalent to that of the reaction occurring in vacuum. The reaction may occur in a gas or a condensed phase such as a liquid phase or a solid phase. The liquid may be an aqueous or molten salt medium such as an electrolyte. The reaction to form the catalyst may comprise a half-cell reaction. In an embodiment, the counter half-cell reaction to that which forms the catalyst may occur at voltage that is about 0 V relative to a standard hydrogen electrode (SHE). Suitable voltages are in the ranges of about -0.5V to +0.5V, -0.2V to +0.2V, and -0.1V to +0.1V relative to a SHE. The catalyst of the catalyst-forming half-cell reaction may be at least one of $H_2O$, OH, $O_2$, nH, and nO (n = integer). The catalyst forming reaction and the counter half-cell reaction may be

Anode:

$$OH^- + H_2 \text{ to } H_2O + e^- + H(1/p) \quad (171)$$

Cathode:

$$O_2 + 2H_2O + 4e^- \text{ to } 4OH^- \quad (172)$$

The overall reaction may be

$$3/2H_2 + 1/2O_2 \text{ to } H_2O + H(1/p) \quad (173)$$

wherein at least one of $H_2O$, OH, $O_2$, nH, and nO (n = integer) may serve as the catalyst. In the case of a molten hydroxide salt electrolyte, the water partial pressure supplied to the cell may be controlled to favor the $OH^-$ producing reaction over other $O_2$ and $H_2O$ reduction reactions such as those that form at least one of peroxide, superoxide, and oxide. In an embodiment, at least one of the temperature, $O_2$ pressure, $H_2O$ pressure, $H_2$ pressure, and $OH^-$concentration are controlled to favor the catalyst-forming half-cell reaction and the counter reaction that results in the optimal formation of hydrinos. One or more of the corresponding reactions may be given by Eqs. (171-173). Suitable exemplary cells are [Ni($H_2$)/LiOH-LiBr/Ni + air], [Ni($H_2$)/NaOH-NaBr/Ni + air], [Ni($H_2$)/NaOH-NaI/Ni + air], [Ni($H_2$)/$Sr(OH)_2$/Ni + air], and similar cells of the disclosure wherein the air comprises some $H_2O$.

In an embodiment, the reaction that forms the $H_2O$ catalyst is about 1.2 volts thermodynamically corrected for the operating temperature. In an embodiment, the voltage of the half-cell reaction to form the catalyst relative to 25 °C and the SHE is about 1.2V. Suitable voltages are in the ranges of about 1.5V to 0.75V, 1.3V to 0.9V, and 1.25V to 1.1V relative to a SHE and 25 °C. The cell may be operated in the temperature range of about 200 °C to 1000 °C or in the range of about 250 °C to 600 °C. Suitable reactions are those that form $H_2O$ wherein $H_2O$ may serve as the catalyst as given by Eqs. (171) and (172) and Eqs. (197) and (198). Suitable electrolytes to achieve the desired voltages are a molten alkaline or alkaline earth hydroxide that may further comprise another salt such as a halide. Suitable mixtures are eutectic salt mixtures such as an alkali metal hydroxide and halide such as LiOH-LiBr, NaOH-NaBr, and NaOH-NaI. An exemplary alkaline earth hydroxide is $Sr(OH)_2$. Hydrogen may be supplied to the anode by permeation or by bubbling. Suitable acidic electrolytes are aqueous acid electrolytes such as aqueous $H_2SO_4$ or HX (X-halide) or an acidic ionic liquid such as those of the disclosure.

In an alkaline aqueous cell embodiment, the catalyst forming reaction may be given by Eq. (171), and the counter half-cell reaction having a reduction potential relative to the SHE of about 0 V is at least one of

$$O_2 + H_2O + 2e^- \text{ to } HO_2^- + OH^- \quad (174)$$

$$O_2 + 2H_2O + 2e^- \text{ to } HOOH + 2OH^- \quad (175)$$

$$O_2 + e^- \text{ to } O_2^- \quad (176)$$

In an embodiment, the $O_2$ concentration or the cathode material may be altered to achieve a reaction with the desired potential. Suitable exemplary cells are [MH/KOH (aq sat)/SC, Pd, Pt, Au, Ag, or other oxygen reduction cathode + air] and similar cells of the disclosure wherein MH is a metal hydride such as $LaNi_5H_x$.

In an embodiment of an electrolytic cell comprising hydroxide electrolyte such as an aqueous or molten hydroxide or mixture such as an alkali hydroxide such as LiOH, $H_2$ is generated at the cathode, and $O_2$ is generated at the anode by electrolysis of $H_2O$. The hydroxide of the electrolyte may be formed by solution an aqueous base such as a carbonate such as $M_2CO_3$ (M= alkali). The cell may be operated at an elevated temperature such as in the range of about 25 °C to 300 °C, but may be operated at higher temperatures. The cell may be pressurized to operate at temperature near boiling and above. In an embodiment, at least one of the reactions of the oxidation of $OH^-$ to $H_2O$ in the presence of H at the cathode and the reduction of at least one of $O_2$ and $H_2O$ to $OH^-$ at the anode occurs with the formation of hydrinos. In an embodiment, the oxygen formed at the anode is reduced with $H_2O$ to $OH^-$at the anode, and the $H_2$ formed at the cathode reacts with $OH^-$ as it is oxidized to $H_2O$ at the cathode such that the $OH^-$ pathway occurs at the anode and

cathode according to Eqs. (172) and (171), respectively. The catalyst may be $H_2O$ formed at the cathode that reacts with the H also formed at the cathode. The cathode may be a metal that forms a hydride such as a noble metal such as Pd, Pt, or Au, or a transition metal or alloy such as Ni or $LaNi_5$. The cathode may perform as a bifunctional electrode to reduce $H_2O$ to $H_2$ and oxidize $OH^-$ to $H_2O$ in the presence of H. The anode may comprise a conductor such as a metal such as a noble metal such as Pt, Pd, or Au, or a transition metal or alloy such as Ni or $LaNi_5$ that performs as a bifunctional electrode to oxidize the aqueous electrolyte to $O_2$ and reduce at least one of $O_2$ and $H_2O$ to $OH^-$. The morphology of the electrode may increase its surface area. Exemplary electrodes such as Ni are wire, sintered, sheet, or mat Ni. In an embodiment, the molten salt cell having an alkaline electrolyte such as one comprising at least one of hydroxide and carbonate comprises an anode that comprises at least one of nickel, nickel oxide, cobalt, cobalt oxide, and chromium-doped nickel, a cathode that may be nickel, NiO, cobalt, cobalt oxide, Ag, silver oxide such as $Ag_2O_2$, Ag-doped Ni, and lithiated nickel oxide, and may comprise an electrolyte support such as MgO, $Li_2TiO_3$, or $LiAlO_2$. An electrode such as the anode may comprise NiO and another compound that stabilizes NiO such as MgO or $Fe_2O_3$ that may form $Ni_{1-x}Mg_xO$ and $NiFe_2O_4$, respectively. In an embodiment, an electrode such as the anode such as NiO may stabilized by increasing the basicity by a source such as a source of $O^{2-}$. Suitable sources to increase the basicity of the electrolyte are MgO, CdO, ZnO, $Fe_2O_3$, NiO, $Li_2O$, $MoO_2$, $SiO_2$, $Al_2O_3$, $Cr_2O_3$, $TiO_2$, $ZrO_2$, $WO_2$, and similar oxides that serve as a source of $O^{2-}$. The another compound may be added to the electrode or may comprise an electrolyte additive or matrix. The hydrino reaction current contribution is in the direction opposite that of the electrolysis current and may result in additional heat production in the cell. In another embodiment, at least one gas may crossover between half-cells such that at least one of reactions given by Eqs. (171) and (172) occur to form hydrinos. The electrode separation may be minimal to facilitate gas crossover. The gases may crossover in the cell such that the $OH^-$ system given by Eq. (172) at least partially occurs at the cathode and the $OH^-$ system given by Eq. (171) at least partially occurs at the anode. The catalyst may be $H_2O$ formed at the anode from crossover H that reacts with the additional H that crosses over from the cathode to the anode. The anode may be a metal that forms a hydride such as a noble metal such as Pd, Pt, or Au, or a transition metal or alloy such as Ni or $LaNi_5$ that performs as a bifunctional electrode to oxidize the aqueous electrolyte to $O_2$ and oxidize $OH^-$to $H_2O$ in the presence of crossover hydrogen. The cathode may be a metal that forms a hydride such as a noble metal such as Pd, Pt, or Au, or a transition metal or alloy such as Ni or $LaNi_5$. The cathode may perform as a bifunctional electrode to reduce $H_2O$ to $H_2$ and may additionally reduce at least one of crossover $O_2$ and $H_2O$ to $OH^-$. Thus, the cathode may comprise at least one of an oxygen and $H_2O$ reduction catalyst. At least one of electrical and thermal energy is released by the crossover reactions wherein the current has the same polarity as that of the electrolysis current, but the voltage is of the opposite polarity. Thus, in the case that constant current electrolysis is performed, in an embodiment, the cell voltage decreases and the cell temperature increases. An exemplary electrolysis cell is [Pt/LiOH 0.1M to saturated aq/Pd]. In other embodiments, both electrodes are Ni or one is Ni and the other a different material such as Pt, Pd, DSA material, other noble metal, carbon, Ag, a material of the disclosure, or a one or more of these materials or others of the disclosure on a support such as Pt/Ti and the electrolyte is aqueous (aq) KOH or $K_2CO_3$ in the concentration range of about 0.1M to saturated. Specific examples are [PtTi/$K_2CO_3$ or KOH 0.1M to saturated aq/Ni].

In an embodiment, at least one of an oxyhydroxide such as PdOOH, PtOOH, or NiOOH, a hydroxide such as $Pt(OH)_2$, $Pt(OH)_4$, $Pd(OH)_2$, or $Ni(OH)_2$, and a hydrate such as $Pt(H_2O)_4$ may form at an electrode such as the anode. The oxidation reaction of one or more of oxidation products of the electrode such as the anode with $OH^-$ may form the catalyst such as $H_2O$ and H that further react to form hydrinos. Exemplary reactions at a Pt anode are

$$PtOOH + 2OH^- \text{ to } PtO + H_2O + H(1/4) + O_2 + 2e^- \quad (177)$$

$$Pt(OH)_2 + OH^- \text{ to } PtO_2 + H_2O + H(1/4) + e^- \quad (178)$$

$$3Pt(OH)_2 + OH^- \text{ to } Pt_3O_4 + 3H_2O + H(1/4) + e^- \quad (179)$$

The reaction of an oxyhydroxide, hydroxide, or hydrate at the anode may reduce the electrolysis cell voltage. The reaction to form hydrinos releases energy that may be in the form of at least one of thermal and electrical energy. In an embodiment of the electrolysis or intermittent electrolysis cell, H is formed by reduction of $H_2O$ at the negative electrode during electrolysis, and the reaction is at least partially reversible such that the catalyst such as $H_2O$ is formed that further reacts with H to form hydrinos. The reaction to form the $H_2O$ catalyst may be the reaction $OH^-$ + H to $H_2O$ + $e^-$.

In an embodiment of the electrolysis cell or CIHT cell such as one comprising a $H_2$ permeation anode or one operated under intermittent electrolysis, at least one electrode forms an oxide and further comprises hydrogen from as source such as at least one of $H_2$ gas permeation, generation on the surface from electrolysis such as continuous

electrolysis or intermittent electrolysis, and absorbs $H_2$ from $H_2$ crossover from the counter electrode or from an external source such as supplied $H_2$ gas. The oxide may form by reaction of at least one of the electrolyte with the metal and oxygen dissolved in the electrolyte with the metal. The oxygen may be from source such as at least one of atmospheric or supplied oxygen gas or from electrolysis of $H_2O$ that may be performed in the cell. The electrolyte may comprise hydroxide. The hydroxide may react with the metal oxide to form $H_2O$ catalyst that may further react with the hydrogen such as atomic hydrogen on the electrode to form hydrinos. The energy released in forming hydrinos may be manifest as at least one of electrical energy and thermal energy. Representative reactions of nickel oxides with the hydroxide to form $H_2O$ catalyst are

$$2KOH + NiO \text{ to } K_2NiO_2 + H_2O \quad (180)$$

$$3KOH + NiO \text{ to } KNiO_2 + H_2O + K_2O + 1/2H_2 \quad (181)$$

$$4KOH + Ni_2O_3 \text{ to } 2K_2NiO_2 + 2H_2O + 1/2O_2 \quad (182)$$

Reactants and reactions such as those corresponding to Eqs. (180-182) may comprise those of chemical reactions or solid fuels to form hydrinos and given in the Chemical Reactor section.

In embodiments, the reaction to form hydrinos requires atomic hydrogen and a catalyst. A suitable reaction to form atomic hydrogen is hydrogen dissociation on a high surface area dissociator such as a transition metal such as Ni, Ti, or Nb, or a noble metal such as Pt, Pd, Ir, Rh, and Ru. The dissociator may be a nano powder such as one having particle size in the range of about 1 nm to 50 microns. Alternatively, atomic hydrogen is provided by hydrogen permeation through a hydrogen permeable membrane such as Ni or by sparging. Atomic hydrogen may be generated on a surface or in the electrolyte by electrolysis. Electrolysis may be maintained intermittently. One or more H atomic layers may be formed that react to form hydrinos at least during the discharge phase of the intermittent cycle.

An electrolysis cell 400 shown in FIGURE 1 comprises a cathode compartment 401 with a cathode 405, an anode compartment 402 with an anode 410, and optionally a separator or salt bridge 420. The electrolysis power is supplied by a power source that is applied between the terminals. The power source may be a power supply or a power storage unit that may be at least a second CIHT cell or a capacitor. The power storage such as the second CIHT cell or capacitor may be charged by the first CIHT cell that comprises a power source. Control electronics may switch between charging and discharging the first CIHT cell using the power source and control the charge and discharge parameters such as voltage, current, power, and load. The electrolyte may be aqueous, a molten salt, or a combination thereof such as those of the disclosure. In an electrolysis cell embodiment, the electrolysis voltage is intermittent or pulsed. The electrolyte may be a molten salt such as a molten hydroxide eutectic salt such as an alkaline or alkaline earth hydroxide and a halide salt. An exemplary electrolyte is LiOH-LiBr. The electrolyte may also be an aqueous electrolyte that may be basic, acidic, or about neutral. An exemplary basic electrolyte is an aqueous hydroxide electrolyte such as an aqueous alkali hydroxide such as KOH. An exemplary acidic electrolyte is an aqueous acid such as aqueous $H_2SO_4$ or HX (X = halide).

In an embodiment, the electrolyte may comprise a basic aqueous solution. The charging phase of the intermittent or pulsed cycle may comprise the electrolysis of $H_2O$ to $H_2$ and $O_2$. The cathode and anode reactions may comprise the reverse of Eqs. (171) and (172), respectively, except that the hydrino formation is irreversible. The cathode discharge half-cell reaction may comprise the reduction of at least one of $H_2O$ and oxygen. The reduction may be given by Eq. (172). The overpotential for the reduction reaction may cause the half-cell voltage to be about zero. In an embodiment, the reduction potential for the reduction of $O_2$ and $H_2O$ to $OH^-$ in aqueous alkaline solution (Eq. (172)) is about 0.4 V relative to the SHE and 25 °C. The overpotential for reduction on the electrode is about 0.4V such that the reduction half-cell reaction occurs at about 0 V. The anode discharge half-cell reaction may comprise the oxidation of $OH^-$ and further reaction with H to form $H_2O$ (Eq. (171)). The $H_2O$ may serve as a catalyst to form hydrinos. In an embodiment, the reduction potential for the oxidation of $OH^-$ and further reaction with H to form $H_2O$ (Eq. (171)) is about 1.23 V relative to the SHE and 25 °C. The overpotential for oxidation on the electrode is such that the oxidation half-cell reaction occurs at about 1.23 V.

In other embodiments, the catalyst may comprise a species that accepts m27.2 eV from atomic hydrogen such as those of the disclosure wherein the catalyst may be a half-cell species or formed during the electrolysis or discharge phases. Hydrinos are formed during at least one of the charge and discharge phases. Regarding the discharge phase, the half-cell potential of the oxidation reaction may be about 1.23 V or be in the range of about 0.6 to 1.5 V relative to the SHE and 25°C, and the half-cell potential of the reduction reaction may be about 0 V or be in the range of about -0.5 to +0.5V relative to the SHE and 25 °C. The cell potential between the electrolysis cathode and anode during the

electrolysis-off or discharge phase may be about 1.2 V or be in the range of about 0.6 to 2 V relative to the SHE and 25 °C. In embodiments having an elevated temperature, these room temperature ranges are thermodynamically corrected for the operating temperature. In not given otherwise the voltages of the disclosure are relative to the SHE and 25 °C.

In an embodiment of the CIHT or electrolysis cell to form hydrinos and at least one of electrical and thermal power comprising an aqueous electrolyte, at least one system alteration or method is applied to enhance the rate of forming hydrinos comprising the use of a porous anode to provide regions for formation of nascent $H_2O$, a variation of the gas flow rate by means such as varying the electrolysis current to change the gas/electrolyte/electrode interfacial layer properties to favor formation of free or nascent $H_2O$ (non-bulk $H_2O$) as the catalyst (when $H_2O$ is indicated as the catalyst herein it is inherent that hydrino catalytically active or nascent $H_2O$ is meant), and a variation of the electrolyte composition, concentration, temperature, and other such physical parameters to cause a change in it properties such as a change in the solvent spheres about ions that alter the capacity of the cell reactions to form free or nascent $H_2O$ catalyst and hydrinos.

In an embodiment such as at least one comprising a molten salt or aqueous electrolytic cell, the cell is charged at a constant voltage per cell that corresponds to the negative of the cell potential for the reaction of $H_2$ and $O_2$ to $H_2O$. The charging potential may comprise the $H_2O$ electrolysis potential having overpotential as well as thermodynamic voltage components. The cell may also be charged at a constant current, power, or load, or a variable voltage, current, power, or load. The cell may then be discharged at constant voltage, current, power, or load. The constant voltage may be achieved using a load that maintains the desired discharge voltage. In other embodiments, the discharge may be at a variable voltage, current, power, or load that may be controlled with at least one of a voltage, current, power, and load controller. The voltage and current parameters may comprise a ramp in either direction such as from a minimum to a maximum while charging and a maximum to a minimum while discharging, for example. In an embodiment, the discharge is under conditions that maximize the hydrino reaction rate by matching the half-cell reduction potentials to those that achieve the optimization. In an embodiment, the discharge is maintained at a constant voltage per cell that corresponds to cell potential for the reaction $H_2$ and $O_2$ to $H_2O$. The matching potential may comprise overpotential as well as thermodynamic voltage components. In other embodiments, at least one of the voltage and current is variable to achieve the discharge voltage that causes the hydrino catalyst reaction to occur at the maximum rate. The cell potential is the difference of the half-cell reduction potentials that may comprise overpotential as well as thermodynamic voltage components. The frequency and other charge-discharge parameters may be adjusted to maximize the hydrino catalysis reaction rate. In an embodiment, the waveform of the cycle is conditioned to match a suitable load or a load is matched to the waveform. In an embodiment, the charge-discharge frequency may be that of the standard such as that of the power grid. The frequency may be 50 Hz, or it may be 60 Hz. The waveform may be conditioned to alternating current such as alternating current at 60 Hz or 50 Hz. The frequency may involve reciprocal charging between two cells that are out of phase of the charge-discharge cycle such that one may charge another and vice versa. In another embodiment, the current may be rectified. The current may be supplied to a load during the discharge as direct current that may be about constant current. Multiple CIHT cells may be timed to provide constant current over durations longer than that of the cycle of any given individual cell.

In an embodiment, the cell generates at least one of hydrogen and oxygen from $H_2O$. In an embodiment, the $H_2$ and $O_2$ may be formed on the discharge anode and cathode, respectively, during intermittent electrolysis. Alternatively, the gases are formed from $H_2O$ spontaneously that may be independent of electrolysis. The energy to drive the spontaneous production of at least one of $H_2$ and $O_2$ from $H_2O$ is the formation of hydrinos. At least one of the gases, $H_2$ and $O_2$, are reactants to form at least one of the catalyst and hydrinos. The mechanism may involve at least one of an electrochemical and an ionization reaction. The catalyst such as $H_2O$ may be formed during discharge that further reacts with H to form hydrinos. The reaction to form $H_2O$ during discharge may be reversible at any stage of the cell operation such that H is formed at the discharge anode directly and, optionally, independent of that formed by electrolysis. In addition or alternatively, to the electrolysis of $H_2O$ to $H_2$ and $O_2$ at the discharge anode and cathode, respectively, H formation may be spontaneous due to the energy that is released to form hydrinos wherein both reactions may occur simultaneously. In an embodiment, the cell voltage is such that the electrolysis of $H_2O$ occurs spontaneously with hydrino formation. The hydrino reaction may at least partially maintain or support the cell voltage that achieves at least one of propagation of the electrolysis of $H_2O$ and propagation of the hydrino formation reaction. In an embodiment, the cell voltage is about 0.8 $\pm$ 0.5V. The exemplary cell comprising [Ni/LiOH-LiBr with optional matrix such as MgO/Ni] and a supply of $H_2O$ may be operated in the temperature range of about 280-500 °C with a cell voltage of about 0.8 V $\pm$ 0.2V. The voltage may be assisted by at least one of intermittent electrolysis and spontaneous electrolysis with hydrino formation. An exemplary cell waveform of the intermittent electrolysis may comprise a step of charge to 0.8 V $\pm$ 0.2V and maintain that voltage for a set time as the cell discharges. The cell waveform may further discharge the cell under conditions such as at a constant current to a limiting voltage such as 0.6 V $\pm$ 0.2V or for a limiting time such as 4s $\pm$ 3s. The spontaneous electrolysis of $H_2O$ may have one or more intermediate steps that involve a reaction of at least one of the anode material, the electrolyte, and a solid, liquid, and gas in the cell. For example, $H_2O$ may react with the anode metal M to form MO and $H_2$. Exemplary solids, liquids, and gases are solid matrix such as MgO, $LiAlO_2$, $Li_2TiO_3$,

$LiVO_3$, $CeO_2$, $TiO_2$, and others of the disclosure, $H_2O_2$, $O_2$, $CO_2$, $SO_2$, $N_2O$, NO, and $NO_2$. Alternatively, the electrolyte may be at least one of oxidized and reduced, and $H_2O$ is also a reactant. Exemplary spontaneous $H_2O$ electrolysis reactions are

Discharge Anode:

$$2OH^- \text{ to } 2H + O_2^- + e^- \quad (183)$$

$$2H \text{ to } 2H(1/p) \quad (184)$$

wherein $H_2O$ catalyst is formed by the reaction of Eq. (171), for example.
Discharge Cathode:

$$O_2^- + H_2O + e^- \text{ to } 1/2O_2 + 2OH^- \quad (185)$$

The overall reactions may be

$$H_2O \text{ to } 1/2O_2 \text{ and } 2H(1/p) \quad (186)$$

$$H_2O \text{ to } 1/2O_2 \text{ and } H_2 \quad (187)$$

Other exemplary spontaneous $H_2O$ electrolysis reactions are Discharge Anode:

$$2OH^- \text{ to } H + HOO^- + e^- \quad (188)$$

$$H \text{ to } H(1/p) \quad (189)$$

wherein $H_2O$ catalyst is formed by the reaction of Eq. (171), for example.

Discharge Cathode:

$$HOO^- + 1/2H_2O + e^- \text{ to } 2OH^- + 1/4O_2 \quad (190)$$

The overall reaction may be given by Eqs. (186) and (187).
Discharge Anode:

$$3OH^- \text{ to } O_2 + H_2O + H + 3e^- \quad (191)$$

$$H \text{ to } H(1/p) \quad (192)$$

wherein $H_2O$ catalyst is also formed by the reaction of Eq. (171), for example.
Discharge Cathode:

$$1/2O_2 + H_2O + 2e^- \text{ to } 2OH^- \quad (193)$$

The overall reaction may be given by Eqs. (186) and (187). The hydrogen and oxygen of Eqs. (183), (185), (188), (190), and (191) may react to form $OH^-$ and $H_2O$ according to Eqs. (171) and (172), respectively. Other oxygen species such

as oxide, peroxide, superoxide, and $HOO^-$ and reactions given in the disclosure such as (Eqs. (138-153)) may be involved in the spontaneous electrolysis of $H_2O$ to form a source of at least one of H, catalyst, and hydrinos. In an embodiment, H may be formed at the discharge anode and cathode wherein hydrinos are preferentially formed at one electrode such as the anode since the catalyst is formed there. An exemplary cell is one having a Ni discharge anode and a NiO discharge cathode wherein hydrinos are preferentially formed at the Ni electrode. In addition to the reactions supra, the reaction at the discharge cathode may be reduction of $H_2O$ to $OH^-$ and $H_2$, and the reaction at the anode may be the oxidation of $OH^-$ as given in the reactions above and may further comprise the reaction to form metal oxide of the anode. Alternatively, an oxide such as a metal oxide such as NiO may be reduced at the cathode. The reduction may also include other reactants such as $H_2O$. Exemplary reduction reactions are NiO to Ni and negative ions comprising oxygen such as oxide, peroxide, and superoxide and reduction of NiO and $H_2O$ to Ni and hydroxide. Additionally, in an embodiment, the catalyst such as $H_2O$ is formed at the discharge anode. The cell may be run in continuous discharge mode in an embodiment wherein the spontaneous generation of H and then hydrinos is sufficient to maintain a desired electrical output from the cell. $H_2O$ may be supplied to the cell to maintain the electrical output. Alternatively and in combination, the cell may be run with intermittent electrolysis according to systems and methods of the disclosure. Any excess hydrogen from intermittent or spontaneous electrolysis may be collected for another commercial use. In an embodiment, the excess current maintained by the energy from the hydrino reaction may be manifest as or propagate as the spontaneous electrolysis of water as exemplified by the reactions of Eqs. (183-193). In an embodiment, the hydrino reactions involving the conversion of $H_2O$ to hydrinos, electricity, and oxygen or compounds or species comprising oxygen may comprise hydrolysis reactions.

In an embodiment, the water vapor pressure is controlled to maintain spontaneous electrolysis reactions. The water vapor pressure or composition of the reaction mixture may be maintained to support the ions that maintain the spontaneous electrolysis such as at least one of $OH^-$, oxide, peroxide, superoxide, and $HOO^-$. Certain ions are preferentially maintained to favor the electrolysis of water, the formation of catalyst and H, and the formation of hydrinos. In the exemplary reactions of Eqs. (183-193), the water vapor pressure is maintain to support a steady state concentration of superoxide ion for the corresponding reaction pathway to form hydrinos. The water vapor pressure may be controlled using a water vapor or steam generator wherein the temperature of the water reservoir is maintained at the lowest temperature of the system. The system may comprise the water generator, the water vapor line to the cell, and the cell. The water vapor pressure in equilibrium or at steady state with the reactants may be in the range of about 1 microTorr to 100 atm, about 1 milliTorr to 1 atm, or about 1 Torr to 100 Torr.

The electrolyte may be a molten salt or an aqueous alkaline solution such as an aqueous hydroxide or carbonate electrolyte such as an alkali metal hydroxide or carbonate or mixtures thereof in any desired ratios. The electrolyte such as an aqueous electrolyte may comprise mixtures of $M_2CO_3$, MOH, $M_2SO_4$, $M_3PO_4$, $MNO_3$ (M = alkali). Exemplary electrolytes are KOH, $K_2CO_3$, NaOH, $Na_2CO_3$, LiOH, and $Li_2CO_3$ or mixtures thereof that may be in the concentration range of about 0.01 M to saturated. In a pulsed or intermittent applied voltage or current electrolysis embodiment, at least one of the cathode and anode may comprise a bifunctional electrode. The electrodes may comprise different materials to achieve the desired reactions. Each of the cathode and anode that may be selective for the desired oxidation or reduction reaction and may be one of or combinations of a transition metal or alloy such as Ni or $LaNi_5$, carbon, carbon-coated Ni, noble-metal doped carbon such as Pt/C or Pd/C or other metal-doped carbon such as Mo or Ni doped carbon, Pt-Ni alloy, Pt-coated Ni, Ag, Pb, and a noble metal or alloy such as Pt, Pd, or Au. Other stable conductors with the appropriate capability for oxidation and reduction are those known by those skilled in the art. The hydrogen electrode such as the negative electrode may comprise a hydrogen spillover catalyst such as Pt or Pd/C or other high surface area supports doped with a hydrogen dissociator. The hydrogen electrode may comprise a metal or an alloy that provides a low overpotetial for $H_2$ evolution such as an alloy of at least two of Ni, Fe, Co, and Mo such as $Ni_{35.63}Fe_{24.67}Mo_{23.52}Co_{16.18}$ or similar ratios. The electrode may be a carbide, boride, or nitride such as ZrC or TiC; carbon black, AC, ZrC, TiC, TiN, $Ti_3SiC_2$, TiCN, SiC, $YC_2$, TaC, $Mo_2C$, WC, C, HfC, $Cr_3C_2$, ZrC, VC, NbC, $B_4C$, $CrB_2$, $ZrB_2$, $GdB_2$, $MgB_2$, and $TiB_2$ that may be doped with a conductor. The electrodes may comprise at least one of bifunctional and bimetallic cathodes and anodes. The hydrogen electrode or anode may comprise Ni such as Ni celmet, Ni fiber mat, Ni power, Mo, Mo gauze, Mo fiber mat, Mo powder or any combination thereof or other high surface area material. The electrode may be activated by the formation of at least one of an oxide coat and incorporation of a species from the electrolyte such as an alkali ion such as in the case of the formation of exemplary lithiated nickel oxide. The oxide coat may be formed by the operation of the electrode in at least one of a partial oxygen atmosphere and by exposure to a source of oxygen. The cell may be intermittently charged and discharged with an initial charge of oxygen that is depleted over time. The depletion may be with the flow of an inert gas such as a noble gas or $N_2$. The oxide coat may be formed by pretreatment of the electrode such as the anode in a suitable oxidizing solution. An exemplary suitable solution to form an oxide layer on Ni is an alkaline solution of peroxide such as 0.6 M $K_2CO_3$/3% $H_2O_2$. The activation may change the voltage of at least one half-cell reaction such that the reaction to form hydrinos becomes more favorable. The activation may comprise a voltage change of a half-cell reaction involving an electrolyte wherein the catalyst reaction to form hydrinos becomes favorable when in the absence of activation it is unfavorable. In an embodiment, the electrolyte

is at least one of involved in a half-cell reaction of the cell and is a reactant to form at least one of the catalyst and H. The activation may involve conforming the energy of the catalyst during its formation from the electrolyte to match that required to accept energy from hydrogen to form hydrinos. Exemplary electrolytes are alkali hydroxides or mixtures of salts such as a mixture of a hydroxide and another salt such as a halide. Exemplary electrolyte mixtures of an activated cell may comprise LiOH-LiBr, NaOH-NaBr, KOH-KBr, and other combinations of hydroxides and halides such as the alkali ones. Other metals of the disclosure comprising an oxide coat formed to activate the electrode for forming hydrinos may serve as the hydrogen electrode or anode. In another embodiment, the electrolyte may be activated. The activation may be by exposure to oxygen or a source of oxygen. The activation may comprise the formation of oxygen species such as at least one of oxide, peroxide, and superoxide. The electrolyte may comprise a hydroxide such as an alkali hydroxide and may further comprise another salt such as a halide such as an alkali halide. An exemplary electrolyte that is activated by exposure to oxygen at elevated temperature such as in the range of about 100 °C to 1000 °C is KOH-KBr. The formation of oxygen species may change the basicity that favors the formation of hydrinos. In another embodiment, at least one of the half-cell reaction and voltage is changed by the activation to favor the formation of hydrinos. In an embodiment, oxygen or a source of oxygen is added to the cell to cause the activation. The oxygen may be in trace amount such as in the range of 0.1 ppm to 10 vol% but sufficient to maintain an oxide coat on an electrode such as the anode to enhance the hydrino reaction. The mechanism of the enhancement may comprise at least one of the provision of atomic H and the conforming of the half-cell reaction voltage of at least one half cell to match one more favorable to permit H catalysis to form hydrinos. The oxygen may affect the half-cell voltages such as at least one of the $O_2$ reduction reaction such as the reaction of $O_2$ and $H_2O$ to $OH^-$ and that of the anode to form $H_2O$. The effect may be direct through the H and O chemistry or indirect by changing the electrode surface by means such as formation of an oxide coat. The oxide coat may effect the over potential of at least one half-cell reaction to cause the hydrino formation reaction to become more favorable.

Exemplary electrodes are an anode comprising one of Ni, Ni-Al, or Ni-Cr alloy such as about 10% Cr and a cathode comprising at least one of NiO, Ni, Co, CoO, Ag, and Cu. The Ag cathode may be Ag particles dispersed on carbon. Optimal loading is in the range of about 20 to 30 wt%. The anode may comprise a metal that forms an oxide wherein the free energy of formation per at least one of metal atom or oxygen atom is about the same as that of the formation of $H_2O$ from $H_2$ and $O_2$. The energies may match within about 10% to 300% or about 10% to 100% or about 10% to 50%. Exemplary metals are Ni, Mo, Cd, Sn, W, and Pb. Other suitable anode metals or alloys thereof are at least one selected from the group of Cu, Ni, CuNi, NiMo, CuMo, Pb, Sb, Bi, Co, Cd, Ge, Au, Ir, Fe, Hg, Mo, Os, Pd, Re, Rh, Ru, Se, Ag, Tc, Te, Tl, and Sn. In an embodiment, both the cathode and anode are substantially submerged such that most if not all of the oxygen consumed during discharge is generated during electrolysis of an intermittent electrolysis cell. Exemplary cells are [at least one of Cu, Ni, Pb, Sb, Bi, Co, Cd, Ge, Au, Ir, Fe, Hg, Mo, Os, Pd, Re, Rh, Ru, Se, Ag, Tc, Te, Tl, or Sn /LiOH-LiBr/Ni/NiO intermittent electrolysis]. In an embodiment, at least one electrode such as the anode may be magnetized. The magnetized electrode may comprise a ferromagnetic metal such as Ni, Fe, Co, or alloys. In an embodiment, the anode may comprise layers of different materials such as conductors such as metals. The anode may comprise a bimetallic or multi-metallic electrode. One layer may establish an optimal voltage to provide a favorable energy for the hydrino reaction to propagate, and the other may carry the current. Exemplary materials to form a bimetallic electrode such as an anode are at least two of Ni, Mo, and H242 alloy. The cathode may also comprise multiple layers such as a multi-metallic such as a bimetallic electrode such as one comprised of Ni and Ag or other combinations of cathode materials of the disclosure.

The cathode may comprise an oxygen reduction electrode such as manganese oxide such as $MnO_2/C$, $Mn_2O_3/C$, or MnOOH. Other suitable $O_2$ reduction cathodes are at least one of Pt/C or Pt alloy/C such as PtRu/C, $La_{0.5}Sr_{0.5}CoO_3/C$, CoTPP/C, $La_{0.6}Ca_{0.4}CoO_3/C$, Pt/CNT/C, $Pr_{0.8}Ca_{0.2}MnO_3$, CoTMPP/C, $LaMnO_3/C$, and $MnCo_2O_4/C$. Since the discharge anode also serves as the electrolysis cathode during the intermittent cycle, in addition to conventional electrodes, different discharge anode materials may be used than in conventional alkaline fuel cells. Candidates are other transition metals such as Ti and V, inner transition metals and alloys such as Nb and Hg and amalgams such as AgHg, rare earths and alloys such as $LaNi_5$, and Group III, IV, V, and VI metals or metalloids and alloys. In an embodiment, the discharge anode comprises a material that forms a stable hydride. Suitable anode materials comprise a porous material such as a powder. The powder may comprise stabilizers or inhibitors to loss of activity. The loss of activity may be from loss of surface area by mechanisms such as sintering. Suitable stabilizers or inhibitors are alloys such as Ni-Cr alloy such as about 2 to 10 wt% Cr, and zirconia such a 20 wt% $ZrO_2$ added to porous Ni or Co, for example. Further suitable anode materials comprise $LiFe_5O_8$, $LaCrO_3$, MnO, and Nb or Ta doped $TiO_2$, Ni or Cu plated ceramics such as $LiAlO_2$ or $Al_2O_3$ and $SrTiO_3$. Suitable cathode materials comprise NiO, CoO, $MNiO_2$, $M_2NiO_2$, $MCoO_2$, $M_2CoO_2$, MFeOz, $M_2FeO_2$, $Li_2MnO_3$, Mg-$Li_2MnO_3$, Mn-$LiFeO_2$, $LaMnO_3$, $SrTiO_3$, LiCrOz, $LiAlO_2$, $LaNiO_3$, $LaCoO_3$, Zr-ZnO, MM'$O_2$, $M_2$M'$O_2$, MM'$O_x$, $M_2$M'$O_x$ (x = integer, M = alkali, M' = transition metal or other metal such as Al), and $M_2$M'$O_x$ doped with magnesium such as $LiFe_{1-y}Mg_yO$ (y > 0.03). In an embodiment, the electrode porosity is in the range of about 20 to 95% or about 50 to 75%. The pore diameter may be in the range of about 1 to 50 $\mu$m or about 3 to 10 $\mu$m.

Suitable oxygen reduction reaction (ORR) catalysts of electrodes such as cathodes comprise at least one of

Ni, Ni-Al alloy such as about 5-15 at% Al, $Ni_3Al$, and Ni-Nb alloy, $MnO_2$, Ag, mixed valence $CoO_x$-$MnO_x$, metal tetramethoxylphenyl porphyrine such as (CoTMPP, FeTMPP-Cl/C), metal nitride, and mixed oxides of transition metals such a spinels, perovskites, and pyrochlores such as $A_2B_2O_6O'$. In an embodiment, exemplary ORR catalysts are based on individual oxides or mixtures or have a spinel, perovskite, or pyrochlore structure such as NiO, NiO/Ni, NiO + at least one of Dy (e.g. about 1-10 wt%), $Co_3O_4$, $La_2O_3$, MgO, and $Fe_2O_3$, lithiated NiO, Ni on a support such as PTFE, $MnO_2$, Ag, $Co_3O_4$, $La_2O_3$, $LaNiO_3$, spinels $AB_2O_4$ such as A = Mn, B = Co, $NiCo_2O_4$, $LaMnO_3$, and $LaNiO_3$. At least one of the anode and cathode may be lithiated NiO wherein the designation of a Ni electrode in the disclosure may comprise at least partially NiO and optionally partially lithiated NiO ( $Li_x^+Ni_{1-2x}^{2+}Ni_x^{3+}O$ $x< 0.5$ ) or lithium doped NiO as well as Ni. The electrode such as an ORR cathode may comprise Co-phthalocyanines and similar compounds such as Co-C-N, and Fe-C-N, Pt or other noble metals or alloys such as Pt with Fe, Co, or Ni, Pd, Pd alloys such as Pd-Fe, Pd-Co, Pd-Co-Au, and $Pd_3Fe$/C nanoparticles, Ru, or ruthenium compounds such as crystalline Chevrel-phase chalcogenides (e.g. $M_6X_8$ wherein M = high valent transition metal and X = S, Se, Te; $(Mo, Ru)_6Se_8$), nanostructured Ru and Ru-Se clusters, Ru-N chelate compounds, Ru selenides such as $Mo_4Ru_2Se_8$, and $Ru_xSe_y$, carbon, and doped carbon nanotubes and graphene such as N-doped carbon nanotubes. The electrodes may further comprise carbon black, binding agents, current collectors, and Teflon membranes. The sol-gel and reverse micelle methods may be used to form a uniform, high-surface area distribution of catalyst on carbon. The cell may further comprise a separator that may be selective for ion exchange. The ion may be hydroxide ion of an alkaline cell. In a suitable exemplary embodiment, the membrane may comprise poly(arylene ether sulfone) containing pendant quaternary guanidinium groups.

The electrode may comprise a compound electrode for oxygen reduction and evolution. The latter may be used in an intermittent electrolysis cell for example. The electrode may be bifunctional capable of oxygen reduction and evolution wherein the activity is provided by corresponding separate catalyst layers, or the electrocatalyst may be bifunctional. The electrode and cell designs may be those known in the Art for metal-air batteries such as Fe or Zn-air batteries or a suitable modification thereof known by those skilled in the Art. A suitable electrode structure comprises a current collector, a gas diffusion layer that may comprise carbon and a binder, and an active layer that may be a bifunctional catalyst. Alternatively, the electrode may comprise the $O_2$ reduction layers on one side of the current collector and $O_2$ evolution layers on the other side. The former may comprise an outer gas diffusion layer in contact with the source of oxygen and a porous, hydrophobic catalyst layer in contact with the current collector; whereas, the latter may comprise a porous, hydrophilic catalyst layer in contact with the electrolyte on one side of the layer and the current collector on the other side. A bifunctional air electrode may comprise $La_{1-x}A_xFe_{1-y}MnO_3$ (A = Sr or Ca), $La_{0.6}Ca_{0.4}Co_{0.8}B_{0.2}O_3$ (B = Mn, Fe, Co, Ni, or Cu), $La_{0.6}Ca_{0.4}CoO_{3-d}$, and $La_{0.7}Ca_{0.3}CoO_{3-d}$. Further exemplary OR-catalysts and bifunctional-catalyst cathodes are $PdO_2/PdO_3$, a carbide such as a mixture of TaC + WC + $W_2C$ + TiC, Co/Ce-coated Ni, $MnO_2$ + C - PTFE; Mn isopropoxide + activated C + 12% PTFE; 5% $MnO_2$ +75% C (mixture of 30% EC-600JD and 70% AB-50) + 20% PTFE; 5% $MnO_2$ ($Mn^{3+}/Mn^{4+}$) + 70% C (60% PWA + 40% carbon black) (PTFE-Teflon 30B); GDL: 30% EC-600JD + 70% AB-50; $MnO_2$ - C (activated carbon + BP2000) + PTFE; Particle size distribution $MnO_2$-20-26 $\mu$m 30% $MnO_2$ + 20% active carbon + 20% carbon black + 30% PTFE; 20% $MnO_2$ + 66% C + 14% PTFE; Catalyst layer: 20% $MnO_2$ + 70% active carbon + 10% PTFE; GDL: 15% carbon black + 85% PTFE; 11% gamma $MnO_2$ + 41% C (BP2000) + 48% PTFE; $MnO_2$ cathode + PTFE + 2-20% absorbent material such as the gelling material used in the anode; $MnO_2$; Ag/CNC; Ag on Ni foam; $AgW_2C$/C; $AgMnO_4$ + 5-10% $MnO_2$ + C + PTFE; Raney silver catalyst + PTFE=5:1 (wt.%) (24 mg $cm^{-2}$); $Ag_2O$ + 10% $LaNiO_3$; 5% Ag + 15% BP2000 + 10% Daxad + 60% Teflon RPM T-30; 50% (20% CoTMPP/C) + 50% (15% $CoO_x$+ 5% $MnO_x$/C); 2.5% $MnO_x$ + 7.5% $CoO_x$/C; 4% CoTMPP + 15% BP2000 + 60% Teflon RTM T-30; $MnO_2$ and/or $AgNO_3$ (Pt, $Co_3O_4$); 10% CoTMPP/C + Nafion + FEP + FEP-coated PTFE fibers; CoTMPP + $MnO_x$/C; 60% $Mn_4N$/C + PTFE; $NiCo_2O_4$ spinel; $Mn_xCo_{3-x}O_4$ + PTFE (0< $x$ < 1) spinel; Perovskites; $LaMnO_3$; $LaCoO_3$; $LaNiO_3$; $LaCrO_3$; $LaFeO_3$; $La_{0.8}Sr_{0.2}FeO_3$; $La_{0.6}Sr_{0.4}Fe_{0.6}Co_{0.4}O_3$; $La_{0.6}Sr_{0.4}Fe_{0.6}Mn_{0.4}O_3$; $LaNiO_3$; $LaCoSrO_3$; $Pb_2M_{2-x}Pb_xO_{7-y}$; Ni, Co, Fe hydroxide + carbon black + PTFE; Ag + Pt + MnOz + C + PTFE 10% Pt/C; iron-air fuel cell (similar to ZAFC) with alkaline electrolyte: $CuSO_4$, $NiWO_4$, WC + 20% Co; $WS_2$ + WC or WC + 1-20% Co; WS + C + PTFE; WC + Ag + C PTFE (FEP); 30 parts Ag + 30 parts WC (coated with 12% Co) + 32 parts PTFE + 90 parts carbon black; 3% (5-10%) Ag (ORR) + ~[7% (10%-15% $FeWO_4$) + 7% (10%-15%) WC + ~12% (10%-15%) Co (OER) + ~54% C] + -22% PTFE, Ag loading-2 mg $cm^{-2}$; [ORR-Ag] + [OER-$CoWO_4$ + WC + $WS_2$ + NiS + 10-15% Co] + PTFE; ORR catalyst [(0.3-2%) CoTMMP + (4-10%) $LaNi_{1-x}Co_x$ + (1-4%) Ag + (18-32%) $Co_xO_y$ + OER catalyst (1-20%) WC + (1-20%) Co + (1-7%) $FeWO_4$ + (1-7%) NiS] + AB-50 + PTFE; catalyst layer: 63.5% XC500 + 15% PTFE + 13% $MnSO_4$ + 8.5% $La_2O_3$; 15% PTFE + 69% XC500 + 8% $MnO_2$ + 8% $La_2O_3$; 58% XC500 + 15% PTFE + 19% $AgNO_3$ + 8% $MnSO_4$; GDL: 65% C + 35% PTFE; OER electrode 30% Ag + 70% $LaNiO_3$; $La_{1-x}A_xFe_{1-y}Mn_yO_3$ (A=Sr, Ca); $La_{0.6}Ca_{0.4}Co_{0.8}Fe_{0.2}O_3$, and other similar embodiments having these or similar compositions of matter and ratios of the compositions of matter that are known to those skilled in the art. In another embodiment, the cathode may comprise an oxide, hydroxide, or oxyhydroxide that may further comprise the metal of the anode. In suitable examples, the cathode comprises an oxyhydroxide of Mo, W, Hf, or Ta, and the corresponding anode comprises the metal or an alloy of the metal Mo, W, Hf, or Ta, respectively.

An electrode such as the anode may comprise Ni mat, foil, powder, or wire alone or doped with another metal such as at least one of a noble metal, transition metal, inner transition metal such as Mo, rare earth metal, and Group III, IV, V, or VI metal such as Pt, Ru, Rh, Pd, Ag, La, Hf, Hf alloy such as Hf and at least one of Zr, Fe, Ti, Nb, Ta, Ni, and W, Re, Ir, Au, Co, Mn, Cu Zn, Al, Sn, Pb, Bi, and Te. The anode may comprise at least one of a metal or and alloy thereof such as nickel or a nickel alloy such as NiNb, NiCr, NiCo, NiCu, MoNi, HfNi, TaNi, WNi, VNi, ZrNi, CdNi, NbNi, and TiNi, Sn or a Sn alloy such as SnAg, SnAl, SnAs, SnAu, SnBa, SnBe, SnBi, SnCa, SnCd, SnCd, SnCe, SnCo, SnCr, SnCu, SnFe, SnGa, SnGe, SnHf, SnHg, SnIn, SnK, SnLa, SnLi, SnMg, SnMn, SnNa, SnNb, SnNd, SnNi, SnP, SnPb, SnPd, SnPr, SnPt, SnS, SnSb, SnSe, SnSi, SnSr, SnTe, SnTi, SnU, SnV, SnYb, SnZn, and SnZr, Al or an alloy such as AlAs, AlAu, AlB, AlBa, AlBe, AlBi, AlCa, AlCd, AlCe, AlCo, AlCr, AlCs, AlCu, AlDy, AlEr, AlFe, AlGa, AlGd, AlGe, AlHf, AlHg, AlHo, AlIn, AlK, AlLa, AlLi, AlMg, AlMn, AlMo, AlNa, AlNb, AlNd, AlNi, AlPb, AlPd, AlPr, AlPt, AlPu, AlRe, AlRu, AlSb, AlSc, AlSe, AlSi, AlSm, AlSn, AlSr, AlTa, AlTe, AlTh, AlTi, AlTiMo, AlTl, A1U, A1V, AlW, AlY, AlYb, AlZn, and AlZr, Hf or an alloy such as Hf and at least one of Zr, Fe, Ti, Nb, Ta, Ni, and W such as HfAl, Hill, HfBe, HfC, HfCo, HfCr, HfCu, HfFe, HfGe, HfIr, HfMn, HfMo, HfNb, HfNi, HfO, HfRe, HfSn, HfTa, HfTh, HfTi, HfU, HfW, HfZr, and HfIn, Mo, a Mo alloy or compound such as $MoSi_2$, TZM (Mo (-99%), Ti (-0.5%), Zr (-0.08%)), MoB, MoC, MoCu, MoCo, MoCr, MoFe, MoGe, MoHf, MoIr, MoOs, MoNb, MoNi, MoPd, MoPt, MoRe, MoRh, MoRu, MoS, MoSi, MoTa, MoTh, MoTi, MoU, MoV, MoW, molybdenum nitride, NiCrMoTaNb, and MoY, Cr, Cr alloy, W, W alloy such as WAl, WB, WC, WCo, WCr, WFe, WHf, WMo, WNb, WNi, WOs, WPb, WPd, WPt, WRe, WRh, WSi, WTa, WTi, WV, and WZr, Ta, and Ta alloy such as TaAl, TaB, TaC, TaCo, TaCr, TaFe, TaHf, TaMo, TaNb, TaNi, TaPd, and TaRh, a vanadium alloy such as VB, VCu, VFe, VGa, VLa, VMn, VMo, VNb, VNi, VPd, VPt, VRe, VRh, VSi, VTa, VTi, VU, VW, VY, and VZr, an alloy of a metal that forms an unstable oxide at the cell temperature such as a Ag or Hg alloy such as AgMo, AgNi, HgMo, HgNi, or AgHg. Further exemplary alloys are MoTiAl, MoVAl, NiZrMo, NiMgMo, NiAlMo, NiCuMo, NiMoSi, NiCrSi, Inconel alloys such as 625 (21% Cr, 9% Mo, 4% Nb-Ni alloy), Inconel 622, C-276, and 686, Hastelloy alloys, Hastelloy C22, Ni-Cr-Mo-W alloys, 56[a]Ni-22Cr-13Mo-3W-3Fe-2.5*Co-0.50*Mn-0.35*V-0.08*Si-0.010*C ([a]As Balance *Maximum), carbon steel, alloy 20, 242 or 556 (e.g. Hayes Int.), Mg alloys such as MgMo, MgAg, MgAl, MgBi, MgCd, MgACo, MgCu, MgFe, MgGa, MgGd, MgHg, MgIn, MgLa, MgMn, MgNi, MgPb, MgPr, MgSb, MgSc, MgSi, MgTi, MgY, MgZn, and MgZr, TiAl, $Cu_6Co_4$, BMo alloys, Ca alloys, La alloys such as LaTiAl, MoAg alloys; MoSi and MoCr alloys; SnZrMo, CrNiMo, MnNiMo, MoTi, MoPb, TaC alloys, MoS alloys, alloys comprising at least one of Ti, Nb, Fe, Mo, and TZM. The electrode such as the anode may comprise carbon or an alloy such as CoC, CrC, CuC, FeC, GeC, HfC, IrC, LaC, LiC, MnC, MoC, NbC, NiC, ReC, SiC, TaC, TiC, VC, WC, YC, and ZrC. Additional exemplary alloys are MoMn, MoSi-transition metal such as, MoCuSi, MoCoSi, and MoNiSi, MoSiC, transition metal-SiC, YSiC, LaSiC, ZrSiC, HfSiC, NbSiC, TaSiC, WSiC, MoNiC, NiMoFe, MoCoC, MoCuC, LaNiC, MoHfNi, NiZrHf, MoTiNi, TiNbMo, CoCuC, CoCuSi, NiZrTa, NiMoTa, NiMoW, NiMoNb, CrMoW, VNbTa, TiZrHf, LaNiMo, LaNiHf, LaNiTa, LaNiMo, LaNiW, LaNiNb, LaNiCr, LaNiV, LaNiTi, LaNiZr, LaNiSc, LaNiY, NiZrW, NiZrNb, transition metal-Zr-Mo such as MoTiZr, MoSi, MoC, Ni-TZM, MoZrNi,La.$Ni_5$Mo, $LaNi_5Hf$, $LaNi_5Ta$, $LaNi_5Mo$, $LaNi_5W$, $LaNi_5Nb$, $LaNi_5Cr$, $LaNi_5V$, $LaNi_5Ti$, $LaNi_5Zr$, $LaNi_5Sc$, $LaNi_5Y$, and $LaNi_5C$. The ratios may be any desired such as about 50-50 wt% for bimetallics and 33-33-33 wt% for trimetallics. Exemplary cells are [NiMo, MoSi, MoC, Ni-TZM, MoZrNi, RuMo, RhMo, OsMo/LiOH-LiBr/NiO or $Co_2O_3$-CuO-NiO intermittent electrolysis]. In other embodiments, the electrode metal or alloy may comprise a layer or coating that may be deposited by electrolysis such as by electroplating or by vapor or plasma deposition such as the methods of the disclosure. An exemplary cell comprising R-Ni discharge anode is [R-Ni/$K_2CO_3$ 0.6 M aq/Nafion or Celgard/carbon or Ni intermittent electrolysis].

In an embodiment, the electrode may comprise a fluidized bed such as a three-phase fluidized bed. In an example, the electrolyte comprises an alkaline solution or melt, and the electrode is Raney silver with a perforated Ni plate as current collector wherein a source of oxygen such as oxygen or air is fed into the electrode at a flow rate that optimizes the power output to the desired level. In another embodiment, the anode is R-Ni wherein $H_2$ replaces the source of oxygen.

In the case that the electrode material is soluble in the electrolyte, a corrosion inhibitor may be added. The inhibitor may comprise a compound such as an oxyanion or a halide comprising the metal of the anode such as Mo, W, Hf, Ta, and a transition metal such a Ti. For example, a Mo anode with an electrolyte comprising LiOH may become oxidized to form $MoO_2$, $Li_2MoO_3$, or $Li_2MoO_4$ that is soluble in alkaline. This product may be allowed to reach saturation or added to the electrolyte to achieve saturation to inhibit corrosion. In an embodiment, the concentration of $Li_2MoO_3$ or $Li_2MoO_4$ is about 0.1 to 10 wt% or about 0.5 to 3 wt%. Alternatively, an additive further inhibits corrosion such as lithium borate, lithium silicate, MgO, $MoX_n$ (X = halide, n = integer) such as $MoBr_2$ or $MoBr_3$, $MoS_2$, $MoSe_2$, $MoTe_2$, $Bi_3M'Mo_2O_{12}$ wherein M' may comprise a transition metal such as Fe or Sc, $M'MoO_4$ wherein M' may comprise an alkaline earth or transition metal such as Mg, Ca, Sr, Ba, Mn, Fe, Co, Cu, and Zn, or $M'_2MoO_4$ wherein M' is an alkali metal. $M'MoO_4$ or $M'_2MoO_4$ may further serve as a source of catalyst with the formation of $M(OH)_2$ or M'OH, respectively, wherein $OH^-$ may react with H to form catalyst $H_2O$. The additive may comprise a polyanion such as one of W or Mo comprise a polytungstates or polymolybdate ion or compound. In an embodiment, at least one of the anode, cathode, or an electrolyte

component may comprise a W or Mo bronze. In an embodiment, the additive may shift the potential of the Nernst equation to favor the formation of water rather than the oxidation of the anode metal. In another embodiment, $MoO_2$, $Li_2MoO_3$, or $Li_2MoO_4$ additive comprises a matrix material wherein an electrode such as the anode may comprise a metal or conductor other than Mo. An exemplary cell is [Ni/LiOH-LiBr + $MoO_2$, $Li_2MoO_3$, or $Li_2MoO_4$/Ni + air; intermittent electrolysis]. In an embodiment, the cathode may comprise a compound comprising the metal of the anode such as Mo. An exemplary cell is [Mo/LiOH-LiBr /$Mo_6Se_8$ or molybdenum oxyhydroxide intermittent electrolysis]. In an embodiment, the cathode and anode may comprise a source of the same metal, alloy, or element that may migrate from one electrode to the other. The anode and cathode may be reverse periodically during intermittent charge discharge such that the discharge anode becomes the discharge cathode periodically. Exemplary migrating metals, alloys, or elements are Cd, Ni, CdNi, Mo, and MoNi. Since Mo dissolves in base and Ni does not, an exemplary embodiment having a Mo matrix such as a $Li_2MoO_4$ matrix with Ni anode is [Ni/LiOH-LiBr ($Li_2MoO_4$ matrix)/Ni-NiO both electrodes submerged intermittent electrolysis]. In an embodiment, a compound that forms a stable alloy at the anode may be added to the electrolyte. One example is a soluble Ni compound such as $NiBr_2$ that forms a stable MoNi alloy with a Mo anode in a cell comprising an Mo anode such as [Ni/LiOH-LiBr $NiBr_2$/Ni-NiO intermittent electrolysis].

In an embodiment, an oxidized discharge anode may be regenerated by applying a negative potential to reduce the discharge anode. Electrolysis may be performed at a higher negative voltage than typical to cause the regeneration. Thus, the discharge anode is made an electrolysis cathode for the regeneration step. Hydrogen may be generated during this step to also contribute to the reduction of excess oxide so that the anode may be restored to a functional state. The magnitude of the applied cell voltage may be in the range of about 0.5 V to 5 V or about 1 V to 2 V, or about 1 V to 1.5 V.

In another embodiment, the electrolyte comprises an anion that precipitates an oxidized anode element. For example, $PbSO_4$ and $PbF_2$ are insoluble in $H_2O$. This may also be the case in a molten salt electrolyte as well. Then, in an exemplary embodiment, LiF or $Li_2SO_4$ is added to the electrolyte with a Pb anode. Other examples are nitrates of Ag, and chlorides, bromides, and iodides of Ag and Pb(II) wherein these ions are added to the electrolyte of the cell having an anode comprising Ag or Pb, or the concentrations are increased in a mixed salt such as LiBr-LiOH or LiCl-LiOH.

In the case that the electrolyte such as LiOH may react with an electrode such as the anode such as a Mo anode, at least one product such as at least one of $Li_2O$ and $MoO_2$ may be added to suppress corrosion. A source of S such as S or a compound comprising S such as a sulfide or hydrogen sulfide may be added to the electrolyte to reduce electrode corrosion. The S source such a $Li_2S$, MgS or LiHS can serve as an H buffer to convert a react O species into a less reactive species such as convert peroxide into hydroxide. The S species may comprise a H buffer that can exchange H with oxygen species such as one or more of O, OH, $OH^-$, OOH, OOH-. An exemplary reaction is

$$SH- + O \text{ to } OH^- + S \tag{194}$$

The S species may change the basicity of the molten alkaline salt. The S species such as S may serve as a getter for hydrino.

In an embodiment, at least one electrode such as the anode may be protected from corrosion. The corrosion-protected electrode such as the anode may comprise an alloy such as an alloy of Ni such as NiCr or Mo such as MoNi or MoC. The cell may comprise a catalyst to convert a reactive oxygen reduction product such as peroxide or ions thereof or superoxide to hydroxide to protect at least one electrode such as the anode from corrosion. A suitable catalyst is a noble metal such as Pt or Pd that may be on a support such as $Al_2O_3$ or carbon. Other suitable catalysts are Co or Fe species. Alternatively, $H_2O$ addition may be used to convert the peroxide or superoxide to hydroxide. The Mo anode may be embedded in the catalyst or supported catalyst to form hydroxide such as $Pt/Al_2O_3$.

Anode corrosion by peroxide and other reactive oxygen species may be avoided by using a corrosion resistant alloy such as one comprising Ni such as NiMo. Peroxide corrosion can also be prevented by using a submerged cathode or otherwise limiting the $O_2$ pressure with a controlled gas atmosphere or a solid electrolyte layer serving as an air diffusion barrier. In an embodiment wherein $O_2$ in the cell atmosphere is limited or excluded, the cathode is not submerged. The kinetics may be maintained by using an electrolyte salt mixture that has the appropriate oxygen reduction rate considering the oxygen reduction rate trend LiOH~NaOH<<KOH. The rate may also be controlled with temperature wherein the rate is reduced with lower temperature and vice versa. The peroxide concentration can be reduced by using a cathode comprising an oxygen reduction catalyst that favors the $OH^-$, four-electron reduction, pathway over the peroxide, two-electron reduction, pathway. The former is favored with a higher $H_2O$ pressure since water is a reactant. Also, water reacts with peroxide ions and deactivates them by conversion to $OH^-$. Additionally, a peroxide to hydroxide conversion catalyst could be used at the anode or cathode to protect the anode from peroxide corrosion. Pt such as $Pt/Al_2O_3$ or an Fe species such as an iron halide or a Co species such as cobalt perovskites may serve as the conversion catalyst. The anode may also be protected by providing a species to react with reactive oxygen intermediates or by chemically protecting the anode. For example, a reductive reactant such as additional hydrogen may be provided at the anode by means such as application of a $H_2$ atmosphere or by hydrogen permeation. An additive such as $MoO_2$ that reacts with

peroxide to form $MoO_4^{2-}$ for example or $CO_2$ that reacts to $CO_3^{2-}$ and $1/2O_2$ are other exemplary reactants. Suppression of anode metal corrosion may be achieved by amalgamating the metal with Hg such as up to 50%. An exemplary amalgam anode is AgHg.

In an embodiment, a corrodible anode such as Mo or TZM is coated with a protective layer such as one of $MoS_2$, $MoSe_2$, or Teflon. In another embodiment, the charge voltage of the intermittent electrolysis cycle is high enough to cause some metal dissolved in the electrolyte from the anode or added to the electrolyte as a compound such as a salt to be electroplated onto the anode. In the case that the anode comprises Mo, the added salt may be a molybdate compound such as $Li_2MoO_3$ or $Li_2MoO_4$. The electrolyte may comprise a molten eutectic salt that may comprise a hydroxide. The electrolyte may comprise a molten eutectic salt such as an alkali halide salt mixture to which a hydroxide is added. An exemplary electrolyte is LiCl-KCl or LiCl-KCl-LiF to which LiOH is added. The LiOH may be a minority species. The additive may be $Li_2MoO_3$ or $Li_2MoO_4$. The mole% may be any desired or in the range of about 0.1 to 20 mole% or about 1 to 3 mole %. The electrode may be Mo or another metal such as Ni onto which Mo is electroplated. The cell voltage may be higher than 1 V to re-electroplate the Mo. The cell voltage may be the range of about 0.9 to 2 V or about greater than 1.14 V. In an embodiment, the electrolysis may be performed at multiple voltages such as a first to electroplate the anode metal and a second to generate hydrogen. In an embodiment, the anode metal forms a soluble compound or complex such as a hydroxide ion complex. The metal may be electroplated onto the anode during the electrolysis phase of the intermittent cycle. Suitable complexes are $Zn(OH)_4^{2-}$, $Sn(OH)_4^{2-}$, $Sn(OH)_6^{2-}$, $Pb(OH)_4^{2-}$, $Cr(OH)_4^-$, $Al(OH)_4^-$, and $Sb(OH)_4^-$ wherein the discharge anode comprises the corresponding metal. Suitable exemplary metals to be replated from the electrolyte are Cu, Ni, NiCu, Pb, Sb, Bi, Co, Cd, Ge, Au, Ir, Fe, Hg, Mo, Os, Pd, Re, Rh, Ru, Se, Ag, Te, Tl, and Sn.

In an embodiment of the CIHT or electrolytic cell, at least one electrode comprises an electrically conductive compound such as a coordinate compound. The coordinate compound may be immobilized on a current collector such as a metal such as Ni or Pt. The coordinate compound may comprise a polymer wherein the polymer may provide conductivity with the coordinate compound. The coordinate compound may comprise a sandwich compound such as a cyclopentadienyl compound such as one of a transition metal ion such as Fe or Ni. Suitable exemplary compounds and polymers are at least one of *n*-butylferrocene, 1,1'-dimethylferrocene, ferrocene derivatives, a salt such as a Na of 1,2,4-triazole, a salt such as a Na of imidazole, 1,2,5,-tricyanobenzene (TCB), tetracyanoquinodimethane (TCNQ), a polyaniline, polythiophene, polyacetlylene, polypyrrole, polyvinylferrocene, polyvinylnickelocene, or polyvinylcobaltocene, carbon nanotubes, and fullerene. The cell operates below the thermal decomposition temperature of the compound or polymer such as at a low temperature. The CIHT cell may operate in the temperature range of about 10 °C to 150 °C. The cell may comprise a liquid electrolyte such as an aqueous electrolyte that may also comprise other solvents such as organic solvents and ionic liquids and may further comprise solutes such as those of the disclosure. The electrolyte may be neutral, basic, or acidic. Exemplary electrolytes are aqueous hydroxides such as alkali hydroxides such as KOH, carbonates such as alkali carbonates such as $K_2CO_3$, and acids such as $H_2SO_4$ or $H_3PO_4$. In an embodiment, at least one electrode may comprise at least one metal oxide, hydroxide, or oxyhydroxide or mixtures thereof such as transition metal oxides, hydroxides, or oxyhydroxides. The oxidized metals may be electroplated on a conductive support. Exemplary metal oxides, hydroxides, and oxyhydroxides are at least one of CuO, FeO, $Fe_2O_3$, FeOOH, NiO, NiOOH, $Ni_2O_3$, and $Co_2O_3$ that may be electroplated on Ni.

In an embodiment, the anode reacts with at least one of the electrolyte and an air reduction product such as at least one from the reduction of water and $O_2$. The reaction may release hydrogen. The hydrogen may undergo at least one of react with the electrolyte to form the catalyst and react to form hydrinos. The anode may be regenerated by reduction of the anode oxidation product by intermittent electrolysis. In an exemplary embodiment, a Mo or Mo alloy metal anode reacts with a hydroxide electrolyte such as LiOH to form a metal oxide. The reaction products may be at least one of $MoO_2$, $Li_2O$, $Li_2MoO_3$, and hydrogen. The hydrogen may react with $OH^-$ to form the catalyst such as $H_2O$. The catalyst may react with additional H to form hydrinos. Mo may be replaced on the anode by applying intermittent electrolysis. The oxide of molybdenum that dissolves in the electrolyte may be electroplated using suitable selective voltage and current parameters. Then, during the intermittent cycle, $H_2$ is formed by chemical reaction with the subsequent formation of hydrinos that produces electrical power, and the cell anode is intermittently regenerated by electrolysis.

In an embodiment, the anode is protected from corrosion with a hydrogen atmosphere. The hydrogen may be provided by applying hydrogen gas or by hydrogen permeation through a membrane that may at least partially comprise the anode. Hydrogen protection may also be provided by concentration of the hydrogen formed in situ such as by intermittent electrolysis. The anode comprises at least one type of H binding center such as metal centers and at least one support wherein the support permits the mobility of hydrogen generated on the corresponding center surface to move to and preferentially bind to the centers to increase the effective H atom concentration on those centers. Suitable exemplary centers are metals such as anode metals and alloys of the disclosure such as Mo, Ni, Pd, and Pt, and suitable exemplary supports are those of the disclosure such as carbon, carbides, nitrides, and borides. Exemplary cell are [carbon, Ni carbon, Mo carbon, NiMo carbon, PtC, PdC/LiOH-LiBr/steam carbon (SC), NiO, PtNiO, or AgNiO; air cathode or submerged cathode]. The cell may comprise an electrolyte matrix material such as $Li_2MoO_4$ or a membrane spacer

such as Teflon. Exemplary cells are [carbon powder such as graphite, AC, carbon black, glassy carbon, Vulcan XC-72 + Mo or Ni powder/Teflon sheet-LiOH-LiBr/steam carbon] and [carbon powder + Mo powder/$Li_2MoO_4$ + LiOH-LiBr/NiO]. The anode such as one comprising carbon may comprise that of a lithium ion battery or other variants such as those of the disclosure or in my prior US Patent Applications such as Hydrogen Catalyst Reactor, PCT/US08/61455, filed PCT 4/24/2008; Heterogeneous Hydrogen Catalyst Reactor, PCT/US09/052072, filed PCT 7/29/2009; Heterogeneous Hydrogen Catalyst Power System, PCT/US10/27828, PCT filed 3/18/2010; and Electrochemical Hydrogen Catalyst Power System, PCT/US11/28889, filed PCT 3/17/2011 herein incorporated by reference in their entirety. In an embodiment, suitable anodes are water and air stable.

Metal may be impregnated in a carbon matrix. The metal may be clusters such as nanoclusters. The carbon may serve as the anode and absorb hydrogen to provide a reducing environment for the metal. The reducing environment may prevent corrosion of the metal. The outer surface of the anode may be at least partially or thinly coated with a material such as a noble metal that decomposes active oxygen species such as peroxide.

In an embodiment, the electrolyte comprises a hydroscopic compound such as a salt that absorbs $H_2O$ from a source such as the atmosphere. The compound may maintain a hydrated state to serve as the electrolyte of a CIHT cell. The hydrated electrolyte may be ionic conductive at a temperature below that of the melting point of the dry salt such as a eutectic mixture such as LiOH-LiBr. The electrolyte may comprise a mixture of salts to maintain a slurry such as a mixture of $Li_2CO_3$, $Li_2O$, LiOH, and LiBr. Other hydroscopic additives may be added such as those of the disclosure such as $KMgCl_3$, $MgCl_2$, $CaCl_2$, and KOH. The hydrated compound may serve as the electrolyte for the interment electrolysis cell. Alternatively, the hydrogen electrode may comprise a hydrogen-sparging electrode. The cell may be run at low temperature such as in the temperature range to room temperature to the melting point of the non-hydrated electrolyte.

Oxygen may be formed at the anode and hydrogen at cathode during electrolysis. $O_2$ may be provided by sparging from a source such as $O_2$ gas or air. During the electrolysis-off or discharge phase, $O_2$ and $H_2O$ may undergo reduction at the electrolysis anode to form $OH^-$(Eq. (172)) and $OH^-$ may be oxidized and reacted with H to form $H_2O$ that may serve as a catalyst to form hydrinos at the electrolysis cathode (Eq. (171). Thus, the cell may maintain a constant polarity during charge and discharge with the polarity of the current reversing during each phase of the cycle. The output may be power or waveform conditioned. In another embodiment, the reaction given by Eq. (171) occurs reversibly at both electrodes except that the hydrino product is irreversible. (The designation of the intermittent charge-discharge cells as given in the disclosure is in discharge-mode such as [discharge anode/electrolyte/discharge cathode]. In an embodiment this designation corresponds to [negative electrode/electrolyte/positive electrode], but the polarity may be reversed in other embodiments. The current may reverse intermittently during discharge and charge phases of the intermittent electrolysis cycle.) An exemplary cell is [Pt/LiOH 0.1M to saturated aq/Pd + air intermittent charge-discharge]. In other embodiments, both electrodes are Ni or one is Ni and the other a different material such as Pt, Pd, DSA material, other noble metal, carbon, Ag, a material of the disclosure, or a one or more of these materials or others of the disclosure on a support such as Pt/Ti and the electrolyte is aqueous (aq) KOH or $K_2CO_3$ in the concentration range of about 0.1M to saturated. Specific examples are [PtTi/$K_2CO_3$ or KOH 0.1M to saturated aq/Ni + air intermittent charge-discharge]. In an embodiment, the aqueous electrolysis may be performed at constant cell voltage such as about 1 to 1.6V or about 1.4 V for a first period of time such as about 1 to 10 s or 2 s, and the discharge may be performed at constant current such as about 0.01 to 10 $mA/cm^2$ or 0.2 $mA/cm^2$ for a second period of time such as about 1 to 100 s or about 10 s. In an embodiment, such as one comprising an alkaline electrolyte, having at least one long duration charge or discharge period such as >5 s, the discharge anode comprises a material that forms a hydride during the electrolysis cycle such as $LaNi_5H_6$ or Pd.

In an embodiment, the discharge cathode may comprise others of the disclosure such as at least one of a hydrate, an oxide, a peroxide, a superoxide, an oxyhydroxide, and a hydroxide. The cathode may be a metal oxide that is insoluble in the electrolyte such as a molten salt electrolyte. Suitable exemplary metal oxides are NiO, CoO, $PbO_2$, $Ag_2O_2$, AgO, $RuO_2$, $MnO_2$, $MNiO_2$, $M_2NiO_2$, $MCoO_2$, $M_2CoO_2$, $LiFeO_2$, $MFeO_2$, $M_2FeO_2$, $Li_2MnO_3$, $MTiO_3$, $M_2TiO_3$, $LiTiO_3$, $M_3TaO_4$, $M_2WO_4$, $K_2WO_4$, $Li_3TaO_4$, $M_3VO_4$, $Li_3VO_4$, Mg-$Li_2MnO_3$, Mn-$LiFeO_2$, $LaMnO_3$, $SrTiO_3$, $LiCrO_2$, $LiAlO_2$, $LaNiO_3$, $LaCoO_3$, ZnO, MgO, $M_2SnO_3$, $Li_2SnO_3$, Zr-ZnO, $MM'O_2$, $M_2M'O_2$, $MM'O_x$, $M_2M'O_x$ (x = integer, M = alkali, M' = transition metal or other metal such as Al), $M_2M'O_x$ doped with magnesium such as $LiFe_{1-y}Mg_yO$ (y > 0.03), doped n-type perovskites and related compounds such as $CaTiO_3$ and $SrTiO_3$ doped with $Nb^{5+}$ and $PbZrO_3$ doped with $Nb^{5+}$ or $Ta^{5+}$, barium ferrites, yttrium iron garnets, p-type perovskites such as lanthanum-Group VIII compounds, metals or compounds of Ni, Cu, Co, Mn, Cr, Zn, Zr, Y, Al, U, Ti, and Fe, and those of the group of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. Cathode materials such as $MM'O_2$, $M_2M'O_2$ may form in situ from M' in the presence of an oxidizing environment such as an air or $O_2$ atmosphere and an electrolyte comprising M such as LiOH, NaOH, or KOH. Suitable exemplary metal oxyhydroxides are AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. Suitable exemplary hydroxides are those of Li, Na, K, Rb, Cs, Mg, Ca, Sr, Ba, Al, V, Zr, Ti, Mn, Zn, Cr, Sn, In, Cu, Ni, Pb, Sb, Bi,

Co, Cd, Ge, Au, Ir, Fe, Hg, Mo, Os, Pd, Re, Rh, Ru, Se, Ag, Tc, Te, Tl, and W. An exemplary discharge cathode reaction involving an oxyhydroxide is given by Eq. (130). The cathode may be recharged during the electrolysis phase of the intermittent electrolysis. The cell may comprise an intermittent electrolysis cell, permeation cell, electrochemical discharge cell with chemical or electrolytic regeneration, a hydrogen-sparging cell, or combinations thereof. In an embodiment, the permeation cell may be intermittently discharged.

In another embodiment, the gases may crossover from at least one of the anode to cathode, and vice versa. Then, during discharge at least one of the half-cell reactions may be switched such the $O_2$ (Eq. (172) reduction occurs at the electrolysis cathode and $OH^-$oxidation and reaction with H (Eq. (171) occurs at the electrolysis anode. Then, the current polarity remains constant, but the voltage polarity of the electrodes switches or its magnitude in the same direction changes with the phase of the cycle. The electrode spacing may be minimized to facilitate the gas crossover. The electrodes may be separated by a membrane such as a porous olefin membrane such as a Celgard or base-compatible Nafion membrane. The circuit between the electrodes may comprise a diode to maintain the constant polarity of the current. In embodiments, the power from forming hydrinos manifests as at least one of excess electrical and thermal power over the dissipated electrolysis power.

The hydrino catalyst $H_2O$ having accepted 81.6 eV from H may decompose into $H_2$ and $1/2O_2$; consequently, a component of $H_2O$ electrolysis may occur even when the electrolysis voltage or current is absent. This may be observed as a Faradaic efficiency greater than 100% and may be a source of $H_2$ and $O_2$ gases. Each of $O_2$ and $H_2$ may react at the corresponding electrolysis source electrode or at the corresponding counter electrode following crossover. During the discharge phase of the intermittent discharge, the hydrino supporting reactions of oxygen and hydrogen may be given by (Eq. (172)) and (Eq. (171)), respectively. In other embodiments, other catalysts of the cell or formed during operation of the cell may cause the electrolysis of water due to the ionization of the catalyst and energy release during the catalysis reaction to form hydrinos.

In an embodiment, the electrolysis cathode may comprise a bifunctional electrode capable of reduction of both $H_2O$ and $O_2$ to form at least one of $OH^-$ and Hz as well as oxidation of $OH^-$ to $H_2O$ in the presence of hydrogen. The source of $H_2$ may be the reduction of $H_2O$ at the cathode. The source of $O_2$ may be crossover gas from the electrolysis anode. The anode and cathode separation maybe small such that $O_2$ generated at the electrolysis anode diffuses to the cathode. The electrodes may be separated by a membrane such as a porous olefin membrane such as a Celgard or base-compatible Nafion membrane. The hydrino supporting reactions of the oxygen and hydrogen may be given by (Eq. (172)) and (Eq. (171)), respectively. The reactions may occur in a concerted manner possibly at different sites on the electrode. Both reactions may occur simultaneously on the electrolysis cathode during at least one of the electrolysis phase or the discharge phase of intermittent electrolysis. An exemplary bifunctional electrode is a partially carbon-coated nickel cathode that may be formed by the electrolysis of a carbonate electrolyte such as $K_2CO_3$. The overpotentials for the oxidation and reduction reactions are different on separate electrode regions due to the amount of carbon coating. In another embodiment, the electrolysis anode supplied by $H_2$ crossover gas serves this role as a bifunctional electrode to form hydrinos at least during the discharge phase. In an embodiment, the cell current intermittently goes to about zero during the discharge phase wherein additional thermal energy is released due to the hydrino reaction occurring on the cathode or anode at least during the discharge phase.

In another embodiment, at least one electrode having capacitance serves as an electron acceptor and is charged during the discharge phase. The electrode may accept the charge from at least one of H, $OH^-$, and $H_2O$ that is oxidized. The oxidation reaction may comprise that of Eq. (171). The energy for the oxidation may be from the formation of hydrinos that may be part of a concerted reaction to form the reactants that form hydrinos. In an exemplary embodiment, charge is stored on the electrolysis cathode that has a capacitance such as a carbon cathode or carbon-coated nickel cathode. The charged capacitance may be discharged in another phase of the intermittent electrolysis cycle. The discharge may involve the reduction of locally produced or crossover $O_2$. The reduction reaction may be that given by Eq. (172).

In an embodiment, the electrolysis cathode of the intermittently charged and discharged cell may develop a thick non-conductive oxide coat. An exemplary coat on a Ni electrode is NiO. In an embodiment, the coat may be reduced by applying a suitable reduction cell voltage such as in the range of about 1 V to 1.5V, in the case of NiO. The reduction may be applied to the discharge anode. The electrolysis may be maintained at constant voltage or a suitable voltage for a suitable time to adequately reduce the oxide coat such that the electrode conductivity is substantially restored. Then, the charge-discharge cycle may be reapplied. In a high discharge current embodiment, the formation of an oxide coating on the discharge anode is avoided by charging at a peak limiting voltage that may be a constant voltage. The current may be limited during charging. In an embodiment wherein at least the charging voltage and current are limited, the charging may be at constant power. The discharge may be at a constant current, load, power, or voltage. In an embodiment, the cell such as [Ni/LiOH-LiBr/Ni air, intermittently charge discharge] is charged in the cell voltage rage of about 0.8 to 1.2 V such as constant 0.9V. Alternatively, the charging may be at a limiting or peak constant power in the range of about 0.1 to 100 mW $cm^{-2}$. The exemplary discharge current density may be in the range of about 0.001 to 1000 mA $cm^{-2}$, 0.1 to 100 mA $cm^{-2}$, and 1 to 10 mA $cm^{-2}$. In an embodiment, the electrolysis cathode and anode are interchanged to reduce any excessive oxide coat. The exchange may be intermittent. The period may be different from

that of the intermittent charge-discharge cycle of intermittent electrolysis. In an embodiment, both electrodes may be capable of hydrogen sparging wherein the hydrogen is alternately supplied to one and then the other to reduce any excess oxide coat that forms during its operation as an oxygen electrode. In an embodiment of a cell such as [Ni/LiOH-LiBr/Ni + air intermittent; charge-discharge] an oxide coat such as a NiO coat is removed mechanically or chemically by means known in the art. The removal may be periodically with the electrode reused. In another embodiment, hydrogen is applied to a chamber of a hydrogen permeable electrode such as the anode. The cell temperature may below that at which a significant permeation rate occurs relative to the power generated by the cell. However, the low flow or presence of hydrogen at the anode due to permeation may protect the electrode from oxidation such as oxidation to form NiO. In another embodiment, an electrode of the intermittent electrolysis cell is capable of and is operated as a hydrogen permeation electrode wherein hydrogen is provided to the cell by permeation from a source such as hydrogen gas; then, the electrode is switched to the electrolysis mode. In an embodiment, the switched electrode serves as the electrolysis cathode and discharge anode. The pretreatment may condition the electrode to perform as desired in the intermittent electrolysis mode. In an embodiment, intermittent electrolysis is performed as hydrogen is simultaneously supplied to an electrode such as the discharge anode by means such as permeation or sparging. Alternatively, an atmosphere comprising $H_2$ may be provided to the cell. The selectivity of the desired hydrogen reaction and counter electrode reaction such as those of the disclosure may be achieved via the selectivity of the corresponding electrodes. For example, the selectivity of the cathodic oxygen reduction reaction and anodic hydrogen reaction with $OH^-$ to form $H_2O$ catalyst are made selective by the corresponding selectivity of the cathode and anode, respectively. The hydrogen supplied to the anode may be protective since the reaction

$$NiO + H_2 \text{ to } Ni + H_2O \qquad (195)$$

is favorable. In another embodiment, the duty cycle for electrolysis is increased such that sufficient hydrogen is generated to protect the discharge anode from corrosion. The parameters are selected to achieve energy gain such as electrical energy gain while generating enough hydrogen to be protection against corrosion. The cell temperature may also be controlled to ameliorate corrosion while controlling the hydrogen supplied by means such as permeation and electrolysis. A discharge cathode that is resistant to corrosion may be selected that is appropriate for the operating conditions of the cell. For a temperature less than about 350 to 450 °C, the cathode may comprise Ni. For higher temperatures, a suitable stable cathode may be used such as one comprising an oxide such as a NiO or CoO or supported Ag such as $Ag\text{-}Al_2O_3$.

In an embodiment, the hydrogen supplied by permeation functions to at least one of change the voltage of the cell and control the permeation rate by a feedback mechanism that may be based on the effect of the permeation rate on the cell voltage. In an embodiment, the cell voltage is adjusted by adjusting the hydrogen permeation rate. The permeation rate may be adjusted by means such as at least one of controlling the cell temperature, the hydrogen pressure gradient across the hydrogen permeable membrane, the membrane thickness, the membrane material, and by adjusting the cell voltage. In an embodiment, means to adjust the cell voltage in addition to controlling the permeation rate comprise controlling the discharge and optionally charge parameters such as load and applied voltage and current characteristics and parameters wherein the latter may regard an intermittent electrolysis embodiment. In an embodiment, the cell voltage is maintained in the range of about 0.5 to 1.5V or about 0.8 to 1.2 V. The voltage range is controlled to optimize the yield of hydrogen formed during the electrolysis phase of the intermittent electrolysis of such an embodiment. In another embodiment, the permeation rate is controlled by controlling the load. In an embodiment, the permeation rate increases with decreasing resistance of the load. In an embodiment, the permeation rate increases with the discharge current. The permeation rate may be adjusted to optimize the power gain from forming hydrinos relative to the power to form $H_2$ from $H_2O$.

In an embodiment, a protective thin-layer NiO coat is applied by annealing a Ni electrode in an oxidizing environment such as an oxygen atmosphere. The thickness of the coating is controlled to one that gives stability to an alkaline electrolyte while maintaining high ionic conductivity. In an embodiment, a species is added to the electrolyte to stabilize the electrodes such as the anode. The additive may form a more stable Ni compound such as $NiF_2$ or $NiSO_4$. In another embodiment, the species may comprise a metal form a more stable Ni alloy or an oxide additive such as CeO impregnated in the NiO. The wt% of cerium oxide may be in the range of about 0.1 to 5% or 0.3 to 1%. In another embodiment, a species is added such as $V_2O_5$ to enhance the production of $H_2$ at the electrolysis cathode wherein the electrolysis may be intermittent and the electrolyte may be a molten salt or aqueous. The additive may be an oxide, hydroxide, or oxyhydroxide such as those of the disclosure such as $Fe_2O_3$, or FeOOH. Other suitable exemplary additives are AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. The additive may at least one of enhance the power and protect the electrode such as the anode. For example, the additive such as MgO or $Fe_2O_3$ that may form $Ni_{1-x}Mg_xO$ and $NiFe_2O_4$, respectively, may stabilize NiO of the electrode such as the anode.

In an embodiment, the discharge cathode comprises an oxygen reduction catalyst of the disclosure such as Ni comprising a large surface area such as mesh further comprising at least one of $Mn_xO_y$ (x and y are integers), NiO, CoO, Ag, Pt, Pd, Au, other noble metal, and $MNiO_2$ (M = alkali). Other suitable oxygen reduction electrodes are alkaline earth ruthenates, lithium doped lanthanum nickelate, Ni-Co spinel, Pb-Ru pyrochlore, Na-Pt bronze, and Ag/AgHg. Additional cathode materials comprise at least one of $MNiO_2$, $M_2NiO_2$, $MCoO_2$, $M_2CoO_2$, $LiFeO_2$, $MFeO_2$, $M_2FeO_2$, $Li_2MnO_3$, $MTiO_2$, $M_2TiO_3$, $LiTiO_3$, $M_3TaO_4$, $M_2WO_4$, $K_2WO_4$, $Li_3TaO_4$, $M_3VO_4$, $Li_3VO_4$, Mg-$Li_2MnO_3$, Mn-$LiFeO_2$, $LaMnO_3$, $SrTiO_2$, LiCrOz, $LiAlO_2$, $LaNiO_3$, $LaCoO_3$, ZnO, MgO, $M_2SnO_3$, $Li_2SnO_3$, Zr-ZnO, MM'$O_2$, $M_2$M'$O_2$, MM'$O_x$, $M_2$M'$O_x$ (x = integer, M = alkali, M' = transition metal or other metal such as Al), $M_2$M'$O_x$ doped with magnesium such as $LiFe_{1-y}Mg_yO$ (y > 0.03), doped n-type perovskites and related compounds such as $CaTiO_3$ and $SrTiO_3$ doped with $Nb^{5+}$ and $PbZrO_3$ doped with $Nb^{5+}$ or $Ta^{5+}$, barium ferrites, yttrium iron garnets, p-type perovskites such as lanthanum-Group VIII compounds, metals or compounds of Ni, Cu, Co, Mn, Cr, Zn, Zr, Y, Al, U, Ti, and Fe. The cathode may comprise a dopant of a porous material such as Ni that may comprise nano-particles. The dopant may be an oxygen reduction catalyst of the disclosure. The cathode may comprise NiO that may be stabilized. A suitable method of stabilization is encapsulation with a material such as a stable metal such as cobalt. Thus, the oxygen reduction catalyst may comprise cobalt encapsulated NiO. The oxygen reduction cathode may undergo thermal, chemical, or electrochemical conditioning such as oxidation by chemical or thermal methods or anodization or cathodization before it serves as a cathode. The conditioning may be in situ. The cathode may be operated at high current that is then reduced wherein the former step conditions the cathode. The electrode such as the cathode may comprise a conductive matrix or surface coating such as carbon, carbide, nitride, carbonitride, nitrile, or boride or comprise these materials. In an embodiment, the electrolysis anode comprises a catalyst such as gold-palladium nanoparticles that forms a reactive oxygen species such as $HOO^-$ or HOOH or a compound comprising oxygen such as PdO, AgO, $Ag_2O$, $Ag_2O_3$, or HgO that undergoes reduction at a higher rate than $O_2$ during the discharge phase when the electrode serves as the discharge cathode. The compound may comprise an oxide of a metal that forms reversibly during charge and discharge to provide oxygen to the non-electrolysis discharge phase of the intermittent cycle. The compound may have a free energy of formation less than that of $H_2O$. The discharge reaction may be given by Eq. (145). The leads such as the cathode lead may be a material that is stable to the electrolyte such as an alkaline electrolyte and air or $O_2$. A suitable lead is a noble metal wire such as a gold wire that may be spot welded to the cathode. In an embodiment, the oxygen reduction rate is 100 times greater in an electrolyte comprising KOH such as a molten electrolyte than one comprising LiOH or NaOH due to the higher mobility of oxygen ions in the KOH electrolyte. In an embodiment, a source of mechanical agitation such as sonic, ultrasound, rotation, or other sources known in the art is applied to at least one of the cathode and surrounding electrolyte to compensate for the lower ion mobility. In another embodiment, the cathode may be rotated by means such a motor. In another embodiment, at least one of the cathode and anode are mechanically agitated. The electrode made be vibrated sonically or ultrasonically in a frequency range of about 0.1 to 1 MHz or about 10 to 100 Hz for sonic agitation and 1 to 100 kHz for ultrasonic agitation. The power may be less than the cell electrical output power and may be that which optimizes the power gain considering the output contribution due to the agitation compared to the corresponding agitation power consumption. In an embodiment, the electrolyte such as a molten or aqueous electrolyte such a molten or aqueous hydroxide or mixtures comprises added $H_2O$ that increases the diffusion of oxygen ions formed at the cathode to increase the oxygen reduction rate. The cell may be pressurized to operate at temperature near boiling and above. Hydrogen and oxygen may be generated in situ by electrolysis. At least one of $H_2O$, oxygen, and hydrogen may also be added to the cell under pressure. The cell pressure may be in the range of about subatmospheric to 500 atm or about 2 to 100 atm. In another embodiment, the diffusion rate of oxygen ions formed at the cathode is increased in a molten electrolyte such as one comprising an oxyanion such as a alkaline electrolyte such as one comprising a hydroxide by using at least one other salt to comprise a mixture that facilitates the higher mobility of oxygen ions. In an embodiment, the electrolyte comprises a mixture of metal ions and anions such as at least one of alkali, alkaline earth, and other metal ions such as transition, inner transition, rare earth, and Group III, IV, V, and VI metal ions. The anion comprises at least one of hydroxide, sulfate, carbonate, nitrate, phosphate, halide, and other ions of the disclosure. In an embodiment, the oxygen ion mobility is increased with elevated $H_2O$ content in the electrolyte. In an embodiment, suitable electrolytes are hydroscopic. Suitable hydroscopic salts are lithium bromide, calcium chloride, magnesium chloride, zinc chloride, potassium carbonate, potassium phosphate, carnallite such as $KMgCl_3 \cdot 6(H_2O)$, ferric ammonium citrate, potassium hydroxide and sodium hydroxide. In acidic aqueous embodiments, hydroscopic electrolytes comprise concentrated sulfuric and phosphoric acids.

In other embodiments, the electrodes comprise a conductor that is sufficiently stable to the electrolyte and operating conditions of the cell. Suitable electrodes for the alkaline cell are Ni. Other conducting metals, alloys, compounds, or elements may be used with alkaline, acidic, or about neutral electrolytes that are either aqueous or molten salts such as at least one of C, Al, Ga, In, Ge, Sn, Pb, As, Sb, Te, and alkali, alkaline earth, transition, inner transition, and rare earth metals. Supported metals and materials are also suitable such as dimensionally stable anodes and Pt/Ti, Ag-$Al_2O_3$, NiO-$SiO_2$-$Al_2O_3$, and Pt, Pd, or other metal or noble metal supported on a matrix such as $Al_2O_3$, C, or zeolite. Materials that ordinarily may form a nonconductive oxide coat by reaction with the electrolyte or air may be suitable

under the operating conditions of the cell such as under intermittent electrolysis conditions wherein the electrode may be periodically reduced. An exemplary electrode is Zr that is periodically the electrolysis cathode and discharge anode. The electrode material may be a nonconductor doped with a conductor. Other elements or compounds such as carbon, carbide, boride, nitride, carbonitrile such as TiCN, or nitrile may comprise the electrodes such as the anode. Suitable exemplary materials are carbon black, AC, ZrC, TiC, $Ti_3SiC_2$, TiCN, TiN, SiC, $YC_2$, TaC, MozC, WC, C, HfC, $Cr_3C_2$, ZrC, VC, NbC, $B_4C$, $CrB_2$, $ZrB_2$, $GdB_2$, $MgB_2$, and $TiB_2$. The material may comprise a powder.

In addition to the formation of $H_2(1/4)$ as a product of $H_2O$ catalyst, a reaction mixture comprising an alkaline solution having a source of $OH^-$ such as a molten or aqueous hydroxide electrolyte may also form at least one other hydrino product such as molecular hydrino $H_2(1/2)$. The catalyst may comprise O or H wherein each have a potential energy of 27.2 eV that permits them to serve as a catalysts by accepting about 27.2 eV from atomic H to form H(1/2) that may further react to form $H_2$1/2) and $H^-(1/2)$. Additionally, OH may serve as a catalyst since the potential energy of OH is

$$V_e = \left(\frac{3}{4}\right)\frac{-2e^2}{8\pi\varepsilon_0\sqrt{a^2-b^2}}\ln\frac{a+\sqrt{a^2-b^2}}{a-\sqrt{a^2-b^2}} = -40.92709\ eV \quad (196)$$

The difference in energy between the H states p = 1 and p = 2 is 40.8 eV. Thus, OH may accept about 40.8 eV from H to serve as a catalyst to form H(1/2). OH may be formed from $OH^-$ by oxidation at the anode. Exemplary cells to form $H_2(1/4)$ and $H_2(1/2)$ by $H_2O$ and OH serving as catalysts of H to the corresponding hydrino states are [Mo/LiOH-LiBr/NiO intermittent electrolysis] and [Ni/LiOH-LiBr/NiO intermittent electrolysis]. The hydrino products may be identified by proton NMR of the electrolyte or anode gas wherein the anode may be processed by acid digestion to release hydrino gas into an NMR solvent.

In an embodiment, the catalyst forming reaction may be given by

$$O_2 + 5H^+ + 5e^- \text{ to } 2H_2O + H(1/p) \quad (197)$$

The counter half-cell reaction may be

$$H_2 \text{ to } 2H^+ + 2e^- \quad (198)$$

The overall reaction may be

$$3/2H_2 + 1/2O_2 \text{ to } H_2O + H(1/p) \quad (199)$$

wherein at least one of $H_2O$, OH, $O_2$, nH, and nO (n = integer) may serve as the catalyst. Hydrogen may be generated at the cathode by reduction of $H^+$ wherein some of the hydrogen reacts with the catalyst to form hydrinos. Alternatively, excess hydrogen may be supplied to the cathode such that it reacts with the catalyst to form hydrinos. In an embodiment, at least one of the temperature, $O_2$ pressure, $H_2O$ pressure, $H_2$ pressure, and $H^+$ concentration are controlled to favor the catalyst-forming half-cell reaction and the counter reaction that results in the optimal formation of hydrinos. In an embodiment, the cathode half-cell potential relative to the SHE at 25 °C is about 1.23V within about $\pm$0.5V. In an embodiment, the anode half-cell potential relative to the SHE is about 0V within about $\pm$0.5V. Suitable exemplary half-cell reactions are given by Eqs. (197) and (198), respectively. The overall reaction to form hydrinos may be given by Eq. (199). Suitable exemplary cells are [Pt/C + $H_2$/Nafion/Pt/C + air + H source such as $H_2$ or a hydride or other H storage material of the disclosure] and [Pt/C + $H_2$/$H_2SO_4$/Pt/C + air + H source such as $H_2$ or a hydride or other H storage material of the disclosure] a separator such as Nafion may be used with an acidic electrolyte such as aqueous $H_2SO_4$.

Regarding Eq. (198), in other embodiments, the counter half-cell reaction may provide $H^+$ by the oxidation of a source of hydrogen different from and optionally in addition to $H_2$. The source of hydrogen may be a hydrocarbon. The reaction may further produce at least one of CO and $CO_2$ wherein the hydrocarbon may comprise at least one O. A suitable hydrocarbon is an alcohol such as methanol. Suitable exemplary cells are [PtRu + $CH_3OH$/Nafion/Pt/C - air + H source such as $H_2$ or a hydride or other H storage material of the disclosure].

The cell comprising a proton conducting or acidic molten or acidic aqueous electrolyte to maintain the reaction given by Eq. (199) may comprise an intermittent or pulsed electrolysis cell. Reactions such as those given by Eqs. (197) and (198) may occur reversibly on the corresponding electrode or on the corresponding counter electrode following gas

crossover.

In an embodiment, the electrolyte may comprise an acidic aqueous solution. The charging phase of the intermittent or pulsed cycle may comprise the electrolysis of $H_2O$ to $H_2$ and $O_2$. The electrolysis cathode and anode reactions may comprise the reverse of Eqs. (198) and (197), respectively, except that the hydrino formation is irreversible. The cathode discharge half-cell reaction may comprise the reduction of at least one of oxygen, $H^+$, and $H_2O$. The reduction may be given by Eq. (197). The cathode products during discharge may be H and $H_2O$. The $H_2O$ may serve as a catalyst to form hydrinos. The overpotential for the reduction reaction may cause the half-cell voltage to be about 1.23 V relative to the SHE and 25 °C. The anode discharge half-cell reaction may comprise the oxidation of $H_2$ to form $H^+$ (Eq. (198)). In an embodiment, the reduction potential for the oxidation of $H_2$ to $H^+$ in aqueous acidic solution (Eq. (198)) is about 0 V relative to the SHE and 25 °C. The overpotential for oxidation on the electrode is about 0V such that the oxidation half-cell reaction occurs at about 0 V.

In other embodiments, the catalyst may comprise a species that accepts m27.2 eV from atomic hydrogen such as those of the disclosure wherein the catalyst may be a half-cell species or formed during the electrolysis or discharge phases. Hydrinos are formed during at least one of the charge and discharge phases. Regarding the discharge phase, the half-cell potential of the reduction reaction may be about 1.23 V or be in the range of about 0.6 to 1.4 V relative to the SHE and 25 °C, and the half-cell potential of the oxidation reaction may be about 0 V or be in the range of about -0.5 to +0.5V relative to the SHE. The cell potential between the electrolysis cathode and anode during the electrolysis-off or discharge phase may be about 1.2 V or be in the range of about 0.3 to 2 V relative to the SHE and 25 °C. In embodiments having an elevated temperature, these room temperature ranges are thermodynamically corrected for the operating temperature.

The electrolyte may be an aqueous acidic solution such as an aqueous acid electrolyte. Suitable acid electrolytes are aqueous solutions of $H_2SO_4$, HCl, HX (X-halide), $H_3PO_4$, $HClO_4$, $HNO_3$, HNO, $HNO_2$, $H_2S$, $H_2CO_3$, $H_2MoO_4$, $HNbO_3$, $H_2B_4O_7$ (M tetraborate), $HBO_2$, $H_2WO_4$, $H_2CrO_4$, $H_2Cr_2O_7$, $H_2TiO_3$, $HZrO_3$, $MAlO_2$, $HMn_2O_4$, $HIO_3$, $HIO_4$, $HClO_4$, or an organic acidic such as formic or acetic acid that may be in the pH range of about 7.1 M to that of the pure acid. The acid may be aqueous or molten such as molten phosphoric acid. An exemplary molten cell is [Pt or C/$H_3PO_4$ (1) (T> 43 °C)/C or Pt]. In a pulsed or intermittent applied voltage or current electrolysis embodiment, at least one of the cathode and anode may comprise a bifunctional electrode. The electrodes may comprise different materials to achieve the desired reactions. Each of the cathode and anode that may be selective for the desired oxidation or reduction reaction and may be one of a noble metal or alloy such as Pt, Pd, or Au, Ag, Ti, Ta, Zr, Nb, Nb alloy, Ni-Mo alloy such as Hastelloy B, Hastelloy C, Hastelloy B-3 alloy, Hastelloy C22 alloy, or Hastelloy C276 alloy, carbon, or a dimensionally stable anode (DSA) or electrode such as $TiO_2$ stabilized conductive metal oxides such as $RuO_2$ and $IrO_2$ supported on a conductor such as Ti. Suitable exemplary DSA are $Ta_2O_5$ and $Ti/Ir_{0.3}Ti_{0.7}O_2$. The electrode material such as a noble metal may be supported. Suitable supports are carbon, metals, and ceramics. Corresponding examples of supported electrode materials are Pt/C, Pd/C, and Ru/C, Pt/Ti, Pt/$Al_2O_3$, and Ag/$Al_2O_3$. Other stable conductors with the appropriate capability for oxidation and reduction are those known by those skilled in the art.

$H^+$ and $O_2$ may be formed at the anode and hydrogen at cathode during electrolysis. During the electrolysis-off or discharge phase, $H_2$ may be oxidized to $H^+$ (Eq. (198) at the electrolysis cathode, and $H^+$ and $O_2$ may undergo reduction at the electrolysis anode to form H and $H_2O$ (Eq. (197)) wherein the latter may serve as a catalyst to form hydrinos at the electrolysis anode. Thus, the cell may maintain a constant polarity during charge and discharge with the polarity of the current reversing during each phase of the cycle. The output may be power or waveform conditioned. In another embodiment, the reaction given by Eq. (197) occurs reversibly at both electrodes except that the hydrino product is irreversible. Exemplary cells are [PtTi/$H_2SO_4$ or $H_3PO_4$ (aq)/Pt, intermittent electrolysis] and [Pb/$H_2SO_4$ (aq)/Pb or PbO intermittent electrolysis]. The acid may be in any desired concentration such as about 0.1 M to saturated. Exemplary concentrations are 14.7 M $H_3PO_4$ and 5M $H_2SO_4$.

In another embodiment, the gases may crossover from at least one of the anode to cathode, and vice versa. Then, during discharge at least one of the half-cell reactions may be switched such the $O_2$ (Eq. (197) reduction occurs at the electrolysis cathode and $H_2$ oxidation (Eq. (198) occurs at the electrolysis anode. Then, the current polarity remains constant, but the voltage polarity of the electrodes switches with the phase of the cycle. The electrode spacing may be minimized to facilitate the gas crossover. The electrodes may be separated by a membrane such as a proton-exchange membrane such as a Nafion membrane. The circuit between the electrodes may comprise a diode to maintain the constant polarity of the current. In embodiments, the power from forming hydrinos manifests as at least one of excess electrical and thermal power over the dissipated electrolysis power.

The acidic electrolyte may comprise an aqueous mixture of at least one of an acid or mixture, an ionic liquid or mixture such as those of the disclosure, and an organic solvent or mixture such as those of the disclosure. Suitable organic solvents are those that are miscible with water such as an alcohol, amine, ketone, ether, nitrile, and carboxylic acid. Exemplary cells are [PtTi/Nafion + at least one of an acid, ionic liquid, and organic solvent + $H_2O$/PtTi + air]. Suitable exemplary ionic liquids are selected from the group of ethylammonium nitrate, ethylammonium nitrate doped with dihydrogen phosphate such as about 1% doped, hydrazinium nitrate, $NH_4PO_3$-$TiP_2O_7$, and a eutectic salt of $LiNO_3$-$NH_4NO_3$, mixtures of $LiNO_3$, ammonium triflate (Tf = $CF_3SO_3^-$), ammonium trifluoroacetate (TFAc =$CF_3COO^-$) ammonium tetrafluorobarate ($BF_4^-$), ammonium methanesulfonate ($CH_3SO_3^-$), ammonium nitrate ($NO_3^-$), ammonium thiocyanate ($SCN^-$), ammonium sulfamate ($SO_3NH_2^-$), ammonium bifluoride ($HF_2^-$) ammonium hydrogen sulfate ($HSO_4^-$) ammonium bis(trifluoromethanesulfonyl)imide (TFSI = $CF_3SO_2)_2N^-$), ammonium bis(perfluoroehtanesulfonyl)imide (BETI = $CF_3CF_2SO_2)_2N^-$), hydrazinium nitrate, $NH_4NO_3$, $NH_4Tf$, and $NH_4TFAc$, ammonium or alkyl ammonium halides, and aromatic compounds such as imidazole, pyridine, pyrimidine, pyrazine, perchlorates, $PF_6^-$, 1-ethyl-3-methylimidazolium chloride-$AlCl_3$ and pyrrolidinium based protic ionic liquids. Suitable exemplary solvents are selected from the group of alcohol, amine, ketone, ether, nitrile, carboxylic acid, dioxolane, dimethoxyethane (DME), 1,4-benzodioxane (BDO), tetrahydrofuran (THF), dimethylformamide (DMF), dimethylacetamide (DMA), dimethylsulfoxide (DMSO), 1,3-dimethyl-2-imidazolidinone (DMI), hexamethylphosphoramide (HMPA), N-methyl-2-pyrrolidone (NMP), methanol, ethanol, amines such as tributylamine, triethyamine, triisopropylamine, N,N-dimethylaniline, furan, thiophene, imidazole, pyridine, pyrimidine, pyrazine, quinoline, isoquinoline, indole, 2,6-lutidine (2,6-dimethylpyridine), 2-picoline (2-methylpyridine), and nitriles such as acetonitrile and propanenitrile, 4-dimethylaminobenzaldehyde, acetone, and dimethyl acetone-1,3 -dicarboxylate.

In an embodiment of an aqueous intermittent electrolysis cell, $H^+$ and oxygen may be formed at the electrolysis anode, and $OH^-$ and $H_2$ may be formed at the electrolysis cathode as given by exemplary reactions:

Electrolysis Anode

$$H_2O \text{ to } 1/2O_2 + 2H^+ + 2e^- \quad (200)$$

Electrolysis Cathode

$$2H_2O + 2e^- \text{ to } H_2 \text{ to } 2OH^- \quad (201)$$

The solution reaction may be

$$2H^+ + 2OH^- \text{ to } 2H_2O \quad (202)$$

The overall reaction may be

$$H_2O \text{ to } H_2 + 1/2O_2 \quad (203)$$

During the discharge phase, hydrinos may be formed wherein at least one of $H_2O$, OH, $O_2$, nH, and nO (n = integer) may serve as the catalyst. Exemplary reactions to form $H_2O$, that may serve as the catalyst, and hydrinos are

Cathode

$$1/2O_2 + 3H^+ + 3e^- \text{ to } H_2O + H(1/p) \quad (204)$$

Anode

$$H_2 + OH^- \text{ to } H_2O + e^- + H(1/p) \quad (205)$$

The solution reaction may be

$$3H^+ + 3OH^- \text{ to } 3H_2O \quad (206)$$

The overall reaction may be

$$3H_2 + 1/2O_2 \text{ to } H_2O + 4H(1/p) \quad (207)$$

The electrolytic solution may be about neutral pH. Suitable electrolytes that are about neutral are metal salts of strong acids such as aqueous nitrates, sulfates, halides, perchlorates, periodates, chromates, and others of the disclosure. The cation may be ammonium or a metal or such as alkali, alkaline earth, transition, inner transition, rare earth, and Groups III, IV, V, and VI metals. The concentration may be any desired which is soluble such as 0.01M to saturated.

The intermittent waveform may be that which optimizes the output electricity relative to the input electricity. The frequency of the intermittent electrolysis may be in the range of about 0.001 Hz to 10 MHz, about 0.01 Hz to 100 kHz, or about 0.01 Hz to 10 kHz. The electrolysis voltage per cell may be in the range of about 0.1 V to 100 V, about 0.3 V to 5 V, about 0.5 V to 2 V, or about 0.5 V to 1.5 V. The electrolysis current per electrode area active to form hydrinos maybe in the range of about 1 microamp $cm^{-2}$ to 10 A $cm^{-2}$, about 0.1 milliamp $cm^{-2}$ to 5 A $cm^{-2}$, and about 1 milliamp $cm^{-2}$ to 1 A $cm^{-2}$. The electrolysis power per electrode area active to form hydrinos maybe in the range of about 1 microW $cm^{-2}$ to 10 W $cm^{-2}$, about 0.1 milliW $cm^{-2}$ to 5 W $cm^{-2}$, and about 1 milliW $cm^{-2}$ to 1 W $cm^{-2}$. The intermittent waveform may be at constant current, power, or voltage for at least one of changing and discharging. In an exemplary embodiment, the constant current per electrode area active to form hydrinos may be in the range of about 1 microamp $cm^{-2}$ to 1 A $cm^{-2}$; the constant power per electrode area active to form hydrinos may be in the range of about 1 milliW $cm^{-2}$ to 1 W $cm^{-2}$; the constant electrolysis voltage per cell may be in the range of about 1 V to 20 V, and the constant discharge voltage per cell may be in the range of about of about 0.1 V to 20 V. The electrolysis time interval may be in the range of about $10^{-4}$ s to 10,000 s, $10^{-3}$ s to 1000 s, or $10^{-2}$ s to 100 s, or $10^{-1}$ s to 10 s. The discharge time interval may be in the range of about $10^{-4}$ s to 10,000 s, $10^{-3}$ s to 1000 s, or $10^{-2}$ s to 100 s, or $10^{-1}$ s to 10 s. The discharge may be at constant or variable current, voltage, and power that may be in the same ranges as those of the electrolysis. The discharge resistance may be constant or variable. It may be in the range of about 1milliohm to 100 Mohm, about 1 ohm to 1 Mohm, and 10 ohm to 1 kohm. In an embodiment, at least one of the discharge current, voltage, power, or time interval is larger than that of the electrolysis phase to give rise to at least one of power or energy gain over the cycle.

In an embodiment, at least one of the charge and discharge times is less than the diffusion time of a species from one electrode to the other. In an embodiment, the species may be an active oxygen species such as at least one of peroxide, a peroxide ion, superoxide, HOOH, $HOO^-$, O, $O_2^{2-}$, and $O^{2-}$. In an embodiment, at least one of the charge and discharge times is less than about 100 s, 10 s, 1 s, 0.1 s, 0.01 s, 0.001 s, 0.0001 s, 0.01 ms, 1 microsecond, or 0.1 microsecond. In an embodiment, the frequency of the charge-discharge cycle is higher than that which will permit active species formed at the discharge cathode to migrate and diffuse to the discharge anode. The charge-discharge time may be less that 1 s, for example, such that the migration of an active oxygen species such as peroxide ion is prohibited from reaching and reacting with the anode such as a Mo or Mo alloy anode or others of the disclosure. Here, at least one of the electrolytic electric field and the current that causes the ions to migrate is switching direction faster than the migration time to the anode. The discharge cathode that forms reactive oxygen species during charging may destroy them during discharging such that they are prohibited from diffusing to and corroding the discharge anode. In an embodiment, an exemplary intermittent charge-discharge circuit may be that of Gamry Instruments such as that of Model EIS300 or a modification thereof known by those skilled in the art.

In an embodiment, at least one of the intermittent charge or discharge voltage, current, power, and load may be constant or variable. The parameters may be controlled to achieve electrical power or energy gain. The electrolysis voltage per cell may be at or slightly above the threshold for current flow such as in the range of about 0 to 0.5V above the threshold. A suitable electrolysis voltage per cell range is about 0.25V to 2V or 0.25V to 1.7V. The discharge voltage per cell may be in a range that maintains a current of opposite polarity to that of the electrolysis current. The discharge voltage per cell may be in the range of about 0.01V to the maximum electrolysis voltage. A suitable discharge voltage range per cell is about 0.01V to 2V or 0.01V to 1.7V. Regarding the electrode area active to form hydrinos, the discharge current may be in the range of about 1 microamp $cm^{-2}$ to 1 A $cm^{-2}$, 0.01 mA $cm^{-2}$ to 20 mA $cm^{-2}$, or 0.01 mA $cm^{-2}$ to 10 mA $cm^{-2}$. The discharge load may be in the range of about 1 microohm to 1 megaohms. A suitable load may maintain the current in the range of about 1 microamp $cm^{-2}$ to 1 A $cm^{-2}$, 0.01 mA $cm^{-2}$ to 20 mA $cm^{-2}$, or 0.01 mA $cm^{-2}$ to 10 mA $cm^{-2}$. The conductivity of a suitable load per electrode area active to form hydrinos is in the range of about $10^{-5}$ to 1000 $ohm^{-1}$ $cm^{-2}$, $10^{-4}$ to 100 $ohm^{-1}$ $cm^{-2}$, $10^{-3}$ to 10 $ohm^{-1}$ $cm^{-2}$, or $10^{-2}$ to 1 $ohm^{-1}$ $cm^{-2}$. The power may be determined by at least one of the suitable voltage, current, and resistance. A suitable power density per electrode area active to form hydrinos is in the range of about 1 microW $cm^{-2}$ to 1 W $cm^{-2}$, 0.01 mW $cm^{-2}$ to 20 mW $cm^{-2}$, or 0.01 mW $cm^{-2}$ to 10 mW $cm^{-2}$. In an embodiment, an exemplary intermittent charge-discharge circuit may be that of Arbin Instruments such as that of Model BT2000 or a modification thereof known by those skilled in the art.

In an embodiment of a molten electrolyte, the cell temperature is maintained at least the melting point of the electrolyte and higher. The electrolyte may be a molten hydroxide that may be a mixture with at least one other compound

such as a salt such as a halide salt. Exemplary suitable hydroxide mixture electrolytes are LiOH-LiBr, LiOH-LiX, NaOH-NaBr, NaOH-NaI, NaOH-NaX, KOH-KX (X = halide). The salt may be a eutectic mixture. The temperature above the melting point may be in the range of about 0 to 1500 °C higher, 0 to 1000 °C higher, 0 to 500 °C higher, 0 to 250 °C higher, or 0 to 100 °C higher. In an embodiment, comprising a hydrogen permeable membrane, the temperature of the cell is maintained at an elevated temperature that achieves a desired permeation rate. The membrane material, thickness, and hydrogen pressure are also selected to achieve the desired permeation rate. In an embodiment, the cell temperature is in the range of about 25 to 2000 °C, 100 to 1000 °C, 200 to 750 °C, or 250 to 500 °C. If the cell comprises a permeation membrane and a molten salt electrolyte, the cell temperature is maintained above the melting point of the electrolyte and at the level that achieves the desired permeation rate. Thus, in an embodiment, the cell temperature is maintained at least the melting point of the salt and higher. The temperature above the melting point may be in the range of about 0 to 1500 °C higher, 0 to 1000 °C higher, 0 to 500 °C higher, 0 to 250 °C higher, or 0 to 100 °C higher. The membrane thickness may be in the range of about 0.0001 to 0.25 cm, 0.001 to 0.1 cm, or 0.005 to 0.05 cm. The hydrogen pressure may be maintained in the range of about 1 Torr to 500 atm, 10 Torr to 100 atm, or 100 Torr to 5 atm. The hydrogen permeation rate may be in the range of about $1 \times 10^{-13}$ mole $s^{-1}$ $cm^{-2}$ to $1 \times 10^{-4}$ mole $s^{-1}$ $cm^{-2}$, $1 \times 10^{-12}$ mole $s^{-1}$ $cm^{-2}$ to $1 \times 10^{-5}$ mole $s^{-1}$ $cm^{-2}$, $1 \times 10^{-11}$ mole $s^{-1}$ $cm^{-2}$ to $1 \times 10^{-6}$ mole $s^{-1}$ $cm^{-2}$, $1 \times 10^{-10}$ mole $s^{-1}$ $cm^{-2}$ to $1 \times 10^{-7}$ mole $s^{-1}$ $cm^{-2}$, or $1 \times 10^{-9}$ mole $s^{-1}$ $cm^{-2}$ to $1 \times 10^{-8}$ mole $s^{-1}$ $cm^{-2}$. The cell temperature of an intermittent electrolysis cell or a cell comprising a hydrogen sparging or bubbling electrode is maintained above the melting point of the electrolyte. In an exemplary cell comprising the electrolyte LiOH-LiBr having a eutectic mixture of about (43%-57%) such as the cell [Ni/LiOH-LiBr/Ni + air; intermittent electrolysis] or [Ni($H_2$)/LiOH-LiBr/Ni + air] wherein the hydrogen electrode (designated Ni($H_2$)) comprises an $H_2$ sparging or bubbling electrode, the eutectic electrolyte melting point is about 265 °C. The cell may be maintained at this temperature and above. The hydrogen flow rate per geometric area of the $H_2$ bubbling or sparging electrode may be in the range of about $1 \times 10^{-13}$ mole $s^{-1}$ $cm^{-2}$ to $1 \times 10^{-4}$ mole $s^{-1}$ $cm^{-2}$, $1 \times 10^{-12}$ mole $s^{-1}$ $cm^{-2}$ to $1 \times 10^{-5}$ mole $s^{-1}$ $cm^{-2}$, $1 \times 10^{-11}$ mole $s^{-1}$ $cm^{-2}$ to $1 \times 10^{-6}$ mole $s^{-1}$ $cm^{-2}$, $1 \times 10^{-10}$ mole $s^{-1}$ $cm^{-2}$ to $1 \times 10^{-7}$ mole $s^{-1}$ $cm^{-2}$, or $1 \times 10^{-9}$ mole $s^{-1}$ $cm^{-2}$ to $1 \times 10^{-8}$ mole $s^{-1}$ $cm^{-2}$. In an embodiment, the rate of reaction at the counter electrode matches or exceeds that at the electrode at which hydrogen reacts. In an embodiment, the reduction rate of at least one of $H_2O$ and $O_2$ is sufficient to maintain the reaction rate of H or $H_2$. The counter electrode has a surface area and a material sufficient to support the sufficient rate.

The electrodes and electrolyte system may be in a vessel closed to atmosphere. In the case of intermittent electrolytic cell comprising a molten hydroxide salt electrolyte, the water partial pressure supplied to the cell may be controlled to favor the $OH^-$ producing reaction over other $O_2$ and $H_2O$ reduction reactions such as those that form at least one of peroxide, superoxide, and oxide. In an embodiment, at least one of the temperature, $O_2$ pressure, $H_2O$ pressure, $H_2$ pressure, and $OH^-$ concentration are controlled to favor the catalyst-forming half-cell reaction and the counter reaction that results in the optimal formation of hydrinos. One or more of the corresponding reactions may be given by Eqs. (171-173). The cell may be closed to air. In an embodiment, the oxygen of at least one half-cell reaction is from electrolysis such as oxidation of at least one of $H_2O$ and $OH^-$. Suitable exemplary cells that undergo intermittent or pulsed electrolysis are [Ni($H_2$)/LiOH-LiBr/Ni], [Ni($H_2$)/NaOH-NaBr/Ni], [Ni($H_2$)/NaOH-NaI/Ni], [Ni($H_2$)/Sr$(OH)_2$/Ni], and similar cells of the disclosure wherein some $H_2O$ is present. $H_2O$ may be added back to replace any consumed to form hydrinos. Excess oxygen may also be removed. The water vapor pressure may be controlled by a generator connected to the cell. The $H_2O$ vapor generator may have a temperature lower than that of the cell temperature to control the $H_2O$ vapor pressure. In an embodiment, the water vapor generator may comprise an atomizer or nebulizer such as an ultrasonic one. The $H_2O$ vapor may be delivered by a flow such as that of an inert gas such as a noble gas or $N_2$. The gas may be recirculated. Alternatively, the $H_2O$ mass balance may be controlled to achieve the desired $H_2O$ wt% of the electrolyte or half-cell reactants. In an embodiment, loss of electrolyte by means such as volatilization of hydroxides such a LiOH can be decreased by lowering the cell temperature, maintaining an elevated cell pressure, and running the cell at least partially closed wherein the gases may be supplied by intermittent electrolysis and by lines with selective directional flow. The water vapor generator or water mass balance may also control at least one of the water content and pressure of a closed intermittent electrolytic cell having an acidic electrolyte. Exemplary reactions involving $H_2O$ are given by Eqs. (197-199).

In an embodiment, the source of $H_2O$ to the cell may be the dehydration of the electrolyte such as a hydroxide. An exemplary reaction of an alkali hydroxide such as LiOH is

$$2LiOH \text{ to } Li_2O + H_2O \qquad (208)$$

The dehydration reaction may occur even if it is endergonic with energy supplied by at least one of intermittent electrolysis, the hydrino formation reaction, and heat. In an embodiment the CIHT or electrolytic cell anode comprises a material such as a metal such as Mo or an Mo alloy such as Haynes 242, MoNi, MoCu, or MoCo that has an exergonic reaction with $H_2O$. The cell source of $H_2O$ may be the dehydration reaction that is endergonic in its overall reaction with the

anode. An exemplary reaction is the reaction of the LiOH electrolyte with Mo to form Mo oxide, $Li_2O$, and hydrogen. Then, the cell may be run for a suitable duration to form energy without significant degradation of the anode. The conditions of the cell such as the operating temperature may be changed such that the electrolyte could be regenerated without substantial reaction with the anode. For example, the cell temperature could be lowered and $H_2O$ added to the electrolyte to rehydrate it. The regenerated cell may then be operated further at the typical operating conditions.

In an embodiment, the electrolyte comprises a hydroxide such as an alkali hydroxide such as LiOH and further comprises the dehydrated form such as the oxide as a mixture wherein the concentration of the dehydrated form such as $Li_2O$ is within a range such that the anode is stabilized from oxidation. In an embodiment, the anode such as a Mo anode reacts with the hydrated form such as LiOH and is stable in the presence of the dehydrated form such as $Li_2O$. The concentration range of the two forms is such that the oxidation potential provides stability to the anode to oxidation. The concentration range further provides that excess energy is formed during the operation of the cell wherein the source of H may be from intermittent electrolysis. In an embodiment, the electrolyte may become further dehydrated during operation. The electrolyte may be rehydrated continuously or periodically or intermittently. In the latter case, the $H_2O$ addition may occur at a lower temperature than the operating temperature to prevent the anode such as a Mo anode from oxidizing during hydration. Once rehydrated the cell may be heated and operated at a standard higher operating temperature. The electrolyte may further comprise a mixture of a hydroxide, the dehydrated form, and at least one other salt such as a halide such as an alkali halide such as LiBr.

In an embodiment, the cells of the intermittent electrolytic cell are arranged in a stack. Each cell may comprise a molten electrolyte such as a molten hydroxide and optionally at least one other salt or a molten aqueous electrolyte such as an aqueous alkaline electrolyte. The cathode of each cell may comprise an air or oxygen electrode. In embodiments, the source of oxygen of the cell is at least one of air, external oxygen, and electrolytically generated oxygen. In an embodiment, the cathode may comprise at least a portion that is exposed to a source of oxygen such as air or $O_2$ gas. The exposed portion may extend out from the cell stack and electrolyte to allow $O_2$ or reduced $O_2$ to flow into the electrolyte at the cathode-electrolyte interface. In another embodiment, the cell may be closed and the hydrogen and oxygen may be generated electrolytically. The system may comprise a heater to maintain the stack at a desired elevated temperature. The temperature may be at about or greater then the melting point of the molten electrolyte. In an embodiment, the cell comprises a jelly-roll or Swiss role design. In an embodiment, a separator or spacer and electrolyte are applied between electrodes that may comprise sheets that are rolled up. The jelly-roll or Swiss role cell may be closed. The cell may be rolled tightly with the oxygen provided by electrolysis. In an embodiment, the oxygen reduction electrode such as the cathode may be fully submerged in the electrolyte. The intermittent electrolysis electrodes that supply the hydrogen and oxygen may be different materials such as different metals or different materials of the disclosure such different electrodes selected from the group of metals, carbon, carbides, borides, nitrides, and carbonitrile. The cathode material may absorb oxygen during electrolysis and release it during the discharge phase of the intermittent cycle.

In an embodiment, the voltage of the half-cell reaction to form the catalyst relative to 25°C and the SHE is about 1.2V. Suitable voltages are in the ranges of about 1.5V to 0.75V, 1.3V to 0.9V, and 1.25V to 1.1V relative to a SHE and 25 °C. Suitable reactions are those that form $H_2O$ such as those given by Eqs. (171) and (197). In an embodiment, the cell theoretical voltage is about 0V. The cell reactions may comprise water reduction to $OH^-$ and $H_2$ at the cathode and the reaction of $OH^-$ and $1/2H_2$ to $H_2O$ at the anode. In an embodiment, a cell reaction having a theoretical cell voltage of about 0V occurs with at least one other having a having a theoretical cell voltage of about greater than 0V. In an exemplary embodiment, cell reactions may comprise water reduction to $OH^-$ and $H_2$ at the cathode and the reaction of $OH^-$ and $1/2H_2$ to $H_2O$ at the anode having a theoretical cell voltage of about 0V, and also a net cell reaction to form water (Eq. (173)) having a theoretical cell voltage is greater that 0V. The water may form via half-cell reactions such as those given by Eqs. (171) and (172). Other exemplary cell reactions of the cells [Ni($H_2$) NaOH/BASE/NaCl-$M_xCl_y$] are NaOH + $1/2H_2$ + $1/yM_xCl_y$ = NaCl + $6H_2O$ + x/yM wherein exemplary compounds $M_xCl_y$ are $AlCl_3$, $BeCl_2$, $HfCl_4$, $KAgCl_2$, $MnCl_2$, $NaAlCl_4$, $ScCl_3$, $TiCl_2$, $TiCl_3$, $UCl_3$, $UCl_4$, $ZrCl_4$, $EuCl_3$, $GdCl_3$, $MgCl_2$, $NdCl_3$, and $YCl_3$. Suitable cells having a cell voltage of about 0V are [Ni($H_2$) NaOH/BASE/NaCl-$ScCl_3$ at about 800-900K], [Ni($H_2$) NaOH/BASE/NaCl-$TiCl_2$ at about 300-400K], [Ni($H_2$) NaOH/BASE/NaCl-$UCl_3$ at about 600-800K], [Ni($H_2$) NaOH/BASE/NaCl-$UCl_4$ at about 250-300K], [Ni($H_2$) NaOH/BASE/NaCl-$ZrCl_4$ at about 250-300K], [Ni($H_2$) NaOH/BASE/NaCl-$MgCl_2$ at about 900-1300K], [Ni($H_2$) NaOH/BASE/NaCl-$EuCl_3$ at about 900-1000K], [Ni($H_2$) NaOH/BASE/NaCl-$NdCl_3$ at about >1000K], and [Ni($H_2$) NaOH/BASE/NaCl-$YCl_3$ at about >1000K].

In another embodiment, the theoretical cell voltage involving the formation of the catalyst to form hydrinos may be about 0V. Another exemplary cell reaction comprises the reduction of hydrogen to $H^-$ at the cathode and the oxidation of $H^-$ to H at the anode wherein nH (n = integer) may serve as the catalyst for H to form hydrinos. The H may further react such as according to the reactions of the disclosure wherein the theoretical cell voltage is greater that 0V. Suitable reactions are the reaction of H with a metal such Li or an alloy such as $Mg_3Li$ to form the corresponding hydride or the reaction of H with a species of the Li-N-H system to form $LiNH_2$ or $Li_2NH$, for example. Exemplary cells are [Li, $Mg_3Li$, or $Li_3N$/LiCl-KCl LiH/Ni($H_2$), $LaH_2$, $CeH_2$, $TiH_2$, or $ZrH_2$]. In embodiments, the catalyst may be at least one of nH, nO (n = integer), $O_2$, OH, $H_2O$, and an MH or $MH^-$ catalyst such as those of TABLE 3 as well as any hydrino catalyst such as

those of TABLE 1.

In an embodiment, the catalyst such as MH or $MH^-$ such as those of TABLE 3 is formed by the cell reaction wherein the theoretical cell voltage is about 0V. An exemplary reaction having a theoretical cell voltage of E~0 V at the cell operating temperature of about 700K is given by Eq. (61) wherein NaH serves as the MH-type catalyst in the exemplary cell comprising [Na/BASE/NaOH]. In embodiments, the theoretical cell voltage may be about 0V within the range of about +/-0.75V, +/-0.5V, +/-0.25V, or +/-0.1V.

In an embodiment, the cell comprises a $H^-$ conducting electrolyte such a molten salt such as a eutectic salt mixture. Exemplary suitable molten salt electrolytes are given in TABLE 4. The cell further comprises a source of H to form hydride ions and a reactant that forms a compound with H. The cell may comprise hydrogen storage materials for both the cathode and anode. Suitable exemplary anodes are Li, $Mg_3Li$, and $Li_3N$. Suitable cathodes comprise a hydrogen permeable H electrode such as $Ni(H_2)$ and others of the disclosure or a hydride such as $ZrH_2$, $TiH_2$, $LaH_2$, and $CeH_2$. The electrolyte may further comprise a hydride such as LiH. Exemplary cells are [Li, $Mg_3Li$, and $Li_3N$/a eutectic molten salt such as LiCl-KCl + a hydride such as LiH/ $Ni(H_2)$ or a hydride such as $LaH_2$]. In an embodiment, the cell is intermittently charged and discharged. The formation of H at one or more of the cathode and anode causes the formation of hydrinos wherein nH (n= integer) may serve as the catalyst. In an embodiment, excess hydride is supplied to the cell, the anode may comprise an alloy of an element of the electrolyte, and the cathode may comprise a conductor that may form a hydride such as a metal such as a transition metal such as Ni or a noble metal such as Pd. Exemplary cells in a charged state are [LiAl or $Mg_3Li$/a eutectic molten salt such as LiCl-KCl + a hydride such as LiH/NiH, TiH, or PdH] that may be intermittently charged and discharged. Exemplary reversible reactions except for the hydrino product are:

Cathode:

$$Al + Li^+ + e^- \text{ to } LiAl \qquad (209)$$

or

$$3Mg + Li^+ + e^- \text{ to } Mg_3Li \qquad (210)$$

Anode:

$$2H^- + Ni + \text{ to } NiH + H(1/p) + 2e^- \qquad (211)$$

The overall reaction may be

$$2LiH + 2Al + Ni \text{ to } 2LiAl + NiH + H(1/p) \qquad (212)$$

or

$$2LiH + 6Mg + Ni \text{ to } 2Mg_3Li + NiH + H(1/p) \qquad (213)$$

The cell may intermittently regenerated by applying an intermittent electrolysis voltage. The applied cell voltage may be such that LiAl or $Mg_3Li$ is formed at the electrolysis cathode (Eqs. (209-213)).

In an embodiment of a hydrogen permeable electrode, the hydrogen is generated inside of the electrode electrolytically or chemically. In an embodiment, the hydrogen permeable electrode comprises the anode of a cell for electrolytically generating hydrogen. The hydrogen may be generated by oxidation of a hydride of the electrolyte. The hydrogen may diffuse through the anode during electrolysis. An exemplary cell is [Ni, Ti, or Pd /a eutectic molten salt such as LiCl-KCl + a hydride such as LiH/ Al or Mg] wherein H is formed at the anode and a lithium alloy at the corresponding cathode according to Eqs. (209-213). The cathode may be in the center of a concentric tube anode that comprises the H permeable electrode. In another embodiment, the hydrogen permeable electrode comprises the cathode of a cell for electrolytically generating hydrogen. The hydrogen may be generated by reduction of water of the electrolyte. The hydrogen may diffuse through the cathode during electrolysis. An exemplary cell is [Ni /KOH (aq)/ Ni] wherein H is formed at the cathode and oxygen at the corresponding anode. The anode may be in the center of a concentric tube cathode that comprises the H permeable electrode. In another embodiment, the hydrogen of the hydrogen permeable

electrode of the CIHT cell is generated chemically. The hydrogen may be from the decomposition of a hydride such as an alkali, alkaline earth, transition metal, inner transition metal, or rare earth hydride or alloy, or a hydrogen storage material such as those of the disclosure. In an exemplary embodiment, H may be generated from the reaction of LiH and $LiNH_2$. The H permeable electrode may be regenerated by reverse electrolysis with H add back, by H add back alone, or by add back of a reactant such as $H_2O$. The H permeable electrode may serve as at least one of the anode and cathode of a CIHT cell. A suitable exemplary CIHT is [Ni(H2)/LiOH-LiBr/Ni + air or O2] wherein $Ni(H_2)$ is an electrolytically or chemically generated hydrogen electrode. An embodiment of the electrolytically generated hydrogen electrode is shown in FIGURE 4 wherein the electrode 604 replaces the separator 608 and comprises the H permeable membrane and an electrode of the cell having the counter electrode 603. Hydrogen is generated by applying a voltage from the source 616 between 609 and 604 at the position of and replacing 608.

In an embodiment, the hydrogen source at an electrode of the CIHT cell or hydrogen electrode such as a $H_2$ permeable membrane and $H_2$ gas such as $Ni(H_2)$ or a hydride such as $LaNi_5H_6$ may be replaced by a source of hydrogen gas such as a $H_2$ bubbling metal tube wherein the metal may be porous such as a $H_2$ porous tube comprised of sintered metal powder such as Ni powder or R-Ni powder or other porous materials such as metal fiber, filaments, mat or sponge such as Celmet (Celmet CNi #4, #6, or #8, Sumitomo Electric Industries, Ltd.). The $H_2$ bubbling electrode may replace the anode or cathode of cells having hydrogen as a reactant at the corresponding electrode or in the corresponding half-cell. For example, the $H_2$ bubbling electrode may replace electrodes of cell of the disclosure such as the anode of aqueous base cells, the anode of cells comprising a molten salt comprising a hydroxide, or the cathode of cells comprising a molten salt having a $H^-$ migrating ion. In the latter cases, the replaced electrode may comprise a hydrogen permeation electrode. In another cell embodiment comprising an acidic electrolyte such as an aqueous acid, the hydrogen electrode may comprise the anode. The anode may comprise a bubbling or sparging electrode as well as a hydrogen permeation electrode. The hydrogen may also be supplied by electrolysis of water. The hydrogen may undergo oxidation to $H^+$ during discharge. Thus, a general designation for a hydrogen electrode may be $M(H_2)$ wherein M may be a transition metal such as Ni or Ti, or V, Nb, Ta, Pd, or Pt or another metal of the disclosure that is at least one of stable to the electrolyte, hydrogen permeable, and a suitable electrolysis electrode that is compatible with the electrolyte and the cell operating conditions. Exemplary cells are [conductor (bubbling $H_2$)/KOH (sat aq)/SC + air], [conductor (bubbling $H_2$)/eutectic salt electrolyte comprising an alkali hydroxide such as LiOH-NaOH, LiOH-LiX, NaOH-NaX (X = halide or nitrate) or LiOH-$Li_2X$ or NaOH-$Na_2X$ (X = sulfate or carbonate) /conductor + air that may be an $O_2$ reduction catalyst], and [conductor (bubbling $H_2$) such as one comprising $Pt/H_2SO_4$/Pt + air]. In an alkaline cell embodiment, the cell atmosphere may comprise a mixture of $H_2$ and $O_2$ and optionally $H_2O$ wherein the cathode is selective to reduction of at least one of $O_2$ and $H_2O$, and the anode is selective to oxidation of at least one of H and a species of the electrolyte. The anode reaction may further comprise a reaction of hydrogen to form a product such as $H_2O$. The anode and the cathode may be those of the disclosure or known by those skilled in the art.

The cell may comprise at least one of an anode that is a source of hydrogen that is designated $M(H_2)$ wherein M may be a transition metal such as Ni or Ti, or V, Nb, Ta, Pd, or Pt or another metal of the disclosure that is at least one of stable to the electrolyte and hydrogen permeable. The anode may comprise a hydrogen sparging or bubbling electrode such as a porous conductor such as porous metal, or a hydrogen permeable electrode. The hydrogen anode such as a permeation electrode or a hydrogen sparging or bubbling electrode such as a porous conductor anode may further comprise a hydrogen dissociator and a large surface area support for hydrogen such as R-Ni or a noble metal on a support such as a Pt/Au that may be a carbon, carbide, boride, or nitrile as examples. The hydrogen electrode may comprise a porous material such as tightly bound assembly of a metal porous body (e.g. Ni such as Celmet #4, #6, or #8, Sumitomo Electric Industries, Ltd.) around a hydrogen line that may further comprise an outer alumina tube wherein hydrogen gas is sparged through the tube and diffused over the surface of the porous material in contact with the electrolyte. In embodiments, cells of the disclosure comprising a hydrogen permeation electrode, a hydrogen sparging or bubbling electrode such as a porous conductor such as porous metal may replace the hydrogen permeation electrode. In another embodiment, the hydrogen electrode comprises an electrolysis electrode wherein hydrogen is generated by electrolysis. Thus, the general designation for a hydrogen electrode is $M(H_2)$ wherein M may be a transition metal such as Ni or Ti, or V, Nb, Ta, Pd, or Pt or another metal of the disclosure that is at least one of stable to the electrolyte, hydrogen permeable, and a suitable electrolysis electrode that is compatible with the electrolyte and the cell operating conditions. The cell may further comprise a cathode that is at least one of an $O_2$ and $H_2O$ reduction cathode, and a molten hydroxide electrolyte. A suitable anode material is a metal such as Ni, and a suitable cathode material is a metal such as Ag. The Ag cathode may be Ag particles dispersed on carbon. An optimal loading is in the range of about 20 to 30 wt%. The cathode may comprise a manganese oxide such as $MnO_2$/C, $Mn_2O_3$/C, or MnOOH. Other suitable $O_2$ reduction cathodes are at least one of Pt/C or Pt alloy/C such as PtRu/C, $La_{0.5}Sr_{0.5}CoO_3$/C, CoTPP/C, $La_{0.6}Ca_{0.4}CoO_3$/C, Pt/CNT/C, $Pr_{0.8}Ca_{0.2}MnO_3$, CoTMPP/C, $LaMnO_3$/C, $MnCo_2O_4$/C, alkaline earth ruthenates, lithium doped lanthanum nickelate, Ni-Co spinel such as $NiCo_2O_4$, Pb-Ru pyrochlore such as $Pb_2Ru_2O_{6.5}$, Na-Pt bronze, Ag/AgHg, Ni, NiO, Ag, Au, Pt, Fe, NiO-$SiO_2$-$Al_2O_3$, FeTi alloy, $Fe_2Ti$, transition metals and their oxides optionally as a cermet. The oxygen reduction cathode may also comprise an oxygen spillover cathode or cathode comprising an oxygen spillover catalyst.

In an embodiment, the cathode comprises a portion submerged in the electrolyte or wetted by the electrolyte and another portion not submerged or not wetted by the electrolyte. The latter portion may be directly exposed to the source of oxygen such as air or $O_2$ gas. The oxygen may react with the $O_2$-source exposed portion and migrate into the electrolyte submerged or electrolyte wetted portion. The oxygen spillover cathode may comprise a partially submerged nickel mat, foam, or sintered or porous Ni cathode. In an embodiment, the oxygen reduction current is increased by increasing the material exposed to air for a given electrolyte interface area by adding more air exposed cathode surface area. In another embodiment, the oxygen reduction electrode such as the cathode may be fully submerged in the electrolyte. Oxygen from a source may be supplied by means such as sparging a gas comprising oxygen such as $O_2$ or air or by intermittent electrolysis. The intermittent electrolysis electrodes may be different materials such as different metals or different materials of the disclosure such different electrodes selected from the group of metals, carbon, carbides, borides, nitrides, and carbonitriles. In an embodiment, the oxygen reduction electrode such as the cathode may be exposed to air wherein the cell comprises a solid layer of the electrolyte at the electrolyte-air interface to restrict the flow of reduced oxygen into the electrolyte. The solid layer may be formed by solidification due to a temperature gradient in the electrolyte.

In an embodiment, the cell may comprise a salt bridge such as BASE or NASICON. The cathode may comprise an $H_2O$ or $O_2$ reduction catalyst. The $H_2O$ and optionally Oz may be supplied by sparging through a porous electrode such as porous electrode consisting of a tightly bound assembly of a Ni porous body (Celmet #6, Sumitomo Electric Industries, Ltd.) within an outer alumina tube. In another embodiment, $H_2O$ is injected or dripped into the bulk of the electrolyte and is retained for sufficient time to maintain a cell voltage before it evaporates due to solvation of the electrolyte. $H_2O$ may be added back periodically or continuously.

In an embodiment, the anode such as a hydrogen permeable anode is cleaned. The exemplary Ni($H_2$) anode may be clean by abrasion or by soaking in 3% $H_2O_2$/0.6 M $K_2CO_3$ followed by rinsing with distilled $H_2O$. The abrasion will also increase the surface area. Separately, at least one of the morphology and geometry of the anode is selected to increase the anode surface area. The surface area are may be increased by electroplating a metal black or rough coating or by acid etching a surface such as a metal surface. In another embodiment, the surface area of at least one electrode is increased by applying a coating such as a metal black coating applied by vapor deposition techniques such as continuous vapor deposition (CVD), sputtering, plasma deposition, atomic layer deposition (ALD), physical vapor deposition (PVD) such as plasma spray, cathodic arc deposition, electron beam physical vapor deposition, evaporative deposition, pulsed laser deposition, and sputter deposition, chemical vapor deposition (CVD), metalorganic vapor phase epitaxy (MOVDE), and metalorganic chemical vapor deposition (MOCVD). Other suitable methods comprise spraying, paint brushing, Mayer rod application, screen printing, and tape casting. In other embodiments, the electrolyte layer may be applied by these or other methods known in the art.

In an embodiment, the anode of the molten salt electrolyte cell comprises at least a hydride such as $LaNi_5H_6$ and others from the disclosure such as those of aqueous alkaline cells, and a metal such as one from the group of Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. Exemplary cells are [M or MH/$Mg(OH)_2$-NaCl/Ni wick ($H_2O$ and optionally $O_2$)], [M or MH/$Mg(OH)_2$-$MgCl_2$-NaCl/Ni wick ($H_2O$ and optionally $O_2$)], [M or MH/$Mg(OH)_2$-MgO-$MgCl_2$/Ni wick ($H_2O$ and optionally $O_2$)], [M or MH/$Mg(OH)_2$-NaF/Ni wick ($H_2O$ and optionally $O_2$)], [M or MH/LiOH-LiX, NaOH-NaX, KOH-KX, RbOH-RbX, CsOH-CsX, $Mg(OH)_2$-$MgX_2$, $Ca(OH)_2$-$CaX_2$, $Sr(OH)_2$-$SrX_2$, or $Ba(OH)_2$-$BaX_2$ wherein X =F, Cl, Br, or I/Ni wick ($H_2O$ and optionally $O_2$)], [M or MH/$CsNO_3$-CsOH, CsOH-KOH, CsOH-LiOH, CsOH-NaOH, CsOH-RbOH, $K_2CO_3$-KOH, KBr-KOH, KC1-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, and $RbNO_3$-RbOH/Ni wick ($H_2O$ and optionally $O_2$)], and [M or MH/LiOH, NaOH, KOH, RbOH, CsOH, $Mg(OH)_2$, $Ca(OH)_2$, $Sr(OH)_2$, or $Ba(OH)_2$ + one or more of $AlX_3$, $VX_2$, $ZrX_2$, $TiX_3$, $MnX_2$, $ZnX_2$, $CrX_2$, $SnX_2$, $InX_3$, $CuX_2$, $NiX_2$, $PbX_2$, $SbX_3$, $BiX_3$, $CoX_2$, $CdX_2$, $GeX_3$, $AuX_3$, $IrX_3$, $FeX_3$, $HgX_2$, $MoX_4$, $OsX_4$, $PdX_2$, $ReX_3$, $RhX_3$, $RuX_3$, $SeX_2$, $AgX_2$, $TcX_4$, $TeX_4$, TlX, and $WX_4$ wherein X =F, Cl, Br, or I/Ni wick ($H_2O$ and optionally $O_2$)] wherein MH = $LaNi_5H_6$ and others from the disclosure; M = one from the group of Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. The gas pressures such as that of $H_2$, $O_2$, and air such as those applied to the cell, the $H_2$ permeation pressure, or the pressure of any gas sparged into the cell may be any desired pressure. Suitable pressures are in the ranges of about 0.001 Torr to 200,000 Torr, about 1 Torr to 50,000 Torr, and about 700 Torr to 10,000 Torr. The reactant concentration ratios may be any desired. Suitable concentration ratios are those that maximize power, minimize cost, increase the durability, increase the regeneration capability, and enhance other operational characteristics known by those skilled in the Art. These criteria also apply to other embodiments of the disclosure. Suitable exemplary concentration ratios for the electrolyte are about those of a eutectic mixture. In another embodiment, the cell is operated in batch mode being closed to the addition of $O_2$ or $H_2O$ for the duration. $H_2$ may be added to the cell, or it may also be closed to $H_2$ addition during the batch. $H_2O$ and $H_2$ formed at the anode may react at the cathode in an internal circulation, or anode gaseous products may be dynamically removed. The reaction mixture may be regenerated after the batch.

In an embodiment, the molten hydroxide electrolyte comprises an additional salt. Exemplary electrolytes alone, in combination with base such as MOH (M = alkali), and in any combinations are alkali or ammonium halides, nitrates, perchlorates, carbonates, phosphates, and sulfates and $NH_4X$, X = halide, nitrate, perchlorate, phospate, and sulfate. The electrolyte may comprise a mixture of hydroxides or other salts such as halides, carbonates, sulfates, phosphates, and nitrates. In general, exemplary suitable salts alone or in combination are MOH, $M_2S$, $M_3PO_4$, $M_2SO_4$, $M_2CO_3$, MX (X = halide), $MNO_3$, MNO, $MNO_2$, MX (X = halide), $M_2CO_3$, $M_2SO_4$, $MHSO_4$, $M_3PO_4$, $M_2MoO_4$, $MNbO_3$, $M_2B_4O_7$ (M tetraborate), $MBO_2$, $M_2WO_4$, $M_2CrO_4$, $M_2Cr_2O_7$, $M_2TiO_3$, $MZrO_3$, $MAlO_2$, $MCoO_2$, $MGaO_2$, $M_2GeO_3$, $MMn_2O_4$, $M_4SiO_4$, $M_2SiO_3$, $MTaO_3$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, $MZnO_n$, (M is alkali that may be the same as the cation of the hydroxide or ammonium and n=1, 2,3, or 4), and an organic basic salt such as M acetate or M carboxylate. The electrolyte may also comprise these and other anions with any cation that is soluble in the melt such as alkaline earth, transition metal, inner transition metal, rare earth, and other cations of Groups III, IV, V, and VI such as Al, Ga, In, Sn, Pb, Bi, and Te. The wt% may be any desired. The additional salt may be a minor additive to a hydroxide electrolyte. The hydroxide electrolyte such as LiOH-LiBr may be a eutectic mixture further comprising an additive salt. Exemplary cells are [Ni($H_2$)/molten electrolytic of MOH and optionally another salt comprising a mixture and an additive selected from the group of $M_2S$, $M_3PO_4$, $M_2SO_4$, $M_2CO_3$, MX (X = halide), $MNO_3$, MNO, $MNO_2$, $M_2MoO_4$, $M_2CrO_4$, $M_2Cr_2O_7$, $MAlO_2$, $MNbO_3$, $M_2B_4O_7$, MBOz, $M_2WO_4$, $M_2TiO_3$, $MZrO_3$, $MCoO_2$, $MGaO_2$, $M_2GeO_3$, $MMn_2O_4$, $M_4SiO_4$, $M_2SiO_3$, $MTaO_3$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, and $MZnO_n$, (n=1, 2,3, or 4) and Mactetate/Ni + air] and [Ni($H_2$)/LiOH-LiBr and an additive selected from the group of $Li_2S$, $Li_3PO_4$, $Li_2SO_4$, $Li_2CO_3$, $LiNO_3$, LiNO, $LiNO_2$, $Li_2MoO_4$, $Li_2MoO_3$, $Li_2CrO_4$, $Li_2Cr_2O_7$, $LiAlO_2$, $LiNbO_3$, $Li_3B_4O_7$, $LiBO_2$, $Li_2WO_4$, $Li_2TiO_3$, $LiZrO_3$, $LiCoO_2$, $LiGaO_2$, $Li_2GeO_3$, $LiMn_2O_4$, $Li_4SiO_4$, $Li_2SiO_3$, $LiTaO_3$, $LiVO_3$, $LiIO_3$, $LiFeO_2$, $LiIO_4$, $LiClO_4$, $LiScO_n$, $LiTiO_n$, $LiVO_n$, $LiCrO_n$, $LiCr_2O_n$, $LiMn_2O_n$, $LiFeO_n$, $LiCoO_n$, $LiNiO_n$, $LiNi_2O_n$, $LiCuO_n$, and $LiZnO_n$, (n=1, 2,3, or 4), and Liactetate/Ni + air].

Another form of the reactions represented by Eqs. (128) and (61) involving the exemplary cell [Na/BASE/NaOH] and may also be operative in electrolysis cells that follows the similar mechanism as those of Eqs. (101-104) and (113) is

$$Na + 3NaOH \text{ to } 2Na_2O + H_2O + 1/2H_2; \text{ H to } H(1/p) \quad (214)$$

At least one of OH and $H_2O$ may serve as the catalyst. In an embodiment, the cell comprising a hydroxide that may form $H_2O$ such as [Na/BASE/NaOH] may further comprise a hydrate such as $BaI_2$ $2H_2O$, or $H_2O$ may be added to the cathode. The cell may further comprise a source of H such as a hydride or $H_2$ gas supplied through a permeable membrane such as Ni($H_2$).

In an embodiment, the cathode comprises at least one of a source of water and oxygen. The cathode may be a hydrate, an oxide, a peroxide, a superoxide, an oxyhydroxide, and a hydroxide. The cathode may be a metal oxide that is insoluble in the electrolyte such as a molten salt electrolyte. Suitable exemplary metal oxides are $PbO_2$, $Ag_2O_2$, AgO, $RuO_2$, $MnO_2$, and those of the group of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. Suitable exemplary metal oxyhydroxides are AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{i/2}O(OH)$, and $Ni_{1/3}Co_{1/3}Mn_{1/3}O(OH)$. Suitable exemplary hydroxides are those of Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. In an embodiment, the anode of the molten salt electrolyte cell comprises at least a hydride such as $LaNi_5H_6$ and others from the disclosure such as those of aqueous alkaline cells, and a metal such as one from the group of Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. A suitable hydride or metal is suitably insoluble in the molten electrolyte. The anode may comprise a hydrogen electrode comprising a hydrogen permeation, sparging, or intermittent electrolysis hydrogen electrode. Exemplary cells are [a hydride such as $LaNi_5H_6$/molten salt electrolyte comprising a hydroxide/Ni or Ni wick ($H_2O$ and optionally $O_2$)], [a hydride such as $LaNi_5H_6$ or M($H_2$)/molten salt electrolyte comprising a hydroxide/an oxide such as one of the group of $PbO_2$, $Ag_2O_2$, AgO, $RuO_2$, $MnO_2$, and those of the group of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W] wherein M is an $H_2$ permeable metal such as Ni, Ti, Nb, V, or Fe, [a hydride such as $LaNi_5H_6$ or M($H_2$)/molten salt electrolyte comprising a hydroxide/an oxyhydroxide such as one of the group of AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$] wherein M is an $H_2$ permeable metal such as Ni, Ti, Nb, V, or Fe, and [a hydride such as $LaNi_5H_6$ or M($H_2$)/molten salt electrolyte comprising a hydroxide/a hydroxide such as one of those comprising a cation from the group of Li, Na, K, Rb, Cs, Mg, Ca, Sr, Ba, Al, V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W] wherein M is an $H_2$ permeable metal such as Ni, Ti, Nb, V, or Fe.

In an embodiment, the electrolyte such as a molten salt or an aqueous alkaline solution may comprise an ionic compound such as salt having a cation that may exist in more than one oxidation state. Suitable exemplary cations capable of being multivalent are $Fe^{3+}$ ($Fe^{2+}$), $Cr^{3+}$ ($Cr^{2+}$), $Mn^{3+}$ ($Mn^{2+}$), $Co^{3+}$ ($Co^{2+}$), $Ni^{3+}$ ($Ni^{2+}$), $Cu^{2+}$ ($Cu^{+}$), and $Sn^{4+}$ ($Sn^{2+}$), transition, inner transition, and rare earth cations such as $Eu^{3+}$ ($Eu^{2+}$). The anion may be halide, hydroxide, oxide, carbonate, sulfate, or another of the disclosure. In an embodiment, $OH^-$ may be oxidized and reacted with H at the anode to form $H_2O$. At least one of OH and $H_2O$ may serve as the catalyst. The hydride anode reaction may be given by Eq. (92). The cation capable of being multivalent may be reduced at the cathode. An exemplary net reaction is

$$LaNi_5H_6 + KOH + FeCl_3 \text{ or } Fe(OH)_3 \text{ to } KCl$$

or

$$KOH + FeCl_2 \text{ or } Fe(OH)_2 + LaNi_5H_5 + H_2O \quad (215)$$

In the case that the compound comprising a cation capable of being multivalent is insoluble, it may comprise a cathode half-cell reactant. It may be mixed with a conductive support such as carbon, a carbide, a boride, or a nitrile. Another hydride of the disclosure or a metal may serve as the anode such as one of the group of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W wherein the anode reaction may be given by Eq. (116). The metal may react with the electrolyte such as hydroxide to form hydrogen and catalyst such as at least one of OH and $H_2O$. Other hydroxides that may serve as the electrolyte such as those of the disclosure and may replace KOH. Other salts having a cation capable of being multivalent such as $K_2Sn(OH)_6$ or $Fe(OH)_3$ may replace $FeCl_3$. In an embodiment, the reduction potential of the compound is greater that that of $H_2O$. Exemplary cells are [an oxidizable metal such as one of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W, a metal hydride such as $LaNi_5H_6$, or $H_2$ and a hydrogen permeable membrane such as one of V, Nb, Fe, Fe-Mo alloy, W, Mo, Rh, Ni, Zr, Be, Ta, Rh, Ti, Th, Pd, Pd-coated Ag, Pd-coated V, and Pd-coated Ti/KOH (sat aq) + salt having a cation capable of being multivalent such as $K_2Sn(OH)_6$, $Fe(OH)_3$, or $FeCl_3$/conductor such as carbon or powdered metal], [an oxidizable metal such as one of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W, a metal hydride such as $LaNi_5H_6$, or $H_2$ and a hydrogen permeable membrane such as one of V, Nb, Fe, Fe-Mo alloy, W, Mo, Rh, Ni, Zr, Be, Ta, Rh, Ti, Th, Pd, Pd-coated Ag, Pd-coated V, and Pd-coated Ti/KOH (sat aq)/ salt having a cation capable of being multivalent such as $Fe(OH)_3$, $Co(OH)_3$, $Mn(OH)_3$, $Ni_2O_3$, or $Cu(OH)_2$ mixed with a conductor such as carbon or powdered metal], [Ni($H_2$), V($H_2$), Ti($H_2$), Nb($H_2$), Pd($H_2$), PdAg($H_2$), Fe($H_2$), or 430 SS($H_2$)/LiOH-LiX, NaOH-NaX, KOH-KX, RbOH-RbX, CsOH-CsX, $Mg(OH)_2$-$MgX_2$, $Ca(OH)_2$-$CaX_2$, $Sr(OH)_2$-$SrX_2$, or $Ba(OH)_2$-$BaX_2$ wherein X =F, Cl, Br, or I and salt having a cation capable of being multivalent such as $K_2Sn(OH)_6$, $Fe(OH)_3$, or $FeCl_3$/Ni], [Ni($H_2$), V($H_2$), Ti($H_2$), Nb($H_2$), Pd($H_2$), PdAg($H_2$), Fe($H_2$), or 430 SS($H_2$)/$CsNO_3$-CsOH, CsOH-KOH, CsOH-LiOH, CsOH-NaOH, CsOH-RbOH, $K_2CO_3$-KOH, KBr-KOH, KCl-KOH, KF-KOH, KI-KOH, $KNO_3$-KOH, KOH-$K_2SO_4$, KOH-LiOH, KOH-NaOH, KOH-RbOH, $Li_2CO_3$-LiOH, LiBr-LiOH, LiCl-LiOH, LiF-LiOH, LiI-LiOH, $LiNO_3$-LiOH, LiOH-NaOH, LiOH-RbOH, $Na_2CO_3$-NaOH, NaBr-NaOH, NaCl-NaOH, NaF-NaOH, NaI-NaOH, $NaNO_3$-NaOH, NaOH-$Na_2SO_4$, NaOH-RbOH, RbCl-RbOH, and $RbNO_3$-RbOH + salt having a cation capable of being multivalent such as $K_2Sn(OH)_6$, $Fe(OH)_3$, or $FeCl_3$/Ni], [Ni($H_2$), V($H_2$), Ti($H_2$), Nb($H_2$), Pd($H_2$), PdAg($H_2$), Fe($H_2$), or 430 SS($H_2$)/LiOH, NaOH, KOH, RbOH, CsOH, $Mg(OH)_2$, $Ca(OH)_2$, $Sr(OH)_2$, or $Ba(OH)_2$ + one or more of $AlX_3$, $VX_2$, $ZrX_2$, $TiX_3$, $MnX_2$, $ZnX_2$, $CrX_2$, $SnX_2$, $InX_3$, $CuX_2$, $NiX_2$, $PbX_2$, $SbX_3$, $BiX_3$, $CoX_2$, $CdX_2$, $GeX_3$, $AuX_3$, $IrX_3$, $FeX_3$, $HgX_2$, $MoX_4$, $OsX_4$, $PdX_2$, $ReX_3$, $RhX_3$, $RuX_3$, $SeX_2$, $AgX_2$, $TcX_4$, $TeX_4$, TlX, and $WX_4$ wherein X =F, Cl, Br, or I + salt having a cation capable of being multivalent such as $K_2Sn(OH)_6$, $Fe(OH)_3$, or $FeCl_3$/Ni], [LaNi5H/KOH (sat aq)/organometallic such as ferrocenium SC], and [$LaNi_5H_6$/KOH (sat aq)/ organometallic such as ferrocenium]. The cell may regenerated by electrolysis or mechanically.

In an embodiment, the hydrino reaction is propagated by a source of activation energy. The activation energy may be provided by at least one of heating and a chemical reaction. In an embodiment comprising an aqueous cell or solvent or reactant that is volatile at the elevated operating temperature of the cell, the cell is pressurized wherein the cell housing or at least one half-cell compartment comprises a pressure vessel. The chemical reaction to provide the activation energy may be an oxidation or reduction reaction such as the reduction of oxygen at the cathode or the oxidation of $OH^-$ and reaction with H to $H_2O$ at the anode. The source of H may be a hydride such as $LaNi_5H_6$. The anode reaction may also comprise the oxidation of a metal such as Zn, Co, Sn, Pb, S, In, Ge, and others of the disclosure. The reduction of a cation capable of being multivalent such as one of $Fe^{3+}$ ($Fe^{2+}$), $Cr^{3+}$ ($Cr^{2+}$), $Mn^{3+}$ ($Mn^{2+}$), $Co^{3+}$ ($Co^{2+}$), $Ni^{3+}$ ($Ni^{2+}$), $Cu^{2+}$ ($Cu^{+}$), and $Sn^{4+}$ ($Sn^{2+}$) may provide the activation energy. The permeation of H formed at the cathode that permeates through a hydrogen permeable membrane and forms a compound such as a metal hydride such as LiH may provide the activation energy. In an embodiment, the reactions of the CIHT cell are also used to produce heat for

purposes such as maintaining the operation of the cell such as supplying the activation energy of the reactions or maintaining the molten electrolyte where used. The thermal output may also be used for heating an external load. Alternatively, the reactions may be performed without electrodes to generate heat to maintain the hydrino reaction and supply heat to an external load. In an embodiment of the intermittent electrolytic cell, such as [PtTi/$H_2SO_4$ (aq 5M)/PtTi] intermittent charge-discharge, the electrodes may be shorted or shorted through a resistive heater during discharge to produce heat that may be dissipated in the CIHT cell.

In an embodiment, an oxygen species such as at least one of $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$ may undergo an oxidative reaction with a H species such as at least one of $H_2$, H, $H^+$, $H_2O$, $H_3O^+$, OH, $OH^+$, $OH^-$, HOOH, and $OOH^-$ to form at least one of OH and $H_2O$ that serves as the catalyst to form hydrinos. The source of the H species may be at least one of a compound such as a hydride such as $LaNi_5H_6$, hydroxide, or oxyhydroxide compound, $H_2$ or a source of $H_2$, and a hydrogen permeable membrane such as Ni($H_2$), V($H_2$), Ti($H_2$), Fe($H_2$), or Nb($H_2$). The O species may be provided by a reduction reaction of $H_2O$ or $O_2$ at the cathode. The source of $O_2$ of the O species may be from air. Alternatively, the O species may be supplied to the cell. Suitable sources of the O species such as $OH^-$, HOOH, $OOH^-$, $O^-$, $O^{2-}$, $O_2^-$, and $O_2^{2-}$ are oxides, peroxides such as those of alkali metals, superoxides such as those of alkali and alkaline earth metals, hydroxides, and oxyhydroxides such as those of the disclosure. Exemplary oxides are those of transition metals such as NiO and CoO and Sn such as SnO, alkali metals such as $Li_2O$, $Na_2O$, and $K_2O$, and alkaline earth metal such as MgO, CaO, SrO, and BaO. The source oxide such as NiO or CoO may be added to a molten salt electrolyte. Further exemplary oxides are one from the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W. Exemplary cells are [Ni($H_2$), V($H_2$), Ti($H_2$), Fe($H_2$), or Nb($H_2$) or a hydride such as $LaNi_5H_6$/eutectic salt electrolyte comprising an alkali hydroxide such as LiOH-NaOH, LiOH-LiX, NaOH-NaX (X = halide or nitrate) or LiOH-$Li_2X$ or NaOH-$Na_2X$ (X = sulfate or carbonate) and $Li_2O$, $Na_2O$, $K_2O$, MgO, CaO, SrO, or BaO, or an oxide of, Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, or W, a peroxide such as those of alkali metals, or a superoxide such as those of alkali and alkaline earth metals/Ni or other metal that may be the same as that of the anode].

In an embodiment, $OH^-$ may be oxidized and reacted with H at the anode to form $H_2O$ that may serve as the catalyst for H to form hydrinos. In both cases, the H may be from a source such as a hydride such as $LaNi_5H_6$ or $H_2$ that may permeate through a membrane such as Ni, Ti, V, Nb, Pd, PdAg, or Fe from a hydrogen source such as a tank or supply 640 flowed through a line 642 and a regulator 644 (FIGURE 5). The source may be an aqueous electrolysis cell 640 with a $H_2$ and $O_2$ separator to supply substantially pure $H_2$. $H_2O$ may be reduced to $H_2$ and $OH^-$ at the cathode. In an embodiment shown in FIGURE 5, the CIHT cell comprises $H_2O$ and $H_2$ collection and recycling systems. The CIHT 650 cell comprises a vessel 651, a cathode 652, an anode 653, a load 654, an electrolyte 655, and a system 657 to collect $H_2O$ vapor from the CIHT cell such as that formed at the anode. The $H_2O$ collection system comprises a first chamber 658 connected to the cell to receive $H_2O$ vapor through a vapor passage 659 from the cell to the $H_2O$ collection chamber 658. The collection system comprises at least one of an $H_2O$ absorber and a $H_2O$ condenser 660. The collected water may be returned to the CIHT cell as $H_2O$ vapor or liquid water through a passage 661 assisted by pump 663 or by the pressure created by heating the collected water with heater 665. The flow of water and the pressure of any vapor may be controlled in the chamber by valves 666, 667, and 668, monitored by a gauge 669. The water may be returned to the cathode 652 which may be porous to the returned $H_2O$. The CIHT cell further comprises a system 671 to collect $H_2$ from the CIHT cell. The $H_2$ collection system comprises a second chamber 672 containing a $H_2$ getter 673 wherein un-reacted $H_2$ from the anode source and $H_2$ formed at the cathode may be collected by the $H_2$ getter. The $H_2$ having water at least partially removed by the $H_2O$ collection system flows from the first chamber to the second through gas passage 675. In an embodiment, a $H_2$ selective membrane exists between the chambers to prevent $H_2O$ from entering the second chamber and reacting with the getter. The getter may comprise a transition metal, alkali metal, alkaline earth metal, inner transition metal, rare earth metal, combinations of metals, alloys, and hydrogen storage materials such as those of the disclosure. The collected $H_2$ may be returned to the CIHT cell through a passage 676 assisted by pump 678 or by the pressure created by heating the getter or collected $H_2$ with heater 680. The flow of $H_2$ and the pressure may be controlled in the chamber by valves 681 and 682, monitored by a gauge 684. The getter may collect hydrogen with the value 681 open and valve 682 closed to the cell wherein the heater maintains it at one temperature suitable for reabsorbing $H_2$. Then, the value 681 may be closed and the temperature increased to a temperature that causes the hydrogen to be release to a desired pressure measured with gauge 684. Valve 682 may be opened to allow the pressurized hydrogen to flow to the cell. The flow may be to the anode 653 comprising a $H_2$ permeable wall. Valve 682 may be closed, the heater 680 reduced in temperature, and the valve 681 opened to collect $H_2$ with the getter 673 in a repeated cycle. In an embodiment, the power to the heater, valves, and gauges may be provided by the CIHT cell. In an embodiment,

the temperature difference between the collection systems and cells may be used to achieve the desired pressures when introducing $H_2$ or $H_2O$ into the cell. For example, $H_2$ may be at a first temperature and pressure in a sealed chamber that is immersed in the hot salt to achieve a second higher pressure at the higher salt temperature. In an embodiment, the CIHT cell comprises a plurality of hydrogen permeable anodes that may be supplied hydrogen through a common gas manifold.

In another embodiment of the system shown in FIGURE 5, an $O_2$ source is supplied at the cathode 651 such as at least one of air, $O_2$, oxide, $H_2O$, HOOH, hydroxide, and oxyhydroxide. The source of oxygen may also be supplied to the cell through selective valve or membrane 646 that may be a plurality wherein the membrane is $O_2$ permeable such as a Teflon membrane. Then, system 657 comprises a separator of $H_2$ and other cell gases such as at least one of nitrogen, water vapor, and oxygen wherein system 671 collects the unused hydrogen and returns it to the cell such as through the $H_2$ permeable anode 653. The system 657 may condense water. System 667 may in addition or optionally comprise a selective $H_2$ permeable membrane and valve 668 that may be at the outlet of system 657 that retains $O_2$, $N_2$, and possibly water and permits $H_2$ to selectively pass to system 671. In an embodiment, the vapor pressure of water is controlled at one or more of the cathode 651 and the cell to control the cell power output.

In an embodiment, the $H_2$ permeable electrode is replaced with a $H_2$ bubbling anode 653. $H_2$ may be recycled without removing $H_2O$ using at least one pump such as 678. If oxygen is supplied to the cell such as through selective valve or membrane 646 or at the $O_2$ porous cathode 652, then it may be removed from the $H_2$ by system 657. An exemplary porous electrode to supply at least one of $H_2$, $H_2O$, air, and $O_2$ by sparging comprises a tightly bound assembly of a Ni porous body (Celmet #6, Sumitomo Electric Industries, Ltd.) within an outer alumina tube. If air is supplied to the cell than $N_2$ is optionally removed from the re-circulated $H_2$ gas. Any $H_2$ consumed to form hydrinos or lost from the system may be replaced. The $H_2$ may be replaced from the electrolysis of $H_2O$. The power for the electrolysis may be from the CIHT cell.

The hydrogen permeation rate or flow rate for the permeation and bubbling anodes, respectively, is controlled to optimize the power gain due to the hydrino reaction relative to the conventional reaction of hydrogen and oxygen form to water. Considering the active surface area such as that defined by the physical dimensions of the external surface exposed to the electrolyte, suitable flow rates are in the ranges of about $10^{-12}$ to $10^{-2}$ moles $cm^{-2}$ $s^{-1}$, about $10^{-11}$ to $10^{-6}$ moles $cm^{-2}$ $s^{-1}$, about $10^{-10}$ to $10^{-7}$ moles $cm^{-2}$ $s^{-1}$, and about $10^{-9}$ to $10^{-8}$ moles $cm^{-2}$ $s^{-1}$. The cathode reduction rate of at least one of $O_2$, $H_2O$, and mixtures of $O_2$ and $H_2O$ such as in air may be any desirable rate to maintain the cell reaction of a given hydrogen permeation or flow rate at the anode. Suitable reduction rates expressed as a current per effective surface are in the ranges of about 0.001 to 1000 mA $cm^{-2}$, about 0.1 to 100 mA cm' $^2$, and about 0.5 to 10 mA $cm^{-2}$. In an embodiment, the cathode gas may comprise a mixture of $O_2$, $H_2O$, and $N_2$. The mole fractions may be any desired. Suitable mole fractions are about those of air ($O_2$ ~20%, $N_2$ ~80, $H_2O$ -0.5-3%), but any given component may be changed by to be in the range of about 0.1 to 99 mole %. In other embodiments, the $O_2/N_2/$ $H_2O$ mole %s are in the range of about 1 to 99%, 1 to 99%, and 0.0001 to 99%, respectively, the total comprising about 100%. Other gases such as Ar of air may be present as well. In an embodiment, $CO_2$ is scrubbed from the gas entering the cell.

In an embodiment, the CIHT cell comprises a coaxial design wherein the $H_2$ permeation permeation tube is in the center and electrolyte and cathode tube are concentrically outward with the outer tube serving as the cathode. In other designs, the electrodes are opposing $H_2$ permeation of diffusion anodes and cathodes that may comprise an air diffusion electrode. The design may be similar to that of the aqueous alkaline cell.

In an embodiment to produce increased binding energy hydrogen species and compounds and thermal energy, the cell shown in FIGURE 5 may comprise a hydrogen permeable membrane and hydrogen chamber 653 to supply H and may be absent the cathode 652. Then, a hydrino thermal reactor comprises a hydrogen permeable membrane 653 separating a hydrogen chamber filled defined by the enclosing membrane 653 with pressurized hydrogen and a reaction chamber 655 filled with a basic solution and an oxidant having the capability of reacting with hydrogen to form at least the catalysts nH, OH, nO, $O_2$, and $H_2O$ (n = integer) for forming hydrinos. The hydrogen permeable membrane and hydrogen chamber 653 may have a large surface area. A suitable system is a long coiled tube such as a Ni tube or a tube of another material of the disclosure such as a Ni coated V, Ta, Ti, stainless steel (SS) 430, or Nb. In an embodiment, the hydrogen is permeated across the membrane into the reaction chamber to cause the catalyst and atomic H to form in the reaction chamber, and thermal power is generated by the formation of hydrinos. The reactor may further comprise inlet and outlet lines such as 659 to deliver oxidant or other reaction chamber reactants and remove reaction chamber products. The cell may be operated continuously. The reaction products may be regenerated by methods of the disclosure, methods disclosed in my prior applications: Hydrogen Catalyst Reactor, PCT/US08/61455, filed PCT 4/24/2008; Heterogeneous Hydrogen Catalyst Reactor, PCT/US09/052072, filed PCT 7/29/2009; Heterogeneous Hydrogen Catalyst Power System, PCT/US10/27828, PCT filed 3/18/2010; and Electrochemical Hydrogen Catalyst Power System, PCT/US11/28889, filed PCT 3/17/2011 herein incorporated by reference in their entirety, or known to those skilled in the art. The hydrogen chamber may have a hydrogen line such as 676 and systems such as tank or supply 640, line 642, and regulator 644 to monitor and control the hydrogen pressure and flow. In an embodiment, the $H_2$ and the oxidant $O_2$ may be produced by the electrolysis unit 640. In another embodiment, the cell may comprise the hydrogen permeable

membrane 653 wherein H may react with a source of oxygen such as $OH^-$ or an oxyanion such as those of the disclosure to form at least one of OH and $H_2O$ that may serve as the catalyst for additional H to form hydrino. In a concerted manner, an oxidant may undergo reduction. The reduction reaction may form the oxyanion such as $OH^-$. The reaction may comprise the redox reaction of fuel cell embodiments of the disclosure. The cell may further comprise the cathode 652 that may be electrically connected to the hydrogen membrane that serves as an anode. Alternatively, a vessel wall such as 651 may serve as the counter electrode for the reduction reaction. The oxidant may comprise oxygen that may be supplied to the cell 655 intermittently or continuously. The oxidant may be supplied at the cathode.

The solution may comprise a base such as at least one of the group of MOH, $M_2CO_3$ (M is alkali), $M'(OH)_2$, $M'CO_3$, (M' is alkaline earth), $M''(OH)_2$, $MCO_3$, (M" is a transition metal), rare earth hydroxides, $Al(OH)_3$, $Sn(OH)_2$, $In(OH)_3$, $Ga(OH)_3$, $Bi(OH)_3$, and other hydroxides and oxyhydroxides of the disclosure. The solvent may be aqueous or others of the disclosure. The hydrogen may permeate through the membrane and react with $OH^-$ to form at least one of OH and $H_2O$ that may serve as the catalyst to form hydrinos. The reaction mixture may further comprise an oxidant to facilitate the reaction to form at least one of OH and $H_2O$ catalyst. The oxidant may comprise $H_2O_2$, $O_2$, $CO_2$, $SO_2$, $N_2O$, NO, $NO_2$, or another compounds or gases that serve as a source of O or as an oxidant as given in the disclosure or known to those skilled in the Art. Other suitable exemplary oxidants are $P_2O_5$, $CoO_2$, $MnO_2$, $Mn_2O_3$, $M_2S_2O_8$, $MNO_3$, $MMnO_4$, MOCl, $MClO_2$, $MClO_3$, $MClO_4$ (M is an alkali metal), and oxyhydroxides such as $WO_2(OH)$, $WO_2(OH)_2$, VO(OH), $VO(OH)_2$, $VO(OH)_3$, $V_2O_2(OH)_2$, $V_2O_2(OH)_4$, $V_2O_2(OH)_6$, $V_2O_3(OH)_2$, $V_2O_3(OH)_4$,$V_2O_4(OH)_2$, FeO(OH), MnO(OH), $MnO(OH)_2$, $Mn_2O_3(OH)$, $Mn_2O_2(OH)_3$, $Mn_2O(OH)_5$, $MnO_3(OH)$, $MnO_2(OH)_3$, $MnO(OH)_5$, $Mn_2O_2(OH)_2$, $Mn_2O_6(OH)_2$, $Mn_2O_4(OH)_6$, NiO(OH), TiO(OH), $TiO(OH)_2$, $Ti_2O_3(OH)$, $Ti_2O_3(OH)_2$, $Ti_2O_2(OH)_3$, $Ti_2O_2(OH)_4$, and NiO(OH). In general, the oxidant may be $M_xO_yH_z$ wherein x, y, and z are integers and M is a metal such as a transition, inner transition, or rare earth metal such as metal oxyhydroxides. The oxidant may comprise a source of oxygen that reacts with hydrogen to from the catalyst such as at least one of OH and $H_2O$. For x and y being integers, suitable sources of oxygen source are $O_2$, $H_2O_2$, $MnO_2$, an oxide, an oxide of carbon, preferably CO or $CO_2$, an oxide of nitrogen, $N_xO_y$ such as $N_2O$ and $NO_2$, an oxide of sulfur, $S_xO_y$, preferably an oxidant such as $M_2S_xO_y$ (M is an alkali metal), $Cl_xO_y$ such as $Cl_2O$, $ClO_2$, $NaClO_2$, concentrated acids and their mixtures such as $HNO_2$, $HNO_3$, $H_2SO_4$, $H_2SO_3$, an acid that forms nitronium ion ( $NO_2^+$ ), NaOCl, $I_xO_y$, such as $I_2O_5$, $P_xO_y$, $S_xO_y$, an oxyanion of an inorganic compound such as one of nitrite, nitrate, chlorate, sulfate, phosphate, a metal oxide such as cobalt oxide, hydroxide, an oxyhydroxide, a perchlorate, and a peroxide such as $M_2O_2$ where M is an alkali metal, such as $Li_2O_2$, $Na_2O_2$, and $K_2O_2$, and a superoxide such as $MO_2$ where M is an alkali metal, such as $NaO_2$, $KO_2$, $RbO_2$, and $CsO_2$, and alkaline earth metal superoxides. The ionic peroxides may further comprise those of Ca, Sr, or Ba. Other suitable sources of oxygen comprise one or more of the group of $SO_2$, $SO_3$, $S_2O_5Cl_2$, $F_5SOF$, $M_2S_2O_8$, $SO_xX_y$ such as $SOCl_2$, $SOF_2$, $SO_2F_2$, $SOBr_2$, $P_2O_5$, $PO_xX_y$ such as $POBr_3$, $POI_3$, $POCl_3$ or $POF_3$, $TeO_2$, $MNO_3$, MNO, $MNO_2$, $M_2CO_3$, $MHCO_3$, $M_2SO_4$, $MHSO_4$, $M_3PO_4$, $M_2HPO_4$, $MH_2PO_4$, $M_2MoO_4$, $MNbO_3$, $M_2B_4O_7$ (M tetraborate), $MBO_2$, $M_2WO_4$, $M_2CrO_4$, $M_2Cr_2O_7$, $M_2TiO_3$, $MZrO_3$, $MAlO_2$, $MCoO_2$, $MGaO_2$, $M_2GeO_3$, $MMn_2O_4$, $M_4SiO_4$, $M_2SiO_3$, $MTaO_3$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, and $MZnO_n$, where M is alkali and n=1, 2,3, or 4, an oxyanion, an oxyanion of a strong acid, an oxidant, a molecular oxidant such as $V_2O_3$, $I_2O_5$, $MnO_2$, $Re_2O_7$, $CrO_3$, $RuO_2$, AgO, PdO, $PdO_2$, PtO, $PtO_2$, $I_2O_4$, $I_2O_5$, $I_2O_9$, $SO_2$, $SO_3$, $CO_2$, $N_2O$, NO, $NO_2$, $N_2O_3$, $N_2O_4$, $N_2O_5$, $Cl_2O$, $ClO_2$, $Cl_2O_3$, $Cl_2O_6$, $Cl_2O_7$, $PO_2$, $P_2O_3$, and $P_2O_5$, $NH_4X$ wherein X is a nitrate or other suitable anion known to those skilled in the art such as one of the group comprising $NO_3^-$, $NO_2^-$, $SO_4^{2-}$, $HSO_4^-$, $CoO_2^-$, $IO_3^-$, $IO_4^-$, $TiO_3^-$, $CrO_4^-$, $FeO_2^-$, $PO_4^{3-}$, $HPO_4^{2-}$, $H_2PO_4^-$, $VO_3^-$, $ClO_4^-$ and $Cr_2O_7^{2}$. In another embodiment, the source of O or the O species may comprise at least one compound or admixture of compounds comprising O, $O_2$, air, oxides, NiO, CoO, alkali metal oxides, $Li_2O$, $Na_2O$, $K_2O$, alkaline earth metal oxides, MgO, CaO, SrO, and BaO, oxides from the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, and W, peroxides, alkali metal peroxides, superoxide, alkali or alkaline earth metal superoxides, hydroxides, alkali, alkaline earth, transition metal, inner transition metal, and Group III, IV, or V, hydroxides, oxyhydroxides, AlO(OH), ScO(OH), YO(OH), VO(OH), CrO(OH), MnO(OH) ($\alpha$-MnO(OH) groutite and $\gamma$-MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. The compound such as a metal oxide may be a nanopowder. The particle size may be in the range of about 1 nm to 100 micrometers, 10 nm to 50 micrometers, or 50 nm to 10 micrometers.

The cell may be operated at elevated temperature such as in the temperature range of about 25 °C to 1000 °C, or about 200 °C to 500 °C. The vessel 651 may be a pressure vessel. The hydrogen may be supplied at high pressure such as in the range of about 2 to 800 atm or about 2 to 150 atm. An inert gas cover such as about 0.1 to 10 atm of $N_2$ or Ar may be added to prevent boiling of the solution such as an aqueous solution. The reactants may be in any desired

molar concentration ratio. An exemplary cell is Ni($H_2$ 50-100 atm) KOH + $K_2CO_3$ wherein the KOH concentration is in the molar range of 0.1 M to saturated an the $K_2CO_3$ concentration is in the molar range of 0.1 M to saturated with the vessel at an operating temperature of about 200-400 °C. In another embodiment, the base may comprise a molten salt such as a hydroxide melt. The melt may further comprise at least one other compound such as a salt such as a metal halide. The mixture may be a eutectic mixture. Suitable hydroxide mixtures are given in TABLE 4. The mixture may further comprise at least some $H_2O$ such as 0.1 to 95 wt%, 0.1 to 50 wt%, 0.1 to 25 wt%, 0.1 to 10 wt%, 0.1 to 5 wt%, or 0.1 to 1 wt%. In another embodiment, the $H_2$ permeation membrane may be replaced by a $H_2$ bubbling or sparing electrode such as those of the disclosure. The hydrogen source may comprise a porous material such as tightly bound assembly of a metal porous body (e.g. Ni such as Celmet #4, #6, or #8, Sumitomo Electric Industries, Ltd.) around a hydrogen line that may further comprise an outer alumina tube wherein hydrogen gas is sparged through the tube and diffused over the surface of the porous material in contact with the melt. In an embodiment, unreacted $H_2$ is collected and recycled. The hydrogen may be separated from any other gases present by known means such as membrane separation, selective reaction of co-gases, or cryo-separtion methods. Hydrogen consumed to form hydrino and any water may be added back to the supply to the cell.

In embodiments, the membrane material, thickness, and hydrogen pressure are selected to achieve the desired permeation rate. In an embodiment, the cell temperature is in the range of about 25 to 2000 °C, 100 to 1000 °C, 200 to 750 °C, or 250 to 500 °C. If the cell comprises a permeation membrane and a molten reaction mixture, the cell temperature is maintained above the melting point of the mixture and at the level that achieves the desired permeation rate. Thus, in an embodiment, the cell temperature is maintained at least the melting point of the reactants and higher. The temperature above the melting point may be in the range of about 0 to 1500 °C higher, 0 to 1000 °C higher, 0 to 500 °C higher, 0 to 250 °C higher, or 0 to 100 °C higher. The membrane thickness may be in the range of about 0.0001 to 0.25 cm, 0.001 to 0.1 cm, or 0.005 to 0.05 cm. The hydrogen pressure may be maintained in the range of about 1 Torr to 1000 atm, 10 Torr to 100 atm, or 100 Torr to 5 atm. The hydrogen permeation rate may be in the range of about 1 X $10^{-13}$ mole $s^{-1}$ $cm^{-2}$ to 1 X $10^{-4}$ mole $s^{-1}$ $cm^{-2}$, $1 \times 10^{-12}$ mole $s^{-1}$ $cm^{-2}$ to $1 \times 10^{-5}$ mole $s^{-1}$ $cm^{-2}$, $1 \times 10^{-11}$ mole $s^{-1}$ $cm^{-2}$ to $1 \times 10^{-6}$ mole $s^{-1}$ $cm^{-2}$, $1 \times 10^{-10}$ mole $s^{-1}$ $cm^{-2}$ to $1 \times 10^{-7}$ mole $s^{-1}$ $cm^{-2}$, or $1 \times 10^{-9}$ mole $s^{-1}$ $cm^{-2}$ to $1 \times 10^{-8}$ mole $s^{-1}$ $cm^{-2}$. The hydrogen flow rate per geometric area of the $H_2$ bubbling or sparging hydrogen souce may be in the range of about $1 \times 10^{-13}$ mole $s^{-1}$ $cm^{-2}$ to $1 \times 10^{-4}$ mole $s^{-1}$ $cm^{-2}$, $1 \times 10^{-12}$ mole $s^{-1}$ $cm^{-2}$ to $1 \times 10^{-5}$ mole $s^{-1}$ $cm^{-2}$, $1 \times 10^{-11}$ mole $s^{-1}$ $cm^{-2}$ to $1 \times 10^{-6}$ mole $s^{-1}$ $cm^{-2}$, $1 \times 10^{-10}$ mole $s^{-1}$ $cm^{-2}$ to $1 \times 10^{-7}$ mole $s^{-1}$ $cm^{-2}$, or $1 \times 10^{-9}$ mole $s^{-1}$ $cm^{-2}$ to $1 \times 10^{-8}$ mole $s^{-1}$ $cm^{-2}$. In an embodiment of a porous electrode materials, the pore size is in the range of about 1 nm to 1 mm, 10 nm to 100 $\mu$m, or 0.1 to 30 $\mu$m.

In an embodiment of another chemical reactor to form increased binding energy hydrogen species and compounds and a thermal system, nH (n = integer) may serve as the catalyst. The reaction mixture may comprise an element or compound that may form a hydride such as a hydrogen storage material and a source of hydrogen. The material may be reversibly hydrided and dehydrided to cause the formation of atomic hydrogen that serves as the reactant and catalyst to form hydrinos. The hydrogen storage material such as a metal that forms a hydride may one or more of be those of the disclosure. Suitable exemplary corresponding metal hydrides are at least one chosen from R-Ni, $LaNi_5H_6$, $La_2Co_1Ni_9H_6$, $ZrCr_2H_{3.8}$, $LaNi_{3.55}Mn_{0.4}Al_{0.3}Co_{0.75}$, $ZrMn_{0.5}Cr_{0.2}V_{0.1}Ni_{1.2}$, and other alloys capable of storing hydrogen such as one chosen from $AB_5$ (LaCePrNdNiCoMnAl) or $AB_2$ (VTiZrNiCrCoMnA1Sn) type, where the "$AB_x$" designation refers to the ratio of the A type elements (LaCePrNd or TiZr) to that of the B type elements (VNiCrCoMnAlSn), $AB_5$-type, $MmNi_{3.2}Co_{1.0}Mn_{0.6}Al_{0.11}Mo_{0.09}$ (Mm = misch metal: 25 wt% La, 50 wt% Ce, 7 wt% Pr, 18 wt% Nd), $AB_2$-type: $Ti_{0.51}Zr_{0.49}V_{0.70}Ni_{1.18}Cr_{0.12}$ alloys, magnesium-based alloys, $Mg_{1.9}Al_{0.1}Ni_{0.8}Co_{0.1}Mn_{0.1}$ alloy, $Mg_{0.72}Sc_{0.28}(Pd_{0.012}$ + $Rh_{0.012})$, and $Mg_{80}Ti_{20}$, $Mg_{80}V_{20}$, $La_{0.8}Nd_{0.2}Ni_{2.4}C_{02.5}Si_{0.1}$, $LaNi_{5-x}M_x$ (M= Mn, Al), (M= Al, Si, Cu), (M= Sn), (M= Al, Mn, Cu) and $LaNi_4Co$, $MmNi_{3.55}Mn_{0.44}Al_{0.3}Co_{0.75}$, $LaNi_{3.55}Mn_{0.44}Al_{0.3}Co_{0.75}$, $MgCu_2$, $MgZn_2$, $MgNi_2$, AB compounds, TiFe, TiCo, and TiNi, $AB_n$ compounds (n = 5, 2, or 1), $AB_{3-4}$ compounds, $AB_x$ (A = La, Ce, Mn, Mg; B = Ni, Mn, Co, Al), $ZrFe_2$, $Zr_{0.5}Cs_{0.5}Fe_2$, $Zr_{0.8}Sc_{0.2}Fe_2$, $YNi_5$, $LaNi_5$, $LaNi_{4.5}Co_{0.5}$, (Ce, La, Nd, Pr)$Ni_5$, Mischmetal-nickel alloy, $Ti_{0.98}Zr_{0.02}V_{0.43}Fe_{0.09}Cr_{0.05}Mn_{1.5}$, $La_2Co_1Ni_9$, FeNi, and $TiMn_2$. The reversible hydride material may be a nanopowder. The particle size may be in the range of about 1 nm to 100 micrometers, 10 nm to 50 micrometers, or 50 nm to 10 micrometers. The cell may be maintained or cycled in a temperature range. In an embodiment, the cell temperature is in the range of about 25 to 2000 °C, 100 to 1000 °C, 200 to 750 °C, or 250 to 500 °C. In an embodiment to hydride and dehydride the material, the cell pressure is maintained or cycled in a range. The hydrogen pressure may be maintained in the range of about 0.001 mTorr to 1000 atm, 10 Torr to 100 atm, or 100 Torr to 5 atm.

In an embodiment, the reaction mixture to form increased binding energy hydrogen species and compounds such as hydrinos comprises a source of hydrogen such as hydrogen gas and a source of oxygen such as an oxidant comprising oxygen or oxygen gas. The hydrogen may react with oxygen to form at least one of nH, O, nO, $O_2$, OH, and $H_2O$ (n = integer) that may serve as the catalyst. The reaction mixture may also comprise a hydrogen dissociator such as those of the disclosure such as R-Ni or a noble metal on a support such as Ti or $Al_2O_3$. The reaction mixture may further comprise at least one other element or compound such as an alkali or alkaline earth halide to form a compound comprising a hydride such as MH or MHX (M = alkali metal, X = halide) or $MH_2$ or $MHX_2$ (M = alkaline earth metal, X =

halide). An exemplary reaction mixture is $H_2$ gas, oxidant $KHSO_4$, and LiCl run at an elevated temperature such as 300 to 1000 °C, or about 400 to 600 °C and at about 0.1 to 100 atm $H_2$ or about 2 to 5 atm $H_2$. In other embodiments, the reaction mixtures comprise those disclosed in my prior applications: Hydrogen Catalyst Reactor, PCT/US08/61455, filed PCT 4/24/2008; Heterogeneous Hydrogen Catalyst Reactor, PCT/US09/052072, filed PCT 7/29/2009; Heterogeneous Hydrogen Catalyst Power System, PCT/US10/27828, PCT filed 3/18/2010; and Electrochemical Hydrogen Catalyst Power System, PCT/US11/28889, filed PCT 3/17/2011 herein incorporated by reference in their entirety. Suitable reaction mixtures are those that form $H_2O$ and atomic hydrogen during the reaction of the reactants.

In embodiments, the cell may comprise one or more types known by those skilled in the Art such as a cell comprising (i) with free liquid electrolyte, (ii) liquid electrolyte in the a pore system, (iii) a matrix cell wherein the electrolyte is fixed in an electrode matrix, and (iv) a falling film cell. In an embodiment, the electrolyte may be circulated by means known by those skilled in the Art. The system may comprise a pump, a tank, and a heat exchanger, a COz scrubber and filter, and optionally other processing systems and an air blower to supply air to the stack. This allows for processing of the electrolyte to remove products or impurities such as NiO and carbonate, maintain a desired composition, and desired temperature.

In an embodiment, the aqueous alkaline cell comprises a one-membrane, twocompartment cell shown in FIGURE 2 with the alteration that the anode membrane and compartment 475 may be absence. The anode may comprise a metal that is oxidized in the reaction with $OH^-$ to $H_2O$ as given by Eq. (116). At least one of OH and $H_2O$ may serve as the catalyst. The anode metal may be one of the group of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W. Alternatively, the anode may comprise a hydride such as $LaNi_5H_6$ and others of the disclosure that provides H and oxidizes $OH^-$ to $H_2O$ as given by Eq. (92). The anode may also comprise a $H_2$ permeable membrane 472 and a source of hydrogen such as $H_2$ gas that may be in compartment 475 that provides H and oxidizes $OH^-$ to $H_2O$ as given by Eq. (123). At the cathode, $H_2O$ may be reduced to $H_2$ and $OH^-$ as given by Eq. (94). The cathode 473 may comprise a metal that has a high permeability to hydrogen. The electrode may comprise a geometry that provides a higher surface area such as a tube electrode, or it may comprise a porous electrode. To increase at least one of the rate and yield of the reduction of water, a water reduction catalyst may be used. In another embodiment, the cathode half cell reactants comprise a H reactant that forms a compound with H that releases energy to increase at least one of the rate and yield of $H_2O$ reduction. The H reactant may be contained in the cathode compartment 474. The H formed by the reduction of water may permeate the hydrogen permeable membrane 473 and react with the H reactant. The H permeable electrode may comprise V, Nb, Fe, Fe-Mo alloy, W, Mo, Rh, Ni, Zr, Be, Ta, Rh, Ti, Th, Pd, Pd-coated Ag, Pd-coated V, Pd-coated Ti, rare earths, other refractory metals, and others such metals known to those skilled in the Art. The H reactant may be an element or compound that forms a hydride such as an alkali, alkaline earth, transition, inner transition, and rare earth metal, alloy, or mixtures thereof, and hydrogen storage materials such as those of the disclosure.

Exemplary reactions are

Cathode Outside Wall

$$H_2O + e\text{-} \text{ to } 1/2H_2 + OH^- \qquad (216)$$

Cathode Inside Wall

$$1/2H_2 + M \text{ to } MH \qquad (217)$$

The chemicals may be regenerated thermally by heating any hydride formed in the cathode compartment to thermally decompose it. The hydrogen may be flowed or pumped to the anode compartment to regenerate the initial anode reactants. The regeneration reactions may occur in the cathode and anode compartments, or the chemicals in one or both of the compartments may be transported to one or more reaction vessels to perform the regeneration. Alternatively, the initial anode metal or hydride and cathode reactant such as a metal may be regenerated by electrolysis in situ or remotely. Exemplary cells are [an oxidizable metal such as one of V, Zr, Ti, Mn, Zn, Cr, Sn, In, Cu, Ni, Pb, Sb, Bi, Co, Cd, Ge, Au, Ir, Fe, Hg, Mo, Os, Pd, Re, Rh, Ru, Se, Ag, Tc, Te, Tl, and W, a metal hydride such as $LaNi_5H_6$, or $H_2$ and a hydrogen permeable membrane such as one of V, Nb, Fe, Fe-Mo alloy, W, Mo, Rh, Ni, Zr, Be, Ta, Rh, Ti, Th, Pd, Pd-coated Ag, Pd-coated V, and Pd-coated Ti/KOH (sat aq)/M(M')] wherein M = a hydrogen permeable membrane such as one of V, Nb, Fe, Fe-Mo alloy, W, Mo, Rh, Ni, Zr, Be, Ta, Rh, Ti, Th, Pd, Pd-coated Ag, Pd-coated V, and Pd-coated Ti and M' is a metal that forms a hydride such as one of an alkali, alkaline earth, transition, inner transition, and rare earth metal, alloy, or mixtures thereof, or a hydrogen storage material. The cell may be run at elevated temperature and pressure.

In an embodiment, at least one of nH, O, nO, OH, and $H_2O$ (n = integer) may serve as the catalyst. H may react with a source of oxygen to form at least one of OH and $H_2O$. The source of oxygen may be an oxyanion. The electrolyte may comprise a compound comprising the oxyanion. Exemplary suitable oxyanions are at least one of hydroxide, carbonate, nitrate, sulfate, phosphate, chromate, dichromate, perchlorate, and periodate. In general, exemplary suitable compounds that serve as sources of oxygen alone or in combination are $MNO_3$, MNO, $MNO_2$, MOH, $M_2CO_3$, $MHCO_3$, $M_2SO_4$, $MHSO_4$, $M_3PO_4$, $M_2HPO_4$, $MH_2PO_4$, $M_2MoO_4$, $MNbO_3$, $M_2B_4O_7$ (M tetraborate), $MBO_2$, $M_2WO_4$, $M_2CrO_4$, $M_2Cr_2O_7$, $M_2TiO_3$, $MZrO_3$, $MAlO_2$, $MCoO_2$, $MGaO_2$, $M_2GeO_3$, $MMn_2O_4$, $M_4SiO_4$, $M_2SiO_3$, $MTaO_3$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, $MZnO_n$, (M is alkali or ammonium and n=1, 2,3, or 4; M may also be another cation such as an alkaline earth, transition, inner transition, or rare earth metal cation, or a Group 13 to 16 cation), and an organic basic salt such as M acetate or M carboxylate. The reaction to form at least one of OH and $H_2O$ as the catalyst to from hydrinos may occur as an oxidation reaction of the oxyanion. The reaction may further involve the reaction with H. The reactions may occur at the anode. The formation of at least one of the catalyst OH and $H_2O$ in the presence of H results in the catalysis of the H to hydrino by the catalyst. Exemplary general reactions wherein E designates an element or compound are

Anode

$$OH^- + H \text{ to } H_2O + e^- \quad (218)$$

$$EO_x^{n-} + 2H \text{ to } H_2O + EO_{x-1}^{(n-m)-} + me^- \quad (219)$$

$$EH_yO_x^{n-} + H \text{ to } H_2O + EH_{y-1}O_{x-1}^{(n-m)-} + me^- \quad (220)$$

Cathode

$$EO_{x-1}^{(n-m)-} + me^- + 1/2O_2 \text{ to } EO_x^{n-} \quad (221)$$

$$EH_{y-1}O_{x-1}^{(n-m)-} + (m+1)e^- + H_2O + 1/2O_2 + EH_yO_x^{n-} + OH^- \quad (222)$$

$$O_2 + 2H_2O + 4e^- \text{ to } 4OH^- \quad (223)$$

In a specific example, suitable reactions to from the catalyst $H_2O$ wherein $CO_3^{2-}$ serves as the source of oxygen are

Anode

$$CO_3^{2-} + 2H \text{ to } H_2O + CO_2 + 2e^- \quad (224)$$

Cathode

$$CO_2 + 1/2O_2 + 2e^- \text{ to } CO_3^{2-} \quad (225)$$

Alternatively, hydrogen may react with the anode that may comprise a metal M' such as Ni or Co to form the corresponding hydride that further reacts by a mechanism such as Anode

$$2M + H_2 \text{ to } 2MH \quad (226)$$

$$MH + CO_3^{2-} \text{ to } OH^- + CO_2 + e^- \tag{227}$$

$$2MH + OH^- \text{ to } 2M + H_2O + e^- + H(1/p) \tag{228}$$

$$MH + 1/2H_2 + OH^- \text{ to } M + H_2O + e^- + H(1/p) \tag{229}$$

Similar reactions may occur for other oxyanions. In other embodiments, another oxyanion and the corresponding oxidized species such as a gas replaces $CO_3^{2-}$ and $CO_2$, respectively. Exemplary anions and gases or compounds are $SO_4^{2-}$, $NO_3^-$, and $PO_4^{3-}$ and $SO_2$, $NO_2$, and $P_2O_5$, respectively. The cell may be supplied with the product gas or compound such as $CO_2$, $SO_2$, or $NO_2$. Alternatively, the gas or compound such as $CO_2$ $SO_2$, or $NO_2$ may be recycled in the cell. The cell may comprise a means such as a semipermeable membrane to retain the gas or compound while maintaining an open cell such as one open to air and optionally at least one of added $O_2$ and $H_2O$. The cell may also comprise lines that supply these gases such as $O_2$ and $H_2O$. The lines may have valves that maintain a directional flow to prevent the escape of the oxyanion oxidation product. In an embodiment, the oxidation product is an element or compound such as S or P. The product may undergo reduction to form the corresponding compound such a sulfide of phosphide. Alternatively, the product reacts with oxygen supplied to the cell to form an oxyanion such as the original reactant oxyanion such as $\bar{S}O_4^{2-}$ or $PO_4^{3-}$. The cell may be closed or semi-closed in the case of intermittent electrolysis wherein the oxygen and hydrogen are generated in situ. Then, make up gases may be added periodically to maintain the electrolyte and source of hydrogen to form hydrinos. Gases such as $CO_2$, $SO_2$, or $NO_2$ may be recycled internally.

In another embodiment to form hydrinos for at least one of production of lower-energy hydrogen species and compounds and production of energy, the reaction mixture comprises a source of atomic hydrogen and a source of catalyst comprising at least one of H and O such those of the disclosure such as $H_2O$ catalyst. The atomic hydrogen may be formed from $H_2$ gas by dissociation. The hydrogen dissociator may be one of those of the disclosure such as R-Ni or a noble metal or transition metal on a support such as Ni or Pt or Pd on carbon or $Al_2O_3$. Alternatively, the atomic H may be from H permeation through a membrane such as those of the disclosure. In an embodiment, the cell comprises a membrane such as a ceramic membrane to allow $H_2$ to diffuse through selectively while preventing diffusion of another species such as $H_2O$ diffusion.

The electrolyte may comprise an aqueous solution or a molten salt. The electrolyte such as at least one of hydroxide, carbonate, nitrate, sulfate, phosphate, chromate, dichromate, perchlorate, and periodate, and mixtures may comprise a eutectic mixture such as at least one of the eutectic salt mixtures of TABLE 4, at least one of further mixtures of the disclosure, or a mixture known in the art. The cell may comprise a source of hydrogen, water, and oxygen. The water may comprise at least one of hydrogen, deuterium, and tritium such as at least one of $H_2O$, HOD, $D_2O$, $T_2O$, DOT, and HOT. Exemplary eutectic salt mixtures are at least two of alkali halide, carbonate, nitrate, sulfate, and hydroxide. The molten electrolyte may further comprise a source of $H_2O$ that may be that absorbed from the atmosphere or supplied as liquid water or vapor to the cell. The cell may comprise an open cell. Oxygen may be from the atmosphere or supplied as a gas. The source of hydrogen may be supplied as a gas by means such as permeation, sparging or bubbling, or by intermittent electrolysis of a source of hydrogen such as electrolysis of an electrolyte comprising some $H_2O$. In an embodiment, the cell operating temperature is below that which would cause corrosion such as corrosion of the electrodes or the vessel. Exemplary cells are [Ni($H_2$)/aqueous or eutectic salt electrolyte of one or more of $MNO_3$, MNO, $MNO_2$, MOH, $M_2CO_3$, $MHCO_3$, $M_2SO_4$, $MHSO_4$, $M_3PO_4$, $M_2HPO_4$, $MH_2PO_4$, $M_2MoO_4$, $MNbO_3$, $M_2B_4O_7$ (M tetraborate), $MBO_2$, $M_2WO_4$, $M_2CrO_4$, $M_2Cr_2O_7$, $M_2TiO_3$, $MZrO_3$, $MAlO_2$, $MCoO_2$, $MGaO_2$, $M_2GeO_3$, $MMn_2O_4$, $M_4SiO_4$, $M_2SiO_3$, $MTaO_3$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, $MZnO_n$, (M is alkali or ammonium and n=1, 2,3, or 4)/Ni + air] wherein the hydrogen electrode may be a permeation, sparging, or intermittent electrolysis electrode. Additional examples are [Ni/LiOH-$Li_2SO_4$/Ni + air intermittent charge-discharge], [Ni/LiOH-$Li_2SO_4$ (aq)/Ni + air intermittent charge-discharge], [Ni or PtTi/$NH_4OH$ (aq)/Ni or PtTi + air intermittent charge-discharge], [Ni/Sr$(OH)_2$ or Ba$(OH)_2$ (aq)/Ni + air intermittent charge-discharge], [PtTi or Ni/$K_2CO_3$ (aq)/Ni or PtTi + air intermittent charge-discharge], and [PtTi or Pd/LiOH (aq)/Pd or PtTi+ air intermittent charge-discharge].

In a CIHT cell embodiment that produces at least one of thermal and electrical energy by forming hydrinos, the H reaction is regenerative, except that a portion of the H inventory is converted to hydrino upon each cycle of a repeated

reaction. Exemplary reactions of hydrogen and carbonate from an electrolyte such as $K_2CO_3$ that may be a hydrated molten or aqueous electrolyte are

$$CO_3^{2-} + H_2O \text{ to } 2OH^- + CO_2 \tag{230}$$

Anode

$$OH^- + 1/2H_2 \text{ to } H_2O + e^- \tag{231}$$

Cathode

$$CO_2 + H_2O + 2e^- \text{ to } CO_3^{2-} + H_2 \tag{232}$$

The anode reaction may also be given by Eq. (224) involving the oxidation of $CO_3^{2-}$ to $H_2O$ to serve as the catalyst. Net, some of the H is converted to H(1/p) wherein at least one of nH, O, nO, OH, and $H_2O$ (n = integer) may serve as the catalyst. The source of hydrogen may be at least one of permeation, sparging or bubbling, and intermittent electrolysis. The reaction may occur in a concerted manner in the absence of electrodes such a in a thermal powergenerating embodiment. A specific thermal embodiment comprises a hydrogen pressurized chamber and a hydrogen permeable membrane that supplies hydrogen by permeation to a second reaction chamber that contains a carbonate such as an alkaline carbonate such as $K_2CO_3$.

In an embodiment, the migrating ion is an oxide ion that reacts with a source of H to form at least one of OH and $H_2O$ that may serve as the catalyst with the source of H. The cathode may comprise a source of oxide ion such as oxygen or a compound comprising O such as an oxide. The cell may comprise at least one of an electrolyte and a salt bridge. The electrolyte may be a hydroxide such as an alkali hydroxide such as KOH that may have a high concentration such as in the range of about 12 M to saturated. The salt bridge may be selective for oxide ion. Suitable salt bridges are yttria-stabilized zirconia (YSZ), gadolinia doped ceria (CGO), lanthanum gallate, and bismuth copper vanadium oxide such as $BiCuVO_x$). Some perovskite materials such as $La_{1-x}Sr_xCo_yO_{3-d}$ also show mixed oxide and electron conductivity. The source of H may be hydrogen gas and a dissociator, a hydrogen permeable membrane, or a hydride. The cathode and anode reactions may be

Anode

$$O^{2-} + 1.5H_2 \text{ to } H_2O + H(1/p) + 2e^- \tag{233}$$

Cathode

$$0.5O_2 + 2e^- \text{ to } O^{2-} \tag{234}$$

The cathode an anode may comprise a catalyst such as nickel or a noble metal such as Pt or Pd. The electrodes may further comprise a support material such as a cermet. Exemplary cells are [PtC($H_2$), Ni($H_2$), $CeH_2$, $LaH_2$, $ZrH_2$ or LiH/YSZ/Ni or Pt ($O_2$ or oxide)].

In an embodiment, H' is a migrating ion and at least one of $H^-$ and $OH^-$ are oxidized at the anode to form at least one of II, OH, and $H_2O$. H may be reduced to $H^-$ at the cathode. The source of H may be a hydride or H from a hydrogen permeable electrode such as one of those of the disclosure. The anode may be a metal that is stable to corrosion such as Ni. The anode may further comprise a hydrogen permeable material such as a metal such as Ni, V, Ti, V, Fe, or Nb that may contain an element or compound that reacts with H that permeates through the electrode. Suitable II reactive elements or compounds are H storage materials such as Li, Mg, La, Ce, and the Li-N-H system. The electrolyte may comprise a hydroxide such as at least one of an alkali, alkaline earth, transition, rare earth, and Group III, IV, V, and VI hydroxide. The electrolyte may further comprise a hydride such as at least one of an alkaline, alkaline earth, transition metal, inner transition metal, and rare earth hydride, and a borohydride, and an aluminum hydride. Exemplary reactions are

Cathode:

$$H + e^- \text{ to } H^- \quad (235)$$

Anode

$$H^- + OH^- \text{ to } H + e^-, OH + e^-, \text{ or } H_2O + 2e^- \quad (236)$$

Exemplary cells are [Ni(Li)/LiH-LiOH/Ni($H_2$)], [Ni/LiH-LiOH/Ni($H_2$)], [Ni(Li)/NaH-NaOH/Ni($H_2$)], [Ni/NaH-NaOH/Ni($H_2$)], [Ni(Li)/KH-KOH/Ni($H_2$)], and [Ni/KH-KOH/ Ni($H_2$)]. Suitable exemplary molten hydride comprising mixtures of the molten hydroxide electrolyte are the eutectic mixtures of NaH-$KBH_4$ at about 43 + 57 mol % having the melt temperature is about 503 °C, KH-$KBH_4$ at about 66 + 34 mol % having the melt temperature is about 390 °C, NaH-$NaBH_4$ at about 21 + 79 mol % having the melt temperature is about 395 °C, $KBH_4$-$LiBH_4$ at about 53 + 47 mol % having the melt temperature is about 103 °C, $NaBH_4$-$LiBH_4$ at about 41.3 + 58.7 mol % having the melt temperature is about 213 °C, and $KBH_4$-$NaBH_4$ at about 31.8 + 68.2 mol % having the melt temperature is about 453 °C wherein the mixture may further comprise an alkali or alkaline earth hydride such as LiH, NaH, or KH. Other exemplary hydrides are $Mg(BH_4)_2$ (MP 260 °C) and $Ca(BH4)_2$ (367 °C). The reactants of at least one half-cell may comprise a hydrogen storage material such as a metal hydride, a species of a M-N-H system such as $LiNH_2$, $Li_2NH$, or $Li_3N$, and a alkali metal hydride further comprising boron such as borohydrides or aluminum such as aluminohydides. Further suitable hydrogen storage materials are metal hydrides such as alkaline earth metal hydrides such as $MgH_2$, metal alloy hydrides such as $BaReH_9$, $LaNi_5H_6$, $FeTiH_{1.7}$, and $MgNiH_4$, metal borohydrides such as $Be(BH_4)_2$, $Mg(BH_4)_2$, $Ca(BH_4)_2$, $Zn(BH_4)_2$, $Sc(BH_4)_3$, $Ti(BH4)_3$, $Mn(BH_4)_2$, $Zr(BH_4)_4$, $NaBH_4$, $LiBH_4$, $KBH_4$, and $Al(BH_4)_3$, $AlH_3$, $NaAlH_4$, $Na_3AlH_6$, $LiAlH_4$, $Li_3AlH_6$, LiH, $LaNi_5H_6$, $La_2Co_1Ni_9H_6$, and $TiFeH_2$, $NH_3BH_3$, polyaminoborane, amine borane complexes such as amine borane, boron hydride ammoniates, hydrazine-borane complexes, diborane diammoniate, borazine, and ammonium octahydrotriborates or tetrahydroborates, imidazolium ionic liquids such as alkyl(aryl)-3-methylimidazolium N-bis(trifluoromethanesulfonyl)imidate salts, phosphonium borate, and carbonite substances. Further exemplary compounds are ammonia borane, alkali ammonia borane such as lithium ammonia borane, and borane alkyl amine complex such as borane dimethylamine complex, borane trimethylamine complex, and amino boranes and borane amines such as aminodiborane, n-dimethylaminodiborane, tris(dimethylamino)borane, di-n-butylboronamine, dimethylaminoborane, trimethylaminoborane, ammonia-trimethylborane, and triethylaminoborane. Further suitable hydrogen storage materials are organic liquids with absorbed hydrogen such as carbazole and derivatives such as 9-(2-ethylhexyl)carbazole, 9-ethylcarbazole, 9-phenylcarbazole, 9-methylcarbazole, and 4,4'-bis(N-carbazolyl)-1,1'-biphenyl. Exemplary cells are [Ni(Li)/$LiBH_4$-LiOH/Ni($H_2$)], [Ni/$LiBH_4$-LiOH/Ni($H_2$)], [Ni(Li)/$NaBH_4$-NaOH/Ni($H_2$)], [Ni/$NaBH_4$-NaOH/Ni($H_2$)], [Ni(Li)/$KBH_4$-KOH/Ni($H_2$)], [Ni/$KBH_4$-KOH/Ni($H_2$)], [Ni(Li)/LiH-$LiBH_4$-LiOH/Ni($H_2$)], [Ni/LiH-$LiBH_4$-LiOH/Ni($H_2$)], [Ni(Li)/NaH-$NaBH_4$-NaOH/Ni($H_2$)], [Ni/NaH-$NaBH_4$-NaOH/Ni($H_2$)], [Ni(Li)/KH-$KBH_4$-KOH/Ni($H_2$)], and [Ni/KH-$KBH_4$-KOH/Ni($H_2$)].

In an embodiment, at least one of nH and $MNH_2$ (M = alkali) may serve as the catalyst. A source of nitrogen such as $N_2$ may be supplied at the cathode, and a source of H such as $H_2$ gas supplied by a hydrogen-permeable membrane may comprise the anode. The electrolyte may comprise a molten salt such as a eutectic salt such as a mixture of alkali halides. The electrolyte further comprises a metal that forms at least one M-N-H system compound such as $M_3N$, $M_2NH$, and $MNH_2$. Exemplary reactions wherein nH or $MNH_2$ are formed as intermediates are

Anode

$$N^{3-} + 3H \text{ to } NH_3 + 3e^- \quad (237)$$

Cathode

$$1/N_2 + 3e^- \text{ to } N^{3-} \quad (238)$$

An exemplary cells is [Ni($H_2$)/LiCl-KCl Li/Ni + $N_2$] wherein Ni($H_2$) is a hydrogen permeable electrode and $NH_3$ may be selectively removed in an embodiment. $NH_3$ may be removed by condensation, by a selective membrane, by a getter such as carbon or zeolite, by a reaction such as with an acid, or collection in a solvent such as water.

In an embodiment, $H^-$ is the migrating ion. The electrolyte may be a hydride ion conductor such as a molten salt such as a eutectic mixture such as a mixture of alkali halides such as LiCl-KCl. The cathode may be a hydrogen

permeable membrane such as Ni ($H_2$). The anode may comprise a compartment that contains the anode reaction mixture. The anode reaction mixture may comprise a hydrogen storage material such as a metal that forms a hydride such as at least one of an alkali, alkaline earth, transition, inner transition, and rare earth metal or metal alloy. The anode reactant may comprise a M-N-H system such as $Li_3N$ or $Li_2NH$. The anode reaction mixture may comprise a molten hydroxide that may comprise a mixture of a hydroxide and at least one other compound such as another hydroxide or a salt such as an alkali halide. The anode reaction mixture may comprise LiOH-LiBr. Exemplary cells are [Ni($Li_3N$)/LiCl-KCl 0.01 mol % LiH/ Ni($H_2$)], [Ni(LiOH)/LiCl-KCl 0.01 mol % LiH/ Ni($H_2$)] [Ni(LiOH-LiBr)/LiCl-KCl 0.01 mol % LiH/ Ni($H_2$)]. In an embodiment, a solvent may be added to the anode reactants such as a metal or a eutectic salt that melts at the cell operating temperature. For example, Li metal or a eutectic salt such as LiCl-KCl may be added in anode tube to dissolve $Li_3N$.

In an embodiment, the cell comprise a molten hydroxide-hydride electrolyte that is an H' conductor, a source of H to form hydride ions such as one of the hydrogen permeable electrodes of the disclosure such as Ni($H_2$), and an anode that selectively oxidizes at least one anion to form H and at least one of OH, $H_2O$, nH, $O_2$, and nO (n = integer) wherein at least one of OH, $H_2O$, nH, $O_2$, and nO (n = integer) may serve as the catalyst. The hydroxide may be an alkali hydroxide and the hydride may be an alkali hydride. The anode may be a noble metal or a supported noble metal, both of the disclosure such as Pt/C. The reactions may be

Anode:

$$2H^- + OH^- \text{ to } H_2O + 3e^- + H(1/p) \quad (239)$$

Cathode:

$$H_2 + 2e^- \text{ to } 2H^- \quad (240)$$

Exemplary cells are [Pt/C/molten hydroxide-hydride/ M'($H_2$)] wherein M' may comprise a hydrogen permeable metal such as Ni, Ti, V, Nb, Pt, and PtAg, the electrolyte comprises a mixture of a hydroxide and a hydride such as MOH-M"H (M, M' = alkali) and other noble metals and supports may substitute for Pt/C. The electrolyte may further comprise at least one other salt such as an alkali metal halide.

In an embodiment, the CIHT cell comprises a cogeneration system wherein electricity and thermal energy are generated for a load. At least one of the electrical and thermal loads may be at least one of internal and external. For example, at least part of the thermal or electrical energy generated by forming hydrinos may maintain the cell temperature such as that of a molten salt of a CIHT cell comprising a molten salt electrolyte or molten reactants. The electrical energy may at least partially supply the electrolysis power to regenerate the initial cell reactants from the products. In an embodiment, the electrolyte such as the aqueous or molten salt electrolyte may be pumped through or over a heat exchanger that removes heat and transfers it ultimately to a load.

In certain embodiments, the power, chemical, battery and fuel cell systems disclosed herein that regenerate the reactants and maintain the reaction to form lower-energy hydrogen can be closed except that only hydrogen consumed in forming hydrinos need be replaced wherein the consumed hydrogen fuel may be obtained from the electrolysis of water. The fuel cell may be used for broad applications such as electric power generation such as utility power, cogeneration, motive power, marine power, and aviation. In the latter case, the CIHT cell may charge a battery as power storage for an electric vehicle.

The power may be controlled by controlling the cathode and anode half-cell reactants and reaction conditions. Suitable controlled parameters are the hydrogen pressure and operating temperature. The fuel cell may be a member of a plurality of cells comprising a stack. The fuel cell members may be stacked and may be interconnected in series by an interconnect at each junction. The interconnect may be metallic or ceramic. Suitable interconnects are electrically conducting metals, ceramics, and metal-ceramic composites.

In an embodiment, the cell is periodically reversed in polarity with an optional applied voltage to cause at least one of oxidation-reduction reaction products and hydrino products to be removed to eliminate product inhibition. The products may also be removed by physical and thermal methods such as ultrasound and heating, respectively. In an embodiment, the electrolyte may be removed, processed by means such as heating to remove hydrino, and replaced. The electrolyte such as a molten salt or aqueous one may be flowed, and treatment may occur under batch or flow conditions.

In an embodiment, a magnetic field is applied to the cell. The magnetic field may be applied to at least one electrode at any desired orientation. The magnetic field lines may be perpendicular to the electrode surface of at least one electrode or may be parallel to the surface of at least one electrode. The field strength may be in the range of about

1 mT to 10 T, 0.01 to 1 T, and 0.1 to 0.3 T.

In an embodiment, the CIHT cell comprises a plasma cell wherein the plasma is formed intermittently by intermittent application of external input power, and electrical power is drawn or output during the phase that the external input power in off. The plasma gases comprise at least two of a source of hydrogen, hydrogen, a source of catalyst, and a catalyst that form hydrinos by reaction of H with the catalyst to provide power to an external load. The input plasma power creates the reactants that form hydrinos at least during the external power off phase. The plasma cell may comprise a plasma electrolysis reactor, barrier electrode reactor, RF plasma reactor, rt-plasma reactor, pressurized gas energy reactor, gas discharge energy reactor, microwave cell energy reactor, and a combination of a glow discharge cell and a microwave and or RF plasma reactor. The catalysts and systems may be those of the disclosure and those of disclosed in my prior applications: Hydrogen Catalyst Reactor, PCT/US08/61455, filed PCT 4/24/2008; Heterogeneous Hydrogen Catalyst Reactor, PCT/US09/052072, filed PCT 7/29/2009; Heterogeneous Hydrogen Catalyst Power System, PCT/US10/27828, PCT filed 3/18/2010; and Electrochemical Hydrogen Catalyst Power System, PCT/US11/28889, filed PCT 3/17/2011 herein incorporated by reference in their entirety.

In an embodiment, the catalyst comprising at least one of OH, $H_2O$, $O_2$, nO, and nH (n is an integer) is generated in water-arc plasmas. An exemplary plasma system comprises an energy storage capacitor connected between a baseplate-and-rod electrode and a concentric barrel electrode that contains water wherein the rod of the baseplate-and-rod electrode is below the water column. The rod is embedded in an insulator such as a Nylon sleeve in the barrel section and a Nylon block between the baseplate and the barrel. The circuit further comprises a resistor and an inductor to cause an oscillating discharge in the water between the rod and barrel. The capacitor may be charged by a high voltage power supply and is discharged by a switch that may comprise a spark gap in atmospheric air. The electrodes may be made of copper. The high voltage may be in the range of about 5 to 25 kV. The discharge current may be in the range of 5 to 100 kA. Exemplary parameters for 3.5 ml of $H_2O$ are a capacitance of about 0.6 $\mu$F, an inductance of about 0.3 $\mu$H, a resistance of about 173m$\Omega$, a barrel electrode width and depth of about 1/2 inches and 3 inches, a rod width of about 1/4 inches, a charging voltage of about 12.0 kV, and a LRC time constant of about 3.5 $\mu$s. A fog explosion is created by the triggered water arc discharge wherein the arc causes the formation of atomic hydrogen and catalyst that react to form hydrinos with the liberation of energy that drives the fog explosion. The power from the formation of hydrinos may be in the form of thermal energy that may be used directly in thermal applications such as space and process heating or converted to electricity using a heat engine such as a steam turbine. The system may also be used to form increased binding energy hydrogen species and compounds such as molecular hydrino $H_2(1/p)$.

In an embodiment, the hydrino cell comprises a pinched plasma source to form hydrino continuum emission. The cell comprises and cathode, an anode, a power supply, and a source of hydrogen to form a pinched hydrogen plasma. The plasma system may comprise a hollow anode system such as a dense plasma focus source such as those known in the art. The distinguishing features are that the plasma gas is hydrogen and the plasma conditions are optimized to give hydrogen continuum emission. The emission may be used as a light source of EUV lithography.

In an embodiment, $H_2O$ may serve as the catalyst wherein it is formed in the cell from a source by its reaction with hydrogen from a source of hydrogen. In an embodiment, the $H_2O$ catalysis reaction and corresponding energy release may form an inverted population of hydrogen atoms. The source of $H_2O$ may be a nitrate such as an alkali nitrate, and the source of hydrogen may be $H_2$ gas. The mixture reaction may be heated to an elevated temperature in a vacuum tight vessel as described in my papers R. L. Mills, P. Ray, B. Dhandapani, W. Good, P. Jansson, M. Nansteel, J. He, A. Voigt, "Spectroscopic and NMR Identification of Novel Hydride Ions in Fractional Quantum Energy States Formed by an Exothermic Reaction of Atomic Hydrogen with Certain Catalysts," European Physical Journal: Applied Physics, 28, (2004), 83-104 and R. L. Mills, P. Ray, R. M. Mayo, "CW HI Laser Based on a Stationary Inverted Lyman Population Formed from Incandescently Heated Hydrogen Gas with Certain Group I Catalysts," IEEE Transactions on Plasma Science, Vol. 31, No. 2, (2003), pp. 236-247 which are incorporated by reference in their entirety. $H_2O$ catalyst may be formed by the reaction of hydrogen and oxygen from water that is decomposed by plasma. The energy from the hydrino reaction may cause inversion of the H lines and give rise to fast H as described in my paper R. L. Mills, P. C. Ray, R. M. Mayo, M. Nansteel, B. Dhandapani, J. Phillips, "Spectroscopic Study of Unique Line Broadening and Inversion in Low Pressure Microwave Generated Water Plasmas," J. Plasma Physics, Vol. 71, No 6, (2005), 877-888 which is incorporated by reference in its entirety. In an embodiment, the $H_2O$ catalyst may be formed by the reaction of $H_2$ gas and a carbonate such as an alkali carbonate such as $K_2CO_3$. The energy release may propagate plasma by thermal activation and may persist in the absence of an applied electric field as evidence by anomalous afterglow duration. An exemplary reaction is described in my paper H. Conrads, R. L. Mills, Th. Wrubel, "Emission in the Deep Vacuum Ultraviolet from a Plasma Formed by Incandescently Heating Hydrogen Gas with Trace Amounts of Potassium Carbonate," Plasma Sources Science and Technology, Vol. 12, (2003), pp. 389-395 which is incorporated by reference in its entirety. In an embodiment, the $H_2O$ catalyst may form by the reaction of an oxygen source comprising a compound comprising oxygen such as a nitrate, carbonate, sulfate, phosphate, or a metal oxide such as one of Sm, Fe, Sr, or Pr. The catalyst reaction may form a plasma called an rt-plasma when the oxygen source is heated with hydrogen gas as described in my paper R. L. Mills, J. Dong, Y. Lu, "Observation of Extreme Ultraviolet Hydrogen Emission from Incandescently Heated Hydrogen

Gas with Certain Catalysts," Int. J. Hydrogen Energy, Vol. 25, (2000), pp. 919-943 which is incorporated by reference in its entirety. In an embodiment, nH (n =integer) may serve as a catalyst to form hydrinos wherein the energy release gives rise to fast H. Helium and especially argon addition to H plasmas may enhance the fast H population by increasing the total H population as indicated by the increase in the intensity of the H Balmer lines as described in my paper K. Akhtar, J. Scharer, R. L. Mills, "Substantial Doppler Broadening of Atomic Hydrogen Lines in DC and Capactively Coupled RF Plasmas," J. Phys. D: Appl. Phys., Vol. 42, Issue 13 (2009), 135207 (12pp) which is incorporated by reference in its entirety.

X. Hydrino Hydride Battery

A battery according to the present invention is shown in FIGURE 1 comprises a cathode compartment 401 and a cathode 405, an anode compartment 402 and an anode 410, and a salt bridge 440 wherein the oxidant in the cathode compartment 401 comprises a compound comprising a hydrino hydride ion. In an embodiment, the oxidant compound comprises sodium hydrino hydride wherein the sodium may be in an oxidation state of at least 2+. The oxidant may comprise $Na(H(1/p)_x$ wherein x is an integer and H(1/p) is hydrino hydride ion. In an embodiment, p is selected to form a stable $Na^{2-}$ compound. In an embodiment, p is at least one of 10, 11, 12, 13, 14, 15, 16, 17, 18, 19, 20, and 21. In an embodiment, the salt bridge 440 is a Na ion conductor. Suitable sodium ion conductors are those of the disclosure such as beta alumina solid electrolyte (BASE), NASICON ($Na_3Zr_2Si_2PO_{12}$) and $Na_xWO_3$. The reductant may be a source of sodium ions such as sodium metal. The cell may further comprise a heater and may comprise insulation such as external insulation to maintain the cell at an elevated operating temperature such as above the melting point of Na metal. The battery reactions may comprise the reduction of the sodium hydride oxidant by sodium metal reductant with the migration of $Na^+$ ion from the anode compartment 402 through the sodium ion conductor salt bridge 440 to the cathode compartment 401. Exemplary battery reactions are:

Cathode:

$$NaH_x + e^- \text{ to } MH_{x-1} + H^- \quad (241)$$

Anode:

$$Na \text{ to } Na^+ + e^- \quad (242)$$

Overall:

$$NaH_x + Na \text{ to } NaH_{x-1} + NaH \quad (243)$$

In an embodiment, the battery is rechargeable by the reverse of the discharge reactions such as those given by Eqs. (241-243). In an embodiment, the half-cell compartment serves as the corresponding electrode. The battery 400 may be sealed in a battery case.

Another aspect of the present invention comprises the storage of energy that may be generated by the CIHT cell. The stored energy may be delivered at a higher power than that of the CIHT cell that may intermittently charge the storage cell over a longer duration. The higher power of the storage cell may be used for short bursts of high power such as needed for takeoff in aviation applications or acceleration in motive applications. The storage cell may comprise a conventional battery known to those in the Art such as a lithium ion battery or a metal hydride battery. In another application, the storage cell may comprise a fuel cell capable of regeneration known to those skilled in the art. A fuel cell of the present invention comprises a Li-air battery such as those known in the Art. In another embodiment, the Li-air battery comprises an anode half-cell that comprises a Li anode such as Li metal and a molten salt electrolyte such as one comprising at least one Li salt such as a Li halide, hydroxide, carbonate, or others of the disclosure. The electrolyte may comprise a mixture such as a eutectic mixture such as a mixture of alkali halide salts such as LiCl-KCl or others of the disclosure. The cell may comprise a separator such as a Li ion conductive separator such as $Li_2O$-$Al_2O_3$-$SiO_2$-$P_2O_5$-$TiO_2$-$GeO_2$ such as that of Ohara based in Japan. The cathode may comprise an oxygen reduction cathode such as NiO and others of the disclosure. The cathode reduction reaction may be that of $O_2$ and may further comprise the reduction of $O_2$ and $H_2O$. Then, product may be $OH^-$ and other oxygen and species comprising at least one of oxygen and hydrogen. The cathode half-cell may further comprise an electrolyte such as a molten salt. The molten salt may comprise at least one of a halide and a hydroxide such as those of alkali metals such as LiOH-MX (wherein M

is alkali and X is halide) such as those of the disclosure. The reversible discharge reactions may be

Cathode:

$$2H_2O + O_2 + 4e^- \text{ to } 4OH^- \quad (244)$$

Anode:

$$Li \text{ to } Li^+ + e^- \quad (245)$$

Overall:

$$4Li + 2H_2O + O_2 \text{ to } 4LiOH \quad (246)$$

In an embodiment, H and $H_2O$ catalyst are formed at the discharge cathode during recharging, and H is catalyzed by $H_2O$ to form hydrinos to release energy to assist the recharge process such that less energy is required than in the absence of the hydrino energy contribution.

XI. Chemical Reactor

The present disclosure is also directed to other reactors for producing increased binding energy hydrogen species and compounds of the present disclosure, such as dihydrino molecules and hydrino hydride compounds. Further products of the catalysis are power and optionally plasma and light depending on the cell type. Such a reactor is hereinafter referred to as a "hydrogen reactor" or "hydrogen cell." The hydrogen reactor comprises a cell for making hydrinos. The cell for making hydrinos may take the form of a chemical reactor or gas fuel cell such as a gas discharge cell, a plasma torch cell, or microwave power cell, and an electrochemical cell. Exemplary embodiments of the cell for making hydrinos may take the form of a liquid-fuel cell, a solid-fuel cell, a heterogeneous-fuel cell, and a CIHT cell. Each of these cells comprises: (i) a source of atomic hydrogen; (ii) at least one catalyst chosen from a solid catalyst, a molten catalyst, a liquid catalyst, a gaseous catalyst, or mixtures thereof for making hydrinos; and (iii) a vessel for reacting hydrogen and the catalyst for making hydrinos. As used herein and as contemplated by the present disclosure, the term "hydrogen," unless specified otherwise, includes not only proteum ($^1H$), but also deuterium ($^2H$) and tritium ($^3H$). In the case of the use of deuterium as a reactant of the hydrino reaction, relatively trace amounts of tritium or helium products of the heterogeneous fuels and solid fuels are expected. Exemplary chemical reaction mixtures and reactors may comprise CIHT cell or thermal cell embodiments of the disclosure. Additional exemplary embodiments are given in this Chemical Reactor section. Examples of reaction mixtures having $H_2O$ as catalyst formed during the reaction of the mixture are given in the disclosure. Other catalysts such as those given in TABLES 1 and 3 may serve to form increased binding energy hydrogen species and compounds. An exemplary M-H type catalyst of TABLE 3A is NaH. A suitable reaction mixture is sodium hydride and a compound such as an alkali halide such as NaCl, and optionally a dissociator such as R-Ni such as R-Ni 2800. The weigh % of each reactant may be any desirable. In an embodiment, the wt % of NaCl if about 10 times that of NaH, and that of R-Ni dissociator may be 10 times as well, if used. The cell temperature may be elevated such as in the range of about 300 °C to 550 °C. Other suitable reaction mixtures and conditions with the NMR results for a matrix comprising at least one hydrino product based on the observation of an upfield shift are (1) Li, LiF (5 and 95 wt%, respectively) and Ni screen dissociator at 600 °C with $^1H$ MAS NMR peaks observed at 1.17 and -0.273 ppm, (2) Li and LiBr (5 and 95 wt%, respectively) and a Ni screen dissociator at 600 °C with $^1H$ MAS NMR peaks observed at 1.13 and -2.462 ppm, (3) $Li_3N$, LiH, LiBr (5, 10, and 85 wt%, respectively) and a R-Ni dissociator at 450 °C with $^1H$ MAS NMR peak observed at -2.573 ppm, (4) $Li_2NH$, Li, LiBr (5, 10, and 85 wt%, respectively) and a R-Ni dissociator at 500 °C with $^1H$ MAS NMR peak observed at -2.512 ppm, (5) $LiNH_2$, Li, LiBr (5, 10, and 85 wt%, respectively) and a R-Ni dissociator at 500 °C with $^1H$ MAS NMR peak observed at -2.479 ppm, (6) $LiNH_2$, LiBr (5 and 95 wt%, respectively) and a R-Ni dissociator at 450 °C with $^1H$ MAS NMR peaks observed at 1.165 and -2.625 ppm, (7) Li and LiI (5 and 95 wt%, respectively) and a R-Ni dissociator at 550 °C with $^1H$ MAS NMR peaks observed at 1.122 and -2.038 ppm, (8) $LiNH_2$, Li, LiI (5, 10, and 85 wt%, respectively) and a R-Ni dissociator at 450 °C with $^1H$ MAS NMR peak observed at -2.087 ppm, (9) Na, NaCl (25 and 75 wt%, respectively) and a Ni plate and Pt/Ti dissociators at 500 °C with $^1H$ MAS NMR peaks observed at 1.174 and -3.802 ppm, (10) NaH, NaCl (10 and 90 wt%, respectively) and R-Ni dissociator at 500 °C with $^1H$ MAS NMR peaks observed at 1.057 and -3.816 ppm, (11) NaH, NaCl (10 and 90 wt%, respectively) at 500 °C with $^1H$ MAS NMR peaks observed at 1.093 and -3.672 ppm, (12) Na, NaBr (18 and 82 wt%,

respectively) and a Pt/Ti dissociator at 500 °C with $^1H$ MAS NMR peaks observed at 1.129 and -3.583 ppm, (13) NaH, NaI (18 and 82 wt%, respectively) at 500 °C with $^1H$ MAS NMR peaks observed at 1.05 and -2.454 ppm, (14) K, KF (10 and 90 wt%, respectively) and R-Ni dissociator at 500 °C with $^1H$ MAS NMR peaks observed at 0.987 and -5.143 ppm, (15) K, KCl (8 and 92 wt%, respectively) and Ni screen dissociator at 600 °C with $^1H$ MAS NMR peaks observed at 1.098, -4.074, and -4.473 ppm, (16) K, KBr (10 and 90 wt%, respectively) and Ni screen dissociator at 450 °C with $^1H$ MAS NMR peaks observed at 1.415 and -4.193 ppm, (17) K, KI (5 and 95 wt%, respectively) and R-Ni dissociator at 500 °C with $^1H$ MAS NMR peaks observed at 1.113 and -2.244 ppm, (18) Cs, CsF (45 and 55 wt%, respectively) and R-Ni dissociator at 500 °C with $^1H$ MAS NMR peaks observed at 1.106 and -3.965 ppm, (19) Cs, CsCl (45 and 55 wt%, respectively) and R-Ni dissociator at 550 °C with $^1H$ MAS NMR peaks observed at 1.073 and -3.478 ppm, (20) Cs, CsI (45 and 55 wt%, respectively) and R-Ni dissociator at 400 °C with $^1H$ MAS NMR peaks observed at 1.147 and -1.278 ppm, (21) NaCl, $KHSO_4$ (85 and 15 wt%, respectively) at 600 °C with $^1H$ MAS NMR peaks observed at 1.094, -3.027, and -3.894 ppm, (22) NaCl, $NaHSO_4$ (85 and 15 wt%, respectively) at 600 °C with $^1H$ MAS NMR peaks observed at 1.085, -3.535, and -4.077 ppm, and (23) CsCl, $NaHSO_4$ (95 and 5 wt%, respectively) at 550 °C with $^1H$ MAS NMR peaks observed at 1.070 and -2.386 ppm wherein the $H_2$ pressure was 5 PSIG and the weight of the dissociator that was about 50% to 300% that of the reactants. The reactions and conditions may be adjusted from these exemplary cases in the parameters such as the reactants, reactant wt%'s, $H_2$ pressure, and reaction temperature. Suitable reactants, conditions, and parameter ranges are those of the disclosure. In an embodiment, these reaction mixtures further comprise a source of oxygen such as oxidation products of the stainless steel reactor that react with $H_2$ and other reactants present to form $H_2O$ catalyst and hydrinos that gives rise to an upfield matrix shift such as that of any hydroxides formed during the reactions.

In an embodiment, a solid fuel reaction forms $H_2O$ and H as products or intermediate reaction products. The $H_2O$ may serve as a catalyst to form hydrinos. The reactants comprise at least one oxidant and one reductant, and the reaction comprises at least one oxidation-reduction reaction. The reductant may comprise a metal such as an alkali metal. The reaction mixture may further comprise a source of hydrogen, and a source of $H_2O$, and may optionally comprise a support such as carbon, carbide, boride, nitride, carbonitrile such as TiCN, or nitrile. The source of H may be selected from the group of alkali, alkaline earth, transition, inner transition, rare earth hydrides, and hydrides of the disclosure. The source of hydrogen may be hydrogen gas that may further comprise a dissociator such as those of the disclosure such as a noble metal on a support such as carbon or alumina and others of the disclosure. The source of water may comprise a compound that dehydrates such as a hydroxide or a hydroxide complex such as those of Al, Zn, Sn, Cr, Sb, and Pb. The source of water may comprise a source of hydrogen and a source of oxygen. The oxygen source may comprise a compound comprising oxygen. Exemplary compounds or molecules are $O_2$, alkali or alkali earth oxide, peroxide, or superoxide, $TeO_2$, $SeO_2$, $PO_2$, $P_2O_5$, $SO_2$, $SO_3$, $M_2SO_4$, $MHSO_4$, $CO_2$, $M_2S_2O_8$, $MMnO_4$, $M_2Mn_2O_4$, $M_xH_yPO_4$ (x, y = integer), $POBr_2$, $MClO_4$, $MNO_3$, NO, $N_2O$, $NO_2$, $N_2O_3$, $Cl_2O_7$, and $O_2$ (M = alkali; and alkali earth or other cation may substitute for M). Other exemplary reactants comprise reagents selected from the group of Li, LiH, $LiNO_3$, LiNO, $LiNO_2$, $Li_3N$, $Li_2NH$, $LiNH_2$, LiX, NH3, $LiBH_4$, $LiAlH_4$, $Li_3AlH_6$, LiOH, $Li_2S$, LiHS, LiFeSi, $Li_2CO_3$, $LiHCO_3$, $Li_2SO_4$, $LiHSO_4$, $Li_3PO_4$, $Li_2HPO_4$, $LiH_2PO_4$, $Li_2MoO_4$, $LiNbO_3$, $Li_2B_4O_7$ (lithium tetraborate), $LiBO_2$, $Li_2WO_4$, $LiAlCl_4$, $LiGaCl_4$, $Li_2CrO_4$, $Li_2Cr_2O_7$, $Li_2TiO_3$, $LiZrO_3$, $LiAlO_2$, $LiCoO_2$, $LiGaO_2$, $Li_2GeO_3$, $LiMn_2O_4$, $Li_4SiO_4$, $Li_2SiO_3$, $LiTaO_3$, $LiCuCl_4$, $LiPdCl_4$, $LiVO_3$, $LiIO_3$, $LiFeO_2$, $LiIO_4$,$LiClO_4$, $LiScO_n$, $LiTiO_n$, $LiVO_n$, $LiCrO_n$, $LiCr_2O_n$, $LiMn_2O_n$, $LiFeO_n$, $LiCoO_n$, $LiNiO_n$, $LiNi_2O_n$, $LiCuO_n$, and $LiZnO_n$, where n=1, 2,3, or 4, an oxyanion, an oxyanion of a strong acid, an oxidant, a molecular oxidant such as $V_2O_3$, $I_2O_5$, $MnO_2$, $Re_2O_7$, $CrO_3$, $RuO_2$, AgO, PdO, $PdO_2$, PtO, $PtO_2$, and $NH_4X$ wherein X is a nitrate or other suitable anion given in the CRC, and a reductant. Another alkali metal or other cation may substitute for Li. Additional sources of oxygen may be selected from the group of $MCoO_2$, $MGaO_2$, $M_2GeO_3$, $MMn_2O_4$, M4SiO$_4$, $M_2SiO_3$, $MTaO_3$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, and $MZnO_n$, where M is alkali and n=1, 2,3, or 4, an oxyanion, an oxyanion of a strong acid, an oxidant, a molecular oxidant such as $V_2O_3$, $I_2O_3$, $MnO_2$, $Re_2O_7$, $CrO_3$, $RuO_2$, AgO, PdO, $PdO_2$, PtO, $PtO_2$, $I_2O_4$, $I_2O_5$, $I_2O_9$, $SO_2$, $SO_3$, $CO_2$, $N_2O$, NO, $NO_2$, $N_2O_3$, $N_2O_4$, $N_2O_5$, $Cl_2O$, $ClO_2$, $Cl_2O_3$, $Cl_2O_6$, $Cl_2O_7$, $PO_2$, $P_2O_3$, and $P_2O_5$. The reactants may be in any desired ratio that forms hydrinos. An exemplary reaction mixture is 0.33 g of LiH, 1.7 g of $LiNO_3$ and the mixture of 1 g of $MgH_2$ and 4 g of activated C powder. Another exemplary reaction mixture is that of gun powder such as $KNO_3$ (75 wt%), softwood charcoal (that may comprise about the formulation $C_7H_4O$) (15 wt%), and S (10 wt%); $KNO_3$ (70.5 wt%) and softwood charcoal (29.5 wt%) or these ratios within the range of about ± 1-30 wt%. The source of hydrogen may be charcoal comprising about the formulation $C_7H_4O$.

In an embodiment, the reaction mixture comprises reactants that form nitrogen, carbon dioxide, and $H_2O$ wherein the latter serves as the hydrino catalyst for H also formed in the reaction. In an embodiment, the reaction mixture comprises a source of hydrogen and a source of $H_2O$ that may comprise a nitrate, sulfate, perchlorate, a peroxide such as hydrogen peroxide, peroxy compound such as triacetone-triperoxide (TATP) or diacteone-diperoxide (DADP) that may also serve as a source of H especially with the addition of $O_2$ or another oxygen source such as a nitro compound such as nitrocellulose (APNC), oxygen or other compound comprising oxygen or oxyanion compound. The reaction mixture may comprise a source of a compound or a compound, or a source of a functional group or a functional group

comprising at least two of hydrogen, carbon, hydrocarbon, and oxygen bound to nitrogen. The reactants may comprise a nitrate, nitrite, nitro group, and nitramine. The nitrate may comprise a metal such as alkali nitrate, may comprise ammonium nitrate, or other nitrates known to those skilled in the art such as alkali, alkaline earth, transition, inner transition, or rare earth metal, or Al, Ga, In, Sn, or Pb nitrates. The nitro group may comprise a functional group of an organic compound such as nitromethane, nitroglycerin, trinitrotoluene or a similar compound known to those skilled in the art. An exemplary reaction mixture is $NH_4NO_3$ and a carbon source such as a long chain hydrocarbon ($C_nH_{2n+2}$) such as heating oil, diesel fuel, kerosene that may comprise oxygen such as molasses or sugar or nitro such as nitromethane or a carbon source such as coal dust. The H source may also comprise the $NH_4$, the hydrocarbon such as fuel oil, or the sugar wherein the H bound to carbon provides a controlled release of H. The H release may be by a free radical reaction. The C may react with O to release H and form carbon-oxygen compounds such as CO, $CO_2$, and formate. In an embodiment, a single compound may comprise the functionalities to form nitrogen, carbon dioxide, and $H_2O$. A nitramine that further comprises a hydrocarbon functionality is cyclotrimethylene-trinitramine, commonly referred to as Cyclonite or by the code designation RDX. Other exemplary compounds that may serve as at least one of the source of H and the source of $H_2O$ catalyst such as a source of at least one of a source of O and a source of H are at least one selected from the group of ammonium nitrate (AN), black powder (75% $KNO_3$ + 15% charcoal + 10% S), ammonium nitrate/fuel oil (ANFO) (94.3 % AN + 5.7% fuel oil), erythritol tetranitrate, trinitrotoluene (TNT), amatol (80% TNT + 20% AN), tetrytol (70% tetryl + 30% TNT), tetryl (2,4,6-trinitrophenylmethylnitramine ($C_7H_5N_5O_8$)), C-4 (91% RDX), C-3 (RDX based), composition B (63% RDX + 36% TNT), nitroglycerin, RDX (cyclotrimethylenetrinitramine), Semtex (94.3% PETN + 5.7% RDX), PETN (pentaerythritol tetranitrate), HMX or octogen (octahydro-1,3,5,7-tetranitro-1,3,5,7-tetrazocine), HNIW (CL-20) (2,4,6,8,10,12-hexanitro-2,4,6,8,10,12-hexaazaisowurtzitane), DDF, (4,4'-dinitro-3,3'-diazenofuroxan), heptanitrocubane, octanitrocubane, 2,4,6-tris(trinitromethyl)-1,3,5-triazine, TATNB (1,3,5-trinitrobenzene, ,3,5-triazido-2,4,6-trinitrobenzene), trinitroanaline, TNP (2,4,6-trinitrophenol or picric acid), dunnite (ammonium picrate), methyl picrate, ethyl picrate, picrate chloride (2-chloro-1,3,5-trinitrobenzene), trinitocresol, lead styphnate (lead 2,4,6-trinitroresorcinate, $C_6HN_3O_8Pb$), TATB (triaminotrinitrobenzene), methyl nitrate, nitroglycol, mannitol hexanitrate, ethylenedinitramine, nitroguanidine, tetranitroglycoluril, nitrocellulos, urea nitrate, and hexamethylene triperoxide diamine (HMTD). The ratio of hydrogen, carbon, oxygen, and nitrogen may be in any desired ratio. In an embodiment of a reaction mixture of ammonium nitrate (AN) and fuel oil (FO) known as ammonium nitrate/fuel oil (ANFO), a suitable stoichiometry to give about a balanced reaction is about 94.3 wt% AN and 5.7 wt% FO, but the FO may be in excess. An exemplary balanced reaction of AN and nitromethane is

$$3NH_4NO_3 + 2CH_3NO_2 \text{ to } 4N_2 + 2CO_2 + 9H_2O \tag{247}$$

wherein some of the H is also converted to lower energy hydrogen species such as $H_2(1/p)$ and $H^-(1/p)$ such as p =4. In an embodiment, the molar ratios of hydrogen, nitrogen, and oxygen are similar such as in RDX having the formula $C_3H_6N_6O_6$.

In an embodiment, the energetics is increased by using an addition source of atomic hydrogen such as $H_2$ gas or a hydride such as alkali, alkaline earth, transition, inner transition, and rare earth metal hydrides and a dissociator such as Ni, Nb, or a noble metal on a support such as carbon, carbide, boride, or nitride or silica or alumina. The reaction mixture may produce a compression or shock wave during reaction to form $H_2O$ catalyst and atomic H to increase the kinetics to form hydrinos. The reaction mixture may comprise at least one reactant to increase the heat during the reaction to form H and $H_2O$ catalyst. The reaction mixture may comprise a source of oxygen such as air that may be dispersed between granules or prills of the solid fuel. For example AN prills may comprise about 20% air. In an exemplary embodiment, a powdered metal such as Al is added to increase the heat and kinetics of reaction. For example, Al metal powder may be added to ANFO. Other reaction mixtures comprise pyrotechnic materials that also have a source of H and a source of catalyst such as $H_2O$. In an embodiment, the formation of hydrinos has a high activation energy that can be provided by an energetic reaction such as that of energetic or pyrotechnic materials wherein the formation of hydrinos contributes to the self-heating of the reaction mixture. Alternatively, the activation energy can be provided by an electrochemical reaction such as that of the CIHT cell that has a high equivalent temperature corresponding to 11,600 K/eV.

Another exemplary reaction mixture is $H_2$ gas that may be in the pressure range of about 0.01 atm to 100 atm, a nitrate such as an alkali nitrate such as $KNO_3$, and hydrogen dissociator such as Pt/C, Pd/C, $Pt/Al_2O_3$, or $Pd/Al_2O_3$. The mixture may further comprise carbon such as graphite or Grade GTA Grafoil (Union Carbide). The reaction ratios may be any desired such as about 1 to 10% Pt or Pd on carbon at about 0.1 to 10 wt% of the mixture mixed with the nitrate at about 50 wt%, and the balance carbon; though the ratios could be altered by a factor of about 5 to 10 in exemplary embodiments. In the case that carbon is used as a support, the temperature is maintained below that which results in a C reaction to form a compound such as a carbonate such as an alkali carbonate. In an embodiment, the temperature is maintained in a range such as about 50 °C -300 °C or about 100 °C -250 °C such that $NH_3$ is formed over $N_2$.

The reactants and regeneration reaction and systems may comprise those of the disclosure or in my prior US

Patent Applications such as Hydrogen Catalyst Reactor, PCT/US08/61455, filed PCT 4/24/2008; Heterogeneous Hydrogen Catalyst Reactor, PCT/US09/052072, filed PCT 7/29/2009; Heterogeneous Hydrogen Catalyst Power System, PCT/US10/27828, PCT filed 3/18/2010; and Electrochemical Hydrogen Catalyst Power System, PCT/US11/28889, filed PCT 3/17/2011 ("Mills Prior Applications") herein incorporated by reference in their entirety.

In an embodiment, the reaction may comprise a nitrogen oxide such as $N_2O$, $NO_2$, or NO rather than a nitrate. Alternatively the gas is also added to the reaction mixture. NO, $NO_2$, and $N_2O$ and alkali nitrates can be generated by known industrial methods such as by the Haber process followed by the Ostwald process. In one embodiment, the exemplary sequence of steps is:

$$N_2 \xrightarrow[\substack{Haber\\process}]{H_2} NH_3 \xrightarrow[\substack{Ostwald\\process}]{O_2} NO,\ N_2O,\ NO_2. \tag{248}$$

Specifically, the Haber process may be used to produce $NH_3$ from $N_2$ and $H_2$ at elevated temperature and pressure using a catalyst such as $\alpha$-iron containing some oxide. The Ostwald process may be used to oxidize the ammonia to NO, $NO_2$, and $N_2O$ at a catalyst such as a hot platinum or platinum-rhodium catalyst. In an embodiment, the products are at least one of ammonia and an alkali compound. $NO_2$ may be formed form $NH_3$ by oxidation. $NO_2$ may be dissolved in water to form nitric acid that is reacted with the alkali compound such as $M_2O$, MOH, $M_2CO_3$, or $MHCO_3$ to form M nitrate wherein M is alkali.

In an embodiment, at least one reaction of a source of oxygen to form $H_2O$ and catalyst such as $MNO_3$ (M = alkali), (ii) the formation of atomic H from a source such as $H_2$, and (iii) the reaction to form hydrinos occurs by or an on a conventional catalyst such as a noble metal such as Pt that may be heated. The heated catalyst may comprise a hot filament. The filament may comprise a hot Pt filament. The source of oxygen such as $MNO_3$ may be at least partially gaseous. The gaseous state and its vapor pressure may be controlled by heating the $MNO_3$ such as $KNO_3$. The source of oxygen such as $MNO_3$ may be in an open boat that is heated to release gaseous $MNO_3$. The heating may be with a heater such as the hot filament. In an exemplary embodiment, $MNO_3$ is placed in a quartz boat and a Pt filament is wrapped around the boat to serve as the heater. The vapor pressure of the $MNO_3$ may be maintained in the pressure range of about 0.1 Torr to 1000 Torr or about 1 Torr to 100 Torr. The hydrogen source may be gaseous hydrogen that is maintained in the pressure range of about 1 Torr to 100 atm, about 10 Torr to 10 atm, or about 100 Torr to 1 atm. The filament also serves to dissociate hydrogen gas that may be supplied to the cell through a gas line. The cell may also comprise a vacuum line. The cell reactions give rise to $H_2O$ catalyst and atomic H that react to form hydrinos. The reaction may be maintained in a vessel capable of maintaining at least one of a vacuum, ambient pressure, or a pressure greater than atmospheric. The products such as $NH_3$ and MOH may be removed from the cell and regenerated. In an exemplary embodiment, $MNO_3$ reacts with the hydrogen source to form $H_2O$ catalyst and $NH_3$ that is regenerated in a separate reaction vessel or as a separate step by oxidation. In an embodiment, the source of hydrogen such as $H_2$ gas is generated from water by at least one of electrolysis or thermally. Exemplary thermal methods are the iron oxide cycle, cerium(IV) oxide-cerium(III) oxide cycle, zinc zinc-oxide cycle, sulfur-iodine cycle, copper-chlorine cycle and hybrid sulfur cycle and others known to those skilled in the art. Exemplary cell reactions to form $H_2O$ catalyst that reacts further with H to form hydrinos are

$$KNO_3 + 9/2H_2 \rightarrow K + NH_3 + 3H_2O. \tag{249}$$

$$KNO_3 + 5H_2 \rightarrow KH + NH_3 + 3H_2O. \tag{250}$$

$$KNO_3 + 4H_2 \rightarrow KOH + NH_3 + 2H_2O. \tag{251}$$

$$KNO_3 + C + 2H_2 \rightarrow KOH + NH_3 + CO_2. \tag{252}$$

$$2KNO_3 + C + 3H_2 \rightarrow K_2CO_3 + 1/2N_2 + 3H_2O. \tag{253}$$

An exemplary regeneration reaction to form nitrogen oxides is given by Eq. (248). Products such a K, KH, KOH, and $K_2CO_3$ may be reacted with nitric acid formed by addition of nitrogen oxide to water to form $KNO_2$ or $KNO_3$. Additional suitable exemplary treatcion to form at least one of the reactst $H_2O$ catlayts and $H_2$ are given in TABLES 6, 7, and 8.

TABLE 6. Thermally reversible reaction cycles regarding $H_2O$ catalyst and $H_2$. [L.C. Brown, G.E. Besenbruch, K.R. Schultz, A.C. Marshall, S.K. Showalter, P.S. Pickard and J.F. Funk, Nuclear Production of Hydrogen Using Thermochemical Water-Splitting Cycles, a preprint of a paper to be presented at the International Congress on Advanced Nuclear Power Plants (ICAPP) in Hollywood, Florida, June 19-13, 2002, and published in the Proceedings.]

| Cycle Name | T/E* | T (°C) | Reaction |
|---|---|---|---|
| 1 Westinghouse | T | 850 | $2H_2SO_4(g) \rightarrow 2SO_2(g) + 2H_2O(g) + O_2(g)$ |
| | E | 77 | $SO_2(g) + 2H_2O(a) \rightarrow \rightarrow H_2SO_4(a) + H_2(g)$ |
| 2 Ispra Mark 13 | T | 850 | $2H_2SO_4(g) \rightarrow 2SO_2(g) + 2H_2O(g) + O_2(g)$ |
| | E | 77 | $2HBr(a) \rightarrow Br_2(a) + H_2(g)$ |
| | T | 77 | $Br_2(l) + SO_2(g) + 2H_2O(l) \rightarrow 2HBr(g) + H_2SO_4(a)$ |
| 3 UT-3 Univ. of Tokyo | T | 600 | $2Br_2(g) + 2CaO \rightarrow 2CaBr_2 + O_2(g)$ |
| | T | 600 | $3FeBr_2 + 4H_2O \rightarrow Fe_3O_4 + 6HBr + H_2(g)$ |
| | T | 750 | $CaBr_2 + H_2O \rightarrow CaO + 2HBr$ |
| | T | 300 | $Fe_3O_4 + 8IIBr \rightarrow Br_2 + 3FeBr_2 + 4H_2O$ |
| 4 Sulfur-Iodine | T | 850 | $2H_2SO_4(g) \rightarrow 2SO_2(g) + 2H_2O(g) + O_2(g)$ |
| | T | 450 | $2HI \rightarrow I_2(g) + H_2(g)$ |
| | T | 120 | $I_2 + SO_2(a) + 2H_2O \rightarrow 2HI(a) + H_2SO_4(a)$ |
| 5 Julich Center EOS | T | 800 | $2Fe_3O_4 + 6FeSO_4 \rightarrow 6Fe_2O_3 + 6SO_2 + O_2(g)$ |
| | T | 700 | $3FeO + H_2O \rightarrow Fe_3O_4 + H_2(g)$ |
| | T | 200 | $Fe_2O_3 + SO_2 \rightarrow FeO + FeSO_4$ |
| 6 Tokyo Inst. Tech. Ferrite | T | 1000 | $2MnFe_2O_4 + 3Na_2CO_3 + H_2O \rightarrow 2Na_3MnFe_2O_6 + 3CO_2(g) + H_2(g)$ |
| | T | 600 | $4Na_3MnFe_2O_6 + 6CO_2(g) \rightarrow 4MnFe_2O_4 + 6Na_2CO_3 + O_2(g)$ |
| 7 Hallett Air Products 1965 | T | 800 | $2Cl_2(g) + 2H_2O(g) \rightarrow 4HCl(g) + O_2(g)$ |
| | E | 25 | $2HCl \rightarrow Cl_2(g) + H_2(g)$ |
| 8 Gaz de France | T | 725 | $2K + 2KOH \rightarrow 2K_2O + H_2(g)$ |
| | T | 825 | $2K_2O \rightarrow 2K + K_2O_2$ |
| | T | 125 | $2K_2O_2 + 2H_2O \rightarrow 4KOH - O_2(g)$ |
| 9 Nickel Ferrite | T | 800 | $NiMnFe_4O_6 + 2H_2O \rightarrow NiMnFe_4O_8 + 2H_2(g)$ |
| | T | 800 | $NiMnFe_4O_8 \rightarrow NiMnFe_4O_6 + O_2(g)$ |
| 10 Aachen Univ Julich 1972 | T | 850 | $2Cl_2(g) + 2H_2O(g) \rightarrow 4HCl(g) + O_2(g)$ |
| | T | 170 | $2CrCl_2 + 2HCl \rightarrow 2CrCl_3 + H_2(g)$ |
| | T | 800 | $2CrCl_3 \rightarrow 2CrCl_2 + Cl_2(g)$ |
| 11 Ispra Mark 1C | T | 100 | $2CuBr_2 + Ca(OH)_2 \rightarrow 2CuO + 2CaBr_2 + H_2O$ |
| | T | 900 | $4CuO(s) \text{->} 2Cu_2O(s) + O_2(g)$ |
| | T | 730 | $CaBr_2 + 2H_2O \rightarrow Ca(OH)_2 + 2HBr$ |
| | T | 100 | $Cu_2O + 4HBr \rightarrow 2CuBr_2 + H_2(g) + H_2O$ |
| 12 LASL- U | T | 25 | $3CO_2 + U_3O_8 + H_2O \rightarrow 3UO_2CO_3 + H_2(g)$ |
| | T | 250 | $3UO_2CO_3 \rightarrow 3CO_2(g) + 3UO_3$ |
| | T | 700 | $6UO_3(s) \rightarrow 2U_3O_8(s) + O_2(g)$ |
| 13 Ispra Mark 8 | T | 700 | $3MnCl_2 + 4H_2O \rightarrow Mn_3O_4 + 6HCl + H_2(g)$ |
| | T | 900 | $3MnO_2 \rightarrow Mn_3O_4 + O_2(g)$ |
| | T | 100 | $4HCl + Mn_3O_4 \rightarrow 2MnCl_2(a) + MnO_2 + 2H_2O$ |
| 14 Ispra Mark 6 | T | 850 | $2Cl_2(g) + 2H_2O(g) \rightarrow 4HCl(g) + O_2(g)$ |
| | T | 170 | $2CrCl_2 + 2HCl \rightarrow 2CrCl_3 + H_2(g)$ |
| | T | 700 | $2CrCl_3 + 2FeCl_2 \rightarrow 2CrCl_2 + 2FeCl_3$ |
| | T | 420 | $2FeCl_3 \rightarrow Cl_2(g) + 2FeCl_2$ |
| 15 Ispra Mark 4 | T | 850 | $2Cl_2(g) + 2H_2O(g) \rightarrow 4HCl(g) + O_2(g)$ |
| | T | 100 | $2FeCl_2 + 2HCl + S \rightarrow 2FeCl_3 + H_2S$ |
| | T | 420 | $2FeCl_3 \rightarrow Cl_2(g) + 2FeCl_2$ |
| | T | 800 | $H_2S \rightarrow S + H_2(g)$ |
| 16 Ispra Mark 3 | T | 850 | $2Cl_2(g) + 2H_2O(g) \rightarrow 4HCl(g) + O_2(g)$ |

(continued)

| Cycle Name | T/E* | T (°C) | Reaction |
|---|---|---|---|
| | T | 170 | $2VOCl_2 + 2HCl \rightarrow 2VOCl_3 + H_2(g)$ |
| | T | 200 | $2VOCl_3 \rightarrow Cl_2(g) + 2VOCl_2$ |
| 17 Ispra Mark 2 (1972) | T | 100 | $Na_2O.MnO_2 + H_2O \rightarrow 2NaOH(a) + MnO_2$ |
| | T | 487 | $4MnO_2(s) \rightarrow 2Mn_2O_3(s) + O_2(g)$ |
| | T | 800 | $Mn_2O_3 + 4NaOH \rightarrow 2Na_2O.MnO_2 + H_2(g) + H_2O$ |
| 18 Ispra CO/Mn3O4 | T | 977 | $6Mn_2O_3 \rightarrow 4Mn_3O_4 + O_2(g)$ |
| | T | 700 | $C(s) + H_2O(g) \rightarrow CO(g) + H_2(g)$ |
| | T | 700 | $CO(g) + 2Mn_3O_4 \rightarrow C + 3Mn_2O_3$ |
| 19 Ispra Mark 7B | T | 1000 | $2Fe_2O_3 + 6Cl_2(g) \rightarrow 4FeCl_3 + 3O_2(g)$ |
| | T | 420 | $2FeCl_3 \rightarrow Cl_2(g) + 2FeCl_2$ |
| | T | 650 | $3FeCl_2 + 4H_2O \rightarrow Fe_3O_4 + 6HCl + H_2(g)$ |
| | T | 350 | $4Fe_3O_4 + O_2(g) \rightarrow 6Fe_2O_3$ |
| | T | 400 | $4HCl + O_2(g)$ -> $2Cl_2(g) + 2H_2O$ |
| 20 Vanadium Chloride | T | 850 | $2Cl_2(g) + 2H_2O(g) \rightarrow 4HCl(g) + O_2(g)$ |
| | T | 25 | $2HCl + 2VCl_2 \rightarrow 2VCl_3 + H_2(g)$ |
| | T | 700 | $2VCl_3 \rightarrow VCl_4 + VCl_2$ |
| | T | 25 | $2VCl_4$ -> $Cl_2(g) + ZVCl_3$ |
| 21 Ispra Mark 7A | T | 420 | $2FeCl_3(l) \rightarrow Cl_2(g) + 2FeCl_2$ |
| | T | 650 | $3FeCl_2 + 4H_2O(g) \rightarrow Fe_3O_4 + 6HCl(g) + H_2(g)$ |
| | T | 350 | $4Fe_3O_4 + O_2(g) \rightarrow 6Fe_2O_3$ |
| | T | 1000 | $6Cl_2(g) + 2Fe_2O_3 \rightarrow 4FeCl_3(g) + 3O_2(g)$ |
| | T | 120 | $Fe_2O_3 + 6HCl(a) \rightarrow 2FeCl_3(a) + 3H_2O(1)$ |
| 22 GA Cycle 23 | T | 800 | $H_2S(g) \rightarrow S(g) + H_2(g)$ |
| | T | 850 | $2H_2SO_4(g) \rightarrow 2SO_2(g) + 2H_2O(g) + O_2(g)$ |
| | T | 700 | $3S + 2H_2O(g) \rightarrow 2H_2S(g) + SO_2(g)$ |
| | T | 25 | $3SO_2(g) + 2H_2O(1) \rightarrow 2H_2SO_4(a) + S$ |
| | T | 25 | $S(g) + O_2(g) \rightarrow SO_2(g)$ |
| 23 US -Chlorine | T | 850 | $2Cl_2(g) + 2H_2O(g) \rightarrow 4HCl(g) + O_2(g)$ |
| | T | 200 | $2CuCl + 2HCl \rightarrow 2CuCl_2 + H_2(g)$ |
| | T | 500 | $2CuCl_2 \rightarrow 2CuCl + Cl_2(g)$ |
| 24 Ispra Mark | T | 420 | $2FeCl_3 \rightarrow Cl_2(g) + 2FeCl_2$ |
| | T | 150 | $3Cl_2(g) + 2Fe_3O_4 + 12HCl \rightarrow 6FeCl_3 + 6H_2O + O_2(g)$ |
| | T | 650 | $3FeCl_2 + 4H_2O \rightarrow Fe_3O_4 + 6HCl + H_2(g)$ |
| 25 Ispra Mark 6C | T | 850 | $2Cl_2(g) + 2H_2O(g) \rightarrow 4HCl(g) + O_2(g)$ |
| | T | 170 | $2CrCl_2 + 2HCl \rightarrow 2CrCl_3 + H_2(g)$ |
| | T | 700 | $2CrCl_3 + 2FeCl_2 \rightarrow 2CrCl_2 + 2FeCl_3$ |
| | T | 500 | $2CuCl_2$ -> $2CuCl + Cl_2(g)$ |
| | T | 300 | $CuCl + FeCl_3 \rightarrow CuCl_2 + FeCl_2$ |

*T = thermochemical, E = electrochemical.

TABLE 7. Thermally reversible reaction cycles regarding $H_2O$ catalyst and $H_2$. [C. Perkins and A.W. Weimer, Solar-Thermal Production of Renewable Hydrogen, ΛIChE Journal, 55 (2), (2009), pp. 286-293.]

| Cycle | Reaction Steps |
|---|---|
| *High Temperature Cycles* | |
| Zn/ZnO | $ZnO \xrightarrow{1600-1800\ ^{\circ}C} Zn + \frac{1}{2}O_2$ |

(continued)

| Cycle | Reaction Steps |
|---|---|
| *High Temperature Cycles* | |
| | $Zn + H_2O \xrightarrow{400\ °C} ZnO + H_2$ |
| $FeO/Fe_3O_4$ | $Fe_3O_4 \xrightarrow{2000-2300\ °C} 3FeO + \frac{1}{2}O_2$ |
| | $3FeO + H_2O \xrightarrow{400\ °C} Fe_3O_4 + H_2$ |
| Cadmium carbonate | $CdO \xrightarrow{1450-1500\ °C} Cd + \frac{1}{2}O_2$ |
| | $Cd + H_2O + CO_2 \xrightarrow{350\ °C} CdCO_3 + H_2$ |
| | $CdCO_3 \xrightarrow{500\ °C} CO_2 + CdO$ |
| Hybrid cadmium | $CdO \xrightarrow{1450-1500\ °C} Cd + \frac{1}{2}O_2$ |
| | $Cd + 2H_2O \xrightarrow{25\ °C,\ electrochemical} Cd(OH)_2 + H_2$ |
| | $Cd(OH)_2 \xrightarrow{375\ °C} CdO + H_2O$ |
| Sodium manganese | $Mn_2O_3 \xrightarrow{1400-1600\ °C} 2MnO + \frac{1}{2}O_2$ |
| | $2MnO + 2NaOH \xrightarrow{627\ °C} 2NaMnO_2 + H_2$ |
| | $2NaMnO_2 + H_2O \xrightarrow{25\ °C} Mn_2O_3 + 2NaOH$ |
| M-Ferrite (M = Co, Ni, Zn) | $Fe_{3-x}M_xO_4 \xrightarrow{1200-1400\ °C} Fe_{3-x}M_xO_{4-\delta} + \frac{\delta}{2}O_2$ |
| | $Fe_{3-x}M_xO_{4-\delta} + \delta H_2O \xrightarrow{1000-1200\ °C} Fe_{3-x}M_xO_4 + \delta H_2$ |
| *Low Temperature Cycles* | |
| Sulfur-Iodine | $H_2SO_4 \xrightarrow{850\ °C} SO_2 + H_2O + \frac{1}{2}O_2$ |
| | $I_2 + SO_4 + 2H_2O \xrightarrow{100\ °C} 2HI + H_2SO_4$ |
| | $2HI \xrightarrow{300\ °C} I_2 + H_2$ |
| Hybrid sulfur | $H_2SO_4 \xrightarrow{850\ °C} SO_2 + H_2O + \frac{1}{2}O_2$ |
| | $SO_2 + 2H_2O \xrightarrow{77\ °C,\ electrochemical} H_2SO_4 + H_2$ |
| Hybrid copper chloride | $Cu_2OCl_2 \xrightarrow{550\ °C} 2CuCl + \frac{1}{2}O_2$ |
| | $2Cu + 2HCl \xrightarrow{425\ °C} H_2 + 2CuCl$ |

(continued)

| *Low Temperature Cycles* | |
|---|---|
| | $4CuCl \xrightarrow{25\ °C,\ electrochemical} 2Cu + 2CuCl_2$ |
| | $2CuCl_2 + H_2O \xrightarrow{325\ °C} Cu_2OCl_2 + 2HCl$ |

TABLE 8. Thermally reversible reaction cycles regarding $H_2O$ catalyst and $H_2$. [S. Abanades, P. Charvin, G. Flamant, P. Neveu, Screening of Water-Splitting Thermochemical Cycles Potentially Attractive for Hydrogen Production by Concentrated Solar Energy, Energy, 31, (2006), pp. 2805-2822.

| No ID | Name of the cycle | List of elements | Number of chemical steps | Maximum temperature (°C) | Reactions | |
|---|---|---|---|---|---|---|
| 6 | ZnO/Zn | Zn | 2 | 2000 | $ZnO \rightarrow Zn + 1/2O_2$ | (2000 °C) |
| | | | | | $Zn + H_2O \rightarrow ZnO + H_2$ | (1100 °C) |
| 7 | $Fe_3O_4$/FeO | Fe | 2 | 2200 | $Fe_3O_4 \rightarrow 3FeO + 1/2O_2$ | (2200 °C) |
| | | | | | $3FeO + H_2O \rightarrow Fe_3O_4 + H_2$ | (400 °C) |
| 194 | $In_2O_3$/$In_2O$ | In | 2 | 2200 | $In_2O_3 \rightarrow In_2O + O_2$ | (2200 °C) |
| | | | | | $In2O + 2H_2O \rightarrow In_2O_3 + 2H_2$ | (800 °C) |
| 194 | $SnO_2$/Sn | Sn | 2 | 2650 | $SnO_2 \rightarrow Sn + O_2$ | (2650 °C) |
| | | | | | $Sn + 2H_2O \rightarrow SnO_2 + 2H_2$ | (600 °C) |
| 83 | MnO/ $MnSO_4$ | Mn, S | 2 | 1100 | $MnSO_4 \rightarrow MnO + SO_2 + 1/2O_2$ | (1100 °C) |
| | | | | | $MnO + H_2O + SO_2 \rightarrow MnSO_4 + H_2$ | (250 °C) |
| 84 | FeO/$FeSO_4$ | Fe, S | 2 | 1100 | $FeSO_4 \rightarrow FeO + SO_2 + 1/2O_2$ | (1100 °C) |
| | | | | | $FeO + H_2O + SO_2 \rightarrow FeSO_4 + H_2$ | (250 °C) |
| 86 | CoO/ $CoSO_4$ | Co, S | 2 | 1100 | $CoSO_4 \rightarrow CoO + SO_2 + 1/2O_2$ | (1100 °C) |
| | | | | | $CoO + H_2O + SO_2 \rightarrow CoSO_4 + H_2$ | (200 °C) |
| 200 | $Fe_3O_4$/ $FeCl_2$ | Fe, Cl | 2 | 1500 | $Fe_3O_4 + 6HCl \rightarrow 3FeCl_2 + 3H_2O + 1/2O_2$ | (1500 °C) |
| | | | | | $3FeCl_2 + 4H_2O \rightarrow Fe_3O_4 + 6HCl + H_2$ | (700 °C) |
| 14 | $FeSO_4$ Julich | Fe, S | 3 | 1800 | $3FeO(s) + H_2O \rightarrow Fe_3O_4(s) + H_2$ | (200 °C) |
| | | | | | $Fe_3O_4(s) + FeSO_4 \rightarrow 3Fe_2O_3(s) + 3SO_2(g) + 1/2O_2$ | (800 °C) |
| | | | | | $3Fe_2O_3(s) + 3SO_2 \rightarrow 3FeSO_4 + 3FeO(s)$ | (1800 °C) |
| 85 | $FeSO_4$ | Fe, S | 3 | 2300 | $3FeO(s) + H_2O \rightarrow Fe_3O_4(s) + H_2$ | (200 °C) |
| | | | | | $Fe_3O_4(s) + 3SO_3(g) \rightarrow 3FeSO_4 + 1/2O_2$ | (300 °C) |
| | | | | | $FeSO_4 \rightarrow FeO + SO_3$ | (2300 °C) |
| 109 | C7 IGT | Fe, S | 3 | 1000 | $Fe_2O_3(s) + 2SO_2(g) + H_2O \rightarrow 2FeSO_4(s) + H_2$ | (125 °C) |
| | | | | | $2FeSO_4(s) \rightarrow Fe_2O_3(s) + SO_2(g) + SO_3(g)$ | (700 °C) |
| | | | | | $SO_3(g) \rightarrow SO_2(g) + 1/2O_2(g)$ | (1000 °C) |
| 21 | Shell Process | Cu, S | 3 | 1750 | $6Cu(s) + 3H_2O \rightarrow 3Cu_2O(s) + 3H_2$ | (500 °C) |

(continued)

| No ID | Name of the cycle | List of elements | Number of chemical steps | Maximum temperature (°C) | Reactions | |
|---|---|---|---|---|---|---|
| | | | | | $Cu_2O(s) + 2SO_2 + 3/2O_2 \rightarrow 2CuSO_4$ | (300 °C) |
| | | | | | $2Cu_2O(s)+2CuSO_4 \rightarrow 6Cu+2SO_2+3O_2$ | (1750 °C) |
| 87 | $CuSO_4$ | Cu, S | 3 | 1500 | $Cu_2O(s)+H_2O(g) \rightarrow Cu(s)+Cu(OH)_2$ | (1500 °C) |
| | | | | | $Cu(OH)_2+SO_2(g) \rightarrow CuSO_4+H_2$ | (100 °C) |
| | | | | | $CuSO_4 + Cu(s) \rightarrow Cu_2O(s) + SO_2 + 1/2O_2$ | (1500 °C) |
| 110 | LASL $BaSO_4$ | Ba, Mo, S | 3 | 1300 | $SO_2 + H_2O + BaMoO_4 \rightarrow BaSO_3 + MoO_3 + H_2O$ | (300 °C) |
| | | | | | $BaSO_3 + H_2O \rightarrow BaSO_4 + H_2$ | |
| | | | | | $BaSO_4(s) + M_OO_3(S) \rightarrow BaMoO_4(s) + SO_2(g) + 1/2O_2$ | (1300 °C) |
| 4 | Mark 9 | Fe, Cl | 3 | 900 | $3FeCl_2 + 4H_2O \rightarrow Fe_3O_4 + 6HCl + H_2$ | (680 °C) |
| | | | | | $Fe_3O_4 + 3/2Cl_2 + 6HCl \rightarrow 3FeCl_3 + 3H_2O + 1/2O_2$ | (900 °C) |
| | | | | | $3FeCl_3 \rightarrow 3FeCl_2 + 3/2Cl_2$ | (420 °C) |
| 16 | Euratom 1972 | Fe, Cl | 3 | 1000 | $H_2O + Cl_2 \rightarrow 2HCl + 1/2O_2$ | (1000 °C) |
| | | | | | $2HCl + 2FeCl_2 \rightarrow 2FeCl_3 + H_2$ | (600 °C) |
| | | | | | $2FeCl_3 \rightarrow 2FeCl_2 + Cl_2$ | (350 °C) |
| 20 | Cr, Cl Julich | Cr, Cl | 3 | 1600 | $2CrCl_2(s, T_f = 815\ °C) + 2HCl \rightarrow 2CrCl_3(s) + H_2$ | (200 °C) |
| | | | | | $2CrCl_3\ (s, T_f = 1150\ °C) \rightarrow 2CrCl_2(s) + Cl_2$ | (1600 °C) |
| | | | | | $H_2O + Cl_2 \rightarrow 2HCL + 1/2O_2$ | (1000 °C) |
| 27 | Mark 8 | Mn, Cl | 3 | 1000 | $6MnCl_2(l) + 8H_2O \rightarrow 2Mn_3O_4 + 12HCl + 2H_2$ | (700 °C) |
| | | | | | $3Mn_3O_4(s) + 12HCl \rightarrow 6MnCl_2(s) + 3MnO_2(s)+6H_2O$ | (100 °C) |
| | | | | | $3MnO_2(s) \rightarrow Mn_3O_4(s) + O_2$ | (1000 °C) |
| 37 | Ta Funk | Ta, Cl | 3 | 2200 | $H_2O + Cl_2 \rightarrow 2HCl + 1/2O_2$ | (1000 °C) |
| | | | | | $2TaCl_2 + 2HCl \rightarrow 2TaCl_3 + H_2$ | (100 °C) |
| | | | | | $2TaCl_3 \rightarrow 2TaCl_2 + Cl_2$ | (2200 °C) |
| 78 | Mark 3 Euratom JRC | V, Cl | 3 | 1000 | $Cl_2(g) + H_2O(g) \rightarrow 2HCl(g) + 1/2O_2(g)$ | (1000 °C) |
| | Ispra (Italy) | | | | $2VOCl_2(s) + 2HCl(g) \rightarrow 2VOCl_3(g) + H_2(g)$ | (170 °C) |
| | | | | | $2VOCl_3(g) \rightarrow Cl_2(g) + 2VOCl_2(s)$ | (200 °C) |
| 144 | Bi, Cl | Bi, Cl | 3 | 1700 | $H_2O + Cl_2 \rightarrow 2HCl + 1/2O_2$ | (1000 °C) |
| | | | | | $2BiCl_2 + 2HCl \rightarrow 2BiCl_3 + H_2$ | (300 °C) |
| | | | | | $2BiCl_3(T_f = 233\ °C, T_{cb} = 441\ °C) \rightarrow 2BiCl_2 + Cl_2$ | (1700 °C) |
| 146 | Fe, Cl Julich | Fe, Cl | 3 | 1800 | $3Fe(s) + 4H_2O \rightarrow Fe_3O4(s) + 4H_2$ | (700 °C) |

(continued)

| No ID | Name of the cycle | List of elements | Number of chemical steps | Maximum temperature (°C) | Reactions | |
|---|---|---|---|---|---|---|
| | | | | | $Fe_3O_4 + 6HCl \rightarrow 3FeCl_2(g) + 3H_2O + 1/2O_2$ | (1800 °C) |
| | | | | | $3FeCl_2 + 3H_2 \rightarrow 3Fe(s) + 6HCl$ | (1300 °C) |
| 147 | Fe, Cl Cologne | Fe, Cl | 3 | 1800 | $3/2FeO(s) + 3/2Fe(s) + 2.5H_2O \rightarrow Fe_3O_4(s) + 2.5H_2$ | (1000 °C) |
| | | | | | $Fe_3O_4 + 6HCl \rightarrow 3FeCl_2(g) + 3H_2O + 1/2O_2$ | (1800 °C) |
| | | | | | $3FeCl_2 + H_2O + 3/2H_2 \rightarrow {}_{3/2}FeO(s) + 3/2Fe(s) + 6HCl$ | (700 °C) |
| 25 | Mark 2 | Mn, Na | 3 | 900 | $Mn_2O_3(s) + 4NaOH \rightarrow 2Na_2O \cdot MnO_2 + H_2O + H_2$ | (900 °C) |
| | | | | | $2Na_2O \cdot MnO_2 + 2H_2O \rightarrow 4NaOH + 2MnO_2(s)$ | (100 °C) |
| | | | | | $2MnO_2(s) \rightarrow Mn_2O_3(s) + 1/2O_2$ | (600 °C) |
| 28 | Li, Mn LASL | Mn, Li | 3 | 1000 | $6LiOH + 2Mn_3O_4 \rightarrow 3Li_2O \cdot Mn_2O_3 + 2H_2O + H_2$ | (700 °C) |
| | | | | | $3Li_2O \cdot Mn_2O_3 + 3H_2O \rightarrow 6LiOH + 3Mn_2O_3$ | (80 °C) |
| | | | | | $3Mn_2O_3 \rightarrow 2Mn_3O_4 + 1/2O_2$ | (1000 °C) |
| 199 | Mn PSI | Mn, Na | 3 | 1500 | $2MnO + 2NaOH \rightarrow 2NaMnO_2 + H_2$ | (800 °C) |
| | | | | | $2NaMnO_2 + H_2O \rightarrow Mn_2O_3 + 2NaOH$ | (100 °C) |
| | | | | | $Mn_2O_3(l)$ -> $2MnO(s) + 1/2O_2$ | (1500 °C) |
| 178 | Fe, MORNL | Fe, | 3 | 1300 | $2Fe_3O_4 + 6MOH$-> $3MFeO_2 + 2H_2O + H_2$ | (500 °C) |
| | | (M = Li,K, Na) | | | $3MFeO_2 + 3H_2O \rightarrow 6MOH + 3Fe_2O_3$ | (100 °C) |
| | | | | | $3Fe_2O_3(s) \rightarrow 2Fe_3O_4(s) + 1/2O_2$ | (1300 °C) |
| 33 | Sn Souriau | Sn | 3 | 1700 | $Sn(l) + 2H_2O \rightarrow SnO_2 + 2H_2$ | (400 °C) |
| | | | | | $2 SnO_2(s) \rightarrow 2SnO + O_2$ | (1700 °C) |
| | | | | | $2SnO(s) \rightarrow SnO_2 + Sn(l)$ | (700 °C) |
| 177 | Co ORNL | Co, Ba | 3 | 1000 | $CoO(s) + xBa(OH)_2(s) \rightarrow$ | |
| | | | | | $Ba_xCoO_y(s) + (y-x-1)H_2 + (1+2x-y) H_2O$ | (850 °C) |
| | | | | | $Ba_xCoO_y(s) + xH_2O \rightarrow xBa(OH)_2(s) + CoO(y-x)(s)$ | (100 °C) |
| | | | | | $CoO(y-x)(s) \rightarrow CoO(s) + (y-x-1)/2O_2$ | (1000 °C) |
| 183 | Ce, Ti ORNL | Ce, Ti, Na | 3 | 1300 | $2CeO_2(s) + 3TiO_2(s) \rightarrow$- $Ce_2O_3 \cdot 3TiO_2 + 1/2O_2$ | (800-1300 °C) |
| | | | | | $Ce_2O_3 \cdot 3TiO_2 + 6NaOH \rightarrow 2CeO_2 + 3Na_2TiO_3 + 2H_2O + II_2$ | (800 °C) |
| | | | | | $CeO_2 + 3NaTiO_3 + 3H_2O \rightarrow CeO_2(s) + 3TiO_2(s) + 6NaOH$ | (150 °C) |
| 269 | Ce, Cl GA | Ce, Cl | 3 | 1000 | $H_2O + Cl_2 \rightarrow 2HCl + 1/2O_2$ | (1000 °C) |
| | | | | | $2CeO_2 + 8HCl \rightarrow 2CeCl_3 + 4H_2O + Cl_2$ | (250 °C) |

(continued)

| No ID | Name of the cycle | List of elements | Number of chemical steps | Maximum temperature (°C) | Reactions | |
|---|---|---|---|---|---|---|
| | | | | | $2CeCl_3 + 4H_2O \rightarrow 2CeO_2 + 6HCl + H_2$ | (800 °C) |

Reactants to form $H_2O$ catalyst may comprise a source of O such as an O species and a source of H. The source of the O species may comprise at least one of $O_2$, air, and a compound or admixture of compounds comprising O. The compound comprising oxygen may comprise an oxidant. The compound comprising oxygen may comprise at least one of an oxide, oxyhydroxide, hydroxide, peroxide, and a superoxide. Suitable exemplary metal oxides are alkali oxides such as $Li_2O$, $Na_2O$, and $K_2O$, alkaline earth oxides such as MgO, CaO, SrO, and BaO, transition oxides such as NiO, $Ni_2O_3$, FeO, $Fe_2O_3$, and CoO, and inner transition and rare earth metals oxides, and those of other metals and metalloids such as those of Al, Ga, In, Si, Ge, Sn, Pb, As, Sb, Bi, Se, and Te, and mixtures of these and other elements comprising oxygen. The oxides may comprise a oxide anion such as those of the disclosure such as a metal oxide anion and a cation such as an alkali, alkaline earth, transition, inner transition and rare earth metal cation, and those of other metals and metalloids such as those of Al, Ga, In, Si, Ge, Sn, Pb, As, Sb, Bi, Se, and Te such as $MM'_{2x}O_{3x+1}$ or $MM'_{2x}O_4$ (M = alkaline earth, M' = transition metal such as Fe or Ni or Mn, x = integer) and $M_2M'_{2x}O_{3x+1}$ or $M_2M'_{2x}O_4$ (M = alkali, M' = transition metal such as Fe or Ni or Mn, x = integer). Suitable exemplary metal oxyhydroxides are AlO(OH), ScO(OH), YO(OH), VO(OH), CrO(OH), MnO(OH) ($\alpha$ -MnO(OH) groutite and y -MnO(OH) manganite), FeO(OH), CoO(OH), NiO(OH), RhO(OH), GaO(OH), InO(OH), $Ni_{1/2}Co_{1/2}O(OH)$, and $Ni_{1/3}Co_{1/3}Mn_{1/3}O(OH)$. Suitable exemplary hydroxides are those of metals such as alkali, alkaline earth, transition, inner transition, and rare earth metals and those of other metals and metalloids such as such as Al, Ga, In, Si, Ge, Sn, Pb, As, Sb, Bi, Se, and Te, and mixtures. Suitable complex ion hydroxides are $Li_2Zn(OH)_4$, $Na_2Zn(OH)_4$, $Li_2Sn(OH)_4$, $Na_2Sn(OH)_4$, $Li_2Pb(OH)_4$, $Na_2Pb(OH)_4$, $LiSb(OH)_4$, $NaSb(OH)_4$, $LiAl(OH)_4$, $NaAl(OH)_4$, $LiCr(OH)_4$, $NaCr(OH)_4$, $Li_2Sn(OH)_6$, and $Na_2Sn(OH)_6$. Additional exemplary suitable hydroxides are at least one from $Co(OH)_2$, $Zn(OH)_2$, $Ni(OH)_2$, other transition metal hydroxides, $Cd(OH)_2$, $Sn(OH)_2$, and Pb(OH). Suitable exemplary peroxides are $H_2O_2$, those of organic compounds, and those of metals such as $M_2O_2$ where M is an alkali metal such as $Li_2O_2$, $Na_2O_2$, $K_2O_2$, other ionic peroxides such as those of alkaline earth peroxides such as Ca, Sr, or Ba peroxides, those of other electropositive metals such as those of lanthanides, and covalent metal peroxides such as those of Zn, Cd, and Hg. Suitable exemplary superoxides are those of metals $MO_2$ where M is an alkali metal such as $NaO_2$, $KO_2$, $RbO_2$, and $CsO_2$, and alkaline earth metal superoxides.

In other embodiments, the oxygen source is gaseous or readily forms a gas such as $NO_2$, NO, $N_2O$, $CO_2$, $P_2O_3$, $P_2O_5$, and $SO_2$. The reduced oxide product from the formation of $H_2O$ catalyst such as C, N, $NH_3$, P, or S may be converted back to the oxide again by combustion with oxygen or a source thereof as given in Mills Prior Applications. The cell may produce excess heat that may be used for heating applications, or the heat may be converted to electricity by means such as a Rankine or Brayton system. Alternatively, the cell may be used to synthesize lower-energy hydrogen species such as molecular hydrino and hydrino hydride ions and corresponding compounds.

In an embodiment, the reaction mixture to form hydrinos for at least one of production of lower-energy hydrogen species and compounds and production of energy comprises a source of atomic hydrogen and a source of catalyst comprising at least one of H and O such those of the disclosure such as $H_2O$ catalyst. The reaction mixture may further comprise an acid such as $H_2SO_3$, $H_2SO_4$, $H_2CO_3$, $HNO_2$, $HNO_3$, $HClO_4$, $H_3PO_3$, and $H_3PO_4$ or a source of an acid such as an acid anhydride or anhydrous acid. The latter may comprise at least one of the group of $SO_2$, $SO_3$, $CO_2$, $NO_2$, $N_2O_3$, $N_2O_5$, $Cl_2O_7$, $PO_2$, $P_2O_3$, and $P_2O_5$. The reaction mixture may comprise at least one of a base and a basic anhydride such as $M_2O$ (M= alkali), M'O (M' = alkaline earth), ZnO or other transition metal oxide, CdO, CoO, SnO, AgO, HgO, or $Al_2O_3$. Further exemplary anhydrides comprise metals that are stable to $H_2O$ such as Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr, In, and Pb. The anhydride may be an alkali metal or alkaline earth metal oxide, and the hydrated compound may comprise a hydroxide. The reaction mixture may comprise an oxyhydroxide such as FeOOH, NiOOH, or CoOOH. The reaction mixture may comprise at least one of a source of $H_2O$ and $H_2O$. The $H_2O$ may be formed reversibly by hydration and dehydration reactions in the presence of atomic hydrogen. Exemplary reactions to form $H_2O$ catalyst are

$$Mg(OH)_2 \text{ to } MgO + H_2O \quad (254)$$

$$2LiOH \text{ to } Li_2O + H_2O \quad (255)$$

$$H_2CO_3 \text{ to } CO_2 + H_2O \quad (256)$$

$$2FeOOH \text{ to } Fe_2O_3 + H_2O \quad (257)$$

In an embodiment, $H_2O$ catalyst is formed by dehydration of at least one compound comprising phosphate such as salts of phosphate, hydrogen phosphate, and dihydrogen phosphate such as those of cations such as cations comprising metals such as alkali, alkaline earth, transition, inner transition, and rare earth metals, and those of other metals and metalloids such as those of Al, Ga, In, Si, Ge, Sn, Pb, As, Sb, Bi, Se, and Te, and mixtures to form a condensed phosphate such as at least one of polyphosphates such as $[P_nO_{3n+1}]^{(n+2)-}$, long chain metaphosphates such as $[(PO_3)_n]^{n-}$, cyclic metaphosphates such as $[(PO_3)_n]^{n-}$with n ≥ 3, and ultraphosphates such as $P_4O_{10}$. Exemplary reactions are

$$(n\text{-}2)NaH_2PO_4 + 2Na_2HPO_4 \xrightarrow{heat} Na_{n+2}P_nO_{3n+1} \text{ (polyphosphate)} + (n\text{-}1)H_2O \quad (258)$$

$$nNaH_2PO_4 \xrightarrow{heat} (NaPO_3)_n \text{ (metaphosphate)} + nH_2O \quad (259)$$

The reactants of the dehydration reaction may comprise R-Ni that may comprise at least one of $Al(OH)_3$, and $Al_2O_3$. The reactants may further comprise a metal M such as those of the disclosure such as an alkali metal, a metal hydride MH, a metal hydroxide such as those of the disclosure such as an alkali hydroxide and a source of hydrogen such as $H_2$ as well as intrinsic hydrogen. Exemplary reactions are

$$2Al(OH)_3 + \text{ to } Al_2O_3 + 3H_2O \quad (260)$$

$$Al_2O_3 + 2NaOH \text{ to } 2NaAlO_2 + H_2O \quad (261)$$

$$3MH + Al(OH)_3 + \text{ to } M_3Al + 3H_2O \quad (262)$$

The reaction product may comprise an alloy. The R-Ni may be regenerated by rehydration. The reaction mixture and dehydration reaction to form $H_2O$ catalyst may comprise and involve an oxyhydroxide such as those of the disclosure as given in the exemplary reaction:

$$3Co(OH)_2 \text{ to } 2CoOOH + Co + 2H_2O \quad (263)$$

The atomic hydrogen may be formed from $H_2$ gas by dissociation. The hydrogen dissociator may be one of those of the disclosure such as R-Ni or a noble metal or transition metal on a support such as Ni or Pt or Pd on carbon or $Al_2O_3$. Alternatively, the atomic H may be from H permeation through a membrane such as those of the disclosure. In an embodiment, the cell comprises a membrane such as a ceramic membrane to allow $H_2$ to diffuse through selectively while preventing $H_2O$ diffusion. In an embodiment, at least one of $H_2$ and atomic H are supplied to the cell by electrolysis of an electrolyte comprising a source of hydrogen such as an aqueous or molten electrolyte comprising $H_2O$. In an embodiment, $H_2O$ catalyst is formed reversibly by dehydration of an acid or base to the anhydride form. In an embodiment, the reaction to form the catalyst $H_2O$ and hydrinos is propagated by changing at least one of the cell pH or activity, temperature, and pressure wherein the pressure may be changed by changing the temperature. The activity of a species such as the acid, base, or anhydride may be changed by adding a salt as known by those skilled in the art. In an embodiment, the reaction mixture may comprise a material such as carbon that may absorb or be a source of a gas such as $H_2$ or acid anhydride gas to the reaction to form hydrinos. The reactants may be in any desired concentrations and ratios. The reaction mixture may be molten or comprise an aqueous slurry.

In another embodiment, the source of the $H_2O$ catalyst is the reaction between an acid and a base such as the reaction between at least one of a hydrohalic acid, sulfuric, nitric, and nitrous, and a base. Other suitable acid reactants are aqueous solutions of $H_2SO_4$, HCl, HX (X-halide), $H_3PO_4$, $HClO_4$, $HNO_3$, HNO, $HNO_2$, $H_2S$, $H_2CO_3$, $H_2MoO_4$, $HNbO_3$, $H_2B_4O_7$ (M tetraborate), $HBO_2$, $H_2WO_4$, $H_2CrO_4$, $H_2Cr_2O_7$, $H_2TiO_3$, $HZrO_3$, $MAlO_2$, $HMn_2O_4$, $HIO_3$, $HIO_4$, $HClO_4$, or an

organic acidic such as formic or acetic acid. Suitable exemplary bases are a hydroxide, oxyhydroxide, or oxide comprising an alkali, alkaline earth, transition, inner transition, or rare earth metal, or Al, Ga, In, Sn, or Pb.

In an embodiment, the reactants may comprise an acid or base that reacts with base or acid anhydride, respectively, to form $H_2O$ catalyst and the compound of the cation of the base and the anion of the acid anhydride or the cation of the basic anhydride and the anion of the acid, respectively. The exemplary reaction of the acidic anhydride $SiO_2$ with the base NaOH is

$$4NaOH + SiO_2 \text{ to } Na_4SiO_4 + 2H_2O \quad (264)$$

wherein the dehydration reaction of the corresponding acid is

$$H_4SiO_4 \text{ to } 2H_2O + SiO_2 \quad (265)$$

Other suitable exemplary anhydrides may comprise an element, metal, alloy, or mixture such as one from the group of Mo, Ti, Zr, Si, Al, Ni, Fe, Ta, V, B, Nb, Se, Te, W, Cr, Mn, Hf, Co, and Mg. The corresponding oxide may comprise at least one of $MoO_2$, $TiO_2$, $ZrO_2$, $SiO_2$, $Al_2O_3$, NiO, $Ni_2O_3$, FeO, $Fe_2O_3$, $TaO_2$, $Ta_2O_5$, VO, $VO_2$, $V_2O_3$, $V_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MnO, $Mn_3O_4$, $Mn_2O_3$, $MnO_2$, $Mn_2O_7$, $HfO_2$, $Co_2O_3$, CoO, $Co_3O_4$, $Co_2O_3$, and MgO. In an exemplary embodiment, the base comprises a hydroxide such as an alkali hydroxide such as MOH (M = alkali) such as LiOH that may form the corresponding basic oxide such as $M_2O$ such as $Li_2O$, and H2O. The basic oxide may react with the anhydride oxide to form a product oxide. In an exemplary reaction of LiOH with the anhydride oxide with the release of $H_2O$, the product oxide compound may comprise $Li_2MoO_3$ or $Li_2MoO_4$, $Li_2TiO_3$, $Li_2ZrO_3$, $Li_2SiO_3$, $LiAlO_2$, $LiNiO_2$, $LiFeO_2$, $LiTaO_3$, $LiVO_3$, $Li_2B_4O_7$, $Li_2NbO_3$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_4$, $Li_2HfO_3$, $LiCoO_2$, and MgO. Other suitable exemplary oxides are at least one of the group of $As_2O_3$, $As_2O_5$, $Sb_2O_3$, $Sb_2O_4$, $Sb_2O_3$, $Bi_2O_3$, $SO_2$, $SO_3$, $CO_2$, $NO_2$, $N_2O_3$, $N_2O_5$, $Cl_2O_7$, $PO_2$, $P_2O_3$, and $P_2O_5$, and other similar oxides known to those skilled in the art. Another example is given by Eq. (257). Suitable reactions of metal oxides are

$$2LiOH + NiO \text{ to } Li_2NiO_2 + H_2O \quad (266)$$

$$3LiOH + NiO \text{ to } LiNiO_2 + H_2O + Li_2O + 1/2H_2 \quad (267)$$

$$4LiOH + Ni_2O_3 \text{ to } 2Li_2NiO_2 + 2H_2O + 1/2O_2 \quad (268)$$

$$2LiOH + Ni_2O_3 \text{ to } 2LiNiO_2 + H_2O \quad (269)$$

Other transition metals such as Fe, Cr, and Ti, inner transition, and rare earth metals and other metals or metalloids such as Al, Ga, In, Si, Ge, Sn, Pb, As, Sb, Bi, Se, and Te may substitute for Ni, and other alkali metal such as Li, Na, Rb, and Cs may substitute for K. The reaction further comprises a source of hydrogen such as hydrogen gas and a dissociator such as $Pd/Al_2O_3$. The hydrogen may be any of proteium, deuterium, or tritium or combinations thereof. The reaction to form $H_2O$ catalyst may comprise the reaction of two hydroxides to form water. The cations of the hydroxides may have different oxidation states such as those of the reaction of an alkali metal hydroxide with a transition metal or alkaline earth hydroxide. The reaction mixture and reaction may further comprise and involve $H_2$ from a source as given in the exemplary reaction:

$$LiOH + 2Co(OH)_2 + 1/2H_2 \text{ to } LiCoO_2 + 3H_2O + Co \quad (270)$$

The reaction mixture and reaction may further comprise and involve a metal M such as an alkali or an alkaline earth metal as given in the exemplary reaction:

$$M + LiOH + Co(OH)_2 \text{ to } LiCoO_2 + H_2O + MH \quad (271)$$

In an embodiment, the reaction mixture comprises a metal oxide and a hydroxide that may serve as a source of H and optionally another source of H wherein the metal such as Fe of the metal oxide can have multiple oxidation states such that it undergoes an oxidation-reduction reaction during the reaction to form $H_2O$ to serve as the catalyst to react with H to form hydrinos. An example is FeO wherein $Fe^{2+}$ can undergo oxidation to $Fe^{3+}$ during the reaction to form the catalyst. An exemplary reaction is

$$FeO + 3LiOH \text{ to } H_2O + LiFeO_2 + H(1/p) + Li_2O \quad (272)$$

In an embodiment, at least one reactant such as a metal oxide, hydroxide, or oxyhydroxide serves as an oxidant wherein the metal atom such as Fe, Ni, Mo, or Mn may be in an oxidation state that is higher than another possible oxidation state. The reaction to form the catalyst and hydrinos may cause the atom to undergo a reduction to at least one lower oxidation state. Exemplary reactions of metal oxides, hydroxides, and oxyhydroxides to form $H_2O$ catalyst are

$$2KOH + NiO \text{ to } K_2NiO_2 + H_2O \quad (273)$$

$$3KOH + NiO \text{ to } KNiO_2 + H_2O + K_2O + 1/2H_2 \quad (274)$$

$$2KOH + Ni_2O_3 \text{ to } 2KNiO_2 + H_2O \quad (275)$$

$$4KOH + Ni_2O_3 \text{ to } 2K_2NiO_2 + 2H_2O + 1/2O_2 \quad (276)$$

$$2KOH + Ni(OH)_2 \text{ to } K_2NiO_2 + 2H_2O \quad (277)$$

$$3KOH + Ni(OH)_2 \text{ to } KNiO_2 + 2H_2O + K_2O + 1/2H_2 \quad (278)$$

$$2KOH + 2NiOOH \text{ to } K_2NiO_2 + 2H_2O + NiO + 1/2O_2 \quad (279)$$

$$KOH + NiOOH \text{ to } KNiO_2 + H_2O \quad (280)$$

$$2NaOH + Fe_2O_3 \text{ to } 2NaFeO_2 + H_2O \quad (281)$$

Other transition such as Ni, Fe, Cr, and Ti, inner transition, and rare earth metals and other metals or metalloids such as Al, Ga, In, Si, Ge, Sn, Pb, As, Sb, Bi, Se, and Te may substitute for Ni or Fe, and other alkali metal such as Li, Na, K, Rb, and Cs may substitute for K or Na. In an embodiment, the reaction mixture comprises at least one of an oxide and a hydroxide of metals that are stable to $H_2O$ such as Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr, and In. Additionally, the reaction mixture comprises a source of hydrogen such as $H_2$ gas and optionally a dissociator such as a noble metal on a support.

The exemplary reaction of the basic anhydride NiO with acid HCl is

$$2HCl + NiO \text{ to } H_2O + NiCl_2 \quad (282)$$

wherein the dehydration reaction of the corresponding base is

$$Ni(OH)_2 \text{ to } H_2O + NiO \quad (283)$$

The reactants may comprise at least one of a Lewis acid or base and a Bronsted-Lowry acid or base. The reaction

mixture and reaction may further comprise and involve a compound comprising oxygen wherein the acid reacts with the compound comprising oxygen to form water as given in the exemplary reaction:

$$2HX + POX_3 \text{ to } H_2O + PX_5 \quad (284)$$

(X = halide). Similar compounds as $POX_3$ are suitable such as those with P replaced by S. Other suitable exemplary anhydrides may comprise an oxide of an element, metal, alloy, or mixture that is soluble in acid such as an a hydroxide, oxyhydroxide, or oxide comprising an alkali, alkaline earth, transition, inner transition, or rare earth metal, or Al, Ga, In, Sn, or Pb such as one from the group of Mo, Ti, Zr, Si, Al, Ni, Fe, Ta, V, B, Nb, Se, Te, W, Cr, Mn, Hf, Co, and Mg. The corresponding oxide may comprise $MoO_2$, $TiO_2$, $ZrO_2$, $SiO_2$, $Al_2O_3$, NiO, FeO or $Fe_2O_3$, $TaO_2$, $Ta_2O_3$, VO, $VO_2$, $V_2O_3$, $V_2O_3$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MnO, $Mn_3O_4$, $Mn_2O_3$, $MnO_2$, $Mn_2O_7$, $HfO_2$, $Co_2O_3$, CoO, $Co_3O_4$, $Co_2O_3$, and MgO. Other suitable exemplary oxides are of those of the group of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr, In, and Pb. In an exemplary embodiment, the acid comprises a hydrohalic acid and the product is $H_2O$ and the metal halide of the oxide. The reaction mixture further comprises a source of hydrogen such as $H_2$ gas and a dissociator such as Pt/C wherein the H and $H_2O$ catalyst react to form hydrinos.

In an embodiment, the solid fuel comprises a $H_2$ source such as a permeation membrane or $H_2$ gas and a dissociator such as Pt/C and a source of $H_2O$ catalyst comprising an oxide or hydroxide that is reduced to $H_2O$. The metal of the oxide or hydroxide may form metal hydride that serves as a source of H. Exemplary reactions of an alkali hydroxide and oxide such as LiOH and $Li_2O$ are

$$LiOH + H_2 \text{ to } H_2O + LiH \quad (285)$$

$$Li_2O + H_2 \text{ to } LiOH + LiH \quad (286)$$

The reaction mixture may comprise oxides or hydroxides of metals that undergo hydrogen reduction to $H_2O$ such as those of Cu, Ni, Pb, Sb, Bi, Co, Cd, Ge, Au, Ir, Fe, Hg, Mo, Os, Pd, Re, Rh, Ru, Se, Ag, Tc, Te, Tl, Sn, W, Al, V, Zr, Ti, Mn, Zn, Cr, In, and Pb and a source of hydrogen such as $H_2$ gas and a dissociator such as Pt/C.

In another embodiment, the reaction mixture comprises a $H_2$ source such as $H_2$ gas and a dissociator such as Pt/C and a peroxide compound such as $H_2O_2$ that decomposes to $H_2O$ catalyst and other products comprising oxygen such as $O_2$. Some of the $H_2$ and decomposition product such as $O_2$ may react to also form $H_2O$ catalyst.

In an embodiment, the reaction to form $H_2O$ as the catalyst comprises an organic dehydration reaction such as that of an alcohol such as a polyalcohol such as a sugar to an aldehyde and $H_2O$. In an embodiment, the dehydration reaction involves the release of $H_2O$ from a terminal alcohol to form an aldehyde. The terminal alcohol may comprise a sugar or a derivative thereof that releases $H_2O$ that may serve as a catalyst. Suitable exemplary alcohols are meso-erythritol, galactitol or dulcitol, and polyvinyl alcohol (PVA). An exemplary reaction mixture comprises a sugar + hydrogen dissociator such as $Pd/Al_2O_3$ + $H_2$. Alternatively, the reaction comprises a dehydration of a metal salt such as one having at least one water of hydration. In an embodiment, the dehydration comprises the loss of $H_2O$ to serve as the catalyst from hydrates such as aquo ions and salt hydrates such as $BaI_2$ $2H_2O$ and $EuBr_2$ $nH_2O$.

In an embodiment, the reaction to form $H_2O$ catalyst comprises the hydrogen reduction of a compound comprising oxygen such as CO, an oxyanion such as $MNO_3$ (M = alkali), a metal oxide such as NiO, $Ni_2O_3$, $Fe_2O_3$, or SnO, a hydroxide such as $Co(OH)_2$, oxyyhydrxides such as FeOOH, CoOOH, and NiOOH, and compounds, oxyanions, oxides, hydroxides, oxyhydroxides, peroxides, superoxides, and other compositions of matter comprising oxygen such as those of the disclosure that are hydrogen reducible to $H_2O$. Exemplary compounds comprising oxygen or an oxyanion are $SOCl_2$, $Na_2S_2O_3$, $NaMnO_4$, $POBr_3$, $K_2S_2O_8$, CO, $CO_2$, NO, $NO_2$, $P_2O_5$, $N_2O_5$, $N_2O$, $SO_2$, $I_2O_5$, $NaClO_2$, NaClO, $K_2SO_4$, and $KHSO_4$. The source of hydrogen for hydrogen reduction may be at least one of $H_2$ gas and a hydride such as a metal hydride such as those of the disclosure. The reaction mixture may further comprise a reductant that may form a compound or ion comprising oxygen. The cation of the oxyanion may form a product compound comprising another anion such as a halide, other chalcogenide, phosphide, other oxyanion, nitride, silicide, arsenide, or other anion of the disclosure. Exemplary reactions are

$$4NaNO_3(c) + 5MgH_2(c) \text{ to } 5MgO(c) + 4NaOH(c) + 3H_2O(l) + 2N_2(g) \quad (287)$$

$$P_2O_5(c) + 6NaH(c) \text{ to } 2Na_3PO_4(c) + 3H_2O(g) \quad (288)$$

$$NaClO_4(c) + 2MgH_2(c) \text{ to } 2MgO(c) + NaCl(c) + 2H_2O(l) \quad (289)$$

$$KHSO_4 + 4H_2 \text{ to } KHS + 4H_2O \quad (290)$$

$$K_2SO_4 + 4H_2 \text{ to } 2KOH + 2H_2O + H_2S \quad (291)$$

$$LiNO_3 + 4H_2 \text{ to } LiNH_2 + 3H_2O \quad (292)$$

$$GeO_2 + 2H_2 \text{ to } Ge + 2H_2O \quad (293)$$

$$CO_2 + H_2 \text{ to } C + 2H_2O \quad (294)$$

$$PbO_2 + 2H_2 \text{ to } 2H_2O + Pb \quad (295)$$

$$V_2O_5 + 5H_2 \text{ to } 2V + 5H_2O \quad (296)$$

$$Co(OH)_2 + H_2 \text{ to } Co + 2H_2O \quad (297)$$

$$Fe_2O_3 + 3H_2 \text{ to } 2Fe + 3H_2O \quad (298)$$

$$3Fe_2O_3 + H_2 \text{ to } 2Fe_3O_4 + H_2O \quad (299)$$

$$Fe_2O_3 + H_2 \text{ to } 2FeO + H_2O \quad (300)$$

$$Ni_2O_3 + 3H_2 \text{ to } 2Ni + 3H_2O \quad (301)$$

$$3Ni_2O_3 + H_2 \text{ to } 2Ni_3O_4 + H_2O \quad (302)$$

$$Ni_2O_3 + H_2 \text{ to } 2NiO + H_2O \quad (303)$$

$$3FeOOH + 1/2H_2 \text{ to } Fe_3O_4 + 2H_2O \quad (304)$$

$$3NiOOH + 1/2H_2 \text{ to } Ni_3O_4 + 2H_2O \quad (305)$$

$$3CoOOH + 1/2H_2 \text{ to } Co_3O_4 + 2H_2O \quad (306)$$

$$FeOOH + 1/2H_2 \text{ to } FeO + H_2O \quad (307)$$

$$NiOOH + 1/2H_2 \text{ to } NiO + H_2O \quad (308)$$

$$CoOOH + 1/2H_2 \text{ to } CoO + H_2O \quad (309)$$

$$SnO + H_2 \text{ to } Sn + H_2O \quad (310)$$

The reaction mixture may comprise a source of an anion or an anion and a source of oxygen or oxygen such as a compound comprising oxygen wherein the reaction to form $H_2O$ catalyst comprises an anion-oxygen exchange reaction with optionally $H_2$ from a source reacting with the oxygen to form $H_2O$. Exemplary reactions are

$$2NaOH + H_2 + S \text{ to } Na_2S + 2H_2O \quad (311)$$

$$2NaOH + H_2 + Te \text{ to } Na_2Te + 2H_2O \quad (312)$$

$$2NaOH + H_2 + Se \text{ to } Na_2Se + 2H_2O \quad (313)$$

$$LiOH + NH_3 \text{ to } LiNH_2 + H_2O \quad (314)$$

In an embodiment, the reaction mixture comprises a source of hydrogen, a compound comprising oxygen, and at least one element capable of forming an alloy with at least one other element of the reaction mixture. The reaction to form $H_2O$ catalyst may comprise an exchange reaction of oxygen of the compound comprising oxygen and an element capable of forming an alloy with the cation of the oxygen compound wherein the oxygen reacts with hydrogen from the source to form $H_2O$. Exemplary reactions are

$$NaOH + 1/2H_2 + Pd \text{ to } NaPb + H_2O \quad (315)$$

$$NaOH + 1/2H_2 + Bi \text{ to } NaBi + H_2O \quad (316)$$

$$NaOH + 1/2H_2 + 2Cd \text{ to } Cd_2Na + H_2O \quad (317)$$

$$NaOH + 1/2H_2 + 4Ga \text{ to } Ga_4Na + H_2O \quad (318)$$

$$NaOH + 1/2H_2 + Sn \text{ to } NaSn + H_2O \quad (319)$$

$$NaAlH_4 + Al(OH)_3 + 5Ni \text{ to } NaAlO_2 + Ni_5Al + H_2O + 5/2H_2 \quad (320)$$

In an embodiment, the reaction mixture comprises a compound comprising oxygen such as an oxyhydroxide and a reductant such as a metal that forms an oxide. The reaction to form $H_2O$ catalyst may comprise the reaction of an oxyhydroxide with a metal to from a metal oxide and $H_2O$. Exemplary reactions are

$$2MnOOH + Sn \text{ to } 2MnO + SnO + H_2O \quad (321)$$

$$4MnOOH + Sn \text{ to } 4MnO + SnO_2 + 2H_2O \quad (322)$$

$$2MnOOH + Zn \text{ to } 2MnO + ZnO + H_2O \quad (323)$$

In an embodiment, the reaction mixture comprises a compound comprising oxygen such as a hydroxide, a source of hydrogen, and at least one other compound comprising a different anion such as halide or another element. The reaction to form $H_2O$ catalyst may comprise the reaction of the hydroxide with the other compound or element wherein the anion or element is exchanged with hydroxide to from another compound of the anion or element, and $H_2O$ is formed with the reaction of hydroxide with $H_2$. The anion may comprise halide. Exemplary reactions are

$$2NaOH + NiCl_2 + H_2 \text{ to } 2NaCl + 2H_2O + Ni \quad (324)$$

$$2NaOH + I_2 + H_2 \text{ to } 2NaI + 2H_2O \quad (325)$$

$$2NaOH + XeF_2 + H_2 \text{ to } 2NaF + 2H_2O + Xe \quad (326)$$

The hydroxide and halide compounds may be selected such that the reaction to form $H_2O$ and another halide is thermally reversible. In an embodiment, the general exchange reaction is

$$NaOH + 1/2H_2 + 1/yM_xCl_y = NaCl + 6H_2O + x/yM \quad (327)$$

wherein exemplary compounds $M_xCl_y$ are $AlCl_3$, $BeCl_2$, $HfCl_4$, $KAgCl_2$, $MnCl_2$, $NaAlCl_4$, $ScCl_3$, $TiCl_2$, $TiCl_3$, $UCl_3$, $UCl_4$, $ZrCl_4$, $EuCl_3$, $GdCl_3$, $MgCl_2$, $NdCl_3$, and $YCl_3$. At an elevated temperature the reaction of Eq. (327) such as in the range of about 100 °C to 2000 °C has at least one of an enthalpy and free energy of about 0 kJ and is reversible. The reversible temperature is calculated from the corresponding thermodynamic parameters of each reaction. Representative are temperature ranges are NaCl-$ScCl_3$ at about 800-900K, NaCl-$TiCl_2$ at about 300-400K, NaCl-$UCl_3$ at about 600-800K, NaCl-$UCl_4$ at about 250-300K, NaCl-$ZrCl_4$ at about 250-300K, NaCl-$MgCl_2$ at about 900-1300K, NaCl-$EuCl_3$ at about 900-1000K, NaCl-$NdCl_3$ at about >1000K, and NaCl-$YCl_3$ at about >1000K.

In an embodiment, the reaction mixture comprises an oxide such as a metal oxide such a alkali, alkaline earth, transition, inner transition, and rare earth metal oxides and those of other metals and metalloids such as those of Al, Ga, In, Si, Ge, Sn, Pb, As, Sb, Bi, Se, and Te, a peroxide such as $M_2O_2$ where M is an alkali metal such as $Li_2O_2$, $Na_2O_2$, and $K_2O_2$, and a superoxide such as $MO_2$ where M is an alkali metal such as $NaO_2$, $KO_2$, $RbO_2$, and $CsO_2$, and alkaline earth metal superoxides, and a source of hydrogen. The ionic peroxides may further comprise those of Ca, Sr, or Ba. The reaction to form $H_2O$ catalyst may comprise the hydrogen reduction of the oxide, peroxide, or superoxide to form $H_2O$. Exemplary reactions are

$$Na_2O + 2H_2 \text{ to } 2NaH + H_2O \quad (328)$$

$$Li_2O_2 + H_2 \text{ to } Li_2O + H_2O \quad (329)$$

$$KO_2 + 3/2H_2 \text{ to } KOH + H_2O \quad (330)$$

In an embodiment, the reaction mixture comprises a source of hydrogen such as at least one of $H_2$, a hydride such as at least one of an alkali, alkaline earth, transition, inner transition, and rare earth metal hydride and those of the disclosure and a source of hydrogen or other compound comprising combustible hydrogen such as a metal amide, and a source of oxygen such as $O_2$. The reaction to form $H_2O$ catalyst may comprise the oxidation of $H_2$, a hydride, or hydrogen compound such as metal amide to form $H_2O$. Exemplary reactions are

$$2NaH + O_2 \text{ to } Na_2O + H_2O \quad (331)$$

$$H_2 + 1/2O_2 \text{ to } H_2O \quad (332)$$

$$LiNH_2 + 2O_2 \text{ to } LiNO_3 + H_2O \quad (333)$$

$$2LiNH_2 + 3/2O_2 \text{ to } 2LiOH + H_2O + N_2 \quad (334)$$

In an embodiment, the reaction mixture comprises a source of hydrogen and a source of oxygen. The reaction to form $H_2O$ catalyst may comprise the decomposition of at least one of source of hydrogen and the source of oxygen to form $H_2O$. Exemplary reactions are

$$NH_4NO_3 \text{ to } N_2O + 2H_2O \quad (335)$$

$$NH_4NO_3 \text{ to } N_2 + 1/2O_2 + 2H_2O \quad (336)$$

$$H_2O_2 \text{ to } 1/2O_2 + H_2O \quad (337)$$

$$H_2O_2 + H_2 \text{ to } 2H_2O \quad (338)$$

The reaction mixtures disclosed herein this Chemical Reactor section further comprise a source of hydrogen to form hydrinos. The source may be a source of atomic hydrogen such as a hydrogen dissociator and $H_2$ gas or a metal hydride such as the dissociators and metal hydrides of the disclosure. The source of hydrogen to provide atomic hydrogen may be a compound comprising hydrogen such as a hydroxide or oxyhydroxide. The H that reacts to form hydrinos may be nascent H formed by reaction of one or more reactants wherein at least one comprises a source of hydrogen such as the reaction of a hydroxide and an oxide. The reaction may also form $H_2O$ catalyst. For example, an oxyhydroxide such as FeOOH could dehydrate to provide $H_2O$ catalyst and also provide nascent H for a hydrino reaction during dehydration:

$$4FeOOH \text{ to } H_2O + Fe_2O_3 + 2FeO + O_2 + 2H(1/4) \quad (339)$$

wherein nascent H formed during the reaction reacts to hydrino. Other exemplary reactions are those of a hydroxide and an oxyhydroxide or an oxide such as NaOH + FeOOH or $Fe_2O_3$ to form an alkali metal oxide such as $NaFeO_2$ + $H_2O$ wherein nascent H formed during the reaction may form hydrino wherein $H_2O$ serves as the catalyst.

In an embodiment, $H_2O$ serves as the catalyst that is maintained at low concentration to provide nascent $H_2O$. In an embodiment, the low concentration is achieved by dispersion of the $H_2O$ molecules in another material such as a solid, liquid, or gas. The $H_2O$ molecules may be diluted to the limit of isolated of nascent molecules. The material also comprises a source of H. The material may comprise an ionic compound such as an alkali halide such as a potassium halide such as KCl. The low concentration to from nascent H may also be achieved dynamically wherein $H_2O$ is formed by a reaction. The product $H_2O$ may be removed at a rate relative to the rate of formation that results in a steady state low concentration to provide nascent H. The reaction to form $H_2O$ may comprise dehydration, combustion, acid-base reactions and others such as those of the disclosure. The $H_2O$ may be removed by means such as evaporation and condensation. Exemplary reactants are FeOOH to form iron oxide and $H_2O$ wherein nascent H is also formed with the further reaction to from hydrinos. Other exemplary reaction mixtures are $Fe_2O_3$ + at least one of NaOH and $H_2$, and FeOOH + at least one of NaOH and $H_2$. The reaction mixture may be maintained at an elevated temperature such as in the range of about 100 °C to 600 °C. $H_2O$ product may be removed by condensation of steam in a cold spot of the reactor such as a gas line maintained below 100 °C. In another embodiment, a material comprising $H_2O$ as an inclusion or part of a mixture or a compound such as $H_2O$ dispersed or absorbed in a lattice such as that of an ionic compound such as an alkali halide such as a potassium halide such as KCl may be incident with the bombardment of energetic

particles. The particles may comprise at least one of photons, ions, and electrons. The particles may comprise a beam such as an electron beam. The bombardment may provide at least one of $H_2O$ catalyst, H, and activation of the reaction to form hydrinos.

The reaction mixture may further comprise a support such as an electrically conductive, high surface area support. Suitable exemplary supports are those of the disclosure such as a metal powder such as Ni or R-Ni, metal screen such as Ni, carbon, carbides such as TiC and WC, and borides. The support may comprise a dissociator such as Pd/C or Pd/C. The reactants may be in any desired molar ratio. In an embodiment, the stoichiometry is such to favor reaction completion to form $H_2O$ catalyst and to provide H to form hydrinos. The reaction temperature may be in any desired range such as in the range of about ambient to 1500 °C. The pressure range may be any desired such as in the range of about 0.01 Torr to 500 atm. The reactions are at least one of regenerative an reversible by the methods disclosed herein and in my prior US Patent Applications such as Hydrogen Catalyst Reactor, PCT/US08/61455, filed PCT 4/24/2008; Heterogeneous Hydrogen Catalyst Reactor, PCT/US09/052072, filed PCT 7/29/2009; Heterogeneous Hydrogen Catalyst Power System, PCT/US10/27828, PCT filed 3/18/2010; and Electrochemical Hydrogen Catalyst Power System, PCT/US11/28889, filed PCT 3/17/2011 herein incorporated by reference in their entirety. Reactions that form $H_2O$ may be reversible by changing the reaction conditions such as temperature and pressure to allow the reverse reaction that consumes $H_2O$ to occur as known by those skilled in the art. For example, the $H_2O$ pressure may be increased in the backward reaction to reform the reactants from the products by rehydration. In other cases, the hydrogen-reduced product may be regenerated by oxidation such as by reaction with at least one of oxygen and $H_2O$. In an embodiment, a reverse reaction product may be removed from the reaction such that the reverse or regeneration reaction proceeds. The reverse reaction may become favorable even in the absence of being favorable based on equilibrium thermodynamics by removing at least one reverse reaction product. In an exemplary embodiment, the regenerated reactant (reverse or regeneration reaction product) comprises a hydroxide such as an alkali hydroxide. The hydroxide may be removed by methods such as solvation or sublimation. In the latter case, alkali hydroxide sublime unchanged at a temperature in the range of about 350-400 °C. The reactions may be maintained in the power plants systems of my prior US Patent Applications. Thermal energy from a cell producing power may provide heat to at least one other cell undergoing regeneration as disclosed previously. Alternatively, the equilibrium of the reactions to form $H_2O$ catalyst and the reverse regeneration reaction can be shifted by changing the temperature of the water wall of the system design having a temperature gradient due to coolant at selected region of the cell as previously disclosed.

In an embodiment, lower energy hydrogen species and compounds are synthesized using a catalyst comprising at least one of H and O such as $H_2O$. The reaction mixture to synthesize the exemplary lower energy hydrogen compound MHX wherein M is alkali and may be another metal such as alkaline earth wherein the compound has the corresponding stoichiometry, H is hydrino such as hydrino hydride, and X is an anion such as halide, comprises a source of M and X such as an alkali halide such as KCl, and metal reductant such as an alkali metal, a hydrogen dissociator such as Ni such as Ni screen or R-Ni and optionally a support such as carbon, a source of hydrogen such as at least one of a metal hydride such as MH that may substitute for M and $H_2$ gas, and a source of oxygen such as a metal oxide or a compound comprising oxygen. Suitable exemplary metal oxides are $Fe_2O_3$, $Cr_2O_3$, and NiO. The reaction temperature may be maintained in the range of about 200 °C to 1500 °C or about 400 °C to 800 °C. The reactants may be in any desired ratios. The reaction mixture to form KHCl may comprise K, Ni screen, KCl, hydrogen gas, and at least one of $Fe_2O_3$, $Cr_2O_3$, and NiO. Exemplary weights and conditions are 1.6 g K, 20 g KCl, 40 g Ni screen, equal moles of oxygen as K from the metal oxides such as 1.5 g $Fe_2O_3$ and 1.5 g NiO, 1 atm $H_2$, and a reaction temperature of about 550-600 °C. The reaction forms $H_2O$ catalyst by reaction of H with O from the metal oxide and H reacts with the catalyst to form hydrinos and hydrino hydride ions that form the product KHCl. The reaction mixture to form KHI may comprise K, R-Ni, KI, hydrogen gas, and at least one of $Fe_2O_3$, $Cr_2O_3$, and NiO. Exemplary weights and conditions are 1 g K, 20 g KI, 15 g R-Ni 2800, equal moles of oxygen as K from the metal oxides such as 1 g $Fe_2O_3$ and 1 g NiO, 1 atm $H_2$, and a reaction temperature of about 450-500 °C. The reaction forms $H_2O$ catalyst by reaction of H with O from the metal oxide and H reacts with the catalyst to form hydrinos and hydrino hydride ions that form the product KHI. In an embodiment, the product of at least one of the CIHT cell, solid fuel, or chemical cell is a compound comprising hydrino species and a cation wherein the latter causes the hydrino species NMR shift to be downfield of the isolated hydrino species. The downshift of the cation may be substantial such as greater than +10 ppm. The cation may be in an unusual oxidation state such as a $2^+$ alkali cation. The compound may comprise an usually highly charged cation such as $M^{2+}$ (M = alkali) and at least one $H^-(1/p)$ and may further comprise another anion such as a halide ion. An exemplary compound is MHX wherein M is alkali, H is hydrino hydride ion, and X is a halide ion such as NaHCl, KHCl, or KHI. In an embodiment, the NMR shift of the hydrino hydride ion in the compound may be in the range of about -4 ppm +/- 2 ppm wherein the hydrino hydride ion may comprise $H^-(1/4)$ relative to TMS. In another embodiment, the presence of a hydrino species such as a hydrino atom, hydride ion, or molecule in a solid matrix such as a matrix of a hydroxide such as NaOH or KOH causes the matrix protons to shift upfield. The matrix protons such as those of NaOH or KOH may exchange. In an embodiment, the shift may cause the matrix peak to be in the range of about -0.1 to -5 ppm relative to TMS.

In an embodiment, wherein at least one of an alkali metal M such as K or Li, and nH (n =integer), OH, O, 20,

$O_2$, and $H_2O$ serve as the catalyst, the source of H is at least one of a metal hydride such as MH and the reaction of at least one of a metal M and a metal hydride MH with a source of H to form H. One product may be an oxidized M such as an oxide or hydroxide. The reaction to create at least one of atomic hydrogen and catalyst may be an electron transfer reaction or an oxidation-reduction reaction. The reaction mixture may further comprise at least one of $H_2$, a $H_2$ dissociator such as those of the disclosure such as Ni screen or R-Ni and an electrically conductive support such as these dissociators and others as well as supports of the disclosure such as carbon, and carbide, a boride, and a carbonitride. An exemplary oxidation reaction of M or MH is

$$4MH + Fe_2O_3 \text{ to } + H_2O + H(1/p) + M_2O + MOH + 2Fe + M \quad (340)$$

wherein at least one of $H_2O$ and M may serve as the catalyst to form H(l/p). The reaction mixture may further comprise a getter for hydrino such as a compound such as a salt such as a halide salt such as an alkali halide salt such as KCl or KI. The product may be MHX (M = metal such a alkali; X is counter ion such as halide; H is hydrino species). Other hydrino catalysts may substitute for M such as those of the disclosure such as those of TABLE 1.

In an embodiment, the source of oxygen is a compound that has a heat of formation that is similar to that of water such that the exchange of oxygen between the reduced product of the oxygen source compound and hydrogen occurs with minimum energy release. Suitable exemplary oxygen source compounds are CdO, CuO, ZnO, $SO_2$, $SeO_2$, and $TeO_2$. Others such as metal oxides may also be anhydrides of acids or bases that may undergo dehydration reactions as the source of $H_2O$ catalyst are $MnO_x$, $AlO_x$, and $SiO_x$. In an embodiment, an oxide layer oxygen source may cover a source of hydrogen such as a metal hydride such as palladium hydride. The reaction to form $H_2O$ catalyst and atomic H that further react to form hydrino may be initiated by heating the oxide coated hydrogen source such as metal oxide coated palladium hydride. The palladium hydride may be coated on the opposite side as that of the oxygen source by a hydrogen impermeable layer such as a layer of gold film to cause the released hydrogen to selectively migrate to the source of oxygen such the oxide layer such as a metal oxide. In an embodiment, the reaction to form the hydrino catalyst and the regeneration reaction comprise an oxygen exchange between the oxygen source compound and hydrogen and between water and the reduced oxygen source compound, respectively. Suitable reduced oxygen sources are Cd, Cu, Zn, S, Se, and Te. In an embodiment, the oxygen exchange reaction may comprise those used to form hydrogen gas thermally. Exemplary thermal methods are the iron oxide cycle, cerium(IV) oxide-cerium(III) oxide cycle, zinc zinc-oxide cycle, sulfur-iodine cycle, copper-chlorine cycle and hybrid sulfur cycle and others known to those skilled in the art. In an embodiment, the reaction to form hydrino catalyst and the regeneration reaction such as an oxygen exchange reaction occurs simultaneously in the same reaction vessel. The conditions such a temperature and pressure may be controlled to achieve the simultaneity of reaction. Alternately, the products may be removed and regenerated in at least one other separate vessel that may occur under conditions different than those of the power forming reaction as given in the disclosure and Mills Prior Patents.

In an embodiment, the $NH_2$ group of an amide such as $LiNH_2$ serves as the catalyst wherein the potential energy is about 81.6 eV corresponding to m =3 in Eq. (5). Similarly to the reversible $H_2O$ elimination or addition reaction of between acid or base to the anhydride and vice versa, the reversible reaction between the amide and imide or nitride results in the formation of the $NH_2$ catalyst that further reacts with atomic H to form hydrinos. The reversible reaction between amide, and at least one of imide and nitride may also serve as a source of hydrogen such as atomic H.

Hydrino gas may diffuse through a membrane and react to form hydrino hydride when dissolved in a solvent. The product $H_2$(l/p) may be isolated by heating the products that release the gas. When a source of hydrino gas comprises a crystalline source, it may be dissolved in a suitable solvent such as $H_2O$. The released gas may be captured in a cryotrap such as a liquid He trap wherein the solvent such as $H_2O$ may be removed in a pretrap in the gas collection line. Since the anode absorbs hydrino gas, it may serve as a source of hydrino gas by off gassing that can be accelerated by chemical digestion or by heating. The digestion may comprise reaction of the anode with an acid. Some materials may comprise trapped hydrino gas due to the incorporation during production or by trapping natural abundance gas. Examples are KOH and $K_2CO_3$. In an embodiment, hydrino gas $H_2$(1/p) may be isolated and purified by capturing it in a solvent having a high solubility for hydrino gas. Suitable solvents may have a high solubility for $H_2$ such as hexane or perfluorohexane that are well known in the literature such as given in C. L. Young, Editor, Solubility Data Series Hydrogen and Deuterium, Vol. 5/6, IUPAC, Pergamon Press, Oxford, 1981 which is herein incorporated by reference in its entirety.

In an embodiment, a composition of matter such a crystalline compound such as KCl contains trapped hydrinos such as $H_2$(1/p). In an embodiment, the hydrinos such as $H_2$(1/p) are purified from the composition of matter. The hydrinos such as $H_2$(1/p) may be purified by dissolving the composition of matter such as KCl in a suitable solvent such as $H_2O$ to form solvated hydrino such as $H_2$(1/p) that may be associated with a species from the composition of matter. For example, the $H_2$(l/p) may be complexed with KCl. The component of the solvated mixture comprising hydrino is selectively isolated. The isolation may be achieved by adding another solvent for by changing the conditions such as the temperature to cause the hydrino-containing fraction to selectively precipitate whereby it is collected by means such

as filtration. Alternatively, the hydrino-containing fraction may stay in solution, and the remaining species may precipitate out. Removal of this composition deleted in hydrino leaves a solution enriched in hydrino. The solvent may be removed and the fraction containing hydrinos collected. Another means to isolate hydrinos in this fraction is to add a solvent or change conditions to precipitate the hydrino-containing species followed by collection by means such as filtration.

In an embodiment, hydrino gas may be formed by a plasma discharge such as a microwave, RF, or glow discharge of hydrogen or noble gas-hydrogen mixture such as a helium-hydrogen mixture. The plasma may comprise a source of hydrogen such as water vapor plasma. Hydrino product may be collected in a suitable solvent such as $D_2O$ or an organic solvent. The collection may first be in a cryotrap such as a liquid nitrogen or liquid helium cryotrap. The condensed or absorbed gas may be heated and transferred to NMR solvent.

In an embodiment, hydrino hydride compounds may be purified. The purification method may comprise at least one of extraction and recrystallization using a suitable solvent. The method may further comprise chromatography and other techniques for separation of inorganic compounds known to those skilled in the art.

In an embodiment, hydrino hydride compounds are formed by a CIHT cell or a reaction mixture of the cathode and anode half-cell reactants. Exemplary CIHT cells or reaction mixtures of the cathode and anode half-cell reactants for forming hydrinos and hydrino hydride compounds are [Ni($H_2$)/LiOH-LiBr/Ni + air, intermittent electrolysis], [Pt-Ti($H_2$)/$K_2CO_3$/Ni + air, intermittent electrolysis], [PtTi($H_2$)/KOH/Ni + air, intermittent electrolysis], [Ni($H_2$)/LiOH-LiBr/Ni + air], [M / KOH (saturated aq) + CG3401 / steam carbon + air or $O_2$] M = R-Ni, Zn, Sn, Co, Sb, Pb, In, Ge, [NaOH Ni($H_2$)/BASE/NaCl $MgCl_2$], [Na/BASE/NaOH], [$LaNi_5H_6$/ KOH (saturated aq) + CG3401 / steam carbon + air or $O_2$], [Li/Celgard LP 30/CoO(OH)], [$Li_3Mg$/LiCl-KCl/$TiH_2$ or $ZrH_2$], [$Li_3N$ TiC/LiCl-KCl/$CeH_2$ CB], and [Li/LiCl-KCl/$LaH_2$]. The product molecular hydrino and hydrino hydride ion having a preferred 1/4 state may be observed using liquid NMR following extraction of the product mixture with an NMR solvent, preferably deuterated DMF or DMSO.

In an embodiment, a hydrino species such as molecular hydrino or hydrino hydride ion is synthesized by the reaction of H and at least one of OH and $H_2O$ catalyst. The hydrino species may be produced by at least two of the group of a metal such as an alkali, alkaline earth, transition, inner transition, and rare earth metal, Al, Ga, In, Ge, Sn, Pb, As, Sb, and Te, a metal hydride such as $LaNi_5H_6$ and others of the disclosure, an aqueous hydroxide such as an alkaline hydroxide such as KOH at 0.1 M up to saturated concentration, a support such as carbon, Pt/C, steam carbon, carbon black, a carbide, a boride, or a nitrile, and oxygen. Suitable exemplary reaction mixtures to form hydrino species such as molecular hydrino are (1) Co PtC KOH (sat) with and without $O_2$; (2) Zn or Sn + $LaNi_5H_6$ + KOH (sat), (3) Co, Sn, Sb, or Zn + $O_2$ + CB + KOH (sat), (4) Al CB KOH (sat), (5) Sn Ni-coated graphite KOH (sat) with and without $O_2$, (6) Sn + SC or CB + KOH (sat) + $O_2$, (7) Zn Pt/C KOH (sat) $O_2$, (8) Zn R-Ni KOH (sat) $O_2$, (9) Sn $LaNi_5H_6$ KOH (sat) $O_2$, (10) Sb $LaNi_5H_6$ KOH (sat) $O_2$, (11) Co, Sn, Zn, Pb, or Sb + KOH (Sat aq) + $K_2CO_3$ + CB-SA, and (12) $LiNH_2$ LiBr and LiH or Li and $H_2$ or a source thereof and optionally a hydrogen dissociator such as Ni or R-Ni. Additional reaction mixtures comprise a molten hydroxide, a source of hydrogen, a source of oxygen, and a hydrogen dissociator. Suitable exemplary reaction mixtures to form hydrino species such as molecular hydrino are (1) Ni($H_2$) LiOH-LiBr air or $O_2$, (2) Ni($H_2$) NaOH-NaBr air or $O_2$, and (3) Ni($H_2$) KOH-NaBr air or $O_2$. In an embodiment, the gas collection may occur after any $H_2$ and $H_2O$ evolution occur wherein $H_2$(l/p) gas is still being evolved from the reactants. The evolution may be due to the slow reaction of $H^-$(1/p) with water to form $H_2$(/p) such as the reaction $H^-$(1/4) + $H_2O$ to $H_2$(1/4).

In an embodiment the hydrino gas is released from a solid or liquid containing hydrinos such a hydrino reaction product by heating. Any gas other than molecular hydrino such as solvent such as $H_2O$ may be condensed using for example a condensor. The condensate may be refluxed. The molecular hydrino gas may be collected free of other gases by fractional distillation. Also, ordinary hydrogen may be removed with a recombiner or by combustion and removal of $H_2O$ by distillation. Hydrino species such as molecular hydrino may be extracted in a solvent such as an organic solvent such as DMF or DMSO and purified from the solvent by means such as heating and optionally distillation of the molecular hydrino gas from the solvent. In an embodiment, the hydrino species-containing product is extracted with a solvent such as an organic solvent such as DMF, and the solvent is heated and optionally refluxed to release hydrino gas that is collected. The hydrino gas may also be obtained by using a reaction mixture comprising a support or additive that does not absorb the gas extensively such as a carbide such as TiC or TaC or LaN.

Hydrino gas $H_2$(1/p) may be isolated from a composition of matter such as a compound or material containing the gas by at least one of extraction in a solvent in which it is soluble, causing a phase change in the composition of matter such as melting, or by dissolving the composition of matter in a solvent in which $H_2$(l/p) has a low solubility or is insoluble.

In an embodiment, molecular hydrinos having an 1 quantum number not zero have a net magnetic moment and thus are predicted to have a liquefaction temperature significantly higher than that of $H_2$. The paramagnetic matrix shift in MAS NMR and the Delta J = -1 selection rule in the ro-vibrational spectrum excited by an incident e-beam to $H_2$(1/4) containing Ar and KCl confirms these states. The presence of $H_2$(l/4) in argon, neon, and helium that is obtained by cryofiltration of a source such as air also supports that higher liquefaction temperature of $H_2$(l/p) relative to $H_2$. Thus, $H_2$(l/p) may be separated by using a cryotrap at temperatures higher that that of liquid helium such as a liquid nitrogen, argon, or neon cryotrap. $H_2$(l/p) may also be collected in a magnetic field at low temperature such as in the case of

oxygen that can form a solid between magnetic pole pieces at cryogenic temperatures.

In a CIHT cell embodiment comprising a molten salt electrolyte such as [Ni($H_2$)/MOH or $M(OH)_2$-M'X or M'$X_2$/Ni air] M and M' are one of Li, Na, K, Rb, Cs, Mg, Ca, Sr, and Ba; X is one of hydroxide, halide, sulfate, and carbonate, the hydrogen is generated at the discharge anode by intermittent electrolysis. Then, the hydrogen permeable electrode is replaced by an evacuated electrode or chamber that receives hydrino via diffusion across the electrode wall such as the H permeable membrane. An exemplary cell is [Ni($H_2$(1/p))/LiOH-LiBr/Ni air] intermittent charge-discharge. The hydrino gas $H_2$(1/p) is collected for useful applications such as a laser medium, a chemical reagent to form increased binding energy hydrogen species and compounds, and a heat transfer medium.

In an embodiment, the product of at least one of the chemical and CIHT cell reactions to form hydrinos is a compound comprising hydrino or lower-energy hydrogen species such as $H_2$(1/p) complexed with an inorganic compound. The compound may comprise an oxyanion compound such as an alkali or alkaline earth carbonate or hydroxide or other such compounds of the disclosure. In an embodiment, the product comprises at least one of $M_2CO_3 \cdot H_2$ (114) and $MOH.\ H_2$ (114) (M= alkali or other cation of the disclosure) complex. The product may be identified by ToF-SIMS as a series of ions in the positive spectrum comprising $M\left(M_2CO_3 \cdot H_2\left(1/4\right)\right)_n^+)$ and $M\left(KOH \cdot H_2\left(1/4\right)\right)_n^+$, respectively, wherein n is an integer and an integer and integer p > 1 may be substituted for 4.

The lower-energy hydrogen compounds synthesized by the methods of the current disclosure may have the formula MH, $MH_2$, or $M_2H_2$, wherein M is an alkali cation and H is an increased binding energy hydride ion or an increased binding energy hydrogen atom. The compound may have the formula $MH_n$ wherein n is 1 or 2, M is an alkaline earth cation and H is an increased binding energy hydride ion or an increased binding energy hydrogen atom. The compound may have the formula MHX wherein M is an alkali cation, X is one of a neutral atom such as halogen atom, a molecule, or a singly negatively charged anion such as halogen anion, and H is an increased binding energy hydride ion or an increased binding energy hydrogen atom. The compound may have the formula MHX wherein M is an alkaline earth cation, X is a singly negatively charged anion, and H is an increased binding energy hydride ion or an increased binding energy hydrogen atom. The compound may have the formula MHX wherein M is an alkaline earth cation, X is a double negatively charged anion, and H is an increased binding energy hydrogen atom. The compound may have the formula $M_2HX$ wherein M is an alkali cation, X is a singly negatively charged anion, and H is an increased binding energy hydride ion or an increased binding energy hydrogen atom. The compound may have the formula $MH_n$ wherein n is an integer, M is an alkaline cation and the hydrogen content $H_n$ of the compound comprises at least one increased binding energy hydrogen species. The compound may have the formula $M_2H_n$ wherein n is an integer, M is an alkaline earth cation and the hydrogen content $H_n$ of the compound comprises at least one increased binding energy hydrogen species. The compound may have the formula $M_2XH_n$ wherein n is an integer, M is an alkaline earth cation, X is a singly negatively charged anion, and the hydrogen content $H_n$ of the compound comprises at least one increased binding energy hydrogen species. The compound may have the formula $M_2X_2H_n$ wherein n is 1 or 2, M is an alkaline earth cation, X is a singly negatively charged anion, and the hydrogen content $H_n$ of the compound comprises at least one increased binding energy hydrogen species. The compound may have the formula $M_2X_3H$ wherein M is an alkaline earth cation, X is a singly negatively charged anion, and H is an increased binding energy hydride ion or an increased binding energy hydrogen atom. The compound may have the formula $M_2XH_n$ wherein n is 1 or 2, M is an alkaline earth cation, X is a double negatively charged anion, and the hydrogen content $H_n$ of the compound comprises at least one increased binding energy hydrogen species. The compound may have the formula $M_2$XX'H wherein M is an alkaline earth cation, X is a singly negatively charged anion, X' is a double negatively charged anion, and H is an increased binding energy hydride ion or an increased binding energy hydrogen atom. The compound may have the formula MM'$H_n$ wherein n is an integer from 1 to 3, M is an alkaline earth cation, M' is an alkali metal cation and the hydrogen content $H_n$ of the compound comprises at least one increased binding energy hydrogen species. The compound may have the formula MM'X$H_n$ wherein n is 1 or 2, M is an alkaline earth cation, M' is an alkali metal cation, X is a singly negatively charged anion and the hydrogen content $H_n$ of the compound comprises at least one increased binding energy hydrogen species. The compound may have the formula MM'XH wherein M is an alkaline earth cation, M' is an alkali metal cation, X is a double negatively charged anion and H is an increased binding energy hydride ion or an increased binding energy hydrogen atom. The compound may have the formula MM'XX'H wherein M is an alkaline earth cation, M' is an alkali metal cation, X and X' are singly negatively charged anion and H is an increased binding energy hydride ion or an increased binding energy hydrogen atom. The compound may have the formula MXX'$H_n$ wherein n is an integer from 1 to 5, M is an alkali or alkaline earth cation, X is a singly or double negatively charged anion, X' is a metal or metalloid, a transition element, an inner transition element, or a rare earth element, and the hydrogen content $H_n$ of the compound

comprises at least one increased binding energy hydrogen species. The compound may have the formula $MH_n$ wherein n is an integer, M is a cation such as a transition element, an inner transition element, or a rare earth element, and the hydrogen content $H_n$ of the compound comprises at least one increased binding energy hydrogen species. The compound may have the formula $MXH_n$ wherein n is an integer, M is an cation such as an alkali cation, alkaline earth cation, X is another cation such as a transition element, inner transition element, or a rare earth element cation, and the hydrogen content $H_n$ of the compound comprises at least one increased binding energy hydrogen species. The compound may have the formula $[KH_mKCO_3]_n$ wherein m and n are each an integer and the hydrogen content $H_m$ of the compound comprises at least one increased binding energy hydrogen species. The compound may have the formula $\left[KH_mKNO_3\right]_n^+ \; nX^-$ wherein m and n are each an integer, X is a singly negatively charged anion, and the hydrogen content $H_m$ of the compound comprises at least one increased binding energy hydrogen species. The compound may have the formula $[KHKNO_3]_n$ wherein n is an integer and the hydrogen content H of the compound comprises at least one increased binding energy hydrogen species. The compound may have the formula $[KHKOH]_n$ wherein n is an integer and the hydrogen content H of the compound comprises at least one increased binding energy hydrogen species. The compound including an anion or cation may have the formula $[MH_mM'X]_n$ wherein m and n are each an integer, M and M' are each an alkali or alkaline earth cation, X is a singly or double negatively charged anion, and the hydrogen content $H_m$ of the compound comprises at least one increased binding energy hydrogen species. The compound including an anion or cation may have the formula $\left[MH_mM'X'\right]_n^+ \; nX^-$ wherein m and n are each an integer, M and M' are each an alkali or alkaline earth cation, X and X' are a singly or double negatively charged anion, and the hydrogen content $H_m$ of the compound comprises at least one increased binding energy hydrogen species. The anion may comprise one of those of the disclosure. Suitable exemplary singly negatively charged anions are halide ion, hydroxide ion, hydrogen carbonate ion, or nitrate ion. Suitable exemplary double negatively charged anions are carbonate ion, oxide, or sulfate ion.

In an embodiment, the increased binding energy hydrogen compound or mixture comprises at least one lower energy hydrogen species such as a hydrino atom, hydrino hydride ion, and dihydrino molecule embedded in a lattice such as a crystalline lattice such as in a metallic or ionic lattice. In an embodiment, the lattice is non-reactive with the lower energy hydrogen species. The matrix may be aprotic such as in the case of embedded hydrino hydride ions. The compound or mixture may comprise at least one of H(1/p), $H_2(1/p)$, and $H^-(1/p)$ embedded in a salt lattice such as an alkali or alkaline earth salt such as a halide. Exemplary alkali halides are KCl and KI. Other suitable salt lattices comprise those of the disclosure. The lower energy hydrogen species may be formed by catalysis of hydrogen with an aprotic catalyst such as those of TABLE 1.

The compounds of the present invention are preferably greater than 0.1 atomic percent pure. More preferably, the compounds are greater than 1 atomic percent pure. Even more preferably, the compounds are greater than 10 atomic percent pure. Most preferably, the compounds are greater than 50 atomic percent pure. In another embodiment, the compounds are greater than 90 atomic percent pure. In another embodiment, the compounds are greater than 95 atomic percent pure.

Applications of the compounds include use in batteries, fuel cells, cutting materials, light weight high strength structural materials and synthetic fibers, cathodes for thermionic generators, photoluminescent compounds, corrosion resistant coatings, heat resistant coatings, phosphors for lighting, optical coatings, optical filters, extreme ultraviolet laser media, fiber optic cables, magnets and magnetic computer storage media, and etching agents, masking agents, dopants in semiconductor fabrication, fuels, explosives, and propellants. Increased binding energy hydrogen compounds are useful in chemical synthetic processing methods and refining methods. The increased binding energy hydrogen ion has application as the negative ion of the electrolyte of a high voltage electrolytic cell.

One application of a hydrino hydride compound formed by the methods such as those of the disclosure is as an explosive or propellant. In an embodiment, the hydrino hydride ion of the compound reacts with a proton to form dihydrino. Alternatively, the hydrino hydride compound decomposes to form dihydrino. These reactions release explosive or propellant power. In the proton explosive or propellant reaction, a source of protons such as an acid such as HF, HCl, $H_2SO_4$, or $HNO_3$, or a super-acid such as HF + $SbF_5$, HCl + $Al_2Cl_6$, $H_2SO_3F$ + $SbF_5$, or $H_2SO_4$ + $SO_2(g)$ is utilized. In another embodiment, the explosive or propellant comprises a source of hydrino hydride ions and a source of hydrogen such as at least one of $H_2$ gas, a hydride compound, and a compound comprising hydrogen such as $H_2O$ or a hydrocarbon such as fuel oil. The hydride compounds may be those of the disclosure such as alkali or alkaline earth hydrides such as LiH. Exemplary reactions of a hydrino hydride compound such as MH(1/p) (M = alkali; H(/lp) is hydrino hydride ion $H^-(1/p)$) with a source of hydrogen to form dihydrino with an explosive or propellant release of power are:

$$MH(1/p) + H_2 \text{ to } MH + H_2(1/p) \quad (341)$$

$$MH(1/p) + MH \text{ to } 2M + H_2(1/p) \quad (342)$$

$$MH(1/p) + H_2O \text{ to } MOH + H_2(1/p) \quad (343)$$

An explosion or propellant reaction is initiated by rapid mixing of the hydrino hydride-ion containing compound with the $H^+$ source such as an acid or the super-acid or the hydrogen source. The rapid mixing may be achieved by detonation of a conventional explosive or propellant proximal to the hydrino hydride compound or reaction mixture. In the a rapid thermal decomposition or reaction of a hydrino hydride compound or reaction mixture to produce an explosive or propellant reaction, the decomposition or reaction may be caused by the detonation of a conventional explosive or propellant proximal to the hydrino hydride compound or reaction mixture by percussion heating of the hydrino hydride compound or the mixture. For example, a bullet may be tipped with a hydrino hydride compound or reaction mixture comprising a hydrino hydride compound and possibly other reactants such as a source of protons or hydrogen that detonates on impact via percussion heating.

In another embodiment of the chemical reactor to form hydrinos comprising reactants comprising a source of hydrogen and a source of oxygen, the source of atomic hydrogen is an explosive which detonates to provide atomic hydrogen and at least one of hydrogen and oxygen that forms the catalyst to form hydrinos. In embodiment, the catalyst comprises at least one of nH, nO (n= integer), $O_2$, OH, and $H_2O$ catalyst. In addition to solid reactants comprising an explosive and optionally other reactants such as an oxygen containing compound such as an oxide, hydroxide, oxyhydroxide, peroxide, and superoxide such as those of the disclosure, the source of oxygen may be air. The catalyst reacts with atomic hydrogen to liberate energy in addition to that of the explosive reaction. In one embodiment, the cell ruptures with the explosive release of energy with a contribution from the catalysis of atomic hydrogen. One example of such a cell is a bomb containing a source of atomic hydrogen and a source of oxygen to form the catalyst.

In another embodiment of the chemical reactor to form hydrinos, the cell to form hydrinos and release power such as thermal power comprises the combustion chamber of an internal combustion engine, rocket engine, or gas turbine. The reaction mixture comprises a source of hydrogen and a source of oxygen to generate the catalyst and hydrinos. The source of the catalyst may be at least one of a species comprising hydrogen and one comprising oxygen. The species or a further reaction product may be at least one of species comprising at least one of O and H such as $H_2$, H, $H^+$, $O_2$, $O_3$, $O_3^+$, $O_3^-$, O, $O^+$, $H_2O$, $H_3O^+$, OH, $OH^+$, $OH^-$, HOOH, $OOH^-$, $O^-$, $O^{2-}$, $O_2^-$, and $O_2^{2-}$. The catalyst may comprise an oxygen or hydrogen species such as $H_2O$. In another embodiment, the catalyst comprises at least one of nH, nO (n= integer), $O_2$, OH, and $H_2O$ catalyst. The source of hydrogen such as a source of hydrogen atoms may comprise a hydrogen-containing fuel such as $H_2$ gas or a hydrocarbon. Hydrogen atoms may be produced by pyrolysis of a hydrocarbon during hydrocarbon combustion. The reaction mixture may further comprise a hydrogen dissociator such as those of the disclosure. H atoms may also be formed by the dissociation of hydrogen. The source of O may further comprise $O_2$ from air. The reactants may further comprise $H_2O$ that may serve as a source of at least one of H and O. In an embodiment, water serves as a further source of at least one of hydrogen and oxygen that may be supplied by pyrolysis of $H_2O$ in the cell. The water can be dissociated into hydrogen atoms thermally or catalytically on a surface, such as the cylinder or piston head. The surface may comprise material for dissociating water to hydrogen and oxygen. The water dissociating material may comprise an element, compound, alloy, or mixture of transition elements or inner transition elements, iron, platinum, palladium, zirconium, vanadium, nickel, titanium, Sc, Cr, Mn, Co, Cu, Zn, Y, Nb, Mo, Tc, Ru, Rh, Ag, Cd, La, Hf, Ta, W, Re, Os, Ir, Au, Hg, Ce, Pr, Nd, Pm, Sm, Eu, Gd, Tb, Dy, Ho, Er, Tm, Vb, Lu, Th, Pa, U, activated charcoal (carbon), or Cs intercalated carbon (graphite). The H an O may react to form the catalyst and H to form hydrinos. The source of hydrogen and oxygen may be drawn in through corresponding ports or intakes such as intake valves or manifolds. The products may be exhausted through exhaust ports or outlets. The flow may be controlled by controlling the inlet and outlet rates through the respective ports.

## XII. Experimental

### A. Exemplary CIHT Cell Test Results

Molten-salt CIHT cells, each comprising an anode, a eutectic molten salt electrolyte, and a cathode contained in an inert alumina crucible were assembled in a glove box having an oxygen-free argon atmosphere and were heated under an argon atmosphere in a glove box. The anode comprised NaOH and a H source such as $Ni(H_2)$ in a BASE tube and the cathode comprised a eutectic mixture such as $MgCl_2$-NaCl at an electrode such as Ni. A second type comprised a hydrogen permeable anode such as $Ni(H_2)$, a molten hydroxide electrolyte such as LiOH-LiBr, and a Ni cathode open

to air. A third type comprised a closed cell supplied with $H_2O$ by bubbling argon carrier gas through a $H_2O$ reservoir or by using a water generator that was maintained in the exemplary temperature range of 30 to 50 °C (31 Torr to 93 Torr $H_2O$). The electrolyte comprised a molten salt such as LiOH-LiBr and optionally a matrix such as MgO. The cell was operated under intermittent electrolysis wherein hydrogen was formed at the discharge anode and oxygen at the discharge cathode from $H_2O$. During discharge, the reactions and the current were reversed to form nascent $H_2O$ catalyst and hydrinos to give rise to excess current and energy such that a net excess electrical energy balance was achieved. In another variant, this cell type was operated open to air. A fourth type comprised an aqueous electrolyte such as saturated KOH, and different cathodes and anodes that were operated under intermittent electrolysis conditions open to air. The results from exemplary cells designated [anode/electrolyte/cathode] such as [Ni($H_2$)/MOH or M$(OH)_2$-M'X or M'$X_2$/Ni air] M and M' are one of Li, Na, K, Rb, Cs, Mg, Ca, Sr, and Ba; X is one of hydroxide, halide, sulfate, and carbonate, M is one of R-Ni, Zn, Sn, Co, Cd, Sb, and Pb, [NaOH Ni($H_2$) BASE/NaCl $MgCl_2$/Ni], [Ni/LiOH-LiBr-MgO/NiO (closed or air)], and [$Sn_5V_5$/KOH (saturated aq)/Ni (air)] are given as below

High T molten electrolyte-Closed SS cell with Ar flow through water bubbler - 10 W scale-up

**[0418]** - 032012GZC1-1023: Mo/210g LiOH + 1.05kg LiBr + 420g MgO in one layer/NiO (10 layers); Anode: Mo foil; Cathode: preoxidized CNi6C; Tset=420 °C, Treal=420 °C; charge to 8V, discharge for 4s if V>6V.

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 1500 | 15.56 | 7.120 | 10680.00 | 1.28 | 3.90E+00 | 169.54 | 43.45 |
| 1800 | 23.59 | 6.53 | 11754.00 | 1.41 | 1.79E+01 | 254.63 | 14.23 |
| 1400 | 46.66 | 6.86 | 9604.00 | 1.15 | 27.11 | 459.66 | 16.96 |
| 1500 | 63.29 | 6.68 | 10020.00 | 1.20 | 51.84 | 608.05 | 11.73 |

High T molten electrolyte-Closed SS cell with Ar flow through water bubbler

**[0419]** - 030112GZC3-1005: Mo/0.5" LiOH-LiBr pellet- LiOH+LiBr+MgO pellet- LiOH+LiBr pellet 2 pieces/NiO; Anode: 1.5" diameter Mo, Cathode: 1.5"X1.5" pressed preoxidized CNi6(1 layer) pre-wetted by molten electrolyte; Tset=500 °C, Treal=440 °C; charge to 0.8V, discharge for 4s if V>0.6V

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 5 | 15.95 | 0.822 | 4.11 | 1.62 | 2.71E-05 | 0.0686 | 2531.37 |
| | 85.11 | 0.78 | 3.90 | 1.54 | 3.15E-04 | 0.3499 | 1110.79 |
| | 114.83 | 0.77 | 3.85 | 1.52 | 0.0084 | 0.456 | 54.29 |
| | 159.38 | 0.765 | 3.83 | 1.51 | 0.03514 | 0.6022 | 17.14 |
| | 181.7 | 0.76 | 3.80 | 1.50 | 0.0539 | 0.6696 | 12.42 |
| | 253.51 | 0.757 | 3.79 | 1.49 | 0.134 | 0.867 | 6.47 |
| | 277.73 | 0.757 | 3.79 | 1.49 | 0.163 | 0.931 | 5.71 |
| | 296.89 | 0.757 | 3.79 | 1.49 | 0.187 | 0.981 | 5.25 |
| | 319.72 | 0.756 | 3.78 | 1.49 | 0.218 | 1.038 | 4.76 |

High T molten electrolyte-Closed SS cell with Ar flow through water bubbler

**[0420]** - 031312GZC2-1012: Ni-Mo-Ni/LiOH:LiBr:MgO=l:5:10/NiO; Anode: CNi8 + Mo + CNi8, compressed, prewetted by electrolyte; Cathode: CNi8-pressed CNi6C-CNi8, prewetted by electrolyte; separator: 4 pellets of 0.5" diameter used; Tset=440 °C, Treal=440 °C; charge to 0.8V, discharge for 4s if V>0.6V

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 10 | 18.21 | 0.736 | 7.36 | 1.45 | 4.97E-02 | 0.0928 | 1.87 |
| 5 | 39.73 | 0.766 | 3.83 | 0.76 | 7.59E-02 | 0.164 | 2.16 |
| | 87.08 | 0.764 | 3.82 | 0.75 | 1.11E-01 | 0.22 | 1.98 |

031212GC1 (intermittent electrolysis closed cell, laminated anode with Mo nano powder) Ni-Mo-Ni mesh square / LiOH-LiBr-MgO / NiO mesh square (Wet Ar) T = 450 °C, Charge 20 mA till V = 0.8 V; discharge 20 mA till V > = 0.6 V otherwise discharge 4s; Anode: Ni-Mo-Ni square (14.04 g, 14 cm^2); cathode: NiO square (3 x 1.5' x 1.5'); Electrolyte: 10 g LiOH + 50 g LiBr + 18 g MgO

| Test time/ current (mA) | Discharge power density (mW/cm2) | Charge capacity (Ah) | Discharge capacity (Ah) | Charge energy (Wh) | Discharge energy (Wh) | Ratio (100%) |
|---|---|---|---|---|---|---|
| 2 h / 20 | 1.46 | 0.0026 | 0.0390 | 0.9872 mWh | 0.0378 | 3750.5 |
| l d / 20 | | 0.0028 | 0.4807 | 0.0011 | 0.4274 | 38854.5 |
| 2d/20 | | 0.0030 | 0.9268 | 0.0013 | 0.7812 | 60092.3 |
| 2d + 22h / 20 | | 0.0144 | 1.3720 | 0.0103 | 1.1142 | 10818.4 |
| 3d + 21h / 20 | | 0.1234 | 1.7217 | 0.0960 | 1.3648 | 1421.7 |

Anode: 2.0 g Mo nano powder was put inside 4 pieces of Ni mesh (CN6C) square (1.5' x 1.5') and compressed.

030812GC1 (intermittent electrolysis closed cell, laminated anode, high power density), repeat 030712GC1 Ni-Mo-Ni square / LiOH-LiBr-MgO / NiO mesh square (Wet Ar) T = 450 °C, Charge 50 mA till V = 0.8 V; discharge 50 mA till V > = 0.6 V otherwise discharge 4s; Anode: Ni-Mo-Ni square (11.37 g, 14 cm^2); cathode: NiO square (3 x 1.5' x 1.5'); Electrolyte: 15 g LiOH + 75 g LiBr + 28 g MgO

| Test time/ current (mA) | Discharge power density (mW/cm2) | Charge capacity (Ah) | Discharge capacity (Ah) | Charge energy (Wh) | Discharge energy (Wh) | Ratio (100%) |
|---|---|---|---|---|---|---|
| 4h/50 | 2.66 | 0.0961 mAh | 0.2108 | 0.0835 mWh | 0.1648 | 197710.7 |
| 1d + 2h / 50 | | 0.1959 | 1.1059 | 0.1500 | 0.7622 | 508.1 |
| 3d + 11h / 50 | | 1.0019 | 2.9445 | 0.7716 | 1.9079 | 247.3 |
| 4d + 2h / 50 | | 1.1896 | 3.4170 | 0.9194 | 2.1971 | 239.0 |
| 4d + 16h / 50 | | 1.3460 | 3.8276 | 1.0425 | 2.4479 | 234.8 |
| 5d + 2h / 50 | | 1.4446 | 4.1149 | 1.1205 | 2.6233 | 234.1 |

022812GC1 (intermittent discharge closed cell, water vapor flow) Compressed Ni-Mo-Ni square / LiOH-LiBr-MgO / NiO mesh square (Wet Ar) T = 450 °C, Charge 10 mA till V = 0.8 V; discharge 10 mA till V > = 0.6 V otherwise discharge 4s; Anode: Ni-Mo-Ni square (11.6 g including wire, 14 cm^2); cathode: NiO square (3 x 1.5' x 1.5'); Electrolyte: 15 g LiOH + 75 g LiBr + 28 g MgO

| Test time/ current (mA) | Discharge power density (mW/cm2) | Charge capacity (Ah) | Discharge capacity (Ah) | Charge energy (Wh) | Discharge energy (Wh) | Ratio (100%) |
|---|---|---|---|---|---|---|
| | | 0.0020 | | | | |

(continued)

| Test time/ current (mA) | Discharge power density (mW/cm2) | Charge capacity (Ah) | Discharge capacity (Ah) | Charge energy (Wh) | Discharge energy (Wh) | Ratio (100%) |
|---|---|---|---|---|---|---|
| 3 h / 10 | 0.58 | mAh 0.0183 | 0.0282 | 0.0017 mWh | 0.0233 | 1372292.0 |
| 1 d / 10 | | mAh | 0.2434 | 0.0150 mWh | 0.1964 | 1305929.8 |
| 3 d / 10 | | 0.0349 | 0.6707 | 0.0278 | 0.5321 | 1914.0 |
| 5d + 22h / 10 | | 0.1332 | 1.2774 | 0.1058 | 1.0043 | 949.2 |
| 7d + 20h / 10 | | 0.2050 | 1.6647 | 0.1628 | 1.3047 | 801.4 |
| 8d + 20h / 10 | | 0.2431 | 1.8602 | 0.1931 | 1.4564 | 754.2 |
| 12d + 4h / 10 | | 0.2787 | 2.5931 | 0.2215 | 1.9688 | 888.8 |
| 13d + 2h / 10 | | 0.2822 | 2.7978 | 0.2243 | 2.1010 | 936.7 |
| 14d / 10 | | 0.3021 | 2.9993 | 0.2400 | 2.2584 | 941.0 |
| 15d / 10 | | 0.3363 | 3.1956 | 0.2672 | 2.4105 | 902.1 |

High T molten electrolyte-Closed SS cell with Ar flow through water bubbler

**[0423]** - 031212GZC1-1008: Ni-C-Ni/10g LiOH + 50g LiBr + 20g MgO/NiO; Anode: 1.5"X1.5" CNi6 + 1"X1 " Graphite + 1.5"X1.5" CNi6, compressed; Cathode: 1.5"X1.5" preoxidized CNi6(2 layer); Tset=515 °C, Treal=440 °C; charge to 0.8V, discharge for 4s if V>0.6V

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 5 | 20.4 | 0.818 | 4.09 | 0.28 | 3.26E-05 | 0.0849 | 2604.29 |
| | 41.13 | 0.809 | 4.05 | 0.28 | 6.70E-05 | 0.169 | 2522.39 |
| | 62.68 | 0.803 | 4.02 | 0.28 | 1.01E-04 | 0.255 | 2524.75 |
| | 85.67 | 0.802 | 4.01 | 0.28 | 1.37E-04 | 0.347 | 2532.85 |

High T molten electrolyte-Closed SS cell with Ar flow through water bubbler

**[0424]** - 031212GZC2-1009: Ni-Ni powder-Ni/10g LiOH + 50g LiBr + 20g MgO/NiO; Anode: 1.5"X1.5" CNi6 + 0.67g Ni nano powder + 1.5"X1.5" CNi6, compressed; Cathode: 1.5"X1.5" preoxidized CNi6(2 layer); Tset=500 °C, Treal=440 °C; charge to 0.8V, discharge for 4s if V>0.6V

| current, mA | test time, hr | discharge voltage, V | Power output, mW anode | discharge power density, mW/cm2 | charge energy, Wh | discharge energy, Wh | Energy gain |
|---|---|---|---|---|---|---|---|
| 5 | 20.4 | 0.801 | 4.01 | 0.28 | 3.16E-05 | 0.0819 | 2591.77 |
| | 41.09 | 0.799 | 4.00 | 0.28 | 6.42E-05 | 0.164 | 2554.52 |
| | 62.68 | 0.795 | 3.98 | 0.27 | 9.84E-05 | 0.25 | 2540.65 |
| | 85.68 | 0.795 | 3.98 | 0.27 | 1.46E-04 | 0.341 | 2335.62 |

10W scale-up: High T molten electrolyte-Closed SS cell with Ar flow through water bubbler-10 cell stack.
- 021012GZC2-974: Mo foil/10g LiOH +50g LiBr + 20g MgO/NiO; Anode: 9" diameter Mo foil, Cathode: 9" diameter preoxidized CNi6C (2 pieces); Tset=410 °C, Treal=440 °C; charge to 8V, discharge for 4s if V>6V

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 700 | 61.64 | 7.340 | 5138.00 | 1.25 | 7.34E+01 | 119.82 | 1.63 |
| | 87.8 | 7.01 | 4907.00 | 1.20 | 9.98E+01 | 220.87 | 2.21 |
| | 108.87 | 7.04 | 4928.00 | 1.20 | 119.01 | 308.8 | 2.59 |
| | 132.1 | 6.49 | 4543.00 | 1.11 | 163.82 | 381.62 | 2.33 |
| | 155.99 | 6.5 | 4550.00 | 1.11 | 224.52 | 441.54 | 1.97 |
| 600 | 226.16 | 6.72 | 4032.00 | 0.98 | 375.65 | 598.99 | 1.59 |
| 500 | 250.63 | 6.94 | 3470.00 | 0.85 | 417.13 | 649.37 | 1.56 |

010411XY3-1345 Flange closed, paste electrolyte Ni/LiOH-LiBr-MgO/NiO; Anode: Porous Ni C6NC (OD 1.5", 11cm2, 5.3457g, incl. wire), submersed into electrolyte; Cathode: Pre-oxidized porous Ni C6NC (1.5*1.5"), on top of electrolyte; Electrolyte: 15.0g LiOH + 75.0g LiBr + 30.0g MgO; Temperature 450 °C; Flow through Ar (Pre-humidified)

| Charge I, T | Discharge I, T | Time | Power density, mW/cm2 | Charge energy, Wh | Discharge energy, Wh | Energy gain, % |
|---|---|---|---|---|---|---|
| 5mA till V=0.8V | 5mA till V=0.6V, or 4s if V>0.6V in 4s | 1h | 0.27 | 0.0000020 | 0.0044 | 220000.0 |
| | | 18h | | 0.0000355 | 0.0728 | 205070.4 |
| | | 1d11h | | 0.000668 | 0.1400 | 20958.0 |
| | | 4dllh | | 0.0018 | 0.4202 | 23344.4 |
| | | 5d8h | | 0.0022 | 0.5032 | 22872.7 |
| | | 6d7h | | 0.0026 | 0.5926 | 22792.3 |
| | | 7d6h | | 0.0031 | 0.6781 | 21874.1 |
| | | 8d4h | | 0.0036 | 0.7658 | 21272.2 |
| | | 11d5h | | 0.0095 | 1.0307 | 10849.4 |
| | | 12d2h | | 0.0096 | 1.1098 | 11560.4 |
| | | 13d0h | | 0.0127 | 1.1803 | 9293.7 |
| | | 13d22h | | 0.0200 | 1.2658 | 6329.0 |
| | | 14d22h | | 0.0217 | 1.3446 | 6196.3 |
| | | 17d22h | | 0.0308 | 1.6128 | 5236.3 |
| | | 18dl8h | | 0.0309 | 1.6869 | 5459.2 |
| | | 19d18h | | 0.0309 | 1.7815 | 5765.3 |
| | | 20d15h | | 0.0309 | 1.8695 | 6050.1 |
| | | 21dl4h | | 0.0310 | 1.9606 | 6324.5 |
| | | 24dl7h | | 0.0347 | 2.2514 | 6488.2 |
| | | 25dl2h | | 0.0373 | 2.3231 | 6228.2 |
| | | 26dl2h | | 0.0406 | 2.4118 | 5940.4 |
| | | 27dl2h | | 0.0440 | 2.4994 | 5680.5 |
| | | 28dl2h | | 0.0488 | 2.5861 | 5299.4 |
| | | 31d13h | | 0.0713 | 2.8399 | 3983.0 |
| | | 32dl2h | | 0.0797 | 2.9189 | 3662.4 |
| | | 33dl2h | | 0.0885 | 3.0004 | 3390.3 |
| | | 34dl2h | | 0.0979 | 3.0835 | 3149.6 |
| | | 35d0h | | 0.1012 | 3.1177 | 3080.7 |
| | | 38d0h | | 0.1399 | 3.3517 | 2395.8 |
| | | 39d0h | | 0.1540 | 3.4304 | 2227.5 |
| | | 40d0h | | 0.1669 | 3.5088 | 2102.3 |

(continued)

| Charge I, T | Discharge I, T | Time | Power density, mW/cm2 | Charge energy, Wh | Discharge energy, Wh | Energy gain, % |
|---|---|---|---|---|---|---|
| | | 4ld0h | | 0.1789 | 3.5886 | 2005.9 |
| | | 41d23h | | 0.1899 | 3.6644 | 1929.6 |
| | | 44d23h | | 0.2307 | 3.8979 | 1689.6 |
| | | 45d23h | | 0.2458 | 3.9742 | 1616.8 |
| | | 46d23h | | 0.2596 | 4.0523 | 1561.0 |
| | | 47d23h | | 0.2754 | 4.1271 | 1498.6 |
| | | 48d23h | | 0.2921 | 4.2025 | 1438.7 |
| | | 51d23h | | 0.3630 | 4.3888 | 1209.0 |
| | | 52d23h | | 0.3643 | 4.4763 | 1228.7 |
| | | 53d23h | | 0.3648 | 4.5654 | 1251.5 |
| | | 54d23h | | 0.3649 | 4.6560 | 1276.0 |
| | | 55d23h | | 0.3655 | 4.7458 | 1298.4 |
| | | 58d23h | | 0.3843 | 4.9977 | 1300.5 |
| | | 59d23h | | 0.4036 | 5.0686 | 1255.8 |
| | | 60d23h | | 0.4272 | 5.1346 | 1201.9 |
| | | 61d23h | | 0.4470 | 5.2011 | 1163.6 |
| | | 62d23h | | 0.4583 | 5.2780 | 1151.6 |
| | | 65d23h | | 0.4728 | 5.5230 | 1168.1 |
| | | 66d23h | | 0.4805 | 5.6028 | 1166.0 |
| | | 67d23h | | 0.4897 | 5.6810 | 1160.1 |
| | | 68d23h | | 0.5039 | 5.7551 | 1142.1 |
| | | 69d23h | | 0.5238 | 5.8239 | 1111.9 |

High T molten electrolyte-Closed SS cell with Ar flow through water bubbler

**[0426]** - 030112GZC2-1004: C/10g LiOH + 50g LiBr/NiO; Anode: 1.5"X1.5" Graphite, Cathode: 1.5"X1.5" pressed preoxidized CNi6(2 layer); Tset=460 °C, Treal=440 °C; charge to 0.6V, discharge for 4s if V>0.4V

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 5 | 16.09 | 0.417 | 2.09 | 0.14 | 1.15E-02 | 0.0262 | 2.28 |
| | 85.77 | 0.474 | 2.37 | 0.16 | 0.0462 | 0.164 | 3.55 |
| | 115.4 | 0.477 | 2.39 | 0.16 | 0.0613 | 0.223 | 3.64 |
| 131.75 | 0.467 | 2.34 | 0.16 | | 0.07 | 0.256 | 3.66 |
| 160.01 | 0.479 | 2.40 | 0.16 | | 0.0865 | 0.311 | 3.60 |
| 182.32 | 0.46 | 2.30 | 0.16 | | 0.1 | 0.353 | 3.53 |
| 254 | 0.461 | 2.31 | 0.16 | | 0.142 | 0.489 | 3.44 |
| 278.08 | 0.461 | 2.31 | 0.16 | | 0.155 | 0.535 | 3.45 |
| 297.23 | 0.461 | 2.305 | 0.16 | | 0.166 | 0.571 | 3.44 |
| 320 | 0.461 | 2.305 | 0.16 | | 0.18 | 0.614 | 3.41 |
| 343.1 | 0.447 | 2.235 | 0.15 | | 0.196 | 0.655 | 3.34 |

High T molten electrolyte-Closed SS cell with Ar flow through water bubbler

**[0427]** - 021712GZC2-983: CNi6-Mo-CNi6/10g LiOH +50g LiBr + 30g MgO/NiO; Anode: 1.5"X1.5" CNi6-Mo-CNi6 compressed, Cathode: 1.5"X1.5" preoxidized NiFeCrAl, pore size:1.2mm; Tset=460 °C, Treal=440 °C; charge to 0.8V, discharge for 4s if V>0.6V

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 5 | 64.03 | 0.801 | 4.01 | 0.28 | 1.34E-04 | 0.273 | 2037.31 |
| | 86.87 | 0.803 | 4.02 | 0.28 | 1.92E-04 | 0.366 | 1906.25 |
| | 111.33 | 0.791 | 3.96 | 0.27 | 0.00101 | 0.462 | 457.43 |
| | 136.39 | 0.786 | 3.93 | 0.27 | 0.00477 | 0.557 | 116.77 |
| | 157.89 | 0.868 | 4.34 | 0.30 | 0.0097 | 0.637 | 65.67 |
| | 228.2 | 0.785 | 3.93 | 0.27 | 0.0328 | 0.891 | 27.16 |
| | 253.24 | 0.775 | 3.88 | 0.27 | 0.0489 | 0.973 | 19.90 |
| | 273.78 | 0.779 | 3.90 | 0.27 | 0.0676 | 1.0346 | 15.30 |
| | 297.66 | 0.779 | 3.90 | 0.27 | 0.0833 | 1.113 | 13.36 |
| | 321.25 | 0.784 | 3.92 | 0.27 | 0.0951 | 1.194 | 12.56 |
| | 391.1 | 0.78 | 3.9 | 0.27 | 0.131 | 1.432 | 10.93 |
| | 420.61 | 0.778 | 3.89 | 0.27 | 0.15 | 1.529 | 10.19 |
| | 436.82 | 0.777 | 3.885 | 0.27 | 0.161 | 1.583 | 9.83 |
| | 465.06 | 0.778 | 3.89 | 0.27 | 0.18 | 1.673 | 9.29 |
| | 487.37 | 0.776 | 3.88 | 0.27 | 0.197 | 1.743 | 8.85 |
| | 559.23 | 0.775 | 3.875 | 0.27 | 0.281 | 1.941 | 6.91 |
| | 583.25 | 0.775 | 3.875 | 0.27 | 0.299 | 2.017 | 6.75 |
| | 602.95 | 0.766 | 3.83 | 0.26 | 0.33 | 2.063 | 6.25 |
| At end of experiment the anode looks like starting material. | | | | | | | |

High T molten electrolyte-Closed SS cell with Ar flow through water bubbler.

**[0428]** - 010912GZC1-934: Mo+Ni/8g LiOH +40g LiBr+15g MgO/NiO; 2.75" Alumina Crucible; Anode: 1.5"X1.5" 3.831g Mo + 0.623g CNi8, Cathode: 1.5"X1.5" preoxidized CNi6C (2 pieces); Tset=460 °C, Treal=440 °C; charge to 0.8V, discharge for 4s if V>0.6V

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 10 | 18.56 | 0.875 | 8.75 | 0.60 | 9.49E-05 | 0.169 | 1781.76 |
| | 41.18 | 0.86 | 8.60 | 0.59 | 2.05E-04 | 0.365 | 1780.49 |
| | 65.76 | 0.807 | 8.07 | 0.56 | 3.19E-04 | 0.569 | 1783.70 |
| | 87.81 | 0.811 | 8.11 | 0.56 | 4.20E-04 | 0.75 | 1785.71 |
| | 158.65 | 0.778 | 7.78 | 0.54 | 2.43E-03 | 1.31 | 539.09 |
| | 233.71 | 0.781 | 7.81 | 0.54 | 0.0167 | 1.882 | 112.69 |
| | 249.29 | 0.765 | 7.65 | 0.53 | 0.0211 | 1.998 | 94.692 |
| | 321.44 | 0.757 | 7.57 | 0.52 | 0.0544 | 2.519 | 46.31 |
| | 348.31 | 0.759 | 7.59 | 0.52 | 0.0672 | 2.713 | 40.37 |
| | 368.58 | 0.756 | 7.56 | 0.52 | 0.0769 | 2.858 | 37.17 |
| | 390.65 | 0.749 | 7.49 | 0.52 | 0.0881 | 3.016 | 34.23 |
| | 413.46 | 0.761 | 7.61 | 0.52 | 0.101 | 3.178 | 31.47 |
| | 485.88 | 0.746 | 7.46 | 0.51 | 0.151 | 3.68 | 24.37 |
| | 507.52 | 0.759 | 7.59 | 0.52 | 0.171 | 3.82 | 22.34 |
| | 532.71 | 0.746 | 7.46 | 0.51 | 0.196 | 3.99 | 20.357 |
| | 554.56 | 0.742 | 7.42 | 0.51 | 0.22 | 4.131 | 18.78 |
| | 577.44 | 0.739 | 7.39 | 0.51 | 0.246 | 4.279 | 17.39 |
| | 627.13 | 0.741 | 7.41 | 0.51 | 0.296 | 4.605 | 15.56 |
| | 644.46 | 0.736 | 7.36 | 0.51 | 0.312 | 4.72 | 15.13 |

(continued)

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| | 667.36 | 0.743 | 7.43 | 0.51 | 0.337 | 4.866 | 14.44 |
| | 692.04 | 0.745 | 7.45 | 0.51 | 0.367 | 5.023 | 13.69 |
| | 714.15 | 0.744 | 7.44 | 0.51 | 0.402 | 5.156 | 12.83 |
| | 786.76 | 0.598 | 5.98 | 0.41 | 0.552 | 5.56 | 10.07 |
| | 810.43 | 0.598 | 5.98 | 0.41 | 0.639 | 5.638 | 8.82 |

011812XY1-1369 Flange closed, paste electrolyte Ni/LiOH-LiBr-MgO/NiO. (High current, Humidity supplied with water vapor generator); Anode: Pressed porous Ni C6NC (1.5" OD", I lcm2, 9.3632g, incl. wire); Cathode: Pre-oxidized porous Ni C6NC (1.5" OD), on top of electrolyte; Electrolyte: 15.0g LiOH + 75.0g LiBr + 35.0g MgO; Temperature 450 °C; Humidity was supplied to the cell with water vapor generator

| Charge I, T | Discharge I, T | Time | Power density, mW/cm2 | Charge energy, Wh | Discharge energy, Wh | Energy gain, % |
|---|---|---|---|---|---|---|
| 40mA | 40mA till | 2h | 2.18 | 0.0005898 | 0.0268 | 4543.9 |
| till V=0.8V | V=0.6V, or 4s if V>0.6V in 4s | 18h | | 0.0046 | 0.1714 | 3726.0 |
| | | ldl2h | | 0.0087 | 0.4099 | 4711.4 |
| | | 4dl5h | | 0.0181 | 1.3979 | 7723.2 |
| | | 5dl7h | | 0.0206 | 1.7178 | 8338.8 |
| | | 7dl3h | | 0.0233 | 2.0629 | 8853.6 |
| | | 8d3h | | 0.0267 | 2.3173 | 8679.0 |
| | | 9d0h | | 0.0301 | 2.5867 | 8593.6 |
| | | 12d0h | | 0.0401 | 3.3728 | 8411.0 |
| | | 12d22h | | 0.0444 | 3.5150 | 7916.7 |
| | | 13d22h | | 0.0591 | 3.5390 | 5988.2 |
| | | 14d22h | | 0.1042 | 3.5493 | 3406.2 |
| | | 15d22h | | 0.1784 | 3.5578 | 1994.3 |
| | | 18d23h | | 0.4680 | 3.5803 | 765.0 |
| | | 19d21h (stopped) | | 0.5489 | 3.5883 | 653.7 |

012512XY2-1384 Flange closed, paste electrolyte Ni fiber/LiOH-LiBr-MgO/NiO; Anode: Ni fiber (1.5"OD ", llcm2, 8.5880g, incl. wire); Cathode: Pre-oxidized porous Ni C6NC (1.5" OD), on top of electrolyte; Electrolyte: 15.0g LiOH + 75.0g LiBr + 35.0g MgO; Temperature 450 °C; Humidity was supplied to the cell with water vapor generator

| Charge I, T | Discharge I, T | Time | Power density, mW/cm2 | Charge energy, Wh | Discharge energy, Wh | Energy gain, % |
|---|---|---|---|---|---|---|
| 30mA till V=0.8V | 30mA till V=0.6V, or 4s if V>0.6V in 4s | 2h | 1.63 | 0.0000186 | 0.0228 | 122580.6 |
| | | 16h | | 0.0008160 | 0.2694 | 33014.7 |
| | | 1d10h | | 0.0023 | 0.5757 | 25030.4 |
| | | 4d12h | | 0.0087 | 1.3719 | 15769.0 |
| | | 5d9h | | 0.0111 | 1.5651 | 14100.0 |
| | | 6d9h | | 0.0140 | 1.7700 | 12642.9 |
| | | 7d9h | | 0.0196 | 1.8681 | 9531.1 |
| | | 8d9h | | 0.0259 | 1.8720 | 7227.8 |

(continued)

| Charge I, T | Discharge I, T | Time | Power density, mW/cm2 | Charge energy, Wh | Discharge energy, Wh | Energy gain, % |
|---|---|---|---|---|---|---|
| | | 11d10h | | 0.0427 | 1.9394 | 4541.9 |
| | | 12d9h | | 0.0491 | 1.9431 | 3957.4 |
| | | 13d9h | | 0.0561 | 1.9465 | 3469.7 |
| | | 14d9h (stopped) | | 0.0631 | 1.9500 | 3090.3 |

011812CG7-485; HX trays + Mo anodes 4X stack; 2 layers of NiO bottom 3 stacks, 1 layer of NiO top stack; closed cell, $H_2O$ heat @90C, closed cell; Anode: 1.5" dia. Mo foil X4, wielded on HX tray; Cathode: NiO X4; Electrolyte: LiOH-LiBr-MgO; OCV -4.0V; Charge @20mA till V>3.2V,; discharge@-20mA for 5sec or 2.4V

| test time, hr | discharge voltage, V | charge energy, Wh | discharge energy, Wh | Energy gain | Power mW | Power density mW/cm2 |
|---|---|---|---|---|---|---|
| 24 | 2.775 | 0.01 | 0.615 | 61.68 | 55.50 | 4.87 |
| 42 | 2.158 | 0.017 | 1.069 | 61.98 | 43.16 | 3.79 |
| 46 | 2.09 | 0.019 | 1.045 | 61.17 | 41.80 | 3.67 |
| 104 | 1.752 | 0.234 | 1.997 | 8.52 | 35.04 | 3.07 |
| 119 | 1.472 | 0.414 | 2.064 | 4.99 | 29.72 | 2.60 |
| 134 | 1.385 | 0.598 | 2.118 | 3.55 | 27.96 | 2.45 |
| 149 | 1.073 | 0.745 | 2.156 | 2.89 | 21.46 | 1.88 |
| 163 | 1.703 | 0.874 | 2.185 | 2.50 | 34.06 | 2.99 |

010912XY1-1352 Flange closed, paste electrolyte Mo/LiOH-LiBr-MgO/NiO. (Different waveforms, high current); Anode: Mo plate (1*1", 6.25cm2, 31.7776g, incl. wire), submersed into electrolyte; Cathode: Pre-oxidized porous Ni C6NC (1.5*1.5"), on top of electrolyte; Electrolyte: 15.0g LiOH + 75.0g LiBr + 35.0g MgO; Temp. 450 °C; Flow through Ar (Pre-humidified)

| Charge V, t | Discharge 1, t | Time | Power density, mW/cm2 | Charge energy, Wh | Discharge energy, Wh | Energy gain, % |
|---|---|---|---|---|---|---|
| 1.1V for 0.5s | 20mA till V=0.6V, or 10s if V>0.6V in 10s | 1h | 1.92 | 0.0015 | 0.0198 | 1320.0 |
| | | 17h | | 0.0276 | 0.2443 | 885.1 |
| | | 1d16h | | 0.0694 | 0.5552 | 800.0 |
| | | 2dl5h | | 0.1237 | 0.8477 | 685.2 |
| | | 3dl4h | | 0.1935 | 1.1499 | 594.2 |
| | | 6d16h | | 0.4234 | 2.0816 | 491.6 |
| | | 7d13h | | 0.5210 | 2.2974 | 440.9 |
| | | 8dl0h | | 0.6109 | 2.5478 | 417.0 |
| | | 9d9h | | 0.7295 | 2.7983 | 383.5 |
| | | 10d6h | | 0.8627 | 2.9820 | 345.6 |
| | | 13d8h | | 1.2518 | 3.7894 | 302.7 |
| | | 14d4h (stopped) | | 1.3563 | 4.0188 | 296.3 |

011012XY1-1355 Five-layer stacks C276(Mo)/LiOH-LiBr-MgO/NiO. (Flange closed, paste electrolyte); Anode

in each layer: C276 foil (4.875" OD", 116cm2) pan with a piece of Mo foil (4.25" OD) in the pan; Cathode in each layer: Pre-oxidized porous Ni C6NC (4.25" OD), on top of electrolyte; Electrolyte in each layer: 40.0g LiOH + 200.0g LiBr + 60.0g MgO. Temp. 450 °C

| Charge 1, t | Discharge I, t | Time | Discharge power, mW | Charge energy, Wh | Discharge energy, Wh | Energy gain, % |
|---|---|---|---|---|---|---|
| 100mA till V=4.0V | 100mA till V=3.0V, or 4s if V>3.0V in 4s | 1h | 400 | 0.0003826 | 0.5345 | 139702.0 |
| | | 1d0h | | 0.3686 | 6.5344 | 1772.7 |
| | | 2d0h | | 1.3960 | 12.9076 | 924.6 |
| | | 2d22h | | 2.2072 | 18.7574 | 849.8 |
| | | 5d20h | | 5.3096 | 35.9334 | 676.7 |
| | | 6d19h | | 6.4309 | 41.0128 | 637.7 |
| | | 7dl4h | | 7.2993 | 47.5808 | 651.8 |

010512XY3-1348 Flange closed, paste electrolyte Ni/LiOH-LiBr-MgO/NiO. (Humidity supplied with water vapor generator); Anode: Porous Ni C6NC (1.5" OD", llcm2, 5.2816g); Cathode: Pre-oxidized porous Ni C6NC (1.5" OD), on top of electrolyte; Electrolyte: 15.0g LiOH + 75.0g LiBr + 35.0g MgO; Temp. 450 °C; Humidity was supplied to the cell with water vapor generator

| Charge 1, T | Discharge 1, T | Time | Power density, mW/cm2 | Charge energy, Wh | Discharge energy, Wh | Energy gain, % |
|---|---|---|---|---|---|---|
| 5mA till V=0.8V | 5mA till V=0.6V, or 4s if V>0.6V in 4s | 2h | 0.27 | 0.0000074 | 0.0084 | 113513.5 |
| | | 22h | | 0.0000684 | 0.0827 | 120906.4 |
| | | 3dl8h | | 0.0002696 | 0.3518 | 130489.6 |
| | | 4d15h | | 0.0003259 | 0.4341 | 133200.3 |
| | | 5dl4h | | 0.0003795 | 0.5249 | 138313.5 |
| | | 6dl3h | | 0.0004209 | 0.6121 | 145426.4 |
| | | 7dllh | | 0.0004650 | 0.7022 | 151010.7 |
| | | 10d12h | | 0.0005966 | 0.9841 | 164951.3 |
| | | lld9h | | 0.0006338 | 1.0646 | 167970.9 |
| | | 12d6h | | 0.0006747 | 1.1452 | 169734.6 |
| | | 13d5h | | 0.0007164 | 1.2328 | 172082.6 |
| | | 14d3h | | 0.0007664 | 1.3132 | 171346.5 |
| | | 17d5h (stopped) | | 0.0011 | 1.5136 | 137600.0 |

010612XY3-1351 Flange closed, paste electrolyte Ni/LiOH-LiBr-MgO/NiO. (High current, Humidity supplied with water vapor generator); Anode: Porous Ni C6NC (1.5" OD", 11cm2, 6.7012g); Cathode: Pre-oxidized porous Ni C6NC (1.5" OD), on top of electrolyte; Electrolyte: 15.0g LiOH + 75.0g LiBr + 35.0g MgO; Temp. 450 °C; Humidity was supplied to the cell with water vapor generator

| Charge I, T | Discharge I, T | Time | Power density, mW/cm2 | Charge energy, Wh | Discharge energy, Wh | Energy gain, % |
|---|---|---|---|---|---|---|
| 20mA till V=0.8V | 20mA till V=0.6V, or 4s if V>0.6V in 4s | 2h | 1.09 | 0.0000123 | 0.0214 | 173983.7 |
| | | 2d18h | | 0.0105 | 0.7884 | 7508.5 |
| | | 3d8h | | 0.0146 | 0.9486 | 6497.2 |
| | | 4d2h | | 0.0211 | 1.1564 | 5480.5 |
| | | 4d23h | | 0.0268 | 1.3540 | 5052.2 |

| | | | |
|---|---|---|---|
| 5d22h | 0.0337 | 1.5537 | 4610.3 |
| 8dl3h | 0.0885 | 2.0466 | 2312.5 |
| 9dl5h | 0.0898 | 2.1972 | 2446.7 |
| 10d15h | 0.0946 | 2.2062 | 2332.1 |
| 11d10h | 0.1043 | 2.7099 | 2598.1 |
| 12d9h(stopped) | 0.1090 | 2.7133 | 2489.2 |

121311XY1-1291 Flange closed, paste electrolyte Ni/LiOH-LiBr-MgO/NiO; Anode: Porous Ni C6NC (OD 1.5", llcm2, 2.2204g), submersed into electrolyte. Cathode: Pre-oxidized porous Ni C6NC (1.5*1.5"), on top of electrolyte; Electrolyte: 15.0g LiOH + 75.0g LiBr + 35.0g MgO.
Temperature 450 °C; Flow through Ar (Pre-humidified)

| Charge I, T | Discharge I, T | Time | Power density, mW/cm2 | Charge energy, Wh | Discharge energy, Wh | Energy gain, % |
|---|---|---|---|---|---|---|
| 5mA till V=0.8V | 5mA till V=0.6V, or 4s if V does not reach 0.6V in 4s | 5h | 0.27 | 0.0042 | 0.0175 | 416.6 |
| | | 20h | | 0.0059 | 0.0719 | 1218.6 |
| | | 2d3h | | 0.0075 | 0.1544 | 2058.6 |
| | | 3d2h | | 0.0239 | 0.2290 | 958.1 |
| | | 6dlh | | 0.1109 | 0.4146 | 373.8 |
| | | 7d2h | | 0.1145 | 0.5020 | 438.4 |
| | | 8dlh | | 0.1155 | 0.5848 | 506.3 |
| | | 8d20h | | 0.1156 | 0.6543 | 566.0 |
| | | 9d20h | | 0.1157 | 0.7437 | 642.7 |
| | | 13d16h | | 0.1161 | 1.0680 | 919.8 |
| | | 15d0h | | 0.1223 | 1.1700 | 956.6 |
| | | 15d20h | | 0.1490 | 1.2087 | 811.2 |
| | | 16dl6h | | 0.1681 | 1.2461 | 741.2 |
| | | 18d23h | | 0.2575 | 1.3449 | 522.2 |
| | | 20d12h | | 0.3281 | 1.4033 | 427.7 |
| | | 21d9h | | 0.3292 | 1.4802 | 449.6 |
| | | 22d5h | | 0.3293 | 1.5586 | 473.3 |
| | | 25d6h | | 0.3713 | 1.7988 | 484.4 |
| | | 26d3h | | 0.4016 | 1.8534 | 461.5 |
| | | 27d8h | | 0.4243 | 1.9018 | 448.2 |
| | | 28dl2h | | 0.4583 | 1.9564 | 426.8 |
| | | 29dllh | | 0.4915 | 2.0145 | 409.8 |
| | | 32d13h | | 0.5254 | 2.1799 | 414.9 |
| | | 33d10h (stopped) | | 0.5685 | 2.2404 | 394.0 |

121311XY2-1292 Flange closed, paste electrolyte Ni/LiOH-LiBr-MgO/NiO; Anode: Porous Ni C6NC (OD 1.5", llcm2, 2.1179g), submersed into electrolyte; Cathode: Pre-oxidized porous Ni C6NC (1.5*1.5"), on top of electrolyte; Electrolyte: 15.0g LiOH + 75.0g LiBr + 35.0g MgO.
Temperature 450 °C; Flow through Ar (Pre-humidified)

| Charge 1, T | Discharge 1, T | Time | Power density, mW/cm2 | Charge energy, Wh | Discharge energy, Wh | Energy gain, % |
|---|---|---|---|---|---|---|
| 5mA till V=0.8V | 5mA till V=0.6V, or 4s if V does not reach 0.6V in 4s | 5h | 0.27 | 0.0000116 | 0.0233 | 200862.0 |
| | | 20h | | 0.0163 | 0.0581 | 356.4 |
| | | 1d19h | | 0.0206 | 0.1077 | 522.8 |
| | | 2d5h | | 0.0347 | 0.1229 | 354.1 |
| | | 3dl7h | | 0.0494 | 0.2104 | 425.9 |
| | | 4d6h | | 0.0557 | 0.2456 | 440.9 |
| | | 6d5h | | 0.0601 | 0.2690 | 447.5 |
| | | 6dl4h | | 0.0640 | 0.2902 | 453.4 |
| | | 7dlh | | 0.0691 | 0.3172 | 459.0 |
| | | 11d19h | | 0.0937 | 0.4700 | 441.8 |
| | | 13d1h | | 0.1022 | 0.4490 | 439.3 |
| | | 14d20h | | 0.1074 | 0.4700 | 437.6 |
| | | 16d0h | | 0.1129 | 0.4905 | 434.4 |
| | | 18d0h | | 0.1261 | 0.5545 | 439.7 |
| | | 20d12h | | 0.1375 | 0.6044 | 439.5 |
| | | 21d22h | | 0.1421 | 0.6459 | 454.5 |
| | | 22d18h | | 0.1463 | 0.6700 | 457.9 |
| | | 25d8h | | 0.1647 | 0.7516 | 456.3 |
| | | 26dl0h | | 0.1682 | 0.7707 | 458.2 |
| | | 27d10h | | 0.1776 | 0.7888 | 444.1 |
| | | 28d14h | | 0.1878 | 0.8088 | 430.6 |
| | | 29d13h | | 0.1996 | 0.8286 | 415.1 |
| | | 32d13h | | 0.2006 | 0.8942 | 445.7 |
| | | 33d9h (stopped) | | 0.2111 | 0.9563 | 453.0 |

121311XY3-1293 Flange closed, paste electrolyte Mo/LiOH-LiBr-MgO/NiO; Anode: Mo plate (1*1", 6.25cm2, 33.8252g, incl. wire), submersed into electrolyte; Cathode: Pre-oxidized porous Ni C6NC (1.5*1.5"), on top of electrolyte; Electrolyte: 15.0g LiOH + 75.0g LiBr + 35.0g MgO; Temperature 450 °C; Flow through Ar (Pre-humidified)

| Charge l, T | Discharge l, T | Time | Power density, mW/cm2 | Charge energy, Wh | Discharge energy, Wh | Energy gain, % |
|---|---|---|---|---|---|---|
| 5mA till V=0.8V | 5mA till V=0.6V, or 4s if V does not reach 0.6V in 4s | 5h | 0.48 | 0.0000172 | 0.0244 | 141860.4 |
| | | 20h | | 0.0000575 | 0.0900 | 156521.7 |
| | | ldl7h | | 0.0001059 | 0.1818 | 171671.3 |
| | | 2d16h | | 0.0001511 | 0.2800 | 185307.7 |
| | | 5dl4h | | 0.0003231 | 0.5751 | 177994.4 |
| | | 6d17h | | 0.0003953 | 0.6910 | 174803.9 |
| | | 7d17h | | 0.0004431 | 0.7891 | 178086.2 |
| | | 8d12h | | 0.0004840 | 0.8689 | 179524.7 |
| | | 9d13h | | 0.0005374 | 0.9735 | 181149.9 |
| | | 13d8h | | 0.0007116 | 1.3535 | 190205.1 |
| | | 14d16h | | 0.0007772 | 1.4857 | 191392.1 |
| | | 15d12h | | 0.0008172 | 1.5686 | 191948.1 |
| | | 16d7h | | 0.0008542 | 1.6498 | 193139.7 |

(continued)

| | | | |
|---|---|---|---|
| 18d14h | 0.0009588 | 1.8773 | 195796.8 |
| 20d10h | 0.0010 | 2.0574 | 205740.0 |
| 21d10h | 0.0011 | 2.1625 | 196590.9 |
| 22d7h | 0.0012 | 2.2504 | 187533.3 |
| 25d7h | 0.0014 | 2.5508 | 182200.0 |
| 26d5h | 0.0014 | 2.6386 | 188471.4 |
| 27dl3h | 0.0015 | 2.7331 | 182206.6 |
| 28dl3h | 0.0016 | 2.8246 | 176537.5 |
| 29d11h | 0.0017 | 2.9187 | 171688.2 |
| 32d11h | 0.0019 | 3.2072 | 168800.0 |
| 33d8h(stopped) | 0.0020 | 3.3086 | 165430.0 |

121311XY4-1294 Flange closed, paste electrolyte Haynes 242 alloy/LiOH-LiBr-MgO/NiO. (Validation cell); Anode: Haynes 242 alloy foil (1*1", 6.25cm2, 4.5830g, incl. wire), submersed into electrolyte; Cathode: Pre-oxidized porous Ni C6NC (1.5* 1.5"), on top of electrolyte; Electrolyte; 15.0g LiOH + 75.0g LiBr + 35.0g MgO; Temperature 450 °C; Flow through Ar (Pre-humidified)

| Charge I, T | Discharge I, T | Time | Power density, mW/cm2 | Charge energy, Wh | Discharge energy, Wh | Energy gain, % |
|---|---|---|---|---|---|---|
| 5mA till V=0.8V | 5mA till V=0.6V, or 4s if V does not reach 0.6V in 4s | 5h | 0.48 | 0.0000120 | 0.0233 | 194166.6 |
| | | 20h | | 0.0211 | 0.0567 | 268.7 |
| | | 1d17h | | 0.0494 | 0.1145 | 231.7 |
| | | 2dl7h | | 0.0576 | 0.1987 | 344.9 |
| | | 5dl4h | | 0.0964 | 0.4310 | 447.0 |
| | | 6d20h | | 0.1178 | 0.5225 | 443.5 |
| | | 7dl5h | | 0.1383 | 0.5761 | 416.5 |
| | | 8d9h | | 0.1617 | 0.6248 | 386.3 |
| | | 9d11h | | 0.1980 | 0.6870 | 346.9 |
| | | 13d8h | | 0.2938 | 0.9490 | 323.0 |
| | | 14d15h | | 0.3280 | 1.0326 | 314.8 |
| | | 15d6h | | 0.3393 | 1.0845 | 319.6 |
| | | 16d7h | | 0.3652 | 1.1565 | 316.6 |
| | | 18d15h | | 0.4207 | 1.3156 | 312.7 |
| | | 21d4h | | 0.4848 | 1.4885 | 307.0 |
| | | 22d2h | | 0.5106 | 1.5503 | 303.6 |
| | | 23d2h | | 0.5395 | 1.6165 | 299.6 |
| | | 26d0h | | 0.6236 | 1.8052 | 289.4 |
| | | 27d0h | | 0.6530 | 1.8697 | 286.3 |
| | | 28d1h | | 0.6832 | 1.9341 | 283.0 |
| | | 29d0h | | 0.7125 | 1.9929 | 279.7 |
| | | 29d22h | | 0.7419 | 2.0537 | 276.8 |
| | | 33d0h | | 0.8457 | 2.2374 | 264.5 |
| | | 34d2h (stopped) | | 0.8821 | 2.2996 | 260.6 |

122211CG20-447 Ni trays + Mo anodes triple stack; top dia. 2.00" Bottom dia. 2.00" prepared paste; closed cell, Ar flow thru H2O; Stacking three cells using bipolar plates of NiO on one side Mo foil on the other side and trays as separator; Anode: Mo foil X3; Cathode: NiO X3; Electrolyte: LiOH-LiBr-MgO; Tset=450 °C; Charge @10mA till V>2.8V; discharge@-10mA for 5sec or 1.5V

| test time, hr | discharge voltage, V | charge energy, Wh | discharge energy, Wh | Energy gain |
|---|---|---|---|---|
| 8 | 2.631 | 0.055 | 0.157 | 2.83 |
| 25 | 2.618 | 0.203 | 0.461 | 2.27 |
| 36 | 2.592 | 0.298 | 0.661 | 2.22 |
| 48 | 2.579 | 0.402 | 0.876 | 2.18 |
| 60 | 2.555 | 0.505 | 1.088 | 2.15 |
| 72 | 2.555 | 0.605 | 1.304 | 2.15 |
| 84 | 2.530 | 0.704 | 1.519 | 2.16 |
| 96 | 2.528 | 0.801 | 1.735 | 2.17 |
| 108 | 2.484 | 0.898 | 1.949 | 2.17 |
| 119 | 2.482 | 0.986 | 2.137 | 2.17 |
| 130 | 2.452 | 1.078 | 2.336 | 2.17 |
| 142 | 2.400 | 1.182 | 2.539 | 2.15 |
| 154 | 2.326 | 1.296 | 2.730 | 2.11 |
| 166 | 2.321 | 1.410 | 2.912 | 2.07 |
| 178 | 2.288 | 1.529 | 3.100 | 2.03 |
| 189 | 2.296 | 1.633 | 3.270 | 2.00 |

120911XY3-1284 Aqueous Mo6Si4/KOH/Ni; Anode: Mo6Si4 alloy pellet (OD 1.4cm, 1.5cm2); Cathode: Porous Ni C8NC; Electrolyte: Saturated KOH; Room Temperature

| Charge 1, T | Discharge I, T | Time | Power density, mW/cm2 | Charge energy, Wh | Discharge energy, Wh | Energy gain, % |
|---|---|---|---|---|---|---|
| 1mA till V=0.8V, then V was held at 0.8V for 1s. | 1mA till V=0.6V, or 4s if V does not reach 0.6V in 4s | 11h | 0.40 | 0.0037 | 0.0039 | 105.4 |
| | | 1d6h | | 0.0103 | 0.0110 | 106.7 |
| | | 1d1h | | 0.0167 | 0.0179 | 107.1 |
| | | 2d19h | | 0.0226 | 0.0243 | 107.5 |
| | | 5d8h | | 0.0431 | 0.0464 | 107.6 |
| | | 6d5h | | 0.0502 | 0.0541 | 107.7 |
| | | 7d3h | | 0.0576 | 0.0620 | 107.6 |
| | | 7d21h | | 0.0638 | 0.0688 | 107.8 |
| | | 8d19h | | 0.0712 | 0.0768 | 107.8 |
| | | 12d5h | | 0.0984 | 0.1063 | 108.0 |
| | | 13d2h | | 0.1057 | 0.1142 | 108.0 |
| | | 14d2h | | 0.1122 | 0.1213 | 108.1 |
| | | 15d9h | | 0.1194 | 0.1291 | 108.1 |
| | | 20d23h | | 0.1535 | 0.1657 | 107.9 |

| | | | |
|---|---|---|---|
| 21d19h | 0.1600 | 0.1728 | 108.0 |
| 22d17h | 0.1676 | 0.1809 | 107.9 |
| 25d5h | 0.1881 | 0.2025 | 107.6 |
| 26d2h | 0.1951 | 0.2101 | 107.6 |
| 26d23h | 0.2023 | 0.2177 | 107.6 |
| 27d14h | 0.2072 | 0.2230 | 107.6 |
| 28d9h | 0.2138 | 0.2297 | 107.4 |
| 30d8h(stopped) | 0.2342 | 0.2483 | 106.0 |

122811XY1-1331 Flange closed, paste electrolyte TZM/LiOH-LiBr-MgO/NiO. (Ar+H2O); Anode: TZM foil

(0.75*1.5", 7.0cm2, 2.8004g, incl. wire), submersed into electrolyte; Cathode: Pre-oxidized porous Ni C6NC (1.5*1.5"), on top of electrolyte; Electrolyte: 15.0g LiOH + 75.0g LiBr + 35.0g MgO; Temperature 450 °C; Flow through Ar (Pre-humidified)

| Charge I, T | Discharge I, T | Time | Power density, mW/cm2 | Charge energy, Wh | Discharge energy, Wh | Energy gain, % |
|---|---|---|---|---|---|---|
| 5mA till V=0.8V | 5mA till V=0.6V, or 4s if V>0.6V in 4s | 2h | 0.43 | 0.0000735 | 0.0135 | 18367.3 |
| | | 16h | | 0.00026 | 0.0455 | 17500.0 |
| | | 1d12h | | 0.00030 | 0.1283 | 42766.6 |
| | | 5d15h | | 0.0002694 | 0.5528 | 205196.7 |
| | | 6d13h | | 0.0003138 | 0.6403 | 204047.1 |
| | | 7d13h | | 0.0003568 | 0.7338 | 205661.4 |
| | | 10d11h | | 0.0004891 | 1.0014 | 204743.4 |
| | | 11d9h | | 0.0005336 | 1.0838 | 203110.9 |
| | | 12d9h | | 0.0005800 | 1.1717 | 202017.2 |
| | | 13d8h (stopped) | | 0.0006226 | 1.2526 | 201188.5 |

121511XY1-1301 Flange closed, paste electrolyte Mo/LiOH-LiBr-MgO/NiO. (Humidity supplied by water vapor generator); Anode: Mo plate (1*1", 6.25cm2, 32.0286g); Cathode: Pre-oxidized porous Ni C6NC (1.5*1.5"), on top of electrolyte; Electrolyte: 15.0g LiOH + 75.0g LiBr + 35.0g MgO; Temp. 450 °C; Humidity was supplied to the cell with water vapor generator

| Charge I, T | Discharge I, T | Time | Power density, mW/cm2 | Charge energy, Wh | Discharge energy, Wh | Energy gain, % |
|---|---|---|---|---|---|---|
| 5mA till V=0.8V, then V was held at 0.8V for 1s. | 5mA till V=0.6V, or 4s if V does not reach 0.6V in 4s | 3h | 0.48 | 0.0000052 | 0.0304 | 584615.3 |
| | | 1d1h | | 0.0000396 | 0.1294 | 326767.6 |
| | | 3d19h | | 0.0001407 | 0.4168 | 296233.1 |
| | | 4d14h | | 0.0001671 | 0.4919 | 294374.6 |
| | | 5d17h | | 0.0002119 | 0.6106 | 288154.7 |
| | | 6d13h | | 0.0002407 | 0.6969 | 289530.5 |
| | | 7d13h | | 0.0002768 | 0.8052 | 290895.9 |
| | | 11d10h | | 0.0004488 | 1.1963 | 266555.2 |
| | | 12d18h | | 0.0004949 | 1.3273 | 268195.5 |
| | | 13d14h | | 0.0005212 | 1.4088 | 270299.3 |
| | | 14d9h | | 0.0005453 | 1.4870 | 272693.9 |
| | | 16d15h | | 0.0006118 | 1.7129 | 279977.1 |
| | | 19d3h | | 0.0006984 | 1.9589 | 280483.9 |
| | | 20d1h | | 0.0007290 | 2.0476 | 280877.9 |
| | | 21d1h | | 0.0007619 | 2.1442 | 281428.0 |
| | | 24d2h(stopped) | | 0.0009724 | 2.3545 | 242132.8 |

121611XY1-1305 Three-layer stacks Mo(Ni)/LiOH-LiBr-MgO/NiO. (Flange closed, paste electrolyte, partial submerge anode). (Water supplied by steam generator); Anode in each layer: Mo foil pan (2.0" OD", 19.6cm2) with a layer of celmet NiC6NC (1.5" OD, llcm2) inside; Cathode in each layer: Pre-oxidized porous Ni C6NC (1.75" OD), on top of electrolyte; Electrolyte in each layer: 8.0g LiOH + 40.0g LiBr + 20.0g MgO; Temperature 450 °C; (Humidity supplied by water vapor generator)

| Charge I, T | Discharge I, T | Time | Power density, mW/cm2 | Charge energy, Wh | Discharge energy, Wh | Energy gain, % |
|---|---|---|---|---|---|---|
| 5mA till V=2.4V, then V was held at 2.4V for 1s. | 5mA till V=1.8V, or 4s if V does not reach 1.8V in 4s | 3h<br>3d12h | 0.46 | 0.0050<br>0.2117 | 0.0385<br>0.6393 | 770.0<br>301.9 |

121211XY2-1288 Flange closed, paste electrolyte Mo/LiOH-LiBr-MgO/NiO; Anode: Mo plate (1*1", 6.25cm2), submersed into electrolyte; Cathode: Pre-oxidized porous Ni C6NC (1.5*1.5"), on top of electrolyte; Electrolyte: 10.0g LiOH + 50.0g LiBr + 25.0g MgO; Temperature 450 °C; Flow through Ar (Pre-humidified, low rate)

| Charge I, T | Discharge I, T | Time | Power density, mW/cm2 | Charge energy, Wh | Discharge energy, Wh | Energy gain, % |
|---|---|---|---|---|---|---|
| 20mA till V=1.0V, then V was held at 1.0V for 1s. | 20mA till V=0.8V, or 4s if V does not reach 0.8V in 4s | 7h<br>20h<br>1d19h<br>2d17h<br>3d16h<br>6d13h | 2.56 | 0.0205<br>0.0429<br>0.1531<br>0.2044<br>0.2673<br>0.3080 | 0.1079<br>0.1535<br>0.3979<br>0.6379<br>0.8798<br>1.6542 | 526.3<br>357.8<br>259.8<br>312.0<br>329.1<br>537.0 |

120911XY5-1286 Flange closed, paste electrolyte Ni/LiOH-LiBr-MgO/NiO. (Humidity supplied with water vapor generator); Anode: Porous Ni C6NC (1.5" OD", llcm2, 2.0286g); Cathode: Pre-oxidized porous Ni C6NC (1.5*1.5"), on top of electrolyte; Electrolyte: 15.0g LiOH + 75.0g LiBr + 35.0g MgO; Temp. 450 °C; Humidity was supplied to the cell with water vapor generator

| Charge I, T | Discharge I, T | Time | Power density, mW/cm2 | Charge energy, Wh | Discharge energy, Wh | Energy gain, % |
|---|---|---|---|---|---|---|
| 5mA till V=0.8V, then V was held at 0.8V for 1s. | 5mA till V=0.6V, or 4s if V does not reach | 12h<br>2d7h<br>3d9h | 0.27 | 0.0000214<br>0.0072<br>0.0110 | 0.0588<br>0.1293<br>0.1747 | 274766.3<br>1795.8<br>1588.1 |
| | 0.6V in 4s | 4d2h<br>4d23h<br>5d21h<br>8d20h | | 0.0147<br>0.0147<br>0.0148<br>0.0365 | 0.2379<br>0.3262<br>0.4193<br>0.6158 | 1618.3<br>2219.0<br>2833.1<br>1687.1 |

113011XY1-1254 Flange closed, paste electrolyte Ni/LiOH-LiBr-MgO/NiO; Anode: Porous Ni C6NC (OD 1.5", 1 lcm2, 3.1816g, incl. wire), submersed into electrolyte; Cathode: Pre-oxidized porous Ni C6NC (1.5*1.5"), on top of electrolyte; Electrolyte: 15.0g LiOH + 75.0g LiBr + 30.0g MgO; Temperature 450 °C; Flow through Ar (Pre-humidified)

| Charge I, T | Discharge I, T | Time | Power density, mW/cm2 | Charge energy, Wh | Discharge energy, Wh | Energy gain, % |
|---|---|---|---|---|---|---|
| 5mA till V=0.8V, then V was held at 0.8V for 1s. | 5mA till V=0.6V, or 4s if V does not reach 0.6V in 4s | 4h | 0.27 | 0.0000963 | 0.0248 | 25752.8 |
| | | 19h | | 0.0012 | 0.0370 | 3083.3 |
| | | 1d19h | | 0.0018 | 0.0646 | 3588.8 |
| | | 4d4h | | 0.0023 | 0.1174 | 5104.3 |
| | | 5d4h | | 0.0026 | 0.1741 | 6696.1 |
| | | 5d20h | | 0.0029 | 0.2013 | 6941.3 |
| | | 7d1h | | 0.0036 | 0.2416 | 6711.1 |
| | | 7d19h | | 0.0041 | 0.2629 | 6412.1 |
| | | 10d10h | | 0.0059 | 0.3374 | 5718.6 |
| | | 11d3h | | 0.0064 | 0.3593 | 5614.0 |
| | | 12d1h | | 0.0070 | 0.3854 | 5505.7 |
| | | 12d22h | | 0.0075 | 0.4107 | 5476.0 |
| | | 13d19h | | 0.0080 | 0.4401 | 5501.2 |
| | | 16d21h | | 0.0097 | 0.5583 | 5755.6 |
| | | 17d20h | | 0.0100 | 0.6005 | 6005.0 |
| | | 18d19h | | 0.0106 | 0.6376 | 6015.0 |
| | | 19d10h | | 0.0115 | 0.6769 | 5886.0 |
| | | 20d20h | | 0.0137 | 0.6796 | 4960.5 |
| | | 25d22h (stopped) | | 0.0223 | 0.9133 | 4095.5 |

High T molten electrolyte-Closed SS cell with Ar flow but separated steam generator

**[0448]** - 121311GZC1-904: Ni/10g LiOH + 50g LiBr + 20g MgO/NiO; 2.75" Alumina Crucible; Anode: 1.5"X1.5" 2.975g CNi6C, Cathode: 2 pieces of 1.5"X1.5" preoxidized CNi6C; Tset=440 °C, Treal=440 °C; Results: (1) without running schedule, use 30SCCM Ar flow to purge cell (not pass through water bubbler). 14:40, OCV=0.920V; 16:57, OCV=0.737V (2) Dec 14. Stop gas flow. Close both Ar inlet and outlet, run schedule of charging to 0.8V, discharging for 4s if V>0.6V.Put water reservoir into to heater that has temperature of 60 °C.

| current, mA | test time, hr | discharge voltage, V | power output, mW | discharge power density, mW/cm2 anode | charge energy, Wh | discharge energy, Wh | energy gain | notes |
|---|---|---|---|---|---|---|---|---|
| 5 | 7.84 | 0.757 | 3.79 | 0.26 | 1.39E-02 | 1.66E-02 | 1.19 | C2.6s/D4s |
| | 23.52 | 0.775 | 3.88 | 0.27 | 0.0348 | 0.0568 | 1.63 | C 1.4s/D4s |
| | 47.71 | 0.781 | 3.91 | 0.27 | 0.0585 | 0.128 | 2.19 | C1.1s/D4s |
| | 116.46 | 0.785 | 3.93 | 0.27 | 1.20E-01 | 0.338 | 2.82 | C1.2s/D4s |
| | 146.9 | 0.786 | 3.93 | 0.27 | 0.147 | 0.431 | 2.93 | C1.2s/D4s |
| | 171.94 | 0.785 | 3.93 | 0.27 | 0.17 | 0.507 | 2.98 | C1.3s/D4s |
| | 187.38 | 0.787 | 3.94 | 0.27 | 0.184 | 0.554 | 3.01 | C1.0s/D4s |
| | 212.78 | 0.787 | 3.94 | 0.27 | 0.206 | 0.632 | 3.07 | C1.1s/D4s |
| | 305.95 | 0.787 | 3.94 | 0.27 | 0.288 | 0.919 | 3.19 | C1.2s/D4s |
| | 329.58 | 0.787 | 3.94 | 0.27 | 0.311 | 0.989 | 3.18 | C1.1s/D4s |
| | 353.38 | 0.787 | 3.94 | 0.27 | 0.331 | 1.063 | 3.21 | C1.1s/D4s |
| | 377.84 | 0.787 | 3.94 | 0.27 | 0.353 | 1.137 | 3.22 | C1.1s/D4s |
| | 475.11 | 0.786 | 3.93 | 0.27 | 0.442 | 1.433 | 3.24 | C1.2s/D4s |
| | 495.28 | 0.786 | 3.93 | 0.27 | 0.46 | 1.495 | 3.25 | C1.2s/D4s |
| | 518.44 | 0.784 | 3.92 | 0.27 | 0.482 | 1.564 | 3.24 | C1.3s/D4s |

(continued)

| current, mA | test time, hr | discharge voltage, V | power output, mW | discharge power density, mW/cm2 anode | charge energy, Wh | discharge energy, Wh | energy gain | notes |
|---|---|---|---|---|---|---|---|---|
| | 544.61 | 0.781 | 3.905 | 0.27 | 0.506 | 1.644 | 3.25 | C1.1s/D4s |
| | 608.96 | 0.6 | 3 | 0.21 | 0.566 | 1.816 | 3.21 | C0.3s/D0.4s |

High T molten electrolyte-Closed SS cell with Ar flow: stack of 2 cells

**[0449]** - 121511GZC1-908: Mo in Ni tray/LiOH +LiBr(l:5 wt)+ MgO/NiO; 2.75" Alumina Crucible; Anode: 1.75"diameter 0.01" thick Mo foil, Cathode: 2 pieces of 1.75" diameter preoxidized CNi6C. Bipolar plate & anode holder: 0.010" thick Ni tray. Mo foil was spot welded on the Ni tray; Tset=500 °C, Treal=440 °C; Schedule: Charge to 1.6V, discharge for 4s if V>1.2V. Have 3 leads come out to check status of each stack.

| current, mA | test time, hr | discharge voltage, V | power output, mW | discharge power density,mW/cm2 anode | charge energy, Wh | discharg e energy, Wh | energy gain | notes |
|---|---|---|---|---|---|---|---|---|
| 5 | 17.87 | 1.740 | 8.70 | 0.56 | 1.10E-04 | 0.318 | 2890.91 | |
| | 86.3 | 1.470 | 7.35 | 0.47 | 2.65E-02 | 1.378 | 52.00 | C0.59/4s, G7 |

Aqueous RT cell

**[0450]** - 120111 GZC3-887: Cr6Mo4/saturated KOH/Ni; 2.75" Alumina Crucible; Anode: 0.5"OD Cr6Mo4, Cathode: CNi8; RT, charge to 1.2V, discharge for 4s if V>0.8V.

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 2 | 15.04 | 0.313 | 0.63 | 0.49 | 1.49E-02 | 0.0151 | 1.01 |
| | 73.69 | 0.614 | 1.23 | 0.97 | 0.0697 | 0.0767 | 1.10 |
| | 91.78 | 0.659 | 1.32 | 1.04 | 8.65E-02 | 0.0958 | 1.11 |
| | 111.3 | 0.564 | 1.13 | 0.89 | 0.105 | 0.116 | 1.10 |
| | 129.79 | 0.617 | 1.23 | 0.97 | 0.122 | 0.136 | 1.11 |
| | 149.61 | 0.540 | 1.08 | 0.85 | 0.14 | 0.157 | 1.12 |
| | 194.66 | 0.552 | 1.10 | 0.87 | 0.182 | 0.204 | 1.12 |
| Dec 12. start a new file. | | | | | | | |
| | 9.79 | 0.641 | 1.28 | 1.01 | 0.00913 | 0.0103 | 1.13 |
| | 29.36 | 0.790 | 1.58 | 1.25 | 0.0274 | 0.0309 | 1.13 |
| | 47.68 | 0.593 | 1.19 | 0.94 | 0.0444 | 0.0502 | 1.13 |

120911XY2-1283 Aqueous Ta5V5/KOH/Ni; Anode: Ta5V5 alloy pellet (OD 1.4cm, 1.5cm2); Cathode: Porous Ni C8NC; Electrolyte: Saturated KOH; Room Temperature

| Charge I, T | Discharge I, T | Time | Power density, mW/cm2 | Charge energy, Wh | Discharge energy, Wh | Energy gain, % |
|---|---|---|---|---|---|---|
| 1mA till V=0.8V, then V was held at 0.8V for 1s. | 1mA till V=0.6V, or 4s if V does not reach 0.6V in 4s | 9h | 0.40 | 0.0031 | 0.0035 | 112.9 |
| | | 1d2h | | 0.0087 | 0.0097 | 111.4 |
| | | 1d19h | | 0.0142 | 0.0158 | 111.2 |

120111 GC3 (intermittent charge-discharge closed cell, Ni powder anode); Ni powder plate / LiOH-LiBr / NiO mesh square (Wet Ar); T = 450 °C, Charge 5 mA till V = 0.8V; discharge 5 mA till V > = 0.6V otherwise discharge 4s; Anode: Ni powder plate (4.78 g, d: 1', 5.06 cm^2); cathode: NiO square: 3 ×1.5'× 1.5'; Electrolyte: 8 g LiOH + 40 g LiBr + 24 g MgO

| Test time/ current (mA) | Discharge Power Density (mW/cm2) | Charge capacity (Ah) | discharge capacity (Ah) | charge energy (Wh) | discharge energy (Wh) | Ratio (100%) |
|---|---|---|---|---|---|---|
| 1 h+ 15 m / 5 | 0.78 | 0.0255 mAh | 0.0063 | 0.0207 mWh | 0.0050 | 27566.5 |
| 23 h / 5 | | 0.0186 | 0.0946 | 0.0148 | 0.0747 | 504.7 |
| 2d/5 | | 0.0457 | 0.1954 | 0.0365 | 0.1544 | 423.0 |
| 3 d / 5 | | 0.0644 | 0.2934 | 0.0514 | 0.2316 | 450.6 |
| 4d/5 | | 0.0784 | 0.3968 | 0.0626 | 0.3132 | 500.3 |
| 5 d / 5 | | 0.1040 | 0.4864 | 0.0830 | 0.3839 | 462.5 |
| 5 d + 17h / 5 | | 0.1279 | 0.5547 | 0.1021 | 0.4378 | 428.8 |
| 9 d / 5 | | 0.2240 | 0.8364 | 0.1788 | 0.6598 | 369.0 |
| 10 d/5 | | 0.2535 | 0.9237 | 0.2024 | 0.7285 | 359.9 |
| 11 d / 5 | | 0.2780 | 1.0160 | 0.2219 | 0.8012 | 361.1 |
| 12 d / 5 | | 0.2890 | 1.1216 | 0.2307 | 0.8846 | 383.4 |

Control with no water vapor:

High T molten electrolyte-Closed SS cell with Ar flow, but no bubbler at the inlet

**[0453]** - 112811GZC1-877: Ni/10g LiOH +50g LiBr+20g MgO/NiO; 2.75" Alumina Crucible; Anode: 1.5"X1.5" 3.201g CNi6C, Cathode: 2 pieces of 1.5"X1.5" preoxidized CNi6C; Tset=500 °C, Treal=440 °C; continuously discharge

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 5 | 6.61 | 0.000 | 0.00 | 0.00 | 0.00E+00 | 0.0264 | |
| discharge voltage gradually dropped. After 6.6hrs run, discharge voltage went to negative | | | | | | | |

High T molten electrolyte-Closed SS cell with Ar flow and independent water vapor generator.

**[0454]** - 112211GZC2-872: Ni/10g LiOH +50g LiBr+20g MgO/NiO; 2.75" Alumina Crucible; Anode: 1.5"X1.5" 2.926g CNi6C, Cathode: 1.5"X1.5" preoxidized CNi6C; Tset=500 °C, Treal=440 °C; charge to 0.8V, discharge for 4s if V>0.6

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 5 | 15.72 | 0.753 | 3.77 | 0.26 | 1.52E-02 | 0.0466 | 3.07 |
| | 23.73 | 0.777 | 3.89 | 0.27 | 0.0281 | 0.0646 | 2.30 |
| Closed cell with Ar atm, maintain water vapor active. | | | | | | | |
| 5 | 88.95 | 0.798 | 3.99 | 0.27 | 0.00275 | 0.355 | 129.09 |
| | 111.88 | 0.778 | 3.89 | 0.27 | 9.47E-03 | 0.439 | 46.36 |
| | 134.88 | 0.774 | 3.87 | 0.27 | 0.0283 | 0.51 | 18.02 |

High T molten electrolyte-Closed SS cell with Ar flow through H2O bubbler

**[0455]** - 111411GZC1-858: Ni/12g LiOH +60g LiBr+20g MgO/NiO; 2.75" Alumina Crucible; Anode: 1.5"X1.5" 3.028g Ni CNi6C, Cathode: 2 pieces of 1.5"X1.5" preoxidized CNi6C; Tset=460 °C, Treal=440 °C; charge to 0.8V, discharge for 4s if V>0.6; Results: (1) OCV=0.943V, evacuate cell OCV=0.860. Then fill Ar through water bubbler into the closed cell; (2) OCV=0.920V, evacuate cell OCV=0.872. Then fill Ar through water bubbler into the closed cell; (3) OCV=0.902V, evacuate cell OCV=0.858. Then fill Ar through water bubbler into the closed cell; (4) OCV=0.842V, evacuate cell OCV=0.793. Then fill Ar through water bubbler into the closed cell; (5) OCV=0.823V, evacuate cell OCV=0.790. Then fill Ar through water bubbler into the closed cell; (6) OCV=0.809V, evacuate cell OCV=0.777. Then fill Ar through water bubbler into the closed cell; (7) OCV=0.796V, evacuate cell OCV=0.768. Then fill Ar through water bubbler into the closed cell; (8) OCV=0.790V. Then run schedule: charge to 0.8V, discharge for 4s if V>0.6. Test is underway.

| current, mA | test time, hr | discharge voltage, V | Power output, mW | discharge power density, mW/cm2 anode | charge energy, Wh | discharge energy, Wh | Energy gain | notes |
|---|---|---|---|---|---|---|---|---|
| 5 | 16.11 | 0.767 | 3.84 | 0.26 | 3.15E-02 | 0.0314 | 1.00 | gain is increasing. |
| | 39.99 | 0.794 | 3.97 | 0.27 | 0.0693 | 0.087 | 1.26 | gain is increasing. |
| | 63.33 | 0.814 | 4.07 | 0.28 | 8.06E-02 | 0.171 | 2.12 | no charge needed. |
| | 87.9 | 0.831 | 4.16 | 0.29 | 0.0942 | 0.257 | 2.73 | no charge needed. |
| | 142.83 | 0.831 | 4.16 | 0.29 | 9.43E-02 | 0.483 | 5.12 | no charge needed because DV >0.8V. |
| | 164.36 | 0.786 | 3.93 | 0.27 | 0.132 | 0.531 | 4.02 | C3.67s/D4s |
| | 188.68 | 0.788 | 3.94 | 0.27 | 0.178 | 0.581 | 3.26 | C2.63s/D4s |
| | 286.07 | 0.784 | 3.92 | 0.27 | 0.368 | 0.777 | 2.11 | C3.98s/D4s |
| | 309.22 | 0.784 | 3.92 | 0.27 | 0.414 | 0.822 | 1.99 | C4.05s/D4s |
| | 332.63 | 0.784 | 3.92 | 0.27 | 0.461 | 0.868 | 1.88 | C4.1s/D4s |

High T molten electrolyte-Closed SS cell with Ar flow

**[0456]** - 110811GZC5-845: Ni/20g LiOH +100g LiBr/NiO; 2.75" Alumina Crucible; Anode: 1.5"X1.5" Ni CNi6C, Cathode: 4 pieces of 1.5"X1.5" preoxidized CNi6C; Tset=500 °C, Treal=440 °C; charge to 0.8V, discharge for 4s if V>0.6

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| 5 | 16.08 | 0.800 | 4.00 | 0.28 | 9.84E-03 | 0.0539 | 5.48 |
| | 40.36 | 0.777 | 3.89 | 0.27 | 0.0108 | 0.15 | 13.89 |
| | 64.25 | 0.782 | 3.91 | 0.27 | 6.03E-02 | 0.195 | 3.23 |
| | 135.35 | 0.749 | 3.75 | 0.26 | 0.151 | 0.382 | 2.53 |
| | 158.37 | 0.793 | 3.97 | 0.27 | 1.70E-01 | 0.452 | 2.66 |
| | 180.8 | 0.791 | 3.96 | 0.27 | 0.177 | 0.534 | 3.02 |
| | 204.11 | 0.791 | 3.96 | 0.27 | 0.179 | 0.624 | 3.49 |
| | 228.45 | 0.790 | 3.95 | 0.27 | 0.184 | 0.716 | 3.89 |
| | 283.84 | 0.784 | 3.92 | 0.27 | 0.236 | 0.883 | 3.74 |
| | 305.34 | 0.784 | 3.92 | 0.27 | 0.266 | 0.938 | 3.53 |
| | 329.55 | 0.784 | 3.92 | 0.27 | 0.295 | 1.004 | 3.40 |

(continued)

| current, mA | test time, hr | discharge voltage, V | Power output, mW | discharge power density, mW/cm2 anode | charge energy, Wh | discharge energy, Wh | Energy gain |
|---|---|---|---|---|---|---|---|
| | 426.55 | 0.782 | 3.91 | 0.27 | 0.431 | 1.251 | 2.90 |
| | 449.64 | 0.783 | 3.92 | 0.27 | 0.467 | 1.306 | 2.80 |
| | 475.12 | 0.784 | 3.92 | 0.27 | 0.501 | 1.373 | 2.74 |
| | 495.71 | 0.765 | 3.83 | 0.26 | 0.522 | 1.431 | 2.74 |
| | 519.48 | 0.79 | 3.95 | 0.27 | 0.553 | 1.494 | 2.70 |
| | 591.18 | 0.79 | 3.95 | 0.27 | 0.642 | 1.69 | 2.63 |
| | 613.7 | 0.79 | 3.95 | 0.27 | 0.669 | 1.752 | 2.62 |
| | 637.2 | 0.79 | 3.95 | 0.27 | 0.697 | 1.817 | 2.61 |
| | 660.65 | 0.788 | 3.94 | 0.27 | 0.727 | 1.88 | 2.59 |
| | 684.58 | 0.789 | 3.945 | 0.27 | 0.76 | 1.942 | 2.56 |
| | 738.4 | 0.788 | 3.94 | 0.27 | 0.836 | 2.079 | 2.49 |

111711XY3-1225 Flange closed, paste electrolyte Haynes 242 alloy/LiOH-LiBr-MgO/NiO. 20mA-10mA; Anode: Haynes 242 alloy foil (1*1", 6.25cm2, 3.8287g, incl. wire), submersed into electrolyte; Cathode: Pre-oxidized porous Ni C6NC (1.5*1.5"), on top of electrolyte; Electrolyte: 15.0g LiOH + 75.0g LiBr + 35.0g MgO; Temperature 450 °C; Flow through Ar (Pre-humidified, low rate)

| Charge I, T | Discharge I, T | Time | Power density, mW/cm2 | Charge energy, Wh | Discharge energy, Wh | Energy gain, % |
|---|---|---|---|---|---|---|
| 20mA till V=0.8V, then V was held at 0.8V for 1s. | 20mA till V=0.6V, or 4s if V does not reach 0.6V in 4s | 3h | 1.92 | 0.0001983 | 0.0192 | 9682.2 |
| | | 14h | | 0.0014 | 0.0486 | 3471.4 |
| It is found charge/ discharge transition is too fast, so the current: | 10mA till V=0.6V, or 4s if V does not reach 0.6V in 4s | 21h | 0.96 | 0.0024 | 0.1012 | 4216.6 |
| | | 3dl8h | | 0.0057 | 0.5320 | 9333.3 |
| | | 4d9h | | 0.0127 | 0.6228 | 4903.9 |
| | | 5dllh | | 0.0378 | 0.7538 | 1994.1 |
| 10mA till V=0.8V, then V was held at 0.8V for 1s. | | 10dl9h | | 0.1154 | 1.2067 | 1045.6 |
| | | 11d1h | | 0.1289 | 1.2132 | 941.1 |
| | | 12d4h | | 0.1343 | 1.2138 | 903.7 |
| | | 13d2h | | 0.1507 | 1.2154 | 806.5 |
| | | 14dl0h | | 0.1578 | 1.2164 | 770.8 |

110211GC5 (Making matrix with LiOH + LiBr, solid paste) Ni mesh square / LiOH-LiBr-MgO + LiAlO2 / Pre-oxidized Ni mesh square (Ar, larger flow rate) T = 450 °C, Charge 5 mA till V=0.8V, held 1s; discharge 5 mA till V> = 0.6V otherwise discharge 4s; Anode: Ni mesh square (2.94 g, ~ 14 cm^2); cathode: NiO, CN6C, 1.5 × 1.5', 2.71 g; Electrolyte: 8 g LiOH + 40 g LiBr + 11g MgO + 11 g LiAlO2.

| Test time/ current (mA) | Discharge Power Density (mW/cm2) | Charge capacity (Ah) | discharge capacity (Ah) | charge energy (Wh) | discharge energy (Wh) | Ratio (100%) |
|---|---|---|---|---|---|---|
| 2 h / 5 | 0.28 | 0.0029 | 0.0058 | 0.0024 | 0.0046 | 195.5 |
| 23 h / 5 | | 0.0504 | 0.0648 | 0.0399 | 0.0505 | 126.7 |

| | | | | | |
|---|---|---|---|---|---|
| 2d / 5 | 0.0916 | 0.1491 | 0.0724 | 0.1156 | 159.7 |
| 5d + 1h / 5 | 0.1989 | 0.4030 | 0.1575 | 0.3136 | 199.1 |
| 6d / 5 | 0.2396 | 0.4738 | 0.1897 | 0.3694 | 194.7 |
| 7d / 5 | 0.2611 | 0.5705 | 0.2068 | 0.4397 | 212.6 |
| 7d + 20 h / 5 | 0.2844 | 0.6467 | 0.2242 | 0.4887 | 218.0 |
| 8d + 15 h / 5 | 0.3212 | 0.7047 | 0.2517 | 0.5271 | 209.4 |

102611XY5-1127 Paste electrolyte Ni/LiOH-LiBr-TiO2/NiO; Anode: Porous Ni C6NC (OD 1.5", 1 lcm2, 2.6865g), submersed into electrolyte; Cathode: Pre-oxidized porous Ni C6NC (1.5*1.5"), on top of electrolyte; Electrolyte: 6.0g LiOH + 30.0g LiBr + 12.0g TiO2; Temperature 450 °C.

| Charge I, T | Discharge I, T | Time | Power density, mW/cm2 | Charge energy, Wh | Discharge energy, Wh | Energy gain, % |
|---|---|---|---|---|---|---|
| 5mA till V=0.8V, then V was held at 0.8V for 1s. | 5mA till V=0.6V, or 4s if V does not reach 0.6V in 4s | 1h | 0.27 | 0.000724 | 0.0036 | 497.2 |
| | | ldl3h | | 0.0184 | 0.0193 | 104.8 |
| | | 2d4h | | 0.0335 | 0.0648 | 193.4 |
| | | 3d6h | | 0.0541 | 0.1422 | 262.8 |
| | | 4d3h (stopped) | | 0.0729 | 0.2082 | 285.5 |

Anode was essentially absent NiO formation.

110411GC3 (Making matrix with LiOH + LiBr, solid paste) NiO mesh square / LiOH-LiBr-MgO Li2ZrO3 / NiO mesh square (Air) T = 450 °C, Charge 5 mA for 0.5 s; discharge 5 mA for 1.5 s; Anode: NiO mesh square (2.73 g, ~ 14 cm^2); cathode: NiO square, 2.78 g; Electrolyte: 10 g LiOH + 50 g LiBr + 10 g MgO + 50 g Li2ZrO3.

| Test time/ current (mA) | Discharge Power Density (mW/cm2) | Charge capacity (Ah) | discharge capacity (Ah) | charge energy (Wh) | discharge energy (Wh) | Ratio (100%) |
|---|---|---|---|---|---|---|
| 2 h / 5 | 0.26 | 0.0023 | 0.0070 | 0.0015 | 0.0045 | 298.1 |
| 2d + 20 h / 5 | | 0.0828 | 0.2531 | 0.0659 | 0.1996 | 302.9 |
| 3d + 20 h / 5 | | 0.1111 | 0.3387 | 0.0892 | 0.2692 | 301.8 |
| 4d + 18 h / 5 | | 0.1384 | 0.4214 | 0.1117 | 0.3368 | 301.5 |
| 5d + 16 h / 5 | | 0.1660 | 0.5045 | 0.1346 | 0.4050 | 300.9 |

101311XY1-1086 Air cathode Hastelloy C22/LiOH-LiBr/Ni; Anode: Hastelloy C22 foil (1*1", 2.8949g incl. wire), submersed into electrolyte; Cathode: Rolled porous Ni C6NC (OD 1.75, 2" high), out of electrolyte; Electrolyte: 20.0g LiOH + 100.0g LiBr; Temperature 450 °C.

| Charge I, T | Discharge I, T | Time, Discharge voltage, V | Power density, mW/cm2 | Charge energy, Wh | Discharge energy, Wh | Energy gain, % |
|---|---|---|---|---|---|---|
| 1mA, 2s | 1mA, 4s | 1h, 0.67 | 0.10 | 0.0001813 | 0.0003558 | 196.2 |
| 2.5mA, 2s | 2.5mA, 4s | 0.5h, 0.63 | 0.25 | 0.0002690 | 0.0005168 | 192.1 |
| 5mA, 2s | 5mA, 4s | 2h, 0.63 | 0.50 | 0.0024 | 0.0044 | 183.3 |
| | | 15h, 0.65 | | 0.0180 | 0.0335 | 186.1 |
| | | 2d, 0.62 | | 0.0536 | 0.1018 | 189.9 |

101411CG1-280

Air cathode; Anode: Mo 1"X1 " 1.753g;Cathode: NiO roll, 2" height, embedded with MoO2; Electrolyte: LiOH-LiBr; Charge @10mA till V= 1.0V; Discharge @-10mA for 4s or till V=0.6V, whichever comes first.

| Charge Energy(Wh) | Discharge Energy(Wh) |
|---|---|
| 0.4492 | 1.55663 |

102411XY3-1113 Paste electrolyte Ni/LiOH-LiBr-LiAlO2/NiO. Ar blanket; Anode: Porous Ni C6NC (OD 1.5", 11cm2, 2.2244g), submersed into electrolyte; Cathode: Pre-oxidized porous Ni C6NC (1.5*1.5"), on top of electrolyte; Electrolyte: 6.0g LiOH + 30.0g LiBr + 8.0g LiAlO2; Temperature 450 °C with Ar flow.

| Charge I, T | Discharge I, T | Time | Power density, mW/cm2 | Charge energy, Wh | Discharge energy, Wh | Energy gain, % |
|---|---|---|---|---|---|---|
| 20mA till V=0.8V, then V was held at 0.8V for 1s. | 20mA till V=0.6V, or 4s if V does not reach 0.6V in 4s | 13h | 1.1 | 0.0355 | 0.1503 | 423.3 |
| | | 21h | | 0.0408 | 0.1516 | 371.5 |
| | | 1d15h | | 0.0460 | 0.1562 | 339.5 |
| | | 2d4h | | 0.0485 | 0.1600 | 329.8 |
| | | 3d4h | | 0.0527 | 0.1659 | 314.8 |
| | | 5dl7h | | 0.0611 | 0.1787 | 292.4 |

101711CG9-282

Air cathode; Anode: Mo 1"X1 " 1.658g; Cathode: NiO roll, 2" height, embedded with Li2ZrO3; Electrolyte: LiOH-LiBr; Charge @10mA till V= 1.0V; Discharge @-10mA for 2s or till V=0.6V, whichever comes first; Gain is 9 to 11 times over 7 days.

101711XY1-1096 Paste electrolyte Ni/LiOH-LiBr-Li2TiO3/NiO; Anode: Porous Ni C6NC (1.5*1.5", 14cm2, 3.4618g), submersed into electrolyte; Cathode: Pre-oxidized porous Ni C6NC (1.5*1.5"), on top of electrolyte; Electrolyte: 6.0g LiOH + 30.0g LiBr + 20.0g Li2TiO3; Temperature 450 °C

| Charge I, T | Discharge I, T | Time | Power density, mW/cm2 | Charge energy, Wh | Discharge energy, Wh | Energy gain, % |
|---|---|---|---|---|---|---|
| 5mA till V=0.8V, then V was held at 0.8V for 1s. | 5mA till V=0.6V, or 4s if V does not reach 0.6V in 4s | 3h | 0.21 | 0.0023 | 0.0082 | 356.5 |
| | | 1d | | 0.0054 | 0.0576 | 1066.6 |
| | | 5d22h | | 0.0495 | 0.3058 | 617.7 |

101111XY1-1074 Submerged Mo9Sl/LiOH-LiBr/NiO; Anode: Mo9Sl pellet (14mm OD. 1.5cm2, 3.4921g including wire), submersed into electrolyte; Cathode: Pre-oxidized porous Ni C6NC (1.5*1.5"), Submerged into electrolyte; Electrolyte: 20.0g LiOH + 100.0g LiBr; Temperature 450 °C

| Charge I, T | Discharge I, T | Time | Power density, mW/cm2 | Charge energy, Wh | Discharge energy, Wh | Energy gain, % |
|---|---|---|---|---|---|---|
| 10mA till V=0.7V, then V was held at 0.7V for 1s. | 10mA till V=0.6V, or 4s if V does not reach 0.6V in 4s | 2dlh | 4.0 | 0.1274 | 0.1682 | 132.0 |
| | | 2d23h | | 0.1852 | 0.2435 | 131.4 |

083011XY2-959 Intermittent discharge of MHFC. (MoNi/LiOH-LiBr/Ni, high current, high temperature); Anode: MoNi alloy plate (OD 14mm, about 2.5mm thick, 5.424g including the Ni wire welded). Immersed into electrolyte; Cathode: Rolled porous Ni C6NC (OD 1.0", 2" high), stick out of the electrolyte; Electrolyte: 20.0 g LiOH + 100.0 g LiBr; Temperature 450 °C.

| Charge 1, T | Discharge I, T | Time, discharge voltage, V | Power density, mW/cm2 | Charge energy, Wh | Discharge energy, Wh | Energy gain, % |
|---|---|---|---|---|---|---|
| 1mA, 2s | 1mA, 4s | 45min, 1.08 | 0.72 | 0.0002518 | 0.0004879 | 193.7 |
| 2.5mA, 2s | 2.5mA, 4s | 40min, 1.06 | 1.76 | 0.0005843 | 0.0011 | 188.2 |
| 5mA, 2s | 5mA, 4s | 35min, 1.05 | 3.50 | 0.0010 | 0.0020 | 200.0 |
| 10mA, 2s | 10mA, 4s | 45min, 1.04 | 6.93 | 0.0026 | 0.0050 | 192.3 |
| 20mA, 2s | 20mA, 4s | 30min, 1.03 | 13.73 | 0.0036 | 0.0068 | 188.8 |
| 40mA, 2s | 40mA, 2s | 40min, 1.00 | 26.66 | 0.0097 | 0.0178 | 183.5 |
| 80mA, 2s | 80mA, 4s | 30min, 0.91 | 48.5 | 0.0125 | 0.0217 | 173.6 |

Long-term performance test at 80mA.

| Charge I, T | Discharge I, T | Time, discharge voltage, V | Power density, mW/cm2 | Charge energy, Wh | Discharge energy, Wh | Energy gain, % |
|---|---|---|---|---|---|---|
| 80mA, 2s | 80mA, 4s | 30min, 0.91 | 48.5 | 0.0125 | 0.0217 | 173.6 |
| | | 1d, 0.88 | | 0.4737 | 0.8430 | 177.9 |
| | | 2d, 0.86 | | 1.1983 | 2.1435 | 178.8 |
| | | 3d, 0.81 (stopped) | | 1.5598 | 2.7870 | 178.6 |

080211GZC4-564: Ni diaphragm/20gLiOH + 100gLiBr/CNi4(air); 2.75" Alumina Crucible; Electrode: 0.010" thick, 1.875" diameter, 17.8cm2 Ni diaphragm (anode), 2.5" high, 17" long rolled CNi4 celmet, cross section area: 21.9cm2(cathode); Tset=340 °C, Real T in the melt: 300 °C; PH2 = 910torr, measured H2 permeation rate=2.02e-2 umol/s, calculated maximal H2 permeation rate: 1.60e-2 umol/s; Measured voltage=0.802V, measured power: 6.44mW, power output based on measured H2 flowrate:4.53mW; Energy efficiency: 142%

072111GZC1-531: Ni membrane/20gLiOH + 100gLiBr/CNi4(air); 2.75" Alumina Crucible; Electrode: 0.010" thick, 1.875" diameter, 17.8cm2 Ni diaphragm (anode), 2.5" high, 17" long rolled CNi4 celmet, cross section area: 21.9cm2(cathode); Tset=380 °C, Real T in the melt: 342 °C; 51.1ohm load; PH2 = 978torr, measured H2 permeation rate=4.06e-2 umol/s, calculated maximal H2 permeation rate: 3.63e-2 umol/s; Measured voltage=0.821V, measured power: 13.2mW, power output based on measured H2 flowrate: 9.1mW; Energy efficiency: 145%

062211XY1-776 Intermittent charge/discharge of MHFC. (Ni disk anode, Celmet roll cathode, high current) with hydrogen flow; Anode: Ni disk (OD 1.875", thickness 0.010"), immersed into electrolyte; Cathode: Porous Ni C6N was rolled firmly around a alumina tube, OD of the roll was 1.875", high 4", stick out of the electrolyte. Submerged area of anode and cathode are the same; Electrolyte: 20.0 g LiOH + 100.0 g LiBr; Temperature 450 °C

| Charge I, T | Discharge I, T | Time,Discharge voltage, V | Charge capacity, Ah | Discharge capacity, Ah | Charge energy, Wh | Discharge energy, Wh |
|---|---|---|---|---|---|---|
| SOmA, 2s | 50mA, 4s | 2.5h, 1.0V | 0.0402 | 0.0796 | 0.0397 | 0.0734 |
| 100mA, 2s | 100mA, 4s | 2h, 0.88V | 0.0634 | 0.1269 | 0.0667 | 0.1161 |
| 150mA, 2s | 150mA, 4s | 0.5h, 0.73V | 0.0231 | 0.0459 | 0.0235 | 0.0366 |
| 200mA, 2s | 200mA, 4s | 2h, 0.67V | 0.1235 | 0.2456 | 0.1189 | 0.1740 |
| 250mA, 2s | 250mA, 4s | 2.5h, 0.62V | 0.1966 | 0.3914 | 0.1868 | 0.2545 |

(continued)

| Charge I, T | Discharge I, T | Time, Discharge voltage, V | Charge capacity, Ah | Discharge capacity, Ah | Charge energy, Wh | Discharge energy, Wh |
|---|---|---|---|---|---|---|
| 300mA, 2s | 300mA, 4s | 1.5h, 0.59V | 0.1498 | 0.2982 | 0.1452 | 0.1826 |

Long term performance test at 100 mA

| Charge I, T | Discharge I, T | Time, Discharge voltage | Charge capacity, Ah | Discharge capacity, Ah | Charge energy, Wh | Discharge energy, Wh |
|---|---|---|---|---|---|---|
| 100mA, 2s | 100mA, 4s | 18h, 0.94V | 0.5930 | 1.1848 | 0.6400 | 1.1298 |
| | | 4d, 0.94V | 2.6345 | 5.2643 | 2.8454 | 5.0092 |
| | | 5d, 0.94 | 3.4001 | 6.7941 | 3.6730 | 6.4608 |
| | | 6d, 0.93 | 4.1415 | 8.2761 | 4.4788 | 7.8723 |
| | | 7d, 0.93V | 4.8507 | 9.6936 | 5.2480 | 9.2152 |
| | | 8d, 0.92 | 5.1927 | 11.3768 | 6.1613 | 10.8062 |
| | | 11d, 0.91 | 8.1648 | 16.3226 | 8.8500 | 15.4685 |
| | | 13d | 9.722 | 19.435 | 10.539 | 18.352 |

062811GC1 SS tube (1/4')-Ni disk (f 1.75') H2 permeation / LiOH (41 g) + LiCl (39 g) / Ni mesh cylinder (air) T = 470 °C (420 °C, MP 277 °C), 100 ohm, 30 ohm, 15 ohm; Anode: SS tube (1/4')-Ni disk (f 1.75'); Cathode: Ni mesh wrapped cylinder (CNi8: 4.5'x 2', 2.81 g ) and (CNi6: 4.5'x 1.9', 17.70 g); Temperature: 470 °C, set point; 420 °C ); OCV: Vmax = 1.14 V, going up slowly; Load 100 ohm: V = 1.07 V; going up; Load 30 ohm: V = 0.92 V (stable); Load 15 ohm: V = 0.73 V; (very stable); Eout = 36790.0 J (to date)

062811GC2 SS tube (1/4')-Ni disk (f 1.75') H2 permeation / LiOH (51.2 g) + Li2CO3 (29.8 g) / Ni mesh cylinder (air) T = 530 °C (488 °C, MP 434 °C), 100 ohm, 30 ohm, 15 ohm; Anode: SS tube (1/4')-Ni disk (f 1.75'); Cathode: Ni mesh wrapped cylinder (CNi8: 4.5'x 1.9', 2.35 g ) and (CNi6: 4.5'x 2', 19.50 g); Temperature: 530 °C, set point; 488 °C ); OCV: Vmax = 1.05 V, going up slowly; Load 100 ohm: V = 0.96 V; going up; Load 30 ohm: V = 0.84 V (stable); Load 15 ohm: V = 0.81 V; (maximum); Eout = 35614.4 J (to date)

063011GC1 (repeat 062711GC2) SS tube (1/4')-Ni disk (f 1.75') H2 permeation / LiOH (34.1 g) + Li2SO4 (45.9 g) / Ni mesh cylinder (air) T = (444 °C ) 520 °C, setpoint; 30 ohm, 15 ohm; Anode: SS tube (1/4')-Ni disk (f 1.75'); Cathode: Ni mesh wrapped cylinder (CNi8: 5'x 1.8', 2.63 g ) and (CNi6: 4.5'x 1.8', 18.80 g); Temperature: 444 °C, 520 °C, set point (mp: 407 °C); OCV: Vmax = 0.91 V (spent 2 h), going up slowly; Load 30 ohm: V = 0.80 V, going up; Load 15 ohm: Vmax = 0.74V, now V = 0.70 V, stable; Eout = 30971.8 J (to date)

62811XY1-790 Intermittent charge/discharge of MHFC. (Ni disk anode, Celmet roll cathode, high current) with hydrogen flow; Anode: Ni disk (OD 1.875", thickness 0.010"), immersed into electrolyte; Cathode: Porous Ni C6N was rolled firmly around a alumina tube, OD of the roll was 1.875", high 4", stick out of the electrolyte; Electrolyte: 30.0 g LiOH + 150.0 g LiBr

Temperature 450 °C.

Long term performance test of such configuration cell at 200mA

| Charge I, T | Discharge I, T | Time, Discharge voltage | Charge capacity, Ah | Discharge capacity, Ah | Charge energy, Wh | Discharge energy, Wh |
|---|---|---|---|---|---|---|
| 200mA, 2s | 200mA, 4s | 11h, 0.55V | 0.7862 | 1.5597 | 0.6660 | 0.9309 |

Target energy gain: 2 times.

062011XY1-769 Intermittent charge/discharge of MHFC. (Celmet anode, Celmet roll cathode, high current), continuation of cell 767, started from 200mA; Anode: Porous Ni C6N, (OD 1.5", 2.6g), immersed into electrolyte; Cathode: Porous Ni C8N and C6N was rolled firmly around a alumina tube (inner layer C8N, out layer c6N), OD of the roll was

1.5", high 4", stick out of the electrolyte. Submerged area of anode and cathode are the same; Electrolyte: 15.0 g LiOH + 75.0 g LiBr; Temperature 450 °C.

| Charge 1, T | Discharge 1, T | Time, Discharge voltage, V | Charge capacity, Ah | Discharge capacity, Ah | Charge energy, Wh | Discharge energy, Wh |
|---|---|---|---|---|---|---|
| 200mA, 2s | 200mA, 4s | 1.5h, 0.53V | 0.0973 | 0.1936 | 0.0881 | 0.1079 |
| 250mA, 2s | 250mA, 4s | 2h, 0.50V | 0.1916 | 0.3816 | 0.1774 | 0.1882 |
| 275mA, 2s | 275mA, 4s | 1.5h, 0.43 | 0.1435 | 0.2861 | 0.1342 | 0.1311 |
| 300mA, 2s | 300mA, 4s | 2.5h, 0.39 | 0.2293 | 0.4567 | 0.2186 | 0.1949 |
| 200mA, 2s | 300mA, 4s | 0.5h | 0.02529 | 0.07728 | 0.02261 | 0.03157 |

Target energy gain: 2 times.

061011XY1-737 Intermittent charge/discharge of MHFC. (Disk anode, Celmet cathode, high current); Anode: Ni disc (OD 2.0", 0.010" thick), immersed into electrolyte; Cathode: Porous Ni C6N, stick out of the electrolyte; Electrolyte: 10.3 g LiOH + 49.7 g LiBr; Temperature 450 °C.

| Charge I, T | Discharge I, T | Time, Discharge voltage, V | Charge capacity, Ah | Discharge capacity, Ah | Charge energy, Wh | Discharge energy, Wh |
|---|---|---|---|---|---|---|
| 10mA, 2s | 10mA, 10s | 4h: 0.75 | 0.0060 | 0.0272 | 0.0051 | 0.0217 |
| | | 28h: 0.70 | 0.0471 | 0.2142 | 0.0368 | 0.1579 |
| | | 2d: 0.66 | 0.0852 | 0.3868 | 0.0646 | 0.2759 |
| | | 3d: 0.62 | 0.1268 | 0.5719 | 0.0936 | 0.3988 |
| | | 4d: 0.66 | 0.1650 | 0.7415 | 0.1206 | 0.5122 |
| | | 7d | 0.2543 | 1.1376 | 0.1719 | 0.7234 |

Target energy gain: 5 times.

061011XY2-738 Intermittent charge/discharge of MHFC. (Disk anode, Celmet cathode, high current); Anode: Ni disc (OD 2.0", 0.010" thick), immersed into electrolyte; Cathode: Porous Ni C6N, stick out of the electrolyte; Electrolyte: 10.3 g LiOH + 49.7 g LiBr. Temperature 450 °C.

| Charge I, T | Discharge I, T | Time, Discharge voltage, V | Charge capacity, Ah | Discharge capacity, Ah | Charge energy, Wh | Discharge energy, Wh |
|---|---|---|---|---|---|---|
| 20mA, 2s | 20mA, 10s | 4h: 0.70 | 0.0117 | 0.0570 | 0.0096 | 0.0445 |
| | | 28h: 0.68 | 0.0935 | 0.4554 | 0.0727 | 0.3305 |
| | | 2d: 0.67 | 0.1676 | 0.8153 | 0.1178 | 0.5801 |
| | | 3d: 0.66 | 0.2484 | 1.2034 | 0.1874 | 0.8472 |
| | | 4d: 0.66 | 0.3225 | 1.5587 | 0.2414 | 1.0881 |
| | | 6d: 0.65 | 0.4905 | 2.3640 | 0.3645 | 1.6322 |
| | | 7d: 0.65 | 0.5754 | 0.7775 | 0.4266 | 1.9075 |
| | | 8d: 0.66 | 0.6588 | 3.1887 | 0.4889 | 2.1824 |
| | | 9d | 0.7076 | 3.4299 | 0.5251 | 2.3399 |

Target energy gain: 5 times. Run for 9 days.

061011GC1 Ni tube (1/4')-Ni mesh (Ni pow.) H2 sparging / LiOH (10 g) + LiBr (50 g) / Ni mesh square T = 360

°C, 100 ohm; Main purpose: test H2 flow rate in Ni powder-H2 sparging system; Anode: Ni tube (1/4')-Ni mesh (CNi8, 1.5'x1.8', 0.7 g) pouch with 2 g Ni powder (-400 mesh, 99.8%); Cathode: Ni mesh square (2.5'x0.9'); Temperature: 360 °C; OCV: Vmax = 1.01 V ; load 100 ohm, H2 flow rate controlled by both mass flow controller and metering valve. Vmax = 0.78 V, dropped and stabilized at 0.64 V; H2 flow rate test four days; Eout = 2.34 kJ (stop for another test). Comment: (1) Discharge voltage was constant; flow rate constant as controlled by metering valve; (2)Average values show the efficiency was very closed to ~ 150%.

053111XY1-696 Intermittent charge/discharge of MHFC. (flow through pre-humidified CO2-free air, 85% N2, 15% 02); Anode: Porous Ni C6N, disk totally immersed into the electrolyte; Cathode: Porous Ni C6N, stick out of the electrolyte; Electrolyte: 10.3 g LiOH + 49.7 g LiBr; Pre-humidified CO2-free air (85% N2, 15% 02) was continuously flowing through the cell.

| Charge I, T | Discharge I, T | Time, Discharge voltage, V | Charge capacity, Ah | Discharge capacity, Ah | Charge energy, Wh | Discharge energy, Wh |
|---|---|---|---|---|---|---|
| 1mA, 2s | 1.0mA, 16s | 7h: 0.81 | 0.00078 | 0.0062 | 0.00062 | 0.0050 |
| | | 1d: 0.85 | 0.0025 | 0.0201 | 0.0022 | 0.0171 |
| | | 2d: 0.85 | 0.0050 | 0.0399 | 0.0043 | 0.0338 |
| | | 3d: 0.85 | 0.0076 | 0.0604 | 0.0064 | 0.0511 |
| | | 6d: 0.84 | 0.0156 | 0.1245 | 0.0133 | 0.1051 |
| | | 7d: 0.84 | 0.0180 | 0.1430 | 0.0152 | 0.1206 |
| | | 8d: 0.84 | 0.0207 | 0.1646 | 0.0175 | 0.1387 |

Target energy gain: 8 times.

052711XY4-694 Intermittent charge/discharge of MHFC. Both anode and cathode are prepared with porous Ni C6N; Anode: Porous Ni C6N, disk totally immersed into the electrolyte.; Cathode: Porous Ni C6N, stick out of the electrolyte; Electrolyte: 10.3 g LiOH + 49.7 g LiBr; The cell was open.

| Charge I, T | Discharge I, T | Time, Discharge voltage, V | Charge capacity, Ah | Discharge capacity, Ah | Charge energy, Wh | Discharge energy, Wh |
|---|---|---|---|---|---|---|
| 1mA, 2s | 1.0mA, 64s | lh: 0.89 | 0.000041 | 0.0013 | 0.000036 | 0.0011 |
| | | 4d: 0.85 | 0.0030 | 0.0954 | 0.0027 | 0.0818 |
| | | 5d: 0.85 | 0.0036 | 0.1159 | 0.0033 | 0.0991 |

Target energy gain: 32 times.

051311XY1-621(Ni(H2)/LiOH-LiBr-Li2TiO3/NiC6N-NiC4N): Prototype configuration (anode and cathode are in parallel. A thin layer of electrolyte paste was in between). This cell was prepared to use Ni foam with small porous to hold electrolyte, and prevent the Ni foam with big porous on top from getting wet, by capillary effect. This cell is prepared as the same as cell 602, which lasted for 8 days before the Ni wire broke. For this cell the power density was measured at different discharging load. Anode: H2 flowing through Ni chamber (surface area: 25 cm2, 0.01 Inch thick); Cathode: air, double layer porous Ni. C6N with small porous in contact with electrolyte, C4N with bigger porous on top. (surface area: 20 cm2); Electrolyte: 4.0 g LiOH + 20.0 g LiBr + 10.0 g Li2TiO3; Temperature: Real T of the molten salts is 450 °C; Discharge load: 50 ohm; tested the long-term performance at 50 ohm discharge.

| Time | 1d | 2d | 3d | 4d | 5d | 6d | 7d | 10d | lid | 12d | 13d | 14d | 17d | 18d |
|---|---|---|---|---|---|---|---|---|---|---|---|---|---|---|
| Voltage, V | 0.92 | 0.90 | 0.89 | 0.89 | 0.89 | 0.89 | 0.89 | 0.89 | 0.88 | 0.88 | 0.88 | 0.88 | 0.88 | 0.41 |

stopped at 18d

052411GC1 (closed cell) (NaOH, H2) Ni tube (1/8') / BASE/ NaCl + MgCl2 Ni tube (1/4')-mesh (CNi8) wrapped attached T = 500 °C (setpoint), 100 ohm; Main purpose: [Ni($H_2$) NaOH/BASE/NaCl-$MgCl_2$ in closed cell with evacuation to eliminate H2O and H2, to get black sample from anode for XRD. Anode: (NaOH 4.0 g, H2, -840 Torr) Ni tube (1/8',new);

Cathode: NaCl 49.9 g + 61.4 g MgCl2 (both dried), current collector: Ni tube (1/4') with attached mesh wrapped (3' × 2.5'); T: 500°C; OCV: Vmax = 1.47 V; Load 100 ohm: Vmax = -0.97 V; Eout = 260.8 J; Comment: higher energy was obtained at higher temperature.

HT cell: Prototype #25 test

**[0484]** - 051611GZC1-497: Ni(H2)/0.5gLiOH + 2.5g LiBr + 1.5g MgO/Ni(Air) (MP. 264C); 2.75" Alumina Crucible; Electrode: 6.4cm2 Ni 0.005in thick (anode), 6.4cm2 cross-section double layer CNi8+CNi4 mat(cathode, preprocessed by molten electrolyte), cathode with ceramic protection, cathode Nickel wire without ceramic tube cover; T=460 °C (real T in the melt: 420 °C), PH2 - 800torr; Results: (1) OCV=0.94V; (2) 50ohm load, T=479C, PH2=798torr, CCV=0.812V, power=13.2mW

B. Water-Flow, Batch Calorimetry

The energy and power balance of the catalyst reaction mixtures listed on the righthand side of each entry in TABLE 9 was obtained using cylindrical stainless steel reactors of approximately 43 $cm^3$ volume (1" inside diameter (ID), 5" length, and 0.060" wall thickness having an internal thermocouple well) and a water flow calorimeter comprising a vacuum chamber containing each cell and an external water coolant coil that collected 99+% of the energy released in the cell to achieved an error < ±1%. The energy recovery was determined by integrating the total output power $P_T$ over time. The power was given by

$$P_T = \dot{m} C_p \Delta T \tag{344}$$

where $\dot{m}$ was the mass flow rate, $C_p$ was the specific heat of water, and $\Delta T$ was the absolute change in temperature between the inlet and outlet. The reaction was initiated by applying precision power to external heaters. Specially, 200 W of power was supplied to the heater. During this heating period, the reagents reached a hydrino reaction threshold temperature wherein the onset of reaction was typically confirmed by a rapid rise in cell temperature. Once the cell temperature reached about 400-500 °C the input power was set to zero. After 18 minutes, the program directed the power to zero. To increase the rate of heat transfer to the coolant, the chamber was re-pressurized with 1000 Torr of helium, and the maximum change in water temperature (outlet minus inlet) was approximately 1.2 °C. The assembly was allowed to fully reach equilibrium over a 24-hour period as confirmed by the observation of full equilibrium in the flow thermistors.

In each test, the energy input and energy output were calculated by integration of the corresponding power. The thermal energy in the coolant flow in each time increment was calculated using Eq. (344) by multiplying volume flow rate of water by the water density at 19 °C (0.998 kg/liter), the specific heat of water (4.181 kJ/kg °C), the corrected temperature difference, and the time interval. Values were summed over the entire experiment to obtain the total energy output. The total energy from the cell $E_T$ must equal the energy input $E_{in}$ and any net energy $E_{net}$. Thus, the net energy was given by

$$E_{net} = E_T - E_{in}. \tag{345}$$

From the energy balance, any excess heat $E_{ex}$ was determined relative to the maximum theoretical $E_{mt}$ by

$$E_{ex} = E_{net} - E_{mt}. \tag{346}$$

The calibration test results demonstrated a heat coupling of better than 98% of the resistive input to the output coolant, and zero excess heat controls demonstrated that the with calibration correction applied, the calorimeter was accurate to within less than 1% error. The results are given as follows where Tmax is the maximum cell temperature, Ein is the input energy, and dE is the measured output energy in excess of the input energy. All theoretical energies are negative when exothermic. Positive output values represent more output than input energy.

TABLE 9. Exemplary Calorimetry Test Results.

| Sample ID | Cell No. | Chemicals | Tmax, C | $E_{in}$, kJ | DE, kJ | $E_{Theoretical}$, kJ | Energy Gain, DE/(- $E_{theoretical}$) |
|---|---|---|---|---|---|---|---|
| 111711JHWFC2 | 34 | 10g Pd/Al2O3 + 5.9g LiOH + 36.0g MoO3 + 109 PSI H2 (-0.097 L) | 573 | 363.2 | 13.4 | -4.1 | 3.3 |
| 111811JHWF3 | 43 | 2.5g Pt/Al2O3 + 25.8g CrO3 + 114.7 PSI H2 (-0.148 L) | 510.7 | 181.1 | 7.1 | -3.8 | 1.9 |
| 111811JHWF4 | 44 | 2.5g Pd/Al2O3 + 4.8g LiOH + 25.6g MnO2 + 114.7 PSI H2 (-0.043L) | 458.7 | 181.0 | 7.4 | -0.37 | 20 |
| 111811JHWF5 | 45 | 2.5g Pd/Al2O3 + 4.8g LiOH + 28.0g TeO2 + 114.7 PSI H2 (-0.043L) | 473 | 181.0 | 6.9 | 1.85 | 3.7 |
| 112111JIIWFC1 | 46 | 8.3g KH-32+5.0g Mg-15+7.2g AgCl-AD-6+20.0g TiC-132 + 122.7 PSI D2 | 616.6 | 363.5 | 18.9 | -15.3 | 1.2 |
| 112111JHFC2 | 47 | 2.5g Pd/Al2O3 +6.0g LiOH + 25.0g Fe2O3 + 122.7 PSI D2 (-0.097L) | 570.5 | 363.5 | 8.0 | -0.37 | 21.6 |
| 112111JHWFC3 | 48 | 2.5g Pd/Al2O3 +4.8g LiOH + 16.5g NiO/Ni2O3 + 115.7 PSI D2 (-0.043L) | 445 | 181.0 | 43.0 | -1.8 | 23.9 |
| 120511JHWF2 | 87 | 5g Pd/Al2O3 +11.2g LiOH + 50.0g Fe2O3 + 122.7 psi D2 (-0.097L) (2x) | 523 | 362.5 | 20.5 | -0.4 | 51 |
| 120511JHWF3 | 88 | 11.2g KOH + 25.0g Fe2O3 + 118.7 psi D2 (-0.043L) | 443.5 | 181.0 | 7.0 | -0.17 | 41 |
| 120611JHWF2 | 92 | 40.0g Co(OH)2 + 122.7 psi D2 (0.097mL) | 493 | 362.4 | 5.6 | -1.18 | 4.7 |
| 120611HWF3 | 93 | 4.8g LiOH + 33.0g FeOOH + 118.7 psi D2 (-0.043L) | 428.6 | 181.1 | 6.9 | -3.21 | 2.15 |
| 120611JHWF4 | 94 | 8.0g NaOH - 33.0g FeOOH + 118.7 psi D2 (-0.043L) | 450.7 | 182.0 | 13.1 | -3.21 | 4.1 |
| 120711JHWF1 | 96 | 11.2g LiOH + 50.0g Fe2O3 + 123.7 psi D2 (~0.097L) (2x) | 477 | 364.4 | 7.5 | -0.4 | 18.8 |
| 120711JHWF2 | 97 | 5.0g TiC + 11.2g LiOH + 50.0g Fe2O3 + 123.7 psi D2 (~0.097L) (2x) | 551 | 362.4 | 27.5 | -0.4 | 69 |
| 120911JHWF3 | 108 | 33.0g Fe2O3 + 118.7 psi H2 (~0.043L) | 460 | 181.1 | 3.4 | 0.17 | 20 |
| 120911JHWF4 | 109 | 4.0g NaOH + 16.5g Fe2O3 | 553 | 218.0 | 5.2 | -0.43 | 12.1 |
| 121311JHWF4 | 115 | 6.0g NaOH + 25.0g Fe2O3 | 565 | 217.0 | 8.7 | -0.6 | 13.6 |
| 011612JHWF4 | 211 | 11.7g Mg(OH)2 + 32.3g H2MoO4 | 507.5 | 217.0 | 6.1 | -0.3 | 20.3 |

(continued)

| Sample ID | Cell No. | Chemicals | Tmax, C | $E_{in}$, kJ | DE, kJ | $E_{Theoretical}$, kJ | Energy Gain, DE/(-$E_{theoretical}$) |
|---|---|---|---|---|---|---|---|
| 011912JHWF3 | 224 | 11.6g Mg(OH)2 + 28.4g P2O5 | 681 | 217.1 | 54.0 | -28.4 | 1.9 |
| () 120 12JHWF4 | 229 | 11.6g Mg(OH)2+ 36.4g V2O5 | 516 | 218.0 | 4.9 | -2.3 | 2.1 |
| 013012JHWF4 | 254 | 11.6g Mg(OH)2 + 12.8g NiC12 +100 psi H2 (net 6 psi) | 577.7 | 218.0 | 6.3 | 5.0 | inf |
| 013112JHWF4 | 259 | 11.6g Mg(OH)2 + 21.6g FeCl3 +100 psi H2 (net 6 psi) | 563 | 217.0 | 17.5 | -3.8 | 4.6 |
| 020712JHWF3 | 283 | 11.6g Mg(OH)2 + 12.8g CoC12 +100 psi H2 (net 6 psi) | 558.9 | 217.1 | 3.8 | 4.7 | inf |
| 020712JHWF4 | 284 | 11.6g Mg(OH)2 + 21.8g NiBr2 +100 psi H2 (net 6 psi) | 548 | 217.0 | 4.9 | 7.5 | inf |
| 020712JHWF5 | 285 | 14.8g Ca(OH)2 + 21.8g NiBr2 +100 psi H2 (net 6 psi) | 557 | 218.1 | 6.3 | -2.3 | 2.7 |
| 020812JHWF4 | 289 | 11.6g Mg(OH)2 + 12.6g MnC12 +100 psi H2 (net 6 psi) | 565 | 218.0 | 3.6 | 9.8 | inf |
| 020812JHWF5 | 290 | 14.8g Ca(OH)2 + 12.6g MnCl2 +100 psi H2 (net 6 psi) | 565 | 218.1 | 5.9 | 0.0 | inf. |
| 020912JHWF4 | 294 | 14.8g Ca(OH)2 + 19.8g CuCl +100 psi H2 (net 6 psi) | 537 | 218.0 | 6.3 | -1.2 | 5.3 |
| 021012JHWF5 | 300 | 11.6g Mg(OH)2 + 25.4g FeC12 +100 psi H2 (net 6 psi) | 547.3 | 217.1 | 4.0 | 9.6 | inf |
| 021412JHWF2 | 307 | 14.8g Ca(OH)2 + 21.6g FeBr2 +100 psi H2 (net 6 psi) | 605 | 217.0 | 5.7 | -2.1 | 2.7 |
| 021512JHWF2 | 312 | 14.8g Ca(OH)2 + 32.3g CoI2 +100 psi H2 (net 6 psi) | 572 | 216.9 | 6.7 | -0.5 | 13.4 |
| 021512JHWF4 | 314 | 4.8g LiOH + 32.3g CoI2 +100 psi H2 (net 6 psi) | 603.4 | 218.0 | 9.9 | -2.8 | 3.5 |
| 021712JHWF4 | 324 | 5.8g Mg(OH)2 + 22.3g CuBr2 +100 psi H2 (net 6 psi) | 564.5 | 218.0 | 11.9 | -0.3 | 39.7 |
| 120611JHWF4 | 94 | 8.0g NaOH + 33.0g FeOOH + 118.7 psi D2 (~0.043L) | 450.7 | 182.0 | 13.1 | -2.1 | 6.1 |
| 120611JHWF5 | 95 | 30.0g Cu(OH)2 + 118.7 psi D2 (0.097mL) | 362.4 | 182.0 | 3.6 | -0.3 | 14.4 |
| 121611JHWF1 | 123 | 6.0g NaOH (new batch) + 25.0g FeOOH | 484.5 | 302.3 | 8.5 | -2.0 | 4.2 |

(continued)

| Sample ID | Cell No. | Chemicals | Tmax, C | $E_{in}$, kJ | DE, kJ | $E_{Theoretical}$, kJ | Energy Gain, DE/(-$E_{theoretical}$) |
|---|---|---|---|---|---|---|---|
| 122011JHWF1 | 129 | 12.0g NaOH (new batch) + 27.0g FeOOH + 118.7 psi H2 (~0.097L) | 449 | 301.6 | 12.3 | -4.0 | 3.1 |
| 122011JHWF2 | 130 | 12.0g NaOH (new batch) + 27.0g FeOOH | 447 | 303.5 | 8.6 | -2.8 | 3.1 |
| 122211JHWF5 | 140 | 8.7 g Mg(OH)2 + 25.0g FeOOH | 531 | 217.1 | 4.8 | -1.4 | 3.5 |
| 122311JHWF1 | 141 | 25.0g FeOOH | 500.5 | 303.7 | 6.0 | -1.4 | 4.3 |
| 122711 JH WF4 | 147 | 6.0g NaOH (semicon grade) + 13.0g FeOOH | 540 | 218.0 | 7.9 | -1.4 | 5.6 |
| 123011JHWF2 | 159 | 15.0g Cu(OH)2 + 25.0g FeOOH (AD-1) | 420 | 304.1 | 3.3 | -1.3 | 2.5 |
| 123011JHWF3 | 160 | 8.7 g Mg(OH)2 + 25.0g FeOOH (AD-1) | 525 | 217.1 | 5.9 | -1.3 | 4.5 |
| 010312JHWF4 | 166 | 6.0g NaOH (AD-1) + 25.0g FeOOH | 530 | 217.0 | 10.8 | -2.0 | 5.3 |
| 010312JHWF5 | 167 | 6.0g NaOH (semicon grade) + 25.0g FeOOH | 571 | 217.1 | 10.7 | -2.0 | 5.2 |
| 010412JHWF4 | 171 | 6.0g NaOH(AD-I) + 25.0g FeOOH (grinder mix) | 617 | 217.0 | 9.3 | -2.0 | 4.7 |
| 010412JHWF5 | 172 | 25.0g FeOOH (AD-1) | 577 | 217.0 | 8.8 | -1.4 | 6.3 |
| 010512JHWF5 | 177 | 25.0g FeOOH (AD-1) + 114 psi H2 | 510 | 218.0 | 7.7 | -2.7 | 2.8 |
| 010612JHWF4 | 181 | 25.0g FeOOH (AD-1) | 563 | 218.0 | 7.4 | -1.4 | 5.3 |
| 022212JHWF5 | 344 | 5.8g Mg(OH)2 + 30.8g MnI2 (Alfa, pink) +100 psi H2 (net 6 psi) | 614.2 | 218.1 | 11.4 | 13.2 | inf |
| 022412JHWF4 | 353 | 8.0g Mg(OH)2 + 37.3g SnI2 +100 psi H2 (net 6 psi) | 546 | 218.0 | 6.9 | 13.6 | inf |
| 022812JHWF2 | 361 | 8.0g Mg(OH)2 + 21.9g CoBr2 +100 psi H2 (net 6 psi) | 594 | 217.0 | 10.5 | 0.9 | inf |
| 030112JHWF2 | 371 | 12.2g Sr(OH)2 + 28.7g CuBr + 100 psi H2 (net 6 psi) | 617.6 | 217.0 | 14.5 | -2.5 | 5.8 |
| 030212JHWF2 | 376 | 12.2g Sr(OH)2 + 13.0g CoCl2 + 100 psi H2 (net 6 psi) | 662 | 216.9 | 42.6 | -10.3 | 4.1 |
| 030412JHWF3 | 382 | 9.0g Mg(OH)2 + 19.5g YC13 +100 psi H2 (net 6 psi)psi) | 577 | 218.0 | 8.8 | -1.5 | 5.9 |
| 030712JHWF7 | 386 | 5.8g Mg(OH)2 + 22.3g CuBr2 + 1 atm Ar | 571 | 218.8 | 6.6 | 9.2 | inf |
| 031512JHWF3 | 424 | 9.8g Cu(OH)2 + 15.6g KHF2 +latm Ar | 469 | 218.1 | 6.4 | 5.6 | inf |

(continued)

| Sample ID | Cell No. | Chemicals | Tmax, C | $E_{in}$, kJ | DE, kJ | $E_{Theoretical}$, kJ | Energy Gain, DE/(-$E_{theoretical}$) |
|---|---|---|---|---|---|---|---|
| J31612JHWF3 | 431 | 9.8g Cu(OH)2 + 15.9g SrC12 +latm Ar | 524 | 218.1 | 5.4 | 10.3 | inf |
| 032012JHWF3 | 446 | 9.8g Cu(OH)2 + 15.6g KHF2 + 104 psi H2 (net 6 psi) | 494 | 218.0 | 12.0 | -2.2 | 5.5 |
| 332212JHWF3 | 460 | 8.8g Mg(OH)2 + 15.8g CrC13 +latm Ar | 532 | 217.1 | 9.8 | -2.2 | 4.5 |
| 032312JHWF1 | 465 | 9.8g Cu(OH)2 + 21.6g FeBr2 + l atm Ar | 565 | 217 | 13.9 | -1.6 | 8.7 |
| 032312JHWF2 | 466 | 9.8g Cu(OH)2 + 21.9g NiBr2 + 1atm Ar | 591 | 219 | 17.3 | -0.9 | 19.2 |
| 032312JHWF3 | 467 | 9.8g Cu(OH)2 + 21.9g CoBr2 + 1atm Ar | 576 | 218.2 | 12 | -1.1 | 10.9 |
| J32312JHWF4 | 468 | 9.8g Cu(OH)2 + 13.0g NiCl2 + 1atm Ar | 552 | 210 | 8.7 | 0.6 | inf |
| 032312JHWF5 | 469 | 9.8g Cu(OH)2 + 21.5g MnBr2 + 1atm Ar | 602.7 | 214.1 | 14.2 | 9.8 | inf |
| 032312JHWF6 | 470 | 9.8g Cu(OH)2 + 27.9g SnBr2 + 1atm Ar | 598 | 218.1 | 16.4 | -1.5 | 10.9 |
| 032312JHWF8 | 471 | 9.8g Cu(OH)2 + 19.0g SnC12 + 1atm Ar | 623 | 217.2 | 20.2 | -1.2 | 16.8 |

C. Spectroscopic Identification of Molecular Hydrino

The continuum radiation bands at 10.1 and 22.8 nm and going to longer wavelengths for theoretically predicted transitions of H to lower-energy, hydrino states, were observed only from pulsed pinched hydrogen discharges first at BlackLight Power, Inc. (BLP) and reproduced at the Harvard Center for Astrophysics (CfA) [R. L. Mills, Y. Lu, "Time-Resolved Hydrino Continuum Transitions with Cutoffs at 22.8 nm and 10.1 nm," Eur. Phys. J. D, 64, (2011), pp. 63, DOI: 10.1140/epjd/e201 1-20246-5]. Extraordinary fast H formed by the mechanism involving recombination of fast ionized H that served as a hydrino catalyst and resonant kinetic energy transfer during the energy decay step of the $H*\left[\frac{a_H}{m+1}\right]$ intermediate was also confirmed [K. Akhtar, J. Scharer, R. L. Mills, "Substantial Doppler broadening of atomic-hydrogen lines in DC and capacitively coupled RF plasmas," J. Phys. D, Applied Physics, Vol. 42, (2009), 42 135207 (2009) doi:10.1088/0022-3727/42/13/135207]. The discovery of high-energy continuum radiation from hydrogen as it forms a more stable form has astrophysical implications such as hydrino being a candidate for the identity of dark matter and the corresponding emission being the source of high-energy celestial and stellar continuum radiation [R. L. Mills, Y. Lu, "Hydrino continuum transitions with cutoffs at 22.8 nm and 10.1 nm," Int. J. Hydrogen Energy, 35 (2010), pp. 8446-8456, doi: 10.1016/j.ijhydene.2010.05.098]. By recent astrophysical measurements and mapping, dark matter comprises 98% of the mass of the universe and is ubiquitous. Furthermore, dark matter is shown to be intragalactic by the reformation of massive gravitation bodies from galaxy collision debris wherein the mechanics of those bodies requires massive amounts on non-visible gravitational matter [F. Bournaud, P. A. Due, E. Brinks, M. Boquien, P. Amram, U. Lisenfeld, B. Koribalski, F. Walter, V. Charmandaris, "Missing mass in collisional debris from galaxies," Science, Vol. 316, (2007), pp. 1166-1169; B. G. Elmegreen, "Dark matter in galactic collisional debris," Science, Vol. 316, (2007), pp. 32-33], and it is has been shown to be collisional [M. J. Jee, A. Mahdavi, H. Hoekstra, A. Babul, J. J. Dalcanton, P. Carroll, P. Capak, "A study of the dark core in A520 with the Hubble Space Telescope: The mystery deepens," Astrophysical J., Vol. 747, No. 96, (2012), pp. 96-103]. Thus, dark matter would be anticipated to be ubiquitous on Earth as confirmed by the analysis of compounds found to serve as getters for the collection and analytical identification of hydrinos presented

herein.

Other observations that confirm the energetics of the hydrino reaction are the formation of hydrogen plasma by heating, its anomalous afterglow duration [H. Conrads, R. L. Mills, Th. Wrubel, "Emission in the Deep Vacuum Ultraviolet from a Plasma Formed by Incandescently Heating Hydrogen Gas with Trace Amounts of Potassium Carbonate," Plasma Sources Science and Technology, Vol. 12, (2003), pp. 389-395], and the inversion of H lines [R. L. Mills, P. C. Ray, R. M. Mayo, M. Nansteel, B. Dhandapani, J. Phillips, "Spectroscopic Study of Unique Line Broadening and Inversion in Low Pressure Microwave Generated Water Plasmas," J. Plasma Physics, Vol. 71, Part 6, (2005), 877-888; R. L. Mills, P. Ray, R. M. Mayo, "CW HI Laser Based on a Stationary Inverted Lyman Population Formed from Incandescently Heated Hydrogen Gas with Certain Group I Catalysts," IEEE Transactions on Plasma Science, Vol. 31, No. 2, (2003), pp. 236-247].

A system of the present invention is directed to a hydrino fuel cell called a CIHT (Catalyst-Induced-Hydrino-Transition) cell that generates an electromotive force (EMF) from the catalytic reaction of hydrogen to lower energy (hydrino) states providing direct conversion of the energy released from the hydrino reaction into electricity. Each CIHT cell comprises a cathode compartment comprising a cathode, an anode compartment comprising an anode, and an electrolyte that also serves as a source of reactants to form hydrinos. Due to oxidation-reduction half cell reactions, a hydrino-producing reaction mixture is constituted with the migration of electrons through an external circuit and ion mass transport through a separate internal path through the electrolyte to complete an electrical circuit. In one type of electrolytically regenerative CIHT cell, atomic hydrogen and oxygen are intermittently formed by electrolysis of $H_2O$ in the cell, and the hydrogen catalyst and subsequently hydrinos are formed by a reaction of the reaction mixture during cell discharge with a net gain of electrical output. An exemplary CIHT comprised a nickel mat or Mo anode, nickel oxide cathode, and the molten eutectic salt electrolyte LiOH-LiBr with MgO matrix. The cell ran off of water supplied as vapor to the cell or extracted from air. The cell was operated under intermittent electrolysis and discharge. Hydrogen and oxygen were generated during the electrolysis phase at the negative and positive electrodes, respectively, and served as the sources of H and $H_2O$ catalyst. CIHT cells were validated by six independent expert scientists or teams to produced as high as 1000 times more electricity out than that required to electrolyze $H_2O$ as the source of hydrogen to form hydrinos. These cells and other scale-up cells served as electrode and electrolyte samples for analytical analysis for the production of the theoretically predicted molecular hydrino product $H_2(1/4)$.

CIHT cells having a molten LiOH-LiBr-MgO electrolyte and a single electrode set or a stack of CIHT cells having bipolar plate electrodes served as a source of molecular hydrino for analytical tests such as magic angle spinning $^1H$ nuclear magnetic resonance spectroscopy (MAS $^1H$ NMR), electron-beam excitation emission spectroscopy, Raman spectroscopy, Fourier transform infrared (FTIR) spectroscopy, and X-ray photoelectron spectroscopy (XPS). The single-cell cathode and anode comprised NiO and Ni celmet or Mo, respectively. The bipolar electrodes each comprised a NiO cathode attached to a separator plate of a different metal than that of the anode. Exemplary separator plate-anode metal pairs were 214 alloy-Ni, Ni-Mo, Hastelloy alloys-Mo, and Mo-Ni celmet. The cells were sealed in a vacuum chamber and were closed except for the flow of $H_2O$ vapor entrained in argon gas or from a $H_2O$ vapor generator. The electrical performance of cells comprising a stack of n-cells was similar to that of the corresponding single cell except that the cell voltage was n-times that of the single cell. The molecular hydrino samples comprised electrolyte, chemical products, and inorganic compound getters such as KCl, KOH, and KCl-KOH mixture placed in the sealed container of closed CIHT cells wherein hydrinos generated during operation were trapped in the matrix of the compound that thereby served as a molecular hydrino getter. Starting materials not exposed to a hydrino source served as controls. The characteristics of molecular hydrino match those of dark matter, and dark matter ($H_2(1/p)$) is anticipated to present in certain materials capable of entrapping it. Consistent with expectations, KC1 getter contained naturally abundant $H_2(1/4)$ that was greatly increased with exposure to a source of $H_2(1/4)$.

MAS NMR of molecular hydrino trapped in protic matrix represents a means to exploit the unique characteristics of molecular hydrino for its identification via its interaction with the matrix. A unique consideration regarding the NMR spectrum is the possible molecular hydrino quantum states. Similarly to $H_2$ exited states, molecular hydrinos $H_2(1/p)$ have states with $\ell = 0,1,2,..., p-1$. Even the $\ell = 0$ quantum state has a relatively large quadrupole moment, and additionally, the corresponding orbital angular momentum of $\ell \neq 0$ states gives rise to a magnetic moment [Mills GUTCP] that could cause an upfield matrix shift. This effect is especially favored when the matrix comprises an exchangeable H such as a matrix having waters of hydration or an alkaline hydroxide solid matrix wherein a local interaction with $H_2(1/p)$ influences a larger population due to rapid exchange. CIHT cell getters such as those comprising KOH-KCl and KCl + K wherein K reacted with $H_2O$ during the hydrino reaction to form KOH showed a shift of the MAS NMR active component of the matrix (KOH) from +4.4 ppm to about -4 to -5 ppm after exposure to the atmosphere inside of the sealed CIHT cell. $H_2$-permeation and $\beta$-alumina-solid-electrolyte CIHT cells as well as KOH-KC1 and other getters in solid fuels reactors also showed the upfield shifted NMR effect. Specifically, the MAS NMR spectrum of the electrolyte from CIHT cells such as that of [Ni($H_2$) +NaOH/Na-BASE/NaCl +$MgCl_2$] and [Ni($H_2$)/LiOH-LiBr + KOH additive at end/NiC6] and KCl + K and KI + K getters of solid fuel reactions such as that of NaOH + FeOOH + 2 atm $H_2$, NaOH + $Fe_2O_3$ + 2 atm $H_2$, K + KCl getter + separate $Fe_2O_3$ + NiO + Ni screen + 2 atm $H_2$, K + KCl getter + separate $Cr_2O_3$ + NiO + Ni screen + 2 atm $H_2$,

K + KI getter + separate $Fe_2O_3$ + NiO + R-Ni + 2 atm $H_2$, and K + KI getter + separate $Cr_2O_3$ + NiO + R-Ni + 2 atm $H_2$ showed upfield shift peaks in the region of about -1 ppm to -5 ppm. The different $\ell$ quantum numbers possible for the p = 4 state can give rise to different upfield matrix shifts consistent with observations of multiple such peaks in the region of -4 to -5 ppm. The MAS NMR peak of KOH matrix upfield shifted by forming a complex with molecular hydrino can be sharp from the upfield-shifted hydroxide ion ($OH^-$) acting as a free rotor, consistent with observations.

Additional evidence supports the hydrino-based shift mechanism. The $H_2(1/4)$ ro-vibrational spectrum of $H_2(1/4)$ was observed by electron-beam excitation emission spectroscopy of samples having the upfield shifted MAS NMR spectral peaks. Furthermore, positive ion ToF-SIMs spectra showed multimer clusters of matrix compounds with dihydrogen as part of the structure, $M{:}H_2$ (M = KOH or $K_2CO_3$). Specifically, the positive ion spectra of hydrino reaction products comprising KOH and $K_2CO_3$ or having these compounds as getters showed $K^+(H_2 : KOH)_n$ and $K^+(H_2 : K_2CO_3)_n$ consistent $H_2(1/p)$ as a complex in the structure [R. L. Mills, E. Dayalan, P. Ray, B. Dhandapani, J. He, "Highly Stable Novel Inorganic Hydrides from Aqueous Electrolysis and Plasma Electrolysis," Electrochimica Acta, Vol. 47, No. 24, (2002), pp. 3909-3926; R. L. Mills, B. Dhandapani, M. Nansteel, J. He, T. Shannon, A. Echezuria, "Synthesis and Characterization of Novel Hydride Compounds," Int. J. of Hydrogen Energy, Vol. 26, No. 4, (2001), pp. 339-367]. The energy of the interaction of $H_2(1/p)$ and the matrix compound must be greater than that of thermal energies of about 0.025 eV at room temperature since the ToF-SIMS clusters were stable, and the entire matrix is shifted in some cases in the MAS NMR. A high activation barrier to rotation is expected from this strong interaction with the matrix. Samples having upfield MAS NMR shifts also showed Raman matrix shifts of about 0.05-0.075 eV (400-600 cm-1) for a linear series of Stokes peaks wherein the slope between peaks matched $H_2(1/4)$ rotational transitions of 0.249 eV energy difference to a high correlation of about 0.999 or better.

The direct identification of molecular hydrino by its characteristic extraordinarily high ro-vibrational energies was sought using electron-beam excitation emission spectroscopy and Raman spectroscopy. Another distinguishing characteristic is that the selection rules for molecular hydrino are different from those of ordinary molecular hydrogen. $H_2$ excited state lifetimes are very short, and ro-vibrational transitions having $\Delta J = \pm 1$ occur during rapid electronic transitions in $H_2$. But, it is not possible for $H_2$ to undergo a pure ro-vibrational transition having the selection rule $\Delta J = \pm 1$ since $\ell = 0$ and $\Delta\ell = \pm 1$ is required in order to conserve angular momentum during the transition. In contrast, such transitions are allowed for molecular hydrinos. The quantum numbers of the atomic electron are $p$, $\ell$, $m_\ell$, and $m_s$ [Mills GUTCP]. In the case of a hydrino state, the principal quantum number of excited states is replaced by $n = \frac{1}{p}$. Similarly to $H_2$ exited states, molecular hydrinos have states with $\ell = 0,1,2,..., p - 1$. Transitions between these prolate spheroidal harmonic states are permissive of rotational transitions of $\Delta J = \pm 1$ during a pure vibrational transition without an electronic transition as observed for $H_2$ excited states. The lifetimes of the angular states are sufficiently long such that $H_2(1/p)$ may uniquely undergo a pure ro-vibrational transition having the selection rule $\Delta J = \pm 1$. The emitting molecular hydrino state may be excited by a high-energy electron collision wherein due to the rotational energy of $p^2(J + 1)0.01509\ eV$ excited rotational states cannot be populated at ambient temperatures corresponding to <0.02 eV. Thus, only the P branch corresponding to $J' - J'' = -1$ is anticipated for a de-excitation vibrational transition such as $\upsilon = 1 \rightarrow \upsilon = 0$ with a statistical thermodynamic population of higher rotational levels involving an influence of the matrix corresponding to the observed vibrational energy shift from that of a free vibrator.

Ro-vibrational emission of $H_2(1/4)$ trapped in the crystalline lattice of getters was excited by an incident 6 KeV electron gun with a beam current of 10-20 $\mu A$ in the pressure range of $5 \times 10^{-6}$ Torr. Windowless UV spectroscopy of the emission from the electron-beam excitation was recorded using a McPherson 0.2 meter monochromator (Model 302, Seya-Namioka type) equipped with a 1200 lines/mm holographic grating with a platinum coating and a photomultiplier tube (PMT) detector. The wavelength resolution was about 4 nm (FWHM) with an entrance and exit slit width of 500 $\mu m$. The increment was 2 nm and the dwell time was 3 s. An example of the resolved ro-vibrational spectrum of $H_2(1/4)$ in the UV transparent matrix KC1 (120811JL-2M3) that served as a getter in a 5 W CIHT cell stack shows the peak maximum at 260 nm with representative positions of the peaks at 222.7, 233.9, 245.4, 258.0, 272.2, and 287.6 nm, having an equal spacing of 0.2491 eV. The vibrational energy of diatomic molecules such as $H_2(1/p)$ is given by $\sqrt{\frac{k}{\mu}}$ wherein k is the force constant and $\mu$ is the reduced mass that is $\frac{1}{2}$ for $H_2(1/p)$. In the case that the molecule is in a crystalline lattice of infinite mass relative to H, the reduced mass for the vibration of a given H with the other treated as

an infinite mass corresponds to a reduced mass of one giving a shift of the vibrational energy by a factor of $\frac{1}{\sqrt{2}}$. The rotational energy is expected to be essentially that of a free rotor with a slight rotational barrier as in the case of $H_2$ in crystalline silicon or germanium [E. V. Lavrov, J. Weber, "Ortho and Para Interstitial H2 in Silicon," Phys. Rev. Letts., 89(21), (2002), pp. 215501 to 1-215501-4]. Given that the vibrational and rotational energies of $H_2(1/p)$ are $p^2$ that of $H_2$, $p^2 0.515$ eV and $p^2 0.01509$ eV, respectively, the vibrational and rotational energies of $H_2(1/4)$ in a crystalline lattice are predicted to be 5.8 eV and 0.24 eV, respectively. The 260 nm, e-beam band has no structure other than the broad peaks at $\pm$ 0.006 nm resolution when observed using a Jobin Yvon Horiba 1250 M spectrometer, and, in general, the plot of the energy versus peaks number yields a line given by y = -0.249 eV + 5.8 eV at $R^2$ = 0.999 or better in very good agreement with the predicted values for $H_2(1/4)$ for the transitions $\upsilon = 1 \rightarrow \upsilon = 0$ and P(1), P(2), P(3), P(4), P(5), and P(6).

Another example is the intense 260 nm band comprising the peaks P(1) - P(6) observed from the KCl getter from a sealed reactor of the gun powder reaction, $KNO_3$ with charcoal. Specifically, the slope matches the predicted rotational energy spacing of 0.249 eV (Eq. (45); $p = 4$ ) with $J' - J'' = -1$; $J'' = 1, 2, 3, 4, 5, 6$ where $J''$ is the rotational quantum number of the final state. The high energetics of the hydrino reaction may be the basis of energetic materials such as gun powder; moreover, the bombardment of carbon by the energetic or fast H formed during the transition of H to form hydrinos may be the basis of the mechanism to convert graphitic to diamond form of carbon [R. L. Mills, J. Sankar, A. Voigt, J. He, B. Dhandapani, "Synthesis of HDLC Films from Solid Carbon," J. Materials Science, J. Mater. Sci. 39 (2004) 3309-3318; R. L. Mills, J. Sankar, A. Voigt, J. He, B. Dhandapani, "Spectroscopic Characterization of the Atomic Hydrogen Energies and Densities and Carbon Species During Helium-Hydrogen-Methane Plasma CVD Synthesis of Diamond Films," Chemistry of Materials, Vol. 15, (2003), pp. 1313-1321]. The same mechanism applies to the formation of diamond-like carbon, nanotubes, and fullerenes. Hydrino formation may also result in a highly stabilized Si surface with hydrino atoms, hydride ions, or molecules embedded in the material as the source of stability [R. L. Mills, B. Dhandapani, J. He, "Highly Stable Amorphous Silicon Hydride," Solar Energy Materials & Solar Cells, Vol. 80, No. 1, (2003), pp. 1-20].

The e-beam excitation emission spectrum from KOH getter sealed in the vacuum chamber containing a 65 mW, eight-layer CIHT stack, each cell comprising [Mo/LiBr-LiOH-MgO/NiO], showed a broad continuum emission feature that matched the outline of the profile of the 260 nm band assigned to $H_2(1/4)$ ro-vibration with a maximum intensity of 6000 counts at about 260 nm. The band that was not observed in the getter starting material was about ten times more intense than typically observed. Intense peaks corresponding to the 260 nm, e-beam band comprising P(1) - P(6) were resolved by Raman spectroscopy. Moreover, the energies and slight barrier to rotation for the corresponding pure rotational series were also confirmed by Raman spectroscopy.

$H_2(1/4)$ was also sought using Raman spectroscopy wherein due to the large energy difference between ortho and para, the latter was expected to dominate the population. Given that para is even, the typical selection rule for pure rotational transitions is $\Delta J = \pm 2$ for even integers. However, orbital-rotational angular momentum coupling gives rise to a change in the $\ell$ quantum number with the conservation of the angular momentum of the photon that excites the rotational level wherein the resonant photon energy is shifted in frequency by the orbital-nuclear hyperfine energy relative to the transition in the absence of the $\ell$ quantum number change. The rotational selection rule defined as initial state minus final state is $\Delta J = J' - J'' = -1$, the orbital angular momentum selection rule is $\Delta\ell$ = II, and the transition becomes allowed by the conservation of angular momentum during the coupling of the rotational and the orbital angular momentum excitations. Using a Horiba Jobin Yvon LabRAM Aramis Raman spectrometer with a 442 nm laser in the macro mode, Raman peaks were observed for the KOH getter sample at 4233, 4334, 6288, 8226, and 8256 $cm^{-1}$. The other sharp lines were atomic or atomic ion lines from the laser. Considering that the closely spaced peaks comprise split peaks of the centroid, the slope of the energy versus peak number is a straight line with an $R^2$ of 0.9999 having a slope of 0.245 eV that matches the rotational energy for $H_2(1/4)$ very well.

Ortho-para splitting is observed to couple to ro-vibration in $H_2$, and this energy for $H_2(1/4)$ is of the magnitude of the splitting [Mills GUTCP], but $H_2(1/4)$ should be essentially only para and the nuclear spin cannot change during ro-vibration excitation due to the time-scale mismatch. Rather, the energy splitting of the rotational peaks and selection rules matched very well those for rotational transitions $\Delta J = -1$ coupled with orbital angular transitions $\Delta\ell = \pm 1$ having nondegenerate orbital-nuclear hyperfine levels split by 4 to 60 $cm^{-1}$ depending on the level [Mills GUTCP]. The series corresponds to the peaks P(2) - P(5) of the e-beam series wherein the matrix shift or barrier to rotation is about 450 $cm^{-1}$ or about 0.055 eV.

The set of peaks with an inter-peak spacing of 0.249 eV was also observed with the 325 nm laser and in different samples that were anticipated to contain $H_2(1/4)$, but was not observed from controls such as Si wafer or glass. For example, the series was observed in KCl + K getter in the sealed FeOOH + $H_2$ + Ni screen dissociator solid fuels reactor, but the matrix shift varied depending on the getter. The peak corresponding to P(1) of the series at 2594 $cm^{-1}$ was also

observed in the spectrum of this getter matrix using 785, 663, 442, 325, (Jobin Yvon Horiba Labram Aramis) and 780 and 532 (Thermo Scientific DXR) nm lasers. This lowest-energy member of the series was more difficult to observe in some cases with the high-energy lasers, but was easily discernible with lower-energy laser excitation such as with the lower-energy 532 nm laser irradiation that also excited a very sharp peak at 1950 $cm^{-1}$ matching the free space rotational energy of $H_2(1/4)$ (0.2414) to four significant figures. This system also permitted resolution of the splitting of the doublet peak corresponding to P(2) at 4368 and 4398 $cm^{-1}$ using a sample comprising a KCl getter re-crystallized from an saturated aqueous solution. Moreover, the lowest-energy 780 nm laser incident on the electrolyte matrix of validation cells [Ni, Ni, Mo, and H242 alloy/LiOH-LiBr-MgO/NiO] that produced 2.2 Wh at 400% gain, 0.95 Wh at 500% gain, 3.3 Wh at 180,000% gain, and 2.7 Wh at 260%, respectively, excited an intense peak corresponding to P(1) at 2639 $cm^{-1}$ in this matrix. The Hg line at 2957 $cm^{-1}$ due to the fluorescent lights and the $N_2$ peak at 2326 $cm^{-1}$ served as internal calibration standards. The addition of the P(1) peak to the plot of the series P(1) - P (5) yields a slope of 0.2414 eV that exactly matches the rotational energy for $H_2(1/4)$ of $4^2(0.01509\ eV) = 0.2414\ eV$.

Furthermore, FTIR was performed on the starting materials and electrolyte samples from the validation cells [(Ni, H242 alloy, and Mo/LiOH+LiBr+MgO/NiO)] and [Ni/LiOH-LiBr-MgO/NiO] that produced 0.94 Wh at 4000% gain, 1.25 Wh at 200% gain, 1.22 Wh at 250% gain, and 5.35 Wh at 1900% gain, respectively, using a Nicolet 730 FTIR spectrometer with DTGS detector at resolution of 4 $cm^{-1}$. The peak corresponding to P(1) was absent in the starting material but was observed as a strong sharp peak at 2633 $cm^{-1}$ in the FTIR spectrum, especially in electrolyte samples from CIHT cells with high energies and gains, as well as solid fuels getter samples such as KOH used as a getter for the FeOOH reaction. The O-H stretching peaks of LiOH at 3618 and 3571 $cm^{-1}$ in the electrolyte comprising LiOH-LiBr-MgO may be made sharp when LiOH exists as a complex with $H_2(1/p)$. The interaction in the LiOH:$H_2(1/p)$ complex replaces and disrupts H bonding that otherwise broadens the O-H stretching peak. FTIR of gas collected from the FeOOH reaction further showed a peak at 1995 $cm^{-1}$ corresponding to a rotational energy of 0.247 eV, possibility involving a transitions between different f quantum stares than with Raman excitation. Another important result was that the series of Raman peaks was observed from the Ni anode of the CIHT cell comprising validation cell [Ni/LiOH-LiBr-MgO/NiO] that made 5.35 Wh at 1900% gain. The peak corresponding to P(4) at 8358 $cm^{-1}$ was especially intense and actually showed three matrix shifts of about 0, 450, and 550 $cm^{-1}$ possibly due to Ni, LiOH, and Mg matrices found in the XPS spectrum. The electrolyte sample also showed these intense P(4) peaks.

Moreover, a small XPS peak from the Ni anode with a FWHM of 1 eV at 522 eV that could not be assigned to any known elements matched the total energy of $H_2(1/4)$ of 522 eV. Pt and V, being the only possibilities, were easy to eliminate based on the absence of any other corresponding peaks of these elements. The collisional-like Compton double ionization is expected with one electron conserving the incident Al X-ray energy as kinetic energy since $H_2(1/4)$ does not absorb or emit radiation and the ionized state to form $H_2^+(1/4)$ is an infinitely excited state. This result further confirms the formation of $H_2(1/4)$ on the anode during the operation of the CIHT cell. Additionally, the 522 eV $H_2(1/4)$ peak was observed from solid fuel reaction products such as that of KH with Pd/C containing ~0.5 wt% sulfate as a source of $H_2O$ catalyst that showed multiple times excess energy compared to the maximum theoretical based on conventional reactions. The resolution of XPS is insufficient to resolve the splitting due to orbital-nuclear levels associated with different e quantum numbers, but it may be possible using a synchrotron source.

Excess heats from solid fuels reactions measured using water-flow calorimetry given in the Water-Flow, Batch Calorimetry section have been independently confirmed by differential scanning calorimetry (DSC) run at testing laboratories. For example, using their commercial DSC 131 Evo instrument on FeOOH serving as a solid fuel to provide H and $H_2O$ catalyst, Setaram Instrumentation based in France measured three times the maximum theoretical heat of forming $H_2O$ and iron oxides. These products were confirmed by XRD using a Bruker D4 diffractometer.

An interrelated confirmatory observation of the identification of hydrino was that the molecular orbital-nuclear coupling energy of $H_2(1/4)$ that was manifest as splitting of the pure rotational Raman transitions was consistent with the spin-nuclear coupling energy predicted and observed for the corresponding atomic hydrino H(1/4). Similar to the case with the 21 cm (1.42 GHz) line of ordinary hydrogen, hydrino atoms were identified by its predicted 642 GHz spin-nuclear hyperfine transition observed by TeraHz absorption spectroscopy of cryogenically cooled $H_2$ below 35K. Using a long path length (60 m), multi-reflection absorption cell coupled to a Fourier transform interferometer, Wishnow [E.H. Wishnow, The Far-Infrared Absorption Spectrum of Low Temperature Hydrogen Gas, Ph.D. Thesis, University of British Columbia, Canada, (1993)] recorded the $H_2$ spectrum at a spectral resolution of 0.24 $cm^{-1}$ over the wavenumber, temperature, and pressure ranges of 20-320 $cm^{-1}$, 21-38 K, and 1-3 atmospheres, respectively. A sharp line at 21.4 $cm^{-1}$ was observed at 25.5 K, but is absent at 36 K. The wavenumber of the line is a match to the predicted 21.4 $cm^{-1}$ H(1/4) hyperfine line and could not be assigned to a known species.

Another candidate in the search for hydrino signatures by Raman spectroscopy is the ro-vibration of $H_2(1/4)$ matching the 260 nm e-beam band observed as second order fluorescence. Using the Horiba Jobin Yvon LabRAM Aramis Raman spectrometer with a HeCd 325 nm laser in microscope mode with a magnification of 40X, an intense

series of 1000 $cm^{-1}$ equal-energy spaced Raman peaks were observed at 8340, 9438, 10,467, 11,478, 12,457, 13,433, and 14,402 $cm^{-1}$ with the maximum peak intensity at 12,457 $cm^{-1}$. The fluorescence spectrum in second order calculated from these peaks positions comprises the peaks at 446, 469, 493, 518, 546, 577, and 611 nm. The spacing of 1000 $cm^{-1}$ or 0.1234 eV matches the second order rotational spectrum of $H_2(1/4)$ very well. In fact, considering the slight contraction at the extremes of the wavelength range due to the matrix shift, halving the wavelength of the calculated fluorescence spectrum and correcting to the transition between matrices results in the e-beam and Raman spectra superimposing, including the peaks intensities. The excitation was deemed to be by the high-energy UV and EUV He and Cd emission of the laser wherein the grating (Labram Aramis 2400g/mm 460mm focal length system with 1024 $\times$ 26 $\mu m^2$ pixels CCD) is dispersive and has its maximum efficiency at the shorter wavelength side of the spectral range, the same range as the 260 nm band. The CCD is also most responsive at 500 nm, the region of the second order of the 260 nm band centered at 520 nm. On a repeat scan to higher wavenumbers, additional members of the ro-vibrations series were observed. Moreover, when $K_2CO_3$-KCl (1:1) was used as the getter for the cell [laminated-CNi6 1.5"X1.5" + CNi8 1.5"X1.5" + Mo 1"X1" CNi8 + 1.5"X1.5" + Ag 1"X1" + CNi8 1.5"X1.5"+ CNi6 1.5"X1.5")/LiOH-LiBr-MgO/NiO] (50 mA charge and discharge current; 2.65 Wh discharge energy, 200% gain ) the 260 nm e-beam band was observed intensely, and the laser-excited second-order fluorescence band having a slight shift due to the different matrix was also observed to extend to 17,000 $cm^{-1}$ with higher orders beyond that to the maximum scanned range to 22,000 $cm^{-1}$.

Green emission was observed from the sample when laser irradiated. The likely signature in the Raman spectrum was an intense continuum having a maximum at 12,500 $cm^{-1}$ under the peaks assigned to the second order emission of the series P(1) - P(7). The conversion of this Raman continuum into the corresponding fluorescence emission gives green light with a maximum at 550 nm matching the green irradiated sample emission. The green continuum fluorescence further matches the energy difference between free vibration of $H_2(1/4)$ and that of crystalline-matrix-immobilized $H_2(1/4)$ vibration with energy exchange with phonons of the crystalline matrix and is assigned to this source. The second-order fluorescence spectrum of $H_2(1/4)$ comprising the series P(1)-P(7) and the green fluorescence giving a Raman continuum underlying the series were also observed from getters in solid fuels reactor such as that of KCl + K (to form KOH in situ) getter in the reactor with solid fuel FeOOH + $H_2$ + Ni screen hydrogen dissociator. The observation of a Raman band in a region having no known first order peaks at four significant figure agreement with theoretical predictions is strong confirmation of molecular hydrino having an internuclear distance that is 1/4 that of $H_2$.

## Claims

1. An electrochemical power system comprising a vessel closed to atmosphere, the vessel comprising a cell, wherein the cell comprises:

   at least one cathode configured to reduce $O_2$ and $H_2O$;
   at least one anode configured to oxidize OH-;
   at least one bipolar plate; and
   an electrolyte matrix comprising MOH-MX, wherein M is an alkali metal and X is a halogen; and
   wherein the electrochemical system further comprises an electrolysis system.

2. The electrochemical power system recited in claim 1, wherein the electrolysis system is configured to electrolyze $H_2O$ intermittently.

3. The electrochemical power system recited in claim 1, wherein the electrolyte matrix is chosen from at least one of the following:

   at least one molten hydroxide;
   at least one eutectic salt mixture;
   at least one mixture of a molten hydroxide and at least one other compound;
   at least one mixture of a molten hydroxide and a salt;
   at least one mixture of a molten hydroxide and halide salt;
   at least one mixture of an alkaline hydroxide and an alkaline halide;
   LiOH-LiBr, LiOH-LiX, NaOH-NaBr, NaOH-Na!, NaOH-NaX, and KOH-KX, wherein X is a halogen.

4. The electrochemical power system recited in claim 1, further comprising a heater.

5. The electrochemical power system recited in claim 1, wherein the cell temperature is in at least one range chosen from the following ranges:

0 to 1500 °C higher than the melting point of the electrolyte matrix;
0 to 1000 °C higher than the melting point of the electrolyte matrix;
0 to 500 °C higher than the melting point of the electrolyte matrix;
0 to 250 °C higher than the melting point of the electrolyte matrix; and
0 to 100 °C higher than the melting point of the electrolyte matrix.

**6.** The electrochemical power system recited in claim 1, wherein the electrolyte matrix comprises at least one of the following:

oxyanion compounds, aluminate, tungstate, zirconate, titanate, sulfate, phosphate, carbonate, nitrate, chromate, and manganate, oxides, nitrides, borides, chalcogenides, silicides, phosphides, and carbides, metals, metal oxides, nonmetals, and nonmetal oxides;
oxides of alkali metal, alkaline earth metal, transition metal, inner transition metal, and rare earth metals, and Al, Ga, In, Sn, Pb, S, Te, Se, N, P, As, Sb, Bi, C, Si, Ge, and B, and other elements that form oxides or oxyanions;
at least one oxide such as one of an alkali metal, alkaline earth metal, transition metal, inner transition metal, and rare earth metal, and Al, Ga, In, Sn, Pb, S, Te, Se, N, P, As, Sb, Bi, C, Si, Ge, and B, and other elements that form oxides, and one oxyanion and further comprise at least one cation from the group of alkali metal, alkaline earth metal, transition metal, inner transition metal, and rare earth metal, and Al, Ga, In, Sn, and Pb cations;
$LiAlO_2$, MgO, $Li_2TiO_3$, or $SrTiO_3$;
an oxide of the anode materials and a compound of the electrolyte;
at least one of a cation and an oxide of the electrolyte;
an oxide of the electrolyte MOH (M = alkali);
an oxide of the electrolyte comprising an element, metal, alloy, or mixture of the group of Mo, Ti, Zr, Si, Al, Ni, Fe, Ta, V, B, Nb, Se, Te, W, Cr, Mn, Hf, Co, and M' (M' represents an alkaline earth metal);
$MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MnO, $Mn_3O_4$, $Mn_2O_3$, $MnO_2$, $Mn_2O_7$, $HfO_2$, $Co_2O_3$, CoO, $Co_3O_4$, $Co_2O_3$, and MgO;
an oxide of the cathode material and optionally an oxide of the electrolyte;
$Li_2MoO_3$ or $Li_2MoO_4$, $Li_2TiO_3$, $Li_2ZrO_3$, $Li_2SiO_3$, $LiAlO_2$, $LiNiO_2$, $LiFeO_2$, $LiTaO_3$, $LiVO_3$, $Li_2B_4O_7$, $Li_2NbO_3$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_4$, $Li_2HfO_3$, $LiCoO_2$, and M'O (wherein M' represents an alkaline earth metal), and MgO;
an oxide of an element of the anode or an element of the same group, and $Li_2MoO_4$, $MoO_2$, $Li_2WO_4$, $Li_2CrO_4$, and $Li_2Cr_2O_7$ with a Mo anode; and
the additive comprising at least one of S, $Li_2S$, oxides, $MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MgO, $TiO_2$, $Li_2TiO_3$, $LiAlO_2$, $Li_2MoO_3$ or $Li_2MoO_4$, $Li_2ZrO_3$, $Li_2SiO_3$, $LiNiO_2$, $LiFeO_2$, $LiTaO_3$, $LiVO_3$, $Li_2B_4O_7$, $Li_2NbO_3$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_3$, or $L_3CoO_2$, MnO, and $CeO_2$.

**7.** The electrochemical power system recited in claim 1, further configured so that at least one of the following reactions occurs: the oxidation of $OH^-$, and the reduction of at least one of an oxygen ion, oxygen, and $H_2O$.

**8.** The electrochemical power system recited in claim 1, wherein:

the cathode comprises NiO;
the anode comprises at least one of Ni, Mo, H242 alloy, and carbon; and
the bipolar plate comprises a bimetallic junction, the bimetallic junction comprising at least one of Hastelloy, Ni, Mo, and H242.

**9.** The electrochemical power system recited in claim 1, further comprising at least one stack of cells comprising the bipolar plate, the bipolar plate comprises a bimetallic junction that separates the anode and the cathode.

**10.** The electrochemical power system recited in claim 1, further comprising a water vapor generator configured to supply $H_2O$ to the system.

**11.** The electrochemical power system recited in claim 1, further configured to enable switching between charge and discharge phases, wherein:

(i) an electrode is configured to reverse its role as the cathode or anode when switching between the charge and discharge phases; and
(ii) a current polarity is configured to reverse when switching between the charge and discharge phase;

wherein the charge phase comprises at least one of the application of an applied current and the application of an applied voltage.

**12.** The electrochemical power system recited in claim 1, further configured to maintain a voltage above which the anode is prevented from excessively corroding.

**13.** The electrochemical power system recited in claim 1, further comprising a molten salt electrolyte, the molten salt electrolyte comprising a hydroxide;

wherein a cell temperature that maintains a molten state of the electrolyte is in at least one range chosen from 25 to 2000 °C, 100 to 1000 °C, 200 to 750 °C, and 250 to 500 °C;
the cell temperature being in at least one of 0 to 1500 °C higher than the electrolyte matrix melting point, 0 to 1000 °C higher than the electrolyte matrix melting point, 0 to 500 °C higher than the electrolyte matrix melting point, 0 to 250 °C higher than the electrolyte matrix melting point, and 0 to 100 °C higher than the electrolyte matrix melting point;
wherein a hydrogen pressure is maintained in at least one of 1 Torr to 500 atm, 10 Torr to 100 atm, and 100 Torr to 5 atm; and
wherein a hydrogen permeation rate is in at least one of $1 \times 10^{-13}$ mole $s^{-1}$ $cm^{-2}$ to $1 \times 10^{-4}$ mole $s^{-1}$ $cm^{-2}$, $1 \times 10^{-12}$ mole $s^{-1}$ $cm^{-2}$ to $1 \times 10^{-5}$ mole $s^{-1}$ $cm^{-2}$, $1 \times 10^{-11}$ mole $s^{-1}$ $cm^{-2}$ to $1 \times 10^{-6}$ mole $s^{-1}$ $cm^{-2}$, $1 \times 10^{-10}$ mole $s^{-1}$ $cm^{-2}$ to $1 \times 10^{-7}$ mole $s^{-1}$ $cm^{-2}$, and $1 \times 10^{-9}$ mole $s^{-1}$ $cm^{-2}$ to $1 \times 10^{-8}$ mole $s^{-1}$ $cm^{-2}$.

**14.** An electrochemical power system comprising:

at least one vessel having a pressure;
at least one cathode configured to reduce $O_2$ and $H_2O$;
at least one anode configured to oxidize OH-;
at least one bipolar plate; and
an electrolyte matrix comprising MOH-MX, wherein M is an alkali metal and X is a halogen; and
at least one heater.

**15.** An electrochemical power system comprising a vessel closed to atmosphere, the vessel comprising a cell, wherein the cell comprises:

a cathode compartment having at least one cathode configured to reduce $O_2$ and $H_2O$;
an anode compartment having at least one anode configured to oxidize OH-;
at least one bipolar plate; and
an electrolyte matrix;
wherein a reactant including M, H, or hydrogen gas and alkali metal are provide to the cathode compartment, wherein M is an alkali metal; and
wherein the electrochemical power system further comprises an electrolysis system which applies electrolysis power through the cathode and the anode.

**16.** The electrochemical power system recited in claim 15, wherein the electrolysis system is configured to electrolyze $H_2O$ intermittently.

**17.** The electrochemical power system recited in claim 15, wherein the electrolyte matrix is chosen from at least one of the following:

at least one molten hydroxide;
at least one eutectic salt mixture;
at least one mixture of a molten hydroxide and at least one other compound;
at least one mixture of a molten hydroxide and a salt;
at least one mixture of a molten hydroxide and halide salt;
at least one mixture of an alkaline hydroxide and an alkaline halide;

LiOH-LiBr, LiOH-LiX, NaOH-NaBr, NaOH-Na!, NaOH-NaX, and KOH-KX, wherein X is a halogen.

**18.** The electrochemical power system recited in claim 15, further comprising a heater.

**19.** The electrochemical power system recited in claim 15, wherein the cell temperature is in at least one range chosen from the following ranges:

0 to 1500 °C higher than the melting point of the electrolyte matrix;
0 to 1000 °C higher than the melting point of the electrolyte matrix;
0 to 500 °C higher than the melting point of the electrolyte matrix;
0 to 250 °C higher than the melting point of the electrolyte matrix; and
0 to 100 °C higher than the melting point of the electrolyte matrix.

**20.** The electrochemical power system recited in claim 15, wherein the electrolyte matrix comprises at least one of the following:

oxyanion compounds, aluminate, tungstate, zirconate, titanate, sulfate, phosphate, carbonate, nitrate, chromate, and manganate, oxides, nitrides, borides, chalcogenides, silicides, phosphides, and carbides, metals, metal oxides, nonmetals, and nonmetal oxides;
oxides of alkali metal, alkaline earth metal, transition metal, inner transition metal, and rare earth metal, and Al, Ga, In, Sn, Pb, S, Te, Se, N, P, As, Sb, Bi, C, Si, Ge, and B, and other elements that form oxides or oxyanions;
at least one oxide such as one of an alkali metal, alkaline earth metal, transition metal, inner transition metal, and rare earth metal, and Al, Ga, In, Sn, Pb, S, Te, Se, N, P, As, Sb, Bi, C, Si, Ge, and B, and other elements that form oxides, and one oxyanion and further comprise at least one cation from the group of alkali metal, alkaline earth metal, transition metal, inner transition metal, and rare earth metal, and Al, Ga, In, Sn, and Pb cations;
$LiAlO_2$, MgO, $Li_2TiO_3$, or $SrTiO_3$;
an oxide of the anode materials and a compound of the electrolyte;
at least one of a cation and an oxide of the electrolyte;
an oxide of the electrolyte MOH (M = alkali);
an oxide of the electrolyte comprising an element, metal, alloy, or mixture of the group of Mo, Ti, Zr, Si, Al, Ni, Fe, Ta, V, B, Nb, Se, Te, W, Cr, Mn, Hf, Co, and M' (M' represents an alkaline earth metal);
$MoO_2$, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MnO, $Mn_3O_4$, $Mn_2O_3$, $MnO_2$, $Mn_2O_7$, $HfO_2$, $Co_2O_3$, CoO, $Co_3O_4$, $Co_2O_3$, and MgO;
an oxide of the cathode material and optionally an oxide of the electrolyte;
$Li_2MoO_3$ or $Li_2MoO_4$, $Li_2TiO_3$, $Li_2ZrO_3$, $Li_2SiO_3$, $LiAlO_2$, $LiNiO_2$, $LiFeO_2$, $LiTaO_3$, $LiVO_3$, $Li_2B_4O_7$, $Li_2NbO_3$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_4$, $Li_2HfO_3$, $LiCoO_2$, and M'O (wherein M' represents an alkaline earth metal), and MgO;
an oxide of an element of the anode or an element of the same group, and $Li_2MoO_4$, $MoO_2$, $Li_2WO_4$, $Li_2CrO_4$, and $Li_2Cr_2O_7$ with a Mo anode; and
the additive comprising at least one of S, $Li_2S$, oxides, MoO2, $TiO_2$, $ZrO_2$, $SiO_2$, $Al_2O_3$, NiO, FeO or $Fe_2O_3$, $TaO_2$, $Ta_2O_5$, VO, $VO_2$, $V_2O_3$, $V_2O_5$, $B_2O_3$, NbO, $NbO_2$, $Nb_2O_5$, $SeO_2$, $SeO_3$, $TeO_2$, $TeO_3$, $WO_2$, $WO_3$, $Cr_3O_4$, $Cr_2O_3$, $CrO_2$, $CrO_3$, MgO, $TiO_2$, $Li_2TiO_3$, $LiAlO_2$, $Li_2MoO_3$ or $Li_2MoO_4$, $Li_2ZrO_3$, $Li_2SiO_3$, $LiNiO_2$, $LiFeO_2$, $LiTaO_3$, $LiVO_3$, $Li_2B_4O_7$, $Li_2NbO_3$, $Li_2SeO_3$, $Li_2SeO_4$, $Li_2TeO_3$, $Li_2TeO_4$, $Li_2WO_4$, $Li_2CrO_4$, $Li_2Cr_2O_7$, $Li_2MnO_3$, or $L_3CoO_2$, MnO, and $CeO_2$.

**21.** The electrochemical power system recited in claim 15, further configured so that at least one of the following reactions occurs: the oxidation of $OH^-$, and the reduction of at least one of an oxygen ion, oxygen, and $H_2O$.

Fig. 1

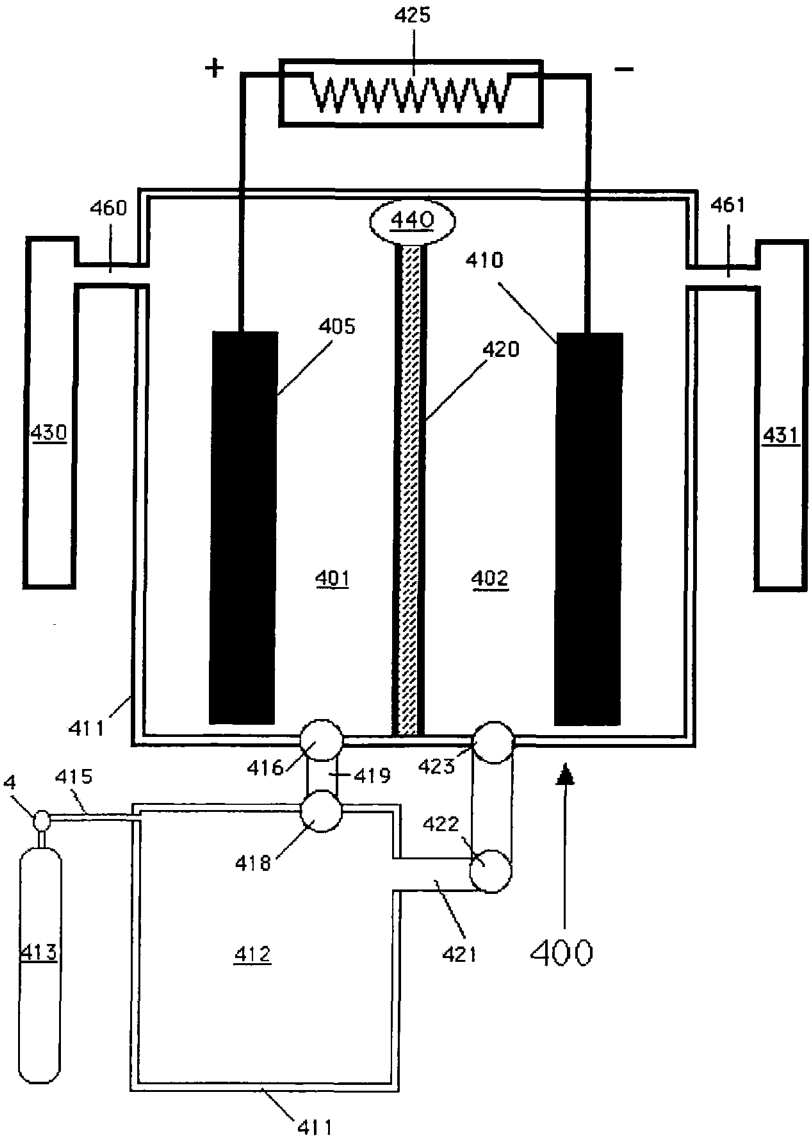
425
+
−
460
440
461
410
405
420
430
431
401
402
411
416
419
423
414
415
418
422
413
412
421
400
411

Fig. 2

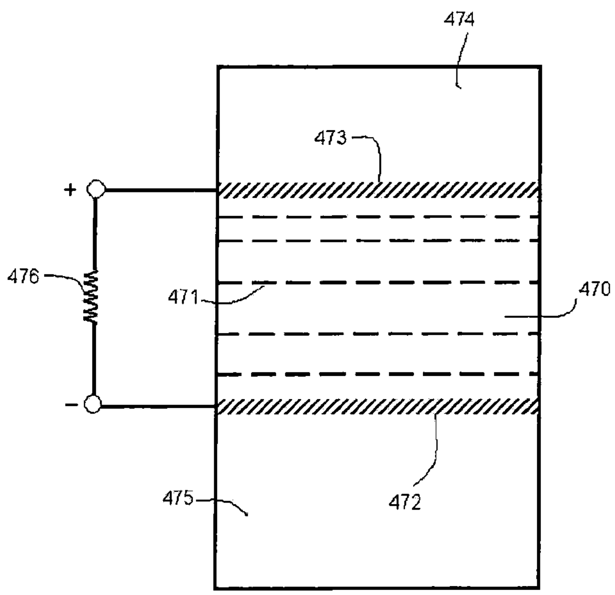

Fig. 3

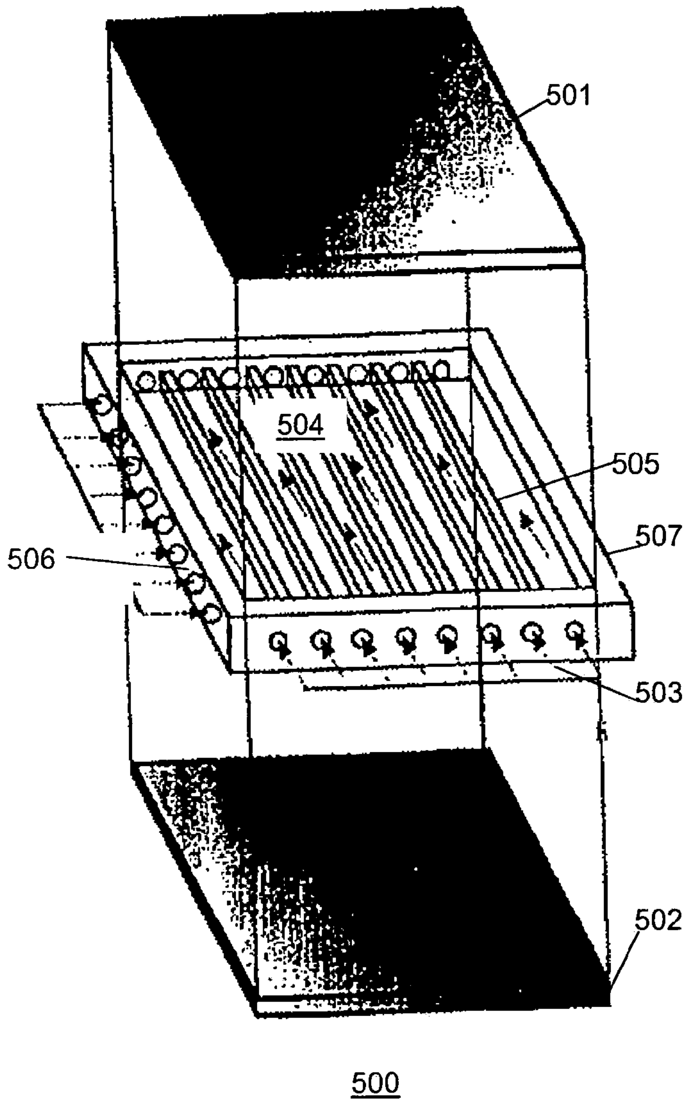

Fig. 4

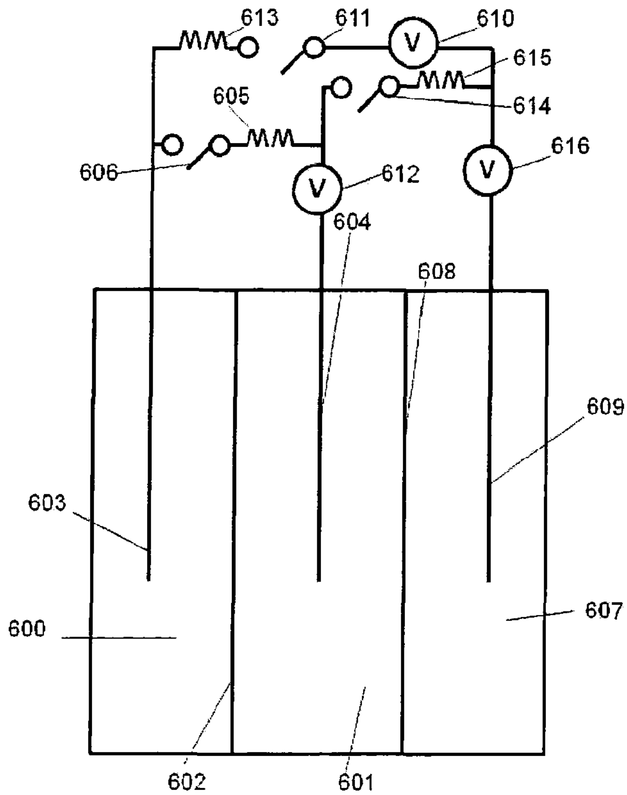
613
611
610
615
605
614
616
606
612
604
608
609
603
600
607
602
601

Fig. 5

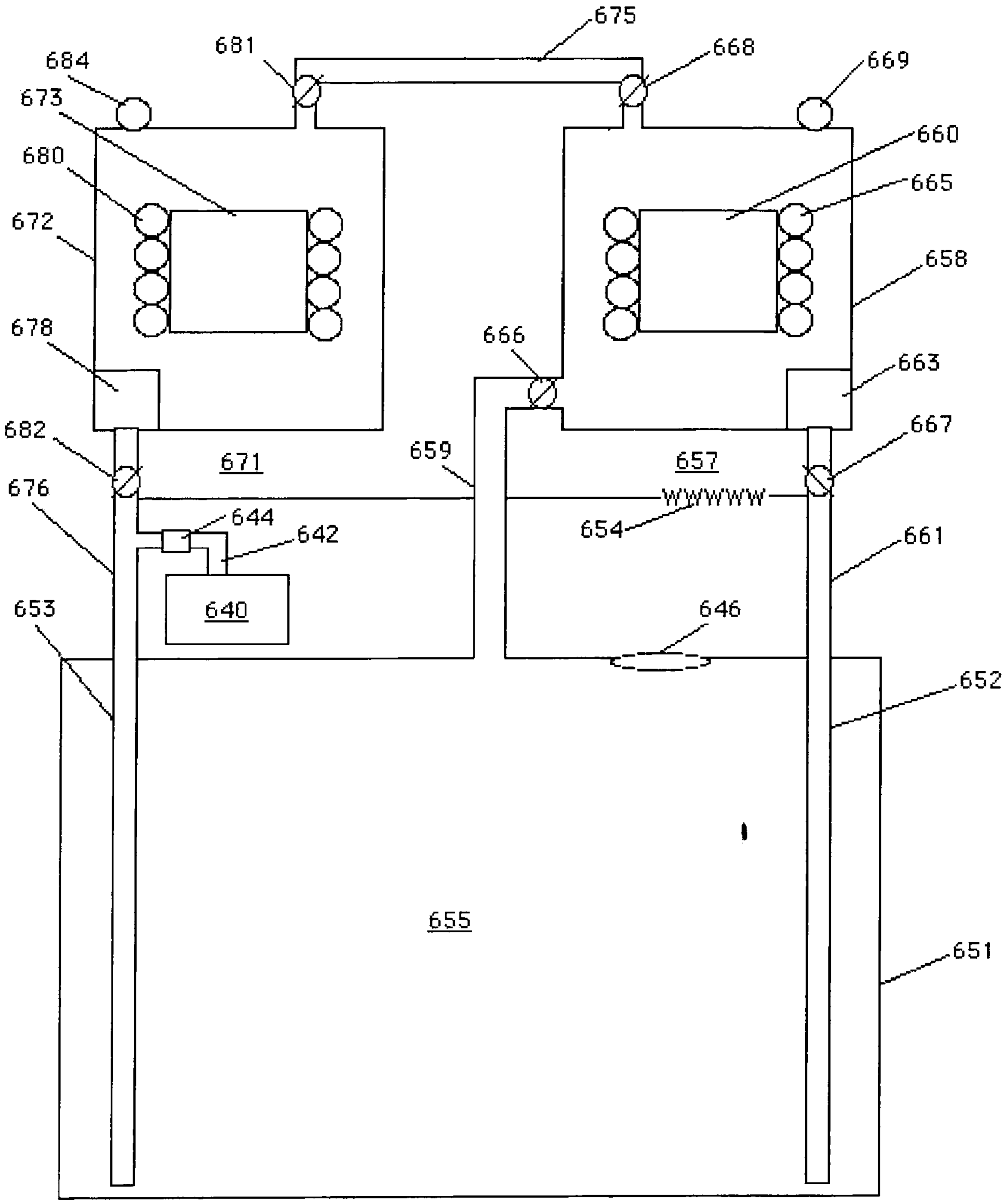
675
681
668
684
669
673
660
680
665
672
658
678
666
663
682
667
671
659
657
676
644
654
642
661
640
653
646
652
655
651

650

Europäisches Patentamt
European Patent Office
Office européen des brevets

# EUROPEAN SEARCH REPORT

Application Number
EP 22 20 3558

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 649 473 A (HOLDEN ROBERT B ET AL) 14 March 1972 (1972-03-14) | 1-21 | INV. H01M4/86 H01M4/94 H01M4/96 H01M8/18 H01M8/22 H01M14/00 H01M8/06 |
| Y | * the whole document * * ----- | 1-21 | |
| Y | WO 2011/016878 A1 (BLACKLIGHT POWER INC [US]; MILLS RANDELL L [US]) 10 February 2011 (2011-02-10) * page 53, lines 11-20 * * last five lines of page 80 * * Equation (166) on page 109 and the text below that equation * * Section IX, inpartiuclar the passgaes thereof on pages 120 and 140 * ----- | 1-21 | |

TECHNICAL FIELDS SEARCHED (IPC)

H01M
C01B
G01N

The present search report has been drawn up for all claims

| Place of search | Date of completion of the search | Examiner |
|---|---|---|
| The Hague | 31 March 2023 | Standaert, Frans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 20 3558

This annex lists the patent family members relating to the patent documents cited in the above-mentioned European search report. The members are as contained in the European Patent Office EDP file on
The European Patent Office is in no way liable for these particulars which are merely given for the purpose of information.

31-03-2023

| Patent document cited in search report | | Publication date | Patent family member(s) | | | Publication date |
|---|---|---|---|---|---|---|
| US 3649473 | A | 14-03-1972 | NONE | | | |
| WO 2011016878 | A1 | 10-02-2011 | AP | 3353 | A | 31-07-2015 |
| | | | AU | 2010281658 | A1 | 02-02-2012 |
| | | | AU | 2017202706 | A1 | 18-05-2017 |
| | | | BR | 112012002587 | A2 | 22-03-2016 |
| | | | CA | 2767683 | A1 | 10-02-2011 |
| | | | EA | 201200254 | A1 | 28-09-2012 |
| | | | EP | 2462653 | A1 | 13-06-2012 |
| | | | EP | 2966723 | A1 | 13-01-2016 |
| | | | EP | 3441359 | A1 | 13-02-2019 |
| | | | HK | 1245508 | A1 | 24-08-2018 |
| | | | JP | 2013501602 | A | 17-01-2013 |
| | | | JP | 2017185479 | A | 12-10-2017 |
| | | | JP | 2019048292 | A | 28-03-2019 |
| | | | KR | 20120107457 | A | 02-10-2012 |
| | | | KR | 20170123711 | A | 08-11-2017 |
| | | | MX | 362975 | B | 28-02-2019 |
| | | | SG | 178258 | A1 | 29-03-2012 |
| | | | SG | 10201701293Q | A | 27-04-2017 |
| | | | US | 2012122017 | A1 | 17-05-2012 |
| | | | WO | 2011016878 | A1 | 10-02-2011 |
| | | | ZA | 201200250 | B | 26-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61472076
- US 61482932 B
- US 61485769 B
- US 61490903 B
- US 61498245 B
- US 61505719 B
- US 61515505 B
- US 61538534 B
- US 61559504 B
- US 61566225 B
- US 61578465 B
- US 61591532 B
- US 61612607 B
- US 4377625 A
- US 09052072 W
- US 0861455 W
- US 1027828 W
- US 1128889 W


### Non-patent literature cited in the description


- **R. L. MILLS ; P. RAY ; B. DHANDAPANI ; W. GOOD ; P. JANSSON ; M. NANSTEEL ; J. HE ; A. VOIGT.** Spectroscopic and NMR Identification of Novel Hydride Ions in Fractional Quantum Energy States Formed by an Exothermic Reaction of Atomic Hydrogen with Certain Catalysts. *European Physical Journal: Applied Physics,* 2004, vol. 28, 83-104
- **R. L. MILLS ; P. RAY ; R. M. MAYO.** CW HI Laser Based on a Stationary Inverted Lyman Population Formed from Incandescently Heated Hydrogen Gas with Certain Group I Catalysts. *IEEE Transactions on Plasma Science,* 2003, vol. 31 (2), 236-247
- **R. L. MILLS ; P. C. RAY ; R. M. MAYO ; M. NANSTEEL ; B. DHANDAPANI ; J. PHILLIPS.** Spectroscopic Study of Unique Line Broadening and Inversion in Low Pressure Microwave Generated Water Plasmas. *J. Plasma Physics,* 2005, vol. 71 (6), 877-888
- **H. CONRADS ; R. L. MILLS ; TH. WRUBEL.** Emission in the Deep Vacuum Ultraviolet from a Plasma Formed by Incandescently Heating Hydrogen Gas with Trace Amounts of Potassium Carbonate. *Plasma Sources Science and Technology,* 2003, vol. 12, 389-395
- **R. L. MILLS ; J. DONG ; Y. LU.** Observation of Extreme Ultraviolet Hydrogen Emission from Incandescently Heated Hydrogen Gas with Certain Catalysts. *Int. J. Hydrogen Energy,* 2000, vol. 25, 919-943
- **K. AKHTAR ; J. SCHARER ; R. L. MILLS.** Substantial Doppler Broadening of Atomic Hydrogen Lines in DC and Capactively Coupled RF Plasmas. *J. Phys. D: Appl. Phys.,* 2009, vol. 42 (13), 12
- **L.C. BROWN ; G.E. BESENBRUCH ; K.R. SCHULTZ ; A.C. MARSHALL ; S.K. SHOWALTER ; P.S. PICKARD ; J.F. FUNK.** Nuclear Production of Hydrogen Using Thermochemical Water-Splitting Cycles. *International Congress on Advanced Nuclear Power Plants (ICAPP) in Hollywood, Florida,* 19 June 2002
- Solubility Data Series Hydrogen and Deuterium. IUPAC, Pergamon Press, 1981, vol. 5/6
- **R. L. MILLS ; Y. LU.** Time-Resolved Hydrino Continuum Transitions with Cutoffs at 22.8 nm and 10.1 nm. *Eur. Phys. J. D,* 2011, vol. 64, 63
- **K. AKHTAR ; J. SCHARER ; R. L. MILLS.** Substantial Doppler broadening of atomic-hydrogen lines in DC and capacitively coupled RF plasmas. *J. Phys. D, Applied Physics,* 2009, vol. 42, 42
- **R. L. MILLS ; Y. LU.** Hydrino continuum transitions with cutoffs at 22.8 nm and 10.1 nm. *Int. J. Hydrogen Energy,* 2010, vol. 35, 8446-8456
- **F. BOURNAUD ; P. A. DUE ; E. BRINKS ; M. BOQUIEN ; P. AMRAM ; U. LISENFELD ; B. KORIBALSKI ; F. WALTER ; V. CHARMANDARIS.** Missing mass in collisional debris from galaxies. *Science,* 2007, vol. 316, 1166-1169
- **B. G. ELMEGREEN.** Dark matter in galactic collisional debris. *Science,* 2007, vol. 316, 32-33

- **M. J. JEE ; A. MAHDAVI ; H. HOEKSTRA ; A. BABUL ; J. J. DALCANTON ; P. CARROLL ; P. CAPAK.** A study of the dark core in A520 with the Hubble Space Telescope: The mystery deepens. *Astrophysical J.,* 2012, vol. 747 (96), 96-103
- **R. L. MILLS ; P. C. RAY ; R. M. MAYO ; M. NANSTEEL ; B. DHANDAPANI ; J. PHILLIPS.** Spectroscopic Study of Unique Line Broadening and Inversion in Low Pressure Microwave Generated Water Plasmas. *J. Plasma Physics,* 2005, vol. 71, 877-888
- **R. L. MILLS ; E. DAYALAN ; P. RAY ; B. DHANDAPANI ; J. HE.** Highly Stable Novel Inorganic Hydrides from Aqueous Electrolysis and Plasma Electrolysis. *Electrochimica Acta,* 2002, vol. 47 (24), 3909-3926
- **R. L. MILLS ; B. DHANDAPANI ; M. NANSTEEL ; J. HE ; T. SHANNON ; A. ECHEZURIA.** Synthesis and Characterization of Novel Hydride Compounds. *Int. J. of Hydrogen Energy,* 2001, vol. 26 (4), 339-367
- **E. V. LAVROV ; J. WEBER.** Ortho and Para Interstitial H2 in Silicon. *Phys. Rev. Letts.,* 2002, vol. 89 (21), 215501-1, 215501-4
- **R. L. MILLS ; J. SANKAR ; A. VOIGT ; J. HE ; B. DHANDAPANI.** Synthesis of HDLC Films from Solid Carbon. *J. Materials Science, J. Mater. Sci.,* 2004, vol. 39, 3309-3318
- **R. L. MILLS ; J. SANKAR ; A. VOIGT ; J. HE ; B. DHANDAPANI.** Spectroscopic Characterization of the Atomic Hydrogen Energies and Densities and Carbon Species During Helium-Hydrogen-Methane Plasma CVD Synthesis of Diamond Films. *Chemistry of Materials,* 2003, vol. 15, 1313-1321
- **R. L. MILLS ; B. DHANDAPANI ; J. HE.** Highly Stable Amorphous Silicon Hydride. *Solar Energy Materials & Solar Cells,* 2003, vol. 80 (1), 1-20
- The Far-Infrared Absorption Spectrum of Low Temperature Hydrogen Gas. **E.H. WISHNOW.** Ph.D. Thesis. University of British Columbia, 1993